(19) Europäisches Patentamt / European Patent Office / Office européen des brevets

(11) **EP 2 966 723 A1**

(12) **EUROPEAN PATENT APPLICATION**

(43) Date of publication:
**13.01.2016 Bulletin 2016/02**

(51) Int Cl.:
**H01M 14/00** (2006.01)          **C01B 3/00** (2006.01)
**C01B 3/06** (2006.01)          **G21B 3/00** (2006.01)

(21) Application number: **15166272.3**

(22) Date of filing: **18.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:
07.08.2009  US 232291 P
14.08.2009  US 234234 P
21.08.2009  US 236046 P
03.09.2009  US 239689 P
05.10.2009  US 248655 P
23.10.2009  US 254557 P
06.11.2009  US 258955 P
12.11.2009  US 260713 P
20.11.2009  US 263253 P
04.12.2009  US 266879 P
11.12.2009  US 285822 P
23.12.2009  US 289861 P
04.01.2010  US 292086 P
11.01.2010  US 294033 P
15.01.2010  US 295564 P
22.01.2010  US 297473 P
05.02.2010  US 301977 P
12.02.2010  US 304242 P
12.02.2010  US 304248 P
05.03.2010  US 311203 P
05.03.2010  US 311193 P

(62) Document number(s) of the earlier application(s) in accordance with Art. 76 EPC:
**10723393.4 / 2 462 653**

(71) Applicant: **Blacklight Power, Inc.**
**Cranbury, NJ 08512 (US)**

(72) Inventor: **Mills, Randell L.**
**Princeton, NJ 08540 (US)**

(74) Representative: **UEXKÜLL & STOLBERG**
**Patentanwälte**
**Beselerstrasse 4**
**22607 Hamburg (DE)**

Remarks:
This application was filed on 04-05-2015 as a divisional application to the application mentioned under INID code 62.

(54) **HETEROGENEOUS HYDROGEN-CATALYST POWER SYSTEM**

(57)    A power source and hydride reactor is provided that powers a power system comprising (i) a reaction cell for the catalysis of atomic hydrogen to form hydrinos, (ii) a chemical fuel mixture comprising at least two components chosen from: a source of catalyst or catalyst; a source of atomic hydrogen or atomic hydrogen; reactants to form the source of catalyst or catalyst and a source of atomic hydrogen or atomic hydrogen; one or more reactants to initiate the catalysis of atomic hydrogen; and a support to enable the catalysis, (iii) thermal systems for reversing an exchange reaction to thermally regenerate the fuel from the reaction products, (iv) a heat sink that accepts the heat from the power-producing reactions, and (v) a power conversion system. In an embodiment, the catalysis reaction is activated or initiated and propagated by one or more other chemical reactions such as a hydride-halide exchange reaction between a metal of the catalyst and another metal. These reactions are thermally reversible by the removal of metal vapor in the reverse exchange. The hydrino reactions are maintained and regenerated in a batch mode using thermally-coupled multi-cells arranged in bundles wherein cells in the power-production phase of the cycle heat cells in the regeneration phase. In this intermittent cell power design, the thermal power is statistically constant as the cell number becomes large, or the cells cycle is controlled to achieve steady power.

FIG. 2

# BlackLight Plant Process

**Description**

<u>CROSS-REFERENCES TO RELATED APPLICATIONS</u>

This application claims the benefit of priority of U.S. Provisional Application Nos. 61/232,291, filed August 7,2009; 61/234,234 filed August 14, 2009; 61/236,046 filed August 21, 2009; 61/239,689 filed September 3, 2009; 61/248,655 filed October 5, 2009; 61/254,557 filed October 23, 2009; 61/258,955 filed November 6, 2009; 61/260,713 filed November 12, 2009; 61/263,253 filed November 20, 2009; 61/266,879 filed December 4, 2009; 61/285,822 filed December 11, 2009; 61/289,861 filed December 23, 2009; 61/292,086 filed January 4, 2010; 61/294,033 filed January 11, 2010; 61/295,564 filed January 15, 2010; 61/297,473 filed January 22, 2010; 61/301,977 filed February 5, 2010; 61/304,242 filed February 12, 2010; 61/304,248 filed February 12, 2010; 61/311,193 filed March 5, 2010; and 61/311,203 filed March 5, 2010, all of which are herein incorporated by reference in their entirety.

<u>SUMMARY OF DISCLOSED EMBODIMENTS:</u>

The present disclosure is directed to catalyst systems comprising a hydrogen catalyst capable of causing atomic H in its n=1 state to form a lower-energy state, a source of atomic hydrogen, and other species capable of initiating and propagating the reaction to form lower-energy hydrogen. In certain embodiments, the present disclosure is directed to a reaction mixture comprising at least one source of atomic hydrogen and at least one catalyst or source of catalyst to support the catalysis of hydrogen to form hydrinos. The reactants and reactions disclosed herein for solid and liquid fuels are also reactants and reactions of heterogeneous fuels comprising a mixture of phases. The reaction mixture comprises at least two components chosen from a hydrogen catalyst or source of hydrogen catalyst and atomic hydrogen or a source of atomic hydrogen, wherein at least one of the atomic hydrogen and the hydrogen catalyst may be formed by a reaction of the reaction mixture. In additional embodiments, the reaction mixture further comprises a support, which in certain embodiments can be electrically conductive, a reductant, and an oxidant, wherein at least one reactant that by virtue of it undergoing a reaction causes the catalysis to be active. The reactants may be regenerated for any non-hydrino product by heating.
The present disclosure is also directed to a power source comprising:

a reaction cell for the catalysis of atomic hydrogen;
a reaction vessel;
a vacuum pump;
a source of atomic hydrogen in communication with the reaction vessel;
a source of a hydrogen catalyst comprising a bulk material in communication with the reaction vessel,
the source of at least one of the source of atomic hydrogen and the source of hydrogen catalyst comprising a reaction mixture comprising at least one reactant comprising the element or elements that form at least one of the atomic hydrogen and the hydrogen catalyst and at least one other element, whereby at least one of the atomic hydrogen and hydrogen catalyst is formed from the source,
at least one other reactant to cause catalysis; and
a heater for the vessel,
whereby the catalysis of atomic hydrogen releases energy in an amount greater than about 300 kJ per mole of hydrogen.

The reaction to form hydrinos may be activated or initiated and propagated by one or more chemical reactions. These reactions can be chosen for example from (i) hydride exchange reactions, (ii) halide- hydride exchange reactions, (iii) exothermic reactions, which in certain embodiments provide the activation energy for the hydrino reaction, (iv) coupled reactions, which in certain embodiments provide for at least one of a source of catalyst or atomic hydrogen to support the hydrino reaction, (v) free radical reactions, which in certain embodiments serve as an acceptor of electrons from the catalyst during the hydrino reaction, (vi) oxidation-reduction reactions, which in certain embodiments, serve as an acceptor of electrons from the catalyst during the hydrino reaction, (vi) other exchange reactions such as anion exchange including halide, sulfide, hydride, arsenide, oxide, phosphide, and nitride exchange that in an embodiment, facilitate the action of the catalyst to become ionized as it accepts energy from atomic hydrogen to form hydrinos, and (vii) getter, support, or matrix-assisted hydrino reactions, which may provide at least one of (a) a chemical environment for the hydrino reaction, (b) act to transfer electrons to facilitate the H catalyst function, (c) undergoe a reversible phase or other physical change or change in its electronic state, and (d) bind a lower-energy hydrogen product to increase at least one of the extent or rate of the hydrino reaction. In certain embodiments, the electrically conductive support enables the activation reaction.
In another embodiment, the reaction to form hydrinos comprises at least one of a hydride exchange and a halide exchange between at least two species such as two metals. At least one metal may be a catalyst or a source of a catalyst to form hydrinos such as an alkali metal or alkali metal hydride. The hydride exchange may be between at least two hydrides, at least one metal and at least one hydride, at least two metal hydrides, at least one metal and at least one metal hydride, and other such combinations with the exchange between or involving two or more species. In an embodiment, the hydride exchange forms a mixed metal hydride such as $(M_1)_x(M_2)_yH_z$ wherein x,y, and z are integers and $M_1$ and $M_2$ are metals.

Other embodiments of the present disclosure are directed to systems and species that perform at least one of the functions of accepting electrons from the ionizing catalyst due to the energy transfer from H, transferring accepted electrons to an electrical circuit for the flow of electrons to at least one of the ground and a path terminating internal to the cell, transferring electrons to at least one of the ground and a species that undergoes reduction to serve as a final electron acceptor or an electron carrier, and allowing the electron carrier to transfer the electron to the catalyst ion formed during catalysis.

Other embodiments of the present disclosure are directed to additional catalysts comprising bulk materials. For example, $Mg^{2+}$ ion of compounds such as halides and hydrides and metals may serve as a catalyst. Certain bulk metals, metals of certain intennetallic compounds, and certain metals on supports may serve as catalysts wherein an electron of the material accepts about an integer multiple of 27.2 eV from atomic hydrogen to form hydrinos. The combination of molecular hydrogen, atomic hydrogen, or hydride ion and a species such as another atom or ion may serve as a catalyst wherein the sum of the ionization of the species and either the bond energy of $H_2$ (4.478 eV), the ionization energy of H (13.59844 eV), or the ionization energy of $H^-$ (IP=0.754 eV) is about an integer multiple of 27.2 eV. The catalyst may be solvated or comprise a solvent complex.

Other embodiments of the present disclosure are directed to reactants wherein the catalyst in the activating reaction and/or the propagation reaction comprises a reaction of the catalyst or source of catalyst and source of hydrogen with a material or compound to form an intercalation compound wherein the reactants are regenerated by removing the intercalated species. In an embodiment, carbon may serve as the oxidant and the carbon may be regenerated from an alkali metal intercalated carbon for example by heating, use of displacing agent, electrolytically, or by using a solvent.

In additional embodiments, the present disclosure is directed to a power system comprising:

(i) a chemical fuel mixture comprising at least two components chosen from: a catalyst or source of catalyst; atomic hydrogen or a source of atomic hydrogen; reactants to form the catalyst or the source of catalyst and atomic hydrogen or a source of atomic hydrogen; one or more reactants to initiate the catalysis of atomic hydrogen; and a support to enable the catalysis,
(ii) at least one thermal system for reversing an exchange reaction to thermally regenerate the fuel from the reaction products comprising a plurality of reaction vessels,
wherein regeneration reactions comprising reactions that form the initial chemical fuel mixture from the products of the reaction of the mixture are performed in at least one reaction vessel of the plurality in conjunction with the at least one other reaction vessel undergoing power reactions,
the heat from at least one power-producing vessel flows to at least one vessel that is undergoing regeneration to provide the energy for the thermal regeneration,
the vessels are embedded in a heat transfer medium to achieve the heat flow,
at least one vessel further comprising a vacuum pump and a source of hydrogen, and may further comprise two chambers having a temperature difference maintained between a hotter chamber and a colder chamber such that a species preferentially accumulates in the colder chamber,
wherein a hydride reaction is performed in the colder chamber to form at least one initial reactant that is returned to the hotter chamber,
(iii) a heat sink that accepts the heat from the power-producing reaction vessels across a thermal barrier, and
(iv) a power conversion system that may comprise a heat engine such as a Rankine or Brayton-cycle engine, a steam engine, a Stirling engine, wherein the power conversion system may comprise thermoelectric or thermionic converters. In certain embodiments, the heat sink may transfer power to a power conversion system to produce electricity.

In certain embodiments, the power conversion system accepts the flow of heat from the heat sink, and in certain embodiments, the heat sink comprises a steam generator and steam flows to a heat engine such as a turbine to produce electricity.

In additional embodiments, the present disclosure is directed to a power system comprising:

(i) a chemical fuel mixture comprising at least two components chosen from: a catalyst or a source of catalyst; atomic hydrogen or a source of atomic hydrogen; reactants to form the catalyst or the source of catalyst and atomic hydrogen or a source of atomic hydrogen; one or more reactants to initiate the catalysis of atomic hydrogen; and a support to enable the catalysis,

(ii) a thermal system for reversing an exchange reaction to thermally regenerate the fuel from the reaction products comprising at least one reaction vessel,

wherein regeneration reactions comprising reactions that form the initial chemical fuel mixture from the products of the reaction of the mixture are performed in the at least one reaction vessel in conjunction with power reactions, the heat from power-producing reactions flows to regeneration reactions to provide the energy for the thermal regeneration,

at least one vessel is insulated on one section and in contact with a thermally conductive medium on another section to achieve a heat gradient between the hotter and colder sections, respectively, of the vessel such that a species preferentially accumulates in the colder section,

at least one vessel further comprising a vacuum pump and a source of hydrogen,

wherein a hydride reaction is performed in the colder section to form at least one initial reactant that is returned to the hotter section,

(iii) a heat sink that accepts the heat from the power-producing reactions transferred through the thermally conductive medium and optionally across at least one thermal barrier, and

(iv) a power conversion system that may comprise a heat engine such as a Rankine or Brayton-cycle engine, a steam engine, a Stirling engine, wherein the power conversion system may comprise thermoelectric or thermionic converters,

wherein the conversion system accepts the flow of heat from the heat sink.

In an embodiment, the heat sink comprises a steam generator and steam flows to a heat engine such as a turbine to produce electricity. Additional embodiments of the present disclosure are directed to a battery or fuel cell system that generates an electromotive force (EMF) from the catalytic reaction of hydrogen to lower energy (hydrino) states providing direct conversion of the energy released from the hydrino reaction into electricity, the system comprising:

reactants that constitute hydrino reactants during cell operation with separate electron flow and ion mass transport, a cathode compartment comprising a cathode, an anode compartment comprising an anode, and a source of hydrogen.

Other embodiments of the present disclosure are directed to a battery or fuel cell system that generates an electromotive force (EMF) from the catalytic reaction of hydrogen to lower energy (hydrino) states providing direct conversion of the energy released from the hydrino reaction into electricity, the system comprising at least two components chosen from: a catalyst or a source of catalyst; atomic hydrogen or a source of atomic hydrogen; reactants to form the catalyst or source of catalyst and atomic hydrogen or source of atomic hydrogen; one or more reactants to initiate the catalysis of atomic hydrogen; and a support to enable the catalysis,

wherein the battery or fuel cell system for forming hydrinos can further comprise a cathode compartment comprising a cathode, an anode compartment comprising an anode, optionally a salt bridge, reactants that constitute hydrino reactants during cell operation with separate electron flow and ion mass transport, and a source of hydrogen.

In an embodiment of the present disclosure, the reaction mixtures and reactions to initiate the hydrino reaction such as the exchange reactions of the present disclosure are the basis of a fuel cell wherein electrical power is developed by the reaction of hydrogen to form hydrinos. Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types for thermal power and hydrino chemical production of the present disclosure.

In an embodiment of the present disclosure, different reactants or the same reactants under different states or conditions such as at least one of different temperature, pressure, and concentration are provided in different cell compartments that are connected by separate conduits for electrons and ions to complete an electrical circuit between the compartments. The potential and electrical power gain between electrodes of the separate compartments or thermal gain of the system is generated due to the dependence of the hydrino reaction on mass flow from one compartment to another. The mass flow provides at least one of the formation of the reaction mixture that reacts to produce hydrinos and the conditions that permit the hydrino reaction to occur at substantial rates. Ideally, the hydrino reaction does not occur or doesn't occur at an appreciable rate in the absence of the electron flow and ion mass transport.

In another embodiment, the cell produces at least one of electrical and thermal power gain over that of an applied electrolysis power through the electrodes.

In an embodiment, the reactants to form hydrinos are at least one of thermally regenerative or electrolytically regenerative.

## BRIEF DESCRIPTION OF THE DRAWINGS

FIGURE 1 is a schematic drawing of an energy reactor and power plant in accordance with the present disclosure.
FIGURE 2 is a schematic drawing of an energy reactor and power plant for recycling or regenerating the fuel in accordance with the present disclosure.
FIGURE 3 is a schematic drawing of a power reactor in accordance with the present disclosure.
FIGURE 4 is a schematic drawing of a system for recycling or regenerating the fuel in accordance with the present disclosure.
FIGURE 5 is a schematic drawing of a multi-tube reaction system further showing the details of a unit energy reactor and power plant for recycling or regenerating the fuel in accordance with the present disclosure.
FIGURE 6 is a schematic drawing of a tube of a multi-tube reaction system comprising a reaction chamber and a metal-condensation and re-hydriding chamber separated by a sluice or gate valve for evaporating metal vapor, rehydriding of the metal, and re-supplying regenerated alkali hydridein accordance with the present disclosure.
FIGURE 7 is a schematic drawing of a thermally coupled multi-cell bundle wherein cells in the power-production phase of the cycle heat cells in the regeneration phase and the bundle is immsersed in water such that boiling and steam production occurs on the outer surface of the outer annulus with a heat gradient across the gap in accordance with the present disclosure.
FIGURE 8 is a schematic drawing of a plurality of thermally coupled multi-cell bundles wherein the bundles may be arranged in a boiler box in accordance with the present disclosure.
FIGURE 9 is a schematic drawing of a boiler that houses the reactor bundles and channels the steam into a domed manifold in accordance with the present disclosure.
FIGURE 10 is a schematic drawing of a power generation system wherein steam is generated in the boiler of FIGURE 9 and is channeled through the domed manifold to the steam line, a steam turbine receives the steam from boiling water, electricity is generated with a generator, and the steam is condensed and pumped back to the boiler in accordance with the present disclosure.
FIGURE 11 is a schematic drawing of a multi-tube reaction system comprising a bundle of reactor cells in thermal contact and separated from a heat exchanger by a gas gap in accordance with the present disclosure.
FIGURE 12 is a schematic drawing of a multi-tube reaction system comprising alternate layers of insulation, reactor cells, thermally conductive medium, and heat exchanger or collector in accordance with the present disclosure.
FIGURE 13 is a schematic drawing of a single unit of a multi-tube reaction system comprising alternate layers of insulation, reactor cells, thermally conductive medium, and heat exchanger or collector in accordance with the present disclosure.
FIGURE 14 is a schematic drawing of a boiler system comprising the multi-tube reaction system of FIGURE 12 and a coolant (saturated water) flow regulating system in accordance with the present disclosure.
FIGURE 15 is a schematic drawing of a power generation system wherein steam is generated in the boiler of FIGURE 14 and output from the steam-water separator to the main steam line, a steam turbine receives the steam from boiling water, electricity is generated with a generator, and the steam is condensed and pumped back to the boiler in accordance with the present disclosure.
FIGURE 16 is a schematic drawing of the steam generation flow diagram in accordance with the present disclosure.
FIGURE 17 is a schematic drawing of a discharge power and plasma cell and reactor in accordance with the present disclosure.
FIGURE 18 is a schematic drawing of a battery and fuel cell in accordance with the present disclosure.
FIGURE 19 is a car architecture utilizing a CIHT cell stack in accordance with the present disclosure.
FIGURE 20 is a schematic drawing of a CIHT cell in accordance with the present disclosure.

## DETAILED DESCRIPTION OF THE EMBODIMENTS OF THE DISCLOSURE

The present disclosure is directed to catalyst systems to release energy from atomic hydrogen to form lower energy states wherein the electron shell is at a closer position relative to the nucleus. The released power is harnessed for power generation and additionally new hydrogen species and compounds are desired products. These energy states are predicted by classical physical laws and require a catalyst to accept energy from the hydrogen in order to undergo the corresponding energy-releasing transition.

Classical physics gives closed-form solutions of the hydrogen atom, the hydride ion, the hydrogen molecular ion, and the hydrogen molecule and predicts corresponding species having fractional principal quantum numbers. Using Maxwell's equations, the structure of the electron was derived as a boundary-value problem wherein the electron comprises the source current of time-varying electromagnetic fields during transitions with the constraint that the bound $n =$

1 state electron cannot radiate energy. A reaction predicted by the solution of the H atom involves a resonant, nonradiative energy transfer from otherwise stable atomic hydrogen to a catalyst capable of accepting the energy to form hydrogen in lower-energy states than previously thought possible. Specifically, classical physics predicts that atomic hydrogen may undergo a catalytic reaction with certain atoms, excimers, ions, and diatomic hydrides which provide a reaction with a net enthalpy of an integer multiple of the potential energy of atomic hydrogen, $E_h$ = 27.2 eV where $E_h$ is one Hartree. Specific species (e.g. $He^+$, $Ar^+$, $Sr^+$, K, Li , HCl, and NaH) identifiable on the basis of their known electron energy levels are required to be present with atomic hydrogen to catalyze the process. The reaction involves a nonradiative energy transfer followed by $q \cdot 13.6$ eV continuum emission or $q \cdot 13.6$ eV transfer to H to form extraordinarily hot, excited-state H and a hydrogen atom that is lower in energy than unreacted atomic hydrogen that corresponds to a fractional principal quantum number. That is, in the formula for the principal energy levels of the hydrogen atom:

$$E_n = -\frac{e^2}{n^2 8\pi\varepsilon_o a_H} = -\frac{13.598 \ eV}{n^2} . \tag{1}$$

$$n = 1, 2, 3, ... \tag{2}$$

where $a_H$ is the Bohr radius for the hydrogen atom (52.947 pm), $e$ is the magnitude of the charge of the electron, and $\varepsilon_o$ is the vacuum permittivity,
fractional quantum numbers:

$$n = 1, \frac{1}{2}, \frac{1}{3}, \frac{1}{4}, ..., \frac{1}{p}; \ \text{ where } p \leq 137 \ \text{ is an integer} \tag{3}$$

replace the well known parameter $n$ = integer in the Rydberg equation for hydrogen excited states and represent lower-energy-state hydrogen atoms called "hydrinos." The $n$ = 1 state of hydrogen and the $n = \dfrac{1}{\text{integer}}$ states of hydrogen are nonradiative, but a transition between integer two nonradiative states, say $n$ = 1 to $n$ = 1/2, is possible via a nonradiative energy transfer. Hydrogen is a special case of the stable states given by Eqs. (1) and (3) wherein the corresponding radius of the hydrogen or hydrino atom is given by

$$r = \frac{a_H}{p} , \tag{4}$$

where $p$ = 1, 2, 3, .... In order to conserve energy, energy must be transferred from the hydrogen atom to the catalyst in units of an integer of the potential energy of the hydrogen atom in the normal $n$ = 1 state, and the radius transitions to $\dfrac{a_H}{m+p}$. Hydrinos are formed by reacting an ordinary hydrogen atom with a suitable catalyst having a net enthalpy of reaction of

$$m \cdot 27.2 \ eV \tag{5}$$

where $m$ is an integer. It is believed that the rate of catalysis is increased as the net enthalpy of reaction is more closely matched to $m \cdot 27.2$ eV. It has been found that catalysts having a net enthalpy of reaction within $\pm 10\%$, preferably $\pm 5\%$, of $m \cdot 27.2$ eV are suitable for most applications.

The catalyst reactions involve two steps of energy release: a nonradiative energy transfer to the catalyst followed by additional energy release as the radius decreases to the corresponding stable final state. Thus, the general reaction is given by

$$m \cdot 27.2 \ eV + Cat^{q+} + H\left[\frac{a_H}{p}\right] \rightarrow Cat^{(q+r)+} + re^- + H*\left[\frac{a_H}{(m+p)}\right] + m \cdot 27.2 \ eV \qquad (6)$$

$$H*\left[\frac{a_H}{(m+p)}\right] \rightarrow H\left[\frac{a_H}{(m+p)}\right] + [(p+m)^2 - p^2] \cdot 13.6 \ eV - m \cdot 27.2 \ eV \qquad (7)$$

$$Cat^{(q+r)+} + re^- \rightarrow Cat^{q+} + m \cdot 27.2 \ eV \ \text{ and} \qquad (8)$$

the overall reaction is

$$H\left[\frac{a_H}{p}\right] \rightarrow H\left[\frac{a_H}{(m+p)}\right] + [(p+m)^2 - p^2] \cdot 13.6 \ eV \qquad (9)$$

$q$, $r$, $m$, and $p$ are integers. $H*\left[\frac{a_H}{(m+p)}\right]$ has the radius of the hydrogen atom (corresponding to the 1 in the denominator) and a central field equivalent to $(m + p)$ times that of a proton, and $H\left[\frac{a_H}{(m+p)}\right]$ is the corresponding stable state with the radius of $\frac{1}{(m+p)}$ that of $H$. As the electron undergoes radial acceleration from the radius of the hydrogen atom to a radius of $\frac{1}{(m+p)}$ this distance, energy is released as characteristic light emission or as third-body kinetic energy. The emission may be in the form of an extreme-ultraviolet continuum radiation having an edge at $[(p+m)^2-p^2-2m] \cdot 13.6 \ eV$ $\left(\frac{91.2}{[(p+m)^2 - p^2 - 2m]} \ nm\right)$ and extending to longer wavelengths. In addition to radiation, a resonant kinetic energy transfer to form fast $H$ may occur. Subsequent excitation of these fast $H(n = 1)$ atoms by collisions with the background $H_2$ followed by emission of the corresponding $H(n = 3)$ fast atoms gives rise to broadened Balmer $\alpha$ emission. Extraordinary Balmer $\alpha$ line broadening (>100 eV) is observed consistent with predictions.

In the present disclosure the terms such as hydrino reaction, H catalysis, H catalysis reaction, catalysis when referring to hydrogen, the reaction of hydrogen to form hydrinos, and hydrino formation reaction all refer to the reaction such as that of Eqs. (6-9)) of a catalyst defined by Eq. (5) with atomic H to form states of hydrogen having energy levels given by Eqs. (1) and (3). The corresponding terms such as hydrino reactants, hydrino reaction mixture, catalyst mixture, reactants for hydrino formation, reactants that produce or form lower-energy state hydrogen or hydrinos are also used interchangeably when referring to the reaction mixture that performs the catalysis of H to H states or hydrino states having energy levels given by Eqs. (1) and (3).

A suitable catalyst can therefore provide a net positive enthalpy of reaction of $m \cdot 27.2 \ eV$. That is, the catalyst resonantly accepts the nonradiative energy transfer from hydrogen atoms and releases the energy to the surroundings to affect electronic transitions to fractional quantum energy levels. As a consequence of the nonradiative energy transfer, the hydrogen atom becomes unstable and emits further energy until it achieves a lower-energy nonradiative state having a principal energy level given by Eqs. (1) and (3). Thus, the catalysis releases energy from the hydrogen atom with a commensurate decrease in size of the hydrogen atom, $r_n = na_H$ where $n$ is given by Eq. (3). For example, the catalysis of $H(n = 1)$ to $H(n = 1/4)$ releases 204 $eV$, and the hydrogen radius decreases from $a_H$ to $\frac{1}{4}a_H$. The catalyst product, $H(1/p)$, may also react with an electron to form a hydrino hydride ion $H^-(1/p)$, or two $H(1/p)$ may react to form the

corresponding molecular hydrino $H_2(1/p)$.

Specifically, the catalyst product, $H(1/p)$, may also react with an electron to form a novel hydride ion $H^-(1/p)$ with a binding energy $E_B$:

$$E_B = \frac{\hbar^2 \sqrt{s(s+1)}}{8\mu_e a_0^2 \left[\frac{1+\sqrt{s(s+1)}}{p}\right]^2} - \frac{\pi\mu_0 e^2 \hbar^2}{m_e^2}\left(\frac{1}{a_H^3} + \frac{2^2}{a_0^3 \left[\frac{1+\sqrt{s(s+1)}}{p}\right]^3}\right) \qquad (10)$$

where $p$ = integer > 1, $s$ = 1/2, $\hbar$ is Planck's constant bar, $\mu_o$ is the permeability of vacuum, $m_e$ is the mass of the electron,

$\mu_e$ is the reduced electron mass given by $\mu_e = \dfrac{m_e m_p}{\frac{m_e}{\sqrt{\frac{3}{4}}} + m_p}$ where $m_p$ is the mass of the proton, $a_o$ is the Bohr radius, and the ionic radius is $r_1 = \dfrac{a_0}{p}\left(1+\sqrt{s(s+1)}\right)$. From Eq. (10), the calculated ionization energy of the hydride ion is 0.75418 $eV$, and the experimental value is 6082.99$\pm$ 0.15 $cm^{-1}$ (0.75418 eV).

Upfield-shifted NMR peaks are direct evidence of the existence of lower-energy state hydrogen with a reduced radius relative to ordinary hydride ion and having an increase in diamagnetic shielding of the proton. The shift is given by the sum of that of an ordinary hydride ion $H^-$ and a component due to the lower-energy state:

$$\frac{\Delta B_T}{B} = -\mu_0 \frac{e^2}{12 m_e a_0 \left(1+\sqrt{s(s+1)}\right)}(1+\alpha 2\pi p) = -(29.9 + 1.37 p)\, ppm \qquad (11)$$

where for $H^-$ $p$ = 0 and $p$ = integer > 1 for $H^-(1/p)$ and $\alpha$ is the fine structure constant.

$H(1/p)$ may react with a proton and two $H(1/p)$ may react to form $H_2(1/p)^+$ and $H_2(1/p)$, respectively. The hydrogen molecular ion and molecular charge and current density functions, bond distances, and energies are solved from the Laplacian in ellipsoidal coordinates with the constraint of nonradiation.

$$(\eta - \zeta)R_\xi \frac{\partial}{\partial \xi}(R_\xi \frac{\partial \phi}{\partial \xi}) + (\zeta - \xi)R_\eta \frac{\partial}{\partial \eta}(R_\eta \frac{\partial \phi}{\partial \eta}) + (\xi - \eta)R_\zeta \frac{\partial}{\partial \zeta}(R_\zeta \frac{\partial \phi}{\partial \zeta}) = 0. \qquad (12)$$

The total energy $E_T$ of the hydrogen molecular ion having a central field of $+ pe$ at each focus of the prolate spheroid molecular orbital is

$$E_T = -p^2 \left\{ \frac{\dfrac{e^2}{8\pi\varepsilon_o a_H}(4\ln 3 - 1 - 2\ln 3)\left[1 + p\sqrt{\dfrac{2\hbar\sqrt{\dfrac{2e^2}{4\pi\varepsilon_o (2a_H)^3}}{m_e}}{m_e c^2}}\right]}{-\dfrac{1}{2}\hbar\sqrt{\dfrac{\dfrac{pe^2}{4\pi\varepsilon_o \left(\dfrac{2a_H}{p}\right)^3} - \dfrac{pe^2}{8\pi\varepsilon_o \left(\dfrac{3a_H}{p}\right)^3}}{\mu}}} \right\} \tag{13}$$

$$= -p^2 16.13392 \ eV - p^3 0.118755 \ eV$$

where $p$ is an integer, c is the speed of light in vacuum, and $\mu$ is the reduced nuclear mass. The total energy of the hydrogen molecule having a central field of $+pe$ at each focus of the prolate spheroid molecular orbital is

$$E_T = -p^2 \left\{ \frac{\dfrac{e^2}{8\pi\varepsilon_o a_0}\left[\left(2\sqrt{2} - \sqrt{2} + \dfrac{\sqrt{2}}{2}\right)\ln\dfrac{\sqrt{2}+1}{\sqrt{2}-1} - \sqrt{2}\right]\left[1 + p\sqrt{\dfrac{2\hbar\sqrt{\dfrac{e^2}{4\pi\varepsilon_o a_0^3}}{m_e}}{m_e c^2}}\right]}{-\dfrac{1}{2}\hbar\sqrt{\dfrac{\dfrac{pe^2}{8\pi\varepsilon_o \left(\dfrac{a_0}{p}\right)^3} - \dfrac{pe^2}{8\pi\varepsilon_o \left(\dfrac{\left(1+\dfrac{1}{\sqrt{2}}\right)a_0}{p}\right)^3}}{\mu}}} \right\} .$$

$$= -p^2 31.351 \ eV - p^3 0.326469 \ eV \tag{14}$$

The bond dissociation energy, $E_D$, of the hydrogen molecule $H_2(1/p)$ is the difference between the total energy of the corresponding hydrogen atoms and $E_T$

$$E_D = E(2H(1/p)) - E_T \tag{15}$$

where

$$E(2H(1/p)) = -p^2 27.20 \ eV \tag{16}$$

$E_D$ is given by Eqs. (15-16) and (14):

$$\begin{aligned} E_D &= -p^2 27.20 \ eV - E_T \\ &= -p^2 27.20 \ eV - \left(-p^2 31.351 \ eV - p^3 0.326469 \ eV\right). \\ &= p^2 4.151 \ eV + p^3 0.326469 \ eV \end{aligned} \tag{17}$$

The NMR of catalysis-product gas provides a definitive test of the theoretically predicted chemical shift of

$H_2(1/4)$. In general, the $^1H$ NMR resonance of $H_2(1/p)$ is predicted to be upfield from that of $H_2$ due to the fractional radius in elliptic coordinates wherein the electrons are significantly closer to the nuclei. The predicted shift, $\dfrac{\Delta B_T}{B}$, for $B\ H_2(1/p)$ is given by the sum of that of $H_2$ and a term that depends on $p$ = integer > 1 for $H_2(1/p)$:

$$\frac{\Delta B_T}{B} = -\mu_0 \left( 4 - \sqrt{2}\ln\frac{\sqrt{2}+1}{\sqrt{2}-1} \right) \frac{e^2}{36a_0 m_e}\left(1+\pi\alpha p\right) \tag{18}$$

$$\frac{\Delta B_T}{B} = -\left(28.01+0.64p\right)ppm \tag{19}$$

where for $H_2\ p = 0$. The experimental absolute $H_2$ gas-phase resonance shift of -28.0 ppm is in excellent agreement with the predicted absolute gas-phase shift of -28.01 ppm (Eq. (19)).

The vibrational energies, $E_{vib}$, for the $\upsilon = 0$ to $\upsilon = 1$ transition of hydrogen-type molecules $H_2(1/p)$ are

$$E_{vib} = p^2 0.515902\ eV \tag{20}$$

where $p$ is an integer. The rotational energies, $E_{rot}$, for the $J$ to $J+1$ transition of hydrogen-type molecules $H_2(1/p)$ are

$$E_{rot} = E_{J+1} - E_J = \frac{\hbar^2}{I}[J+1] = p^2(J+1)0.01509\ eV \tag{21}$$

where $p$ is an integer, $I$ is the moment of inertia.

The $p^2$ dependence of the rotational energies results from an inverse p dependence of the internuclear distance and the corresponding impact on the moment of inertia $I$. The predicted internuclear distance $2c^1$ for $H_2(1/p)$ is

$$2c' = \frac{a_o\sqrt{2}}{p}. \tag{22}$$

The data from a broad spectrum of investigational techniques strongly and consistently indicates that hydrogen can exist in lower-energy states than previously thought possible. This data supports the existence of these lower-energy states called hydrino, for "small hydrogen," and the corresponding hydride ions and molecular hydrino. Some of these prior related studies supporting the possibility of a novel reaction of atomic hydrogen, which produces hydrogen in fractional quantum states that are at lower energies than the traditional "ground" ($n = 1$) state, include extreme ultraviolet (EUV) spectroscopy, characteristic emission from catalysts and the hydride ion products, lower-energy hydrogen emission, chemically-formed plasmas, Balmer $\alpha$ line broadening, population inversion of $H$ lines, elevated electron temperature, anomalous plasma afterglow duration, power generation, and analysis of novel chemical compounds.

The catalytic lower-energy hydrogen transitions of the present disclosure require a catalyst that may be in the form of an endothermic chemical reaction of an integer $m$ of the potential energy of uncatalyzed atomic hydrogen, 27.2 $eV$, that accepts the energy from atomic H to cause the transition. The endothermic catalyst reaction may be the ionization of one or more electrons from a species such as an atom or ion (e.g. $m = 3$ for $Li \to Li^{2+}$) and may further comprise the concerted reaction of a bond cleavage with ionization of one or more electrons from one or more of the partners of the initial bond (e.g. $m = 2$ for $NaH \to Na^{2+} + H$). $He^+$ fulfills the catalyst criterion-a chemical or physical process with an enthalpy change equal to an integer multiple of 27.2 $eV$ since it ionizes at 54.417 $eV$, which is 2·27.2 $eV$. Two hydrogen atoms may also serve as the catalyst of the same enthalpy. Hydrogen atoms $H(1/p)\ p = 1,2,3,...137$ can undergo further transitions to lower-energy states given by Eqs. (1) and (3) wherein the transition of one atom is catalyzed by a second that resonantly and nonradiatively accepts $m\cdot 27.2\ eV$ with a concomitant opposite change in its potential energy. The overall general equation for the transition of $H(1/p)$ to $H(1/(p+m))$ induced by a resonance transfer of $m\cdot 27.2\ eV$ to $H(1/p')$ is represented by

$$H\left(1/p'\right)+H\left(1/p\right)\rightarrow H+H\left(1/(p+m)\right)+\left[2pm+m^2-p'^2+1\right]\cdot 13.6\ eV\ . \tag{23}$$

Hydrogen atoms may serve as a catalyst wherein $m = 1$ 1 and $m = 2$ for one and two atoms, respectively, acting as a catalyst for another. The rate for the two-atom-catalyst, $2H$, may be high when extraordinarily fast H collides with a molecule to form the $2H$ wherein two atoms resonantly and nonradiatively accept 54.4 $eV$ from a third hydrogen atom of the collision partners.

With $m = 2$, the product of catalysts $He^+$ and $2H$ is $H(1/3)$ that reacts rapidly to form $H(1/4)$, then molecular hydrino, $H_2(1/4)$, as a preferred state. Specifically, in the case of a high hydrogen atom concentration, the further transition given by Eq. (23) of $H(1/3)$ ($p = 3$) to $H(1/4)$ ($p + m = 4$) with H as the catalyst ($p' = 1$; $m = 1$) can be fast:

$$H\left(1/3\right)\xrightarrow{\ H\ }H\left(1/4\right)+95.2\ eV\ . \tag{24}$$

The corresponding molecular hydrino $H_2(1/4)$ and hydrino hydride ion $H^-(1/4)$ are final products consistent with observation since the $p = 4$ quantum state has a multipolarity greater than that of a quadrupole giving it $H(1/4)$ a long theoretical lifetime for further catalysis.

The nonradiative energy transfer to the catalysts, $He^+$ and $2H$, is predicted to pump the $He^+$ ion energy levels and increase the electron excitation temperature *of H* in helium-hydrogen and hydrogen plasmas, respectively. For both catalysts, the intermediate $H*\left[\dfrac{a_H}{2+1}\right]$ (Eq. (6) with $m = 2$) has the radius of the hydrogen atom (corresponding to the 1 in the denominator) and a central field equivalent to 3 times that of a proton, and $H\left[\dfrac{a_H}{3}\right]$ is the corresponding stable state with the radius of 1/3 that of *H*. As the electron undergoes radial acceleration from the radius of the hydrogen atom to a radius of 1/3 this distance, energy is released as characteristic light emission or as third-body kinetic energy. The emission may be in the form of an extreme-ultraviolet continuum radiation having an edge at *54.4 eV* (22.8 nm) and extending to longer wavelengths. The emission may be in the form of an extreme-ultraviolet continuum radiation having an edge at 54.4 $eV$ (22.8 nm) and extending to longer wavelengths. Alternatively, fast H is predicted due to a resonant kinetic-energy transfer. A secondary continuum band is predicted arising from the subsequently rapid transition of the catalysis product $\left[\dfrac{a_H}{3}\right]$ (Eq. (23)) to the $\left[\dfrac{a_H}{4}\right]$ state wherein atomic hydrogen accepts 27.2 $eV$ from $\left[\dfrac{a_H}{3}\right]$. Extreme ultraviolet (EUV) spectroscopy and high-resolution visible spectroscopy were recorded on microwave and glow and pulsed discharges of helium with hydrogen and hydrogen alone providing catalysts $He^+$ and $2H$, respectively. Pumping of the $He^+$ ion lines occurred with the addition of hydrogen, and the excitation temperature of hydrogen plasmas under certain conditions was very high. The EUV continua at both 22.8 nm and 40.8 nm were observed and extraordinary (>50 eV) Balmer $\alpha$ line broadening were observed. $H_2(1/4)$ was observed by solution NMR at 1.25 ppm on gases collected from helium-hydrogen, hydrogen, and water-vapor-assisted hydrogen plasmas and dissolved in $CDCl_3$.

Similarly, the reaction of $Ar^+$ to $Ar^{2+}$ has a net enthalpy of reaction of 27.63 $eV$, which is equivalent to $m = 1$ in Eqs. (4-7). When $Ar^+$ served as the catalyst its predicted 91.2 nm and 45.6 nm continua were observed as well as the other characteristic signatures of hydrino transitions, pumping of the catalyst excited states, fast H, and the predicted gaseous hydrino product $H_2(1/4)$ that was observed by solution NMR at 1.25 ppm. Considering these results and those of helium plasmas, the $q \cdot 13.6$ $eV$ continua with thresholds at 54.4 $eV$ ($q = 4$) and 40.8 $eV$ ($q = 3$) for $He^+$ catalyst and at 27.2 $eV$ ($q = 2$) and 13.6 $eV$ ($q = 1$) for $Ar^+$ catalyst have been observed. Much higher values of $q$ are possible with transitions of hydrinos to lower states giving rise to high-energy continuum radiation over a broad spectral region.

In recent power generation and product characterization studies, atomic lithium and molecular *NaH* served as catalysts since they meet the catalyst criterion-a chemical or physical process with an enthalpy change equal to an integer multiple $m$ of the potential energy of atomic hydrogen, 27.2 $eV$ (e.g. $m = 3$ for *Li* and $m = 2$ for *NaH*). Specific predictions based on closed-form equations for energy levels of the corresponding hydrino hydride ions $H^-(1/4)$ of novel alkali halido hydrino hydride compounds (*MH*X*; M = Li or Na, X = halide*) and molecular hydrino $H_2(1/4)$ were tested using chemically generated catalysis reactants.

First, *Li* catalyst was tested. *Li* and $LiNH_2$ were used as a source of atomic lithium and hydrogen atoms. Using water-flow, batch calorimetry, the measured power from 1g *Li*, 0.5g $LiNH_2$, 10g *LiBr*, and 15g $Pd/Al_2O_3$ was about 160W with an energy balance of $\Delta H = -19.1$ $kJ$. The observed energy balance was 4.4 times the maximum theoretical based on known chemistry. Next, Raney nickel (R-Ni) served as a dissociator when the power reaction mixture was used in chemical synthesis wherein *LiBr* acted as a getter of the catalysis product $H(1/4)$ to form *LiH\*X* as well as to trap $H_2(1/4)$ in the crystal. The ToF-SIMs showed *LiH\*X* peaks. The $^1H$ MAS NMR *LiH\*Br* and *LiH\*I* showed a large distinct upfield resonance at about -2.5 ppm that matched $H^-(1/4)$ in a *LiX* matrix. An NMR peak at 1.13 ppm matched interstitial $H_2(1/4)$, and the rotation frequency of $H_2(1/4)$ of $4^2$ times that of ordinary $H_2$ was observed at 1989 $cm^{-1}$ in the FTIR spectrum. The XPS spectrum recorded on the *LiH\*Br* crystals showed peaks at about 9.5 eV and 12.3 eV that could not be assigned to any known elements based on the absence of any other primary element peaks, but matched the binding energy of $H^-(1/4)$ in two chemical environments. A further signature of the energetic process was the observation of the formation of a plasma called a resonant transfer- or rt-plasma at low temperatures (e.g. $\approx 10^3 K$) and very low field strengths of about 1-2 V/cm when atomic *Li* was present with atomic hydrogen. Time-dependent line broadening of *the H* Balmer $\alpha$ line was observed corresponding to extraordinarily fast *H* (>40 eV).

A compound of the present disclosure such as *MH* comprising hydrogen and at least one element M other than hydrogen serves as a source of hydrogen and a source of catalyst to form hydrinos. A catalytic reaction is provided by the breakage of the *M - H* bond plus the ionization of *t* electrons from the atom *M* each to a continuum energy level such that the sum of the bond energy and ionization energies of the *t* electrons is approximately $m \cdot 27.2$ eV, where *m* is an integer. One such catalytic system involves sodium. The bond energy of *NaH* is 1.9245 *eV ,* and the first and second ionization energies of *Na* are 5.13908 *eV* and 47.2864 *eV*, respectively. Based on these energies *NaH* molecule can serve as a catalyst and *H* source, since the bond energy of *NaH* plus the double ionization ($t = 2$) of *Na* to $Na^{2+}$ is 54.35 *eV* ($2 \cdot 27.2$ *eV*). The catalyst reactions are given by

$$54.35 \ eV + NaH \rightarrow Na^{2+} + 2e^- + H\left[\frac{a_H}{3}\right] + [3^2 - 1^2] \cdot 13.6 \ eV \qquad (25)$$

$$Na^{2+} + 2e^- + H \rightarrow NaH + 54.35 \ eV. \qquad (26)$$

And the overall reaction is

$$H \rightarrow H\left[\frac{a_H}{3}\right] + [3^2 - 1^2] \cdot 13.6 \ eV. \qquad (27)$$

The product $H(1/3)$ reacts rapidly to form $H(1/4)$, then molecular hydrino, $H_2(1/4)$, as a preferred state (Eq. (24)). The *NaH* catalyst reactions may be concerted since the sum of the bond energy of *NaH*, the double ionization ($t = 2$) of *Na* to $Na^{2+}$, and the potential energy of *H* is 81.56 *eV* ($3 \cdot 27.2$ *eV*). The catalyst reactions are given by

$$81.56 \ eV + NaH + H \rightarrow Na^{2+} + 2e^- + H^+_{fast} + e^- + H\left[\frac{a_H}{4}\right] + [4^2 - 1^2] \cdot 13.6 \ eV \qquad (28)$$

$$Na^{2+} + 2e^- + H + H^+_{fast} + e^- \rightarrow NaH + H + 81.56 \ eV. \qquad (29)$$

And the overall reaction is

$$H \rightarrow H\left[\frac{a_H}{4}\right] + [4^2 - 1^2] \cdot 13.6 \ eV, \qquad (30)$$

where $H^+_{fast}$ is a fast hydrogen atom having at least 13.6 eV of kinetic energy. $H^-(1/4)$ forms stable halidohydrides and is a favored product together with the corresponding molecule formed by the reactions $2H(1/4) \rightarrow H_2(1/4)$ and $H (1/4) + H^+ \rightarrow H_2(1/4)$.

Sodium hydride is typically in the form of an ionic crystalline compound formed by the reaction of gaseous hydrogen with metallic sodium. And, in the gaseous state, sodium comprises covalent $Na_2$ molecules with a bond energy of 74.8048 kJ/mole. It was found that when *NaH(s)* was heated at a very slow temperature ramp rate (0.1 °C/min) under a helium atmosphere to form $NaH(g)$, the predicted exothermic reaction given by Eqs. (25-27) was observed at high temperature by differential scanning calorimetry (DSC). To achieve high power, a chemical system was designed to greatly increase the amount and rate of formation of $NaH(g)$. The reaction of $NaOH$ and $Na$ to $Na_2O$ and $NaH(s)$ calculated from the heats of formation releases $\Delta H = -44.7$ $kJ / mole\ NaOH$ :

$$NaOH + 2Na \rightarrow Na_2O + NaH\left(s\right) \quad \Delta H = -44.7\ kJ / mole\ NaOH \ . \qquad (31)$$

This exothermic reaction can drive the formation of $NaH$(g) and was exploited to drive the very exothermic reaction given by Eqs. (25-27). The regenerative reaction in the presence of atomic hydrogen is

$$Na_2O + H \rightarrow NaOH + Na \quad \Delta H = -11.6\ kJ / mole\ NaOH \qquad (32)$$

$$NaH \rightarrow Na + H(1/3) \quad \Delta H = -10,500\ kJ / mole\ H \qquad (33)$$

and

$$NaH \rightarrow Na + H(1/4) \quad \Delta H = -19,700\ kJ / mole\ H \ . \qquad (34)$$

$NaH$ uniquely achieves high kinetics since the catalyst reaction relies on the release of the intrinsic $H$, which concomitantly undergoes the transition to form $H(1/3)$ that further reacts to form $H(1/4)$. High-temperature differential scanning calorimetry (DSC) was performed on ionic $NaH$ under a helium atmosphere at an extremely slow temperature ramp rate (0.1 °C/min) to increase the amount of molecular $NaH$ formation. A novel exothermic effect of -177 $kJ/mole NaH$ was observed in the temperature range of 640 °C to 825 °C. To achieve high power, R-Ni having a surface area of about 100 $m^2$/g was surface-coated with $NaOH$ and reacted with $Na$ metal to form $NaH$. Using water-flow, batch calorimetry, the measured power from 15g of R-Ni was about 0.5 kW with an energy balance of $\Delta H$ = -36 $kJ$ compared to $\Delta H \approx 0$ $kJ$ from the R-Ni starting material, R-NiAl alloy, when reacted with $Na$ metal. The observed energy balance of the $NaH$ reaction was -1.6$X10^4$ $kJ/mole\ H_2$, over 66 times the -241.8 $kJ/mole\ H_2$ enthalpy of combustion. With an increase in $NaOH$ doping to 0.5 wt%, the $Al$ of the R-Ni intermetallic served to replace $Na$ metal as a reductant to generate $NaH$ catalyst. When heated to 60 °C, 15g of the composite catalyst material required no additive to release 11.7 kJ of excess energy and develop a power of 0.25 kW. Solution NMR on product gases dissolved in DMF-d7 showed $H_2$ (1/4) at 1.2 ppm.

The ToF-SIMs showed sodium hydrino hydride, $NaH_x$, peaks. The [1]$H$ MAS NMR spectra of $NaH * Br$ and $NaH * Cl$ showed large distinct upfield resonance at -3.6 ppm and -4 ppm, respectively, that matched $H^-(1/4)$, and an NMR peak at 1.1 ppm matched $H_2(1//4)$. $NaH * Cl$ from reaction of $NaCl$ and the solid acid $KHSO_4$ as the only source of hydrogen comprised two fractional hydrogen states. The $H^-(1/4)$ NMR peak was observed at -3.97 ppm, and the $H^-(1/3)$ peak was also present at -3.15 ppm. The corresponding $H_2(1/4)$ and $H_2(1/3)$ peaks were observed at 1.15 ppm and 1.7 ppm, respectively. [1]$H$ NMR of $NaH * F$ dissolved in DMF-d7 showed isolated $H_2(1/4)$ and $H^-(1/4)$ at 1.2 ppm and -3.86 ppm, respectively, wherein the absence of any solid matrix effect or the possibly of alternative assignments confirmed the solid NMR assignments. The XPS spectrum recorded on $NaH * Br$ showed the $H^-(1/4)$ peaks at about 9.5 eV and 12.3 eV that matched the results from $LiH * Br$ and $KH * I$; whereas, sodium hydrino hydride showed two fractional hydrogen states additionally having the $H^-(1/3)$ XPS peak at 6 eV in the absence of a halide peak. The predicted rotational transitions having energies of $4^2$ times those of ordinary $H_2$ were also observed from $H_2(1/4)$ which was excited using a 12.5 keV electron beam.

These data such as NMR shifts, ToF-SIMs masses, XPS binding energies, FTIR, and emission spectrum are characteristic of and identify hydrino products of the catalysts systems that comprise an aspect of the present disclosure.

I. Hydrinos

A hydrogen atom having a binding energy given by

$$Binding\ Energy = \frac{13.6\ eV}{\left(1/p\right)^2} \qquad (35)$$

where p is an integer greater than 1, preferably from 2 to 137, is the product of the H catalysis reaction of the present disclosure. The binding energy of an atom, ion, or molecule, also known as the ionization energy, is the energy required to remove one electron from the atom, ion or molecule. A hydrogen atom having the binding energy given in Eq. (35) is hereafter referred to as a "hydrino atom" or "hydrino." The designation for a hydrino of radius $\dfrac{a_H}{p}$, where $a_H$ is the radius of an ordinary hydrogen atom and p is an integer, is $H\left[\dfrac{a_H}{p}\right]$. A hydrogen atom with a radius $a_H$ is hereinafter referred to as "ordinary hydrogen atom" or "normal hydrogen atom." Ordinary atomic hydrogen is characterized by its binding energy of 13.6 eV.

Hydrinos are formed by reacting an ordinary hydrogen atom with a suitable catalyst having a net enthalpy of reaction of

$$m \cdot 27.2 \ eV \tag{36}$$

where m is an integer. It is believed that the rate of catalysis is increased as the net enthalpy of reaction is more closely matched to $m \cdot 27.2 \ eV$. It has been found that catalysts having a net enthalpy of reaction within ±10%, preferably ±5%, of $m \cdot 27.2 \ eV$ are suitable for most applications.

This catalysis releases energy from the hydrogen atom with a commensurate decrease in size of the hydrogen atom, $r_n = na_H$. For example, the catalysis of H(n = 1) to $H(n = 1/2)$ releases 40.8 eV, and the hydrogen radius decreases from $a_H$ to $\dfrac{1}{2}a_H$. A catalytic system is provided by the ionization of t electrons from an atom each to a continuum energy level such that the sum of the ionization energies of the t electrons is approximately $m \cdot 27.2 \ eV$ where m is an integer.

A further example to such catalytic systems given supra (Eqs. (6-9) involves lithium metal. The first and second ionization energies of lithium are 5.39172 eV and 75.64018 eV, respectively. The double ionization (t = 2) reaction of Li to $Li^{2+}$, then, has a net enthalpy of reaction of 81.0319 eV, which is equivalent to m = 3 in Eq. (36).

$$81.0319 \ eV + Li(m) + H\left[\frac{a_H}{p}\right] \rightarrow Li^{2+} + 2e^- + H\left[\frac{a_H}{(p+3)}\right] + [(p+3)^2 - p^2] \cdot 13.6 \ eV \tag{37}$$

$$Li^{2+} + 2e^- \rightarrow Li(m) + 81.0319 \ eV. \tag{38}$$

And the overall reaction is

$$H\left[\frac{a_H}{p}\right] \rightarrow H\left[\frac{a_H}{(p+3)}\right] + [(p+3)^2 - p^2] \cdot 13.6 \ eV. \tag{39}$$

In another embodiment, the catalytic system involves cesium. The first and second ionization energies of cesium are 3,89390 eV and 23.15745 eV, respectively. The double ionization (t = 2) reaction of Cs to $Cs^{2+}$, then, has a net enthalpy of reaction of 27.05135 eV, which is equivalent to m = 1 in Eq. (36).

$$27.05135 \ eV + Cs(m) + H\left[\frac{a_H}{p}\right] \rightarrow Cs^{2+} + 2e^- + H\left[\frac{a_H}{(p+1)}\right] + [(p+1)^2 - p^2] \cdot 13.6 \ eV \tag{40}$$

$$Cs^{2+} + 2e^- \rightarrow Cs(m) + 27.05135 \ eV. \tag{41}$$

And the overall reaction is

$$H\left[\frac{a_H}{p}\right] \rightarrow H\left[\frac{a_H}{(p+1)}\right]+[(p+1)^2-p^2]\cdot 13.6\ eV\ . \qquad (42)$$

An additional catalytic system involves potassium metal. The first, second, and third ionization energies of potassium are 4.34066 *eV,* 31.63 *eV,* 45.806 *eV,* respectively. The triple ionization (*t* = 3) reaction *of K* to $K^{3+}$, then, has a net enthalpy of reaction of 81.7767 *eV,* which is equivalent to *m* = 3 in Eq. (36).

$$81.7767\ eV + K\left(m\right) + H\left[\frac{a_H}{p}\right] \rightarrow K^{3+} + 3e^- + H\left[\frac{a_H}{(p+3)}\right]+[(p+3)^2-p^2]\cdot 13.6\ eV \qquad (43)$$

$$K^{3+} + 3e^- \rightarrow K\left(m\right) + 81.7426\ eV\ . \qquad (44)$$

And the overall reaction is

$$H\left[\frac{a_H}{p}\right] \rightarrow H\left[\frac{a_H}{(p+3)}\right]+[(p+3)^2-p^2]\cdot 13.6\ eV\ . \qquad (45)$$

As a power source, the energy given off during catalysis is much greater than the energy lost to the catalyst. The energy released is large as compared to conventional chemical reactions. For example, when hydrogen and oxygen gases undergo combustion to form water

$$H_2\left(g\right)+\frac{1}{2}O_2\left(g\right) \rightarrow H_2O\ (l) \qquad (46)$$

the known enthalpy of formation of water is $\Delta H_f$ = -286 *kJ* / *mole* or 1.48 eV per hydrogen atom. By contrast, each (*n* = 1) ordinary hydrogen atom undergoing catalysis releases a net of 40.8 *eV*. Moreover, further catalytic transitions may occur: $n = \frac{1}{2} \rightarrow \frac{1}{3},\ \frac{1}{3} \rightarrow \frac{1}{4},\ \frac{1}{4} \rightarrow \frac{1}{5},$ and so on. Once catalysis begins, hydrinos autocatalyze further in a process called disproportionation. This mechanism is similar to that of an inorganic ion catalysis. But, hydrino catalysis should have a higher reaction rate than that of the inorganic ion catalyst due to the better match of the enthalpy to $m\cdot 27.2\ eV$.

The hydrino hydride ion of the present disclosure can be formed by the reaction of an electron source with a hydrino, that is, a hydrogen atom having a binding energy of about $\dfrac{13.6\ eV}{n^2}$, where $n = \dfrac{1}{p}$ and *p* is an integer greater than 1. The hydrino hydride ion is represented by $H^-(n = 1/p)$ or $H^-(1/p)$:

$$H\left[\frac{a_H}{p}\right]+e^- \rightarrow H^-\left(n=1/p\right) \qquad (47)$$

$$H\left[\frac{a_H}{p}\right]+e^- \rightarrow H^-\left(1/p\right)\ . \qquad (48)$$

The hydrino hydride ion is distinguished from an ordinary hydride ion comprising an ordinary hydrogen nucleus and two electrons having a binding energy of about 0.8 eV. The latter is hereafter referred to as "ordinary hydride ion" or "normal hydride ion." The hydrino hydride ion comprises a hydrogen nucleus including proteum, deuterium, or tritium, and two indistinguishable electrons at a binding energy according to Eqs. (49-50).

The binding energy of a hydrino hydride ion can be represented by the following formula:

$$Binding\ Energy = \frac{\hbar^2 \sqrt{s(s+1)}}{8\mu_e a_0^2 \left[\frac{1+\sqrt{s(s+1)}}{p}\right]^2} - \frac{\pi\mu_0 e^2 \hbar^2}{m_e^2}\left(\frac{1}{a_H^3} + \frac{2^2}{a_0^3\left[\frac{1+\sqrt{s(s+1)}}{p}\right]^3}\right) \qquad (49)$$

where $p$ is an integer greater than one, $s = 1/2$, $\pi$ is pi, $\hbar$ is Planck's constant bar, $\mu_o$ is the permeability of vacuum, $m_e$ is the mass of the electron, $\mu_e$ is the reduced electron mass given by $\mu_e = \dfrac{m_e m_p}{\dfrac{m_e}{\sqrt{\frac{3}{4}}} + m_p}$ where $m_p$ is the mass of the proton, $a_H$ is the radius of the hydrogen atom, $a_o$ is the Bohr radius, and e is the elementary charge. The radii are given by

$$r_2 = r_1 = a_0\left(1 + \sqrt{s(s+1)}\right); \ s = \frac{1}{2}. \qquad (50)$$

The binding energies of the hydrino hydride ion, $H^-(n = 1/p)$ as a function of $p$, where $p$ is an integer, are shown in TABLE 1

TABLE 1. The representative binding energy of the hydrino hydride ion $H^-(n = 1/p)$ as a function of $p$, Eq. (49).

| Hydride Ion | $r_1 (a_o)$[a] | Binding Energy (eV)[b] | Wavelength (nm) |
|---|---|---|---|
| $H^-(n=1)$ | 1.8660 | 0.7542 | 1644 |
| $H^-(n=1/2)$ | 0.9330 | 3.047 | 406.9 |
| $H^-(n=1/3)$ | 0.6220 | 6.610 | 187.6 |
| $H^-(n=1/4)$ | 0.4665 | 11.23 | 110.4 |
| $H^-(n=1/5)$ | 0.3732 | 16.70 | 74.23 |
| $H^-(n=1/6)$ | 0.3110 | 22.81 | 54.35 |
| $H^-(n=1/7)$ | 0.2666 | 29.34 | 42.25 |
| $H^-(n=1/8)$ | 0.2333 | 36.09 | 34.46 |
| $H^-(n=1/9)$ | 0.2073 | 42.84 | 28.94 |
| $H^-(n=1/10)$ | 0.1866 | 49.38 | 25.11 |
| $H^-(n=1/11)$ | 0.1696 | 55.50 | 22.34 |
| $H^-(n=1/12)$ | 0.1555 | 60.98 | 20.33 |
| $H^-(n=1/13)$ | 0.1435 | 65.63 | 18.89 |
| $H^-(n=1/14)$ | 0.1333 | 69.22 | 17.91 |
| $H^-(n=1/15)$ | 0.1244 | 71.55 | 17.33 |
| $H^-(n=1/16)$ | 0.1166 | 72.40 | 17.12 |
| $H^-(n=1/17)$ | 0.1098 | 71.56 | 17.33 |
| $H^-(n=1/18)$ | 0.1037 | 68.83 | 18.01 |
| $H^-(n=1/19)$ | 0.0982 | 63.98 | 19.38 |
| $H^-(n=1/20)$ | 0.0933 | 56.81 | 21.82 |
| $H^-(n=1/21)$ | 0.0889 | 47.11 | 26.32 |
| $H^-(n=1/22)$ | 0.0848 | 34.66 | 35.76 |
| $H^-(n=1/23)$ | 0.0811 | 19.26 | 64.36 |
| $H^-(n=1/24)$ | 0.0778 | 0.6945 | 1785 |

a Eq. (50)
b Eq. (49)

According to the present disclosure, a hydrino hydride ion (H⁻) having a binding energy according to Eqs. (49-50) that is greater than the binding of ordinary hydride ion (about 0.75 eV) *for p* = 2 up to 23, and less for *p* = 24 (H⁻) is provided. For *p* = 2 to *p* = 24 of Eqs. (49-50), the hydride ion binding energies are respectively 3, 6.6, 11.2, 16.7, 22.8, 29.3, 36.1, 42.8, 49.4, 55.5, 61.0, 65.6, 69.2, 71.6, 72.4, 71.6, 68.8, 64.0, 56.8, 47.1, 34.7, 19.3, and 0.69 eV. Exemplary compositions comprising the novel hydride ion are also provided herein.

Exemplary compounds are also provided comprising one or more hydrino hydride ions and one or more other elements. Such a compound is referred to as a "hydrino hydride compound."

Ordinary hydrogen species are characterized by the following binding energies (a) hydride ion, 0.754 eV ("ordinary hydride ion"); (b) hydrogen atom ("ordinary hydrogen atom"), 13.6 eV; (c) diatomic hydrogen molecule, 15.3 eV ("ordinary hydrogen molecule"); (d) hydrogen molecular ion, 16.3 eV ("ordinary hydrogen molecular ion"); and (e) $H_3^+$, 22.6 eV ("ordinary trihydrogen molecular ion"). Herein, with reference to forms of hydrogen, "normal" and "ordinary" are synonymous.

According to a further embodiment of the present disclosure, a compound is provided comprising at least one increased binding energy hydrogen species such as (a) a hydrogen atom having a binding energy of about $\dfrac{13.6\,eV}{\left(\dfrac{1}{p}\right)^2}$,

such as within a range of about 0.9 to 1.1 times $\dfrac{13.6\,eV}{\left(\dfrac{1}{p}\right)^2}$ where p is an integer from 2 to 137; (b) a hydride ion ($H^-$) having a binding energy of about

$$Binding\ Energy = \frac{\hbar^2\sqrt{s(s+1)}}{8\mu_e a_0^2\left[\dfrac{1+\sqrt{s(s+1)}}{p}\right]^2} - \frac{\pi\mu_0 e^2\hbar^2}{m_e^2}\left(\frac{1}{a_H^3}+\frac{2^2}{a_0^3\left[\dfrac{1+\sqrt{s(s+1)}}{p}\right]^3}\right),$$ such as within a range of about 0.9 to 1.1 times $$Binding\ Energy = \frac{\hbar^2\sqrt{s(s+1)}}{8\mu_e a_0^2\left[\dfrac{1+\sqrt{s(s+1)}}{p}\right]^2} - \frac{\pi\mu_0 e^2\hbar^2}{m_e^2}\left(\frac{1}{a_H^3}+\frac{2^2}{a_0^3\left[\dfrac{1+\sqrt{s(s+1)}}{p}\right]^3}\right)$$ where p is an integer from 2 to 24; (c) $H_4^+(1/p)$; (d) a trihydrino molecular ion, $H_3^+(1/p)$, having a binding energy of about

$\dfrac{22.6}{\left(\dfrac{1}{p}\right)^2}\,eV$ such as within a range of about 0.9 to 1.1 times $\dfrac{22.6}{\left(\dfrac{1}{p}\right)^2}\,eV$ where p is an integer from 2 to 137; (e) a dihydrino having a binding energy of about $\dfrac{15.3}{\left(\dfrac{1}{p}\right)^2}\,eV$ such as within a range of about 0.9 to 1.1 times $\dfrac{15.3}{\left(\dfrac{1}{p}\right)^2}\,eV$ where p is an integer from 2 to 137; (f) a dihydrino molecular ion with a binding energy of about $\dfrac{16.3}{\left(\dfrac{1}{p}\right)^2}\,eV$ such as within a range of about 0.9 to 1.1 times $\dfrac{16.3}{\left(\dfrac{1}{p}\right)^2}\,eV$ where p is an integer, preferably an integer from 2 to 137.

According to a further embodiment of the present disclosure, a compound is provided comprising at least one increased binding energy hydrogen species such as (a) a dihydrino molecular ion having a total energy of about

$$E_T = -p^2 \left\{ \frac{\frac{e^2}{8\pi\varepsilon_o a_H}(4\ln 3 - 1 - 2\ln 3)\left[1 + p\sqrt{\frac{2\hbar\sqrt{\frac{2e^2}{4\pi\varepsilon_o(2a_H)^3}}}{m_e c^2}}\right]}{-\frac{1}{2}\hbar\sqrt{\frac{\frac{pe^2}{4\pi\varepsilon_o\left(\frac{2a_H}{p}\right)^3} - \frac{pe^2}{8\pi\varepsilon_o\left(\frac{3a_H}{p}\right)^3}}{\mu}}} \right\} \tag{51}$$

$$= -p^2 16.13392\ eV - p^3 0.118755\ eV$$

such as within a range of about 0.9 to 1.1 times

$$E_T = -p^2 \left\{ \frac{\frac{e^2}{8\pi\varepsilon_o a_H}(4\ln 3 - 1 - 2\ln 3)\left[1 + p\sqrt{\frac{2\hbar\sqrt{\frac{2e^2}{4\pi\varepsilon_o(2a_H)^3}}}{m_e c^2}}\right]}{-\frac{1}{2}\hbar\sqrt{\frac{\frac{pe^2}{4\pi\varepsilon_o\left(\frac{2a_H}{p}\right)^3} - \frac{pe^2}{8\pi\varepsilon_o\left(\frac{3a_H}{p}\right)^3}}{\mu}}} \right\}$$

$$= -p^2 16.13392\ eV - p^3 0.118755\ eV$$

where $p$ is an integer, $\hbar$ is Planck's constant bar, $m$, is the mass of the electron, $c$ is the speed of light in vacuum, and $\mu$ is the reduced nuclear mass, and (b) a dihydrino molecule having a total energy of about

$$E_T = -p^2 \left\{ \frac{\frac{e^2}{8\pi\varepsilon_o a_0}\left[\left(2\sqrt{2}-\sqrt{2}+\frac{\sqrt{2}}{2}\right)\ln\frac{\sqrt{2}+1}{\sqrt{2}-1}-\sqrt{2}\right]\left[1 + p\sqrt{\frac{2\hbar\sqrt{\frac{e^2}{4\pi\varepsilon_o a_0^3}}}{m_e c^2}}\right]}{-\frac{1}{2}\hbar\sqrt{\frac{\frac{pe^2}{8\pi\varepsilon_o\left(\frac{a_0}{p}\right)^3} - \frac{pe^2}{8\pi\varepsilon_o\left(\frac{\left(1+\frac{1}{\sqrt{2}}\right)a_0}{p}\right)^3}}{\mu}}} \right\} \tag{52}$$

$$= -p^2 31.351\ eV - p^3 0.326469\ eV$$

such as within a range of about 0.9 to 1.1 times

$$E_T = -p^2 \left\{ \cfrac{\cfrac{e^2}{8\pi\varepsilon_o a_0}\left[\left(2\sqrt{2}-\sqrt{2}+\cfrac{\sqrt{2}}{2}\right)\ln\cfrac{\sqrt{2}+1}{\sqrt{2}-1}-\sqrt{2}\right]}{-\cfrac{1}{2}\hbar\sqrt{\cfrac{\cfrac{pe^2}{8\pi\varepsilon_o\left(\cfrac{a_0}{p}\right)^3}-\cfrac{pe^2}{8\pi\varepsilon_o\left(\cfrac{\left(1+\cfrac{1}{\sqrt{2}}\right)a_0}{p}\right)^3}}{\mu}}}\left[1+p\sqrt{\cfrac{2\hbar\sqrt{\cfrac{\cfrac{e^2}{4\pi\varepsilon_o a_0^3}}{m_e}}}{m_e c^2}}\right] \right\}$$

where $p$ is an integer and $a_o$ is the

$$= -p^2 31.351\ eV - p^3 0.326469\ eV$$

Bohr radius.

According to one embodiment of the present disclosure wherein the compound comprises a negatively charged increased binding energy hydrogen species, the compound further comprises one or more cations, such as a proton, ordinary $H_2^+$, or ordinary $H_3^+$.

A method is provided herein for preparing compounds comprising at least one hydrino hydride ion. Such compounds are hereinafter referred to as "hydrino hydride compounds." The method comprises reacting atomic hydrogen with a catalyst having a net enthalpy of reaction of about $\frac{m}{2}\cdot 27\ eV$, where m is an integer greater than 1, preferably an integer less than 400, to produce an increased binding energy hydrogen atom having a binding energy of about $\cfrac{13.6\ eV}{\left(\cfrac{1}{p}\right)^2}$ where $p$ is an integer, preferably an integer from 2 to 137. A further product of the catalysis is energy. The increased binding energy hydrogen atom can be reacted with an electron source, to produce an increased binding energy hydride ion. The increased binding energy hydride ion can be reacted with one or more cations to produce a compound comprising at least one increased binding energy hydride ion.

The novel hydrogen compositions of matter can comprise:

(a) at least one neutral, positive, or negative hydrogen species (hereinafter "increased binding energy hydrogen species") having a binding energy

(i) greater than the binding energy of the corresponding ordinary hydrogen species, or

(ii) greater than the binding energy of any hydrogen species for which the corresponding ordinary hydrogen species is unstable or is not observed because the ordinary hydrogen species' binding energy is less than thermal energies at ambient conditions (standard temperature and pressure, STP), or is negative; and

(b) at least one other element. The compounds of the present disclosure are hereinafter referred to as "increased binding energy hydrogen compounds."

By "other element" in this context is meant an element other than an increased binding energy hydrogen species. Thus, the other element can be an ordinary hydrogen species, or any element other than hydrogen. In one group of compounds, the other element and the increased binding energy hydrogen species are neutral. In another group of compounds, the other element and increased binding energy hydrogen species are charged such that the other element provides the balancing charge to form a neutral compound. The former group of compounds is characterized by molecular and coordinate bonding; the latter group is characterized by ionic bonding.

Also provided are novel compounds and molecular ions comprising

(a) at least one neutral, positive, or negative hydrogen species (hereinafter "increased binding energy hydrogen species") having a total energy

(i) greater than the total energy of the corresponding ordinary hydrogen species, or

(ii) greater than the total energy of any hydrogen species for which the corresponding ordinary hydrogen species is unstable or is not observed because the ordinary hydrogen species' total energy is less than thermal energies at ambient conditions, or is negative; and

(b) at least one other element.

The total energy of the hydrogen species is the sum of the energies to remove all of the electrons from the hydrogen species. The hydrogen species according to the present disclosure has a total energy greater than the total energy of the corresponding ordinary hydrogen species. The hydrogen species having an increased total energy according to the present disclosure is also referred to as an "increased binding energy hydrogen species" even though some embodiments of the hydrogen species having an increased total energy may have a first electron binding energy less that the first electron binding energy of the corresponding ordinary hydrogen species. For example, the hydride ion of Eqs. (49-50) for $p = 24$ has a first binding energy that is less than the first binding energy of ordinary hydride ion, while the total energy of the hydride ion of Eqs. (49-50) for $p = 24$ is much greater than the total energy of the corresponding ordinary hydride ion.

Also provided herein are novel compounds and molecular ions comprising

(a) a plurality of neutral, positive, or negative hydrogen species (hereinafter "increased binding energy hydrogen species") having a binding energy

(i) greater than the binding energy of the corresponding ordinary hydrogen species, or
(ii) greater than the binding energy of any hydrogen species for which the corresponding ordinary hydrogen species is unstable or is not observed because the ordinary hydrogen species' binding energy is less than thermal energies at ambient conditions or is negative; and

(b) optionally one other element. The compounds of the present disclosure are hereinafter referred to as "increased binding energy hydrogen compounds."

The increased binding energy hydrogen species can be formed by reacting one or more hydrino atoms with one or more of an electron, hydrino atom, a compound containing at least one of said increased binding energy hydrogen species, and at least one other atom, molecule, or ion other than an increased binding energy hydrogen species.

Also provided are novel compounds and molecular ions comprising

(a) a plurality of neutral, positive, or negative hydrogen species (hereinafter "increased binding energy hydrogen species") having a total energy

(i) greater than the total energy of ordinary molecular hydrogen, or
(ii) greater than the total energy of any hydrogen species for which the corresponding ordinary hydrogen species is unstable or is not observed because the ordinary hydrogen species' total energy is less than thermal energies at ambient conditions or is negative; and

(b) optionally one other element. The compounds of the present disclosure are hereinafter referred to as "increased binding energy hydrogen compounds".

In an embodiment, a compound is provided comprising at least one increased binding energy hydrogen species chosen from (a) hydride ion having a binding energy according to Eqs. (49-50) that is greater than the binding of ordinary hydride ion (about 0.8 eV) for $p = 2$ up to 23, and less for $p = 24$ ("increased binding energy hydride ion" or "hydrino hydride ion"); (b) hydrogen atom having a binding energy greater than the binding energy of ordinary hydrogen atom (about 13.6 eV) ("increased binding energy hydrogen atom" or "hydrino"); (c) hydrogen molecule having a first binding energy greater than about 15.3 eV ("increased binding energy hydrogen molecule" or "dihydrino"); and (d) molecular hydrogen ion having a binding energy greater than about 16.3 eV ("increased binding energy molecular hydrogen ion" or "dihydrino molecular ion").

## II. Power Reactor and System

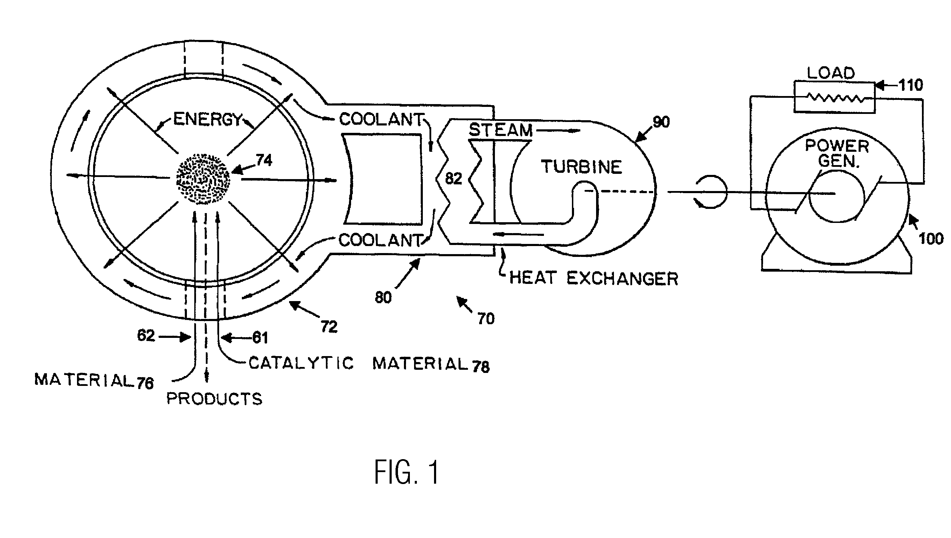

According to another embodiment of the present disclosure, a hydrogen catalyst reactor for producing energy and lower-energy hydrogen species is provided. As shown in FIGURE 1, a hydrogen catalyst reactor 70 comprises a vessel 72 that comprises an energy reaction mixture 74, a heat exchanger 80, and a power converter such as a steam generator 82 and turbine 90. In an embodiment, the catalysis involves reacting atomic hydrogen from the source 76 with the catalyst 78 to form lower-energy hydrogen "hydrinos" and produce power. The heat exchanger 80 absorbs heat released by the catalysis reaction, when the reaction mixture, comprised of hydrogen and a catalyst, reacts to form lower-energy hydrogen. The heat exchanger exchanges heat with the steam generator 82 that absorbs heat from the exchanger 80 and produces steam. The energy reactor 70 further comprises a turbine 90 that receives steam from the steam generator 82 and supplies mechanical power to a power generator 97 that converts the steam energy into electrical energy, which can be received by a load 95 to produce work or for dissipation. In an embodiment, the reactor may be at least partially enclosed with a heat pipe that transfers heat to a load. The load may be a Stirling engine or steam engine to produce electricity. The Stirling engine or steam engine may be used for stationary or motive power. Alternatively, hydride electric or electric systems may convert heat to electric for stationary or motive power. A suitable steam engine for distributed power and motive applications is Cyclone Power Technologies Mark V Engine. Other converters are known by those skilled in the Art. For example, the system may comprise thermoelectric or thermionic converters. The reactor may be one of a multi-tube reactor assembly.

In an embodiment, the energy reaction mixture 74 comprises an energy releasing material 76, such as a fuel supplied through supply passage 62. The reaction mixture may comprise a source of hydrogen isotope atoms or a source of molecular hydrogen isotope, and a source of catalyst 78 which resonantly remove approximately $m \cdot 27.2$ $eV$ to form lower-energy atomic hydrogen where $m$ is an integer, preferably an integer less than 400, wherein the reaction to lower energy states of hydrogen occurs by contact of the hydrogen with the catalyst. The catalyst may be in the molten, liquid, gaseous, or solid state. The catalysis releases energy in a form such as heat and forms at least one of lower-energy hydrogen isotope atoms, lower-energy hydrogen molecules, hydride ions, and lower-energy hydrogen compounds. Thus, the power cell also comprises a lower-energy hydrogen chemical reactor.

The source of hydrogen can be hydrogen gas, dissociation of water including thermal dissociation, electrolysis of water, hydrogen from hydrides, or hydrogen from metal-hydrogen solutions. In another embodiment, molecular hydrogen of the energy releasing material 76 is dissociated into atomic hydrogen by a molecular hydrogen dissociating catalyst of the mixture 74. Such dissociating catalysts or dissociators may also absorb hydrogen, deuterium, or tritium atoms and/or molecules and include, for example, an element, compound, alloy, or mixture of noble metals such as palladium and platinum, refractory metals such as molybdenum and tungsten, transition metals such as nickel and titanium, and inner transition metals such as niobium and zirconium. Preferably, the dissociator has a high surface area such as a noble metal such as Pt, Pd, Ru, Ir, Re, or Rh, or Ni on $Al_2O_3$, $SiO_2$, or combinations thereof.

In an embodiment, a catalyst is provided by the ionization of $t$ electrons from an atom or ion to a continuum energy level such that the sum of the ionization energies of the $t$ electrons is approximately $m \cdot 27.2$ $eV$ where $t$ and $m$ are each an integer. A catalyst may also be provided by the transfer of $t$ electrons between participating ions. The transfer of $t$ electrons from one ion to another ion provides a net enthalpy of reaction whereby the sum of the $t$ ionization energies of the electron-donating ion minus the ionization energies of $t$ electrons of the electron-accepting ion equals approximately $m \cdot 27.2$ $eV$ where $t$ and $m$ are each an integer. In another embodiment, the catalyst comprises $MH$ such as $NaH$ having an atom M bound to hydrogen, and the enthalpy of $m \cdot 27.2$ $eV$ is provided by the sum of the $M$ - $H$ bond energy and the ionization energies of the $t$ electrons.

In an embodiment, a source of catalyst comprises a catalytic material 78 supplied through catalyst supply passage 61, that typically provides a net enthalpy of approximately $\frac{m}{2} \cdot 27.2$ $eV$ plus or minus 1 $eV$. The catalysts comrpise atoms, ions, molecules, and hydrinos that accept energy from atomic hydrogen and hydrinos. In embodiments, the catalyst may comprise at least one species chosen from molecules of AlH, BiH, ClH, CoH, GeH, InH, NaH, RuH, SbH, SeH, SiH, SnH, $C_2$, $N_2$, $O_2$, $CO_2$, $NO_2$, and $NO_3$ and atoms or ions of Li, Be, K, Ca, Ti, V, Cr, Mn, Fe, Co, Ni, Cu, Zn, As, Se, Kr, Rb, Sr, Nb, Mo, Pd, Sn, Te, Cs, Ce, Pr, Sm, Gd, Dy, Pb, Pt, Kr, $2K^+$, $He^+$, $Ti^{2+}$, $Na^+$, $Rb^+$, $Sr^+$, $Fe^{3+}$, $Mo^{2+}$, $Mo^{4+}$, $In^{3+}$, $He^+$, $Ar^+$, $Xe^+$, $Ar^{2+}$ and $H^+$, and $Ne^+$ and $H^+$.

In an embodiment of a power system, the heat is removed by a heat exchanger having a heat exchange medium. The heat exchanger may be a water wall and the medium may be water. The heat may be transferred directly for space and process heating. Alternatively, the heat exchanger medium such as water undergoes a phase change such as conversion to steam. This conversion may occur in a steam generator. The steam may be used to generate electricity in a heat engine such as a steam turbine and a generator.

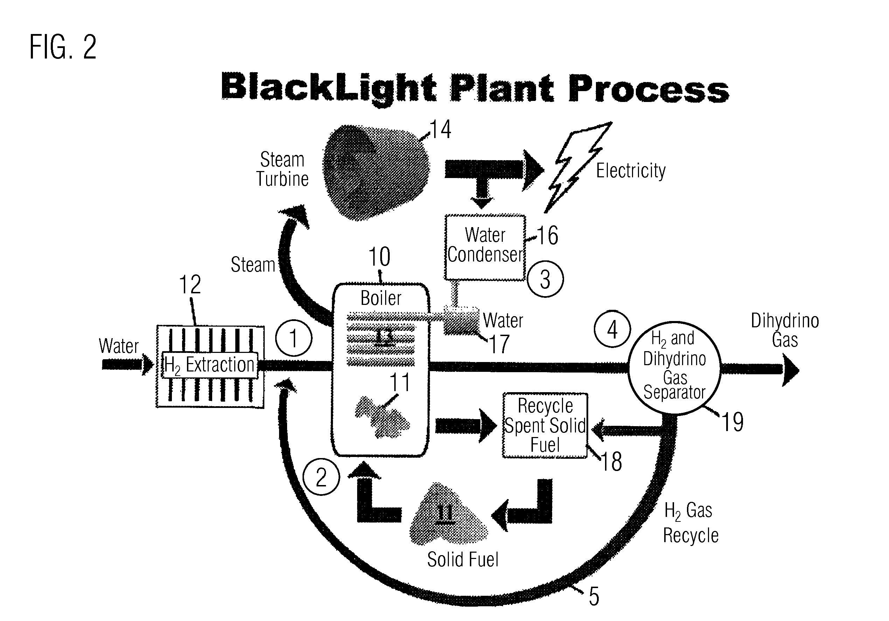

An embodiment of an hydrogen catalyst energy and lower-energy-hydrogen species-producing reactor 5, for recycling or regenerating the fuel in accordance with the present disclosure, is shown in FIGURE 2 and comprises a boiler 10 which contains a fuel reaction mixture 11 that may be a mixture of a source of hydrogen, a source of catalyst, and optionally a solvent that may be vaporized, a hydrogen source 12, steam pipes and steam generator 13, a power converter such as a turbine 14, a water condenser 16, a water-make-up source 17, a fuel recycler 18, and a hydrogen-dihydrino gas separator 19. At Step 1, the fuel, such as one that is gaseous, liquid, solid, or a heterogeneous mixture comprising multiple phases, comprising a source of catalyst and a source of hydrogen reacts to form hydrinos and lower-energy hydrogen products. At Step 2, the spent fuel is reprocessed to re-supply the boiler 10 to maintain thermal power generation. The heat generated in the boiler 10 forms steam in the pipes and steam generator 13 that is delivered to the turbine 14 that in turn generates electricity by powering a generator. At Step 3, the water is condensed by the water condensor 16. Any water loss may be made up by the water source 17 to complete the cycle to maintain thermal to electric power conversion. At Step 4, lower-energy hydrogen products such as hydrino hydride compounds and dihydrino gas may be removed, and unreacted hydrogen may be returned to the fuel recycler 18 or hydrogen source 12 to be added back to spent fuel to make-up recycled fuel. The gas products and unreacted hydrogen may be separated by hydrogen-dihydrino gas separator 19. Any product hydrino hydride compounds may be separated and removed using fuel recycler 18. The processing may be performed in the boiler or externally to the boiler with the fuel returned. Thus, the system may further comprise at least one of gas and mass transporters to move the reactants and products to achieve the spent fuel removal, regeneration, and re-supply. Hydrogen make-up for that spent in the formation of hydrinos is added from the source 12 during fuel reprocessing and may involve recycled, unconsumed hydrogen. The recycled fuel maintains the production of thermal power to drive the power plant to generate electricity.

The reactor may be run in a continuous mode with hydrogen addition and with separation and addition or replacement to counter the minimum degradation of the reactants. Alternatively, the reacted fuel is continuously regenerated from the products. In one embodiment of the latter scheme, the reaction mixture comprises species that can generate the reactants of atomic or molecular catalyst and atomic hydrogen that further react to form hydrinos, and the product species formed by the generation of catalyst and atomic hydrogen can be regenerated by at least the step of reacting the products with hydrogen. In an embodiment, the reactor comprises a moving bed reactor that may further comprise a fluidized-reactor section wherein the reactants are continuously supplied and side products are removed and regenerated and returned to the reactor. In an embodiment, the lower-energy hydrogen products such as hydrino hydride compounds or dihydrino molecules are collected as the reactants are regenerated. Furthermore, the hydrino hydride ions may be formed into other compounds or converted into dihydrino molecules during the regeneration of the reactants.

The reactor may further comprise a separator to separate components of a product mixture such as by evaporation of the solvent if one is present. The separator may, for example, comprise sieves for mechanically separating by differences in physical properties such as size. The separator may also be a separator that exploits differences in density of the component of the mixture, such as a cyclone separator. For example, at least two of the groups chosen from carbon, a metal such as Eu, and an inorganic product such as KBr can be separated based on the differences in density in a suitable medium such as forced inert gas and also by centrifugal forces. The separation of components may also be based on the differential of the dielectric constant and chargeability. For example, carbon may be separated from metal based on the application of an electrostatic charge to the former with removal from the mixture by an electric field. In the case that one or more components of a mixture are magnetic, the separation may be achieved using magnets. The mixture may be agitated over a series of strong magnets alone or in combination with one or more sieves to cause the separation based on at least one of the stronger adherence or attraction of the magnetic particles to the magnet and a size difference of the two classes of particles. In an embodiment of the use of sieves and an applied magnetic field, the latter adds an additional force to that of gravity to draw the smaller magnetic particles through the sieve while the other particles of the mixture are retained on the sieve due to their larger size.

The reactor may further comprise a separator to separate one or more components based on a differential phase change or reaction. In an embodiment, the phase change comprises melting using a heater, and the liquid is separated from the solid by methods known in the art such as gravity filtration, filtration using a pressurized gas assist, centrifugation, and by applying vacuum. The reaction may comprise decomposition such as hydride decomposition or reaction to from a hydride, and the separations may be achieved by melting the corresponding metal followed by its separation and by mechanically separating the hydride powder, respectively. The latter may be achieved by sieving. In an embodiment, the phase change or reaction may produce a desired reactant or intermediate. In certain embodiments, the regeneration including any desired separation steps may occur inside or outside of the reactor.

Other methods known by those skilled in the art that can be applied to the separations of the present disclosure by application of routine experimentation. In general, mechanical separations can be divided into four groups: sedimentation, centrifugal separation, filtration, and sieving. In one embodiment, the separation of the particles is achieved by at least one of sieving and use of classifiers. The size and shape of the particle may be chosen in the starting materials to achieve the desired separation of the products.

The power system may further comprise a catalyst condensor to maintain the catalyst vapor pressure by a temperature control that controls the temperature of a surface at a lower value than that of the reaction cell. The surface temperature is maintained at a desired value that provides the desired vapor pressure of the catalyst. In an embodiment, the catalyst condensor is a tube grid in the cell. In an embodiment with a heat exchanger, the flow rate of the heat transfer medium may be controlled at a rate that maintains the condensor at the desired lower temperature than the main heat exchanger. In an embodiment, the working medium is water, and the flow rate is higher at the condensor than the water wall such that the condensor is the lower, desired temperature. The separate streams of working media may be recombined and transferred for space and process heating or for conversion to steam.

The cells of the present disclosure comprise the catalysts, reaction mixtures, methods, and systems disclosed herein wherein the cell serves as a reactor and at least one component to activate, initiate, propagate, and/or maintain the reaction and regenerate the reactants. According to the present disclosure, the cells comprise at least one catalyst or a source of catalyst, at least one source of atomic hydrogen, and a vessel. The electrolytic cell energy reactor such as a eutectic-salt electrolysis cell, plasma electrolysis reactor, barrier electrode reactor, RF plasma reactor, pressurized gas energy reactor, gas discharge energy reactor, preferably pulsed discharge, and more preferably pulsed pinched plasma discharge, microwave cell energy reactor, and a combination of a glow discharge cell and a microwave and or RF plasma reactor of the present disclosure comprises: a source of hydrogen; one of a solid, molten, liquid, gaseous, and heterogeneous source of catalyst or reactants in any of these states to cause the hydrino reaction by a reaction amongst the reactants; a vessel comprising the reactants or at least containing hydrogen and the catalyst wherein the reaction to form lower-energy hydrogen occurs by contact of the hydrogen with the catalyst or by reaction of the catalyst such as M or MH (M is alkali metal); and optionally a component for removing the lower-energy hydrogen product. In an embodiment, the reaction to form lower-energy state hydrogen is facilitated by an oxidation reaction. The oxidation reaction may increase the reaction rate to form hydrinos by at least one of accepting electrons from the catalyst and neutralizing the highly-charged cation formed by accepting energy from atomic hydrogen. Thus, these cells may be operated in a manner that provides such an oxidation reaction. In an embodiment, the electrolysis or plasma cell may provide an oxidation reaction at the anode wherein hydrogen provided by a method such as sparging and catalyst react to form hydrinos via the participating oxidation reaction. In a further embodiment, the cell comprises a grounded conductor such as a filament that may also be at an elevated temperature. The filament may be powered. The conductor such as a filament may be electrically floating relative to the cell. In an embodiment, the hot conductor such as a filament may boil off electrons as well as serve as a ground for those ionized from the catalyst. The boiled off electrons could neutralize the ionized catalyst. In an embodiment, the cell further comprises a magnet to deflect ionized electrons from the ionized catalyst to enhance the rate of the hydrino reaction.

H may react with electrons from the formation of the catalyst ion such as $Na^{2+}$ and $K^{3+}$ and stabilize each. H may be formed by the reaction $H_2$ with a dissociator. In an embodiment, a hydrogen dissociator such as Pt/Ti is added to the hydrino reactants such as NaH Mg TiC, NaH MgH2 TiC, KH Mg TiC, KH MgH2 TiC, NaH Mg $H_2$, and KH Mg $H_2$. Additionally, H may be produced by using a hot filament such as a Pt or W filament in the cell. A noble gas such as He may be added to increase the H atom population by increasing the H half-life for recombination. Many gaseous atoms have a high electron affinity and can serve as an electron scavenger from catalyst ionization. In an embodiment, one or more atoms are provided to the reaction mixture. In an embodiment, a hot filament provides the atoms. Suitable metals and elements to vaporize by heating with the electron affinity () are: Li (0.62 eV), Na (0.55 eV), Al (0.43 eV), K (0.50 eV), V (0.53 eV), Cr (0.67 eV), Co (0.66 eV), Ni (1.16 eV), Cu, (1.24 eV), Ga (0.43 eV), Ge (1.23 eV), Se (2.02 eV), Rb (0.49 eV), Y (0.30 eV), Nb (0.89 eV), Mo (0.75 eV), Tc (0.55 eV), Ru (1.05 eV), Rh (1.14 eV), Pd (0.56 eV), Ag (1.30 eV), In (0.3 eV), Sn (1.11 eV), Sb (1.05 eV), Te (1.97 eV), Cs (0.47 eV), La (0.47 eV), Ce (0.96 eV), Pr (0.96 eV), Eu (0.86 eV), Tm (1.03 eV), W (0.82 eV), Os (1.1 eV), Ir (1.56 eV), Pt (2.13 eV), Au (2.31 eV), Bi (0.94 eV). The diatomic and higher multi-atomic species have similar electron affinities in many cases and are also suitable electron acceptors. Suitable diatomic electron acceptors are $Na_2$ (0.43 eV) and $K_2$ (0.497 eV), which are the dominant form of gaseous Na and K.

Mg does not form a stable anion (electron affinity EA= 0 eV). Thus, it may serve as an intermediate electron acceptor. Mg may serve as a reactant to form hydrinos in a mixture comprising at least two of a source of catalyst and H such a KH or NaH, and reductant such as an alkaline earth metal, a support such a TiC, and an oxidant such as a alkali or alkaline earth metal halide. Other atoms that do not form stable negative ions could also serve as an intermediate to accept electrons from the ionizing catalyst. The electrons may be transferred to the ion formed by the energy transfer from H. The electrons may also be transferred to an oxidant. Suitable metals with an electron affinity of 0 eV are Zn, Cd, and Hg.

In an embodiment, the reactants a comprise a catalyst or source of catalyst and a source of hydrogen such as NaH or KH, optionally a reductant such as an alkaline earth metal or hydride such as Mg and $MgH_2$, a support such as carbon, carbide, or a boride and optionall an oxidant such as a metal halide or hydride. Suitable carbon, carbides and borides are carbon black, Pd/C, Pt/C, TiC, $Ti_3SiC_2$, $YC_2$, TaC, $Mo_2C$, SiC, WC, C, $B_4C$, HfC, $Cr_3C_2$, ZrC, $CrB_2$, VC, $ZrB_2$, NbC, and $TiB_2$. In an embodiment, the reaction mixture is in contact with an electrode that conducts electrons ionized from the catalyst. The electrode may be the cell body. The electrode may comprise a large surface area electrical conductor such as stainless steel wool. The conduction to the electrode may be through the electrically conductive support such as metal carbide such as TiC. The electrode may be positively biased and may further be connected to a counter electrode in the cell such as a center-line electrode. The counter electrode may be separated from the reactants and may further provide a return path for the current conducted through the first positively biased electrode. The return current may comprise anions. The anions may be formed by reduction at the counter electrode. The anions may comprise atomic or diatomic alkali metal anions such as Na-, K-, $Na_2^-$, and $K_2^-$. The metal vapor such as $Na_2$ or $K_2$ may be

formed and maintained from the metal or hydride such as NaH or KH by maintaining the cell at an elevated temperature such as in the range of about 300 °C to 1000 °C. The anions may further comprise H⁻ formed from atomic hydrogen. The reduction rate may be increased by using an electrode with a high surface area. In an embodiment, the cell may comprise a dissociator such as a chemical dissociator such as Pt/Ti, a filament, or a gas discharge. The electrode, dissociator, or filament generally comprises an electron emitter to reduce species such as gaseous species to ions. The electron emitter may be made to be a more efficient source of electros by coating it. Suitable coated emitters are a thoriated W or Sr or Ba doped metal electrode or filament. A low-power discharge may be maintained between the electrodes using a current-limiting external power supply.

In an embodiment of a liquid fuel cell, the cell is operated at a temperature wherein the rate of decomposition of the solvent is negligible with respect to the power to regenerate it relative to the power of the cell. In this case, the temperature is below that at which a satisfactory efficiency of power conversion can be obtained by more conventional methods such as those using a steam cycle, a lower-boiling-point working medium may be used. In another embodiment, the temperature of a working medium may be increased using a heat pump. Thus, space and process heating may be supplied using the power cell operating at a temperature above ambient wherein a working medium is increased in temperature with a component such as a heat pump. With sufficient elevation of the temperature, a liquid to gas phase transition may occur, and the gas may be used for pressure volume (PV) work. The PV work may comprise powering a generator to produce electricity. The medium may then be condensed, and the condensed working medium may be returned to the reactor cell to be reheated and recirculated in the power loop.

In an embodiment of the reactor, a heterogeneous catalyst mixture comprising a liquid and solid phase is flowed through the reactor. The flow may be achieved by pumping. The mixture may be a slurry. The mixture may be heated in a hot zone to cause the catalysis of hydrogen to hydrinos to release heat to maintain the hot zone. The products may be flowed out of the hot zone, and the reactant mixture may be regenerated from the products. In another embodiment, at least one solid of a heterogeneous mixture may be flowed into the reactor by gravity feed. A solvent may be flowed into the reactor separately or in combination with one or more solids. The reactant mixture may comprise at least one of the group of a dissociator, a high-surface-area (HSA) material, R-Ni, Ni, NaH, Na, NaOH, and a solvent.

In an embodiment, one or more reactants, preferably a source of halogen, halogen gas, source of oxygen, or solvent, are injected into a mixture of the other reactants. The injection is controlled to optimize the excess energy and power from the hydrino-forming reaction. The cell temperature at injection and rate of injection may be controlled to achieve the optimization. Other process parameters and mixing can be controlled to further the optimization using methods known to those skilled in the art of process engineering.

For power conversion, each cell type may be interfaced with any of the known converters of thermal energy or plasma to mechanical or electrical power which include for example, a heat engine, steam or gas turbine system, Sterling engine, or thermionic or thermoelectric converters. Further plasma converters comprise the magnetic mirror magnetohydrodynamic power converter, plasmadynamic power converter, gyrotron, photon bunching microwave power converter, charge drift power, or photoelectric converter. In an embodiment, the cell comprises at least one cylinder of an internal combustion engine.

III. Hydrogen Gas Cell and Solid, Liquid, and Heterogeneous Fuel Reactor

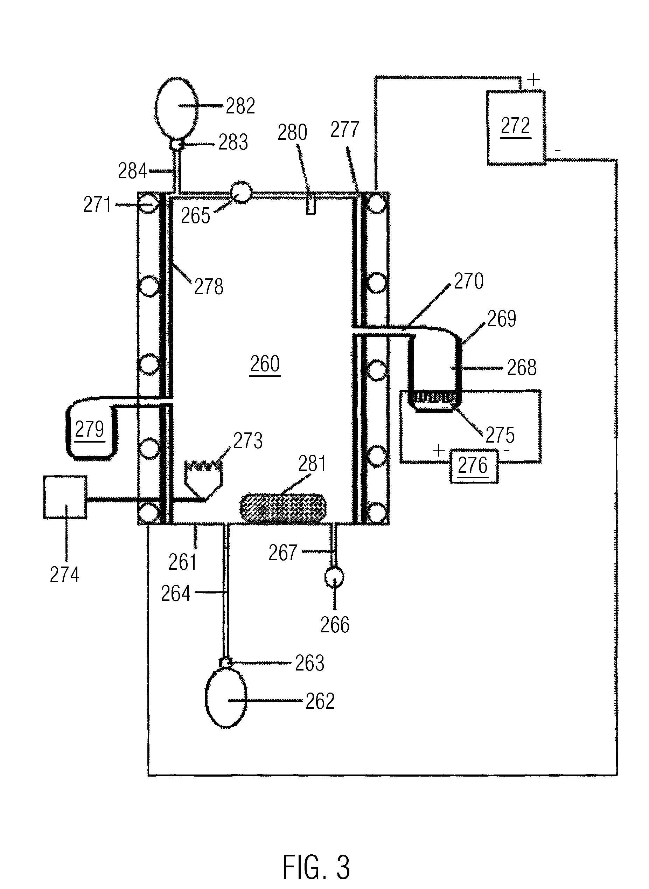

According to an embodiment of the present disclosure, a reactor for producing hydrinos and power may take the form of a reactor cell. A reactor of the present disclosure is shown in FIGURE 3. Reactant hydrino are provided by a catalytic reaction with catalyst. Catalysis may occur in the gas phase or in solid or liquid state.

The reactor of FIGURE 3 comprises a reaction vessel 261 having a chamber 260 capable of containing a vacuum or pressures greater than atmospheric. A source of hydrogen 262 communicating with chamber 260 delivers hydrogen to the chamber through hydrogen supply passage 264. A controller 263 is positioned to control the pressure and flow of hydrogen into the vessel through hydrogen supply passage 264. A pressure sensor 265 monitors pressure in the vessel. A vacuum pump 266 is used to evacuate the chamber through a vacuum line 267.

In an embodiment, the catalysis occurs in the gas phase. The catalyst may be made gaseous by maintaining the cell temperature at an elevated temperature that, in turn, determines the vapor pressure of the catalyst. The atomic and/or molecular hydrogen reactant is also maintained at a desired pressure that may be in any pressure range. In an embodiment, the pressure is less than atmospheric, preferably in the range about 10 millitorr to about 100 Torr. In another embodiment, the pressure is determined by maintaining a mixture of source of catalyst such as a metal source and the corresponding hydride such as a metal hydride in the cell maintained at the desired operating temperature.

A source of suitable catalyst 268 for generating hydrino atoms can be placed in a catalyst reservoir 269, and gaseous catalyst can be formed by heating. The reaction vessel 261 has a catalyst supply passage 270 for the passage of gaseous catalyst from the catalyst reservoir 269 to the reaction chamber 260. Alternatively, the catalyst may be placed in a chemically resistant open container, such as a boat, inside the reaction vessel.

The source of hydrogen can be hydrogen gas and the molecular hydrogen. Hydrogen may be dissociated into atomic hydrogen by a molecular hydrogen dissociating catalyst. Such dissociating catalysts or dissociators include, for example, Raney nickel (R-Ni), precious or noble metals, and a precious or noble metal on a support. The precious or noble metal may be Pt, Pd, Ru, Ir, and Rh, and the support may be at least one of Ti, Nb, $Al_2O_3$, $SiO_2$ and combinations thereof. Further dissociators are Pt or Pd on carbon that may comprise a hydrogen spillover catalyst, nickel fiber mat, Pd sheet, Ti sponge, Pt or Pd electroplated on Ti or Ni sponge or mat, TiH, Pt black, and Pd black, refractory metals such as molybdenum and tungsten, transition metals such as nickel and titanium, inner transition metals such as niobium and zirconium, and other such materials known to those skilled in the art. In an embodiment, hydrogen is dissociated on Pt or Pd. The Pt or Pd may be coated on a support material such as titanium or $Al_2O_3$. In another embodiment, the dissociator is a refractory metal such as tungsten or molybdenum, and the dissociating material may be maintained at elevated temperature by temperature control component 271, which may take the form of a heating coil as shown in cross section in FIGURE 3. The heating coil is powered by a power supply 272. Preferably, the dissociating material is maintained at the operating temperature of the cell. The dissociator may further be operated at a temperature above the cell temperature to more effectively dissociate, and the elevated temperature may prevent the catalyst from condensing on the dissociator. Hydrogen dissociator can also be provided by a hot filament such as 273 powered by supply 274.

In an embodiment, the hydrogen dissociation occurs such that the dissociated hydrogen atoms contact gaseous catalyst to produce hydrino atoms. The catalyst vapor pressure is maintained at the desired pressure by controlling the temperature of the catalyst reservoir 269 with a catalyst reservoir heater 275 powered by a power supply 276. When the catalyst is contained in a boat inside the reactor, the catalyst vapor pressure is maintained at the desired value by controlling the temperature of the catalyst boat, by adjusting the boat's power supply. The cell temperature can be controlled at the desired operating temperature by the heating coil 271 that is powered by power supply 272. The cell (called a permeation cell) may further comprise an inner reaction chamber 260 and an outer hydrogen reservoir 277 such that hydrogen may be supplied to the cell by diffusion of hydrogen through the wall 278 separating the two chambers. The temperature of the wall may be controlled with a heater to control the rate of diffusion. The rate of diffusion may be further controlled by controlling the hydrogen pressure in the hydrogen reservoir.

To maintain the catalyst pressure at the desire level, the cell having permeation as the hydrogen source may be sealed. Alternatively, the cell further comprises high temperature valves at each inlet or outlet such that the valve contacting the reaction gas mixture is maintained at the desired temperature. The cell may further comprise a getter or trap 279 to selectively collect the lower-energy-hydrogen species and/or the increased-binding-energy hydrogen compounds and may further comprise a selective valve 280 for releasing dihydrino gas product.

In an embodiment, the reactants such as the solid fuel or heterogeneous-catalyst fuel mixture 281 is reacted in the vessel 260 by heating with heaters 271. A further added reactant such as at least one of an exothermic reactant, preferably having fast kinetics, may be flowed from vessel 282 into the cell 260 through control valve 283 and connection 284. The added reactant may be a source of halogen, halogen, source of oxygen, or solvent. The reactant 281 may comprise a species that reacts with the added reactant. A halogen may be added to form a halide with reactant 281, or a source of oxygen may be added to reactant 281 to form an oxide, for example.

The catalyst may be at least one of the group of atomic lithium, potassium, or cesium, NaH molecule, 2H, and hydrino atoms, wherein catalysis comprises a disproportionation reaction. Lithium catalyst may be made gaseous by maintaining the cell temperature in about the 500-1000 °C range. Preferably, the cell is maintained in about the 500-750 °C range. The cell pressure may be maintained at less than atmospheric, preferably in the range about 10 millitorr to about 100 Torr. Most preferably, at least one of the catalyst and hydrogen pressure is determined by maintaining a mixture of catalyst metal and the corresponding hydride such as lithium and lithium hydride, potassium and potassium hydride, sodium and sodium hydride, and cesium and cesium hydride in the cell maintained at the desired operating temperature. The catalyst in the gas phase may comprise lithium atoms from the metal or a source of lithium metal. Preferably, the lithium catalyst is maintained at the pressure determined by a mixture of lithium metal and lithium hydride at the operating temperature range of about 500-1000 °C and most preferably, the pressure with the cell at the operating temperature range of about 500-750 °C. In other embodiments, K, Cs, and Na replace Li wherein the catalyst is atomic K, atomic Cs, and molecular NaH.

In an embodiment of the gas cell reactor comprising a catalyst reservoir or boat, gaseous Na, NaH catalyst, or the gaseous catalyst such as Li, K, and Cs vapor is maintained in a super-heated condition in the cell relative to the vapor in the reservoir or boat which is the source of the cell vapor. In one embodiment, the superheated vapor reduces the condensation of catalyst on the hydrogen dissociator or the dissociator of at least one of metal and metal hydride molecules disclosed *infra.* In an embodiment comprising Li as the catalyst from a reservoir or boat, the reservoir or boat is maintained at a temperature at which Li vaporizes. $H_2$ may be maintained at a pressure that is lower than that which forms a significant mole fraction of LiH at the reservoir temperature. The pressures and temperatures that achieve this condition can be determined from the data plots of $H_2$ pressure versus LiH mole fraction at given isotherms that are known in the art In an embodiment, the cell reaction chamber containing a dissociator is operated at a higher temperature such that the Li does not condense on the walls or the dissociator. The $H_2$ may flow from the reservoir to the cell to increase the catalyst transport rate. Flow such as from the catalyst reservoir to the cell and then out of the cell is a method to remove hydrino product to prevent hydrino product inhibition of the reaction. In other embodiments, K, Cs, and Na replace Li wherein the catalyst is atomic K, atomic Cs, and molecular NaH.

Hydrogen is supplied to the reaction from a source of hydrogen. For example, the hydrogen is supplied by permeation from a hydrogen reservoir. The pressure of the hydrogen reservoir may be in the range of 10 Torr to 10,000 Torr, preferably 100 Torr to 1000 Torr, and most preferably about atmospheric pressure. The cell may be operated in the temperature of about 100 °C to 3000 °C, preferably in the temperature of about 100 °C to 1500 °C, and most preferably in the temperature of about 500 °C to 800 °C.

The source of hydrogen may be from decomposition of an added hydride. A cell design that supplies $H_2$ by permeation is one comprising an internal metal hydride placed in a sealed vessel wherein atomic H permeates out at high temperature. The vessel may comprise Pd, Ni, Ti, or Nb. In an embodiment, the hydride is placed in a sealed tube such as a Nb tube containing a hydride and sealed at both ends with seals such as Swagelocks. In the sealed case, the hydride could be an alkaline or alkaline earth hydride. Alternatively, in this as well as the internal-hydride-reagent case, the hydride could be at least one of the group of saline hydrides, titanium hydride, vanadium, niobium, and tantalum hydrides, zirconium and hafnium hydrides, rare earth hydrides, yttrium and scandium hydrides, transition element hydrides, intermetalic hydrides, and their alloys.

In an embodiment the hydride and the operating temperature $\pm$ 200 °C, based on each hydride decomposition temperature, is chosen from at least one of the list of:

a rare earth hydride with an operating temperature of about 800 °C; lanthanum hydride with an operating temperature of about 700 °C; gadolinium hydride with an operating temperature of about 750 °C; neodymium hydride with an operating temperature of about 750 °C; yttrium hydride with an operating temperature of about 800 °C; scandium hydride with an operating temperature of about 800 °C; ytterbium hydride with an operating temperature of about 850-900 °C; titanium hydride with an operating temperature of about 450 °C; cerium hydride with an operating temperature of about 950 °C; praseodymium hydride with an operating temperature of about 700 °C; zirconium-titanium (50%/50%) hydride with an operating temperature of about 600 °C; an alkali metal/alkali metal hydride mixture such as Rb/RbH or K/KH with an operating temperature of about 450 °C; and an alkaline earth metal/alkaline earth hydride mixture such as $Ba/BaH_2$ with an operating temperature of about 900-1000 °C.

Metals in the gas state can comprise diatomic covalent molecules. An objective of the present disclosure is to provide atomic catalyst such as Li as well as K and Cs. Thus, the reactor may further comprise a dissociator of at least one of metal molecules ("MM") and metal hydride molecules ("MH"). Preferably, the source of catalyst, the source of $H_2$, and the dissociator of MM, MH, and HH, wherein M is the atomic catalyst are matched to operate at the desired cell conditions of temperature and reactant concentrations for example. In the case that a hydride source of $H_2$ is used, in an embodiment, its decomposition temperature is in the range of the temperature that produces the desired vapor pressure of the catalyst. In the case of that the source of hydrogen is permeation from a hydrogen reservoir to the reaction chamber, preferable sources of catalysts for continuous operation are Sr and Li metals since each of their vapor pressures may be in the desired range of 0.01 to 100 Torr at the temperatures for which permeation occurs. In other embodiments of the permeation cell, the cell is operated at a high temperature permissive of permeation, then the cell temperature is lowered to a temperature which maintains the vapor pressure of the volatile catalyst at the desired pressure.

In an embodiment of a gas cell, a dissociator comprises a component to generate catalyst and H from sources. Surface catalysts such as Pt on Ti or Pd, iridium, or rhodium alone or on a substrate such as Ti may also serve the role as a dissociator of molecules of combinations of catalyst and hydrogen atoms. Preferably, the dissociator has a high surface area such as $Pt/Al_2O_3$ or $Pd/Al_2O_3$.

The $H_2$ source can also be $H_2$ gas. In this embodiment, the pressure can be monitored and controlled. This is possible with catalyst and catalyst sources such as K or Cs metal and $LiNH_2$, respectively, since they are volatile at low temperature that is permissive of using a high-temperature valve. $LiNH_2$ also lowers the necessary operating temperature of the Li cell and is less corrosive which is permissive of long-duration operation using a feed through in the case of plasma and filament cells wherein a filament serves as a hydrogen dissociator.

Further embodiments of the gas cell hydrogen reactor having NaH as the catalyst comprise a filament with a dissociator in the reactor cell and Na in the reservoir. $H_2$ may be flowed through the reservoir to main chamber. The power may be controlled by controlling the gas flow rate, $H_2$ pressure, and Na vapor pressure. The latter may be controlled by controlling the reservoir temperature. In another embodiment, the hydrino reaction is initiated by heating with the external heater and an atomic H is provided by a dissociator.

The reaction mixture may be agitated by methods known in the art such as mechanical agitation or mixing. The agitation system may comprise one or more piezoelectric transducers. Each piezoelectric transducer may provide ultrasonic agitation. The reaction cell may be vibrated and further contain agitation elements such as stainless steel or tungsten balls that are vibrated to agitate the reaction mixture. In another embodiment, mechanical agitation comprises ball milling. The reactant may also be mixed using these methods, preferably by ball milling. The mixing may also be by pneumatic methods such as sparging.

In an embodiment, the catalyst is formed by mechanical agitation such as, for example, at least one of vibration with agitation elements, ultrasonic agitation, and ball milling. The mechanical impact or compression of sound waves such as ultrasound may cause a reaction or a physical change in the reactants to cause the formation of the catalyst, preferably NaH molecules. The reactant mixture may or may not comprise a solvent. The reactants may be solids such as solid NaH that is mechanically agitated to form NaH molecules. Alternatively, the reaction mixture may comprise a liquid. The mixture may have at least one Na species. The Na species may be a component of a liquid mixture, or it may be in solution. In an embodiment, sodium metal is dispersed by high-speed stirring of a suspension of the metal in a solvent such as an ether, hydrocarbon, fluorinated hydrocarbon, aromatic, or heterocyclic aromatic solvent. The solvent temperature may be held just above the melting point of the metal.

IV. Fuels-Types

An embodiment of the present disclosure is directed to a fuel comprising a reaction mixture of at least a source of hydrogen and a source of catalyst to support the catalysis of hydrogen to form hydrinos in at least one of gaseous, liquid, and solid phases or a possible mixture of phases. The reactants and reactions given herein for solid and liquid fuels are also reactants and reactions of heterogeneous fuels comprising a mixture of phases.

In certain embodiments, an objective of the present disclosure is to provide atomic catalysts such as Li as well as K and Cs and molecular catalyst NaH. Metals form diatomic covalent molecules. Thus, in solid-fuels, liquid-fuels, and heterogeneous-fuels embodiments, the reactants comprise alloys, complexes, sources of complexes, mixtures, suspensions, and solutions that may reversibly form with a metal catalyst M and decompose or react to provide a catalyst such as Li or NaH. In another embodiment, at least one of the catalyst source and atomic hydrogen source further comprises at least one reactant that reacts to form at least one of the catalyst and atomic hydrogen. In another embodiment, the reaction mixture comprises NaH catalyst or a source of NaH catalyst or other catalyst such as Li or K that may form via the reaction of one or more reactants or species of the reaction mixture or may form by a physical transformation. The transformation may be solvation with a suitable solvent.

The reaction mixture may further comprise a solid to support the catalysis reaction on a surface. The catalyst or a source of catalyst such as NaH may be coated on the surface. The coating may be achieved by mixing a support such as activated carbon, TiC, WC, R-Ni with NaH by methods such as ball milling. The reaction mixture may comprise a heterogeneous catalyst or a source of heterogeneous catalyst. In an embodiment, the catalyst such as NaH is coated on the support such as activated carbon, TiC, WC, or a polymer by the method of incipient wetness, preferably by using an aportic solvent such as an ether. The support may also comprise an inorganic compound such as an alkali halide, preferably at least one of NaF and $HNaF_2$ wherein NaH serves as the catalyst and a fluorinated solvent is used.

In an embodiment of a liquid fuel, the reaction mixture comprises at least one of a source of catalyst, a catalyst, a source of hydrogen, and a solvent for the catalyst. In other embodiments, the present disclosure of a solid fuel and a liquid fuel further comprises combinations of both and further comprises gaseous phases as well. The catalysis with the reactants such as the catalyst and atomic hydrogen and sources thereof in multiple phases is called a heterogeneous reaction mixture and the fuel is called a heterogeneous fuel. Thus, the fuel comprises a reaction mixture of at least a source of hydrogen to undergo transition to hydrinos, states given by Eq. (35), and a catalyst to cause the transitions having the reactants in at least one of liquid, solid, and gaseous phases. Catalysis with the catalyst in a different phase from the reactants is generally known in the art as a heterogeneous catalysis that is an embodiment of the present disclosure. Heterogeneous catalysts provide a surface for the chemical reaction to take place on and comprise embodiments of the present disclosure. The reactants and reactions given herein for solid and liquid fuels are also reactants and reactions of heterogeneous fuels.

For any fuel of the present disclosure, the catalyst or source of catalyst such as NaH may be mixed with other components of the reaction mixture such as a support such as a HSA material by methods such as mechanical mixing or by ball milling. In all cases additional hydrogen may be added to maintain the reaction to form hydrinos. The hydrogen gas may be any desired pressure, preferably in the range of 0.1 to 200 atm. Alternatives sources of hydrogen comprise at least one of the group of $NH_4X$ (X is an anion, preferably a halide), $NaBH_4$, $NaAlH_4$, a borane, and a metal hydride such as an alkali metal hydride, alkaline earth metal hydride preferably $MgH_2$, and a rare earth metal hydride preferably $LaH_2$ and $GdH_2$.

A. Support

In certain embodiments, the solid, liquid, and heterogeneous fuels of the present disclosure comprise a support. The support comprises properties specific for its function. For example, in the case that the support functions as an electron acceptor or conduit, the support is preferably conductive. Additionally, in the case that the support disperses the reactants, the support preferably has a high surface area. In the former case, the support such as a HSA support may comprise a conductive polymer such as activated carbon, graphene, and heterocyclic polycyclic aromatic hydrocarbons that may be macromolecular. The carbon may preferably comprise activated carbon (AC), but may also comprise other forms such as mesoporous carbon, glassy carbon, coke, graphitic carbon, carbon with a dissociator metal such as Pt or Pd wherein the wt% is 0.1 to 5 wt%, transition metal powders having preferably one to ten carbon layers and more preferably three layers, and a metal or alloy coated carbon, preferably nanopowder, such as a transition metal preferably at least one of Ni, Co, and Mn coated carbon. A metal may be intercalated with the carbon. In the case that the intercalated metal is Na and the catalyst is NaH, preferably the Na intercalation is saturated. Preferably, the support has a high surface area. Common classes of organic conductive polymers that may serve as the support are at least one of the group of poly(acetylene)s, poly(pyrrole)s, poly(thiophene)s, poly(aniline)s, poly(fluorene)s, poly(3-alkylthiophene)s, polytetrathiafulvalenes, polynaphthalenes, poly(p-phenylene sulfide), and poly(para-phenylene vinylene)s. These linear backbone polymers are typically known in the art as polyacetylene, polyaniline, etc. "blacks" or "melanins". The support may be a mixed copolymer such as one of polyacetylene, polypyrrole, and polyaniline. Preferably, the conductive polymer support is at least one of typically derivatives of polyacetylene, polyaniline, and polypyrrole. Other support comprise other elements than carbon such as the conducting polymer polythiazyl $((S-N)_x)$.

In another embodiment, the support is a semiconductor. The support may be a Column IV element such as carbon, silicon, germanium, and $\alpha$-gray tin. In addition to elemental materials such as silicon and germanium, the semiconductor support comprises a compound material such as gallium arsenide and indium phosphide, or alloys such as silicon germanium or aluminum arsenide. Conduction in materials such as silicon and germanium crystals can be enhanced in an embodiment by adding small amounts (e.g. 1-10 parts per million) of dopants such as boron or phosphorus as the crystals are grown. The doped semiconductor may be ground into a powder to serve as a support.

In certain embodiments, the HSA support is a metal such as a transition metal, noble metal, intermetallic, rare earth, actinide, lanthanide, preferably one of La, Pr, Nd, and Sm, Al, Ga, In, Tl, Sn, Pb, metalloids, Si, Ge, As, Sb, Te, Y, Zr, Nb, Mo, Tc, Ru, Rh, Pd, Ag, Cd, Hf, Ta, W, Re, Os, Ir, Pt, Au, Hg, alkali metal, alkaline earth metal, and an alloy comprising at least two metals or elements of this group such as a lanthanide alloy, preferably $LaNi_5$ and Y-Ni. The support may be a noble metal such as at least one of Pt, Pd, Au, Ir, and Rh or a supported noble metal such as Pt or Pd on titanium (Pt or Pd/Ti).

In other embodiments, the HSA material comprises at least one of cubic boron nitride, hexagonal boron nitride, wurtzite boron nitride powder, heterodiamond, boron nitride nanotubes, silicon nitride, aluminum nitride, titanium nitride (TiN), titanium aluminum nitride (TiAlN), tungsten nitride, a metal or alloy, preferably nanopowder, coated with carbon such as at least one of Co, Ni, Fe, Mn, and other transition metal powders having preferably one to ten carbon layers and more preferably three layers, metal or alloy coated carbon, preferably nanopowder, such as a transition metal preferably at least one of Ni, Co, and Mn coated carbon, carbide, preferably a powder, beryllium oxide (BeO) powder, rare earth oxide powder such as $La_2O_3$, $Zr_2O_3$, $Al_2O_3$, sodium aluminate, and carbon such as fullerene, graphene, or nanotubes, preferably single-walled.

The carbide may comprise one or more of the bonding types: salt-like such as calcium carbide ($CaC_2$), covalent compounds such as silicon carbide (SiC) and boron carbide ($B_4C$ or $BC_3$), and interstitial compounds such as tungsten carbide. The carbide may be an acetylide such as $Au_2C_2$, $ZnC_2$, and $CdC_2$ or a methide such as $Be_2C$, aluminum carbide ($Al_4C_3$), and carbides of the type $A_3MC$ where A is mostly a rare earth or transition metal such as Sc, Y, La-Na,Gd-Lu, and M is a metallic or semimetallic main group element such as Al, Ge, In, Tl, Sn, and Pb. The carbide having $C_2^{2-}$ ions may comprise at least one of carbides $M_2^I C_2$ with the cation $M^I$ comprising an alkali metal or one of the coinage metals, carbides $M^{II}C_2$ with the cation $M^{II}$ comprising an alkaline earth metal, and preferably carbides $M_2^{III}\left(C_2\right)_3$ with the cation $M^{III}$ comprising Al, La, Pr, or Tb. The carbide may comprise an ion other than $C_2^{2-}$ such as those of the group of $YC_2$, $TbC_2$, $YbC_2$, $UC_2$, $Ce_2C_3$, $Pr_2C_3$, and $Tb_2C_3$. The carbide may comprise a sesquicarbide such as $Mg_2C_3$, $Sc_3C_4$, and $Li_4C_3$. The carbide may comprise a ternary carbide such as those containing lanthanide metals and transition metals that may further comprise $C_2$ units such as $Ln_3M(C_2)_2$ where M is Fe, Co, Ni, Ru, Rh, Os, and Ir, $Dy_{12}Mn_5C_{15}$, $Ln_{3.67}FeC_6$, $Ln_3Mn(C_2)_2$ (Ln=Gd and Tb), and $ScCrC_2$. The carbide may further be of the classification "intermediate" transition metal carbide such as iron carbide ($Fe_3C$ or $FeC_2$:Fe). The carbide may be at least one from the group of, lanthanides ($MC_2$ and $M_2C_3$) such as lanthanum carbide ($LaC_2$ or $La_2C_3$), yttrium carbide, actinide carbides, transition metal carbides such as scandium carbide, titanium carbide (TiC), vanadium carbide, chromium carbide, manganese carbide, and cobalt carbide, niobium carbide, molybdenum carbide, tantalum carbide, zirconium carbide, and hafnium carbide. Further suitable carbides comprise at least one of $Ln_2FeC_4$, $Sc_3CoC_4$, $Ln_3MC_4$ (M=Fe, Co, Ni, Ru, Rh, Os, Ir), $Ln_3Mn_2C_6$,

$Eu_{3.16}NiC_6$), $ScC_1C_2$, $Th_2NiC_2$, $Y_2ReC_2$, $Ln_{12}M_5C_{15}$ (M=Mn, Re), YCoC, $Y_2ReC_2$, and other carbides known in the art.

In an embodiment, the support is an electrically-conductive carbide such as TiC, TiCN, $Ti_3SiC_2$, or WC and HfC, $Mo_2C$, TaC, $YC_2$, ZrC, $Al_4C_3$, SiC, and $B_4C$. Further suitable carbides comprise $YC_2$, $TbC_2$, YbC2, $LuC_2$, $Ce_2C_3$, $Pr_2C_3$, and $Tb_2C_3$. Additional suitable carbides comprise at least one from the group of $Ti_2AlC$, $V_2AlC$, $Cr_2AlC$, $Nb_2AlC$, $Ta_2AlC$, $Ti_2AlN$, $Ti_3AlC_2$, $Ti_4AlN_3$, $Ti_2GaC$, $V_2GaC$, $Cr_2GaC$, $Nb_2GaC$, $Mo_2GaC$, $Ta_2GaC$, $Ti_2GaN$, $Cr_2GaN$, $V_2GaN$, $Sc_2InC$, $Ti_2InC$, $Zr_2InC$, $Nb_2InC$, $Hf_2InC$, $Ti_2InN$, $Zr_2InN$, $Ti_2TlC$, $Zr_2TlC$, $Hf_2TlC$, $Zr_2TlN$, $Ti_3SiC_2$, $Ti_2GeC$, $Cr_2GeC$, $Ti_3GeC_2$, $Ti_2SnC$, $Zr_2SnC$, $Nb_2SnC$, $Hf_2SnC$, $Hf_2SnN$, $Ti_2PbC$, $Zr_2PbC$, $Hf_2PbC$, $V_2PC$, $Nb_2PC$, $V_2AsC$, $Nb_2AsC$, $Ti_2SC$, $Zr_2SC0.4$, and $Hf_2SC$. The support may be a metal boride. The support or HSA material may be a boride, preferably a two-dimensional network boride that may be conducting such as $MB_2$ wherein M is a metal such as at least one of Cr, Ti, Mg, Zr, and Gd (CrB2, $TiB_2$, $MgB_2$, $ZrB_2$, $GdB_2$).

In a carbon-HSA material embodiment, Na does not intercalate into the carbon support or form an acetylide by reacting with the carbon. In an embodiment, the catalyst or source of catalyst, preferably NaH, is incorporated inside of the HSA material such as fullerene, carbon nanotubes, and zeolite. The HSA material may further comprise graphite, graphene, diamond-like carbon (DLC), hydrogenated diamond-like carbon (HDLC), diamond powder, graphitic carbon, glassy carbon, and carbon with other metals such as at least one of Co, Ni, Mn, Fe, Y, Pd, and Pt, or dopants comprising other elements such as fluorinated carbon, preferably fluorinated graphite, fluorinated diamond, or tetracarbon fluoride ($C_4F$). The HSA material may be fluoride passivated such as fluoride coated metal or carbon or comprise a fluoride such as a metal fluoride, preferably an alkali or rare earth fluoride.

A suitable support having a large surface area is activated carbon. The activated carbon can be activated or reactivated by physical or chemical activation. The former activation may comprise carbonization or oxidation, and the latter activation may comprise impregnation with chemicals.

The reaction mixture may further comprise a support such as a polymer support. The polymer support may be chosen from poly(tetrafluoroethylene) such as TEFLON™, polyvinylferrocene, polystyrene, polypropylene, polyethylene, polyisoprene, poly(aminophosphazene), a polymer comprising ether units such as polyethylene glycol or oxide and polypropylene glycol or oxide, preferably arylether, a polyether polyol such as poly(tetramethylene ether) glycol (PTMEG, polytetrahydrofuran, "Terathane", "polyTHF"), polyvinyl formal, and those from the reaction of epoxides such as polyethylene oxide and polypropylene oxide. In an embodiment, the HSA comprises fluorine. The support may comprise as at least one of the group of fluorinated organic molecules, fluorinated hydrocarbons, fluorinated alkoxy compounds, and fluorinated ethers. Exemplary fluorinated HSAs are TEFLON™, TEFLON™-PFA, polyvinyl fluoride, PVF, poly(vinylidene fluoride), poly(vinylidene fluoride-*co*-hexafluoropropylene), and perfluoroalkoxy polymers.

### B. Solid Fuels

The solid fuel comprises a catalyst or source of catalyst to form hydrinos such as at least one catalyst such as one chosen from LiH, Li, NaH, Na, KH, K, RbH, Rb, and CsH, a source of atomic hydrogen and at least one of a HSA support, getter, a dispersant, and other solid chemical reactants that perform the one or more of the following functions (i) the reactants form the catalyst or atomic hydrogen by undergoing a reaction such as one between one or more components of the reaction mixture or by undergoing a physical or chemical change of at least one component of the reaction mixture and (ii) the reactants initiate, propagate, and maintain the catalysis reaction to form hydrinos. The cell pressure may preferably be in the range of about 1 Torr to 100 atmosphere. The reaction temperature is preferably in the range of about 100 °C to 900 °C. The many examples of solid fuels given in the present disclosure including the reaction mixtures of liquid fuels comprising a solvent except with the exception of the solvent are not meant to be exhaustive. Based on the present disclosure other reaction mixtures are taught to those skilled in the art.

The source of hydrogen may comprise hydrogen or a hydride and a dissociator such as Pt/Ti, hydrided Pt/Ti, Pd, Pt, or $Ru/Al_2O_3$, Ni, Ti, or Nb powder. At least one of the HSA support, getter, and dispersant may comprise at least one of the group of a metal powder such as Ni, Ti, or Nb powder, R-Ni, $ZrO_2$, $Al_2O_3$, NaX (X=F, Cl, Br, I), $Na_2O$, NaOH, and $Na_2CO_3$. In an embodiment, a metal catalyzes the formation of NaH molecules from a source such as a Na species and a source of H. The metal may be a transition, noble, intermetallic, rare earth, lanthanide, and actinide metal, as well as others such as aluminum, and tin.

### C. Hydrino Reaction Activators

The hydrino reaction may be activated or initiated and propagated by one or more chemical other reactions. These reactions can be of several classes such as (i) exothermic reactions which provide the activation energy for the hydrino reaction, (ii) coupled reactions that provide for at least one of a source of catalyst or atomic hydrogen to support the hydrino reaction, (iii) free radical reactions that, in an embodiment, serve as an acceptor of electrons from the catalyst during the hydrino reaction, (iv) oxidation-reduction reactions that, in an embodiment, serve as an acceptor of electrons from the catalyst during the hydrino reaction, (v) exchange reactions such as anion exchange including halide, sulfide, hydride, arsenide, oxide, phosphide, and nitride exchange that in an embodiment, facilitate the action of the catalyst to become ionized as it accepts energy from atomic hydrogen to form hydrinos, and (vi) getter, support, or matrix-assisted hydrino reaction that may provide at least one of a chemical environment for the hydrino reaction, act to transfer electrons to facilitate the H catalyst function, undergoes a reversible phase or other physical change or change in its electronic state, and binds a lower-energy hydrogen product to increase at least one of the extent or rate of the hydrino reaction. In an embodiment, the reaction mixture comprises a support, preferably an electrically conductive support, to enable the activation reaction.

In an embodiment a catalyst such as *Li*, *K*, and *NaH* serves to form hydrinos at a high rate by speeding up the rate limiting step, the removal of electrons from the catalyst as it is ionized by accepting the nonradiative resonant energy transfer from atomic hydrogen to form hydrinos. The typical metallic form of *Li* and *K* may be converted to the atomic form and the ionic form of *NaH* may be converted to the molecular form by using a support or HSA material such as activated carbon (AC), Pt/C, Pd/C, TiC, or WC to disperse the catalyst such as *Li* and *K* atoms and *NaH* molecules, respectively. Preferably, the support has a high surface area and conductivity considering the surface modification upon reaction with other species of the reaction mixture. The reaction to cause a transition of atomic hydrogen to form hydrinos requires a catalyst such as *Li*, *K*, or *NaH* and atomic hydrogen wherein *NaH* serves as a catalyst and source of atomic hydrogen in a concerted reaction. The reaction step of a nonradiative energy transfer of an integer multiple of 27.2 *eV* from atomic hydrogen to the catalyst results in ionized catalyst and free electrons that causes the reaction to rapidly cease due to charge accumulation. The support such as AC may also act as a conductive electron acceptor, and final electron-acceptor reactants comprising an oxidant, free radicals or a source thereof, are added to the reaction mixture to ultimately scavenge electrons released from the catalyst reaction to form hydrinos. In addition a reductant may be added to the reaction mixture to facilitate the oxidation reaction. The concerted electron-acceptor reaction is preferably exothermic to heat the reactants and enhance the rates. The activation energy and propagation of the reaction may be provided by a fast, exothermic, oxidation or free radical reaction such as that of $O_2$ or $CF_4$ with *Mg* or *Al* wherein radicals such as $CF_x$ and *F* and $O_2$ and *O* serve to ultimately accept electrons from the catalyst via support such as AC. Other oxidants or sources of radicals singly or in combination may be chosen from the group of $O_2$, $O_3$, $N_2O$ $NF_3$, $M_2S_2O_8$ (M is an alkali metal), S, $CS_2$, and $SO_2$, $MnI_2$, $EuBr_2$, AgCl, and others given in the Electron Acceptor Reactions section.

Preferably, the oxidant accepts at least two electrons. The corresponding anion may be $O_2^{2-}$, $S^{2-}$, $C_2S_4^{2-}$ (tetrathiooxalate anion), $SO_3^{2-}$, and $SO_4^{2-}$. The two electrons may be accepted from a catalyst that becomes doubly ionized during catalysis such as NaH and Li (Eqs. (25-27) and (37-39)). The addition of an electron acceptor to the reaction mixture or reactor applies to all cell embodiments of the present disclosure such as the solid fuel and heterogeneous catalyst embodiments as well as electrolysis cells, and plasma cells such as glow discharge, RF, microwave, and barrier-electrode plasma cells and plasma electrolysis cells operated continuously or in pulsed mode. An electron conductive, preferably unreactive, support such as AC may also be added to the reactants of each of these cell embodiments. An embodiment of the microwave plasma cell comprises a hydrogen dissociator such as a metal surface inside of the plasma chamber to support hydrogen atoms.

In embodiments, mixtures of species, compounds, or materials of the reaction mixture such as a source of catalyst, a source of an energetic reaction such as a metal and at least one of a source of oxygen, a source of halogen, and a source of free radicals, and a support may be used in combinations. Reactive elements of compounds or materials of the reaction mixture may also be used in combinations. For example, the source of fluorine or chlorine may be a mixture of $N_xF_y$ and $N_xCl_y$, or the halogen may be intermixed such as the in compound $N_xF_yCl_r$. The combinations could be determined by routine experimentation by those skilled in the art.

## a. Exothermic Reactions

In an embodiment, the reaction mixture comprises a source of catalyst or a catalyst such as at least one of NaH, K, and Li and a source of hydrogen or hydrogen and at least one species that undergoes reaction. The reaction may be very exothermic and may have fast kinetics such that it provides the activation energy to the hydrino catalyst reaction. The reaction may be an oxidation reaction. Suitable oxidation reactions are the reaction of species comprising oxygen such as the solvent, preferably an ether solvent, with a metal such as at least one of Al, Ti, Be, Si, P, rare earth metals, alkali metals, and alkaline earth metals. More preferably, the exothermic reaction forms an alkali or alkaline earth halide, preferably $MgF_2$, or halides of Al, Si, P, and rare earth metals. Suitable halide reactions are the reaction of a species comprising a halide such as the solvent, preferably a fluorocarbon solvent, with at least one of a metal and a metal hydride such as at least one of Al, rare earth metals, alkali metals, and alkaline earth metals. The metal or metal hydride may be the catalyst or a source of the catalyst such as NaH, K, or Li. The reaction mixture may comprise at least NaH and $NaAlCl_4$ or $NaAlF_4$ having the products NaCl and NaF, respectively. The reaction mixture may comprise at least NaH a fluorosolvent having the product NaF.

In general, the product of the exothermic reaction to provide the activation energy to the hydrino reaction may be a metal oxide or a metal halide, preferably a fluoride. Suitable products are $Al_2O_3$, $M_2O_3$ (M=rare earth metal), $TiO_2$, $Ti_2O_3$, $SiO_2$, $PF_3$ or $PF_5$, $AlF_3$, $MgF_2$, $MF_3$ (M=rare earth metal), $NaF$, $NaHF_2$, $KF$, $KHF_2$, $LiF$, and $LiHF_2$. In an embodiment wherein Ti undergoes the exothermic reaction, the catalyst is $Ti^{2+}$ having a second ionization energy of 27.2 eV (m=1 in Eq. (5)). The reaction mixture may comprise at least two of NaH, Na, NaNH2, NaOH, Teflon, fluorinated carbon, and a source of Ti such as Pt/Ti or Pd/Ti. In an embodiment wherein Al undergoes the exothermic reaction, the catalyst is AlH as given in TABLE 2. The reaction mixture may comprise at least two of NaH, Al, carbon powder, a fluorocarbon, preferably a solvent such as hexafluorobenzene or perfluoroheptane, Na, NaOH, Li, LiH, K, KH, and R-Ni. Preferably, the products of the exothermic reaction to provide the activation energy are regenerated to form the reactants for another cycle of forming hydrinos and releasing the corresponding power. Preferably, metal fluoride products are regenerated to metals and fluorine gas by electrolysis. The electrolyte may comprise a eutetic mixture. The metal may be hydrided and the carbon product and any $CH_4$ and hydrocarbons products may be fluorinated to form the initial metal hydride and fluorocarbon solvent, respectively.

In an embodiments of the exothermic reaction to activate the hydrino transition reaction at least one of the group of a rare earth metal (M), Al, Ti, and Si is oxidized to the corresponding oxide such as $M_2O_3$, $Al_2O_3$, $Ti_2O_3$, and $SiO_2$, respectively. The oxidant may be an ether solvent such as 1,4-benzodioxane (BDO) and may further comprise a fluorocarbon such as hexafluorobenzene (HFB) or perfluoroheptane to accelerate the oxidation reaction. In an exemplary reaction, the mixture comprises NaH, activated carbon, at least one of Si and Ti, and at least one of BDO and HFB. In the case of Si as the reductant, the product $SiO_2$ may be regenerated to Si by $H_2$ reduction at high temperature or by reaction with carbon to form Si and CO and $CO_2$. A certain embodiment of the reaction mixture to form hydrinos comprises a catalyst or a source of catalyst such as at least one of Na, NaH, K, KH, Li, and LiH, a source of exothermic reactants or exothermic reactants, preferably having fast kinetics, that activate the catalysis reaction of H to form hydrinos, and a support. The exothermic reactants may comprise a source of oxygen and a species that reacts oxygen to form an oxide. For x and y being integers, preferably the oxygen source is $H_2O$, $O_2$, $H_2O_2$, $MnO_2$, an oxide, an oxide of carbon, preferably CO or $CO_2$, an oxide of nitrogen, $N_xO_y$ such as $N_2O$ and $NO_2$, an oxide of sulfur, $S_xO_y$, preferably an oxidant such as $M_2S_xO_y$ (M is an alkali metal) that may optionally be used with an oxidation catalyst such as silver ion, $Cl_xO_y$ such as $Cl_2O$, and $ClO_2$ preferably from $NaClO_2$, concentrated acids and their mixtures such as $HNO_2$, $HNO_3$, $H_2SO_4$, $H_2SO_3$, HCl, and HF, preferably, the acid forms nitronium ion $\left( NO_2^+ \right)$ $NaOCl$, $I_xO_y$, preferably $I_2O_5$, $P_xO_y$, $S_xO_y$, an oxyanion of an inorganic compound such as one of nitrite, nitrate, chlorate, sulfate, phosphate, a metal oxide such as cobalt oxide, and oxide or hydroxide of the catalyst such as NaOH, and perchlorate wherein the cation is a source of the catalyst such as Na, K, and Li, an oxygen-containing functional group of an organic compound such as an ether, preferably one of dimethoxyethane, dioxane, and 1,4-benzodioxane (BDO), and the reactant species may comprise at least one of the group of a rare earth metal (M), Al, Ti, and Si, and the corresponding oxide is $M_2O_3$, $Al_2O_3$, $Ti_2O_3$, and $SiO_2$, respectively. The reactant species may comprise the metal or element of the oxide products of at least one of the group of $Al_2O_3$ aluminum oxide, $La_2O_3$ lanthanum oxide, MgO magnesium oxide, $Ti_2O_3$ titanium oxide, $Dy_2O_3$ dysprosium oxide, $Er_2O_3$ erbium oxide, $Eu_2O_3$ europium oxide, LiOH lithium hydroxide, $Ho_2O_3$ holmium oxide, $Li_2O$ lithium oxide, $Lu_2O_3$ lutetium oxide, $Nb_2O_5$ niobium oxide, $Nd_2O_3$ neodymium oxide, $SiO_2$ silicon oxide, $Pr_2O_3$ praseodymium oxide, $Sc_2O_3$ scandium oxide, $SrSiO_3$ strontium metasilicate, $Sm_2O_3$ samarium oxide, $Tb_2O_3$ terbium oxide, $Tm_2O_3$ thulium oxide, $Y_2O_3$ yttrium oxide, and $Ta_2O_5$ tantalum oxide, $B_2O_3$ boron oxide, and zirconium oxide. The support may comprise carbon, preferably activated carbon. The metal or element may be at a least one of Al, La, Mg, Ti, Dy, Er, Eu, Li, Ho, Lu, Nb, Nd, Si, Pr, Sc, Sr, Sm, Tb, Tm, Y, Ta, B, Zr, S, P, C, and their hydrides.

In another embodiment, the oxygen source may be at least one of an oxide such as $M_2O$ where M is an alkali metal, preferably $Li_2O$, $Na_2O$, and $K_2O$, a peroxide such as $M_2O_2$ where M is an alkali metal, preferably $Li_2O_2$, $Na_2O_2$, and $K_2O_2$, and a superoxide such as $MO_2$ where M is an alkali metal, preferably $Li_2O_2$, $Na_2O_2$, and $K_2O_2$. The ionic peroxides may further comprise those of Ca, Sr, or Ba.

In another embodiment, at least one of the source of oxygen and the source of exothermic reactants or exothermic reactants, preferably having fast kinetics, that activate the catalysis reaction of H to form hydrinos comprises one or more of the group of $MNO_3$, MNO, $MNO_2$, $M_3N$, $M_2NH$, $MNH_2$, MX, NH3, $MBH_4$, $MAlH_4$, $M_3AlH_6$, MOH, $M_2S$, MHS, MFeSi, $M_2CO_3$, $MHCO_3$, $M_2SO_4$, $MHSO_4$, $M_3PO_4$, $M_2HPO_4$, $MH_2PO_4$, $M_2MoO_4$, $MNbO_3$, $M_2B_4O_7$ (lithium tetraborate), $MBO_2$, $M_2WO_4$, $MAlCl_4$, $MGaCl_4$, $M_2CrO_4$, $M_2Cr_2O_7$, $M_2TiO_3$, $MZrO_3$, $MAlO_2$, $MCoO_2$, $MGaO_2$, $M_2GeO_3$, $MMn_2O_4$, $M_4SiO_4$, $M_2SiO_3$, $MTaO_3$, $MCuCl_4$, $MPdCl_4$, $MVO_3$, $MIO_3$, $MFeO_2$, $MIO_4$, $MClO_4$, $MScO_n$, $MTiO_n$, $MVO_n$, $MCrO_n$, $MCr_2O_n$, $MMn_2O_n$, $MFeO_n$, $MCoO_n$, $MNiO_n$, $MNi_2O_n$, $MCuO_n$, and $MZnO_n$, where M is Li, Na or K and n=1, 2,3, or 4, an oxyanion, an oxyanion of a strong acid, an oxidant, a molecular oxidant such as $V_2O_3$, $I_2O_5$, $MnO_2$, $Re_2O_7$, $CrO_3$, $RuO_2$, AgO, PdO, $PdO_2$, PtO, $PtO_2$, $I_2O_4$, $I_2O_5$, $I_2O_9$, $SO_2$, $SO_3$, $CO_2$, $N_2O$, NO, $NO_2$, $N_2O_3$, $N_2O_4$, $N_2O_5$, $Cl_2O$, $ClO_2$, $Cl_2O_3$, $Cl_2O_6$, $Cl_2O_7$, $PO_2$, $P_2O_3$, and $P_2O_5$, $NH_4X$ wherein X is a nitrate or other suitable anion known to those skilled in the art such as one of the group comprising $F^-$, $Cl^-$, $Br^-$, $I^-$, $NO_3^-$, $NO_2^-$, $SO_4^{2-}$, $HSO_4^-$, $CoO_2^-$, $IO_3^-$, $IO_4^-$, $TiO_3^-$, $CrO_4^-$, $FeO_2^-$, $PO_4^{3-}$, $HPO_4^{2-}$, $H_2PO_4^-$, $VO_3^-$, $ClO_4^-$ and $Cr_2O_7^{2-}$ and other anions of the reactants. The reaction mixture may additionally comprise a reductant. In an embodiment, $N_2O_5$ is formed from a reaction of a mixture of reactants such as $HNO_3$ and $P_2O_5$ that reacts according to $2P_2O_5 + 12\ HNO_3$ to $4H_3PO_4 + 6N_2O_5$.

In an embodiment wherein oxygen or a compound comprising oxygen participates in the exothermic reaction, $O_2$ may serve as a catalyst or a source of a catalyst. The bond energy of the oxygen molecule is 5.165 eV, and the first, second, and third ionization energies of an oxygen atom are 13.61806 *eV*, 35.11730 *eV*, and 54.9355 *eV,* respectively. The reactions $O_2 \rightarrow O+O^{2+}$, $O_2 \rightarrow O+O^{3+}$, and $2O \rightarrow 2O^+$ provide a net enthalpy of about 2, 4, and 1 times $E_h$, respectively, and comprise catalyst reactions to from hydrino by accepting these energies from H to cause the formation of hydrinos.

Additionally, the source of an exothermic reaction to activate the hydrino reaction may be a metal alloy forming reaction, preferably between Pd and Al initiated by melting the Al. The exothermic reaction preferably produces energetic particles to activate the hydrino-forming reaction. The reactants may be a pyrogen or pyrotechnic composition. In another embodiment, the activation energy may be provided by operating the reactants at a very high temperature such as in the range of about 1000-5000 °C, preferably in the range of about 1500-2500 °C. The reaction vessel may comprise a high-temperature stainless steel alloy, a refractory metal or alloy, alumina, or carbon. The elevated reactant temperature may be achieved by heating the reactor or by an exothermic reaction.

The exothermic reactants may comprise a halogen, preferably fluorine or chlorine, and a species that reacts with the fluorine or chlorine to form a fluoride or chloride, respectively. Suitable fluorine sources are fluorocarbons such as $CF_4$, hexafluorbenzene, and hexadecafluoroheptane, xenon fluorides such as $XeF_2$, $XeF_4$, and $XeF_6$, $B_xX_y$, preferably $BF_3$, $B_2F_4$, $BCl_3$, or $BBr_3$, $SF_x$ such as, fluorosilanes, fluorinated nitrogen, $N_xF_y$, preferably $NF_3$, $NF_3O$, SbFx, BiFx, preferably $BiF_5$, $N_xCl_y$, preferably $NCl_3$, $S_xX_y$, preferably $SCl_2$ or $S_xF_y$ (X is a halogen; x and y are integers) such as $SF_4$, $SF_6$, or $S_2F_{10}$, fluorinated phosphorous, $M_2SiF_6$ wherein M is an alkali metal such as $Na_2SiF_6$ and $K_2SiF_6$, $MSiF_6$ wherein M is an alkaline earth metal such as $MgSiF_6$, $GaF_3$, $PF_5$, $MPF_6$ wherein M is an alkali metal, $MHF_2$ wherein M is an alkali metal such as $NaHF_2$ and $KHF_2$, $K_2TaF_7$, $KBF_4$, $K_2MnF_6$, and $K_2ZrF_6$ wherein other similar compounds are anticipated such as those having another alkali or alkaline earth metal substitution such as one of Li, Na, or K as the alkali metal. Suitable sources of chlorine are $Cl_2$ gas, $SbCl_5$, and chlorocarbons such as $CCl_4$ and chloroform. The reactant species may comprise at least one of the group of an alkali or alkaline earth metal or hydride, a rare earth metal (M), Al, Si, Ti, and P that forms the corresponding fluoride or chloride. Preferably the reactant alkali metal corresponds to that of the catalyst, the alkaline earth hydride is $MgH_2$, the rare earth is La, and Al is a nanopowder. The support may comprise carbon, preferably activated carbon, mesoporous carbon, and the carbon using in Li ion batteries. The reactants may be in any molar ratios. Preferably, the reactant species and the fluorine or chlorine are in about the stoichiometric ratio as the elements of the fluoride or chloride, the catalyst is in excess, preferably in about the same molar ratio as the element that reacts with the fluorine or chlorine, and the support is in excess.

The exothermic reactants may comprise a halogen gas, preferably chlorine or bromine, or a source of halogen gas such as HF, HCl, HBr, HI, preferably $CF_4$ or $CCl_4$, and a species that reacts with the halogen to form a halide. The source of halogen may also be a source of oxygen such as $C_xO_yX_r$ wherein X is halogen, and x, y, and r are integers and are known in the art. The reactant species may comprise at least one of the group of an alkali or alkaline earth metal or hydride, a rare earth metal, Al, Si, and P that forms the corresponding halide. Preferably the reactant alkali metal corresponds to that of the catalyst, the alkaline earth hydride is $MgH_2$, the rare earth is La, and Al is a nanopowder. The support may comprise carbon, preferably activated carbon. The reactants may be in any molar ratios. Preferably, the reactant species and the halogen are in about an equal stoichiometric ratio, the catalyst is in excess, preferably in about the same molar ratio as the element that reacts with the halogen, and the support is in excess. In an embodiment, the reactants comprise, a source of catalyst or a catalyst such as Na, NaH, K, KH, Li, LiH, and $H_2$, a halogen gas, preferably, chlorine or bromine gas, at least one of Mg, $MgH_2$, a rare earth, preferably La, Gd, or Pr, Al, and a support, preferably carbon such as activated carbon.

<u>b. Free Radical Reactions</u>

In an embodiment, the exothermic reaction is a free radical reaction, preferably a halide or oxygen free radical reaction. The source of halide radicals may be a halogen, preferably $F_2$ or $Cl_2$, or a fluorocarbon, preferably $CF_4$. A source of F free radicals is $S_2F_{10}$. The reaction mixture comprising a halogen gas may further comprise a free radical initiator. The reactor may comprise a source of ultraviolet light to form free radials, preferably halogen free radicals and more preferably chlorine or fluorine free radicals. The free radical initiators are those commonly known in the art such as peroxides, azo compounds and a source of metal ions such as a metal salt, preferably, a cobalt halide such as $CoCl_2$ that is a source of $Co^{2+}$ or $FeSO_4$ which is a source of $Fe^{2+}$. The latter are preferably reacted with an oxygen species such as $H_2O_2$ or $O_2$. The radical may be neutral.

The source of oxygen may comprise a source of atomic oxygen. The oxygen may be singlet oxygen. In an embodiment, singlet oxygen is formed from the reaction of NaOCl with $H_2O_2$. In an embodiment, the source of oxygen

comprises $O_2$ and may further comprise a source of free radicals or a free radical initiator to propagate a free radical reaction, preferably a free radical reaction of O atoms. The free radical source or source of oxygen may be at least one of ozone or an ozonide. In an embodiment, the reactor comprises an ozone source such as an electrical discharge in oxygen to provide ozone to the reaction mixture.

The free radical source or source of oxygen may further comprise at least one of a peroxo compound, a peroxide, $H_2O_2$, a compound containing an azo group, $N_2O$, NaOCl, Fenton's reagent, or a similar reagent, OH radical or a source thereof, perxenate ion or a source thereof such as an alkali or alkaline earth perxenate, preferably, sodium perxenate ($Na_4XeO_6$) or potassium perxenate ($K_4XeO_6$), xenon tetraoxide ($XeO_4$), and perxenic acid ($H_4XeO_6$), and a source of metal ions such as a metal salt. The metal salt may be at least one of $FeSO_4$, $AlCl_3$, $TiCl_3$, and, preferably, a cobalt halide such as $CoCl_2$ that is a source of $Co^{2+}$.

In an embodiment, free radicals such as Cl are formed from a halogen such as $Cl_2$ in the reaction mixture such as $NaH + MgH_2$ + support such as activated carbon (AC) + halogen gas such as $Cl_2$. The free radicals may be formed by the reaction of a mixture of $Cl_2$ and a hydrocarbon such as $CH_4$ at an elevated temperature such as greater than 200 °C. The halogen may be in molar excess relative to the hydrocarbon. The chlorocarbon product and Cl radicals may react with the reductant to provide the activation energy and pathway for forming hydrinos. The carbon product may be regenerated using the synthesis gas (syngas) and Fischer-Tropsch reactions or by direct hydrogen reduction of carbon to methane. The reaction mixture may comprise a mixture of $O_2$ and $Cl_2$ at an elevated temperature such as greater than 200 °C. The mixture may react to form $Cl_xO_y$ (x and y are integers) such as ClO, $Cl_2O$, and $ClO_2$. The reaction mixture may comprise $H_2$ and $Cl_2$ at an elevated temperature such as greater than 200 °C that may react to form HCl. The reaction mixture may comprise $H_2$ and $O_2$ with a recombiner such as Pt/Ti, Pt/C, or Pd/C at a slightly elevated temperature such as greater than 50 °C that may react to form $H_2O$. The recombiner may operate at elevated pressure such as in the range of greater than one atmosphere, preferably in the range of about 2 to 100 atmospheres. The reaction mixture may be nonstoichiometric to favor free radical and singlet oxygen formation. The system may further comprise a source of ultraviolet light or plasma to form free radicals such as a RF, microwave, or glow discharge, preferably high-voltage pulsed, plasma source. The reactants may further comprise a catalyst to form at least one of atomic free radicals such as Cl, O, and H, singlet oxygen, and ozone. The catalyst may be a noble metal such as Pt. In an embodiment to form Cl radicals, the Pt catalyst is maintained at an temperature greater than the decomposition temperature of platinum chlorides such as $PtCl_2$, $PtCl_3$, and $PtCl_4$ which have decomposition temperatures of 581 °C, 435 °C, and 327 °C, respectively. In an embodiment, Pt may be recovered from a product mixture comprising metal halides by dissolving the metal halides in a suitable solvent in which the Pt, Pd or their halides are not soluble and removing the solution. The solid that may comprise carbon and Pt or Pd halide may be heated to form Pt or Pd on carbon by decomposition of the corresponding halide.

In an embodiment, $N_2O$, $NO_2$, or NO gas is added reaction mixture. $N_2O$ and $NO_2$ may serve as a source of NO radical. In another embodiment, the NO radical is produced in the cell, preferably by the oxidation of $NH_3$. The reaction may be the reaction of $NH_3$ with $O_2$ on platinum or platinum-rhodium at elevated temperature. NO, $NO_2$, and $N_2O$ can be generated by known industrial methods such as by the Haber process followed by the Ostwald process. In one embodiment, the exemplary sequence of steps are:

$$N_2 \xrightarrow[\substack{Haber \\ process}]{H_2} NH_3 \xrightarrow[\substack{Ostwald \\ process}]{O_2} NO,\ N_2O,\ NO_2. \qquad (53)$$

Specifically, the Haber process may be used to produce $NH_3$ from $N_2$ and $H_2$ at elevated temperature and pressure using a catalyst such as $\alpha$-iron containing some oxide. The Ostwald process may be used to oxidize the ammonia to NO, $NO_2$, and $N_2O$ at a catalyst such as a hot platinum or platinum-rhodium catalyst. Alkali nitrates can be regenerated using the methods disclosed supra.

The system and reaction mixture may initiate and support a combustion reaction to provide at least one of singlet oxygen and free radicals. The combustion reactants may be nonstoichiometric to favor free radical and singlet oxygen formation that react with the other hydrino reaction reactants. In an embodiment, an explosive reaction is suppressed to favor a prolonged steady reaction, or an explosive reaction is caused by the appropriate reactants and molar ratios to achieve the desired hydrino reaction rate. In an embodiment, the cell comprises at least one cylinder of an internal combustion engine.

c. Electron Acceptor Reactions

In an embodiment, the reaction mixture further comprises an electron acceptor. The electron acceptor may act as a sink for the electrons ionized from the catalyst when energy is transferred to it from atomic hydrogen during the catalytic reaction to form hydrinos. The electron acceptor may be at least one of a conducting polymer or metal support, an oxidant such as group VI elements, molecules, and compounds, a free radical, a species that forms a stable free radical, and a species with a high electron affinity such as halogen atoms, $O_2$, C, $CF_{1,2,3}$ or $_4$, Si, S, $P_xS_y$, $CS_2$, $S_xN_y$ and these compounds further comprising O and H, Au, At, $Al_xO_y$ (x and y are integers), preferably $AlO_2$ that in an embodiment is an intermediate of the reaction of $Al(OH)_3$ with Al of R-Ni, ClO, $Cl_2$, $F_2$, $AlO_2$, $B_2N$, $CrC_2$, $C_2H$, $CuCl_2$, $CuBr_2$, $MnX_3$ (X = halide), $MoX_3$ (X = halide), $NiX_3$ (X = halide), $RuF_{4, 5, or 6}$, $ScX_4$ (X = halide), $WO_3$, and other atoms and molecules with a high electron affinity as known by those skilled in the art. In an embodiment, the support acts as an electron acceptor from the catalyst as it is ionized by accepting the nonradiative resonant energy transfer from atomic hydrogen. Preferably, the support is at least one of conductive and forms stable free radicals. Suitable such supports are conductive polymers. The support may form a negative ion over a macrostructure such as carbon of Li ion batteries that form $C_6$ ions. In another embodiment, the support is a semiconductor, preferably doped to enhance the conductivity. The reaction mixture further comprises free radicals or a source thereof such as O, OH, $O_2$, $O_3$, $H_2O_2$, F, Cl, and NO that may serve as a scavenger for the free radicals formed by the support during catalysis. In an embodiment, the free radical such as NO may form a complex with the catalyst or source of catalyst such an alkali metal. In another embodiment, the support has unpaired electrons. The support may be paramagnetic such as a rare earth element or compound such as $Er_2O_3$. In an embodiment, the catalyst or source of catalyst such as Li, NaH, K, Rb, or Cs is impregnated into the electron acceptor such as a support and the other components of the reaction mixture are add. Preferably, the support is AC with intercalated NaH or Na.

#### d. Oxidation-Reduction Reactions

In an embodiment, the hydrino reaction is activated by an oxidation-reduction reaction. In an exemplary embodiment, the reaction mixture comprises at least two species of the group of a catalyst, a source of hydrogen, an oxidant, a reductant, and a support. The reaction mixture may also comprise a Lewis acid such as Group 13 trihalides, preferably at least one of $AlCl_3$, $BF_3$, $BCl_3$, and $BBr_3$. In certain embodiments, each reaction mixture comprises at least one species chosen from the following genus of components (i) - (iii).

(i) A catalyst chosen from Li, *LiH,* K, *KH, NaH,* Rb, RbH, Cs, and CsH.
(ii) A source of hydrogen chosen from $H_2$ gas, a source of $H_2$ gas, or a hydride.
(iii) And an oxidant chosen from a metal compound such as one of halides, phosphides, borides, oxides, hydroxides, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, colbalt oxides, tellurium oxides, and other oxyanions such as those of halogens, P, B, Si, N, As, S, Te, Sb, C, S, P, Mn, Cr, Co, and Te wherein the metal preferably comprises a transition metal, Sn, Ga, In, an alkali metal or alkaline earth metal; the oxidant further comprising a lead compound such as a lead halide, a germanium compound such as a halide, oxide, or sulfide such as $GeF_2$, $GeCl_2$, $GeBr_2$, $GeI_2$, GeO, GeP, GeS, $GeI_4$, and $GeCl_4$, fluorocarbon such as *$CF_4$* or $ClCF_3$, chlorocarbon such as $CCl_4$, $O_2$, *$MNO_3$, $MClO_4$, $MO_2$, $NF_3$, $N_2O$,* NO, $NO_2$, a boron-nitrogen compound such as $B_3N_3H_6$, a sulfur compound such as $SF_6$, *S*, $SO_2$, $SO_3$, $S_2O_5Cl_2$, $F_5SOF$, $M_2S_2O_8$, $S_xX_y$ such as $S_2Cl_2$, $SCl_2$, $S_2Br_7$, or $S_2F_2$, $CS_2$, $SO_xX_y$ such as SOCh, $SOF_2$, $SO_2F_2$, or $SOBr_2$, $X_xX'_y$ such as $ClF_5$, $X_xX'_yO_z$ such as $ClO_2F$, $ClO_2F_2$, $ClOF_3$, $ClO_3F$, and $ClO_2F_3$, boron-nitrogen compound such as $B_3N_3H_6$, Se, Te, Bi, As, Sb, Bi, $TeX_x$, preferably $TeF_4$, $TeF_6$, $TeO_x$, preferably $TeO_2$ or $TeO_3$, $SeX_x$, preferably $SeF_6$, $SeO_x$, preferably $SeO_2$ or $SeO_3$, a tellurium oxide, halide, or other tellurium compound such as $TeO_2$, $TeO_3$, $Te(OH)_6$, $TeBr_2$, $TeCl_2$, $TeBr_4$, $TeCl_4$, $TeF_4$, $TeI_4$, $TeF_6$, CoTe, or NiTe, a selenium oxide, halide, sulfide, or other selenium compound such as $SeO_2$, $SeO_3$, $Se_2Br_2$, $Se_2Cl_2$, $SeBr_4$, $SeCl_4$, $SeF_4$, $SeF_6$, $SeOBr_2$, $SeOCl_2$, $SeOF_2$, $SeO_2F_2$, $SeS_2$, $Se_2S_6$, $Se_4S_4$, or $Se_6S_2$, P, $P_2O_5$, $P_2S_5$, $P_xX_y$ such as $PF_3$, $PCl_3$, $PBr_3$, $PI_3$, $PF_5$, $PCl_5$, $PBr_4F$, or $PCl_4F$, $PO_xX_y$ such as $POBr_3$, $POI_3$, $POCl_3$ or $POF_3$, $PS_xX_y$ *(M is an alkali metal, x, y and z are integers, X and X' are halogen)* such as $PSBr_3$, $PSF_3$, $PSCl_3$, a phosphorous-nitrogen compound such as $P_3N_5$, $(Cl_2PN)_3$, $(Cl_2PN)_4$, or $(Br_xPN)_x$, an arsenic oxide, halide, sulfide, selenide, or telluride or other arsenic compound such as AlAs, $As_2I_4$, $As_2Se$, $As_4S_4$, $AsBr_3$, $AsCl_3$, $AsF_3$, $AsI_3$, $As_2O_3$, $As_2Se_3$, $As_2S_3$, $As_2Te_3$, $AsCl_5$, $AsF_5$, $As_2O_5$, $As_2Se_5$, or $As_2S_5$, an antimony oxide, halide, sulfide, sulfate, selenide, arsenide, or other antimony compound such as SbAs, $SbBr_3$, $SbCl_3$, $SbF_3$, $SbI_3$, $Sb_2O_3$, SbOCl, $Sb_2Se_3$, $Sb_2(SO_4)_3$, $Sb_2S_3$, $Sb_2Te_3$, $Sb_2O_4$, $SbCl_5$, $SbF_5$, $SbCl_2F_3$, $Sb_2O_5$, or $Sb_2S_5$, an bismuth oxide, halide, sulfide, selenide, or other bismuth compound such as $BiAsO4$, $BiBr_3$, $BiCl_3$, $BiF_3$, $BiF_5$, $Bi(OH)_3$, $BiI_3$, $Bi_2O_3$, BiOBr, BiOCl, BiOI, $Bi_2Se_3$, $Bi_2S_3$, $Bi_2Te_3$, or $Bi_2O_4$, $SiCl_4$, $SiBr_4$, a metal oxide, hydroxide, or halide such as a transition metal halide such as $CrCl_3$, $ZnF_2$, $ZnBr_2$, $ZnI_2$, $MnCl_2$, $MnBr_2$, $MnI_2$, $CoBr_2$, $CoI_2$, $CoCl_2$, $NiCl_2$, $NiBr_2$, $NiF_2$, $FeF_2$, $FeCl_2$, $FeBr_2$, $FeCl_3$, $TiF_3$, CuBr, $CuBr_2$, $VF_3$, and $CuCl_2$, a metal halide such as $SnF_2$, $SnCl_2$, $SnBr_2$, $SnI_2$, $SnF_4$, $SnCl_4$, $SnBr_4$, $SnI_4$, InF, InCl, InBr, InI, AgCl, AgI, $AlF_3$, $AlBr_3$, $AlI_3$, $YF_3$, $CdCl_2$, $CdBr_2$, $CdI_2$, $InCl_3$, $ZrCl_4$, $NbF_5$, $TaCl_5$, $MoCl_3$, $MoCl_5$, $NbCl_5$, $AsCl_3$, $TiBr_4$, $SeCl_2$, $SeCl_4$, $InF_3$, $InCl_3$, $PbF_4$, $TeI_4$, $WCl_6$, $OsCl_3$, $GaCl_3$, $PtCl_3$,

$ReCl_3$, $RhCl_3$, $RuCl_3$, metal oxide or hydroxide such as $Y_2O_3$, FeO, $Fe_2O_3$, or NbO, NiO, $Ni_2O_3$, SnO, $SnO_2$, $Ag_2O$, AgO, $Ga_2O$, $As_2O_3$, $SeO_2$, $TeO_2$, $In(OH)_3$, $Sn(OH)_2$, $In(OH)_3$, $Ga(OH)_3$, and $Bi(OH)_3$, $CO_2$, $As_2Se_3$, $SF_6$, S, $SbF_3$, $CF_4$, $NF_3$, a permanganate such as $KMnO_4$ and $NaMnO_4$, $P_2O_5$, a nitrate such as $LiNO_3$, $NaNO_3$ and $KNO_3$, and a boron halide such as $BBr_3$ and $BI_3$, a group 13 halide, preferably an indium halide such as $InBr_2$, $InCl_2$, and $InI_3$, a silver halide, preferably AgCl or AgI, a lead halide, a cadmium halide, a zirconoium halide, preferably a transition metal oxide, sulfide, or halide (Sc, Ti, V, Cr, Mn, Fe, Co, Ni, Cu, or Zn with F, Cl, Br or I), a second or third transition series halide, preferably $YF_3$, oxide, sulfide preferably $Y_2S_3$, or hydroxide, preferably those of Y, Zr, Nb, Mo, Tc, Ag, Cd, Hf, Ta, W, Os, such as $NbX_3$, $NbX_5$, or $TaX_5$ in the case of halides, a metal sulfide such as $Li_2S$, ZnS, FeS, NiS, MnS, $Cu_2S$, CuS, and SnS, an alkaline earth halide such as $BaBr_2$, $BaCl_2$, $BaI_2$, $SrBr_2$, $SrI_2$, $CaBr_2$, $CaI_2$, $MgBr_2$, or $MgI_2$, a rare earth halide such as $EuBr_3$, $LaF_3$, $LaBr_3$, $CeBr_3$, $GdF_3$, $GdBr_3$, preferably in the II state such as one of $CeI_2$, $EuF_2$, $EuCl_2$, $EuBr_2$, $EuI_2$, $DyI_2$, $NdI_2$, $SmI_2$, $YbI_2$, and $TmI_2$, a metal boride such as a europium boride, an $MB_2$ boride such as $CrB_2$, $TiB_2$, $MgB_2$, $ZrB_2$, and $GdB_2$ an alkali halide such as LiCl, RbCl, or CsI, and a metal phosphide, an alkaline earth phosphide such as $Ca_3P_2$, a noble metal halide, oxide, sulfide such as $PtCl_2$, $PtBr_2$, $PtI_2$, $PtCl_4$, $PdCl_2$, $PbBr_2$, and $PbI_2$, a rare earth sulfide such as CeS, other suitable rare earths are those of La and Gd, a metal and an anion such as $Na_2TeO_4$, $Na_2TeO_3$, $Co(CN)_2$, CoSb, CoAs, $Co_2P$, CoO, CoSe, CoTe, NiSb, NiAs, NiSe, $Ni_2Si$, MgSe, a rare earth telluride such as EuTe, a rare earth selenide such as EuSe, a rare earth nitride such as EuN, a metal nitride such as AlN, and GdN, and an alkaline earth nitride such as $Mg_3N_2$, a compound containing at least two atoms from the group of oxygen and different halogen atoms such as $F_2O$, $Cl_2O$, $ClO_2$, $Cl_2O_6$, $Cl_2O_7$, ClF, $ClF_3$, $ClOF_3$, $ClF_5$, $ClO_2F$, $ClO_2F_3$, $ClO_3F$, $BrF_3$, BrF5, $I_2O_5$, IBr, ICl, $ICl_3$, IF, $IF_3$, $IF_5$, $IF_7$, and a metal second or third transition series halide such as $OsF_6$, $PtF_6$, or $IrF_6$, an alkali metal compound such as a halide, oxide or sulfide, and a compound that can form a metal upon reduction such as an alkali, alkaline earth, transition, rare earth, Group 13, preferably In, and Group 14, preferably Sn, a metal hydride such as a rare earth hydride, alkaline earth hydride, or alkali hydride wherein the catalyst or source of catalyst may be a metal such as an alkali metal when the oxidant is a hydride, preferably a metal hydride. Suitable oxidants are metal halides, sulfides, oxides, hydroxides, selenides, nitrides, and arsenides, and phosphides such as alkaline earth halides such as $BaBr_2$, $BaCl_2$, $BaI_2$, $CaBr_2$, $MgBr_2$, or $MgI_2$, a rare earth halide such as $EuBr_2$, $EuBr_3$, $EuF_3$, $LaF_3$, $GdF_3$ $GdBr_3$, $LaF_3$, $LaBr_3$, $CeBr_3$, $CeI_2$, $PrI_2$, $GdI_2$, and $LaI_2$, a second or third series transition metal halide such as $YF_3$, an alkaline earth phosphide, nitride, or arsenide such as $Ca_3P_2$, $Mg_3N_2$, and $Mg_3As_2$, a metal boride such as $CrB_2$ or $TiB_2$, an alkali halide such as LiCl, RbCl, or CsI, a metal sulfide such as $Li_2S$, ZnS, $Y_2S_3$, FeS, MnS, $Cu_2S$, CuS, and $Sb_2S_5$, a metal phosphide such as $Ca_3P_2$, a transition metal halide such as $CrCl_3$, ZnF2, $ZnBr_2$, $ZnI_2$, $MnCl_2$, $MnBr_2$, $MnI_2$, $CoBr_2$, $CoI_2$, $CoCl_2$, $NiBr_2$, $NiF_2$, $FeF_2$, $FeCl_2$, $FeBr_2$, $TiF_3$, CuBr, $VF_3$, and $CuCl_2$, a metal halide such as $SnBr_2$, $SnI_2$, InF, InCl, InBr, InI, AgCl, AgI, $AlI_3$, $YF_3$, $CdCl_2$, $CdBr_2$, $CdI_2$, $InCl_3$, $ZrCl_4$, $NbF_5$, $TaCl_5$, $MoCl_3$, $MoCl_5$, $NbCl_5$, $AsCl_3$, $TiBr_4$, $SeCl_2$, $SeCl_4$, $InF_3$, $PbF_4$, and $TeI_4$, metal oxide or hydroxide such as $Y_2O_3$, FeO, NbO, $In(OH)_3$, $As_2O_3$, $SeO_2$, $TeO_2$, $BI_3$, $CO_2$, $As_2Se_3$, metal nitride such a $Mg_3N_2$, or AlN, metal phosphide such as $Ca_3P_2$, $SF_6$, S, $SbF_3$, $CF_4$, *NF_3*, $KMnO_4$, $NaMnO_4$, $P_2O_5$, $LiNO_3$, $NaNO_3$, $KNO_3$, and a metal boride such as$BBr_3$. Suitable oxidants include at least one of the list of $BaBr_2$, $BaCl_2$, $EuBr_2$, $EuF_3$, $YF_3$, $CrB_2$, $TiB_2$, LiCl, RbCl, CsI, $Li_2S$, ZnS, $Y_2S_3$, $Ca_3P_2$, $MnI_2$, $CoI_2$, $NiBr_2$, $SnBr_2$, $FeBr_2$, $SnI_2$, InCl, AgCl, $Y_2O_3$, $TeO_2$, $CO_2$, $SF_6$, S, $CF_4$, $NaMnO_4$, $P_2O_5$, $LiNO_3$. Suitable oxidants include at least one of the list of $EuBr_2$, $BaBr_2$, $CrB_2$, $MnI_2$, and AgCl. Suitable sulfide oxidants comprise at least one $Li_2S$, ZnS, and $Y_2S_3$. In certain embodiments, the oxide oxidant is $Y_2O_3$.

In additional embodiments, each reaction mixture comprises at least one species chosen from the following genus of components (i) - (iii) described above, and further comprises (iv) at least one reductant chosen from a metal such as an alkali, alkaline earth, transition, second and third series transition, and rare earth metals and aluminum. Preferably the reductant is one from the group of *Al, Mg, MgH_2, Si,* La, B, Zr, and Ti powders, and $H_2$.

In further embodiments, each reaction mixture comprises at least one species chosen from the following genus of components (i) - (iv) described above, and further comprises (v) a support, such as a conducting support chosen from AC, 1% Pt or Pd on carbon (Pt/C, Pd/C), and carbide, preferably TiC or WC.

The reactants may be in any molar ratio, but in certain embodiments they are in about equal molar ratios.

A suitable reaction system comprising (i) a catalyst or a source of catalyst, (ii) a source of hydrogen, (iii) an oxidant, (iv) a reductant, and. (v) a support comprises NaH or KH as the catalyst or source of catalyst and source of H, one of $BaBr_2$, $BaCl_2$, $MgBr_2$, $MgI_2$, $CaBr_2$, $EuBr_2$, $EuF_3$, $YF_3$, $CrB_2$, $TiB_2$, LiCl, RbCl, CsI, $Li_2S$, ZnS, $Y_2S_3$, $Ca_3P_2$, $MnI_2$, $CoI_2$, $NiBr_2$, $ZnBr_2$, $FeBr_2$, $SnI_2$, InCl, AgCl, $Y_2O_3$, $TeO_2$, $CO_2$, $SF_6$, S, $CF_4$, $NaMnO_4$, $P_2O_5$, $LiNO_3$, as the oxidant, Mg or $MgH_2$ as the reductant wherein $MgH_2$ may also serve as the source of H, and AC, TiC, or WC as the support. In the case that a tin halide is the oxidant, Sn product may serve as at least one of the reductant and conductive support in the catalysis mechanism.

In another suitable reaction system comprising (i) a catalyst or a source of catalyst, (ii) a source of hydrogen, (iii) an oxidant, and (iv) a support comprises NaH or KH as the catalyst or source of catalyst and source of H, one of $EuBr_2$, $BaBr_2$, $CrB_2$, $MnI_2$, and AgCl as the oxidant, and AC, TiC, or WC as the support. The reactants may be in any molar ratio, but preferably they are in about equal molar ratios.

The catalyst, the source of hydrogen, the oxidant, the reductant, and the support may be in any desired molar ratio. In an embodiment having the reactants, the catalyst comprising KH or NaH, the oxidant comprising at least one of $CrB_2$, $AgCl_2$, and a metal halide from the group of an alkaline earth, transition metal, or rare earth halide, preferably a bromide or iodide, such as $EuBr_2$, $BaBr_2$, and $MnI_2$, the reductant comprising Mg or $MgH_2$, and the support comprising AC, TiC, or WC, the molar ratios are about the same. Rare earth halides may be formed by the direct reaction of the corresponding halogen with the metal or the hydrogen halide such as HBr. The dihalide may be formed from the trihalide by $H_2$ reduction.

Additional oxidants are those that have a high dipole moment or form an intermediate with a high dipole moment. Preferably, the species with a high dipole moment readily accepts electrons from the catalyst during the catalysis reaction. The species may have a high electron affinity. In an embodiment, electron acceptors have a half-filled or about half-filled electron shell such as Sn, Mn, and Gd or Eu compounds having half-filled $sp^3$, 3d, and 4f shells, respectively. Representative oxidants of the latter type are metals corresponding to $LaF_3$, $LaBr_3$, $GdF_3$, $GdCl_3$, $GdBr_3$, $EuBr_2$, $EuI_2$, $EuCl_2$, $EuF_2$, $EuBr_3$, $EuI_3$, $EuCl_3$, and $EuF_3$. In an embodiment, the oxidant comprises a compound of a nonmetal such as at least one of P, S, Si, and C that preferably has a high oxidation state and further comprises atoms with a high electronegativity such as at least one of F, Cl, or O. In another embodiment, the oxidant comprises a compound of a metal such as at least one of Sn and Fe that has a low oxidation state such as II and further comprises atoms with a low electronegativity such as at least one of Br or I. A singly-negatively charged ion such as $MnO_4^-$, $ClO4_4^-$, or $NO_3^-$ is favored over a doubly-negatively charged one such as $CO_3^{2-}$ or $SO_4^{2-}$. In an embodiment, the oxidant comprises a compound such as a metal halide corresponding to a metal with a low melting point such that it may be melted as a reaction product and removed from the cell. Suitable oxidants of low-melting-point metals are halides of In, Ga, Ag, and Sn. The reactants may be in any molar ratio, but preferably they are in about equal molar ratios.

In an embodiment, the reaction mixture comprises (i) a catalyst or a source of catalyst comprising a metal or a hydride from the Group I elements, (ii) a source of hydrogen such as $H_2$ gas or a source of $H_2$ gas, or a hydride, (iii) an oxidant comprising an atom or ion or a compound comprising at least one of the elements from Groups 13, 14, 15, 16, and 17; preferably chosen from the group of F, Cl, Br, I, B, C, N, O, Al, Si, P, S, Se, and Te, (iv) a reductant comprising an element or hydride, preferably one or more element or hydride chosen Mg, $MgH_2$, Al, Si, B, Zr, and a rare earth metal such as La, and (v) a support that is preferably conductive and preferably does not react to form another compound with other species of the reaction mixture. Suitable supports preferably comprise carbon such as AC, graphene, carbon impregnated with a metal such as Pt or Pd/C, and carbide, preferably TiC or WC.

In an embodiment, the reaction mixture comprises (i) a catalyst or a source of catalyst comprising a metal or a hydride from the Group I elements, (ii) a source of hydrogen such as $H_2$ gas or a source of $H_2$ gas, or a hydride, (iii) an oxidant comprising a halide, oxide, or sulfide compound, preferably a metal halide, oxide, or sulfide, more preferably a halide of the elements from Groups IA, IIA, 3d, 4d, 5d, 6d, 7d, 8d, 9d, 10d, 11d, 12d, and lanthanides, and most preferably a transition metal halide or lanthanide halide, (iv) a reductant comprising an element or hydride, preferably one or more element or hydride chosen from Mg, $MgH_2$, Al, Si, B, Zr, and a rare earth metal such as La, and (v) a support that is preferably conductive and preferably does not react to form another compound with other species of the reaction mixture. Suitable supports preferably comprise carbon such as AC, carbon impregnated with a metal such as Pt or Pd/C, and carbide, preferably TiC or WC.

In an embodiment, the reaction mixture comprises a catalyst or a source of catalyst and hydrogen or a source of hydrogen and may further comprise other species such as a reductant, a support, and an oxidant wherein the mixture comprises at least two species selected from $BaBr_2$, $BaCl_2$, $TiB_2$, $CrB_2$, LiCl, RbCl, LiBr, KI, $MgI_2$, $Ca_3P_2$, $Mg_3As_2$, $Mg_3N_2$, AlN, $Ni_2Si$, $Co_2P$, $YF_3$, $YCl_3$, $YI_3$, NiB, $CeBr_3$, $MgO$, $Y_2S_3$, $Li_2S$, $GdF_3$, $GdBr_3$, $LaF_3$, $AlI_3$, $Y_2O_3$, $EuBr_3$, $EuF_3$, $Cu_2S$, MnS, ZnS, $TeO_2$, $P_2O_5$, $SnI_2$, $SnBr_2$, $CoI_2$, $FeBr_2$, $FeCl_2$, $EuBr_2$, $MnI_2$, InCl, AgCl, AgF, $NiBr_2$, $ZnBr_2$, $CuCl_2$, $InF_3$, alkali metals, alkali hydrides, alkali halides such as LiBr, KI, RbCl, alkaline earth metals, alkaline earth hydrides, alkaline earth halides such as $BaF_2$, $BaBr_2$, $BaCl_2$, $BaI_2$, $CaBr_2$, $SrI_2$, $SrBr_2$, $MgBr_2$, and $MgI_2$, AC, carbides, borides, transition metals, rare earth metals, Ga, In, Sn, Al, Si, Ti, B, Zr, and La.

e. Exchange Reactions, Thermally Reversible Reactions, and Regeneration

In an embodiment, the oxidant and at least one of the reductant, the source of catalyst, and the catalyst may undergo a reversible reaction. In an embodiment, the oxidant is a halide, preferably a metal halide, more preferably at least one of a transition metal, tin, indium, alkali metal, alkaline earth metal, and rare earth halide, most preferably a rare earth halide. The reversible reaction is preferably a halide exchange reaction. Preferably, the energy of the reaction is low such that the halide may be reversibly exchanged between the oxidant and the at least one of the reductant, source of catalyst, and catalyst at a temperature between ambient and 3000 °C, preferably between ambient and 1000 °C. The reaction equilibrium may be shifted to drive the hydrino reaction. The shift may be by a temperature change or reaction concentration or ratio change. The reaction may be sustained by addition of hydrogen. In a representative reaction, the exchange is

$$n_1 M_{ox} X_x + n_2 M_{cat/red} \rightleftarrows n_1 M_{ox} + n_2 M_{cat/red} X_y \qquad (54)$$

where $n_1$, $n_2$, x, and y are integers, X is a halide, and $M_{ox}$ is the metal of the oxidant, $M_{red/cat}$ is the metal of the at least one of the reductant, source of catalyst, and catalyst. In an embodiment, one or more of the reactants is a hydride and the reaction further involves a reversible hydride exchange in addition to a halide exchange. The reversible reaction may be controlled by controlling the hydrogen pressure in addition to other reaction conditions such as the temperature and concentration of reactants. An exemplary reaction is

$$n_1 M_{ox} X_x + n_2 M_{cat/red} H \rightleftarrows n_1 M_{ox} H + n_2 M_{cat/red} X_y. \qquad (55)$$

In an embodiment, one or more of the reactants is a hydride, and the reaction involves a reversible hydride exchange. The reversible reaction may be controlled by controlling the temperature in addition to other reaction conditions such as the hydrogen pressure and concentration of reactants. An exemplary reaction is

$$n_1 M_{cat} H_x + n_2 M_{red1} + n_3 M_{red2} \rightleftarrows n_3 M_{cat} + n_4 M_{red1} H_y + n_5 M_{red2} H_z. \qquad (56)$$

where $n_1$, $n_2$, $n_3$, $n_4$, $n_5$, x, y, and z are integers including 0, $M_{eat}$ is the metal of the source of catalyst, and catalyst and $M_{red}$ is the metal of one of the reductants. The reaction mixture may comprise a catalyst or a source of catalyst, hydrogen or a source of hydrogen, a support, and at least one or more of a reductant such as an alkaline earth metal, an alkali metal such as Li, and another hydride such as an alkaline earth hydride or alkali hydride. In an embodiment comprising a catalyst or source of catalyst comprising at least an alkali metal such as KH or NaH, regeneration is achieved by evaporating the alkali metal and hydriding it to form an initial metal hydride. In an embodiment, the catalyst or source of catalyst and source of hydrogen comprises NaH or KH, and the metal reactant for hydride exchange comprises Li. Then, the product LiH is regenerated by thermal decomposition. Since the vapor pressure of Na or K is much higher than that of Li, the former may be selectively evaporated and rehydrided and added back to regenerate the reaction mixture. In another embodiment, the reductant or metal for hydride exchange may comprise two alkaline earth metals such as Mg and Ca. The regeneration reaction may further comprise the thermal decomposition of another metal hydride under vacuum wherein the hydride is a reaction product such as $MgH_2$ or $CaH_2$. In an embodiment, the hydride is that of an intermetalic or is a mixture of hydrides such as one comprising H and at least two of Na, Ca, and Mg. The mixed hydride may have a lower decomposition temperature than the most stable single-metal hydride. In an embodiment, the hydride lowers the $H_2$ pressure to prevent hydrogen embrittlement of the reactor system. The support may comprise carbide such as TiC. The reaction mixture may comprise NaH TiC Mg and Ca. The alkaline earth hydride product such as $CaH_2$ may be decomposed under vacuum at elevated temperature such as >700 °C. The alkali metal such as Na may be evaporated and rehydrided. The other alkaline earth metal such as magnesium may also be evaporated and condensed separately. The reactants may be recombined to form the initial reaction mixture. The reagents may be in any molar ratios. In a further embodiment, the evaporated metal such as Na is returned by a wick or capillary structure. The wick may be that of a heat pipe. Alternatively, the condensed metal may fall back to the reactants by gravity. Hydrogen may be supplied to form NaH. In another embodiment, the reductant or metal for hydride exchange may comprise an alkali metal or a transition metal. The reactants may further comprise a halde such as an alkali halide. Suitable reaction mixures are NaH TiC Mg Li, NaH TiC $MgH_2$ Li, NaH TiC Li, NaH Li, NaH TiC Mg LiH, NaH TiC $MgH_2$ LiH, NaH TiC LiH, NaH LiH, NaH TiC, NaH TiC Mg LiBr, NaH TiC Mg LiCl, KH TiC Mg Li, KH TiC $MgH_2$ Li, KH TiC Li, KH Li, KH TiC Mg LiH, KH TiC $MgH_2$ LiH, KH TiC LiH, KH LiH, KH TiC, KH TiC Mg, LiBr, and KH TiC Mg LiCl. Other suitable reaction mixures are NaH $MgH_2$ TiC, NaH $MgH_2$ TiC Ca, Na $MgH_2$ TiC, Na $MgH_2$ TiC Ca, KH $MgH_2$ TiC, KH $MgH_2$ TiC Ca, K $MgH_2$ TiC, and K $MgH_2$ TiC Ca. Other suitable reaction mixtures comprise NaH Mg, NaH Mg TiC, and NaH Mg AC. AC is a preferred support for NaH + Mg since neither Na or Mg intercalates to any extent and the surface area of AC is very large. The reaction mixture may comprise a mixture of hydrides in a fixed reaction volume to establish a desired hydrogen pressure at a selected temperature. The hydride mixture may comprise an alkaline earth metal and its hydride such as Mg and $MgH_2$. In addition, hydrogen gas may be added. A suitable pressure range is 1 atm to 200 atm. A suitable reaction mixture is one or more of the group of KH Mg TiC + $H_2$, KH $MgH_2$ TiC + $H_2$, KH Mg $MgH_2$ TiC + $H_2$, NaH Mg TiC + $H_2$, NaH $MgH_2$ TiC + $H_2$, and NaH Mg $MgH_2$ TiC + $H_2$.

In an embodiment, the reaction mixture may comprise at least two of a catalyst or a source of catalyst and a source of hydrogen such as an alkali metal hydride, a reductant such as an alkaline earth metal, Li or LiH, and a getter or support such as an alkali metal halide. The nonconductive support may be converted to a conductive support such as a metal during the reaction. The reaction mixture may comprise NaH Mg and LiCl or LiBr. Then, conductive Li may form during the reaction. An exemplary experimental results is 031010WFCKA2#1626; 1.5" LDC; 8.0gNaH#8+8.0g Mg#6+3.4g LiCl#2+20.0g TiC #105; Tmax: 575 °C; Ein: 284 kJ; dE: 12 kJ; Theoretical Energy: 2.9 kJ; Energy Gain: 4.2.

A suitable reaction temperature range is one at which the hydrino reaction occurs. The temperature may be in the range at which at least one component of the reaction mixture melts, undergoes a phase change, undergoes a chemical change such as decomposition, or at least two components of the mixture react. The reaction temperature may within the range of 30 °C to 1200 °C. A suitable temperature range is 300 °C to 900 °C. The reaction temperature range for a reaction mixture comprising at least NaH may be greater than 475 °C. The reaction temperature for a reaction mixture comprising a metal halide or hydride may be at or above the regeneration reaction temperature. A suitable temperature range for the reaction mixture comprising an alkali, alkaline earth, or rare earth halide and a catalyst or source of catalyst comprising an alkali metal or alkali metal hydride is 650 °C to 850 °C. For a reaction comprising a mixture that forms an alkali metal carbon as a product such as $MC_x$ (M is an alkali metal), the temperature range may at the formation temperature of the alkali metal carbon or above. The reaction may be run at a temperature at which $MC_x$ undergoes regeneration to M and C under reduced pressure.

In an embodiment, the volatile species is a metal such as an alkali metal. Suitable metals comprise Na and K. During regeneration, the metal may condense in a cooler section of the system such as a vertical tube that may comprise a side arm to the reactor. The metal may add to a reservoir of metal. The reservoir may have a hydrogen supply feed below the surface to form the metal hydride such as NaH or KH wherein the metal column in the tube maintains the hydrogen in proximity to the supply. The metal hydride may be formed inside of a capillary system such as the capillary structure of a heat pipe. The capillary may selectively wick the metal hydride into a section of the reactor having the reaction mixture such that the metal hydride is added to the reaction mixture. The capillary may be selective for ionic over metallic liquids. The hydrogen in the wick may be at a sufficient pressure to maintain the metal hydride as a liquid.

The reaction mixture may comprise at least two of a catalyst or source of catalyst, hydrogen or a source of hydrogen, a support, a reductant, and an oxidant. In an embodiment, an intermetalic may serve as at least one of a solvent, a support, and a reductant. The intermetalic may comprise at least two alkaline earth metals such as a mixture of Mg and Ca or a mixture of an alkaline earth metal such as Mg and a transition metal such Ni. The intermetalic may serve as a solvent for at least one of the catalyst or source of catalyst and hydrogen or source of hydrogen. NaH or KH may be solublized by the solvent. The reaction mixture may comprise NaH Mg Ca and a support such as TiC. The support may be an oxidant such as carbon or carbide. In an embodiment, the solvent such as an alkaline earth metal such as Mg interacts with a catalyst or source of catalyst such as an alkli metal hydride such as NaH ionic compound to form NaH molecules to permit the further reaction to form hydrinos. The cell may be operated at this temperature with $H_2$ periodically added to maintain the heat production.

In an embodiment, the oxidant such as an alkali metal halide, alkaline earth metal halide, or a rare earth halide, preferably LiCl, LiBr, RbCl, $MgF_2$, $BaCl_2$, $CaBr_2$, $SrCl_2$, $BaBr_2$, $BaI2$, $EuX_2$ or $GdX_3$ wherein X is halide or sulfide, most preferably $EuBr_2$, is reacted with the catalyst or source of catalyst, preferably NaH or KH, and optionally a reductant, preferably Mg or $MgH_2$, to form $M_{ox}$ or $M_{ox}H_2$ and the halide or sulfide of the catalyst such as NaX or KX. The rare earth halide may be regenerated by selectively removing the catalyst or source of catalyst and optionally the reductant. In an embodiment, $M_{ox}H_2$ may be thermally decomposed and the hydrogen gas removed by methods such as pumping. The halide exchange (Eqs. (54-55)) forms the metal of the catalyst. The metal may be removed as a molten liquid or as an evaporated or sublimed gas leaving the metal halide such as the alkaline earth or rare earth halide. The liquid may be removed, for example, by methods such as centrifugation or by a pressurized inert gas stream. The catalyst or source of catalyst may be rehydrided where appropriate to regenerate the original reactants that are recombined into the originally mixture with the rare earth halide and the support. In the case that Mg or $MgH_2$ is used as the reductant, Mg may be first removed by forming the hydride with $H_2$ addition, melting the hydride, and removing the liquid. In an embodiment wherein X=F, $MgF_2$ product may be converted to $MgH_2$ by F exchange with the rare earth such as $EuH_2$ wherein molten $MgH_2$ is continuously removed. The reaction may be carried out under high pressure $H_2$ to favor the formation and selective removal of $MgH_2$. The reductant may be rehydrided and added to the other regenerated reactants to form the original reaction mixture. In another embodiment, the exchange reaction is between metal sulfides or oxides of the oxidant and the at least one of the reductant, source of catalyst, and catalyst. An exemplary system of each type is 1.66g KH + 1g Mg + 2.74g $Y_2S_3$ + 4g AC and 1g NaH + 1g Mg + 2.26g $Y_2O_3$ + 4g AC.

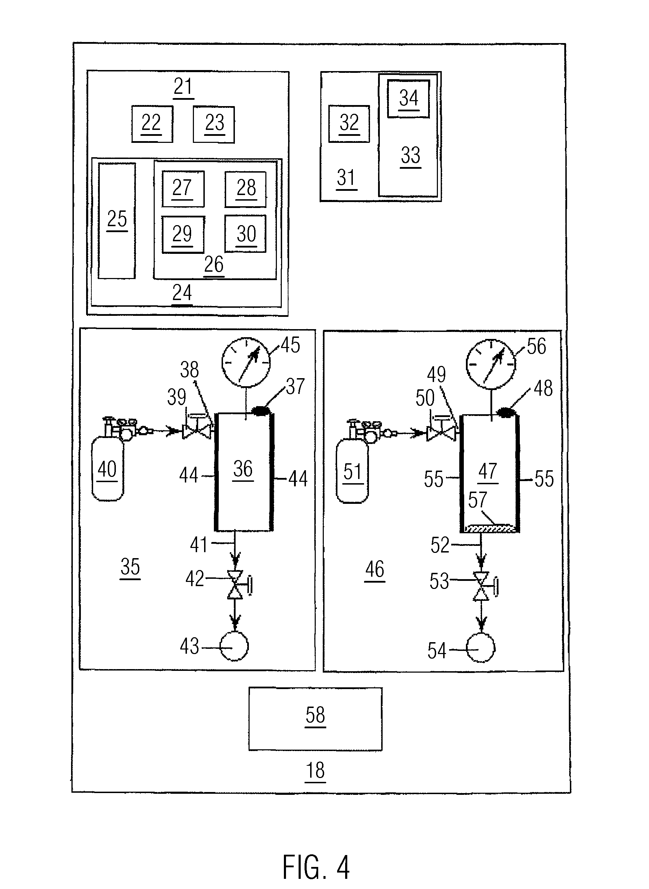

The selective removal of the catalyst, source of catalyst, or the reductant may be continuous wherein the catalyst, source of catalyst, or the reductant may be recycled or regenerated at least partially within the reactor. The reactor may further comprise a still or reflux component such as still 34 of FIGURE 4 to remove the catalyst, source of catalyst, or the reductant and return it to the cell. Optionally, it may be hydrided or further reacted and this product may be returned. The cell may be filled with a mixture of an inert gas and $H_2$. The gas mixture may comprise a gas heavier

than $H_2$ such that $H_2$ is buoyed to the top of the reactor. The gas may be at least one of Ne, Ar, Ne, Kr, and Xe. Alternatively, the gas may be an alkali metal or hydride such as K, $K_2$, KH or NaH. The gas may be formed by operating the cell at a high temperature such as about the boiling point of the metal. The section having a high concentration of $H_2$ may be cooler such that a metal vapor condenses in this region. The metal vapor may react with $H_2$ to from the metal hydride, and the hydride may be returned to the cell. The hydride may be returned by an alternative pathway than the one that resulted in the transport of the metal. Suitable metals are catalysts or sources of catalyst. The metal may be an alkali metal and the hydride may be an alkali metal hydride such as Na or K and NaH or KH, respectively. LiH is stable to 900 °C and melts at 688.7 °C; thus, it can be added back to the reactor without thermal decomposition at a corresponding regeneration temperature less than the LiH decomposition temperature.

The reaction temperature may be cycled between two extremes to continuously recycle the reactants by an equilibrium shift. In an embodiment, the system heat exchanger has the capacity to rapidly change the cell temperature between a high and low value to shift the equilibrium back and forth to propagate the hydrino reaction.

In another embodiment, the reactants may be transported into a hot reaction zone by a mechanical system such as a conveyor or auger. The heat may be extracted by a heat exchanger and supplied to a load such as a turbine and generator. The product may be continuously regenerated or regenerated in batch as it is moved in a cycle back to the hot reaction zone. The regeneration may be thermally. The regeneration may be by evaporating a metal such as one comprising the catalysts or source of catalyst. The removed metal may be hydrided and combined with the balance of the reaction mixture before entering the hot reaction zone. The combining may further comprise the step of mixing.

The regeneration reaction may comprise a catalytic reaction with an added species such as hydrogen. In an embodiment, the source of catalyst and H is KH and the oxidant is $EuBr_2$. The thermally driven regeneration reaction may be

$$2KBr + Eu \text{ to } EuBr_2 + 2K \qquad (57)$$

or

$$2KBr + EuH_2 \text{ to } EuBr_2 + 2KH. \qquad (58)$$

Alternatively, $H_2$ may serve as a regeneration catalyst of the catalyst or source of catalyst and oxidant such as KH and $EuBr_2$, respectively:

$$3KBr + 1/2H_2 + EuH_2 \text{ to } EuBr_3 + 3KH. \qquad (59)$$

Then, $EuBr_2$ is formed from $EuBr_3$ by $H_2$ reduction. A possible route is

$$EuBr_3 + 1/2H_2 \text{ to } EuBr_2 + HBr. \qquad (60)$$

The HBr may be recycled:

$$HBr + KH \text{ to } KBr + H_2 \qquad (61)$$

with the net reaction being:

$$2KBr + EuH_2 \text{ to } EuBr_2 + 2KH. \qquad (62)$$

The rate of the thermally driven regeneration reaction can be increased by using a different pathway with a lower energy known to those skilled in the art:

$$2KBr + H_2 + Eu \text{ to } EuBr_2 + 2KH \qquad (63)$$

$$3KBr + 3/2H_2 + Eu \text{ to } EuBr_3 + 3KH \text{ or} \qquad (64)$$

$$EuBr_3 + 1/2H_2 \text{ to } EuBr_2 + HBr. \qquad (65)$$

The reaction given by Eq. (63) is possible since an equilibrium exists between a metal and the corresponding hydride in the presence of $H_2$ such as

$$Eu + H_2 \rightleftarrows EuH_2. \qquad (66)$$

The reaction pathway may involve intermediate steps of lower energy known to those skilled in the art such as

$$2KBr + Mg + H_2 \text{ to } MgBr_2 + 2KH \text{ and} \qquad (67)$$

$$MgBr_2 + Eu + H_2 \text{ to } EuBr_2 + MgH_2. \qquad (68)$$

The reaction mixture may comprise a support such as support such as TiC, $YC_2$, $B_4C$, NbC, and Si nanopowder.

The KH or K metal may be removed as a molten liquid or as an evaporated or sublimed gas leaving the metal halide such as the alkaline earth or rare earth halide. The liquid may be removed by methods such as centrifugation or by a pressurized inert gas stream. In other embodiments, another catalyst or catalyst source such as NaH, LiH, RbH, CsH, Na, Li, Rb, Cs may substitute for KH or K, and the oxidant may comprise another metal halide such as another rare earth halide or an alkaline earth halide, preferably $MgF_2$, $MgCl_2$, $CaBr_2$, $CaF_2$, $SrCl_2$, $Srl_2$, $BaBr_2$, or $Bal_2$.

In the case that the reactant-product energy gap is small, the reactants may be regenerated thermally. For example, it is thermodynamically favorable to thermally reverse the reaction given by

$$EuBr_2 + 2KH \rightarrow 2KBr + EuH_2 \quad \Delta H = -136.55 \, kJ \qquad (69)$$

by several pathways to achieve the following:

$$2KBr + Eu \rightarrow EuBr_2 + 2K \qquad (70)$$

The reaction can be driven more to completion by dynamically removing potassium. The reaction given by Eq. (70) was confirmed by reacting a two-to-one molar mixture of *KBr* and *Eu* (3.6g (30 mmoles) of *KBr* and 2.3g (15 mmoles) of *Eu)* in an alumina boat wrapped in nickel foil in a 1 inch OD quartz tube at 1050 °C for 4 hours under an argon atmosphere. Potassium metal was evaporated from the hot zone, and the majority product identified by XRD was *EuBr₂*. In another embodiment, *EuBr₂* was formed according to the reaction given by Eq. (70) by reacting about a two-to-one molar mixture of *KBr* and *Eu* (4.1g (34.5 mmoles) of *KBr* and 2.1g (13.8 mmoles) of *Eu)* wrapped in stainless steel foil crucible in a 0.75 inch OD stainless steel tube open at one end in a 1 inch OD vacuum-tight quartz tube. The reaction was run at 850 °C for one hour under vacuum. Potassium metal was evaporated from the hot zone, and the majority product identified by XRD was *EuBr₂*. In an embodiment, a reaction mixture such as a salt mixture is used to lower the melting point of the regeneration reactants. A suitable mixture is a eutectic salt mixture of a plurality of cations of a plurality of catalysts such as alkali meal cations. In other embodiments, mixtures of metals, hydrides, or other compounds or elements are used to lower the melting point of the regeneration reactants.

The energy balance from non-hydrino chemistry of this hydrino catalyst system is essentially energy neutral such that with each power and regeneration cycle maintained concurrently to constitute a continuous power source, 900 *kJ/mole EuBr₂* are released per cycle in an experimentally measured case. The observed power density was about 10 $W/cm^3$. The temperature limit is that set by the failure of the vessel material. The net fuel balance of the hydrino reaction is *50MJ / mole $H_2$* consumed to form *$H_2$(1/4)*.

In an embodiment, the oxidant is $EuX_2$ (X is a halide) hydrate wherein the water may be present as a minority species such that its stoichiometry is less than one. The oxidant may further comprise europium, halide, and oxide such as EuOX, preferably EuOBr or a mixture with $EuX_2$. In another embodiment, the oxidant is $EuX_2$ such as $EuBr_2$ and the support is carbide such as $YC_2$ or TiC.

In an embodiment, the metal catalyst or source of catalyst such as K or Na is evaporated from a hot zone as the exchange reaction such as the halide exchange reaction occurs with the regeneration of the oxidant such as $EuBr_2$. The catalyst metal may be condensed in a condensing chamber having a valve such as a gate valve or sluice valve that when closed isolates the chamber from the main reactor chamber. The catalyst metal may be hydrided by adding a source of hydrogen such as hydrogen gas. Then, the hydride may be added back to the reaction mixture. In an embodiment, the valve is opened and the hydride heated to the melting point such that it flows back into the reaction chamber. Preferably the condensing chamber is above the main reaction chamber such that the flow is at least partially by gravity. The hydride may also be added back mechanically. Other suitable reactions systems that are regenerated thermally comprise at least NaH or KH and an alkali halide such as LiBr, LiCl, Ki, and RbCl or alkaline earth halide such as $MgF_2$, $MgCl_2$, $CaBr_2$, $CaF_2$, $SrCl_2$, $Srl_2$, $BaCl_2$, $BaBr_2$, or $Bal_2$.

The reaction mixture may comprise an intermetalic such as $Mg_2Ba$ as the reductant or as a support and may further comprise mixtures of oxidants such as mixtures of alkaline earth halides alone such as $MgF_2 + MgCl_2$ or with alkali halides such as $KF + MgF_2$ or $KMgF_3$. These reactants may be regenerated thermally from the products of the reaction mixture. During regeneration of $MgF_2 + MgCl_2$, $MgCl_2$ may be dynamically removed as a product of an exchange reaction of Cl for F. The removal may be by evaporation, sublimation, or precipitation from a liquid mixture in at least the latter case.

In another embodiment, the reactant-product energy gap is larger and the reactants may still be regenerated thermally by removing at least one species. For example, at temperatures less than 1000 °C it is thermodynamically unfavorable to thermally reverse the reaction given by

$$MnI_2 + 2KH + Mg \rightarrow 2KI + Mn + MgH_2 \quad \Delta H = -373.0 \ kJ \tag{71}$$

But, by removing a species such as K there are several pathways to achieve the following:

$$2KI + Mn \rightarrow MnI_2 + 2K \tag{72}$$

Thus, nonequilibrium thermodynamics apply, and many reaction systems can be regenerated that are not thermodynamically favorable considering just the equilibrium thermodynamics of a closed system.

The reaction given by Eq. (72) can be driven to more completion by dynamically removing potassium. The reaction given by Eq. (72) was confirmed by reacting a two-to-one molar mixture of *KI* and *Mn* in a 0.75 inch OD vertical stainless steel tube open at one end in a 1 inch OD vacuum-tight quartz tube. The reaction was run at 850 °C for one hour under vacuum. Potassium metal was evaporated from the hot zone, and the *$MnI_2$* product was identified by XRD.

In another embodiment, the metal halide that may serve as an oxidant comprises an alkali metal such as KI, LiBr, LiCl, or RbCl, or an alkaline earth halide. A suitable alkaline earth halide is a magnesium halide. The reaction mixture may comprise a source of catalyst and a source of H such as KH or NaH, an oxidant such as one of $MgF_2$, $MgBr_2$, $MgCl_2$, $MgBr_2$, $Mgl_2$, and mixtures such as $MgBr_2$ and $Mgl_2$ or a mixed-halide compound such as MglBr, a reductant such as Mg metal powder, and a support such as TiC, $YC_2$, $Ti_3SiC_2$, TiCN, SiC, $B_4C$, or WC. An advantage to the magnesium halide oxidant is that Mg powder may not need to be removed in order to regenerate the reactant oxidant. The regeneration may be by heating. The thermally driven regeneration reaction may be

$$2KX + Mg \text{ to } MgX_2 + 2K \tag{73}$$

or

$$2KX + MgH_2 \text{ to } MgX_2 + 2KH \tag{74}$$

wherein X is F, Cl, Br, or I. In other embodiments, another alkali metal or alkali metal hydride such as NaH may replace KH.

In another embodiment, the metal halide that may serve as an oxidant comprises an alkali metal halide such as KI wherein the metal is also the metal of the catalyst or source of catalyst. The reaction mixture may comprise a source of catalyst and a source of H such as KH or NaH, an oxidant such as one of KX or NaX wherein X is F, Cl, Br, or I, or mixtures of oxidants, a reductant such as Mg metal powder, and a support such as TiC, $YC_2$, $B_4C$, NbC, and Si nanopowder. An advantage to such a halide oxidant is that the system is simplified for regeneration of the reactant oxidant. The regeneration may be by heating. The thermally driven regeneration reaction may be

$$KX + KH \text{ to } KX + K(g) + H_2 \tag{75}$$

the alkali metal such as K may be collected as a vapor, rehydrided, and added to the reaction mixture to form the initial reaction mixture.

LiH is stable to 900 °C and melts at 688.7 °C; thus, lithium halides such as LiCl and LiBr may serve as the oxidant or halide of a hydride-halide exchange reaction wherein another catalyst metal such as K or Na is preferentially evaporated during regeneration as LiH reacts to form the initial lithium halide. The reaction mixture may comprise the catalyst or source of catalyst and hydrogen or source of hydrogen such as KH or NaH, and may further comprise one or more of a reductant such as an alkaline earth metal such as Mg powder, a support such as $YC_2$, TiC, or carbon, and an oxidant such as an alkali halide such as LiCl or LiBr. The products may comprise the catalyst metal halide and lithium hydride. The power producing hydrino reaction and regeneration reaction may be, respectively:

$$MH + LiX \text{ to } MX + LiH \tag{76}$$

and

$$MX + LiH \text{ to } M + LiX + 1/2H_2 \tag{77}$$

wherein M is the catalyst metal such as an alkali metal such as K or Na and X is a halide such as Cl or Br. M is preferentially evaporated due to the high volatility of M and the relative instability of MH. The metal M may be separately hydrided and returned to the reaction mixture to regenerate it. In another embodiment, Li replaces LiH in the regeneration reaction since it has a much lower vapor pressure than K. For example at 722 °C, the vapor pressure of Li is 100 Pa; whereas, at a similar temperature, 756 °C, the vapor pressure of K is 100 kPa. Then, K can be selectively evaporated during a regeneration reaction between MX and Li or LiH in Eq. (77). In other embodiments, another alkali metal M such as Na substitutes for K.

In another embodiment, the reaction to form hydrinos comprises at least one of a hydride exchange and a halide exchange between at least two species such as two metals. At least one metal may be a catalyst or a source of a catalyst to form hydrinos such as an alkali metal or alkali metal hydride. The hydride exchange may be between at least two hydrides, at least one metal and at least one hydride, at least two metal hydrides, at least one metal and at least one metal hydride and other such combinations with the exchange between or involving two or more species. In an embodiment, the hydride exchange forms a mixed metal hydride such as $(M_1)_x(M_2)_yH_z$ wherein x,y, and z are integers and $M_1$ and $M_2$ are metals. In an embodiment, the mixed hydride comprises an alkali metal and an alkaline earth metal such as $KMgH_3$, $K_2MgH_4$, $NaMgH_3$, and $Na_2MgH_4$. The reaction mixture may be at least one of NaH and KH, at least one metal such as an alkaline earth metal or transition metal, and a support such as carbon or carbide. The reaction mixture may comprise NaH Mg and TiC or NaH or KH Mg TiC and MX wherein LiX wherein X is halide. A hydride exchange may occur between NaH and at least one of the other metals.

In an embodiment, the catalyst is an atom or ion of at least one of a bulk material such as a metal, a metal of an intermetalic compound, a supported metal, and a compound, wherein at least one electron of the atom or ion accepts about an integer multiple of 27.2 eV from atomic hydrogen to form hydrinos. In an embodiment, $Mg^{2+}$ is a catalyst to form hydrinos since its third ionization energy (IP) is 80.14 eV. The catalyst may be formed in a plasma or comprise a reactant compound of the hydrino reaction mixture. A suitable Mg compound is one that provides $Mg^{2+}$ in an environment such that its third IP is more closed matched to the resonant energy of 81.6 eV given by Eq. (5) with m=3. Exemplary magnesium compounds include halides, hydrides, nitrides, carbides, and borides. In an embodiment, the hydride is a mixed metal hydride such as $Mg_x(M_2)_yH_z$ wherein x,y, and z are integers and $M_2$ is a metal. In an embodiment, the mixed hydride comprises an alkali metal and Mg such as $KMgH_3$, $K_2MgH_4$, $NaMgH_3$, and $Na_2MgH_4$. The catalyst reaction is given by Eqs. (6-9) wherein $Cat^{q+}$ is $Mg^{2+}$, r=1, and m=3. In another embodiment, $Ti^{2+}$ is a catalyst to form hydrinos since its third ionization energy (IP) is 27.49 eV. The catalyst may be formed in a plasma or comprise a reactant compound of the hydrino reaction mixture. A suitable Ti compound is one that provides $Ti^{2+}$ in an environment such that its third IP is more closed matched to the resonant energy of 27.2 eV given by Eq. (5) with m=1. Exemplary titanium compounds include halides, hydrides, nitrides, carbides, and borides. In an embodiment, the hydride is a mixed metal hydride such

as $Ti_x(M_2)_yH_z$ wherein x,y, and z are integers and $M_2$ is a metal. In an embodiment, the mixed hydride comprises at least one of an alkali metal or alkaline earth metal and Ti such as $KTiH_3$, $K_2TiH_4$, $NaTiH_3$, $Na_2TiH_4$, and $MgTiH_4$.

Bulk magnesium metal comprises $Mg^{2+}$ ions and planar metal electrons as counter charges in a metallic lattice. The third ionization energy of Mg is $IP_3=80.1437$ eV. This energy is increased by the Mg molar metal bond energy of $E_b=147.1$ kJ/mole (1.525 eV) such that the sum of $IP_3$ and $E_b$ is about 3X27.2 eV that is a match to that necessary for Mg to serve as catalyst (Eq. (5)). The ionized third electron may be bound or conducted to ground by the metal particle comprising the ionized $Mg^{2+}$ center. Similarly, calcium metal comprises $Ca^{2+}$ ions and planar metal electrons as counter charges in a metallic lattice. The third ionization energy of Ca is $IP_3=50.9131$ eV. This energy is increased by the Ca molar metal bond energy of $E_b=177.8$ kJ/mole (1.843 eV) such that the sum of $IP_3$ and $2E_b$ is about 2X27.2 eV that is a match to that necessary for Ca to serve as catalyst (Eq. (5)). The fourth ionization energy of La is $IP_4=49.95$ eV. This energy is increased by the La molar metal bond energy of $E_b=431.0$ kJ/mole (4.47 eV) such that the sum of $IP_4$ and $E_b$ is about 2X27.2 eV that is a match to that necessary for La to serve as catalyst (Eq. (5)). Other such metals having the sum of the ionization energy of the lattice ion and the lattice energy or a small multiple thereof equal to about mX27.2 eV (Eq. (5)) such as Cs ($IP_2=23.15$ eV), Sc ($IP_3=24.75666$ eV), Ti ($IP_3=27.4917$ eV), Mo ($IP_3=27.13$ eV), Sb ($IP_3=25.3$ eV), Eu ($IP_3=24.92$ eV), Yb ($IP_3=25.05$ eV), and Bi ($IP_3=25.56$ eV) may serve as catalysts. In an embodiment, Mg or Ca is a source of catalyst of the presently disclosed reaction mixtures. The reaction temperature may be controlled to control the rate of reaction to form hydrinos. The temperature may be in the range of about 25 °C to 2000 °C. A suitable temperature range is the metal melting point +/- 150 °C. Ca may also serve as a catalyst since the sum of the first four ionization energies ($IP_1=6.11316$ eV, $IP_2=11.87172$ eV, $IP_3=50.9131$ eV, $IP_4=67.27$ eV) is 136.17 eV that is 5X27.2 eV (Eq. (5)).

In an embodiment, the catalyst reaction energy is the sum of the ionization of a species such as an atom or ion and either the bond energy of $H_2$ (4.478 eV) or the ionization energy of $H^-$ (IP=0.754 eV). The third ionization energy of Mg is $IP_3=80.1437$ eV. The catalyst reaction of $H^-$ with a $Mg^{2+}$ ion including one in a metal lattice has an enthalpy corresponding to IP $H^-$ + Mg $IP_3 \sim$ 3X27.2 eV (Eq. (5)). The third ionization energy of Ca is $IP_3=50.9131$ eV. The catalyst reaction of $H^-$ with a $Ca^{2+}$ ion including one in a metal lattice has an enthalpy corresponding to IP $H^-$ + Ca $IP_3 \sim$ 2X27.2 eV (Eq. (5)). The fourth ionization energy of La is $IP_4=49.95$ eV. The catalyst reaction of $H^-$ with a $La^{3+}$ ion including one in a metal lattice has an enthalpy corresponding to IP $H^-$ + La $IP_4 \sim$ 2X27.2 eV (Eq. (5)).

In an embodiment, the ionization energy or energies of an ion of a metal lattice plus an energy less than or equal to the metal work function is a multiple of 27.2 eV such that the reaction of the ionization of the ion to a metal band up to the limit of ionization from the metal is of sufficient energy to match that required to be accepted to catalyst H to a hydrino state. The metal may be on a support that increases the work function. A suitable support is carbon or carbide. The work function of the latter is about 5 eV. The third ionization energy of Mg is $IP_3=80.1437$ eV, the third ionization energy of Ca is $IP_3=50.9131$ eV, and the fourth ionization energy of La is $IP_4=49.95$ eV. Thus, each of these metals on a carbon or carbide support may serve as a catalyst having a net enthalpy of 3X27.2 eV, 2X27.2 eV, and 2X27.2 eV, respectively. The work function of Mg is 3.66 eV; thus, Mg alone may serve as a catalyst of 3X27.2 eV.

The energy transfer from H to an acceptor such as an atom or ion cancels the central charge and binding energy of the electron of the acceptor. The energy transferred is allowed when equal to an integer of 27.2 eV. In the case that the acceptor electron is the outer electron of an ion in a metal or compound, the ion exists in a lattice such that the energy accepted in greater than the vacuum ionization energy of the acceptor electron. The lattice energy is increased by an amount less than or equal to the work function, the limiting component energy wherein the electron becomes ionized from the lattice. In an embodiment, the ionization energy or energies of an ion of a metal lattice plus an energy less than or equal to the metal work function is a multiple of 27.2 eV such that the reaction of the ionization of the ion to a metal band up to the limit of ionization from the metal is of sufficient energy to match that required to catalyst H to a hydrino state. The metal may be on a support that increases the work function. A suitable support is carbon or carbide. The work function of the latter is about 5 eV. The third ionization energy of Mg is $IP_3=80.1437$ eV, the third ionization energy of Ca is $IP_3=50.913$ eV, and the fourth ionization energy of La is $IP_4=49.95$ eV. Thus, each of these metals on a carbon or carbide support may serve as a catalyst having a net enthalpy of 3X27.2 eV, 2X27.2 eV, and 2X27.2 eV, respectively. The work function of Mg is 3.66 eV; thus, Mg alone may serve as a catalyst of 3X27.2 eV. The same mechanism applies to an ion or compound. Such an ion can serve as a catalyst when the ionization energy or energies of an ion of an ionic lattice plus an energy less than or equal to the compound work function is a multiple of 27.2 eV.

In an embodiment, the reaction mixture comprises Mg or Ca and further comprises a solvent and optionally a support. A suitable solvent includes an ether, hydrocarbon, fluorinated hydrocarbon, aromatic, heterocyclic aromatic solvent, and others given in the Liquid Fuels: Organic and Molten Solvent Systems section. Other suitable solvents are also those disclosed in the Organic Solvent section and Inorganic Solvent section. Suitable solvents are hexamethyl-phosphoramide ($OP(N(CH_3)_2)_3$, ammonia, amines, ethers, a complexing solvent, crown ethers, and cryptands and solvents such as ethers or an amide such as THF with the addition of a crown ether or cryptand.

Magnesium may form a complex: magnesium anthracene · tetrahydrofuran (THF) from which high surface area, highly reactive Mg may be obtained by decomposition of the complex with recovery of anthracene and THF both thermally and by ultrasound in an organic solvent such as toluene or n-heptane or thermally in the solid state in vacuum. Mg with high surface area may also be obtained from dehydrogenation of $MgH_2$ prepared catalytically using the complex. In another embodiment, Mg is suspended or dissolved as a complex such as magnesium anthracene · tetrahydrofuran (THF). Such a complex may be in equilibrium with Mg metal that serves as the catalyst. The hydrino reaction mixture may comprise high surface area Mg, a support, a source of hydrogen such as $H_2$ or a hydride, and optionally other reactants such as an oxidant. The support such as at least one of TiC, WC, TiCN, $YC_2$, SiC, and $B_4C$ can be regenerated by evaporating volatile metals. Mg may be removed by cleaning with anthracene · tetrahydrofuran (THF) wherein a Mg complex forms. Mg can be recovered by thermally decomposing the complex.

A bulk metal catalyst such as Mg or Ca may be suspended as an emulsion in a liquid. The liquid may be a solvent that has efficient viscosity and density to suspend the metal such as mineral oil or chloroform. The liquid may be a molten salt. The suspension may have a long lifetime to minimize the energy to maintain the emulsion. The metal may form a liquid suspension or mixture in another metal. Suitable metals that are miscible with Mg are Na and K in any proportions. The temperature at which the liquid mixtures are formed are 97.7 °C and 63 °C, respectively. The reaction temperature may be maintained at about or above this temperature. Mg may also be dissolved in Al wherein at 50/50 at% and a temperature above 450 °C, the mixture is a liquid. Alternatively, Mg may be dissolved with Y such as 5 to 10 at% Y that is liquid at about 600 °C. Ca may form a liquid suspension or mixture in another metal. A suitable metal that is miscible with Ca is Na in any proportions. The temperature at which the liquid mixture is formed is 97.6 °C. Ca may be dissolved in La or Eu.

In another embodiment, the bulk metal catalyst such as Mg or Ca comprises an intermetallic. The energy level of the metal ion center in the metal lattice such as $Mg^{2+}$ is altered in the intermetallic such that the ionization energy more closely conforms to $mX27.2$ eV to serve as a catalyst to form hydrinos. Suitable exemplary Mg intermetallics are Mg-Ca, Mg-Ag, Mg-Ba, Mg-Li, Mg-Bi, Mg-Cd, Mg-Ga, Mg-In, Mg-Cu, and Mg-Ni and their hydrides. Exempary mixtures and their melting points are Mg Ca (27/73 at%, MP=443 °C), Mg Ag (77.43/22.57 at%, MP=472 °C), Mg Ba (65/35 at%, MP=358 °C), Mg Li (30/70 at%, MP=325 °C), Mg Bi (41.1/59.9 at%, MP=553 °C), Mg Cd (50/50 at%, MP=400 °C), Mg Ga (50/50 at%, MP=370 °C), Mg In (50/50 at%, MP=460 °C), Mg Cu (85/15 at%, MP=487 °C), and Mg Ni (76.5/23.5 at%, MP=506 °C). Suitable exemplary Ca intermetallics are Ca-Cu, Ca-In, Ca-Li, Ca-Ni, Ca-Sn, Ca-Zn, and their hydrides. Exempary mixtures and their melting points are Ca Cu (75.7/24.3 at%, MP=482 °C), Ca In (5/95 at%, MP=300 °C), Ca Li (40/60 at%, MP=230 °C), Ca Ni (84/16 at%, MP=443 °C), Ca Sn (15/95 at%, MP=500 °C), and Ca Zn (72.6/27.4 at%, MP=391 °C). In other embodiments, the metal is dissolved in an intermetallic. Exemplary suitable mixtures of Ca with other metals that form an intermetallic that dissolves excess Ca are Ca Li (50/50 at%) and Ca Mg (70/30 at%) other suitable mixtures may be determined from the phase diagrams by one skilled in the Art. The reaction mixture may further comprise a support such as TiC. A source of H atoms is added to the suspended or dissolved metal. The source may be hydrogen or a hydride and optionally a hydrogen dissociator. The reaction temperature may be maintained at about or above the temperature at which a liquid is formed.

In an embodiment, the catalyst comprises a metal or compound that has an ionization energy equal to an integer multiple of 27.2 eV as determined by X-ray photoelectron spectroscopy. In an embodiment, NaH serves as the catalyst and source of H wherein the reaction temperature is maintained above the melting point of NaH of 638 °C at a hydrogen pressure of over 107.3 bar.

Al metal may serve as a catalyst. The first, second, and third ionization energies are 5.98577 eV, 18.82856 eV, and 28.44765 eV, respectively, such that the ionization of Al to $Al^{3+}$ 53.26198 eV. This enthalpy plus the Al bond energy at a defect is a match to $2X27.2$ eV.

Another class of species that satisfies the catalyst condition of providing a net enthalpy of an integer multiple of 27.2 eV is the combination of a hydrogen atom and another species such as an atom or ion whereby the sum of the ionization energies of the hydrogen atom and one or more electrons of the other species is $mX27.2$ (Eq. (5)). For example, the ionization energy of H is 13.59844 eV and the first, second, and third ionization energies of Ca are $IP_1$=6.11316 eV, $IP_2$=11.87172 eV, and $IP_3$=50.9131 eV. Thus, Ca and H may serve as a catalyst having a net enthalpy of $3X27.2$ eV. Ca may also serve as a catalyst since the sum of it first, second, third, and fourth ($IP_4$=67.27 eV) ionization energies is $5X27.2$ eV. In the latter case, since H(1/4) is a preferred case based on its stability, a H atom catalyzed by Ca may transition to the H(1/4) state wherein the energy transferred to Ca to cause it to be ionized to $Ca^{4+}$ comprises an 81.6 eV component to form the intermediate H*(1/4) and 54.56 eV released as part of the decay energy of H*(1/4).

In an embodiment, the reaction mixture comprises at least two of a catalyst or a source of catalyst and hydrogen or a source of hydrogen such as KH or NaH, a support such as a metal carbide preferably TiC, $Ti_3SiC_2$, WC, TiCN, $B_4C$, SiC, or $YC_2$, or a metal such as a transition metal such a Fe, Mn or Cr, a reductants such as an alkaline earth metal and an alkaline earth halide that may serve as an oxidant. Preferably, the alkaline earth halide oxidant and reductant comprise the same alkaline earth metal. Exemplary reaction mixtures comprise KH Mg TiC or $YC_2$ $MgCl_2$; KH Mg TiC or $YC_2$ $MgF_2$; KH Ca TiC or $YC_2$ $CaCl_2$; KH Ca TiC or $YC_2$ $CaF_2$; KH Sr TiC or $YC_2$ $SrCl_2$; KH Sr TiC or $YC_2$ $SrF_2$; KH Ba TiC or $YC_2$ $BaBr_2$; and KH Ba TiC or $YC_2$ $BaI_2$.

In an embodiment, the reaction mixture comprises a catalyst or a source of catalyst and hydrogen or a source of hydrogen such as KH or NaH and a support such as a metal carbide preferably TiC, $Ti_3SiC_2$, WC, TiCN, $B_4C$, SiC, or $YC_2$ or a metal such as a transition metal such a Fe, Mn or Cr. Suitable supports are those that cause the formation of the catalyst and hydrogen such that the H forms hydrinos. Exemplary reaction mixtures comprise KH $YC_2$; KH TiC; NaH $YC_2$, and NaH TiC.

In an embodiment, the reaction mixture comprises a catalyst or a source of a catalyst and hydrogen or a source of hydrogen such an alkali metal hydride. Suitable reactants are KH and NaH. The reaction mixture may further comprise a reductant such as an alkaline earth metal, preferably Mg, and may additionally comprise a support wherein the support may be carbon such as activated carbon, a metal, or carbide. The reaction mixture may further comprise an oxidant such as an alkaline earth halide. In an embodiment, the oxidant may be the support such as carbon. The carbon may comprise forms such as graphite and activated carbon and may further comprise a hydrogen dissociator such as Pt, Pd, Ru, or Ir. Suitable such carbon may comprise Pt/C, Pd/C, Ru/C or Ir/C. The oxidant may form an intercalation compound with one or more metals or the reaction mixture. The metal may be the metal of the catalyst or source of catalyst such as an alkali metal. In an exemplary reaction, the intercalation compound may be $KC_x$ wherein x may be 8, 10, 24, 36, 48, 60. In an embodiment, the intercalation compound may be regenerated to the metal and carbon. The regeneration may be by heating wherein the metal may be dynamically removed to force the reaction further to completion. A suitable temperature for regeneration is in the range of about 500-1000 °C, preferably in the range of about 750-900 °C. The reaction may be further facilitated by the addition of another species such as a gas. The gas may be an inert gas or hydrogen. The source of hydrogen may be a hydride such as a source of catalysis such as KH or a source of oxidant such as $MgH_2$. Suitable gases are one or more of a noble gas and nitrogen. Alternatively, the gas could be ammonia or mixtures of or with other gases. The gas may be removed by means such as pumping. Other displacing agents comprise an intercalating agent other than that comprising the catalyst or source of catalyst such as another alkali metal other than that corresponding to the catalyst or source of catalyst. The exchange may be dynamic or occur intermittently such that at least some of the catalyst or source of catalyst is regenerated. The carbon is also regenerated by means such as the more facile decomposition of the intercalation compound formed by the displacing agent. This may occur by heating or by using a gas displacement agent. Any methane or hydrocarbons formed from the carbon and hydrogen may be reformed on suitable catalysts to carbon and hydrogen. Methane can also be reacted with a metal such as an alkali metal to form the corresponding hydride and carbon. Suitable alkali metals are K and Na.

$NH_3$ solution dissolves K. In an embodiment, $NH_3$ may be at liquid densities when intercalated in carbon. Then, it may serve as a solvent to regenerate carbon from $MC_x$, and $NH_3$ is easily removed from the reaction chamber as a gas. In addition, $NH_3$ may reversibly react with M such as K to form the amide such as $KNH_2$ that may drive the reaction of M extraction from $MC_x$ to completion. In an embodiment, $NH_3$ is added to $MC_x$ at a pressure and under other reaction conditions such that carbon is regenerated as M is removed. $NH_3$ is then removed under vacuum. It may be recovered for another cycle of regeneration.

In another embodiment, the alkali metal may be removed from the intercalation product such as $MC_x$ (M is an alkali metal) to form the metal and carbon by extraction of the metal using a solvent of the metal. Suitable solvents that dissolve alkali metals are hexamethylphosphoramide ($OP(N(CH_3)_2)_3$, ammonia, amines, ethers, a complexing solvent, crown ethers, and cryptands and solvents such as ethers or an amide such as THF with the addition of a crown ether or cryptand. The rate of removal of the alkali metal may be increased using a sonicator. In an embodiment, a reaction mixture such one comprising a catalyst or a source of a catalyst and further comprising hydrogen or a source of hydrogen such an alkali metal hydride such as KH or NaH, a reductant such as an alkaline earth metal, and a carbon support such as activated carbon is flowed through a power producing section to a section wherein the product is regenerated. The regeneration may be by using a solvent to extract any intercalated metal. The solvent may be evaporated to remove the alkali metal. The metal may be hydrided and combined with the regenerated carbon and reductant to form the initial reaction mixture that is then flowed into the power section to complete a cycle of power production and regeneration. The power-reaction section may be maintained at an elevated temperature to initiate the power reaction. The source of heat to maintain the temperature as well as that to provide heat for any other steps of the cycle such as solvent evaporation may be from the hydrino-forming reaction.

In an embodiment, the reaction conditions such as cell operating temperature is maintained such that the intercalation compound forms and decomposes dynamically wherein power and regeneration reactions are maintained synchronously. In another embodiment, the temperature is cycled to shift the equilibrium between intercalation formation and decomposition to alternately maintain power and regeneration reactions. In another embodiment, the metal and carbon may be regenerated from the intercalation compound electrochemically. In this case, the cell further comprises a cathode and anode and may also comprise a cathode and anode compartment in electrical contact by a suitable salt bridge. Reduced carbon may be oxidized to carbon and hydrogen may be reduced to hydride to regenerate the reactants such as KH and AC from $KC_x$. In an embodiment, the cell comprises a liquid potassium $K_m$ anode and an intercalated graphite cathode. The electrodes may be coupled by an electrolyte and salt bridge. The electrodes may be coupled by a solid potassium-glass electrolyte that may provide the transport of K+ ions from the anode to the cathode. The anode reaction may be

$$K^+ + e^- \text{ to } K_m \qquad\qquad (78)$$

The cathode reaction may involve a stage change such as n-1 to n wherein the higher the stage, the lesser the amount of K intercalated. In the case that the stage changes from 2 to 3, the reaction at the cathode may be

$$3C_{24}K \text{ to } 2C_{36}K + K^+ + e^- \qquad\qquad (79)$$

The overall reaction is then

$$3C_{24}K \text{ to } 2C_{36}K + K_m \qquad\qquad (80)$$

The cell may be operated cyclically or intermittently wherein the power reaction is run following a regeneration or partial regeneration of the reactants. The change of the emf by the injection of current into the system may cause the hydrino reaction to resume.

In an embodiment comprising a catalyst or source of catalyst, hydrogen or a source of hydrogen and at least one of an oxidant, a support, and a reductant wherein the oxidant may comprise a form of carbon such as the reaction mixture KH Mg AC, the oxidation reaction results in a metal intercalation compound that may be regenerated with elevated temperature and vacuum. Alternatively, carbon may be regenerated by using a displacing gas. The pressure may be over the of about range 0.1 to 500 atmospheres. Suitable gases are $H_2$, a noble gas, $N_2$, or $CH_4$ or other volatile hydrocarbon. Preferably, the reduced carbon such as $KC_x$/AC is regenerated to a carbon such as AC without oxidizing or otherwise reacting K to a compound that cannot be thermally converted back to K. After the K has been removed from the carbon by means such as evaporation or sublimation, the displacing gas may be pumped off, K may or may not be hydrided and returned to the cell, and the power reaction may be run again.

The intercalated carbon may be charged to increase the rate of catalysis to form hydrinos. The charging may change the chemical potential of the reactants. A high voltage may be applied by using an electrode in contact with the reactants with a counter electrode not in contact with the reactants. A voltage may be applied, as the reaction is ongoing. The pressure such as the hydrogen pressure may be adjusted to allow for a voltage that charges the reactants while avoiding a glow discharge. The voltage may be DC or RF or any desired frequency or waveform including pulsing with any offset in the range of the maximum voltage, and any voltage maximum, and duty cycle. In an embodiment, the counter electrode is in electrical contact with the reactants such that a current is maintained through the reactants. The counter electrode may be negative biased and the conductive cell grounded. Alternatively, the polarity may be reversed. A second electrode may be introduced such that the reactants are between the electrodes, and a current is flowed between the electrodes through at least one of the reactants.

In an embodiment, the reaction mixture comprises KH, Mg, and activated carbon (AC). In other embodiments the reaction mixture comprises one or more of LiH Mg AC; NaH Mg AC; KH Mg AC; RbH Mg AC; CsH Mg AC; Li Mg AC; Na Mg AC; K Mg AC; Rb Mg AC; and Cs Mg AC. In other exemplary embodiments, the reaction mixture comprises one or more of KH Mg AC $MgF_2$; KH Mg AC $MgCl_2$; KH Mg AC $MgF_2$ + $MgCl_2$; KH Mg AC $SrCl_2$; and KH Mg AC $BaBr_2$. The reaction mixture may comprise an intennetalic such as $Mg_2Ba$ as the reductant or as a support and may further comprise mixtures of oxidants such as mixtures of alkaline earth halides alone such as $MgF_2$ + $MgCl_2$ or with alkali halides such as KF + MgF2 or $KMgF_3$. These reactants may be regenerated thermally from the products of the reaction mixture.

K will not intercalate in carbon at a temperature higher that 527C. In an embodiment, the cell is run at a greater temperature such that K intercalated carbon does not form. In an embodiment, K is added into the reaction cell at this temperature. The cell reactants may further comprise the redundant such as Mg. The $H_2$ pressure may be maintained at a level that will form KH insitu such as in the range of about 5 to 50 atm.

In another embodiment, AC is replaced by another material that reacts with the catalyst or source of catalyst such as K to form the corresponding ionic compound like $MC_x$ (M is an alkali metal comprising $M^+$ and $C_x^-$ ) The material may act as the oxidant. The material may form an intercalation compound with at least one of the catalyst, source of catalyst, and source of hydrogen such as K, Na, NaH and KH. Suitable intercalating materials are hexagonal boron nitride and metal chalcogenides. Suitable chalcogenides are those having a layered structure such as $MoS_2$ and $WS_2$. The layered chalcogenide may be one or more form the list of $TiS_2$, $ZrS_2$, $HfS_2$, TaS2, $TeS_2$, $ReS_2$, $PtS_2$, $SnS_2$, SnSSe,

TiSe$_2$, ZrSe$_2$, HfSe$_2$, VSe$_2$, TaSe$_2$, TeSe$_2$, ReSe$_2$, PtSe$_2$, SnSe$_2$, TiTe$_2$, ZrTe$_2$, VTe$_2$, NbTe$_2$, TaTe$_2$, MoTe$_2$, WTe$_2$, CoTe$_2$, RhTe$_2$, IrTe$_2$, NiTe$_2$, PdTe$_2$, PtTe$_2$, SiTe$_2$, NbS$_2$, TaS$_2$, MoS$_2$, WS$_2$, NbSe$_2$, TaSe$_2$, MoSe$_2$, WSe$_2$, and MoTe$_2$. Other suitable exemplary materials are silicon, doped silicon, silicides, boron, and borides. Suitable borides include those that form double chains and two-dimensional networks like graphite. The two-dimensional network boride that may be conducting may have a formula such as MB$_2$ wherein M is a metal such as at least one of Cr, Ti, Mg, Zr, and Gd (CrB$_2$, TiB$_2$, MgB$_2$, ZrB$_2$, GdB$_2$). The compound formation may be thermally reversible. The reactants may be regenerated thermally by removing the catalyst of source of catalyst.

In an embodiment, the reaction mixture comprising reactants that form an intercalation compound such as a metal graphite, metal hydride graphite, or similar compounds comprising an element other than carbon as the oxidant, is operated at a first power-cycle operating temperature that maximizes the yield of hydrinos. The cell temperature may then be changed to a second value or range that is optimal for regeneration during the regeneration cycle. In the case that the regeneration-cycle temperature is lower than the power-cycle temperature, the temperature may be lowered using a heat exchanger. In the case that the regeneration-cycle temperature is higher than the power-cycle temperature, the temperature may be raised using a heater. The heater may be a resistive heater using electricity produced from the thermal power evolved during the power-cycle. The system may comprise a heat exchanger such as a counter-current system wherein the heat loss is minimized as cooling regenerated reactants heat products to undergo regeneration. Alternatively to resistive heating, the mixture may be heated using a heat pump to reduce the electricity consumed. The heat loss may also be minimized by tranfer from a hotter to cooler object such as a cell using a heat pipe. The reactants may be continuously fed through a hot zone to cause the hydrino reaction and may be further flowed or conveyed to another region, compartment, reactor, or system wherein the regeneration may occur in batch, intermittently, or continuously wherein the regenerating products may be stationary or moving.

In an embodiment, NaOH is a source of NaH in a regenerative cycle. The reaction of *NaOH* and *Na* to *Na$_2$O* and *NaH* is

$$NaOH + 2Na \rightarrow Na_2O + NaH \quad (-44.7 \text{ kJ/mole}) \qquad (81)$$

The exothermic reaction can drive the formation of NaH(g). Thus, NaH decomposition to Na or metal can serve as a reductant to form catalyst NaH(g). In an embodiment, *Na$_2$O* formed as a product of a reaction to generate NaH catalyst such as that given by Eq. (81), is reacted with a source of hydrogen to form NaOH that can further serve as a source of NaH catalyst. In an embodiment, a regenerative reaction of NaOH from Eq. (81) in the presence of atomic hydrogen is

$$Na_2O + 1/2H \rightarrow NaOH + Na \quad \Delta H = -11.6 \; kJ/mole \; NaOH \qquad (82)$$

$$NaH \rightarrow Na + H(1/3) \quad \Delta H = -10,500 \; kJ/mole \; H \qquad (83)$$

and

$$NaH \rightarrow Na + H(1/4) \quad \Delta H = -19,700 \; kJ/mole \; H \qquad (84)$$

Thus, a small amount of *NaOH* and *Na* from a source such as Na metal or NaH with a source of atomic hydrogen or atomic hydrogen serves as a catalytic source of the *NaH* catalyst, that in turn forms a large yield of hydrinos via multiple cycles of regenerative reactions such as those given by Eqs. (81-84). The reaction given by Eq. (82) may be enhanced by the use of a hydrogen dissociator to form atomic H from H$_2$. A suitable dissociator comprises at least one member from the group of noble metals, transition metals, Pt, Pd, Ir, Ni, Ti, and these elements on a support. The reaction mixture may comprise NaH or a source of NaH and NaOH or a source of NaOH and may further comprise at least one of reductant such as an alkaline earth metal such as Mg and a support such as carbon or carbide such as TiC, YC$_2$, TiSiC$_2$, and WC.

In an embodiment, KOH is a source of K and KH in a regenerative cycle. The reaction of *KOH* and *K* to *K$_2$O* and *KH* is

$$KOH + 2K \rightarrow K_2O + KH \quad (+5.4 \text{ kJ/mole}) \qquad (85)$$

During the formation of KH, the hydrino reaction occurs. In an embodiment, $K_2O$ is reacted with a source of hydrogen to form KOH that can further serve as the reactant according to Eq. (85). In an embodiment, a regenerative reaction of KOH from Eq. (85) in the presence of atomic hydrogen is

$$K_2O + 1/2H_2 \rightarrow KOH + K \quad \Delta H = -63.1 \, kJ / mole \, KOH \quad (86)$$

$$KH \rightarrow K + H(1/4) \quad \Delta H = -19,700 \, kJ / mole \, H \quad (87)$$

Thus, a small amount of *KOH* and *K* from a source such as K metal or KH with a source of atomic hydrogen or atomic hydrogen serves as a catalytic source of the *KH* source of catalyst, that in turn forms a large yield of hydrinos via multiple cycles of regenerative reactions such as those given by Eqs. (85-87). The reaction given by Eq. (86) may be enhanced by the use of a hydrogen dissociator to form atomic H from $H_2$. A suitable dissociator comprises at least one member from the group of noble metals, transition metals, Pt, Pd, Ir, Ni, Ti, and these elements on a support. The reaction mixture may comprise KH or a source of KH and KOH or a source of KOH and may further comprise at least one of reductant such as an alkaline earth metal such as Mg and a support such as carbon or carbide such as TiC, $YC_2$, $TiSiC_2$, and WC.

The components of the reaction mixture may be in any molar ratios. A suitable ratio for a reaction mixture comprising a catalyst or source of catalyst and a source of hydrogen such as NaH or KH, a reductant, solvent, or hydride exchange reactant such as an alkaline earth metal such as Mg, and a support is one with the former two in near equimolar ratios and the support in excess. An exemplary suitable ratio of NaH or KH + Mg with a support such as AC is 5%, 5%, and 90%, respectively, wherein each mole % can be varied by a factor of 10 to add up to 100%. In the case that the support is TiC, an exemplary suitable ratio is 20%, 20%, and 60%, respectively, wherein each mole % can be varied by a factor of 10 to add up to 100%. A suitable ratio for a reaction mixture comprising a catalyst or source of catalyst and a source of hydrogen such as NaH or KH, a reductant, solvent, or hydride exchange reactant such as an alkaline earth metal such as Mg, a metal halide comprising an oxidant or halide exchange reactant such as an alkali metal, alkaline earth metal, transition metal, Ag, In, or rare earth metal halide, and a support is one with the former two in near equimolar ratios, the metal halide is equimolar or less abundant, and the support in excess. An exemplary suitable ratio of NaH or KH + Mg + MX or $MX_2$ wherein M is a metal and X is a halide with a support such as AC is 10%, 10%, 2%, and 78%, respectively, wherein each mole % can be varied by a factor of 10 to add up to 100%. In the case that the support is TiC, an exemplary suitable ratio is 25%, 25%, 6% and 44%, respectively, wherein each mole % can be varied by a factor of 10 to add up to 100%.

In an embodiment, the power plant shown in FIGURE 2 comprises a multi-tube reactor wherein the hydrino reaction (power producing catalysis of H to form hydrinos) and regeneration reaction are temporally controlled between the reactors to maintain a desired power output over time. The cells may be heated to initiate the reaction, and the energy from the hydrino-forming reaction may be stored in a thermal mass including that of the cell and transferred under controlled conditions by a heat transfer medium and control system to achieve the desired contribution to the power over time. The regeneration reactions may be performed in the multiple cells in conjunction with the power reactions to maintain continuous operation. The regeneration may be performed thermally wherein the heat may be at least partially or wholly provided from the energy released in forming hydrinos. The regeneration may be performed in a contained unit associated with each tube (reactor) of the multi-tube reactor. In an embodiment, the heat from a power-producing cell may flow to a cell that is undergoing regeneration due to heat gradient. The flow may be through a thermally conductive medium including the coolant wherein the flow is controlled by valves and at least one flow controller and pump.

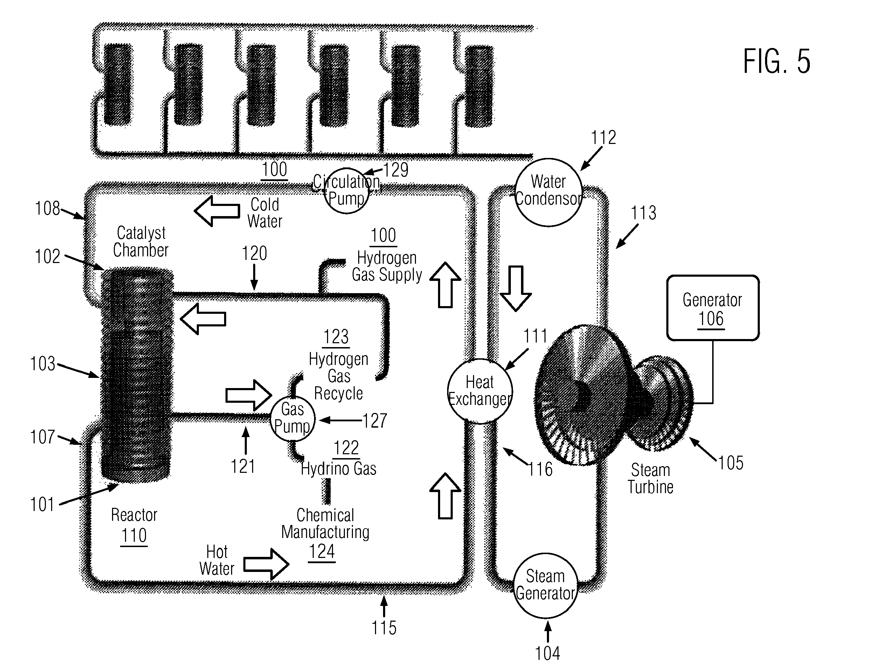

In an embodiment shown in FIGURE 5, the reactor comprises a main reactor 101 for the reactants to produce power by the catalysis of hydrogen to hydrinos and a second chamber 102 in communication with the main reactor. The two-chamber reactor 110 comprises a unit of a multi-unit assembly comprising a multi-tube reactor 100. Each unit further comprises a heat exchanger 103. Each cell may have a heat barrier such as insulation or a gas gap to control the heat transfer. The heat exchanger may be arranged such that the coldest part is at the second chamber at the region farthest from the main reaction chamber. The temperature may progressively increase as the heat exchanger approaches the bottom of the main reaction chamber. The heat exchanger may comprise tubing coiled around the chambers to maintain the temperature gradient along the heat exchanger. The heat exchanger may have a line 107 from the hottest part of the exchanger to a thermal load such as a steam generator 104, steam turbine 105, and generator 106. The line may be close to the bottom of the main reactor as shown in FIGURE 5 and may further be part of a closed primary circulation loop 115. The heat from the multi-tube reactor system may be transferred to the thermal load through a heat exchanger 111 that isolates the heat transfer medium of the power system (primary loop) from the thermal load such as a generator system, 104, 105, and 106. The working fluid such as high-temperature steam in the power conversion system may be received as low-temperature steam from the turbine by circulation line 113 and condensor 112 that may further comprise a heat-rejection heat exchanger. This power circulation system may comprise a secondary loop 116 for the working medium such as steam and water. In an alternative embodiment comprising a single loop heat transfer system, the line 115 connects directly with the steam generator 104, and the return line 108 connects directly with the condensor 112 wherein the circulation in either configuration may be provided by circulation pump 129.

In an embodiment, the chambers are vertical. The coldest part of the heat exchanger having a cold input line 108 may be at the top of the second chamber with a counter current heat exchange wherein the heat transfer medium such as a fluid or gas becomes hotter from the top of the second chamber towards the main chamber where the heat is taken off at about the middle of the main chamber with the line 107 to the thermal load. The chambers may communicate or be isolated by the opening and closing of a chamber separation valve such as a gate valve or sluice valve between the chambers. The reactor 110 may further comprise a gas exhaust 121 that may comprise a vacuum pump 127. The exhaust gas may be separated by a hydrino gas separator 122, and the hydrino gas may be used in chemical manufacturing in system 124. The hydrogen gas may be collected by a hydrogen gas recycler 123 that may return the recycled hydrogen by line 120 with the optional addition of gas hydrogen from supply 125.

In an embodiment using the exemplary reactants of KH and $SrBr_2$, the hydrino power reaction may be run, then the gate valve opened, K moves to the cold top of the second chamber as $SrBr_2$ is formed in the main chamber, the valve is closed, K is hydrided, the valved is opened, KH is dropped back into the main chamber, the valve is closed, and then the reaction hydrino-forming power proceeds with the regenerated $SrBr_2$ and KH. Mg metal may be collected in the second chamber as well. Due to its lower volatility it may be condensed separately from the K and returned to the first chamber separately. In other embodiments, KH may be replaced by another alkali metal or alkali metal hydride and the oxidant $SrBr_2$ may be replaced by another. The reactor is preferably a metal that is capable of high temperature operation and does not form an intermetalic with Sr over the operating temperature range. Suitable reactor materials are stainless steel and nickel. The reactor may comprise Ta or a Ta coating and may further comprise an intermetalic that resists further intermetalic formation such as an intermetalic of Sr and stainless steel or nickel.

The reaction may be controlled by controlling the pressure of an inert gas that may be introduced through the hydrogen gas intake 120 and removed by the gas exhaust 121. The sluice valve may be opened to allow the catalyst such as K to evaporate from the reaction chamber 101 to the chamber 102. The hydrogen may be pumped off using the gas exhaust 121. The catalyst or source of hydrogen such as KH may not be resupplied, or the amount may be controlled to terminate or decrease the power as desired. The reductant such as Mg may be hydrided to decrease the rate by adding $H_2$ through supply 120 and the sluice valve or by directly adding $H_2$ though a separate line. The thermal mass of the reactor 110 may be such that the temperature may not exceed the failure level with the complete reaction of the reactants wherein the cessation regeneration cycle may be maintained.

The hydride such as KH may be added back to hot reaction mixture in a time duration substantially less that its thermal decomposition time in the case that the reactor temperature is greater that the hydride decomposition temperature. LiH is stable to 900 °C and melts at 688.7 °C; thus, it can be added back to the reactor without thermal decomposition at a corresponding regeneration temperature less than the LiH decomposition temperature. Suitable reaction mixtures comprising LiH are LiH Mg TiC $SrCl_2$, LiH Mg TiC $SrBr_2$, and LiH Mg TiC $BaBr_2$. Suitable reaction mixtures comprising LiH are LiH Mg TiC $SrCl_2$, LiH Mg TiC $SrBr_2$, LiH Mg TiC $BaBr_2$, and LiH Mg TiC $BaCl_2$

The heat cells undergoing regeneration may be heated by other cells producing power. The heat transfer between cells during power and regeneration cycles may be by valves controlling a flowing coolant. In an embodiment, the cells may comprise cylinders such as 1 to 4 inch diameter pipes. The cells may be embedded in a thermally conductive medium such as a solid, liquid, or gaseous medium. The medium may be water that may undergo boiling by a mode such as nucleate boiling at the wall of the cells. Alternatively, the medium may be a molten metal or salt or a solid such as copper shot. The cells may be square or rectangular to more effectively transfer heat between them. In an embodiment, the cells that are being regenerated are maintained above the regeneration temperature by heat transfer from the cells in the power-generation cycle. The heat transfer may be via the conductive medium. The cells producing power may produce a higher temperature than that required for regeneration in order to maintain some heat transfer to these cells. A heat load such as a heat exchanger or steam generator may receive heat from the conductive medium. A suitable location is at the periphery. The system may comprise a thermal barrier that maintains the conductive medium at a higher temperature than the heat load. The barrier may comprise insulation or a gas gap. The cells producing power heat those undergoing regeneration in a manner such that statistically the power output approaches a constant level as the number of cells increases. Thus, the power is statistically constant. In an embodiment, the cycle of each cell is controlled to select the cells producing powder to provide the heat for the selected regenerating cells. The cycle may be controlled by controlling the reaction conditions. The opening and closing of the means to allow metal vapor to condense away from the reaction mixture may be controlled to control each cell cycle.

In another embodiment, the heat flow may be passive and may also be active. Multiple cells may be embedded in a thermally conductive medium. The medium may be highly thermally conductive. Suitable media may be a solid such as metal including copper, aluminum, and stainless steel, a liquid such as a molten salt, or a gas such as a noble gas such as helium or argon.

The multi-tube reactor may comprise cells that are horizontally oriented with a dead space along the longitudinal axis of the cell that allows the metal vapor such as an alkali metal to escape during regeneration. The metal may condense in a cool region in contact with the cell interior at a location wherein the temperature may be maintained lower than the cell temperature. A suitable location is at the end of the cell. The cool region may be maintained at a desired temperature by a heat exchanger with a variable heat acceptance rate. The condensing region may comprise a chamber with a valve such as a gate valve that may be closed. The condensed metal such as K may be hydrided, and the hydride may be returned to the reactor by means such as mechanically or pneumatically. The reaction mixture may be agitated by methods known in the art such as mechanical mixing or mechanical agitation including vibration at low frequencies or ultrasonic. The mixing may also be by pneumatic methods such as sparging with a gas such as hydrogen or a noble gas.

In another embodiment of the multi-tube reactor that comprises cells that are horizontally oriented with a dead space along the longitudinal axis of the cell that allows the metal vapor such as an alkali metal to escape during regeneration, a region alone the length of the cell is maintained at a lower temperature than the reaction mixture. The metal may condense along this cool region. The cool region may be maintained at a desired temperature by a heat exchanger with a variable and controlled heat acceptance rate. The heat exchanger may comprise a conduit with flowing coolant or a heat pipe. The temperature of the cool region and the cell may be controlled to desired values based on the flow rate in the conduit or the heat transfer rate of the heat pipe controlled by parameters such as its pressure, temperature, and heat acceptance surface area. The condensed metal such as K or Na may be hydrided due to the presence of hydrogen in the cell. The hydride may be returned to the reactor and mixed with the other reactants by rotating the cell about it longitudinal axis. The rotation may be driven by an electric motor wherein the cells may be synchronized using gearing. To mix reactants, the rotation may be alternately in the clockwise and counterclockwise directions. The cell may be intermittently turned 360°. The rotation may be at a high angular velocity such that minimal change in heat transfer to the heat collector occurs. The fast rotation may be superimposed on a slow constant rotational rate to achieve further mixing of possible residual reactants such as metal hydride. Hydrogen may be supplied to each cell by a hydrogen line or by permeation through the cell wall or a hydrogen permeable membrane wherein hydrogen is supplied to a chamber containing the cell or the cells. The hydrogen may also be supplied by electrolysis of water. The electrolysis cell may comprise a rotating component of the cell such as a cylindrical rotational shaft along the center-line of the reactor cell.

Alternatively, one or more internal wiper blades or stirrer may be swept over the inner surface to mix the formed hydride with the other reactants. Each blade or stirrer may be rotated about a shaft parallel with the longitudinal cell axis. The blade may be driven using magnetic coupling of an internal blade with an external rotating source of magnetic field. The vessel wall such as a stainless steel wall is permeable to magnetic flux. In an embodiment, the rotation rate of the cell or that of the blades or stirrers is controlled to maximize the power output as metal vapor is reacted to form metal hydride and is mixed with the reaction mixture. The reaction cells may be tubular with a circular, elliptic, square, rectangular, triangular or polyhedral cross-section. The heat exchanger may comprise coolant-carrying tubes or conduits that may have a square or rectangular as well as circular, elliptic, triangular or polyhedral cross-section to achieve a desired surface area. An array of square or rectangular tubes may comprise a continuous surface for heat exchange. The surface of each tube or conduit may be modified with fins or other surface-area-increasing materials.

In another embodiment, the reactor comprises multiple zones having different temperatures to selectively condense multiple selected components of or from the product mixture. These components may be regenerated into the initial reactants. In an embodiment, the coldest zone condenses an alkali metal such as that of the catalyst or source of catalyst such as at least one of Na and K. Another zone condenses as second component such as an alkaline earth metal such as magnesium. The temperature of the fist zone may be in the range 0 °C to 500 °C and that of the second zone may be in the range of 10 °C to 490 °C less than that of the first zone. The temperature of each zone may be controlled by a heat exchanger or collector of variable and controllable efficiency.

In another embodiment, the reactor comprises a reaction chamber capable of a vacuum or pressures greater than atmospheric, one or more inlets for materials in at least one of a gaseous, liquid, or solid state, and at least one outlet for materials. One outlet may comprise a vacuum line for pumping of a gas such as hydrogen. The reaction chamber further comprises reactants to form hydrinos. The reactor further comprises a heat exchanger within the reaction chamber. The heat exchanger may comprise conduits for coolant. The conduits may be distributed throughout the reaction chamber to receive heat from the reacting reaction mixture. Each conduit may have an insulating barrier between the reaction mixture and the wall of the conduit. Alternatively, the thermal conductivity of the wall may be such that a temperature gradient exists between the reactants and the coolant during operation. The insulation may be a vacuum gap or gas gap. The conduits may be tubes penetrating the reaction mixture and sealed at the point of penetration with the chamber wall to maintain the pressure integrity of the reaction chamber. The flow rate of the coolant such as water may be controlled to maintain a desired temperature of the reaction chamber and reactants. In another embodiment, the conduits are replaced by heat pipes that remove heat from the reaction mixture and transfer it to a heat sink such as a heat exchanger or boiler.

In an embodiment, the hydrino reactions are maintained and regenerated in a batch mode using thermally-coupled multi-cells arranged in bundles wherein cells in the power-production phase of the cycle heat cells in the regeneration phase. In this intermittent cell power design, the thermal power is statistically constant as the cell number becomes large, or the cells cycle is controlled to achieve steady power. The conversion of thermal power to electrical power may be achieved using a heat engine exploiting a cycle such as a Rankine, Brayton, Stirling, or steam-engine cycle.

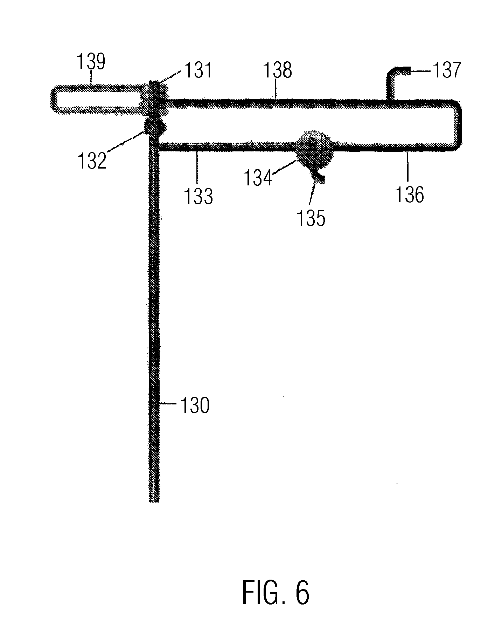

Each cell cycle may be controlled by controlling the reactants and products of the hydrino chemistry. In an embodiment, the chemistry to drive the formation of hydrinos involves a halide-hydride exchange reaction between an alkali hydride catalyst and source of hydrogen and a metal halide oxidant such as an alkaline earth metal or alkali metal halide. The reaction is spontaneous in a closed system. However, the reverse reaction to form the initial alkali hydride and alkaline earth halide is thermally reversible when the system is open such that the alkali metal of the initial hydride is evaporated and removed from the other reactants. The subsequently condensed alkali metal is rehydrided and returned to the system. A cell comprising a reaction chamber 130 and a metal-condensation and re-hydriding chamber 131 separated by a sluice or gate valve 132 that controls the power and regeneration reactions by controlling the flow of evaporating metal vapor, the rehydriding of the metal, and the re-supply of the regenerated alkali hydride is shown in FIGURE 6. A cool zone at a desired temperature may be maintained in the condensation chamber by a heat exchanger 139 such as a water-cooling coil with a variable heat acceptance rate. Thus, the cell shown in Figure 6 comprises two chambers separated by a sluice or gate valve 132. With the reaction chamber 130 closed, the forward reaction is run to form of hydrinos and the alkali halide and alkaline earth hydride products. Then, the valve is opened, and heat from other cells causes the product metals to interchange the halide as the volatile alkali metal is evaporated and condensed in the other catalyst chamber 131 that is cooled by coolant loop 139. The valve is closed, the condensed metal is reacted with hydrogen to form the alkali hydride, and the valve is opened again to re-supply the reactants with the regenerated initial alkali hydride. Hydrogen is recycled with make-up added to replace that consumed to form hydrinos. The hydrogen is pumped from the reaction chamber through the gas exhaust line 133 by pump 134. Hydrino gas is exhausted at line 135. The remaining hydrogen is recycled through line 136 with make-up hydrogen added by line 137 from a hydrogen source and supplied to the catalyst chamber through line 138. A horizontally oriented cell is another design that allows for a greater surface area for the catalyst to evaporate. In this case, the hydride is re-supplied by mechanical mixing rather than just gravity feed. In another embodiment, the cell may be vertically tilted to cause the hydride to drop into the reaction chamber and to be mixed there in.

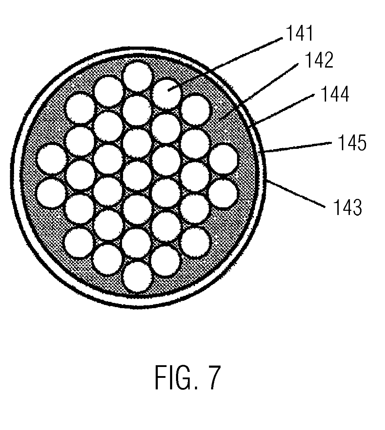

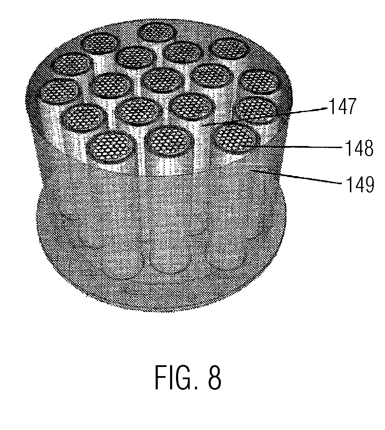

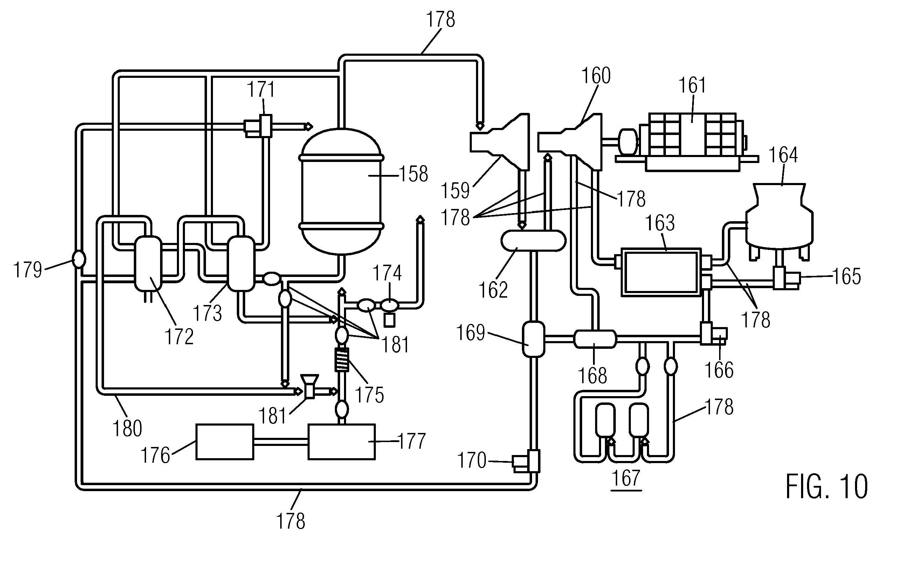

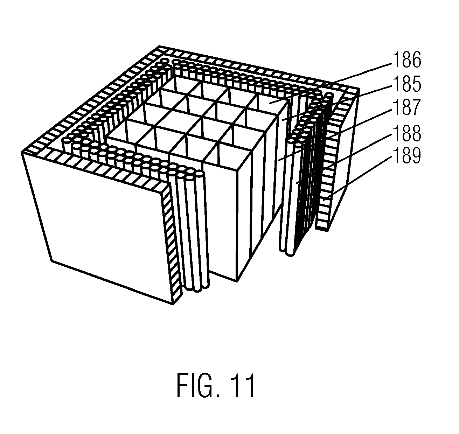

A cell producing power elevates its temperature higher than that required for regeneration. Then, multiple cells 141 of FIGURE 7 and 148 of FIGURE 8 are arranged in bundles 147 arranged in a boiler 149 of FIGURE 8 such that cells being regenerated are maintained above the regeneration temperature such as about 700 °C by heat transfer from the cells in the power-generation cycle. The bundles may be arranged in a boiler box. Referring to FIGURE 7, a heat gradient drives heat transfer between cells 141 of each bundle in different stages of the power-regeneration cycle. To achieve a temperature profile such as one in the range of 750 °C on the highest-temperature power generation side of the gradient to about 700 °C on the lower-temperature regeneration side, the cells are embedded in a highly thermally conductive medium. A high-conductivity material 142 such as copper shot effectively transfers the heat between cells and to the periphery while maintaining a temperature profile in the bundle that achieves the regeneration and maintains the core temperature below that required by material limitations. The heat is ultimately transferred to a coolant such as water that is boiled at the periphery of each bundle comprising a boiler tube 143. A suitable temperature of the boiling water is in the temperature range of range of 250 °C-370 °C. These temperatures are high enough to achieve nucleate boiling, the most effective means of heat transfer to water medium; but are below the ceiling set by the excessive steam pressures at temperatures above this range. In an embodiment, due to the required much higher temperature in each cell bundle, a temperature gradient is maintained between each bundle and the heat load, the boiling water and subsequent systems. In an embodiment, a thermal barrier at the periphery maintains this gradient. Each multi-tube reactor cell bundle is encased in an inner cylindrical annulus or bundle confinement tube 144, and an insulation or vacuum gap 145 exists between the inner and an outer annulus to maintain the temperature gradient. The heat transfer control may occur by changing the gas pressure or by using a gas having a desired thermal conductivity in this gap. The outer wall of the outer annulus 143 is in contact with the water wherein nucleate boiling occurs on this surface to generate steam in a boiler such as one shown in FIGURE 10. A steam turbine may receive the steam from the boiling water, and electricity may be generated with a generator as shown in FIGURE 11.

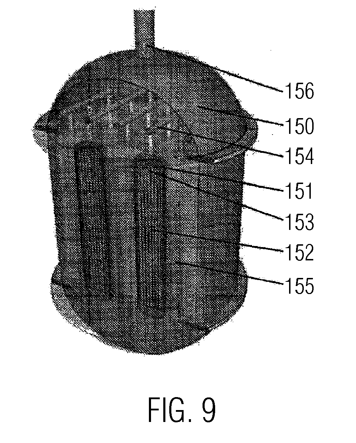

The boiler 150 shown in FIGURE 9 comprises the multi-cell bundles 151, the cell reaction chambers 152, the catalyst chambers 153 to receive and hydride metal vapor, the conduits 154 containing hydrogen gas exhaust and supply lines and catalyst chamber coolant pipes, a coolant 155 such a water, and a steam manifold 156. The power generation system shown in FIGURE 10 comprises a boiler 158, high-pressure turbine 159, low-pressure turbine 160, generator 161, moisture separator 162, condenser 163, cooling tower 164, cooling water pump 165, condensate pump 166, boiler feedwater purification system 167, first stage feedwater heater 168, dearating feedwater tank 169, feedwater pump 170, booster pump 171, product storage and processor 172, reactant storage and processor 173, vacuum system 174, start-up heater 175, electrolyzer 176, hydrogen supply 177, coolant lines 178, coolant valve 179, reactant and product lines 180, and reactant and product line valves 181. Other components and modifications are anticipated in the present disclosure being known to those skilled in the Art.

The cell size, number of cells in each bundle, and the width of the vacuum gap are selected to maintain the desired temperature profile in each bundle, the desired temperature of the boiling water at the periphery of the power flow from the cells, and adequate boiling surface heat flux. Reaction parameters for the design analysis can be obtained experimentally on the various possible hydride-halide exchange reactions and other reactants that result in the formation of hydrinos with significant kinetics and energy gain as well as comprising reactions that can be thermally regenerated as disclosed herein. Exemplary operating parameters for design engineering purposes are 5-10W/cc, 300-400 kJ/mole oxidant, 150 kJ/mole of K transported, 3 to 1 energy gain relative to regeneration chemistry, 50 MJ/mole $H_2$, regeneration temperature of 650 °C-750 °C, cell operation temperature sufficient to maintain regeneration temperature of cells in the corresponding phase of the power-regeneration cycle, regeneration time of 10 minutes, and reaction time of 1 minute.

In an exemplary 1 MW thermal system, the bundle consists of 33 close-packed tubes of 2 meter length, each with 5 cm ID embedded in high thermal conductivity copper shot. Thus, each tube has a working volume slightly less than four liters. Since the power and regeneration phase durations are 1 and 10 minutes, respectively, the choice of 33 tubes (a multiple of the cycle period, 11 min) results in instantaneous power from the bundle that is constant in time. The bundle confinement tube has a 34 cm inner diameter and a 6.4 mm wall thickness. The boiler tube inner diameter and wall thickness are 37.2 cm and 1.27 cm, respectively. Using the typical reaction parameters, each tube in the bundle produces a time-averaged power of about 1.6 kW of thermal power, and each bundle produces about 55 kW of thermal power. The temperature within the bundle ranges between about 782 °C at the center to 664 °C at the surface facing the gap. The heat flux at the surface of the boiler tube is about 22 kW/m$^2$ that maintains the temperature of the boiler tube external surface at 250 °C and is marginally high enough to result in nucleate boiling at the surface. Increasing the power density of the reaction beyond 7 W/cc or reducing the regeneration time increases the boiling flux resulting in greater boiling efficiency. About 18 such bundles should produce an output of 1 MW thermal.

An alternative system design to the boiler shown in FIGURE 9 is shown in FIGURE 11. The system comprises at least one thermally coupled multi-cell bundle and a peripheral water wall as the thermal load of the heat transferred across the gap. The reaction mixture to form hydrinos comprises a high-surface area electrically conductive support and a reductant such as an alkaline earth metal. These materials may also be highly thermally conductive such that they may at least partially substitute for the high-conductivity material of the bundle of FIGURE 9. The chemicals contribute to transferring heat between cells and to the periphery while maintaining an appropriate heat profile and gradient in the array. The steam generated in the tubes of the water wall may flow to a turbine and generator to produce electricity directly, or the water wall may feed steam into a primary steam loop that transfers heat to a secondary steam loop through a heat exchanger. The secondary loop may power a turbine and generator to produce electricity.

The system comprises multiple reactor cell arrays or cell bundles each with a heat collector. As shown in FIGURE 11, the reactor cells 186 may be square or rectangular in order to achieve close contact. The cells may be grouped in a bundle 185 with the heat transfer to the load 188 occurring from the bundle wherein the bundle temperature is maintained at least that required for regeneration. A temperature gradient may be maintained between a bundle and the heat load such as a heat collector or exchanger 188. The heat exchanger may comprise a water wall or set of circumferential tubes having flowing coolant wherein the flow may be maintained by at least one pump and may be encased in insulation 189. The reactor system may comprise a gas gap 187 between a heat collector or exchanger 188 and each multi-tube reactor cell or bundle 185 of multi-tube reactor cells. The heat transfer control may occur by changing the gas pressure or by using a gas having a desired thermal conductivity in the gas gap 187 between the bundle wall 185 and a heat collector or exchanger 188.

The cycle of each cell is controlled to select the cells producing powder to provide the heat for the selected regenerating cells. Alternatively, the cells producing power heat those undergoing regeneration in a random manner such that statistically the power output approaches a constant level as the number of cells increases. Thus, the power is statistically constant.

In another embodiment, the system comprises a gradient of power density increasing from the center out to maintain a desired temperature profile throughout the bundle. In another embodiment, heat is transferred from the cells to a boiler via heat pipes. The heat pipes may be interfaced with a heat exchanger or may be directly in contact with a coolant.

In an embodiment, the hydrino reactions are maintained and regenerated continuously in each cell wherein heat from the power production phase of a thermally reversible cycle provides the energy for regeneration of the initial reactants from the products. Since the reactants undergo both modes simultaneously in each cell, the thermal power output from each cell is constant. The conversion of thermal power to electrical power may be achieved using a heat engine exploiting a cycle such as a Rankine, Brayton, Stirling, or steam-engine cycle.

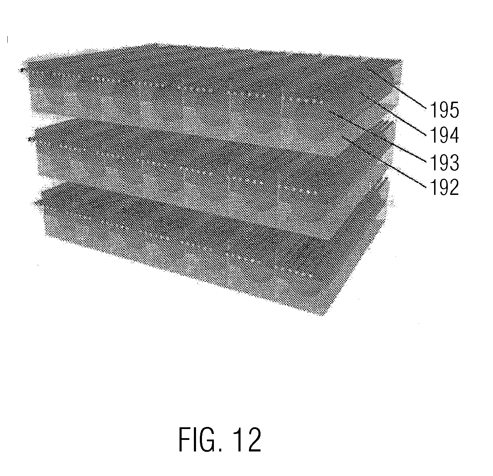

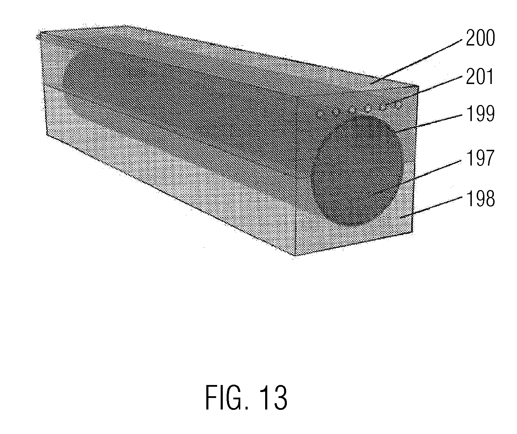

The multi-tube reactor system to continuously generate power shown in FIGURE 12 comprises a plurality of repeating planar layers of insulation 192, reactor cell 193, thermally conductive medium 194, and heat exchanger or collector 195. In an embodiment, each cell is a circular tube, and the heat exchanger is parallel with the cell and constantly accepts heat. FIGURE 13 shows a single unit of the multi-tube reactor system comprising the chemicals 197 comprising at least one of reactants and products, the insulation material 198, the reactor 199, and the thermal conductive material 200 with embedded water tubes 201 that comprise the heat exchanger or collector.

Each cell produces power continuously to elevate its reactant temperature higher than that required for regeneration. In an embodiment, the reaction to form hydrinos is a hydride exchange between an alkali hydride catalyst and source of hydrogen and an alkaline earth metal or lithium metal. The reactants, exchange reactions, products, and regeneration reactions and parameters are disclosed herein. The multi-tube reaction system of FIGURE 12 comprising alternate layers of insulation, reactor cells, and heat exchanger maintains continuous power via a cell heat gradient. The reactant alkali hydride is continuously regenerated by product decomposition and alkali metal evaporation in the elevated-temperature bottom zone maintained by the reaction with condensation and rehydriding in a cooler top zone maintained by the heat collector. A rotating wiper blade rejoins the regenerated alkali hydride with the reaction mixture.

After the condensed metal such as K or Na is hydrided due to the presence of hydrogen in the cell including make-up hydrogen for that consumed to make hydrinos, the hydride is returned to the bottom of the reactor and mixed with the other reactants. One or more internal rotating wiper blades or stirrers may be swept along the inner cell wall to mix the formed hydride with the other reactants. Optionally, rejoining of the alkali hydride with the other reactants and chemical mixing is achieved by rotating the cell about it longitudinal axis. This rotation also transfers heat from the bottom position of the cell to the new top position following rotation; consequently, it provides another means to control the internal cell temperature gradient for alkali metal transport. However, the corresponding heat transfer rate is high requiring a very low rotational rate to maintain the heat gradient. The mixing rotation of the wiper blades or cells may be driven by an electric motor wherein the cells may be synchronized using gearing. The mixing may also be by magnetic induction through the cell wall of low permeability such as one of stainless steel.

In an embodiment, the initial alkali hydride is regenerated by evaporation at 400-550 °C and condensation at a temperature of about 100 °C lower in the presence of hydrogen that reacts to form the alkali hydride. Thus, a heat gradient exists between the reactants at an elevated temperature and a cooler zone in each cell that drives the thermal regeneration. The cells are horizontally oriented with a dead space along the longitudinal axis of the cell that allows the alkali metal vapor to escape from the reactants along the bottom of the cell during continuous regeneration. The metal condenses in the cooler zone along the top of the cell. The cooler region is maintained at the desired condensation temperature by a heat collector comprising boiler tubes with a variable heat acceptance rate at the top of each cell. The heat exchanger comprises a water wall of boiler tubes with flowing water heated to steam. Specifically, saturated water flows through the water tubes, absorbs energy from reactor, and evaporates to form steam. In another exemplary embodiment, the hot reactor zone is in a range of 750 °C $\pm$ 200 °C, and the colder zone is maintained in a range of 50 °C to 300 °C lower in temperature than the hot reactor zone. The reaction mixtures and thermal regeneration reactions may comprise those of the present disclosure. For example, a suitable reaction mixture comprises at least two of an alkali metal or its hydride, a source of hydrogen, a reductant such a an alkaline earth metal such a Mg or Ca, and a support such as TiC, $Ti_3SiC_2$, WC, TiCN, $B_4C$, SiC, and $YC_2$. The reactant may undergo a hydride-halide exchange reaction, and the regeneration reaction may be the thermally driven reverse exchange reaction.

The heat is ultimately transferred to water that is boiled in tubes peripherally to each reactor cell wherein the boiler tubes form a water wall. A suitable temperature of the boiling water is in the temperature range of range of 250 °C-370 °C. These temperatures are high enough to achieve nucleate boiling, the most effective means of heat transfer to water medium; but are below the ceiling set by the excessive steam pressures at temperatures above this range. The nucleate boiling of water occurs on the inner surface of each boiler tube 201 of FIGURE 13 wherein an even temperature distribution in the water wall is maintained due to the tubes being embedded in the highly conductive thermal medium 200 such as copper, and additionally the water that was not evaporated to steam is recirculated. Heat flows from the top cell wall through the medium to the boiler tubes. Due to the required much higher temperatures in each cell even at the lower end of its gradient, a second temperature gradient is maintained between each cell top and the heat load, the boiling water and subsequent systems. Since the boiler tubes have a higher capacity to remove heat than cell has to produce it, a second external thermal gradient is maintained by adding one or more thermal barriers between the top-half of the cell wall and the water wall. The desired high internal cell temperatures as well as the gradient are achieved by insulating at least one of the top-half of the cell and the outer wall of each boiler tube from the conductive medium. The cell temperatures and gradient are controlled to optimal values through the variable heat transfer by adjusting the thermal barriers at the top-half of the cell and the boiler tubes, the thermal conductivity of the medium penetrated by the boiler tubes, and the heat exchanger capacity and the steam flow rate in the tubes. In the former case, the thermal barriers may each comprise a gas or vacuum gap that is variable based on the gas composition and pressure.

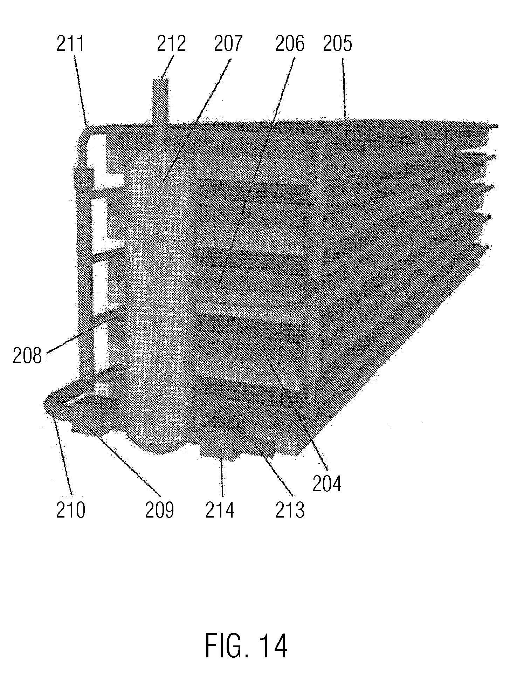

The multi-tube reaction system is assembled into a boiler system shown in FIGURE 14 to output steam. The boiler system comprises the multi-tube reaction system shown in FIGURE 12 and a coolant (saturated water) flow regulating system. The reaction system comprising reactors 204 heats the saturated water and generates steam. The flow regulating system (i) collects the flow of saturated water in steam collection lines 205 and inlet recirculation pipe 206 an inputs the flow to the steam-water separator 207 that separates the steam and water, (ii) recirculates the separated water through the boiler tubes 208 using the recirculation pump 209, the outlet recirculation pipe 210, and water distribution lines 211, and (iii) outputs and channels the steam into a main steam line 212 to the turbine or load and heat exchanger. The pipes and lines may be insulated to prevent thermal losses. Input coolant such as condensed water from the turbine or return water from a thermal load and heat exchanger is input through inlet return water pipe 213, and the pressure is boosted by inlet booster pump 214.

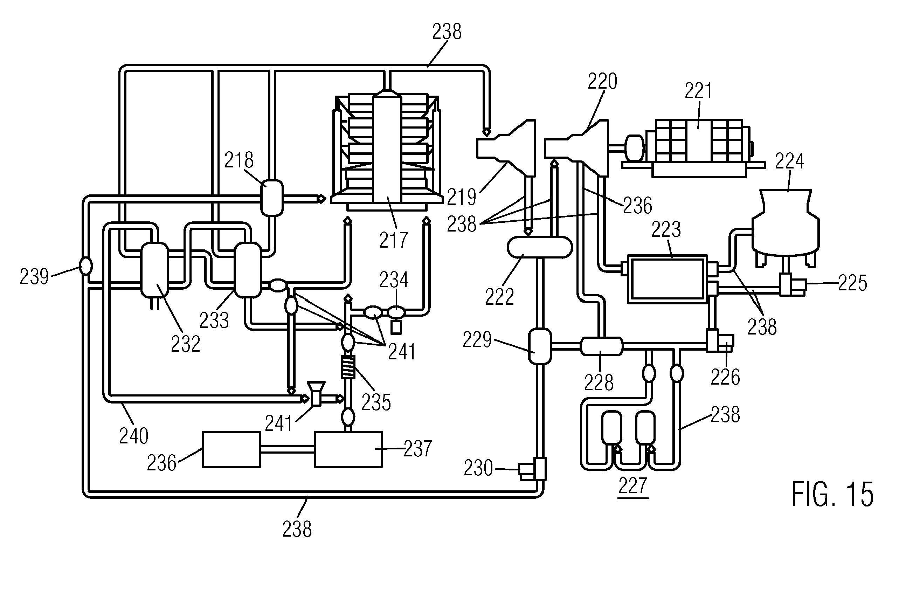

The steam generated in the tubes of the water wall may flow to a turbine and generator to produce electricity directly, or the water wall may feed steam into a primary steam loop that transfers heat to a secondary steam loop through a heat exchanger. The secondary loop may power a turbine and generator to produce electricity. In an embodiment shown in FIGURE 15, steam is generated in the boiler system and output from the steam-water separator to the main steam line. A steam turbine receives the steam from boiling water, and electricity is generated with a generator. The steam is condensed and pumped back to the boiler system. The power generation system shown in FIGURE 15 comprises a boiler 217, heat exchanger 218, high-pressure turbine 219, low-pressure turbine 220, generator 221, moisture separator 222, condenser 223, cooling tower 224, cooling water pump 225, condensate pump 226, boiler feedwater purification system 227, first stage feedwater heater 228, dearating feedwater tank 229, feedwater pump 230, booster pump (214 of FIGURE 14), product storage and processor 232, reactant storage and processor 233, vacuum system 234, start-up heater 235, electrolyzer 236, hydrogen supply 237, coolant lines 238, coolant valve 239, reactant and product lines 240, and reactant and product line valves 241. Other components and modifications are anticipated in the present disclosure being known to those skilled in the Art.

Consider an exemplary 1 MW thermal system. To achieve a cell-bottom temperature in the range of 400-550 °C on the higher-temperature power generation side of the gradient and a temperature of about 100 °C lower at the regeneration side at the top, the cells have a heat collector only at the top as shown in FIGURE 12, the power-producing reactants are located in the bottom, and the bottom section of the cell is insulated. The selected system design parameters are the (1) cell dimensions, (2) number of cells in the system, (3) the thermal resistance of the material surrounding the bottom half of the cell, (4) the thermal barrier at the top-half of the exterior wall of the cell, (5) the thermal conductivity of the medium surrounding the top-half of the cell that is penetrated by the boiler tubes, (6) the thermal barrier at the exterior boiler tube wall, (7) the boiler tube number, dimensions, and spacing, (8) the steam pressure, and (9) the steam flow and recirculation rates. The system design parameters are selected to achieve or maintain the desired operating parameters of (1) temperature and internal and external temperature gradients of each cell, (2) temperature of the boiling water at the periphery of the power flow from the cells, and (3) adequate boiling surface heat flux. Reaction parameters for the design analysis can be obtained experimentally on the various possible hydride exchange reactions that result in the formation of hydrinos with significant kinetics and energy gain as well as comprising reactions that can be thermally regenerated. The power and regeneration chemistries and their parameters are disclosed herein. Typical operating parameters for design engineering purposes are 0.25 W/cc constant power, 0.67 W/g reactants, 0.38 g/cc reactant density, 50 MJ/mole $H_2$, 2 to 1 energy gain relative to hydride regeneration chemistry, equal reaction and regeneration times to maintain constant power output, and temperatures of 550 °C and 400-450 °C for power and regeneration, respectively, wherein the reaction temperature is sufficient to vaporize the alkali metal at the cell bottom, and the internal thermal gradient maintains the regeneration temperature at the cell top. Using the reactants and power densities, the reactant volume and total mass of the reactants to generate 1 MW of continuous thermal power are 3940 liter and 1500 kg, respectively. Using a 0.25% reactant fill factor, the total reactor volume is 15.8 $m^3$.

In the sample design, the boiler comprises 140 stainless steel reaction cells having a 176 cm length, 30.5 cm OD, a 0.635 cm cylindrical wall thickness, and 3.81 cm thick end plates. The wall thickness meets the design requirements for an internal pressure of 330 PSI at 550 °C due to the equilibrium decomposition pressure of the exemplary pressure-determining reactant NaH. Each cell weighs 120 kg and outputs 7.14 kW of thermal power. The bottom half of each tube is embedded in insulation. Copper or aluminum shot, a highly thermally conductive medium, that is penetrated with the water tubes surrounds the top-half of each cell. The temperature within the cell ranges between about 550 °C at the bottom wall to 400 °C at the wall surface facing shot. As shown in FIGURE 13, the 30.5 cm OD cross sectional span of each reactor is covered by six, 2.54 cm OD boiler (water) tubes with a thickness of 0.32 cm that are evenly spaced at 5.08 cm centers. The heat flux at the internal surface of each boiler tube is about 11.8 $kW/m^2$ that maintains the temperature of each boiler tube external surface at about 367 °C.

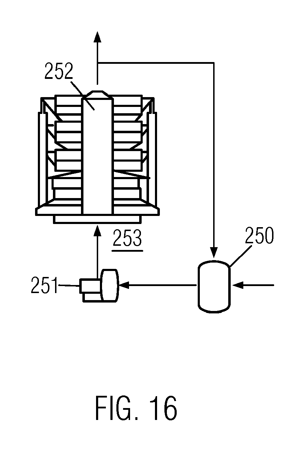

In an exemplary embodiment, the thermal power generated from the reactants is used to generate saturated steam at 360 °C. FIGURE 16 shows the flow diagram of steam generation. Water at room temperature (about 25 °C) flows into a heat exchanger where it is mixed with saturated steam and heated to a saturated temperature of 360 °C by the condensation of steam. A booster pump 251 increases the water pressure to a saturation pressure of 18.66 MPa at 360 °C at the inlet of the steam-water separator 252. The saturated water flows through the boiler tubes of the water wall of the boiler system 253 to generate steam at the same temperature and pressure. Part of steam flows back to heat exchanger to preheat incoming return water from a turbine, while part of it goes to the turbine to generate electrical power. Additionally, the non-evaporated water in the water wall is recirculated to maintain an even temperature along each boiler tube. To achieve this, a steam collection line receives steam and non-evaporated water and deliveries it to a steam-water separator 252. Water is pumped from the bottom section of the separator to return to the boiler tubes through a water distribution line. The steam flows from the top of the separator 252 to the turbine with a fraction diverted to the heat exchanger to preheat the return water from the turbine. The saturated water flow rate from the 140-reactor system is 2.78 kg/s in the boiler tubes, and the total steam output flow rate is 1.39 kg/s.

In an embodiment, the reactants comprise at least two of a catalyst or a source of catalyst and a source of hydrogen such as KH, a support such as carbon, and a reductant such as Mg. The product may be a metal-carbon product such as an intercalation product, $MH_yC_x$ and $MC_x$ (y may be a fraction or an integer, x is an integer) such as $KC_x$. The reactor may comprise one or more supplies of reactants, a reaction chamber maintained at an elevated temperature such that the flowing reactants undergo reaction therein to form hydrinos, a heat exchanger to remove heat from the reaction chamber, and a plurality of vessels to receive the product such as $KC_x$ and regenerate at least one of the reactants. The regeneration of carbon and M or MH from at least one of $MH_yC_x$ and $MC_x$ may by applying heat and vacuum wherein the collected evaporated metal M may be hydrided. In the case that the reductant is a metal, it may be recovered by evaporation as well. Each metal or hydride may be collected in one of the supplies of reactants. One of the supplies of reactants may comprise each vessel used to regenerate the carbon and containing the carbon and optionally the reductant.

The heat for regeneration may be supplied by the power from hydrinos. The heat may be transferred using the heat exchanger. The heat exchanger may comprise at least one heat pipe. The heat from the heated regeneration vessels may be delivered to a power load such as a heat exchanger or boiler. The flow of reactants or products such as those comprising carbon may be performed mechanically or achieved at least partially using gravity. The mechanical transporter may be an auger or a conveyor belt. In the case that the hydrino reaction is much shorter than the regeneration time, the volume of the regeneration vessels may exceed that of the hot reaction-zone. The volumes may be in a proportion to maintain a constant flow through the reaction zone.

In an embodiment, the rate of the evaporation, sublimation, or volatilization of the volatile metal such as an alkali or alkaline earth metal is limited by the surface area of the reactants relative to the vacuum space above them. The rate may be increased by rotating the cell or by other means of mixing to expose fresh surface to the vacuum space. In an embodiment, a reactant such as the reductant such as an alkaline earth metal such as Mg binds the particles of the support together to reduce their surface area. For example, Mg melts at 650 °C and may bind TiC particles together to reduce the surface area; this can be corrected by hydriding the metal such as Mg to $MgH_2$ and then forming a powder by grinding or pulverizing. A suitable method is ball milling. Alternatively, the hydride may be melted and removed as liquid or maintained as a liquid in case that this ameliorates the aggregation of the support particles. A suitable hydride is $MgH_2$ since the melting point is low, 327 °C. In an embodiment, the support has a high surface area. It may be synthesized in a manner to achieve this property. For example, TiC powder may be synthesized using a plasma torch or other plasma system. A volatile titanium compound such a $TiCl_4$ and a volatile carbon compound such a hydrocarbon such as methane may be flowed into the plasma. The particle size may be controlled by controlling the reaction conditions such as pressure, gas flow rate, reactant ratios, and wall temperature. Similarly, WC may be synthesized using a volatile carbon compound such as methane and a volatile tungsten compound such as $WCl_5$ that are flowed into a plasma wherein the reaction to form WC occurs. In both exemplary cases, the fine powder may be collected in a trap in the exist gas stream.

In an embodiment, the reactor comprises a fluidized bed wherein the liquid reactants may comprise a coating on the support. The solid may be separated in a stage following reaction of the reactants to products including hydrinos. The separation may be with a cyclone separator. The separation allows for the condensation of metal vapor to force a reverse reaction for some products back to at least one original reactant. The original reaction mixture is regenerated, preferably thermally.

In an embodiment, an exemplary molten mixture material K/KH Mg $MgX_2$ (X is a halide) comprises a coating on TiC support rather than existing as separate phases. The K further comprises a vapor, and the pressure is preferably high in the power stage. The temperature in the power stage of the reactor is preferably higher than that required for regeneration such as about 600-800 °C. During regeneration of the reactants by a halide exchange reaction at the regeneration temperature or above, the K is condensed and KH is formed. The condensation may be at the temperature of about 100-400 °C wherein $H_2$ may be present to form KH. To permit the K condensation at low temperature and halide exchange reaction at high temperature, the reaction system further comprises a separator that removes the particles from vapor. This permits heated particles in one section or chamber and condensing vapor in another.

In other embodiments, the thermally reversible reaction comprises further exchange reactions, preferable between two species each comprising at least one metal atom. The exchange may be between a metal of the catalyst such as an alkali metal and the metal of the exchange partner such as an oxidant. The exchange may also be between the oxidant and the reductant. The exchanged species may be an anion such as a halide, hydride, oxide, sulfide, nitride, boride, carbide, silicide, arsenide, selenide, telluride, phosphide, nitrate, hydrogen sulfide, carbonate, sulfate, hydrogen sulfate, phosphate, hydrogen phosphate, dihydrogen phosphate, perchlorate, chromate, dichromate, cobalt oxide, and other oxyanions and anions known to those skilled in the art. The at least one of an exchange-partners may be comprise an alkali metal, alkaline earth metal, transition metal, second series transition metal, third series transition metal, noble metal, rare earth metal, Al, Ga, In, Sn, As, Se, and Te. Suitable exchanged anions are halide, oxide, sulfide, nitride, phosphide, and boride. Suitable metals for exchange are alkali, preferably Na or K, alkaline earth metal, preferably Mg or Ba, and a rare earth metal, preferably Eu or Dy, each as the metal or hydride. Exemplary catalyst reactants and with an exemplary exchange reaction are given infra. These reactions are not meant to be exhaustive and further examples would be known to those skilled in the art.

- 4g AC3-3 + 1g Mg + 1.66g KH + 2.5g DyI2, Ein:135.0 kJ, dE: 6.1 kJ, TSC: none, Tmax: 403 °C, theoretical is 1.89 kJ, gain is 3.22 times,

$$DyBr_2 + 2K \rightleftarrows 2KBr + Dy. \tag{88}$$

- 4g AC3-3 + 1g Mg + 1g NaH + 2.09g EuF3, Ein:185.1 kJ, dE: 8.0 kJ, TSC: none, Tmax: 463 °C, theoretical is 1.69 kJ, gain is 4.73 times,

$$EuF_3 + 1.5Mg \rightleftarrows 1.5MgF_2 + Eu \tag{89}$$

$$EuF_3 + 3NaH \rightleftarrows 3NaF + Eu\ H_2. \tag{90}$$

- KH 8.3 gm+ Mg 5.0 gm + CAII-300 20.0gm + $CrB_2$ 3.7gm, Ein:317 kJ, dE: 19 kJ, no TSC with Tmax~340 °C, theoretical energy is endothermic 0.05 kJ, gain is infinite,

$$CrB_2 + Mg \rightleftarrows MgB_2. \tag{91}$$

- 0.70 g of $TiB_2$, 1.66 g of KH, 1 g of Mg powder and 4 g of CA-III 300 activated carbon powder (AC3-4) was finished. The energy gain was 5.1 kJ, but no cell temperature burst was observed. The maximum cell temperature was 431 °C, theoretical is 0.

$$TiB_2 + Mg \rightleftarrows MgB_2. \tag{92}$$

- 0.42 g of LiCl, 1.66 g of KH, 1 g of Mg powder and 4 g of AC3-4 was finished. The energy gain was 5.4 kJ, but no cell temperature burst was observed. The maximum cell temperature was 412 °C, theoretical is 0, the gain is infinity.

$$LiCl + KH \rightleftarrows KCl + LiH. \tag{93}$$

- 1.21 g of RbCl, 1.66 g of KH, 1 g of Mg powder and 4 g of AC3-4, energy gain was 6.0 kJ, but no cell temperature burst was observed. The maximum cell temperature was 442 °C, theoretical is 0.

$$RbCl + KH \rightleftarrows KCl + RbH. \tag{94}$$

- 4g AC3-5 + 1g Mg + 1.66g KH + 0.87g LiBr; Ein: 146.0 kJ; dE: 6.24 kJ; TSC: not observed; Tmax: 439 °C, theoretical is endothermic,

$$LiBr + KH \rightleftarrows KBr + LiH \tag{95}$$

- KH 8.3 gm+ Mg_ 5.0 gm + CAII-300 20.0gm + YF3 7.3 gm; Ein: 320 kJ; dE: 17 kJ; no TSC with Tmax~ 340 °C; Energy Gain ~ 4.5 X (X~0.74kJ * 5=3.7kJ),

$$YF_3 + 1.5Mg + 2KH \rightleftarrows 1.5MgF_2 + YH_2 + 2K. \tag{96}$$

- NaH 5.0 gm+ Mg 5.0 gm + CAII-300 20.0gm + $BaBr_2$ 14.85 gm (Dried); Ein: 328 kJ; dE: 16 kJ; no TSC with Tmax~ 320 °C; Energy Gain 160X (X~0.02kJ*5=0.1 kJ),

$$BaBr_2 + 2NaH \rightleftharpoons 2NaBr + BaH_2. \tag{97}$$

- KH 8.3 gm + Mg 5.0 gm + CAII-300 20.0gm + $BaCl_2$ 10.4 gm; Ein: 331 kJ; dE: 18 kJ No TSC with Tmax~ 320 °C, Energy Gain ~ 6.9X (X~0.52x5=2.6 kJ)

$$BaCl_2 + 2KH \rightleftharpoons 2KCl + BaH_2. \tag{98}$$

- NaH 5.0 gm+ Mg 5.0 gm + CAII-300 20.0gm + MgI2 13.9 gm; Ein: 315 kJ; dE: 16 kJ No TSC with Tmax~ 340 °C. Energy Gain ~ 1.8X (X~1.75x5=8.75 kJ)

$$MgI_2 + 2NaH \rightleftharpoons 2NaI + MgH_2. \tag{99}$$

- 4g AC3-2 + 1g Mg + 1g NaH + 0.97g ZnS; Ein:132.1kJ; dE: 7.5kJ; TSC: none; Tmax: 370 °C, theoretical is 1.4 kJ, gain is 5.33 times,

$$ZnS + 2NaH \rightleftharpoons 2NaHS + Zn \tag{100}$$

$$ZnS + Mg \rightleftharpoons MgS + Zn. \tag{101}$$

- 2.74 g of $Y_2S_3$, 1.66 g of KH, 1 g of Mg powder and 4 g of CA-III 300 activated carbon powder (dried at 300 °C), energy gain was 5.2 kJ, but no cell temperature burst was observed. The maximum cell temperature was 444 °C, theoretical is 0.41 kJ, gain is 12.64 times,

$$Y_2S_3 + 3KH \rightleftharpoons 3KHS + 2Y \tag{102}$$

$$Y_2S_3 + 6KH + 3Mg \rightleftharpoons 3K_2S + 2Y + 3MgH_2 \tag{103}$$

$$Y_2S_3 + 3Mg \rightleftharpoons 3MgS + 2Y. \tag{104}$$

- 4g AC3-5 + 1g Mg + 1.66g KH + 1.82g $Ca_3P_2$; Ein:133.0 kJ; dE: 5.8 kJ; TSC: none; Tmax: 407 °C, the theoretical is endothermic, the gain is infinity.
- 20g AC3-5 + 5g Mg + 8.3g KH + 9.1g Ca3P2, Ein:282.1kJ, dE:18.1kJ, TSC: none, Tmax: 320 °C, theoretical is endothermic, the gain is infinity.

$$Ca_3P_2 + 3Mg \rightleftharpoons Mg_3P_2 + 3Ca. \tag{105}$$

In an embodiment, the thermally regenerative reaction system comprises:

(i) at least one catalyst or a source of catalyst chosen from NaH and KH;
(ii) at least one source of hydrogen chosen from NaH, KH, and $MgH_2$;
(iii) at least one oxidant chosen from an alkaline earth halide such as $BaBr_2$, $BaCl_2$, $BaI_2$, $CaBr_2$, $MgBr_2$, or $MgI_2$, a rare earth halide such as $EuBr_2$, $EuBr_3$, $EuF_3$, $DyI_2$, $LaF_3$, or $GdF_3$, a second or third series transition metal halide such as YF3, a metal boride such as $CrB_2$ or $TiB_2$, an alkali halide such as LiCl, RbCl, or CsI, a metal sulfide such as $Li_2S$, ZnS or $Y_2S_3$, a metal oxide such as $Y_2O_3$, and a metal phosphide, nitride, or arsenide such as an alkaline earth phosphide, nitride, or arsenide such as Ca3P2, $Mg_3N_2$, and $Mg_3As_2$,

(iv) at least one reductant chosen from Mg and MgH$_2$; and

(v) a support chosen from AC, TiC, and WC.

In a further exemplary system capable of thermal regeneration, the exchange is between the catalyst or source of catalyst such as NaH or KH and an alkaline earth halide such as BaBr$_2$ or BaCl$_2$ that may serve as an oxidant. Alkali metals and alkaline earth metals are not miscible in any portion. The melting points of Ba and Mg are 727 °C and 1090 °C, respectively; thus, separation during regeneration can easily be achieved. Furthermore, Mg and Ba do not form an intermetalic with the atomic % of Ba less than about 32% and the temperature maintained below about 600 °C. The heats of formation of BaCl$_2$, MgCl$_2$, BaBr$_2$, and MgBr$_2$ are -855.0 kJ/mole, -641.3 kJ/mole, -757.3 kJ/mole, and -524.3 kJ/mole, respectively; so, the barium halide is much more favored over the magnesium halide. Thus, thermal regeneration can be achieved from a suitable reaction mixture such as KH or NaH Mg TiC and BaCl$_2$ or BaBr$_2$ that forms the alkali halide and alkaline earth hydride. The regeneration can be achieved by heating the products and evaporating the alkali metal such that it is collected by means such as condensation. The catalysts may be rehydrided. In an embodiment, the removal of the alkali metal drives the reaction of the reformation of the alkaline earth halide. In other embodiments, a hydride may be decomposed by heating under vacuum when desirable. Since MgH$_2$ melts at 327 °C, it may be preferentially separated from other products by melting and selectively removing the liquid where desirable.

f. Getter, Support, or Matrix-Assisted Hydrino Reaction

In another embodiment, the exchange reaction is endothermic. In such an embodiment, the metal compound may serve as at least one of a favorable support or matrix for the hydrino reaction or getter for the product to enhance the hydrino reaction rate. Exemplary catalyst reactants and with an exemplary support, matrix, or getter are given infra. These reactions are not meant to be exhaustive and further examples would be known to those skilled in the art.

- 4g AC3-5 + 1g Mg + 1.66g KH + 2.23g Mg$_3$As$_2$, Ein:139.0 kJ, dE: 6.5 kJ, TSC: none, Tmax: 393 °C, the theoretical is endothermic, the gain is infinity.
- 20g AC3-5 + 5g Mg + 8.3g KH + 11.2g Mg$_3$As$_2$, Ein:298.6 kJ, dE:21.8 kJ, TSC: none, Tmax: 315 °C, theoretical is endothermic, the gain is infinity.
- 1.01 g of Mg$_3$N$_2$, 1.66 g of KH, 1 g of Mg powder and 4 g of AC3-4 in a 1" heavy duty cell, energy gain was 5.2 kJ, but no cell temperature burst was observed. The maximum cell temperature was 401 °C, theoretical is 0, the gain is infinity.
- 0.41 g of AlN, 1.66 g of KH, 1 g of Mg powder and 4 g of AC3-5 in a 1" heavy duty cell, energy gain was 4.9 kJ, but no cell temperature burst was observed. The maximum cell temperature was 407 °C, theoretical is endothermic.

In an embodiment, the thermally regenerative reaction system comprises at least two components chosen from (i)-(v):

(i) at least one catalyst or a source of catalyst chosen from NaH, KH, and MgH$_2$;

(ii) at least one source of hydrogen chosen from NaH and KH;

(iii) at least one oxidant, matrix, second support, or getter chosen from a metal arsenide such as Mg$_3$As$_2$ and a metal nitride such as Mg$_3$N$_2$ or AlN;

(iv) at least one reductant chosen from Mg and MgH$_2$; and

(v) at least one support chosen from AC, TiC, or WC.

D. Liquid Fuels: Organic and Molten Solvent Systems

Further embodiments comprise a molten solid such as a molten salt or a liquid solvent contained in chamber 200. The liquid solvent may be vaporized by operating the cell at a temperature above the boiling point of the solvent. The reactants such as the catalyst may be dissolved or suspended in the solvent or reactants that form the catalyst and H may be suspended or dissolved in the solvent. A vaporized solvent may act as a gas with the catalyst to increase the rate of the hydrogen catalyst reaction to form hydrinos. The molten solid or vaporized solvent may be maintained by applying heat with heater 230. The reaction mixture may further comprise a solid support such as a HSA material. The reaction may occur at the surface due to the interaction of a molten solid, a liquid, or a gaseous solvent with the catalyst and hydrogen such as K or Li plus H or NaH. In an embodiment using a heterogeneous catalyst, a solvent of the mixture may increase the catalyst reaction rate.

In embodiments comprising hydrogen gas, the H$_2$ may be bubbled through the solution. In another embodiment, the cell is pressurized to increase the concentration of dissolved H$_2$. In a further embodiment, the reactants are stirred, preferably at high speed and at a temperature that is about the boiling point of the organic solvent and about the melting point of the inorganic solvent.

The organic solvent reaction mixture may be heated, preferably in the temperature range of about 26 °C to 400 °C, more preferably in the range of about 100 °C to 300 °C. The inorganic solvent mixture may be heated to a temperature above that at which the solvent is liquid and below a temperature that causes total decomposition of the NaH molecules.

The solvent may comprise a molten metal. Suitable metals have a low melting point such as Ga, In, and Sn. In another embodiment, the molten metal may serve as the support such as the conductive support. The reaction mixture may comprise at least three of a catalyst or a source of catalyst, hydrogen or a source of hydrogen, a metal, a reductant, and an oxidant. The cell may be operated such that the metal is molten. In an embodiment, the catalyst is selected from NaH or KH which also serves as the source of hydrogen, the reductant is Mg, and the oxidant is one of $EuBr_2$, $BaCl_2$, $BaBr_2$, AlN, $Ca_3P_2$, $Mg_3N_2$, $Mg_3As_2$, $MgI_2$, $CrB_2$, $TiB_2$, an alkali halide, $YF_3$, MgO, $Ni_2Si$, $Y_2S_3$, $Li_2S$, NiB, $GdF_3$, and $Y_2O_3$. In another embodiment, the oxidant is one of $MnI_2$, $SnI_2$, $FeBr_2$, $CoI_2$, $NiBr_2$, AgCl, and InCl.

### a. Organic Solvents

The organic solvent may comprise one or more of the moieties that can be modified to further solvents by addition of functional groups. The moieties may comprise at least one of a hydrocarbon such as an alkane, cyclic alkane, alkene, cyclic alkene, alkyne, aromatic, heterocyclic, and combinations thereof, ether, halogenated hydrocarbon (fluoro, chloro, bromo, iodo hydrocarbon), preferably fluorinated, amine, sulfide, nitrile, phosphoramide (e.g. $OP(N(CH_3)_2)_3)$, and aminophosphazene. The groups may comprise at least one of alkyl, cycloalkyl, alkoxycarbonyl, cyano, carbamoyl, heterocyclic rings containing C, O, N, S, sulfo, sulfamoyl, alkoxysulfonyl, phosphono, hydroxyl, halogen, alkoxy, alkylthiol, acyloxy, aryl, alkenyl, aliphatic, acyl, carboxyl, amino, cyanoalkoxy, diazonium, carboxyalkylcarboxamido, alkenylthio, cyanoalkoxycarbonyl, carbamoylalkoxycarbonyl, alkoxy carbonylamino, cyanoalkylamino, alkoxycarbonylalkylamino, sulfoalkylamino, alkylsulfamoylaklylamino, oxido, hydroxy alkyl, carboxy alkylcarbonyloxy, cyanoalkyl, carboxyalkylthio, arylamino, heteroarylamino, alkoxycarbonyl, alkylcarbonyloxy, cyanoalkoxy, alkoxycarbonylalkoxy, carbamoylalkoxy, carbamoylalkyl carbonyloxy, sulfoalkoxy, nitro, alkoxyaryl, halogenaryl, amino aryl, alkylaminoaryl, tolyl, alkenylaryl, allylaryl, alkenyloxyaryl, allyloxyaryl, cyanoaryl, carbamoylaryl, carboxyaryl, alkoxycarbonylaryl, alkylcarbonyoxyaryl, sulfoaryl, alkoxysulfoaryl, sulfamoylaryl, and nitroaryl. Preferably, the groups comprise at least one of alkyl, cycloalkyl, alkoxy, cyano, heterocyclic rings containing C, O, N, S, sulfo, phosphono, halogen, alkoxy, alkylthiol, aryl, alkenyl, aliphatic, acyl, alkyl amino, alkenylthio, arylamino, heteroarylamino, halogenaryl, amino aryl, alkylaminoaryl, alkenylaryl, allylaryl, alkenyloxyaryl, allyloxyaryl, and cyanoaryl groups.

In an embodiment comprising a liquid solvent, the catalyst NaH is at least one of a component of the reaction mixture and is formed from the reaction mixture. The reaction mixture may further comprise at least one of the group of NaH, Na, $NH_3$, $NaNH_2$, $Na_2NH$, $Na_3N$, $H_2O$, NaOH, NaX (X is an anion, preferably a halide), $NaBH_4$, $NaAlH_4$, Ni, Pt black, Pd black, R-Ni, R-Ni doped with a Na species such as at least one of Na, NaOH, and NaH, a HSA support, getter, a dispersant, a source of hydrogen such as $H_2$, and a hydrogen dissociator. In other embodiments, Li, K, Rb, or Cs replaces Na. In an embodiment, the solvent has a halogen functional group, preferably fluorine. A suitable reaction mixture comprises at least one of hexafluorobenzene and octafluoronaphthalene added to a catalyst such as NaH, and mixed with a support such as activated carbon, a fluoropolymer or R-Ni. In an embodiment, the reaction mixture comprises one or more species from the group of Na, NaH, a solvent, preferably a fluorinated solvent, and a HSA material. A suitable fluorinated solvent for regeneration is $CF_4$. A suitable support or HSA material for a fluorinated solvent with NaH catalysts is NaF. In an embodiment, the reaction mixture comprises at least NaH, $CF_4$, and NaF. Other fluorine-based supports or getters comprise $M_2SiF_6$ wherein M is an alkali metal such as $Na_2SiF_6$ and $K_2SiF_6$, $MSiF_6$ wherein M is an alkaline earth metal such as $MgSiF_6$, $GaF_3$, $PF_5$, $MPF_6$ wherein M is an alkali metal, $MHF_2$ wherein M is an alkali metal such as $NaHF_2$ and $KHF_2$, $K_2TaF_7$, $KBF_4$, $K_2MnF_6$, and $K_2ZrF_6$ wherein other similar compounds are anticipated such as those having another alkali or alkaline earth metal substitution such as one of Li, Na, or K as the alkali metal.

### b. Inorganic Solvents

In another embodiment, the reaction mixture comprises at least one inorganic solvent. The solvent may additionally comprise a molten inorganic compound such as a molten salt. The inorganic solvent may be molten NaOH. In an embodiment, the reaction mixture comprises a catalyst, a source of hydrogen, and an inorganic solvent for the catalyst. The catalyst may be at least one of NaH molecules, Li, and K. The solvent may be at least one of a molten or fused salt or eutectic such as at least one of the molten salts of the group of alkali halides and alkaline earth halides. The inorganic solvent of the NaH catalyst reaction mixture may comprise a low-melting eutectic of a mixture of alkali halides such as NaCl and KCl. The solvent may be a low-melting point salt, preferably a Na salt such as at least one of NaI (660 °C), $NaAlCl_4$ (160 °C), $NaAlF_4$, and compound of the same class as $NaMX_4$ wherein M is a metal and X is a halide having a metal halide that is more stable than NaX. The reaction mixture may further comprise a support such as R-Ni.

The inorganic solvent of the Li catalyst reaction mixture may comprise a low-melting eutectic of a mixture of alkali halides such as LiCl and KCl. The molten salt solvent may comprise a fluorine-based solvent that is stable to NaH. The melting point of $LaF_3$ is 1493 °C and the melting point of NaF is 996 °C. A ball-milled mixture in appropriate ratios, with optionally other fluorides, comprises a fluoride-salt solvent that is stable to NaH and melts preferably in the range of 600 °C-700 °C. In a molten-salt embodiment, the reaction mixture comprises NaH + salt mixture such as NaF-KF-LiF (11.5-42.0-46.5) MP=454 °C or NaH + salt mixture such as LiF-KF (52%-48%) MP=492 °C.

V. Regeneration Systems and Reactions

A schematic drawing of a system for recycling or regenerating the fuel in accordance with the present disclosure is shown in FIGURE 4. In an embodiment, the byproducts of the hydrino reaction comprise a metal halide MX, preferably NaX or KX. Then, the fuel recycler 18 (FIGURE 4) comprises a separator 21 to separate inorganic compounds such as NaX from the support. In an embodiment, the separator or a component thereof comprises a shifter or cyclone separator 22 that performs the separation based on density differences of the species. A further separator or component thereof comprises a magnetic separator 23 wherein magnetic particles such as nickel or iron are pulled out by a magnet while nonmagnetic material such as MX flow through the separator. In another embodiment, the separator or a component thereof comprises a differential product solubilization or suspension system 24 comprising a component solvent wash 25 that dissolves or suspends at least one component to a greater extent than another to permit the separation, and may further comprise a compound recovery system 26 such as a solvent evaporator 27 and compound collector 28. Alternatively, the recovery system comprises a precipitator 29 and a compound dryer and collector 30. In an embodiment, waste heat from the turbine 14 and water condenser 16 shown in FIGURE 4 is used to heat at least one of the evaporator 27 and dryer 30 (FIGURE 4). Heat for any other of the stages of the recycler 18 (FIGURE 4) may comprise the waste heat.
The fuel recycler 18 (FIGURE 4) further comprises an electrolyzer 31 that electrolyzes the recovered MX to metal and halogen gas or other halogenated or halide product. In an embodiment, the electrolysis occurs within the power reactor 36, preferably from a melt such as a eutectic melt. The electrolysis gas and metal products are separately collected at highly volatile gas collector 32 and a metal collector 33 that may further comprise a metal still or separator 34 in the case of a mixture of metals, respectively. If the initial reactant is a hydride, the metal is hydrided by a hydriding reactor 35 comprising a cell 36 capable of pressures less than, greater than, and equal to atmospheric, an inlet and outlet 37 for the metal and hydride, an inlet for hydrogen gas 38 and its valve 39, a hydrogen gas supply 40, a gas outlet 41 and its valve 42, a pump 43, a heater 44, and pressure and temperature gauges 45. In an embodiment, the hydrogen supply 40 comprises an aqueous electrolyzer having a hydrogen and oxygen gas separator. The isolated metal product is at least partially halogenated in a halogenation reactor 46 comprising a cell 47 capable of pressures less than, greater than, and equal to atmospheric, an inlet for the carbon and outlet for the halogenated product 48, an inlet for fluorine gas 49 and its valve 50, a halogen gas supply 51, a gas outlet 52 and its valve 53, a pump 54, a heater 55, and pressure and temperature gauges 56. Preferably, the reactor also contains catalysts and other reactants to cause the metal 57 to become the halide of the desired oxidation state and stoichiometry as the product. The at least two of the metal or metal hydride, metal halide, support, and other initial reactants are recycled to the boiler 10 after being mixed in a mixer 58 for another power-generation cycle.
In exemplary hydrino and regeneration reactions, the reaction mixture comprises NaH catalyst, Mg, $MnI_2$, and support, activated carbon, WC or TiC. In an embodiment, the source of exothermic reaction is the oxidation reaction of metal hydrides by $MnI_2$ such as

$$2KH + MnI_2 \rightarrow 2KI + Mn + H_2 \tag{106}$$

$$Mg + MnI_2 \rightarrow MgI_2 + Mn . \tag{107}$$

KI and $MgI_2$ may be electrolyzed to $I_2$, K, and Mg from a molten salt. The molten electrolysis may be performed using a Downs cell or modified Downs cell. Mn may be separated using a mechanical separator and optionally sieves. Unreacted Mg or $MgH_2$ may be separated by melting and by separation of solid and liquid phases. The iodides for the electrolysis may be from the rinse of the reaction products with a suitable solvent such as deoxygenated water. The solution may be filtered to remove the support such as AC and optionally the transition metal. The solid may be centrifuged and dried, preferably using waste heat from the power system. Alternative, the halides may be separated by melting them followed by separation of the liquid and solid phases. In another embodiment, the lighter AC may initially be separated from the other reaction products by a method such as cyclone separation. K and Mg are immiscible, and the separated metals such as K may be hydrided with $H_2$ gas, preferably from the electrolysis of $H_2O$. The metal iodide may be formed by know reactions with the separated metal or with the metal, unseparated from AC. In an embodiment, Mn is reacted with

HI to form $MnI_2$, and $H_2$ that is recycled and reacted with $I_2$ to form HI. In other embodiments, other metals, preferably a transition metal, replaces Mn. Another reductant such as Al may replace Mg. Another halide, preferably chloride may replace iodide. LiH, KH, RbH, or CsH may replace NaH.

In exemplary hydrino and regeneration reactions, the reaction mixture comprises NaH catalyst, Mg, AgCl, and support, activated carbon. In an embodiment, the source of exothermic reaction is the oxidation reaction of metal hydrides by AgCl such as

$$KH + AgCl \rightarrow KCl + Ag + 1/2H_2 \qquad (108)$$

$$Mg + 2AgCl \rightarrow MgCl_2 + 2Ag . \qquad (109)$$

KCl and $MgCl_2$ may be electrolyzed to $Cl_2$, K, and Mg from a molten salt. The molten electrolysis may be performed using a Downs cell or modified Downs cell. Ag may be separated using a mechanical separator and optionally sieves. Unreacted Mg or $MgH_2$ may be separated by melting and by separation of solid and liquid phases. The chlorides for the electrolysis may be from the rinse of the reaction products with a suitable solvent such as deoxygenated water. The solution may be filtered to remove the support such as AC and optionally the Ag metal. The solid may be centrifuged and dried, preferably using waste heat from the power system. Alternative, the halides may be separated by melting them followed by separation of the liquid and solid phases. In another embodiment, the lighter AC may initially be separated from the other reaction products by a method such as cyclone separation. K and Mg are immiscible, and the separated metals such as K may be hydrided with $H_2$ gas, preferably from the electrolysis of $H_2O$. The metal chloride may be formed by know reactions with the separated metal or with the metal, unseparated from AC. In an embodiment, Ag is reacted with $Cl_2$ to form AgCl, and $H_2$ that is recycled and reacted with $I_2$ to form HI. In other embodiments, other metals, preferably a transition metal or In, replaces Ag. Another reductant such as Al may replace Mg. Another halide, preferably chloride may replace iodide. LiH, KH, RbH, or CsH may replace NaH.

In an embodiment, the reaction mixture is regenerated from hydrino reaction products. In exemplary hydrino and regeneration reactions, the solid fuel reaction mixture comprises KH or NaH catalyst, Mg or $MgH_2$, and alkaline earth halide such as $BaBr_2$, and support, activated carbon, WC, or preferably TiC. In an embodiment, the source of exothermic reaction is the oxidation reaction of metal hydrides or metals by $BaBr_2$ such as

$$2KH + Mg + BaBr_2 \rightarrow 2KBr + Ba + MgH_2 \qquad (110)$$

$$2NaH + Mg + BaBr_2 \rightarrow 2NaBr + Ba + MgH_2 . \qquad (111)$$

The melting points of Ba, magnesium, $MgH_2$, NaBr, and KBr are 727 °C, 650 °C, 327 °C, 747 °C, and 734 °C, respectively. Thus, $MgH_2$ can be separated from barium and any Ba-Mg intermetalic by maintaining the $MgH_2$ with optional addition of $H_2$, preferentially melting the $MgH_2$, and separating the liquid from the reaction-product mixture. Optionally, it may be thermally decomposed to Mg. Next, the remaining reaction products may be added to an electrolysis melt Solid support and Ba precipitates to form preferably separable layers. Alternatively, Ba may be separated as a liquid by melting. Then, NaBr or KBr may be electrolyzed to form the alkali metal and $Br_2$. The latter is reacted with Ba to form $BaBr_2$. Alternatively, Ba is the anode, and $BaBr_2$ forms directly in the anode compartment. The alkali metal may be hydrided following electrolysis or formed in the cathode compartment during electrolysis by bubbling $H_2$ in this compartment. Then, $MgH_2$ or Mg, NaH or KH, $BaBr_2$, and support are retuned to the reaction mixture. In other embodiments, another alkaline earth halide such as $BaI_2$, $MgF_2$, $SrCl_2$, $CaCl_2$, or $CaBr_2$, replaces $BaBr_2$.

In another embodiment, the regeneration reactions may occur without electrolysis due to the small energy difference between the reactants and products. The reactions given by Eqs. (110-111) may be reversed by changing the reactions condition such as temperature or hydrogen pressure. Alternatively, a molten or volatile species such as K or Na may be selectively removed to drive the reaction backwards to regenerate a reactant or a species that can be further reacted and added back to the cell to form the original reaction mixture. In another embodiment, the volatile species may be continually refluxed to maintain the reversible reaction between the catalyst or source of catalyst such as NaH, KH, Na, or K and the initial oxidant such as an alkaline earth halide or rare earth halide. In an embodiment, the reflux is achieved using a still such as still 34 shown in FIGURE 4. The still may comprise a wick or capillary system that forms droplets of the volatile species such as K or other alkali metal. The droplets may fall into the reaction chamber by gravity. The wick or capillary may be similar to that of a molten-metal heat pipe, or the still may comprise a molten metal heat pipe. The heat pipe could return the volatile species such as a metal such as K to the reaction mixture via a wick. In another embodiment, the hydride may be formed and wiped mechanically from a collection surface or structure. The hydride may fall back into the reaction mixture by gravity. The return supplying may be continuously or intermittently. In this embodiment, the cell could be horizontal with a vapor space along the horizontal axis of the cell, and the condensor section may be at the end of the cell. The amount of volatile species such as K may be present in the cell at about equal stoichiometry or less with the metal of the oxidant such that it is limiting to cause the formation of the oxidant in the reverse reaction when the volatile species is in transport in the cell. Hydrogen may be supplied to the cell at a controlled optimal pressure. Hydrogen may be bubbled through the reaction mixture to increase its pressure. The hydrogen may be flowed through the material to maintain a desired hydrogen pressure. The heat may be removed for the condensing section by a heat exchanger. The heat transfer may be by boiling of a coolant such as water. The boiling may be nucleate boiling to increase the heat transfer rate.

In another embodiment comprising a reaction mixture of more than one volatile species such as metals, each species may be evaporate or sublimed to a gaseous state and condensed. Each species may be condensed at a separate region based on differences in vapor pressure with temperature relationships between species. Each species may be further reacted with other reactants such as hydrogen or directly returned to the reaction mixture. The combined reaction mixture may comprise the regenerated initial reaction mixture to form hydrinos. The reaction mixture may comprise at least two species of the group of a catalyst, a source of hydrogen, an oxidant, a reductant, and a support. The support may also comprise the oxidant. Carbon or carbide are such suitable supports. The oxidant may comprise an alkaline earth metal such as Mg, and the catalyst and source of H may comprise KH. K and Mg may be thermally volatilized and condensed as separate bands. K may be hydrided to KH by treatment with $H_2$, and KH may be returned to the reaction mixture. Alternatively, K may be returned and then reacted with hydrogen to form KH. Mg may be directly returned to the reaction mixture. The products may be continuously or intermittently regenerated back onto the initial reactants as power is generated by forming hydrinos. The corresponding H that is consumed is replaced to maintain power output.

In another embodiment, the reaction conditions such as the temperature or hydrogen pressure may be changed to reverse the reaction. In this case, the reaction is initially run in the forward direction to form hydrinos and the reaction mixture products. Then, the products other than lower-energy hydrogen are converted to the initial reactants. This may be performed by changing the reaction conditions and possibly adding or removing at least partially the same or other products or reactant as those initially used or formed. Thus, the forward and regeneration reactions are carried out in alternating cycles. Hydrogen may be added to replace that consumed in the formation of hydrinos. In another embodiment, reaction conditions are maintained such as an elevated temperature wherein the reversible reaction is optimized such that both the forward and reverse reactions occur in a manner that achieves the desired, preferably maximum, rate of hydrino formation.

In exemplary hydrino and regeneration reactions, the solid fuel reaction mixture comprises NaH catalyst, Mg, $FeBr_2$, and support, activated carbon. In an embodiment, the source of exothermic reaction is the oxidation reaction of metal hydrides by $FeBr_2$ such as

$$2NaH + FeBr_2 \rightarrow 2NaBr + Fe + H_2 \qquad (112)$$

$$Mg + FeBr_2 \rightarrow MgBr_2 + Fe. \qquad (113)$$

NaBr and $MgBr_2$ may be electrolyzed to $Br_2$, Na, and Mg from a molten salt. The molten electrolysis may be performed using a Downs cell or modified Downs cell. Fe is ferromagnetic and may be separated magnetically using a mechanical separator and optionally sieves. In another embodiment, ferromagnetic Ni may replace Fe. Unreacted Mg or $MgH_2$ may be separated by melting and by separation of solid and liquid phases. The bromides for the electrolysis may be from the rinse of the reaction products with a suitable solvent such as deoxygenated water. The solution may be filtered to remove the support such as AC and optionally the transition metal. The solid may be centrifuged and dried, preferably using waste heat from the power system. Alternative, the halides may be separated by melting them followed by separation of the liquid and solid phases. In another embodiment, the lighter AC may initially be separated from the other reaction products by a method such as cyclone separation. Na and Mg are immiscible, and the separated metals such as Na may be hydrided with $H_2$ gas, preferably from the electrolysis of $H_2O$. The metal bromide may be formed by know reactions with the separated metal or with the metal, not separated from AC. In an embodiment, Fe is reacted with HBr to form $FeBr_2$, and $H_2$ that is recycled and reacted with $Br_2$ to form HBr. In other embodiments, other metals, preferably a transition metal, replaces Fe. Another reductant such as A1 may replace Mg. Another halide, preferably chloride may replace bromide. LiH, KH, RbH, or CsH may replace NaH.

In exemplary hydrino and regeneration reactions, the solid fuel reaction mixture comprises KH or NaH catalyst,

Mg or MgH2, SnBr$_2$, and support, activated carbon, WC, or TiC. In an embodiment, the source of exothermic reaction is the oxidation reaction of metal hydrides or metals by SnBr$_2$ such as

$$2KH + SnBr_2 \rightarrow 2KBr + Sn + H_2 \tag{114}$$

$$2NaH + SnBr_2 \rightarrow 2NaBr + Sn + H_2 \tag{115}$$

$$Mg + SnBr_2 \rightarrow MgBr_2 + Sn. \tag{116}$$

The melting points of tin, magnesium, MgH$_2$, NaBr, and KBr are 119 °C, 650 °C, 327 °C, 747 °C, and 734 °C, respectively. Tin-magnesium alloy will melt above a temperature such as 400 °C for about 5wt% Mg as given in its alloys phase diagram. In an embodiment, tin and magnesium metals and alloys are separated from the support and halides by melting the metals and alloys and separating the liquid and solid phases. The alloy may be reacted with H$_2$ at a temperature that forms MgH$_2$ solid and tin metal. The solid and liquid phases may be separated to give MgH$_2$ and tin. The MgH$_2$ may be thermally decomposed to Mg and H$_2$. Alternatively, H$_2$ may be added to the reaction products in situ at a temperature selective to convert any unreacted Mg and any Sn-Mg alloy to solid MgH$_2$ and liquid tin. The tin may be selectively removed. Then, MgH$_2$ may be heated and removed as a liquid. Next, halides may be removed from the support by methods such (1) melting them and separation of the phases, (2) cyclone separation based on density differences wherein a dense support such as WC is preferred, or (3) sieving based on size differences. Alternatively, the halides may be dissolved in a suitable solvent, and the liquid and solid phases separated by methods such as filtering. The liquid may be evaporated and then the halides may be electrolyzed from the melt to Na or K and possibly Mg metals that are immiscible and each separated. In another embodiment K is formed by reduction of the halide using Na metal that is regenerated by electrolysis of a sodium halide, preferably the same halide as formed in the hydrino reactor. In addition, halogen gas such as Br$_2$ is collected from the electrolysis melt and reacted with isolated Sn to form SnBr$_2$ that is recycled for another cycle of the hydrino reaction together with NaH or KH, and Mg or MgH$_2$ wherein the hydrides are formed by hydriding with H$_2$ gas. In an embodiment, HBr is formed and reacted with Sn to from SnBr$_2$. HBr may be formed by reaction of Br$_2$ and H$_2$ or during electrolysis by bubbling H$_2$ at the anode that has an advantage of lowering the electrolysis energy. In other embodiment another metal replaces Sn, preferably a transition metal, and another halide may replace Br such as I.

In another embodiment, at the initial step, all of the reaction products are reacted with aqueous HBr, and the solution is concentrated to precipitate SnBr$_2$ from MgBr$_2$ and KBr solution. Other suitable solvents and separation methods may be used to separate the salts. MgBr$_2$ and KBr are then electrolyzed to Mg and K. Alternatively, Mg or MgH$_2$ is first removed using mechanical or by selective solvent methods such that only KBr need be electrolyzed. In an embodiment, Sn is removed as a melt from solid MgH$_2$ that may be formed by adding H$_2$ during or after the hydrino reaction. MgH$_2$ or Mg, KBr, and support are then added to the electrolysis melt. The support settles in a sedimentary zone due to its large particle size. MgH$_2$ and KBr form part of the melt and separate based on density. Mg and K are immiscible, and K also forms a separate phase such that Mg and K are collected separately. The anode may be Sn such that K, Mg, and SnBr$_2$ are the electrolysis products. The anode may be liquid tin or liquid tin may be sparged at the anode to react with bromine and form SnBr2. In this case the energy gap for regeneration is the compound gap versus the higher elemental gap corresponding to elemental products at both electrodes. In a further embodiment, the reactants comprise KH, support, and SnI$_2$ or SnBr$_2$. The Sn may be removed as a liquid, and the remaining products such as KX and support may be added to the electrolysis melt wherein the support separates based on density. In this case, a dense support such as WC is preferred.

The reactants may comprise an oxygen compound to form an oxide product such as an oxide of the catalyst or source of catalyst such as that of NaH, Li, or K and an oxide of the reductant such as that of Mg, MgH$_2$, Al, Ti, B, Zr, or La. In an embodiment, the reactants are regenerated by reacting the oxide with an acid such as a hydrogen halide acid, preferably HCl, to form the corresponding halide such as the chloride. In an embodiment, an oxidized carbon species such as carbonate, hydrogen carbonate, a carboxylic acid species such as oxalic acid or oxalate may be reduced by a metal or a metal hydride. Preferably, at least one of Li, K, Na, LiH, KH, NaH, Al, Mg, and MgH$_2$ reacts with the species comprising carbon and oxygen and forms the corresponding metal oxide or hydroxide and carbon. Each corresponding metal may be regenerated by electrolysis. The electrolysis may be performed using a molten salt such as that of a eutectic mixture. The halogen gas electrolysis product such as chlorine gas may be used to form the corresponding acid such as HCl as part of a regeneration cycle. The hydrogen halide acid HX may be formed by reacting the halogen gas with hydrogen gas and by optionally dissolving the hydrogen halide gas into water. Preferably the hydrogen gas is formed by electrolysis of water. The oxygen may be a reactant of the hydrino reaction mixture or may be reacted to form the source of oxygen of the hydrino reaction mixture. The step of reacting the oxide hydrino reaction product with acid may comprise rinsing the product with acid to form a solution comprising the metal salts. In an embodiment, the hydrino reaction mixture and the corresponding product mixture comprises a support such as carbon, preferably activated carbon. The metal oxides may be separated from the support by dissolving them in aqueous acid. Thus, the product may be rinsed with acid and may further be filtered to separate the components of the reaction mixture. The water may be removed by evaporation using heat, preferably waste heat from the power system, and the salts such as metal chlorides may be added to the electrolysis mixture to form the metals and halogen gas. In an embodiment, any methane or hydrocarbon product may be reformed to hydrogen and optionally carbon or carbon dioxide. Alternatively, the methane was be separated from the gas product mixture and sold as a commercial product. In another embodiment, the methane may be formed into other hydrocarbon products by methods known in the art such as Fischer-Tropsch reactions. The formation of methane may be suppressed by adding an interfering gas such as an inert gas and by maintaining unfavorable conditions such as a reduced hydrogen pressure or temperature.

In another embodiment, metal oxides are directly electrolyzed from a eutectic mixture. Oxides such as MgO may be reacted to water to form hydroxides such as $Mg(OH)_2$. In an embodiment, the hydroxide is reduced. The reductant may be an alkaline metal or hydride such as Na or NaH. The product hydroxide may be electrolyzed directly as a molten salt. Hydrino reaction products such as alkali metal hydroxides may also be used as a commercial product and the corresponding halides acquired. The halides may then be electrolyzed to halogen gas and metal. The halogen gas may be used as a commercial industrial gas. The metal may be hydrided with hydrogen gas, preferably for the electrolysis of water, and supplied to the reactor as a part of the hydrino reaction mixture.

The reductant such as an alkali metal can be regenerated from the product comprising a corresponding compound, preferably NaOH or $Na_2O$, using methods and systems known to those skilled in the art. One method comprises electrolysis in a mixture such as a eutectic mixture. In a further embodiment, the reductant product may comprise at least some oxide such as a reductant metal oxide (e.g. MgO). The hydroxide or oxide may be dissolved in a weak acid such as hydrochloric acid to form the corresponding salt such as NaCl or $MgCl_2$. The treatment with acid may also be an anhydrous reaction. The gases may be streaming at low pressure. The salt may be treated with a product reductant such as an alkali or alkaline earth metal to form the original reductant. In an embodiment, the second reductant is an alkaline earth metal, preferably Ca wherein NaCl or $MgCl_2$ is reduced to Na or Mg metal. The additional product of $CaCl_3$ is recovered and recycled as well. In alternative embodiment, the oxide is reduced with $H_2$ at high temperature.

In exemplary hydrino and regeneration reactions, the reaction mixture comprises NaH catalyst, $MgH_2$, $O_2$, and support, activated carbon. In an embodiment, the source of exothermic reaction is the oxidation reaction of metal hydrides by $O_2$ such as

$$MgH_2 + O_2 \rightarrow Mg(OH)_2 \qquad (117)$$

$$MgH_2 + 1.5O_2 + C \rightarrow MgCO_3 + H_2 \qquad (118)$$

$$NaH + 3/2O_2 + C \rightarrow NaHCO_3 \qquad (119)$$

$$2NaH + O_2 \rightarrow 2NaOH. \qquad (120)$$

Any MgO product may be converted to the hydroxide by reaction with water

$$MgO + H_2O \rightarrow Mg(OH)_2. \qquad (121)$$

Sodium or magnesium carbonate, hydrogen carbonate, and other species comprising carbon and oxygen may be reduced with Na or NaH:

$$NaH + Na_2CO_3 \rightarrow 3NaOH + C + 1/H_2 \qquad (122)$$

$$NaH + 1/3MgCO_3 \rightarrow NaOH + 1/3C + 1/3Mg \qquad (123)$$

$Mg(OH)_2$ can be reduced to Mg using Na or NaH:

$$2Na + Mg(OH)_2 \rightarrow 2NaOH + Mg. \qquad (124)$$

Then, NaOH can be electrolyzed to Na metal and NaH and $O_2$ directly from the melt. The Castner process may be used. A suitable cathode and anode for a basic solution is nickel. The anode may also be carbon, a noble metal such as Pt, a support such as Ti coated with a noble metal such as Pt, or a dimensionally stable anode. In another embodiment, NaOH is converted to NaCl by reaction with HCl wherein the NaCl electrolysis gas $Cl_2$ may be reacted with $H_2$ from the electrolysis of water to form the HCl. The molten NaCl electrolysis may be performed using a Downs cell or modified Downs cell. Alternatively, HCl may be produced by chloralkali electrolysis. The aqueous NaCl for this electrolysis may be from the rinse of the reaction products with aqueous HCl. The solution may be filtered to remove the support such as AC that may be centrifuged and dried, preferably using waste heat from the power system.

In an embodiment, the reaction step comprise, (1) rinse the products with aqueous HCl to form metal chlorides from species such as hydroxides, oxides, and carbonates, (2) convert any evolved $CO_2$ to water and C by $H_2$ reduction using the water gas shift reaction and the Fischer Tropsch reaction wherein the C is recycled as the support at step 10 and the water may be used at steps, 1, 4, or 5, (3) filter and dry the support such as AC wherein the drying may include the step of centrifugation, (4) electrolyze water to $H_2$ and $O_2$ to supply steps 8 to 10, (5) optionally form $H_2$ and HCl from the electrolysis of aqueous NaCl to supply steps 1 and 9, (6) isolate and dry the metal chlorides, (7) electrolyze a melt of the metal chloride to metals and chlorine, (8) form HCl by reaction of $Cl_2$ and $H_2$ to supply step 1, (9) hydride any metal to form the corresponding starting reactant by reaction with hydrogen, and (10) form the initial reaction mixture with the addition of $O_2$ from step 4 or alternatively using $O_2$ isolated from the atmosphere.

In another embodiment, at least one of magnesium oxide and magnesium hydroxide are electrolyzed from a melt to Mg and $O_2$. The melt may be a NaOH melt wherein Na may also be electrolyzed. In an embodiment, carbon oxides such as carbonates and hydrogen carbonates may be decomposed to at least one of CO and $CO_2$ that may be added to the reaction mixture as a source of oxygen. Alternatively, the carbon oxide species such as $CO_2$ and CO may be reduced to carbon and water by hydrogen. $CO_2$ and CO and may be reduced by the water gas shift reaction and the Fischer Tropsch reaction.

In exemplary hydrino and regeneration reactions, the reaction mixture comprises NaH catalyst, $MgH_2$, $CF_4$, and support, activated carbon. In an embodiment, the source of exothermic reaction is the oxidation reaction of metal hydrides by $CF_4$ such as

$$2MgH_2 + CF_4 \rightarrow C + 2MgF_2 + 2H_2 \qquad (125)$$

$$2MgH_2 + CF_4 \rightarrow CH_4 + 2MgF_2 \qquad (126)$$

$$4NaH + CF_4 \rightarrow C + 4NaF + 2H_2 \qquad (127)$$

$$4NaH + CF_4 \rightarrow CH_4 + 4NaF. \qquad (128)$$

NaF and $MgF_2$ may be electrolyzed to $F_2$, Na, and Mg from a molten salt that may additionally comprise HF. Na and Mg are immiscible, and the separated metals may be hydrided with $H_2$ gas, preferably from the electrolysis of $H_2O$. The $F_2$ gas may be reacted with carbon and any $CH_4$ reaction product to regenerate $CF_4$. Alternatively and preferably, the anode of the electrolysis cell comprises carbon, and the current and electrolysis conditions are maintained such that $CF_4$ is the anode electrolysis product.

In exemplary hydrino and regeneration reactions, the reaction mixture comprises NaH catalyst, $MgH_2$, $P_2O_5$ ($P_4O_{10}$), and support, activated carbon. In an embodiment, the source of exothermic reaction is the oxidation reaction of metal hydrides by $P_2O_5$ such as

$$5MgH_2 + P_2O_5 \rightarrow 5MgO + 2P + 5H_2 \qquad (129)$$

$$5NaH + P_2O_5 \rightarrow 5NaOH + 2P . \qquad (130)$$

Phosphorous can be converted to $P_2O_5$ by combustion in $O_2$

$$2P + 2.5O_2 \rightarrow P_2O_5 . \qquad (131)$$

The MgO product may be converted to the hydroxide by reaction with water

$$MgO + H_2O \rightarrow Mg(OH)_2 . \qquad (132)$$

$Mg(OH)_2$ can be reduced to Mg using Na or NaH:

$$2Na + Mg(OH)_2 \rightarrow 2NaOH + Mg . \qquad (133)$$

Then, NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl. In embodiments, metals such as Na and Mg may be converted to the corresponding hydrides by reaction with $H_2$, preferably from the electrolysis of water.

In exemplary hydrino and regeneration reactions, the solid fuel reaction mixture comprises NaH catalyst, $MgH_2$, $NaNO_3$, and support, activated carbon. In an embodiment, the source of exothermic reaction is the oxidation reaction of metal hydrides by $NaNO_3$ such as

$$NaNO_3 + NaH + C \rightarrow Na_2CO_3 + 1/2N_2 + 1/2H_2 \qquad (134)$$

$$NaNO_3 + 1/2H_2 + 2NaH \rightarrow 3NaOH + 1/2N_2 \qquad (135)$$

$$NaNO_3 + 3MgH_2 \rightarrow 3MgO + NaH + 1/2N_2 + 5/2H_2 . \qquad (136)$$

Sodium or magnesium carbonate, hydrogen carbonate, and other species comprising carbon and oxygen may be reduced with Na or NaH:

$$NaH + Na_2CO_3 \rightarrow 3NaOH + C + 1/H_2 \qquad (137)$$

$$NaH + 1/3MgCO_3 \rightarrow NaOH + 1/3C + 1/3Mg . \qquad (138)$$

Carbonates can also be decomposed from aqueous media to the hydroxides and $CO_2$

$$Na_2CO_3 + H_2O \rightarrow 2NaOH + CO_2 . \qquad (139)$$

Evolved $CO_2$ may be reacted to water and C by $H_2$ reduction using the water gas shift reaction and the Fischer Tropsch reaction

$$CO_2 + H_2 \rightarrow CO + H_2O \qquad (140)$$

$$CO + H_2 \rightarrow C + H_2O. \qquad (141)$$

The MgO product may be converted to the hydroxide by reaction with water

$$MgO + H_2O \rightarrow Mg(OH)_2. \qquad (142)$$

$Mg(OH)_2$ can be reduced to Mg using Na or NaH:

$$2Na + Mg(OH)_2 \rightarrow 2NaOH + Mg. \qquad (143)$$

Alkali nitrates can be regenerated using the methods known to those skilled in the art. In an embodiment, $NO_2$, can be generated by known industrial methods such as by the Haber process followed by the Ostwald process. In one embodiment, the exemplary sequence of steps are:

$$N_2 \xrightarrow[\substack{Haber \\ process}]{H_2} NH_3 \xrightarrow[\substack{Ostwald \\ process}]{O_2} NO_2. \qquad (144)$$

Specifically, the Haber process may be used to produce $NH_3$ from $N_2$ and $H_2$ at elevated temperature and pressure using a catalyst such as $\alpha$-iron containing some oxide. The Ostwald process may be used to oxidize the ammonia to $NO_2$, at a catalyst such as a hot platinum or platinum-rhodium catalyst. The heat may be waste heat from the power system. $NO_2$ may be dissolved in water to form nitric acid that is reacted with NaOH, $Na_2CO_3$, or $NaHCO_3$ to form sodium nitrate. Then, the remaining NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl. In embodiments, metals such as Na and Mg may be converted to the corresponding hydrides by reaction with $H_2$, preferably from the electrolysis of water. In other embodiments, Li and K replace Na.

In exemplary hydrino and regeneration reactions, the reaction mixture comprises NaH catalyst, $MgH_2$, $SF_6$, and support, activated carbon. In an embodiment, the source of exothermic reaction is the oxidation reaction of metal hydrides by $SF_6$ such as

$$4MgH_2 + SF_6 \rightarrow 3MgF_2 + 4H_2 + MgS \qquad (145)$$

$$7NaH + SF_6 \rightarrow 6NaF + 3H_2 + NaHS. \qquad (146)$$

NaF and $MgF_2$ and the sulfides may be electrolyzed to Na and Mg from a molten salt that may additionally comprise HF. The fluorine electrolysis gas may react with the sulfides to form $SF_6$ gas that may be removed dynamically. The separation of $SF_6$ from $F_2$ may be by methods known in the art such as cryo-distillation, membrane separation, or chromatography using a medium such as molecular sieves. NaHS melts at 350 °C and may be part of the molten electrolysis mixture. Any MgS product may be reacted with Na to form NaHS wherein the reaction may occur in situ during electrolysis. S and metals may be products formed during electrolysis. Alternatively, the metals may be in minority such that the more stable fluorides are formed, or $F_2$ may be added to form the fluorides.

$$3MgH_2 + SF_6 \rightarrow 3MgF_2 + 3H_2 + S \qquad (147)$$

$$6NaH + SF_6 \rightarrow 6NaF + 3H_2 + S. \qquad (148)$$

NaF and $MgF_2$ may be electrolyzed to $F_2$, Na, and Mg from a molten salt that may additionally comprise HF. Na and Mg are immiscible, and the separated metals may be hydrided with $H_2$ gas, preferably, the make up is from the electrolysis of $H_2O$. The $F_2$ gas may be reacted with sulfur to regenerate $SF_6$.

In exemplary hydrino and regeneration reactions, the reaction mixture comprises NaH catalyst, $MgH_2$, $NF_3$, and support, activated carbon. In an embodiment, the source of exothermic reaction is the oxidation reaction of metal hydrides by $NF_3$ such as

$$3MgH_2 + 2NF_3 \rightarrow 3MgF_2 + 3H_2 + N_2 \tag{149}$$

$$6MgH_2 + 2NF_3 \rightarrow 3MgF_2 + Mg_3N_2 + 6H_2 \tag{150}$$

$$3NaH + NF_3 \rightarrow 3NaF + 1/2N_2 + 1.5H_2. \tag{151}$$

NaF and $MgF_2$ may be electrolyzed to $F_2$, Na, and Mg from a molten salt that may additionally comprise HF. The conversion of $Mg_3N_2$ to $MgF_2$ may occur in the melt. Na and Mg are immiscible, and the separated metals may be hydrided with $H_2$ gas, preferably from the electrolysis of $H_2O$. The $F_2$ gas may be reacted with $NH_3$, preferably in a copper-packed reactor, to form $NF_3$. Ammonia may be created from the Haber process. Alternatively, $NF_3$ may be formed by the electrolysis of $NH_4F$ in anhydrous HF.

In exemplary hydrino and regeneration reactions, the solid fuel reaction mixture comprises NaH catalyst, $MgH_2$, $Na_2S_2O_8$ and support, activated carbon. In an embodiment, the source of exothermic reaction is the oxidation reaction of metal hydrides by $Na_2S_2O_8$ such as

$$8MgH_2 + Na_2S_2O_8 \rightarrow 2MgS + 2NaOH + 6MgO + 6H_2 \tag{152}$$

$$7MgH_2 + Na_2S_2O_8 + C \rightarrow 2MgS + Na_2CO_3 + 5MgO + 7H_2 \tag{153}$$

$$10NaH + Na_2S_2O_8 \rightarrow 2Na_2S + 8NaOH + H_2 \tag{154}$$

$$9NaH + Na_2S_2O_8 + C \rightarrow 2Na_2S + Na_2CO_3 + 5NaOH + 2H_2. \tag{155}$$

Any MgO product may be converted to the hydroxide by reaction with water

$$MgO + H_2O \rightarrow Mg(OH)_2. \tag{156}$$

Sodium or magnesium carbonate, hydrogen carbonate, and other species comprising carbon and oxygen may be reduced with Na or NaH:

$$NaH + Na_2CO_3 \rightarrow 3NaOH + C + 1/H_2 \tag{157}$$

$$NaH + 1/3MgCO_3 \rightarrow NaOH + 1/3C + 1/3Mg. \tag{158}$$

MgS can be combusted in oxygen, hydrolyzed, exchanged with Na to form sodium sulfate, and electrolyzed to $Na_2S_2O_8$

$$2MgS + 10H_2O + 2NaOH \rightarrow Na_2S_2O_8 + 2Mg(OH)_2 + 9H_2. \tag{159}$$

Na$_2$S can be combusted in oxygen, hydrolyzed to sodium sulfate, and electrolyzed to form $Na_2S_2O_8$

$$2Na_2S + 10H_2O \rightarrow Na_2S_2O_8 + 2NaOH + 9H_2 \tag{160}$$

Mg(OH)$_2$ can be reduced to Mg using Na or NaH:

$$2Na + Mg(OH)_2 \rightarrow 2NaOH + Mg. \tag{161}$$

Then, NaOH can be electrolyzed to Na metal and NaH and $O_2$ directly from the melt, or it may be converted to NaCl by reaction with HCl wherein the NaCl electrolysis gas Cl$_2$ may be reacted with H$_2$ from the electrolysis of water to from the HCl.

In exemplary hydrino and regeneration reactions, the solid fuel reaction mixture comprises NaH catalyst, MgH$_2$, S, and support, activated carbon. In an embodiment, the source of exothermic reaction is the oxidation reaction of metal hydrides by S such as

$$MgH_2 + S \rightarrow MgS + H_2 \tag{162}$$

$$2NaH + S \rightarrow Na_2S + H_2. \tag{163}$$

The magnesium sulfide may be converted to the hydroxide by reaction with water

$$MgS + 2H_2O \rightarrow Mg(OH)_2 + H_2S. \tag{164}$$

H$_2$S may be decomposed at elevated temperature or used to covert SO$_2$ to S. Sodium sulfide can be converted to the hydroxide by combustion and hydrolysis

$$\begin{aligned} Na_2S + 1.5O_2 &\rightarrow Na_2O + SO_2 \\ Na_2O + H_2O &\rightarrow 2NaOH \end{aligned} \tag{165}$$

Mg(OH)$_2$ can be reduced to Mg using Na or NaH:

$$2Na + Mg(OH)_2 \rightarrow 2NaOH + Mg. \tag{166}$$

Then, NaOH can be electrolyzed to Na metal and NaH and $O_2$ directly from the melt, or it may be converted to NaCl by reaction with HCl wherein the NaCl electrolysis gas Cl$_2$ may be reacted with H$_2$ from the electrolysis of water to from the HCl. SO$_2$ can be reduced at elevated temperature using H$_2$

$$SO_2 + 2H_2S \rightarrow 3S + 2H_2O. \tag{167}$$

In embodiments, metals such as Na and Mg may be converted to the corresponding hydrides by reaction with H$_2$, preferably from the electrolysis of water. In other embodiments, the S and metal may be regenerated by electrolysis from a melt.

In exemplary hydrino and regeneration reactions, the reaction mixture comprises NaH catalyst, MgH$_2$, N$_2$O, and support, activated carbon. In an embodiment, the source of exothermic reaction is the oxidation reaction of metal hydrides by N$_2$O such as

$$4MgH_2 + N_2O \rightarrow MgO + Mg_3N_2 + 4H_2 \tag{168}$$

$$NaH + 3N_2O + C \rightarrow NaHCO_3 + 3N_2 + 1/2H_2. \tag{169}$$

The MgO product may be converted to the hydroxide by reaction with water

$$MgO + H_2O \rightarrow Mg(OH)_2. \tag{170}$$

Magnesium nitride may also be hydrolyzed to magnesium hydroxide:

$$Mg_3N_2 + 6H_2O \rightarrow 3Mg(OH)_2 + 3H_2 + N_2. \tag{171}$$

Sodium carbonate, hydrogen carbonate, and other species comprising carbon and oxygen may be reduced with Na or NaH:

$$NaH + Na_2CO_3 \rightarrow 3NaOH + C + 1/H_2. \tag{172}$$

$Mg(OH)_2$ can be reduced to Mg using Na or NaH:

$$2Na + Mg(OH)_2 \rightarrow 2NaOH + Mg. \tag{173}$$

Then, NaOH can be electrolyzed to Na metal and NaH and $O_2$ directly from the melt, or it may be converted to NaCl by reaction with HCl wherein the NaCl electrolysis gas $Cl_2$ may be reacted with $H_2$ from the electrolysis of water to from the HCl. Ammonia created from the Haber process is oxidized (Eq. (144)) and the temperature is controlled to favor production of $N_2O$ that is separated from other gasses of the steady state reaction product mixture.

In exemplary hydrino and regeneration reactions, the reaction mixture comprises NaH catalyst, $MgH_2$, $Cl_2$, and support, such as activated carbon, WC or TiC. The reactor may further comprise a source of high-energy light, preferably ultraviolet light to dissociate $Cl_2$ to initiate the hydrino reaction. In an embodiment, the source of exothermic reaction is the oxidation reaction of metal hydrides by $Cl_2$ such as

$$2NaH + Cl_2 \rightarrow 2NaCl + H_2 \tag{174}$$

$$MgH_2 + Cl_2 \rightarrow MgCl_2 + H_2. \tag{175}$$

NaCl and $MgCl_2$ may be electrolyzed to $Cl_2$, Na, and Mg from a molten salt. The molten NaCl electrolysis may be performed using a Downs cell or modified Downs cell. The NaCl for this electrolysis may be from the rinse of the reaction products with aqueous solution. The solution may be filtered to remove the support such as AC that may be centrifuged and dried, preferably using waste heat from the power system. Na and Mg are immiscible, and the separated metals may be hydrided with $H_2$ gas, preferably from the electrolysis of $H_2O$. An exemplary result follows:

- 4g WC + 1g MgH2 + 1g NaH + 0.01mol Cl2 initiated with UV lamp to dissociate $Cl_2$ to Cl, Ein:162.9 kJ, dE:16.0 kJ, TSC: 23-42 °C, Tmax: 85 °C, theoretical is 7.10 kJ, gain is 2.25 times.

The reactants comprising a catalyst or a catalyst source such as NaH, K, or Li or their hydrides, a reductant such as an alkaline metal or hydride, preferably Mg, MgH2, or Al, and an oxidant such as $NF_3$ can be regenerated by electrolysis. Preferably, metal fluoride products are regenerated to metals and fluorine gas by electrolysis. The electrolyte may comprise a eutectic mixture. The mixture may further comprise HF. $NF_3$ may be regenerated by the electrolysis of $NH_4F$ in anhydrous HF. In another embodiment, $NH_3$ is reacted with $F_2$ in a reactor such as a copper-packed reactor. $F_2$ may be generated by electrolysis using a dimensionally stable anode or a carbon anode using conditions that favor $F_2$ production. $SF_6$ may be regenerated by reaction of S with $F_2$. Any metal nitride that may form in the hydrino reaction may be regenerated by at least one of thermal decomposition, $H_2$ reduction, oxidation to the oxide or hydroxide and reaction to the halide followed by electrolysis, and reaction with halogen gas during molten electrolysis of a metal halide.

$NCl_3$ can be formed by reaction of ammonia and chlorine gas or by reaction of ammonium salts such as $NH_4Cl$ with chlorine gas. The chlorine gas may be from the electrolysis of chloride salts such as those from the product reaction mixture. The $NH_3$ may be formed using the Haber process wherein the hydrogen may be from electrolysis, preferably of water. In an embodiment, $NCl_3$ is formed in situ in the reactor by the reaction of at least one of $NH_3$ and an ammonium salt such as $NH_4Cl$ with $Cl_2$ gas. In an embodiment, $BiF_5$ can be regenerated by reaction of $BiF_3$ with $F_2$ formed from electrolysis of metal fluorides.

In an embodiment wherein the a source of oxygen or halogen optionally serves as a reactant of an exothermic activation reaction, an oxide or halide product is preferably regenerated by electrolysis. The electrolyte may comprise a eutectic mixture such as a mixture of $Al_2O_3$ and $Na_3AlF_6$; $MgF_2$, NaF, and HF; $Na_3AlF_6$; NaF, $SiF_4$, and HF; and $AlF_3$, NaF, and HF. The electrolysis of $SiF_4$ to Si and $F_2$ may be from a alkali fluoride eutectic mixture. Since Mg and Na have low miscibility, they can be separated in phases of the melts. Since Al and Na have low miscibility, they can be separated in phases of the melts. In another embodiment, the electrolysis products can be separated by distillation. In further embodiment, $Ti_2O_3$ is regenerated by reaction with C and $Cl_2$ to form CO and $TiCl_4$ that is further reacted with Mg to form Ti and $MgCl_2$. Mg and $Cl_2$ may be regenerated by electrolysis. In the case that MgO is the product, Mg can be regenerated by the Pidgeon process. In an embodiment, MgO is reacted with Si to form $SiO_2$ and Mg gas that is condensed. The product $SiO_2$ may be regenerated to Si by $H_2$ reduction at high temperature or by reaction with carbon to form Si and CO and $CO_2$. In another embodiment, Si is regenerated by electrolysis using a method such as the electrolysis of solid oxides in molten calcium chloride. In an embodiment, chlorate or perchlorate such as an alkali chlorate or perchlorate is regenerated by electrolytic oxidation. Brine may be electrolytically oxidized to chlorate and perchlorate.

To regenerate the reactants, any oxide coating on a metal support that may be formed may be removed by dilute acid following separation from the reactant or product mixture. In another embodiment, the carbide is generated from the oxide by reaction with carbon with release of carbon monoxide or dioxide.

In the case that the reaction mixture comprises a solvent, the solvent may be separated from other reactants or products to be regenerated by removing the solvent using evaporation or by filtration or centrifugation with retention of the solids. In the case that other volatile components such as alkali metals are present, they may be selectively removed by heating to a suitably elevated temperature such that they are evaporated. For example, a metal such that Na metal is collected by distillation and a support such as carbon remains. The Na may be rehydrided to NaH and returned to the carbon with solvent added to regenerate the reaction mixture. Isolated solids such as R-Ni may be regenerated separately as well. The separated R-Ni may be hydrided by exposure to hydrogen gas at a pressure in the range of 0.1 to 300 atm.

The solvent may be regenerated in the case that it decomposes during the catalyst reaction to form hydrinos. For example, the decomposition products of DMF may be dimethylamine, carbon monoxide, formic acid, sodium formate, and formaldhyde. In an embodiment, dimethyl formamide is produced either with catalyzed reaction of dimethyl amine and carbon monoxide in methanol or the reaction of methyl formate with dimethyl amine. It may also be prepared by reacting dimethylamine with formic acid.

In an embodiment, an exemplary ether solvent may be regenerated from the products of the reaction mixture. Preferably, the reaction mixture and conditions are chosen such that reaction rate of ether is minimized relative to the rate to form hydrinos such that any ether degradation is insignificant relative to the energy produced from the hydrino reaction. Thus, ether may be added back as needed with the ether degradation product removed. Alternatively, the ether and reaction conditions may be chosen such that the ether reaction product may be isolated and the ether regenerated.

An embodiment comprises at least one of the following: the HSA is a fluoride, the HSA is a metal, and the solvent is fluorinated. A metal fluoride may be a reaction product. The metal and fluorine gas may be generated by electrolysis. The electrolyte may comprise the fluoride such as NaF, $MgF_2$, $AlF_3$, or $LaF_3$ and may additionally comprise at least one other species such as HF and other salts that lowers the melting point of the fluoride, such as those disclosed in U.S. Pat. No. 5,427,657. Excess HF may dissolve $LaF_3$. The electrodes may be carbon such as graphite and may also form fluorocarbons as desired degradation products. In an embodiment, at least one of the metal or alloy, preferably nanopowder, coated with carbon such as carbon-coated Co, Ni, Fe, other transition metal powders, or alloys, and the metal-coated carbon, preferably nanopowder, such as carbon coated with a transition metal or alloy, preferably at least one of Ni, Co, Fe, and Mn coated carbon, comprise particles that are magnetic. The magnetic particles may be separated from a mixture such as a mixture of a fluoride such as NaF and carbon by using a magnet. The collected particles may be recycled as part of the reaction mixture to form hydrinos.

In an embodiment, the catalyst or source of catalyst such as NaH and the fluorinated solvent is regenerated from the products comprising *NaF* by separation of the products followed by electrolysis. The method of isolation of *NaF* may be rinsing the mixture with a polar solvent with a low boiling point followed by one or more of filtration and evaporation to give *NaF* solid. The electrolysis may be molten-salt electrolysis. The molten salt may be a mixture such as eutectic mixture. Preferably, the mixture comprises *NaF* and *HF* as known in the art. Sodium metal and fluorine gas may be collected from the electrolysis. Na may be reacted with H to form NaH. Fluorine gas may be reacted with a hydrocarbon to form a fluorinated hydrocarbon that may serve as the solvent. HF fluorination product can be returned to the electrolysis mixture. Alternatively, a hydrocarbon and a carbon product such as benzene and graphitic carbon, respectively, can be fluorinated and returned to the reaction mixture. Carbon can be cracked to smaller fluorinated fragments with a lower melting point to serve as the solvent by methods known in the art. The solvent may comprise a mixture. The degree of fluorination can be used as a method to control the hydrogen catalysis reaction rate. In an embodiment, $CF_4$ is produced by electrolysis of a molten fluoride salt, preferably an alkali fluoride, using a carbon electrode or by reaction of carbon dioxide with fluorine gas. Any $CH_4$ and hydrocarbons products may also be fluorinated to $CF_4$ and fluorcarbons.

Suitable fluorinated HSA materials and methods to fluorinated carbon to form said HSA materials may those known in the art such as those disclosed in U.S. Pat. No. 3,929,920, U.S. Pat. No. 3,925,492, U.S. Pat. No. 3,925,263, and U.S. Pat. No. 4,886,921. Further methods comprise the preparation of poly-dicarbon mono fluoride as disclosed in U.S. Pat. No. 4,139,474, a process for the continuous fluorination of carbon as disclosed in U.S. Pat. No. 4,447,663, a process for producing a graphite fluoride comprising mainly polydicarbon monofluoride represented by the formula $(C_2F)_n$ as disclosed in U.S. Pat. No. 4,423,261, a process for preparing polycarbonmonofluoride as disclosed in U.S. Pat. No. 3,925,263, a process for the preparation of graphite fluoride as disclosed in U.S. Pat. No. 3,872,032, a process for preparing poly-dicarbon monofluoride as disclosed in U.S. Pat. No. 4,243,615, a method for the preparation of graphite fluoride by contact reaction between carbon and fluorine gas as disclosed in U.S. Pat. No. 4,438,086, the synthesis of fluorographite as disclosed in U.S. Pat. No. 3,929,918 , the process for preparing polycarbonmonofluoride as disclosed in U.S. Pat. No. 3,925,492, and a mechanism for providing new synthetic approaches to graphite-fluorine chemistry as disclosed by Lagow et al., J. C. S. Dalton, 1268 (1974) wherein the materials disclosed therein comprise the HSA materials. As a kind of material of reactors, Monel metal, nickel, steel, or copper may be employed in consideration of the corrosion by fluorine gas. The carbon materials include amorphous carbons such as carbon black, petroleum coke, petroleum pitch coke and charcoal, and crystalline carbons such as natural graphite, graphene, and artificial graphite, fullerene and nanotubes, preferably single-walled. Preferably Na does not intercalate into the carbon support or form an acetylide. Such carbon materials can be employed in various forms. In general preferably, the powdery carbon materials have an average particle size of not more than 50 microns, but greater is suitable as well. In addition to the powdery carbon materials, other forms are suitable. The carbon materials may be in the form of blocks, spheres, bars and fibers. The reaction may be performed in a reactor chosen from a fluidized bed-type reactor, a rotary kiln-type reactor and a tray tower-type reactor.

In another embodiment, the fluorinated carbon is regenerated using an additive. Carbon can also be fluorinated by inorganic reactants such as $CoF_3$ outside of the cell or in situ. The reaction mixture may further comprise a source of inorganic fluorinating reactant such as one of Co, CoF, $CoF_2$, and $CoF_3$ that may be added to the reactor and regenerated or it may be formed during the operation of the cell from the reactant mixture to form hydrinos and possibly another reagent such as $F_2$ gas with optionally a fluorination catalytic metal such as Pt or Pd. The additive may be $NH_3$ that may form $NH_4F$. At least one of carbon and hydrocarbon may react with $NH_4F$ to become fluorinated. In an embodiment, the reaction mixture further comprises HNaF2 that may react with carbon to fluorinate it. The fluorocarbon may be formed in situ or externally to the hydrino reactor. The fluorocarbon may serve as a solvent or HSA material.

In an embodiment wherein at least one of the solvent, support, or getter comprises fluorine, products comprise possibly carbon, in cases such that the solvent or support is a fluorinated organic, as well as fluorides of the catalyst metal such as $NaHF_2$, and NaF. This is in addition to lower-energy hydrogen products such as molecular hydrino gas that may be vented or collected. Using $F_2$, the carbon may be etched away as $CF_4$ gas that may be used as a reactant in another cycle of the reaction to make power. The remaining products of NaF and $NaHF_2$ may be electrolyzed to Na and $F_2$. The Na may be reacted with hydrogen to form NaH and the $F_2$ may be used to etch carbon product. The NaH, remaining NaF, and $CF_4$ may be combined to run another cycle of the power-production reaction to form hydrinos. In other embodiments, Li, K, Rb, or Cs may replace Na.

## VI. Other Liquid and Heterogeneous Fuel Embodiments

In the present disclosure a "liquid-solvent embodiment" comprises any reaction mixture and the corresponding fuel comprising a liquid solvent such as a liquid fuel and a heterogeneous fuel.

In another embodiment comprising a liquid solvent, one of atomic sodium and molecular NaH is provided by a reaction between a metallic, ionic, or molecular form of Na and at least one other compound or element. The source of Na or NaH may be at least one of metallic Na, an inorganic compound comprising Na such as NaOH, and other suitable Na compounds such as $NaNH_2$, $Na_2CO_3$, and $Na_2O$ NaX (X is a halide), and NaH(s). The other element may be H, a displacing agent, or a reducing agent. The reaction mixture may comprise at least one of (1) a solvent, (2) a source of sodium such as at least one of Na(m), NaH, $NaNH_2$, $Na_2CO_3$, $Na_2O$, NaOH, NaOH doped-R-Ni, NaX (X is a halide), and NaX doped R-Ni, (3) a source of hydrogen such as $H_2$ gas and a dissociator and a hydride, (4) a displacing agent such as an alkali or alkaline earth metal, preferably Li, and (5) a reducing agent such as at least one of a metal such as an alkaline metal, alkaline earth metal, a lanthanide, a transition metal such as Ti, aluminum, B, a metal alloy such as AlHg, NaPb, NaAl, LiAl, and a source of a metal alone or in combination with reducing agent such as an alkaline earth halide, a transition metal halide, a lanthanide halide, and aluminum halide. Preferably, the alkali metal reductant is Na. Other suitable reductants comprise metal hydrides such as $LiBH_4$, $NaBH_4$, $LiAlH_4$, $NaAlH_4$, $RbBH_4$, $CsBH_4$, $Mg(BH_4)_2$, or $Ca(BH_4)_2$. Preferably, the reducing agent reacts with NaOH to form a NaH molecules and a Na product such as Na, NaH(s), and $Na_2O$. The source of NaH may be R-Ni comprising NaOH and a reactant such as a reductant to form NaH catalyst such as an alkali or alkaline earth metal or the Al intermetallic of R-Ni. Further exemplary reagents are an alkaline or alkaline earth metal and an oxidant such as $AlX_3$, $MgN_2$, $LaX_3$, $CeX_3$, and $TiX_n$ where X is a halide, preferably Br or I. Additionally, the reaction mixture may comprise another compound comprising a getter or a dispersant such as at least one of $Na_2CO_3$, $Na_3SO_4$, and $Na_3PO_4$ that may be doped into the dissociator such as R-Ni. The reaction mixture may further comprise a support wherein the support may be doped with at least one reactant of the mixture. The support may have preferably a large surface area that favors the production of NaH catalyst from the reaction mixture. The support may comprise at least one of the group of R-Ni, Al, Sn, $Al_2O_3$ such as gamma, beta, or alpha alumina, sodium aluminate (beta-aluminas have other ions present such as $Na^+$ and possess the idealized composition $Na_2O \cdot 11Al_2O_3$), lanthanide oxides such as $M_2O_3$ (preferably M= La, Sm, Dy, Pr, Tb, Gd, and Er), Si, silica, silicates, zeolites, lanthanides, transition metals, metal alloys such as alkali and alkali earth alloys with Na, rare earth metals, $SiO_2$-$Al_2O_3$ or $SiO_2$ supported Ni, and other supported metals such as at least one of alumina supported platinum, palladium, or ruthenium. The support may have a high surface area and comprise a high-surface-area (HSA) materials such as R-Ni, zeolites, silicates, aluminates, aluminas, alumina nanoparticles, porous $Al_2O_3$, Pt, Ru, or $Pd/Al_2O_3$, carbon, Pt or Pd/C, inorganic compounds such as $Na_2CO_3$, silica and zeolite materials, preferably Y zeolite powder, and carbon such as fullerene or nanotubes. In an embodiment, the support such as $Al_2O_3$ (and the $Al_2O_3$ support of the dissociator if present) reacts with the reductant such as a lanthanide to form a surface-modified support. In an embodiment, the surface Al exchanges with the lanthanide to form a lanthanide-substituted support. This support may be doped with a source of NaH molecules such as NaOH and reacted with a reductant such as a lanthanide. The subsequent reaction of the lanthanide-substituted support with the lanthanide will not significantly change it, and the doped NaOH on the surface can be reduced to NaH catalyst by reaction with the reductant lanthanide. In other embodiments given herein, Li, K, Rb, or Cs may replace Na.

In an embodiment comprising a liquid solvent, wherein the reaction mixture comprises a source of NaH catalyst, the source of NaH may be an alloy of Na and a source of hydrogen. The alloy may comprise at least one of those known in the art such as an alloy of sodium metal and one or more other alkaline or alkaline earth metals, transition metals, Al, Sn, Bi, Ag, In, Pb, Hg, Si, Zr, B, Pt, Pd, or other metals and the H source may be $H_2$ or a hydride.

The reagents such as the source of NaH molecules, the source of sodium, the source of NaH, the source of hydrogen, the displacing agent, and the reducing agent are in any desired molar ratio. Each is in a molar ratio of greater than 0 and less than 100%. Preferably, the molar ratios are similar.

In a liquid-solvent embodiment, the reaction mixture comprises at least one species of the group comprising a solvent, Na or a source of Na, NaH or a source of NaH, a metal hydride or source of a metal hydride, a reactant or source of a reactant to form a metal hydride, a hydrogen dissociator, and a source of hydrogen. The reaction mixture may further comprise a support. A reactant to form a metal hydride may comprise a lanthanide, preferably La or Gd. In an embodiment, La may reversibly react with NaH to form $LaH_n$ (n=1,2,3). In an embodiment, the hydride exchange reaction forms NaH catalyst. The reversible general reaction may be given by

$$NaH + M \rightleftarrows Na + MH \qquad (176)$$

The reaction given by Eq. (176) applies to other *MH*-type catalysts given in TABLE 2. The reaction may proceed with the formation of hydrogen that may be dissociated to form atomic hydrogen that reacts with Na to form NaH catalyst. The dissociator is preferably at least one of Pt, Pd, or $Ru/Al_2O_3$ powder, Pt/Ti, and R-Ni. Preferentially, the dissociator support such as $Al_2O_3$ comprises at least surface La substitution for Al or comprises Pt, Pd, or $Ru/M_2O_3$ powder wherein M is a lanthanide. The dissociator may be separated from the rest of the reaction mixture wherein the separator passes atomic H.

A suitable liquid-solvent embodiment comprises the reaction mixture of a solvent, NaH, La, and Pd on $Al_2O_3$ powder wherein the reaction mixture may be regenerated in an embodiment by removing the solvent, adding $H_2$, separating NaH and lanthanum hydride by sieving, heating lanthanum hydride to form La, and mixing La and NaH. Alternatively, the regeneration involves the steps of separating Na and lanthanum hydride by melting Na and removing the liquid, heating lanthanum hydride to form La, hydriding Na to NaH, mixing La and NaH, and adding the solvent. The mixing of La and NaH may be by ball milling.

In a liquid-solvent embodiment, a high-surface-area material such as R-Ni is doped with NaX (X=F, Cl, Br, I). The doped R-Ni is reacted with a reagent that will displace the halide to form at least one of Na and NaH. In an embodiment, the reactant is at least an alkali or alkaline earth metal, preferably at least one of K, Rb, Cs. In another embodiment, the reactant is an alkaline or alkaline earth hydride, preferably at least one of KH, RbH, CsH, $MgH_2$ and $CaH_2$. The reactant may be both an alkali metal and an alkaline earth hydride. The reversible general reaction may be given by

$$NaX + MH \rightleftarrows NaH + MX \qquad (177)$$

D. Additional MH-Type Catalysts and Reactions

In general, MH type hydrogen catalysts to produce hydrinos provided by the breakage of the M-H bond plus the ionization of $t$ electrons from the atom M each to a continuum energy level such that the sum of the bond energy and ionization energies of the $t$ electrons is approximately $m \cdot 27.2\ eV$ where $m$ is an integer are given in TABLE 2. Each MH catalyst is given in the first column and the corresponding M-H bond energy is given in column two. The atom M of the MH species given in the first column is ionized to provide the net enthalpy of reaction of $m \cdot 27.2\ eV$ with the addition of the bond energy in column two. The enthalpy of the catalyst is given in the eighth column where $m$ is given in the ninth column. The electrons that participate in ionization are given with the ionization potential (also called ionization energy or binding energy). For example, the bond energy of $NaH$, $1.9245\ eV$, is given in column two. The ionization potential of the n th electron of the atom or ion is designated by $IP''$ and is given by the CRC. That is for example, $Na + 5.13908\ eV \rightarrow Na^+ + e^-$ and $Na^+ + 47.2864\ eV \rightarrow Na^{2+} + e^-$. The first ionization potential, $IP_1 = 5.13908\ eV$, and the second ionization potential, $IP_2 = 47.2864\ eV$, are given in the second and third columns, respectively. The net enthalpy of reaction for the breakage of the $NaH$ bond and the double ionization of $Na$ is 54.35 eV as given in the eighth column, and $m = 2$ in Eq. (36) as given in the ninth column. Additionally, H can react with each of the MH molecules given in TABLE 2 to form a hydrino having a quantum number p increased by one (Eq. (35)) relative to the catalyst reaction product of MH alone as given by exemplary Eq. (23).

TABLE 2. MH type hydrogen catalysts capable of providing a net enthalpy of reaction of approximately $m \cdot 27.2\ eV.$

| Catalyst | M-H Bond Energy | $IP_1$ | $IP_2$ | $IP_3$ | $IP_4$ | $IP_5$ | Enthalpy | m |
|---|---|---|---|---|---|---|---|---|
| AlH | 2.98 | 5.985768 | 18.82855 | | | | 27.79 | 1 |
| BiH | 2.936 | 7.2855 | 16.703 | | | | 26.92 | 1 |
| ClH | 4.4703 | 12.96763 | 23.8136 | 39.61 | | | 80.86 | 3 |
| CoH | 2.538 | 7.88101 | 17.084 | | | | 27.50 | 1 |
| GeH | 2.728 | 7.89943 | 15.93461 | | | | 26.56 | 1 |
| InH | 2.520 | 5.78636 | 18.8703 | | | | 27.18 | 1 |
| NaH | 1.925 | 5.139076 | 47.2864 | | | | 54.35 | 2 |
| RuH | 2.311 | 7.36050 | 16.76 | | | | 26.43 | 1 |
| SbH | 2.484 | 8.60839 | 16.63 | | | | 27.72 | 1 |
| SeH | 3.239 | 9.75239 | 21.19 | 30.8204 | 42.9450 | | 107.95 | 4 |
| SiH | 3.040 | 8.15168 | 16.34584 | | | | 27.54 | 1 |
| SnH | 2.736 | 7.34392 | 14.6322 | 30.50260 | | | 55.21 | 2 |

VIII. Hydrogen Gas Discharge Power and Plasma Cell and Reactor

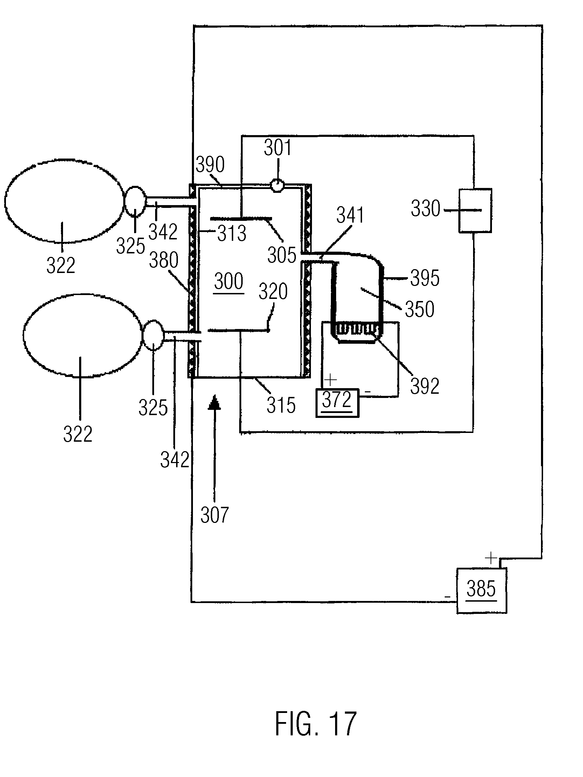

A hydrogen gas discharge power and plasma cell and reactor of the present disclosure is shown in FIGURE 17. The hydrogen gas discharge power and plasma cell and reactor of FIGURE 17, includes a gas discharge cell 307 comprising a hydrogen gas-filled glow discharge vacuum vessel 315 having a chamber 300. A hydrogen source 322 supplies hydrogen to the chamber 300 through control valve 325 via a hydrogen supply passage 342. A catalyst is contained in the cell chamber 300. A voltage and current source 330 causes current to pass between a cathode 305 and an anode 320. The current may be reversible.

In an embodiment, the material of cathode 305 may be a source of catalyst such as Fe, Dy, Be, or Pd. In another embodiment of the hydrogen gas discharge power and plasma cell and reactor, the wall of vessel 313 is conducting and serves as the cathode that replaces electrode 305, and the anode 320 may be hollow such as a stainless steel hollow anode. The discharge may vaporize the catalyst source to catalyst. Molecular hydrogen may be dissociated by the discharge to form hydrogen atoms for generation of hydrinos and energy. Additional dissociation may be provided by a hydrogen dissociator in the chamber.

Another embodiment of the hydrogen gas discharge power and plasma cell and reactor where catalysis occurs in the gas phase utilizes a controllable gaseous catalyst. The gaseous hydrogen atoms for conversion to hydrinos are provided by a discharge of molecular hydrogen gas. The gas discharge cell 307 has a catalyst supply passage 341 for the passage of the gaseous catalyst 350 from catalyst reservoir 395 to the reaction chamber 300. The catalyst reservoir 395 is heated by a catalyst reservoir heater 392 having a power supply 372 to provide the gaseous catalyst to the reaction chamber 300. The catalyst vapor pressure is controlled by controlling the temperature of the catalyst reservoir 395, by adjusting the heater 392 through its power supply 372. The reactor further comprises a selective venting valve 301. A chemically resistant open container, such as a stainless steel, tungsten or ceramic boat, positioned inside the gas discharge cell may contain the catalyst. The catalyst in the catalyst boat may be heated with a boat heater using an associated power supply to provide the gaseous catalyst to the reaction chamber. Alternatively, the glow gas discharge cell is operated at an elevated temperature such that the catalyst in the boat is sublimed, boiled, or volatilized into the gas phase. The catalyst vapor pressure is controlled by controlling the temperature of the boat or the discharge cell by adjusting the heater with its power supply. To prevent the catalyst from condensing in the cell, the temperature is maintained above the temperature of the catalyst source, catalyst reservoir 395 or catalyst boat.

In an embodiment, the catalysis occurs in the gas phase, lithium is the catalyst, and a source of atomic lithium such as lithium metal or a lithium compound such as $LiNH_2$ is made gaseous by maintaining the cell temperature in the range of about 300-1000 °C. Most preferably, the cell is maintained in the range of about 500-750 °C. The atomic and/or molecular hydrogen reactant may be maintained at a pressure less than atmospheric, preferably in the range of about 10 millitorr to about 100 Torr. Most preferably, the pressure is determined by maintaining a mixture of lithium metal and lithium hydride in the cell maintained at the desired operating temperature. The operating temperature range is preferably in the range of about 300-1000 °C and most preferably, the pressure is that achieved with the cell at the operating temperature range of about 300-750 °C. The cell can be controlled at the desired operating temperature by the heating coil such as 380 of FIGURE 17 that is powered by power supply 385. The cell may further comprise an inner reaction chamber 300 and an outer hydrogen reservoir 390 such that hydrogen may be supplied to the cell by diffusion of hydrogen through the wall 313 separating the two chambers. The temperature of the wall may be controlled with a heater to control the rate of diffusion. The rate of diffusion may be further controlled by controlling the hydrogen pressure in the hydrogen reservoir.

In another embodiment of a system having a reaction mixture comprising species of the group of Li, $LiNH_2$, $Li_2NH$, $Li_3N$, $LiNO_3$, LiX, $NH_4X$ (X is a halide), $NH_3$, $LiBH_4$, $LiAlH_4$, and $H_2$, at least one of the reactants is regenerated by adding one or more of the reagents and by a plasma regeneration. The plasma may be one of the gases such as $NH_3$ and $H_2$. The plasma may be maintained in situ (in the reaction cell) or in an external cell in communication with the reaction cell. In other embodiments, K, Cs, and Na replace Li wherein the catalyst is atomic K, atomic Cs, and molecular NaH.

To maintain the catalyst pressure at the desire level, the cell having permeation as the hydrogen source may be sealed. Alternatively, the cell further comprises high temperature valves at each inlet or outlet such that the valve contacting the reaction gas mixture is maintained at the desired temperature.

The plasma cell temperature can be controlled independently over a broad range by insulating the cell and by applying supplemental heater power with heater 380. Thus, the catalyst vapor pressure can be controlled independently of the plasma power.

The discharge voltage may be in the range of about 100 to 10,000 volts. The current may be in any desired range at the desired voltage. Furthermore, the plasma may be pulsed at any desired frequency range, offset voltage, peak voltage, peak power, and waveform.

In another embodiment, the plasma may occur in a liquid medium such as a solvent of the catalyst or of reactants of species that are a source of the catalyst.

IX. Fuel Cell and Battery

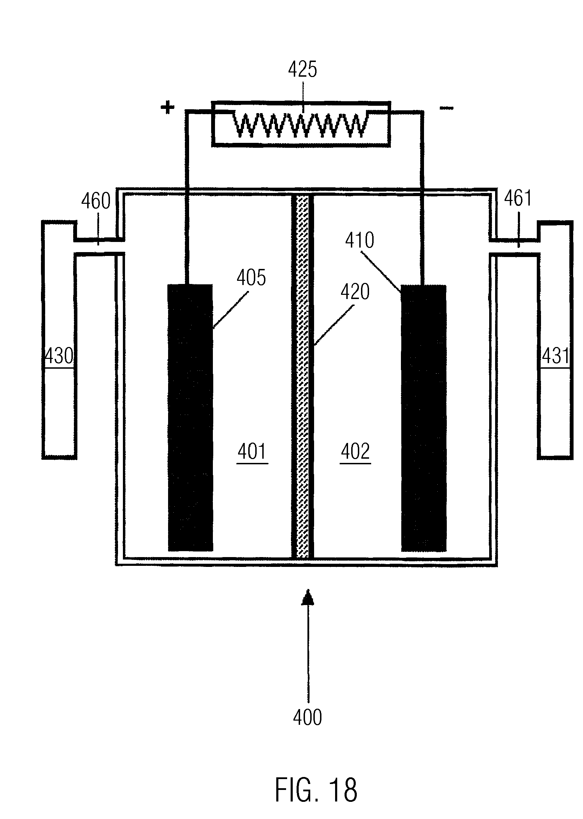

An embodiment of the fuel cell and a battery 400 is shown in FIGURE 18. The hydrino reactants comprising a solid fuel or a heterogeneous catalyst comprise the reactants for corresponding cell half reactions. Based on the novel reaction a better designation for the fuel cell device may be a catalyst-ionization-hydrogen-transition cell (CIHT). During operation, the catalyst reacts with atomic hydrogen, the nonradiative energy transfer of an integer multiple of 27.2 *eV* from atomic hydrogen to the catalyst results in the ionization of the catalyst with a transient release of free electrons, and a hydrino atom forms with a large release of energy. This reaction may occur in the anode compartment 402 such that the anode 410 ultimately accepts the ionized-electron current. The current may also be from the oxidation of a reductant in the anode compartment. In one embodiment of the fuel cell, the anode compartment 402 functions as the anode. At least one of *Li, K,* and *NaH* may serve as the catalysts to form hydrinos. A support such as carbon powder, carbide such as TiC, WC, $YC_2$, or $Cr_3C_2$, or a boride may serve as a conductor of electrons in electrical contact with an electrode such as the anode that may serve as a current collector. The conducted electrons may be from ionization of the catalyst or oxidation of a reductant. Alternatively, the support may comprise at least one of the anode and cathode electrically connected to a load with a lead. The anode lead as well as the cathode lead connecting to the load may be any conductor such as a metal.

In an embodiment, the oxidant undergoes reaction to form the hydrino reactants that then react to form hydrinos. Alternatively, the final electron-acceptor reactants comprise an oxidant. The oxidant or cathode-cell reaction mixture may be located in the cathode compartment 401 having cathode 405. Alternatively, the cathode-cell reaction mixture is constituted in the cathode compartment from ion and electron migration. In one embodiment of the fuel cell, the cathode compartment 401 functions as the cathode. During operation, a positive ion may migrate from the anode to the cathode compartment. In certain embodiments, this migration occurs through a salt bridge 420. Alternatively, a negative ion may migrate from the cathode to anode compartment through a salt bridge 420. The migrating ion may be at least one of an ion of the catalyst or source of catalyst, an ion of hydrogen such as $H^+$, $H^-$, or $H^-(1/p)$, and the counterion of the compound formed by reaction of the catalyst or source of catalyst with the oxidant or anion of the oxidant. Each cell reaction may be at least one of supplied, maintained, and regenerated by addition of reactants or removal of products through passages 460 and 461 to sources of reactants or reservoirs for product storage and optionally regeneration 430 and 431. In general, suitable oxidants are those disclosed as hydrino reactants such as hydrides, halides, sulfides, and oxides. Suitable oxidants are metal hydrides such as alkali and alkaline earth hydrides and metal halides such as alkali, alkaline earth, transition, rare earth, silver, and indium metal halides as well as oxygen or a source of oxygen, a halogen, preferably $F_2$ or $Cl_2$, or a source of halogen, $CF_4$, $SF_6$, and $NF_3$. Other suitable oxidants comprise free radicals, or a source thereof, and a source of a positively-charged counter ion that are the components of the cathode-cell reaction mixture that ultimately scavenge electrons released from the catalyst reaction to form hydrinos.

Regarding FIGURE 18, the fuel or CIHT cell 400 comprises a cathode compartment 401 with a cathode 405, an anode compartment 402 with an anode 410, a salt bridge 420, reactants that constitute hydrino reactants during cell operation with separate electron flow and ion mass transport, and a source of hydrogen. In general embodiments, the CIHT cell is a hydrogen fuel cell that generates an electromotive force (EMF) from the catalytic reaction of hydrogen to lower energy (hydrino) states. Thus, it serves as a fuel cell for the direct conversion of the energy released from the hydrino reaction into electricity. In another embodiment, the CIHT cell produces at least one of electrical and thermal power gain over that of an applied electrolysis power through the electrodes 405 and 410. The cell consumes hydrogen in forming hydrinos and requires hydrogen addition; otherwise, in an embodiment, the reactants to form hydrinos are at least one of thermally or electrolytically regenerative. Different reactants or the same reactants under different states or conditions such as at least one of different temperature, pressure, and concentration are provided in different cell compartments that are connected by separate conduits for electrons and ions to complete an electrical circuit between the compartments. The potential and electrical power gain between electrodes of the separate compartments or thermal gain of the system is generated due to the dependence of the hydrino reaction on mass flow from one compartment to another. The mass flow provides at least one of the formation of the reaction mixture that reacts to produce hydrinos and the conditions that permit the hydrino reaction to occur at substantial rates. The mass flow further requires that electrons and ions be transported in the separate conduits that connect the compartments. The electrons may arise from at least one of the ionization of the catalyst during the reaction of atomic hydrogen with the catalyst and by an oxidation or reduction reaction of a reactant species such as an atom, a molecule, a compound, or a metal. The ionization of the species in a compartment such as the anode compartment 402 may be due to at least one of (1) the favorable free energy change from its oxidation, the reduction of a reactant species in the separate compartment such as the cathode 401, and the reaction of the migrating ion that balances charge in the compartments to electroneutrality and (2) the free energy change due to hydrino formation due to the oxidation of the species, the reduction of a species in the separate compartment, and the reaction of the migrating ion that results in the reaction to form hydrinos. The migration of the ion may be through the salt bridge 420. In another embodiment, the oxidation of the species, the reduction of a species in the separate compartment, and the reaction of the migrating ion may not be spontaneous or may occur at a low rate. An electrolysis potential is applied to force the reaction wherein the mass flow provides at least one of the formation of the reaction mixture that reacts to produce hydrinos and the conditions that permit the hydrino reaction to occur at substantial rates. The electrolysis potential may be applied through the external circuit 425. The reactants of each half-cell may be at least one of supplied, maintained, and regenerated by addition of reactants or removal of products through passages 460 and 461 to sources of reactants or reservoirs for product storage and regeneration 430 and 431.

In an embodiment, at least one of the atomic hydrogen and the hydrogen catalyst may be formed by a reaction of the reaction mixture and one reactant that by virtue of it undergoing a reaction causes the catalysis to be active. The reactions to initiate the hydrino reaction may be at least one of exothermic reactions, coupled reactions, free radical reactions, oxidation-reduction reactions, exchange reactions, and getter, support, or matrix-assisted catalysis reactions. In an embodiment, the reaction to form hydrinos provides electrochemical power. The reaction mixtures and reactions to initiate the hydrino reaction such as the exchange reactions of the present disclosure are the basis of a fuel cell wherein electrical power is developed by the reaction of hydrogen to form hydrinos. Due to oxidation-reduction cell half reactions, the hydrino-producing reaction mixture is constituted with the migration of electrons through an external circuit and ion mass transport through a separate path to complete an electrical circuit. The overall reactions and corresponding reaction mixtures that produce hydrinos given by the sum of the half-cell reactions may comprise the reaction types for thermal power and hydrino chemical production of the present disclosure. Thus, ideally, the hydrino reaction does not occur or does not occur at an appreciable rate in the absence of the electron flow and ion mass transport. The free energy $\Delta G$ from the hydrino reaction gives rise to a potential that may be an oxidation or reduction potential depending on the oxidation-reduction chemistry to constitute the hydrino-producing reaction mixture. The potential may be used to generate a voltage in a fuel cell. The potential V may be expressed in terms of the free energy $\Delta G$:

$$V = \frac{-\Delta G}{nF} \tag{178}$$

wherein F is the Faraday constant. Given the free energy is about -20 MJ/mole H for the transition to H(1/4), the voltage may be high.

In the case that the chemistry gives rise to the active hydrino reactants in the anode compartment of the fuel cell, the oxidation potential and electrons may have a contribution from the catalyst mechanism. As shown by Eqs. (6-9), the catalyst may comprise a species that accepts energy from atomic hydrogen by becoming ionized. The potential of the catalyst to become ionized and the H electron to transition to a lower electronic state gives rise to an oxidation potential given by Eq. (178) based on $\Delta G$ of the reaction. Since NaH is a concerted internal reaction to form hydrino with the ionization of Na to $Na^{2+}$ as given by Eqs. (25-27), Eq. (178) should especially hold in this case.

In an embodiment, the anode half-cell oxidation reaction comprises the catalysis ionization reaction. The cathode half-cell reaction may comprise the reduction of H to hydride. Exemplary reactions are
Anode half-cell reaction:

$$m \cdot 27.2 \, eV + Cat + H\left[\frac{a_H}{p}\right] \to Cat^{r+} + re^- + H\left[\frac{a_H}{(m+p)}\right] + [(p+m)^2 - p^2] \cdot 13.6 \, eV \tag{179}$$

Cathode half-cell reaction:

$$\frac{r}{2}\left(MgH_2 + 2e^- + E_R \to Mg + 2H^-\right) \tag{180}$$

wherein $E_R$ is the reduction energy of $MgH_2$. Other suitable oxidants such as hydrides are NaH and KH. With the migration of the catalyst cation or the hydride ion through a suitable salt bridge, the catalyst and hydrogen may be regenerated in the anode compartment. In the case that the stable oxidation state of the catalyst is *Cat,* the salt bridge reaction is
Salt bridge **reaction:**

$$Cat^{r+} + rH^- \to Cat + H + \frac{(r-1)}{2}H_2 + m \cdot 27.2 \, eV + \left(\frac{(r-1)}{2}4.478 - r(0.754)\right)eV \tag{181}$$

wherein 0.754 eV is the hydride ionization energy and 4.478 eV is the bond energy of $H_2$. The catalyst or source of catalyst may be a hydride that may also serve as a source of H. Then, the salt bridge reaction is
**Salt bridge reaction:**

$$Cat^{r+} + rH^- \to CatH + \frac{(r-1)}{2}H_2 + \left(\begin{array}{l} m \cdot 27.2 \, eV \\ + \left(\frac{(r-1)}{2}4.478 - r(0.754)\right)eV \\ + E_L \end{array}\right) \tag{182}$$

wherein $E_L$ is lattice energy of *CatH.* Then, the fuel cell reactions may be maintained by replacement of hydrogen to the cathode compartment. That reaction is given by

$$Mg + H_2 \rightarrow MgH_2 + 0.7804 \, eV \frac{n!}{r!(n-r)!} \tag{183}$$

The hydrogen may be from the recycling of excess hydrogen from the anode compartment formed in the reduction of $Cat^{r+}$ and replacement of that consumed to form H(1/4) then $H_2$(1/4) by electrolysis of water. The energy of these reactions are

$$2H(1/4) \rightarrow H_2(1/4) + 87.31 \, eV \tag{184}$$

$$H_2O + 2.962 \, eV \rightarrow H_2 + 0.5O_2 \tag{185}$$

Suitable reactants are KH and NaH. The balanced fuel cell reactions for KH given by Eqs. (179-185) in units of kJ/mole are

$$7873 \, kJ/mole + KH \rightarrow K^{3+} + 3e^- + H(1/4) + 19{,}683 \, kJ/mole \tag{186}$$

$$1.5(MgH_2 + 2e^- + E_R \rightarrow Mg + 2H^-) \tag{187}$$

$$K^{3+} + 3H^- \rightarrow KH + H_2 + 7873 \, kJ/mole + 213.8 \, kJ/mole + E_L \tag{188}$$

$$1.5(Mg + H_2 \rightarrow MgH_2 + 75.30 kJ/mole) \tag{189}$$

$$0.5(2H(1/4) \rightarrow H_2(1/4) + 8424 kJ/mole) \tag{190}$$

$$\frac{0.5(H_2O + 285.8 kJ/mole \rightarrow H_2 + 0.5O_2)}{0.5H_2O \rightarrow 0.5O + 0.5H_2(1/4) - 1.5E_R + E_L + 24{,}221 \, kJ/mole} \tag{191}$$

To good approximation, the net reaction is given by

$$0.5H_2O \rightarrow 0.5O + 0.5H_2(1/4) + 24{,}000 \, kJ/mole \tag{192}$$

The balanced fuel cell reactions for KH given by Eqs. (179-185) are

$$5248 \, kJ/mole + NaH \rightarrow Na^{2+} + 2e^- + H(1/3) + 10{,}497 \, kJ/mole \tag{193}$$

$$1(MgH_2 + 2e^- + E_R \rightarrow Mg + 2H^-) \tag{194}$$

$$Na^{2+} + 2H^- \rightarrow NaH + 0.5H_2 + 5248 \, kJ/mole + 70.5 \, kJ/mole \tag{195}$$

$$1\left(Mg + H_2 \rightarrow MgH_2 + 75.30 kJ \,/\, mole\right) \tag{196}$$

$$\frac{0.5\left(H_2O + 285.8 kJ \,/\, mole \rightarrow H_2 + 0.5O_2\right)}{0.5H_2O \rightarrow 0.5O + H(1/3) - E_R + 10,643 \; kJ \,/\, mole} \tag{197}$$

wherein the term 5248 *kJ/mole* of Eq. (195) includes $E_L$. To good approximation, the net reaction is given by

$$0.5H_2O \rightarrow 0.5O + H(1/3) + 10,643 \; kJ \,/\, mole \tag{198}$$

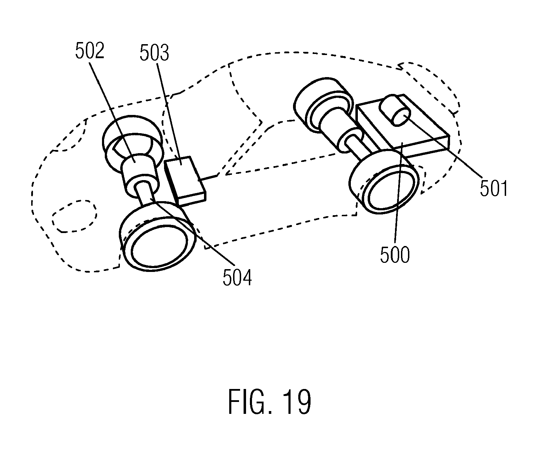

Additional energy is given off for the transition of H(1/3) to H(1/4) (Eqs. (23-24)), and then by forming $H_2$(1/4) as the final product. The high-energy release and scalability of the CIHT cell stack is enabling of power applications in microdistributed, distributed, and central electrical power. In addition, a transformational motive power source is made possible by CIHT cell technology, especially since the system is direct-electrical with dramatic cost and system-complexity reductions compared to a thermal-based system. A car architecture utilizing a CIHT cell stack shown in FIGURE 19 comprises a CIHT cell stack 500, a source of hydrogen such as an electrolysis cell and a water tank or a hydrogen tank 501, at least one electric motor 502, an electronic control system 503, and a gear train or transmission 504. In general, applications include thermal such as resistive heating, electrical, motive, and aviation and others known by those skilled in the Art. In the latter case, electric-motor driven external turbines could replace jet engines, and an electric-motor driven propeller could replace the corresponding internal combustion engine.

In an embodiment, the principles of basic cell operation involve ionic transport of hydrogen through a hydride-ion (H⁻) conducting, molten electrolyte, and reaction with a catalyst such as an alkali metal to form at least one of a hydride and hydrinos. An exemplary electrolyte is LiH dissolved in the eutectic molten salt LiCl-KCl. In the cell, the molten, H⁻ conducting electrolyte may be confined in a chamber formed between two hydrogen-permeable, solid, metallic foil electrodes such as one of V, Nb, Fe, Fe-Mo alloy, W, Rh, Ni, Zr, Be, Ta, Rh, Ti, and Th foils, which also act as current collectors. The $H_2$ gas first diffuses through the cathode electrode and forms a hydride ion by the reaction H + e⁻ to H⁻ at the cathode-electrolyte interface. The H⁻ ion subsequently migrates through the electrolyte under a chemical potential gradient. The gradient may be created by the presence of the catalyst such as alkali metal in the anode chamber. The H⁻ ion releases the electron to form hydrogen atoms by the reaction H⁻ to H + e⁻ at the anode-electrolyte interface. The hydrogen atom diffuses through the anode electrode and reacts with the catalyst such as an alkali metal to form at least one of metal hydride, metal-H molecule, and a hydrino. The ionization of the catalyst may also contribute to the anode current. Other reactants may be present in the anode compartment to cause or increase the rate of the hydrino reaction such as a support such as TiC and a reductant, catalyst, and hydride exchange reactant such as Mg or Ca. The released electron or electrons flows through an external circuit to complete the charge balance.

The reactants may be regenerated thermally or electrolytically. The products may be regenerated in the cathode or anode compartments. Or, they may be sent to a regenerator using a pump for example wherein any of the regeneration chemistries of the present disclosure or known to those skilled in the Art may be applied to regenerate the initial reactants. Cells undergoing the hydrino reaction may provide heat to those undergoing regeneration of the reactants. In the case that the products are raised in temperature to achieve the regeneration, the CIHT cell products and regenerated reactants may be passed through a recuperator while sent to and from the regenerator, respectively, in order recover heat and increase the cell efficiency and system energy balance.

In an embodiment that forms a metal hydride with ion migration, the metal hydride such as an alkali hydride is thermally decomposed. The $H_2$ gas may be separated from the alkali metal by an $H_2$-permeable, solid, metallic membrane and moved into the cathode chamber of the cell. The hydrogen-depleted alkali metal may be moved to the anode chamber of the cell such that the reaction involving the transport of H⁻ can be perpetuated.

The migrating ion may be that of the catalyst such as an alkali metal ion such as Na⁺. The ion may be reduced and may optionally be reacted with hydrogen to form the catalyst or source of catalyst and source of hydrogen such as KH or NaH whereby the catalyst and hydrogen react to form hydrinos. The energy released in forming hydrinos produces an EMF and heat. Thus, in other embodiments, the hydrino reaction may occur in the cathode compartment to provide a contribution to the cell EMF.

In an embodiment, the anode compartment comprises an alkali metal at a higher temperature or pressure than that of the same alkali metal in the cathode compartment. The pressure or temperature difference provides an EMF such that the metal such as sodium is oxidized at the anode. The ion is transported through an ion selective membrane such as beta alumina that is selective for Na⁺ ions. The migrating ions are reduced at the cathode. For example, Na⁺ is reduced to form Na. The cathode compartment further comprises hydrogen or a source of hydrogen provided as a reactant to form hydrinos. Other reactants may be present in the cathode compartment such as a support such as TiC and a reductant, catalyst, and hydride exchange reactant such as Mg or Ca. The source of H may react with the alkali metal to form the hydride. In an embodiment, NaH is formed. A suitable form of NaH is the molecular form that further reacts to form hydrinos. The energy release from the formation of metal hydride and hydrinos provides a further driving force for the ionization and migration of ions such as $Na^+$ to increase the power output from the cell. Any metal hydride such as NaH that is not reacted to form hydrino from the H may be thermally decomposed such that the hydrogen and metal such as Na are recycled. The metal such as Na may be increased in pressure at the anode cell compartment by an electromagnetic pump.

In a type of hydride exchange reaction, the hydride exchange reaction may comprise the reduction of a hydride other than that of the catalyst or source of catalyst such as an alkali hydride such as LiH, KH, or NaH. The hydride ions stabilize the highly ionized catalyst cation of the transition state. The purpose of the different hydride is to force the reaction to proceed to a greater extent in forward direction of forming the transition state and hydrinos. Suitable different hydrides are alkaline earth hydrides such as $MgH_2$, different alkali hydrides such as LiH with KH or NaH, transition metal hydrides such as $TiH_2$, and rare earth hydrides such as $EuH_2$, $GdH_2$, and $LaH_2$.

In an embodiment, the electrons and catalyst ion recombine in the transition state such that the catalysis reaction will not occur. The external provision of a counterion to the ionized catalyst such as hydride ions facilitates the catalysis and formation of ionized catalyst such as $Na^{2+}$ or $K^{3+}$. This is further facilitated by the components of the reaction mixture of a conducting support such as TiC and optionally a reductant such as an alkaline earth metal or its hydride such as $MgH_2$ or other source of hydride ions. Thus, the CIHT cell may perform as a battery and provide power to a variable load on demand wherein the load completes the circuit for the flow of electrons from the anode compartment and the flow of counterions from the cathode compartment. Furthermore, such a circuit for at least one of electrons and counterions enhances the rate of the hydrino reaction in an embodiment.

Regarding FIGURE 18, the fuel cell 400 comprises a cathode compartment 401 with a cathode 405, an anode compartment 402 with an anode 410, a salt bridge 420, hydrino reactants, and a source of hydrogen. The anode compartment reactants may comprise a catalyst or a source of catalyst and hydrogen or a source of hydrogen such as NaH or KH and may further comprise one or more of a support such as TiC and a reductant such as at least one of an alkaline earth metal and its hydride such as Mg and $MgH_2$ and an alkali metal and its hydride such as Li and LiH. The cathode compartment reactants may comprise a source of an exchangeable species such as an anion such a halide or hydride. Suitable reactants are metal hydrides such as alkaline earth or alkali metal hydrides such as $MgH_2$ and LiH. The corresponding metals such as Mg and Li may be present in the cathode compartment. The salt bridge may comprise an anion conducting membrane and/or an anion conductor. The salt bridge may be formed of a zeolite or alumina such as one saturated with the cation of the catalyst such as sodium aluminate, a lanthanide boride (such as $MB_6$, where M is a lanthanide), or an alkaline earth boride (such as $MB_6$ where $M$ is an alkaline earth). The salt bridge may comprise a hydride and may selectively conduct hydride ions. The hydride may be very thermally stable. Due to their high melting points and thermal decomposition temperatures, suitable hydrides are saline hydrides such as those of lithium, calcium, strontium, and barium, and metal hydrides such as those of rare earth metals such as Eu, Gd, and La. In the latter case, H or protons may diffuse through the metal with a conversion from or to $H^-$ at the surface. The cathode and anode may be an electrical conductor. The conductor may be the support and further comprise a lead for each of the cathode and anode that connects each to the load. The lead is also a conductor. A suitable conductor is a metal, carbon, carbide, or a boride. A suitable metal is a transition metal, stainless steel, noble metal, inner transition metal such as Ag, alkali metal, alkaline earth metal, Al, Ga, In, Sn, Pb, and Te.

The cell may comprise a solid, molten, or liquid cell. The latter may comprise a solvent. The operating conditions may be controlled to achieve a desired state or property of at least one reactant or cell component such as those of the cathode cell reactants, anode cell reactants, the salt bridge, and cell compartments. Suitable states are solid, liquid, and gaseous, and suitable properties are the conductivity to ions and electrons, physical properties, miscibility, diffusion rate, and reactivity. In the case that one or more reactants are maintained in a molten state the temperature of the compartment may be controlled to be above the reactant melting point. Exemplary melting points of Mg, $MgH_2$, K, KH, Na, NaH, Li, and LiH are 650 °C, 327 °C, 63.5 °C, 619 °C, 97.8 °C, 425 °C (dec), 180.5 °C, and 688.7 °C, respectively. The heat may be from the catalysis of hydrogen to hydrinos. Alternatively, the oxidant and/or reductant reactants are molten with heat supplied by the internal resistance of the fuel cell or by external heater 450. In an embodiment, the CIHT cell is surrounded by insulation such that comprising as a double-walled evacuated jacket such as a sheet metal jacket filled with insulation for conductive and radiative heat loss that is known to those skilled in the Art. In an embodiment, the reactants of at least one of the cathode and anode compartments are at least partially solvated by a solvent. The solvent may dissolve the catalyst or source of catalyst such as alkali metals and hydrides such as KH, K, NaH, and Na. Suitable solvents are those disclosed in the Organic Solvent section and Inorganic Solvent section. Suitable solvents that dissolve alkali metals are hexamethylphosphoramide $(OP(N(CH_3)_2)_3$, ammonia, amines, ethers, a complexing solvent, crown ethers, and cryptands and solvents such as ethers or an amide such as THF with the addition of a crown ether or cryptand.

The fuel cell may further comprise at least one hydrogen system 460, 461, 430, and 431 for measuring, delivering, and controlling the hydrogen to at least one compartment. The hydrogen system may comprise a pump, at least one value, one pressure gauge and reader, and control system for supplying hydrogen to at least one of the cathode and anode compartments. The hydrogen system may recycle hydrogen from one compartment to another. In an embodiment, the hydrogen system recycles $H_2$ gas from the anode compartment to the cathode compartment. The recycling may be active or passive. In the former case, $H_2$ may be pumped from the anode to the cathode compartment during operation, and in the latter case, $H_2$ may diffuse or flow from the anode to the cathode compartment due to a build up of pressure in the anode compartment during operation according to the reaction of Eqs. (181-182).

The products may be regenerated in the cathode or anode compartments. The products may be sent to a regenerator wherein any of the regeneration chemistries of the present disclosure may be applied to regenerate the initial reactants. Cell undergoing the hydrino reaction may provide heat to those undergoing regeneration of the reactants.

In an embodiment, the fuel cell comprises anode and cathode compartments each containing an anode and cathode, the corresponding reaction mixture, and a salt bridge between the compartments. The compartments may comprise inert nonconductive cell walls. Suitable container materials are carbides and nitrides such as SiC, $B_4C$, $BC_3$, or TiN or a stainless steel tube internally coated with carbides and nitrides such as SiC, $B_4C$ or $BC_3$, or TiN. Alternatively, the cell may be lined with an inert insulator such as MgO, SiC, $B_4C$, $BC_3$, or TiN. The cell may be made of a conducting material with an insulating separator. Suitable cell materials are stainless steel, transition metals, noble metals, refractory metals, rare earth metals, Al, and Ag. The cells may each have an inert insulating feedthrough. Suitable insulating separators and materials for the electrical feedthroughs are MgO and carbides and nitrides such as SiC, $B_4C$, $BC_3$, or TiN. Other cell, separator, and feed throughs may be used that are known to those skilled in the Art. The exemplary cathode and anode each comprises stainless steel wool with a stainless steel lead connected to a cell feed through with silver solder. The exemplary anode reaction mixture comprises (i) a catalyst or source of catalyst and a source of hydrogen from the group of K, KH, Na, NaH, Mg, $MgH_2$, $MgX_2$, (X is a halide), Li, LiH, Rb, RbH, Cs, and CsH, optionally (ii) a reductant from the group of Mg, Ca, Sr, Ba, and Li, and (ii) a support from the group of C, Pd/C, Pt/C, TiC, and $YC_2$. The exemplary cathode reaction mixture comprises (i) an oxidant from the group of $MX_2$ (M = Mg, Ca, Sr, Ba; X = H, F, Cl, Br, 1) and LiX (X = H, Cl, Br), optionally (ii) a reductant from the group of Mg, Ca, Sr, Ba, and Li, and optionally (iii) a support from the group of C, Pd/C, Pt/C, TiC, and $YC_2$. The exemplary salt bridge comprises a metal hydride having high temperature stability pressed or formed into a slab. The salt bridge may be from the group of metal hydrides of LiH, $CaH_2$, $SrH_2$, $BaH_2$, $LaH_2$, $GdH_2$, and $EuH_2$. Hydrogen or a hydride may be added to either cell compartment that may further comprise a hydrogen dissociator such as Pd or Pt/C. In an embodiment wherein $Mg2^+$ is the catalyst, the source of catalyst may be a mixed metal hydride such as $Mg_x(M_2)_yH_z$ wherein x, y, and z are integers and $M_2$ is a metal. In an embodiment, the mixed hydride comprises an alkali metal and Mg such as $KMgH_3$, $K_2MgH_4$, $NaMgH_3$, and $Na_2MgH_4$.

In an embodiment, the anode and cathode reactions comprise different reactants to form hydrinos or the same reactant maintained with at least one of different concentrations, different amounts, or under different conditions such that a voltage develops between the two half-cells that may supply power to the external load through the anode and cathode leads. In an embodiment, the anode reaction mixture comprises (i) a catalyst or source of catalyst and a source of hydrogen such as at least one from the group of K, KH, Na, NaH, Mg, $MgH_2$, Ca $CaH_2$, Li, LiH, Rb, RbH, Cs, and CsH, optionally (ii) a reductant such as at least one from the group of Mg, Ca, Sr, Ba, and Li, and (ii) a support such as at least one from the group of C, Pd/C, Pt/C, TiC, and $YC_2$. The cathode reaction mixture comprises (i) a catalyst or source of catalyst and a source of hydrogen such as at least one from the group of K, KH, Na, NaH, Mg, $MgH_2$, $MgX_2$, (X is a halide), Ca $CaH_2$, Li, LiH, Rb, RbH, Cs, and CsH and $H_2$, optionally (ii) a reductant such as at least one from the group of Mg, Ca, Sr, Ba, Li, and $H_2$, and (ii) a support such as at least one from the group of C, Pd/C, Pt/C, TiC, and $YC_2$. Optionally, each half-cell reaction mixture may comprise an oxidant such as at least one from the group of $MX_2$ (M = Mg, Ca, Sr, Ba; X = H, F, Cl, Br, I) and LiX (X = H, Cl, Br). In an exemplary embodiment, the anode reaction mixture comprises KH Mg TiC and the cathode reaction mixture comprises NaH Mg TiC. In other exemplary embodiments, the cells comprise Mg $MgH_2$ TiC//NaH $H_2$, KH TiC Mg//NaH TiC, KH TiC Li//NaH TiC, Mg TiC $H_2$//NaH TiC, KH $MgH_2$ TiC Li// KH Mg TiC LiBr, KH Mg TiC//KH Mg TiC $MX_2$ ($MX_2$ is an alkaline earth halide), NaH Mg TiC//KH Mg TiC $MX_2$ wherein // designates the salt bridge that may be a hydride. Hydrogen or a hydride may be added to either cell compartment that may further comprise a hydrogen dissociator such as Pd or Pt/C.

In an embodiment, at least one cell additionally comprises an electrolyte. The electrolyte may comprise a molten hydride. The molten hydride may comprise a metal hydride such as alkali metal hydride or an alkaline earth metal hydride. The molten hydride may be dissolved in a salt. The salt may have a low melting point such as a eutectic salt wherein one of the cations may be the same as that of the metal hydride. The salt may comprise LiH dissolved in a LiCl/KCl mixture or a mixture such as $LiF/MgF_2$. The salt may comprise one or more halides of the same cation as that of the catalyst or are more stable compounds than the halide compound that may form from the reaction of the catalyst with the halide of the salt such as the mixture LiH with LiCl/KCl. The eutectic salt may comprises an alkaline earth fluoride such as $MgF_2$ and the fluoride of the catalyst metal such as an alkali metal fluoride. The catalyst or source of catalyst and source of hydrogen may comprise an alkali metal hydrides such as LiH, NaH, or KH. Alternatively, the salt mixture comprises mixed halides of the same alkali metal as the catalyst metal since a halide-hydride exchange reaction with the catalyst hydride would result in no net reaction. Suitable mixtures of mixed halides and catalyst hydride are at least two of KF, KCl, KBr, and KI with KH and Li or Na replacing K. Preferably the salt is a hydride ion conductor. In addition to halides, other suitable molten salt electrolytes that may conduct hydride ions are hydroxides such as KH in KOH or NaH in NaOH, and metalorganic systems such as NaH in $NaAl(Et)_4$. The cell may be made of metals such as Al or stainless steel or comprise a graphite or boron nitride crucible.

The electrolyte may comprise a eutectic salt of two or more fluorides such as at least two compounds of the group of the alklali halides and alkaline earth halides. Exemplary salt mixtures include $LiF/MgF_2$, $NaF/MgF_2$, $KF/MgF_2$, and $NaF/CaF_2$. Exemplary reaction mixtures comprise NaH NaF $MgF_2$ TiC, NaH NaF $MgF_2$ Mg TiC, KH KF $MgF_2$ TiC, KH KF $MgF_2$ Mg TiC, NaH NaF $CaF_2$ TiC, NaH NaF $CaF_2$ Mg TiC, KH NaF $CaF_2$ TiC, and KH NaF $CaF_2$ Mg TiC.

In an embodiment, the reaction mixture comprises an electrolyte that supports hydride ion, $H^-$, as a migrating counterion wherein the counterion balances the positive ion created by the ionization of the catalyst during the hydrino reaction. The heat of formation of KCl and LiCl are -436.50 kJ/mole and -408.60 kJ/mole, respectively. In an embodiment, the reaction mixture comprises a molten salt electrolyte such a mixture of alkali halide salts such as KCl and LiCl. The mixture may be a eutectic mixture. The cell temperature is maintained above the salt melting point. The reaction mixture further comprises a source of hydride ion such as an alkali metal hydride such as LiH, KH, or NaH. The reaction mixture may further comprise at least one of a support such as TiC or C and a reductant such as an alkaline earth metal or its hydride such as Mg or $MgH_2$.

The reaction mixture may comprise (1) a catalyst or a source of catalyst and a source of hydrogen such as one of LiH, NaH, KH, RbH, and CsH, (2) a eutectic salt mixture that may serve as an electrolyte that may have a high ion conductivity and may selectively allow hydride ion to pass comprising at least two cations from the group of Li, Na, K, Rb, Cs, Mg, Ca, Sr, and Ba and at least one halide from the group of F, Cl, Br, and I, (3) a support that may be electrically conductive such as carbide such as TiC, and (4) optionally a reductant and hydride exchange reactant such as an alkaline earth metal or alkaline earth hydride.

In an embodiment of the CIHT cell, a bulk catalyst such as Mg, Ca, or Mg plus a support, or Ca plus a support, wherein a suitable support is chosen from TiC, $Ti_3SiC_2$, WC, TiCN, $B_4C$, SiC, and $YC_2$, comprises the reductant of the anode compartment. The electrolyte may comprise a salt such as a eutectic mixture that conducts hydride ions. The cathode and optionally the anode compartment may comprise a hydrogen permeable membrane. Hydrogen may be supplied to the cathode compartment such that it permeates through the membrane and forms hydride ions that migrate through the electrolyte to the anode compartment where they may be oxidized to H. The H may diffuse through the anode membrane and react with the bulk catalyst to from hydrinos. In another embodiment of the CIHT cell, an alkali metal or alkali metal hydride comprises the catalyst or source of catalyst, and the anode reaction mixture may further comprise at least one of a reductant such as an alkaline earth metal such as Mg or Ca and a support, wherein a suitable support is chosen from TiC, $Ti_3SiC_2$, WC, TiCN, $B_4C$, SiC, and $YC_2$. This reaction mixture may comprise the reductant of the anode compartment. The electrolyte may comprise a salt such as a eutectic mixture that conducts hydride ions. In an embodiment, the electrolyte comprises a molten alkali metal hydroxide such as KOH that may conduct hydride ions. The cathode and optionally the anode compartment may comprise a hydrogen permeable membrane. Hydrogen may be supplied to the cathode compartment such that it permeates through the membrane and forms hydride ions that migrate through the electrolyte to the anode compartment where they may be oxidized to H. The H may diffuse through the anode membrane and react with the catalyst to from hydrinos. Alternatively, the H may react with a catalyst formed or present at the cathode or anode membrane or in the electrolyte.

In an embodiment, the salt bridge comprises a solid with a high conductance for hydride ions. The salt bridge may also serve as the electrolyte. At least one of the salt bride and electrolyte may comprise a mixture of a hydride such as an alkali or alkaline earth hydride such as $MgH_2$ or $CaH_2$, a halide such as an alkali or alkaline earth halide such as LiF, and a matrix material such as $Al_2O_3$ powder. The mixture may be sintered wherein the sintering may be in a $H_2$ atmosphere. Alternatively, the salt bridge and optionally the electrolyte is a liquid such as a molten salt wherein at least one of the cathode and anode half-cell reactants is insoluble in the salt bridge or electrolyte. An example of a molten hydride conductor salt bridge is LiH in LiCl/KCl eutectic molten salt. Exemplary hydrino reactants are a source of catalyst and a source of hydrogen such as NaH or KH, a support such as TiC, C, Pd/C, and Pt/C, and an alkaline earth hydride such as $MgH_2$ or other other thermally regenerated hydride such as at least one of LiH, $MBH_4$, and $MAlH_4$ (M = Li, Na, K, Rb, Cs). The half-cell compartments may be isolated and connected by an electrically insulating separator. The separator may also serve as a support for the salt bridge. The salt bridge may comprise a molten salt supported by the separator. The separator may be MgO or BN fiber. The latter may be as a woven fabric or nonwoven felt. In an embodiment, the catalyst or source of catalyst and source of hydrogen such as NaH or KH is substantially insoluble in the salt bridge.

Each half-cell reactant mixture may be pressed into a plaque and attached to the current collector of the anode and cathode. The plaque may be secured with at least one perforated sheet such as a metal sheet. Alternatively, the separator may be permeable to H wherein H- reacts to form H at the cathode half-cell interface, H passes through the separator and forms H- at the anode half-cell interface. Suitable separators that transport $H^-$ by forming H are refractory base metals such as V, Nb, Fe, Fe-Mo alloy, W, Rh, Ni, Zr, Be, Ta, Rh, Ti, Th, and rare earths as well as noble metals and alloys such as Pd and Pd/Ag alloy. The metal comprising a H membrane may be biased to increase the activity of H-/H conversion at the interfaces. The activity may also be increased by using a concentration gradient.

In an embodiment, the CIHT cell comprises a cathode compartment and an anode compartment wherein the both compartments may contain at least one of the same reactants except that the anode compartment exclusively contains one or more selective reactants needed to maintain the hydrino reaction at a favorable rate to develop a voltage between the cells. The anode and cathode compartments are in contact by a salt bridge that is an ion conductor, but substantially an insulator for electrons. In an embodiment, the salt bridge is selective for hydride ion conductivity. In an embodiment, the salt bridge may allow the migration or exchange of reactant materials amongst the compartments except for the selective reactant(s). In an embodiment, the anode compartment contains a catalyst or source of catalyst and a source of hydrogen such as NaH or KH, optionally a reductant such as an alkaline earth metal or hydride such as Mg and $MgH_2$, and one or more selective reactants such as at least one support that may also serve as a hydrogen dissociator. The support may comprise carbon, carbide, or a boride. Suitable carbon, carbides and borides are carbon black, TiC, $Ti_3SiC_2$, TiCN, SiC, $YC_2$, TaC, $Mo_2C$, WC, C, $B_4C$, HfC, $Cr_3C_2$, ZrC, $CrB_2$, VC, $ZrB_2$, NbC, and $TiB_2$. Suitable supports that may also serve as hydrogen dissociators are Pd/C, Pt/C Pd/MgO, $Pd/Al_2O_3$, Pt/MgO, and $Pt/Al_2O_3$. The half-cell compartments may be isolated and connected by an electrically insulating separator that may also serve as a support for the salt bridge. The salt bridge may comprise a molten salt supported by the separator. The molten salt may be at least one of an electrolyte, an electrolyte comprising a hydride, and a hydride dissolved in an electrolyte. Alternatively, the salt bridge is replaced by a separator that is not permeable to the selective reactant(s). The separator may be permeable to one or more ions or compounds of either of the anode-compartment or cathode-compartment reaction mixtures while being impermeable to the selective reactants(s). In an embodiment, the separator is not permeable to the support. The separator may be MgO or BN fiber. The latter may be as a woven fabric or nonwoven felt. The hydrino reaction to form ionized catalyst selectively forms in the anode compartment due to the anode compartment reactants exclusively comprising the selective reactants and the impermeability of the separator or salt bridge to the selective reactant(s).

In an embodiment, the transport of ions and electrons causes the hydrino reactants to be formed in a region other than in at least one of the cathode or anode compartments. The hydrino reactants may form in the electrolyte such that the hydrino reaction occurs at the location of at least one of the electrolyte, the salt bridge, an interface of the electrolyte and the salt bridge, the electrolyte-cathode interface, and the anode-electrolyte interface. The cathode may comprise a hydrogen-permeable membrane such as a nickel foil or tube or porous nickel electrode, and the electrolyte may comprise a eutectic salt that transports hydride ions such as LiH dissolved in LiCl-KCl. The hydrogen may permeate through the membrane, and a catalyst ion such as $Li^+$ or $K^+$ may be reduced to the catalyst such as Li or K at the electrolyte interface such that Li or K and H are formed at the interface and further react to form hydrinos. In this case, the reduction potential is increased. In an embodiment, the concentration of LiCl-KCl is about 58.5 + 41.2 mol%, the melt temperature is about 450 °C, and the LiH concentration is about 0.1 mol% or lower. In other embodiments, the LiH concentration may be any desirable mole percent to the saturation limit of about 8.5%. In another exemplary embodiment, the electrolyte may comprise LiH + LiF + KF or NaF and optionally a support such as TiC. The electrolyte may comprise a catalyst or source of catalyst other than LiH and other suitable electrolytes such as KH or NaH with one of NaBr+ NaI, KOH + KBr, KOH + KI, NaH + $NaAlEt_4$, NaH + $NaAlCl_4$, NaH + $NaAlCl_4$ + NaCl, NaH + NaCl + $NaAlEt_4$, and other salts such a halides. The cation of at least one salt may be that of the catalyst or source of catalyst. In an embodiement, the catalyst and source of H may be HCl formed by the oxidation of $Cl^-$ or H. The $Cl^-$ may be from the electrolyte.

An embodiment of a thermal cell comprises a reaction mixture distribution to cause a regional localization of the catalysis reaction to locally produce ions and electrons. The reactants are distributed such that a first area in the cell exclusively contains one or more selective reactants needed to maintain the hydrino reaction at a favorable rate in order to develop a voltage between this at least one first region and at least one, second region of the cell. The cell comprises conductive walls in an embodiment, or may comprise a conductive circuit. An electron current may flow through the walls of the cell or the circuit due to the voltage. The electrons reduce a reactant in the second region such as a hydride to produce an anion such as a hydride ion. The anion may migrate from the second to the first region to complete the circuit. The migration may be through a solvent or molten salt. The molten salt may be at least one of an electrolyte, an electrolyte comprising a hydride, and a hydride dissolved in an electrolyte. A separator or salt bridge may maintain the selective reactants in the first region. The separator or salt bridge may also maintain separation of other reactants that are desired to be separated. The separator or salt bridge may be selective to hydride ions.

In an exemplary embodiment, the anode and cathode reactants are the same except that the anode compartment or region exclusively contains the support. No salt bridge is required and a physical separator and ion conductor may optionally confine the support in the cathode compartment or region. For example, the anode and cathode reaction mixtures comprise NaH or KH and Mg, and the anode reaction mixture further comprises TiC. In other exemplary embodiments, the reactant mixture of both cells comprises one or more of a catalyst, source of catalyst, and source of hydrogen such as at least one of Li, LiH, Na, NaH, K, KH, Rb, RbH, Cs, CsH, Mg, and $MgH_2$, and at least one of a reductant or hydride exchange reactant such as an alkaline earth metal or hydride such as Mg, LiH, $MBH_4$, $MAlH_4$ (M = Li, Na, K, Rb, Cs), and $M_2(BH_4)_2$ (M=Mg, Ca, Sr, Ba). A support is localized exclusively at the anode compartment or region. Suitable supports that may also serve as a hydrogen dissociator include carbon, carbide, or a boride. Suitable carbon, carbides and borides include carbon black, TiC, $Ti_3SiC_2$, $YC_2$, TiCN, SiC, TaC, $Mo_2C$, WC, C, $B_4C$, HfC, $Cr_3C_2$, ZrC, $CrB_2$, VC, $ZrB_2$, NbC, and $TiB_2$. Suitable supports that may also serve as hydrogen dissociators include Pd/C, Pt/C Pd/MgO, Pd/$Al_2O_3$, Pt/MgO, and Pt/$Al_2O_3$. Suitable anode reaction mixtures include NaH Pd/$Al_2O_3$ TiC + $H_2$, NaH $NaBH_4$ TiC, NaH $KBH_4$ TiC, NaH $NaBH_4$ Mg TiC, NaH $KBH_4$ Mg TiC, KH $NaBH_4$ TiC, KH $KBH_4$ TiC, KH $NaBH_4$ Mg TiC, KH $KBH_4$ Mg TiC, NaH $RbBH_4$ Mg TiC, NaH $CsBH_4$ Mg TiC, KH $RbBH_4$ Mg TiC, KH $CsBH_4$ Mg TiC, NaH Mg TiC Mg($BH_4)_2$, NaH Mg TiC Ca($BH_4)_2$, KH Mg TiC Mg($BH_4)_2$, KH Mg TiC Ca($BH_4)_2$, NaH Mg TiC, KH Mg TiC, LiH Mg TiC, NaH Mg Pd/C, KH Mg Pd/C, LiH Mg Pd/C, NaH Mg Pt/C, KH Mg Pt/C, NaH Mg LiCl, KH Mg LiCl, KH KOH TiC, and LiH Mg Pt/C. The cathode reactants may be the same absent the support.

In an embodiment, a positive bias voltage is applied to at least the anode to collect electrons from the ionizing catalyst. In an embodiment, an electron collector at the anode collects the ionizing electrons at an increased rate than in the absence of the collector. A suitable rate is one faster than the rate that electrons would react with surrounding reactants such as metal hydrides to form anions such as hydride ions locally. Thus, the collector forces the electrons through the external circuit wherein the voltage is increased due to the energy release to form hydrinos. Thus, the electron collector such as an applied positive potential acts as a source of activation energy for the hydrino reaction that powers the CIHT cell. In an embodiment, the bias acts as a current amplifier such as a transistor wherein the injection of a small current causes the flow of a large current powered by the hydrino reaction. The applied voltage as well as other conditions such as temperature and hydrogen pressure can be controlled to control the power output of the cell.

In an embodiment, the cell comprises an anode compartment containing a hydrino catalyst reaction mixture being without H or H limited, a cathode compartment comprising a source of hydrogen such hydrogen gas or a hydride, a salt bridge connecting the compartments by ion conduction wherein the conducting ion may be a hydride ion, and an anode and cathode electrically connected by an external circuit. Power may be delivered to a load connected with the external circuit, or power may be delivered to the cell with an applied power source in series or parallel with the external circuit. The applied power source may provide the activation energy of the hydrino reaction such that an amplified power is output from the cell due to the applied power. In other embodiments, the applied electrolysis power causes migration of another ion such as a halide or oxide wherein the mass transport induces the hydrino reaction to occur in a compartment.

In an embodiment of the CIHT cell, the products are regenerated by electrolysis. A molten salt may comprise the electrolyte. The products may be an alkali halide of the catalyst metal and a hydride of at least a second metal such as an alkali metal or alkaline earth hydride. The products may be oxidized by applying a voltage to reduce the halide to metal at the electrolysis cathode and the halide to halogen at the electrolysis anode wherein the polarity is opposite that of the CIHT cell. The catalyst metal may react with hydrogen to form the alkali hydride. The halogen may react with the metal hydride such as an alkali hydride or alkaline earth hydride to form the corresponding halide. In an embodiment, the salt bridge is selective for halide ion and the catalyst metal is in the CIHT anode compartment and the second metal is in the CIHT cathode compartment. Since the electrical energy released to form hydrinos is much greater then that required for regeneration, a second CIHT cell may regenerate the first CIHT cell and vice versa so that constant power may be output from a plurality of cells in a cycle of power and regeneration. An exemplary CIHT cell is NaH or KH Mg and support such as TiC// MX wherein MX is a metal halide such as LiCl and the salt bridge designated by // is a halide ion conductor. Suitable halide ion conductors are a halide salt such as a molten electrolyte comprising an alkali halide, an alkaline earth halide, and mixtures, a solid rare earth oxychloride, and an alkali halide or alkaline earth halide that is a solid at the cell operating parameters. In an embodiment, the Cl⁻ solid electrolyte may comprise a metal chlorides, metal halides, and other halide compounds such as $PdCl_2$ that may be doped with KCl, as well as $PbF_2$, $BiCl_3$, and ion exchange polymers (silicates, sodium phosphotungstates, and sodium polyphosphates). The solid electrolyte may comprise an impregnated support. An exemplary solid electrolyte is woven glass cloth impregnated with doped $PbCl_2$. In another embodiment, the counter ion is an ion other than a halide such as at least one of the group of oxides, phosphides, borides, hydroxides, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, colbalt oxides, tellurium oxides, and other oxyanions such as those of halogens, P, B, Si, N, As, S, Te, Sb, C, S, P, Mn, Cr, Co, and Te, the CIHT cathode compartment contains a compound of the counter ion, and the salt bridge is selective to the counter ion. An exemplary CIHT cell that may be regenerated by electrolysis comprises an alkali metal hydride at the anode and a metal halide at the cathode such as an alkali or alkaline earth halide and a metal halide electrolyte such as a molten eutectic salt. The anode and cathode may further comprise the metal of the hydride and the halide, respectively.

Based on the Nernst equation, an increase in H⁻ causes the potential to be more positive. A more negative potential favors that stabilization of the catalyst ion transition state. In an embodiment, the reaction mixture comprises a hydride exchangeable metal to cause the Nernst potential to be more negative. Suitable metals are Li and an alkaline earth metal such as Mg. The reaction mixture may also comprise an oxidant such as a alkali, alkaline earth or transition metal halide to decrease the potential. The oxidant may accept electrons as the catalyst ion is formed.

The support may serve as a capacitor and charge while accepting the electrons from the ionizing catalyst during the energy transfer from H. The capacitance of the support may be increased by adding a high-permittivity dielectric that may be mixed with the support, or the dielectric material is gaseous at the cell operating temperature. In another embodiment, a magnetic field is applied to deflect the ionized electrons from the catalyst to drive the hydrino reaction forward.

In another embodiment, the catalyst becomes ionized and is reduced in an anode half-cell reaction. The reduction may be by hydrogen to form $H^+$. The $H^+$ may migrate to cathode compartment by a suitable salt bridge. The salt bridge may be a proton conducting membrane, proon exchanege membrane, and/or a proton conductor such as solid state perovskite-type proton conductors based on $SrCeO_3$ such as $SrCe_{0.9}Y_{0.08}Nb_{0.02}O_{2.97}$ and $SrCeO_{0.95}Yb_{0.05}O_3$ - *alpha*. The $H^+$ may react in the cathode compartment to form $H_2$. For example, $H^+$ may be reduced at the cathode or react with a hydride such as $MgH_2$ to form $H_2$. In another embodiment, the cation of the catalyst migrates. In the case that the migrating ion is a cation such $Na^+$, the salt bridge may be beta-alumina solid electrolyte. A liquid electrolyte such as $NaAlCl_4$ may also be used to transport the ions such as $Na^+$.

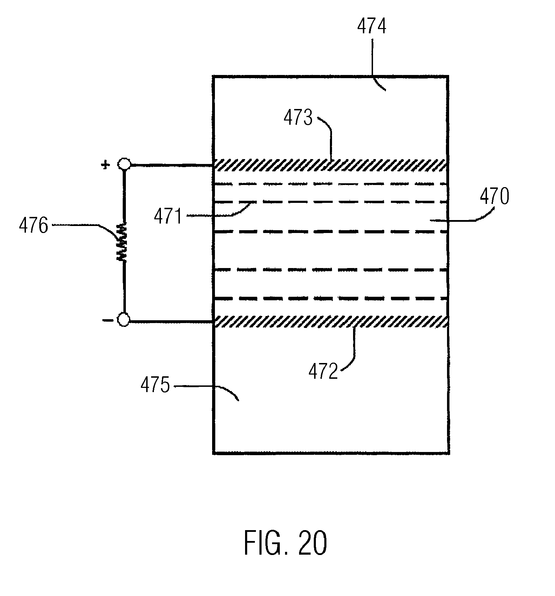

In a double-membrane three-compartment cell shown in FIGURE 20, the salt bridge may comprise an ion-conducting electrolyte 471 in a compartment 470 between the anode 472 and cathode 473. The electrodes are held apart and may be sealed to the inner vessel wall so that the vessel wall and electrodes form the chamber 470 for the electrolyte 471. The electrodes are electrically insulated from the vessel so that they are isolated from each other. Any other conductors that may electrically short the electrodes must also be electrically insulated from the vessel to avoid the shorting. The anode and cathode may comprise a metal that has a high permeability to hydrogen. The electrode may comprise a geometry that provides a higher surface area such as a tube electrode, or it may comprise a porous electrode. Hydrogen from the cathode compartment 474 may diffuse through the cathode and undergo reduction to $H^-$ at the interface of the cathode and salt bridge electrolyte 471. The $H^-$ migrates through the electrolyte and is oxidized to H at the electrolyte-anode interface. The H diffuses through the anode and reacts with the catalyst in the anode compartment 475 to form hydrinos. The $H^-$ and catalyst ionization provides the reduction current at the cathode that is carried in the external circuit 476. The H permeable electrodes may comprise V, Nb, Fe, Fe-Mo alloy, W, Mo, Rh, Ni, Zr, Be, Ta, Rh, Ti, Th, Pd, Pd-coated Ag, Pd-coated V, Pd-coated Ti, rare earths, other refractory metals, and others such metals known to those skilled in the Art. The electrodes may be metal foils. The chemicals may be regenerated thermally by heating any hydride formed in the anode compartment to thermally decompose it. The hydrogen may be flowed or pumped to the cathode compartment to regenerate the initial cathode reactants. The regeneration reactions may occur in the anode and cathode compartments, or the chemicals in one or both of the compartments may be transported to one or more reaction vessels to perform the regeneration.

In another embodiment, the catalyst undergoes H catalysis and becomes ionized in the cathode compartment and also becomes neutralized in the cathode compartment such that no net current flows directly due to the catalysis reaction. The free energy to produce an EMF is from the formation of hydrinos that requires the mass transport of ions and electrons. For example, the migrating ion may be $H^+$ that is formed by oxidation of a species such as $H_2$ in the anode compartment. $H^+$ migrates to the cathode compartment through at least one of an electrolyte and a salt bridge such as a proton exchange membrane and is reduced to H or a hydride in the cathode compartment to cause the hydrino reaction to occur. Alternatively, $H_2$ or a hydride may be reduced to form $H^-$ in the cathode compartment. The reduction further forms at least one of the catalyst, a source of catalyst, and atomic H that permits the hydrino reaction to occur. The $H^-$ migrates to the anode compartment wherein it or another species is ionized to provide the electrons to the external circuit to complete the cycle. The oxidized H may from $H_2$ that may be recycled to the cathode compartment using a pump.

In another embodiment, a metal is oxidized at the anode. The metal ion migrates through an electrolyte such as a molten-salt or solid electrolyte. Suitable molten electrolytes are halides of the migrating metal ion. The metal ion is reduced at the cathode wherein the metal undergoes a reaction that changes its activity. In suitable reactions, the metal is dissolved in another metal, forms an intermetallic compound with at least one other metal and chemiabsorbs or physiabsorbs onto a surface or intercalates into a material such as carbon. The metal may serve as the catalyst or source of catalyst. The cathode reactants also comprise hydrogen and may comprise other reactants to cause the hydrino reaction to occur. The other reactants may comprise a support such as TiC and a reductant, catalyst, and hydride exchange reactant. Suitable exemplary Mg intermetallics include Mg-Ca, Mg-Ag, Mg-Ba, Mg-Li, Mg-Bi, Mg-Cd, Mg-Ga, Mg-In, Mg-Cu, and Mg-Ni and their hydrides. Suitable exemplary Ca intermetallics include Ca-Cu, Ca-In, Ca-Li, Ca-Ni, Ca-Sn, Ca-Zn, and their hydrides. Exemplary Na and K alloys or amalgams include those of Hg and Pb. Others include Na-Sn and Li-Sn. A hydride may be decomposed thermally. An intermetallic may be regenerated by distillation. The regenerated metals may be recycled.

In another embodiment, the catalyst or source of catalyst in the anode compartment undergoes ionization, and the corresponding cation migrates through the salt bridge that is selective for the cation. A suitable cation is $Na^+$, and a Na$^+$ selective membrane is beta alumina. The cation is reduce at the cathode compartment that contains hydrogen or a source of hydrogen and optionally other reactants of the hydrino reaction mixture such as one or more of a support, a reductant, an oxidant, and a hydride exchange agent. The cell may be operated as a CIHT cell, an electrolysis cell, or a combination wherein the applied electrolysis power is amplified by the hydrino reaction.

In an embodiment, positive ions of the electrolyte such as Li$^+$ of the eutectic salt LiCl/KCl and optionally LiH migrate from the anode compartment to the cathode compartment through the salt bridge and are reduced to the metal or hydride such as Li and LiH. Another exemplary electrolyte comprises LiPF$_6$ in dimethyl carbonate/ethylene carbonate. Borosilicate glass may the separator. In other embodiments, one or more alkali metals substitute for at least one of Li and K. In the case that K$^+$ replaces Li$^+$ as the migrating ion, a solid potassium-glass electrolyte may be used. In an embodiment, due to the migration of the ion such as Li$^+$, its reduction, and any subsequent reaction such as hydride formation, and the catalysis of H to hydrino states occurs in the cathode compartment to provide a contribution to the cell EMF. The source of hydrogen to form the hydride and H for the hydrino reaction may be a hydride with a less negative heat of formation that that of the hydride of the migrating ion. Suitable hydrides in the case of Li$^+$ as the migrating ion include MgH$_2$, TiH$_2$, NaH, KH, RbH, CsH, LaNi$_x$Mn$_y$H$_2$, and Mg$_2$NiH$_x$ wherein x,y, and z are rational numbers. A suitable hydride for K or Na replacing Li is MgH$_2$. The cathode reaction mixture may comprise other reactants to increase the rate of the hydrino reaction such as a support such as TiC.

In an embodiment, hydrinos formed from the disclosed hydrino reaction mixtures by the catalysis of hydrogen serve as the oxidant. Hydrinos, $H\left[\dfrac{a_H}{p}\right]$, react with electrons at the cathode 405 of the fuel cell to form hydrino hydride ions, $H^-(1/p)$. A reductant reacts with the anode 410 to supply electrons to flow through the load 425 to the cathode 405, and a suitable cation completes the circuit by migrating from the anode compartment 402 to the cathode compartment 401 through the salt bridge 420. Alternatively, a suitable anion such as a hydrino hydride ion completes the circuit by migrating from the cathode compartment 401 to the anode compartment 402 through the salt bridge 420.

The cathode half reaction of the cell is:

$$H\left[\frac{a_H}{p}\right] + e^- \rightarrow H^-\left(1/p\right) \tag{199}$$

The anode half reaction is:

$$\text{reductant} \rightarrow \text{reductant}^+ + e^- \tag{200}$$

The overall cell reaction is:

$$H\left[\frac{a_H}{p}\right] + \text{reductant} \rightarrow \text{reductant}^+ + H^-\left(1/p\right) \tag{201}$$

The reductant may be any electrochemical reductant, such as zinc. In one embodiment, the reductant has a high oxidation potential and the cathode may be copper. In an embodiment, the reductant includes a source of protons wherein the protons may complete the circuit by migrating from the anode compartment 402 to the cathode compartment 401 through the salt bridge 420, or hydride ions may migrate in the reverse direction. Sources of protons include hydrogen, compounds comprising hydrogen atoms, molecules, and/or protons such as the increased binding energy hydrogen compounds, water, molecular hydrogen, hydroxide, ordinary hydride ion, ammonium hydroxide, and $HX$ wherein $X^-$ is a halogen ion. In an embodiment, oxidation of the reductant comprising a source of protons generates protons and a gas that may be vented while operating the fuel cell.

In another fuel cell embodiment, a hydrino source 430 communicates with vessel 400 via a hydrino passage 460. Hydrino source 430 is a hydrino-producing cell according to the present invention. In an embodiment, the cathode compartment is supplied with hydrinos or increased binding energy compounds produced by the hydrino reactions from reactants disclosed herein. The hydrinos may also be supplied to the cathode from the oxidant source by thermally or chemically decomposing increased binding energy hydrogen compounds. An exemplary source of oxidant 430 produced by the hydrino reactants comprises $M^{n+} H^{-}\left(\dfrac{1}{p}\right)_{n}$ having a cation $M^{n+}$ (where $n$ is an integer) bound to a hydrino hydride ion such that the binding energy of the cation or atom $M^{(n-1)+}$ is less than the binding energy of the hydrino hydride ion $H^{-}\left(\dfrac{1}{p}\right)$. Other suitable oxidants undergo reduction or reaction to produce at least one of (a) increased binding energy hydrogen compound with a different stoichiometry than the reactants, (b) an increased binding energy hydrogen compound having the same stoichiometry comprising one or more increased binding energy species that have a higher binding energy than the corresponding species of the reactant(s), (c) hydrino or hydrino hydride, (d) dihydrino having a higher binding energy than the reactant dihydrino, or (e) hydrino having a higher binding energy than the reactant hydrino.

In certain embodiments, the power, chemical, battery and fuel cell systems disclosed herein that regenerate the reactants and maintain the reaction to form lower-energy hydrogen can be closed except that only hydrogen consumed in forming hydrinos need be replaced wherein the consumed hydrogen fuel may be obtained from the electrolysis of water. The fuel cell may be used for broad applications such as electric power generation such as utility power, cogeneration, motive power, marine power, and aviation. In the latter case, the CIHT cell may charge a battery as power storage for an electric vehicle.

The power may be controlled by controlling the cathode and anode half-cell reactants and reaction conditions. Suitable controlled parameters are the hydrogen pressure and operating temperature. The fuel cell may be a member of a plurality of cells comprising a stack. The fuel cell members may be stacked and may be interconnected in series by an interconnect at each junction. The interconnect may be metallic or ceramic. Suitable interconnects are electrically conducting metals, ceramics, and metal-ceramic composites.

In an embodiment, the cell is periodically reversed in polarity with an optional applied voltage to cause at least one of oxidation-reduction reaction products and hydrino products to be removed to eliminate product inhibition. The products may also be removed by physical and thermal methods such as ultrasound and heating, respectively.

## X. Chemical Reactor

The present disclosure is also directed to other reactors for producing increased binding energy hydrogen compounds of the present disclosure, such as dihydrino molecules and hydrino hydride compounds. Further products of the catalysis are power and optionally plasma and light depending on the cell type. Such a reactor is hereinafter referred to as a "hydrogen reactor" or "hydrogen cell." The hydrogen reactor comprises a cell for making hydrinos. The cell for making hydrinos may take the form of a chemical reactor or gas fuel cell such as a gas discharge cell, a plasma torch cell, or microwave power cell. Exemplary embodiments of the cell for making hydrinos may take the form of a liquid-fuel cell, a solid-fuel cell, and a heterogeneous-fuel cell. Each of these cells comprises: (i) a source of atomic hydrogen; (ii) at least one catalyst chosen from a solid catalyst, a molten catalyst, a liquid catalyst, a gaseous catalyst, or mixtures thereof for making hydrinos; and (iii) a vessel for reacting hydrogen and the catalyst for making hydrinos. As used herein and as contemplated by the present disclosure, the term "hydrogen," unless specified otherwise, includes not only proteum ($^{1}H$), but also deuterium ($^{2}H$) and tritium ($^{3}H$). In the case of the use of deuterium as a reactant of the hydrino reaction, relatively trace amounts of tritium or helium products of the heterogeneous fuels and solid fuels are expected.

In an embodiment of the chemical reactor to synthesize compounds comprising lower-energy hydrogen such as hydrino hydride compounds, iron hydrino hydride film is synthesized using an iron salt having Fe in a positive oxidation state that can react with $H^{-}$ ($1/p$) by displacement of the iron counterion, preferably iron carbide, an iron oxide, or a volatile iron salt such as $FeI_2$ or $FeI_3$. The catalyst can be K, NaH, or Li. The H can be from $H_2$ and a dissociator such as R-Ni or $Pt/Al_2O_3$. In another embodiment, iron hydrino hydride is formed from an iron source such as an iron halide that decomposes at the reactor operating temperature, a catalyst such as NaH, Li, or K, and a source of hydrogen such as $H_2$ gas and a dissociator such as R-Ni. Manganese hydrino hydride may be formed from a manganese source such as an organometallic such as Mn(II)2,4-pentanedionate that decomposes at the reactor operating temperature, a catalyst such as NaH, Li, or K, and a source of hydrogen such as $H_2$ gas and a dissociator such as R-Ni. In an embodiment, the reactor is maintained in the temperature range of about 25 °C to 800 °C, preferably in the range of about 400 °C to 500 °C.

Since alkali metals are covalent diatomic molecules in the gas phase, in an embodiment, the catalyst to form increased-binding-energy hydrogen compounds is formed from a source by a reaction with at least one other element. The catalyst such as K or Li may be generated by the dispersion of K or Li metal in an alkali halide such as the KX or LiX to form KHX LiHX wherein X is halide. The catalyst K or Li may also be generated by the reaction of vaporized $K_2$ or $Li_2$ with atomic H to form KH and K or LiH and Li, respectively. The increased-binding-energy hydrogen compounds may be MHX wherein M is an alkali metal, H is hydrino hydride, and X is a singly negatively charged ion, preferably X is one of a halide and $HCO_3^-$. In an embodiment, the reaction mixture to form KHI or KHCl wherein H is hydrino hydride comprises K metal covered with the KX (X=Cl, I) and a dissociator, preferably nickel metal such as nickel screen and R-Ni, respectively. The reaction is carried out by maintaining the reaction mixture at an elevated temperature preferably in the range of 400-700 °C with the addition of hydrogen. Preferably the hydrogen pressure is maintained at a gauge pressure of about 5 PSI. Thus, MX is placed over the K such that K atoms migrate through the halide lattice and the halide serves to disperse K and act as a dissociator for $K_2$ that reacts at the interface with H from the dissociator such as nickel screen or R-Ni to form KHX.

A suitable reaction mixture for the synthesis of hydrino hydride compounds comprises at least two species of the group of a catalyst, a source of hydrogen, an oxidant, a reductant, and a support wherein the oxidant is a source of at least one of sulfur, phosphorous, and oxygen such as $SF_6$, $S$, $SO_2$, $SO_3$, $S_2O_5Cl_2$, $F_5SOF$, $M_2S_2O_8$, $S_xX_y$ such as $S_2Cl_2$, $SCl_2$, $S_2Br_2$, $S_2F_2$, $CS_2$, $Sb_2S_5$, $SO_xX_y$ such as $SOCl_2$, $SOF_2$, $SO_2F_2$, $SOBr_2$, $P$, $P_2O_5$, $P_2S_5$, $P_xX_y$ such as $PF_3$, $PCl_3$, $PBr_3$, $PI_3$, $PF_5$, $PCl_5$, $PBr_4F$, or $PCl_4F$, $PO_xX_y$ such as $POBr_3$, $POI_3$, $POCl_3$ or $POF_3$, $PS_xX_y$ such as $PSBr_3$, $PSF_3$, $PSCl_3$, a phosphorous-nitrogen compound such as $P_3N_5$, $(Cl_2PN)_3$, or $(Cl_2PN)_4$, $(Br_2PN)_x$ (M is an alkali metal, x and y are integers, X is halogen), $O_2$, $N_2O$, and $TeO_2$. The oxidant may further comprise a source of a halide, preferable fluorine, such as $CF_4$, $NF_3$, or $CrF_2$. The mixture may also comprise a getter as a source of phosphorous or sulfur such as MgS, and MHS (M is an alkali metal). A suitable getter is an atom or compound that gives rise to an upfield shifted NMR peak with ordinary H and a hydrino hydride peak that is upfield of the ordinary H peak. Suitable getters comprise elemental S, P, O, Se, and Te or comprise compounds comprising S, P, O, Se, and Te. A general property of a suitable getter for hydrino hydride ions is that it forms chains, cages, or rings in elemental form, in doped elemental form, or with other elements that traps and stabilizes hydrino hydride ions. Preferably, the $H^-(1/p)$ can be observed in solid or solution NMR. In another, embodiment, either NaH or HCl serves as the catalyst. A suitable reaction mixture comprises MX and M'HSO4 wherein M and M' are alkali metals, preferably Na and K, respectively, and X is a halogen, preferably Cl.

The reaction mixtures comprising at least one of (1) NaH catalyst, $MgH_2$, $SF_6$, and activated carbon (AC), (2) NaH catalyst, $MgH_2$, S, and activated carbon (AC), (3) NaH catalyst, $MgH_2$, $K_2S_2O_8$, Ag, and AC, (4) KH catalyst, $MgH_2$, $K_2S_2O_8$, and AC, (5) MH catalyst (M=Li, Na, K), Al or $MgH_2$, $O_2$, $K_2S_2O_8$, and AC, (6) KH catalyst, Al, $CF_4$, and AC, (7) NaH catalyst, Al, $NF_3$, and AC, (8) KH catalyst, $MgH_2$, $N_2O$, and AC, (9) NaH catalyst, $MgH_2$, $O_2$, and activated carbon (AC), (10) NaH catalyst, $MgH_2$, $CF_4$, and AC, (11) MH catalyst, $MgH_2$, (M=Li, Na, or K) $P_2O_5$ $(P_4O_{10})$, and AC, (12) MH catalyst, $MgH_2$, $MNO_3$, (M=Li, Na, or K) and AC, (13) NaH or KH catalyst, Mg, Ca, or Sr, a transition metal halide, preferably, $FeCl_2$, $FeBr_2$, $NiBr_2$, $MnI_2$, or a rare earth halide such as EuBr2, and AC, and (14) NaH catalyst, Al, $CS_2$, and AC are suitable systems for generating power and also for producing lower-energy hydrogen compounds. In other embodiments of the exemplary reaction mixtures given supra, the catalyst cation comprises one of Li, Na, K, Rb, or Cs and the other species of the reaction mixture are chosen from those of reactions 1 through 14, The reactants may be in any desired ratios.

The hydrino reaction product is at least one of a hydrogen molecule and a hydride ion having a proton NMR peak shifted upfield of that or ordinary molecular hydrogen or hydrogen hydride, respectively. In an embodiment, the hydrogen product is bound to an element other than hydrogen wherein the proton NMR peak is shifted upfield of that of the ordinary molecule, species, or compound that has the same molecular formula as the product, or the ordinary molecule, species, or compound is not stable at room temperature.

In an embodiment, power and increased binding energy hydrogen compounds are produced by a reaction mixture comprising two or more of the following species: $LiNO_3$, $NaNO_3$, $KNO_3$, LiH, NaH, KH, Li, Na, K, $H_2$, a support such as carbon, for example activated carbon, a metal or metal hydride reductant, preferably $MgH_2$. The reactants can be in any molar ratio. Preferably the reaction mixture comprises 9.3 mole % MH, 8.6 mole % $MgH_2$, 74 mole % AC, and 7.86 mole % $MNO_3$ (M is Li, Na, or K) wherein the molar % of each species can be varied within a range of plus or minus a factor of 10 of that given for each species. The product molecular hydrino and hydrino hydride ion having a preferred 1/4 state may be observed using liquid NMR at about 1.22 ppm and -3.85 ppm, respectively, following extraction of the product mixture with an NMR solvent, preferably deuterated DFM. The product $M_2CO_3$ may serve as a getter for hydrino hydride ion to form a compound such as $MHMHCO_3$.

In another embodiment, power and increased binding energy hydrogen compounds are produced by a reaction mixture comprising two or more of the following species; LiH, NaH, KH, Li, Na, K, $H_2$, a metal or metal hydride reductant, preferably $MgH_2$ or Al powder, preferably nanopowder, a support such as carbon, preferably activated carbon, and a source of fluorine such as a fluorine gas or a fluorocarbon, preferably $CF_4$ or hexafluorobenzene (HFB). The reactants can be in any molar ratio. Preferably the reaction mixture comprises 9.8 mole % MH, 9.1 mole % $MgH_2$ or 9 mole % Al nanopowder, 79 mole % AC, and 2.4 mole % $CF_4$ or HFB (M is Li, Na, or K) wherein the molar % of each species can be varied within a range of plus or minus a factor of 10 of that given for each species. The product molecular hydrino and hydrino hydride ion having a preferred 1/4 state may be observed using liquid NMR at about 1.22 ppm and -3.86 ppm, respectively, following extraction of the product mixture with an NMR solvent, preferably deuterated DFM or $CDCl_3$.

In another embodiment, power and increased binding energy hydrogen compounds are produced by a reaction mixture comprising two or more of the following species; LiH, NaH, KH, Li, Na, K, $H_2$, a metal or metal hydride reductant, preferably $MgH_2$ or Al powder, a support such as carbon, preferably activated carbon, and a source of fluorine, preferably $SF_6$. The reactants can be in any molar ratio. Preferably the reaction mixture comprises 10 mole % MH, 9.1 mole % $MgH_2$ or 9 mole % Al powder, 78.8 mole % AC, and 24 mole % $SF_6$ (M is Li, Na, or K) wherein the molar % of each species can be varied within a range of plus or minus a factor of 10 of that given for each species. A suitable reaction mixture comprises NaH, MgH2 or Mg, AC, and $SF_6$ in these molar ratios. The product molecular hydrino and hydrino hydride ion having a preferred 1/4 state may be observed using liquid NMR at about 1.22 ppm and -3.86 ppm, respectively, following extraction of the product mixture with an NMR solvent, preferably deuterated DFM or $CDCl_3$.

In another embodiment, power and increased binding energy hydrogen compounds are produced by a reaction mixture comprising two or more of the following species; LiH, NaH, KH, Li, Na, K, $H_2$, a metal or metal hydride reductant, preferably $MgH_2$ or Al powder, a support such as carbon, preferably activated carbon, and a source of at least one of sulfur, phosphorous, and oxygen, preferably S or P powder, $SF_6$, $CS_2$, $P_2O_5$, and $MNO_3$ (M is an alkali metal). The reactants can be in any molar ratio. Preferably the reaction mixture comprises 8.1 mole % MH, 7.5 mole % $MgH_2$ or Al powder, 65 mole % AC, and 19.5 mole % S (M is Li, Na, or K) wherein the molar % of each species can be varied within a range of plus or minus a factor of 10 of that given for each species. A suitable reaction mixture comprises NaH, $MgH_2$ or Mg, AC, and S powder in these molar ratios. The product molecular hydrino and hydrino hydride ion having a preferred 1/4 state may be observed using liquid NMR at about 1.22 ppm and -3.86 ppm, respectively, following extraction of the product mixture with an NMR solvent, preferably deuterated DFM or $CDCl_3$.

In another embodiment, power and increased binding energy hydrogen compounds are produced by a reaction mixture comprising NaHS. The hydrino hydride ion may be isolated from NaHS. In an embodiment, a solid state reaction occurs within NaHS to form $H^-$ (1/4) that may be further reacted with a source of protons such as a solvent, preferably $H_2O$, to form $H_2(1/4)$.

Exemplary reaction mixtures to form molecular hydrino are 2 g NaH + 8 g TiC + 10 g KI, 3.32g + KH + 2g Mg + 8g TiC 2.13g + LiCl, 8.3 g KH + 12 g Pd / C, 20 g TiC + 2.5 g Ca + 2.5 g CaH2, 20 g TiC + 5 g Mg, 20 g TiC + 8.3 g KH, 20 g TiC + 5 g Mg + 5 g NaH, 20 g TiC + 5 g Mg + 8.3 g KH + 2.13 g LiCl, 20 g TiC + 5 g Mg + 5 g NaH + 2.1 g LiCl, 12 g TiC + 0.1 g Li + 4.98 g KH, 20 g TiC + 5 g Mg + 1.66 g LiH, 4.98 g KH + 3g NaH + 12g TiC, 1.66 g KH + 1 g Mg + 4 g AC + 3.92 g $EuBr_3$, 1.66 g KH + 10 g KCl + 1 g Mg + 3.92 g $EuBr_3$, 5 g NaH + 5 g Ca + 20 g CA II-300 + 15.45 g $MnI_2$, 20 g TiC + 5 g Mg + 5 g NaH + 5 g Pt/Ti, 3.32 g KH + 2 g Mg + 8 g TiC + 4.95 g $SrBr_2$, and 8.3 g KH + 5 g Mg + 20 g TiC + 10.4 g $BaCl_2$. The reaction may be run in the temperature range 100 °C to 1000 °C for 1 minutes to 24 hours. Exemplary temperature and time are 500 °C or 24 hours.

In an embodiment, hydrino hydride compounds may be purified. The purification method may comprise at least one of extraction and recrystallization using a suitable solvent. The method may further comprise chromatography and other techniques for separation of inorganic compounds known to those skilled in the art.

In a liquid-fuel embodiment, the solvent has a halogen functional group, preferably fluorine. A suitable reaction mixture comprises at least one of hexafluorobenzene and octafluoronaphthalene added to a catalyst such as NaH, and mixed with a support such as activated carbon, a fluoropolymer or R-Ni. The reaction mixture may comprise an energetic material that may be used in applications that are known by those skilled in the art. Suitable applications due to the high-energy balance are a propellants and piston-engine fuel. In an embodiment, a desired product is at least one of fullerene and nanotubes that are collected.

In an embodiment, molecular hydrino $H_2(1/p)$, preferably $H_2(1/4)$, is a product that is further reduced to form the corresponding hydrides ions that may be used in applications such as hydride batteries and surface coatings. The molecular hydrino bond may be broken by a collisional method. $H_2(1/p)$ may be dissociated via energetic collisions with ions or electrons in a plasma or beam. The dissociated hydrino atoms may then react to form the desired hydride ions.

## XI. Experimental

### A. Water-Flow, Batch Calorimetry

The energy and power balance of the catalyst reaction mixtures listed on the righthand side of each entry infra was obtained using cylindrical stainless steel reactors of approximately 130.3 $cm^3$ volume (1.5" inside diameter (ID), 4.5" length, and 0.2" wall thickness) or 1988 $cm^3$ volume (3.75" inside diameter (ID), 11" length, and 0.375" wall thickness) and a water flow calorimeter comprising a vacuum chamber containing each cell and an external water coolant coil that collected 99+% of the energy released in the cell to achieved an error < $\pm 1\%$. The energy recovery was determined by integrating the total output power $P_T$ over time. The power was given by

$$P_T = \dot{m} C_p \Delta T \qquad (202)$$

where $\dot{m}$ was the mass flow rate, $C_p$ was the specific heat of water, and $\Delta T$ was the absolute change in temperature between the inlet and outlet. The reaction was initiated by applying precision power to external heaters. Specially, 100-200 W of power (130.3 $cm^3$ cell) or 800-1000 W (1988 $cm^3$ cell) was supplied to the heater. During this heating period, the reagents reached a hydrino reaction threshold temperature wherein the onset of reaction was typically confirmed by a rapid rise in cell temperature. Once the cell temperature reached about 400-500 °C the input power was set to zero. After 50 minutes, the program directed the power to zero. To increase the rate of heat transfer to the coolant, the chamber was re-pressurized with 1000 Torr of helium, and the maximum change in water temperature (outlet minus inlet) was approximately 1.2 °C. The assembly was allowed to fully reach equilibrium over a 24-hour period as confirmed by the observation of full equilibrium in the flow thermistors.

In each test, the energy input and energy output were calculated by integration of the corresponding power. The thermal energy in the coolant flow in each time increment was calculated using Eq. (202) by multiplying volume flow rate of water by the water density at 19 °C (0.998 kg/liter), the specific heat of water (4.181 kJ/kg °C), the corrected temperature difference, and the time interval. Values were summed over the entire experiment to obtain the total energy output. The total energy from the cell $E_T$ must equal the energy input $E_{in}$ and any net energy $E_{net}$. Thus, the net energy was given by

$$E_{net} = E_T - E_{in}. \tag{203}$$

From the energy balance, any excess heat $E_{ex}$ was determined relative to the maximum theoretical $E_{net}$ by

$$E_{ex} = E_{net} - E_{int}, \tag{204}$$

The calibration test results demonstrated a heat coupling of better than 98% of the resistive input to the output coolant, and zero excess heat controls demonstrated that the with calibration correction applied, the calorimeter was accurate to within less than 1% error. The results are given as follows where Tmax is the maximum cell temperature, Ein is the input energy, and dE is the measured output energy in excess of the input energy. All energies are exothermic. Positive values where given represent the magnitude of the energy. In experiments with bulk catalysts such as Mg with a support such as TiC, $H_2$ was present from dehydriding of the metal of the vessel as confirmed by mass spectroscopy and gas chromatography.

Calorimetry Results

Cell# 4326-031210WFJL1: 20 g TiC #112 + 5 g Mg #6; Maximum Temperature (Tmax): 685 °C; Input Energy (Ein): 232.6 kJ; (Net Energy) dE: 6.83 kJ; Theoretical Energy: 0 kJ; Energy Gain: infinite.

Cell# 4327-031210WFJL2: 20 g TiC #112 + 5 g Mg #6 + 1 g LiH #1 + 2.5 g LiCl#2 + 3.07 g KCl #1 (500V, W-G, 1W, C); Tmax: 612 °C; Ein: 381.6 kJ; dE: 9.59 kJ; CIHT PS Theo: -1.93 kJ; Chem Theo: 0 kJ; Energy Gain: 4.98.

Cell # 369-031210WFRC3: 8.3 g KH-22 + 0.83 g KOH-1 + 20 g TiC-110; Tmax: 722 °C; Ein: 492.5 kJ; dE: 6.8 kJ; Theoretical Energy: 0 kJ; Energy Gain: infinite.

Cell# 4320-031110WFJL4: 20 g Ti3SiC2-1 + 5 g Mg #6 + 8.3 g KH #22 + 2.13 g LiCl #2 (12rpm); Tmax: 604 °C; Ein: 514.1 kJ; dE: 11.97 kJ; Theoretical Energy: -3.05 kJ; Energy Gain: 3.93.

Cell # 364-0311110WFRC2: 3 g NaH-8 + 3 g Mg-6 + 1.3 g LiCl-2; Tmax: 566 °C; Ein: 234.7 kJ; dE: 5 kJ; Theoretical Energy: -1.1 kJ; Energy Gain: 4.5; Energy/mol oxidant: 166.5 kJ/mol.

Cell # 365-031110WFRC3: 5 g NaH-8 + 5 g Mg-6 + 2.13 g LiCl-2; Tmax: 710 °C; Ein: 490.5 kJ; dE: 7.9 kJ; Theoretical Energy: -1.8 kJ; Energy Gain: 4.4; Energy/mol oxidant: 158 kJ/mol.

Cell # 366-031110WFRC4: 29 g La-1 + 20 g TiC-109; Tmax: 728 °C; Ein: 588 kJ; dE: 6 kJ; Theoretical Energy: 0 kJ; Energy Gain: infinite.

031110WFCKA1#1630; 1.0" light-duty cell (LDC); 8.0g NaH#8+8.0g Mg#6+3.4g LiCl#2; Tmax: 570 °C; Ein: 245 kJ; dE: 10 kJ; Theoretical Energy: 2.9 kJ; Energy Gain: 3.5.

031110WFCKA2#1629; 1.5" LDC; 13.2gKH#22+8.0g Mg#6+16.64g BaCl2#4+32.0g TiC #107; Tmax: 560 °C; Ein: 260 kJ; dE: 20 kJ; Theoretical Energy: 6.56 kJ; Energy Gain: 3.1.

031110WFCKA2#1628; 1.5" LDC; 13.2gKH#22+8.0g Mg#6+16.64g BaCl2#4+32.0g TiC #107; Tmax: 563 °C; Ein: 274 kJ; dE: 16 kJ; Theoretical Energy: 6.56 kJ; Energy Gain: 2.4.

031010WFCKA1#1627; 1.5" LDC; 8.0g NaH#8+8.0g Mg#6+3.4g LiCl#2+5.0g TiC#104; Tmax: 584 °C; Ein: 294 kJ; dE: 8 kJ; Theoretical Energy: 2.9 kJ; Energy Gain: 2.8.

031010WFCKA2#1626; 1.5" LDC; 8.0gNaH#8+8.0g Mg#6+3.4g LiCl#2+20.0g TiC #105; Tmax: 575 °C; Ein: 284 kJ; dE: 12 kJ; Theoretical Energy: 2.9 kJ; Energy Gain: 4.2.

031010WFCKA3#1625; 1.5" LDC; 8.0g NaH#8+8.0g Mg#6+3.4g LiCl#2+10.0g TiC#105; Tmax: 560 °C; Ein: 293 kJ; dE: 8 kJ; Theoretical Energy: 2.9 kJ; Energy Gain: 2.8.

030910WFCKA2#1624; 1.5" LDC; 5.0gNaH#8+5.0g Mg#6+2.13g LiCl#2+10.0g TiC #105+10.0g SiC#1; Tmax: 570 °C; Ein: 281kJ; dE: 8 kJ; Theoretical Energy: 1.8 kJ; Energy Gain: 4.4.

030910WFCKA3#1623; 1.5" LDC; 1.66g LiH#1+4.5g LiF#1+9.28g KF#1+20.0g TiC#105; Tmax: 580 °C; Ein: 321kJ; dE: 4 kJ.

Cell# 4312-031010WFJL4: 20g Ti3SiC2-1 + 5g Mg #6 + 8.3g KH #22 + 2.13g LiCl #2 (6rpm); Tmax: 598 °C; Ein: 511.0 kJ; dE: 5.05 kJ; Theoretical Energy: -3.05 kJ; Energy Gain: 1.65.

Cell# 4313-031010WFGH1: 20g Ti3SiC2#1 + 5g Mg#5 + 5g NaH#7 + 2.13g LiCl#2(6 rpm); Tmax: 709 °C; Ein: 531.1 kJ; dE: 5.24 kJ; Theoretical Energy: -1.84 kJ; Energy Gain: 2.85.

Cell # 361-031010WFRC3: 5 g NaH-8 + 5 g Mg-6 + 20 g MgB2-2; Tmax: 713 °C; Ein: 503.3 kJ; dE: 6.2 kJ; Theoretical Energy: 0 kJ; Energy Gain: infinite.

Cell # 362-031010WFRC4: 8.3 g KH-22 + 5 g Mg-6 + 20 g MgB2-2; Tmax: 709 °C; Ein: 560 kJ; dE: 5.7 kJ; Theoretical Energy: 0 kJ; Energy Gain: infinite.

Cell# 4303-030910WFJL4: 20g Ti3SiC2-1 + 5g Mg #6 + 8.3g KH #22 + 2.13g LiCl #2 (1rpm); Tmax: 603 °C; Ein: 558.0 kJ; dE: 10.63 kJ; Theoretical Energy: -3.05 kJ; Energy Gain: 3.49.

Cell# 4304-030910WFGH1: 20g Ti3SiC2#1 + 5g Mg#5 + 5g NaH#7 + 2.13g LiCl#2(12 rpm); Tmax: 715 °C; Ein: 551.3 kJ; dE: 4.35 kJ; Theoretical Energy: -1.84 kJ; Energy Gain: 2.36.

Cell # 356-030910WFRC2: 1.28 g LiCl-2 + 4.98 g KH-22 + 3 g Mg-6 + 12 g TiC-105; Tmax: 569 °C; Ein: 226.0 kJ; dE: 5.2 kJ; Theoretical Energy: -1.8 kJ; Energy Gain: 2.9; Energy/mol oxidant: 173.2 kJ/mol.

Cell # 357-030910WFRC3: 1.7 g Mg-6 + 21.2 g Bi-1 + 20 g TiC-105; Tmax: 728 °C; Ein: 501.5 kJ; dE: 13.3 kJ; Theoretical Energy: - 2.9 kJ; Energy Gain: 4.6.

Cell # 358-030910WFRC4: 5 g Mg-6 + 20 g Ti3SiC2-1; Tmax: 712 °C; Ein: 515.1 kJ; dE: 8.1 kJ; Theoretical Energy: 0 kJ; Energy Gain: infinite.

Cell# 4293-030810WFJL3; 12g TiC #103 + 3g Mg #5 + 1g LiH #1 + 2.7g LiF #1 + 4.2g NaF #1; Tmax: 759 °C; Ein: 427.7 kJ; dE: 12.28 kJ; Theoretical Energy: -0.52 kJ; Energy Gain: 23.61.

Cell# 4296-030810WFGH2: 12g TiC + 3g Mg + 3.94g Ag; Tmax: 670C; Ein: 270.1 kJ; dE: 4.54 kJ; Theoretical Energy: 0.00 kJ; Energy Gain: infinite.

Cell # 353-030810WFRC3: 2.13 g LiCl-1 + 5 g Mg-2 + 5 g NaH-4 + 20 g TiC-107; Tmax: 721 °C; Ein: 475.1 kJ; dE:

16.2 kJ; Theoretical Energy; -1.8 kJ; Energy Gain: 9; Energy/mol oxidant: 324 kJ/mol.

Cell # 354-030810WFRC4: 2.13 g LiCl-1 + 5 g Mg-2 + 5 g NaH-4 + 20 g TiC-109; Tmax: 714 °C; Ein: 516 kJ; dE: 12.5 kJ; Theoretical Energy: -3.0 kJ; Energy Gain: 4.2; Energy/mol oxidant: 250 kJ/mol.

030810WFCKA2#1622; 1.5" LDC, 5.0g NaH#4+5.0g Mg#2+2.13g LiCl#1+20.0g TiC#105; Tmax: 580 °C; Ein: 280kJ; dE: 9 kJ; Theoretical Energy: 1.8 kJ; Energy Gain: 5.0.

030810WFCKA3#1621; 1.5" LDC, 5.0gNaH#4+5.0g Mg#2+2.13g LiCl#1+20.0g TiC#105; Tmax: 690 °C; Ein: 379kJ; dE: 8 kJ; Theoretical Energy: 1.8 kJ; Energy Gain: 4.4.

030510WFCKA1#1620; 1.5" LDC, 5.0g NaH#7+5.0g Mg#5+2.18g LiCl#2+20.g YC2#5; Tmax: 570 °C; Ein: 287 kJ; dE: 7 kJ; Theoretical Energy: 1.8 kJ; Energy Gain: 3.8.

030510WFCKA2#1619; 1.5" LDC, 8.0g NaH#7+8.0g Mg#5+3.4g LiCl#2+32.0g TiC#103; Tmax: 562 °C; Ein: 282 kJ; dE: 15 kJ; Theoretical Energy:2.9 kJ; Energy Gain: 5.1.

030510WFCKA3#1618; 1.5" LDC, 5.0g Mg#5+1.66g LiH#1 +4.5g LiF#1+9.28g KF#1+20.0g TiC#101; Tmax: 670 °C; Ein: 392 kJ; dE: 6 kJ; Theoretical Energy: 2.55; kJ; Energy Gain: 2.3.

Cell# 4284-030510WFJL3 12g TiC #101 + 3g Mg #5 + 1g LiH #1 + 2.7g LiF #1 + 5.57g KF #1; Tmax: 676 °C; Ein: 333.9 kJ; dE: 14.12 kJ; Theoretical Energy: -1.52 kJ; Energy Gain: 9.3.

Cell# 4285-030510WFJL4: 20g TiC #101 + 5g Mg #5 + 5g NaH #7 + 2.13g LiCl #2 (0 rpm); Tmax: 616 °C; Ein: 564.3 kJ; dE: 9.67 kJ; Theoretical Energy: -1.85 kJ; Energy Gain: 5.23.

Cell# 4286-030510WFGH1: 20g Ti3SiC2#1 + 5g Mg#5 + 5g NaH#7 + 2.13gLiCl#2(0 rpm); Tmax: 717 °C; Ein: 559.3 kJ; dE: 4.64 kJ; Theoretical Energy: -1.84 kJ; Energy Gain: 2.52.

Cell # 349-030510WFRC3: 12.4 g SrCl2-AD-10 + 5 g Mg-5 + 8.3 g KH-21 + 20 g TiC-98; Tmax: 719 °C; Ein: 486.8 kJ; dE: 21.6 kJ; Theoretical Energy: - 8.5 kJ; Energy Gain: 2.5; Energy/mol oxidant: 276.9 kJ/mol.

Cell # 350-030510WFRC4: 5 g Ca-1 + 2.6 g Cu-1 + 20 g TiC-103; Tmax: 730 °C; Ein: 521.8 kJ; dE: 10.5 kJ; Theoretical Energy: - 0.08 kJ; Energy Gain: 131.3.

030410WFCKA2#1616; 1.5" LDC; 5.0gNaH#4+5.0g Mg#2+2.13g LiCl#1+20.0g TiC#101; Tmax: 708 °C; Ein: 378 kJ; dE: 11 kJ; Theoretical Energy: 1.8 kJ; Energy Gain: 6.1.

030410WFCKA3#1615; 1.5" LDC; 5.0g NaH#4+5.0g Mg#2+2.13g LiCl#1+20.0g TiC#101; Tmax: 590 °C; Ein: 298 kJ; dE: 8 kJ; Theoretical Energy: 1.8 kJ; Energy Gain: 4.4.

030310WFCKA2#1613; 1.5" LDC; 5.0gNaH#7+5.0g Mg#5+2.13g LiCl#2+20.0g SiC #1; Tmax: 520 °C; Ein: 256 kJ; dE: 7kJ; Theoretical Energy: 1.8kJ; Energy Gain: 3.8.

030310WFCKA3#1612; 1.5" LDC; 5.0gNaH#7+5.0g Mg#5+2.13g LiCl#2+17.6g WC#A-1; Tmax: 520 °C; Ein: 268 kJ; dE: 5kJ; Theoretical Energy: 1.8kJ; Energy Gain: 2.7.

Cell# 4273-030410WFJL1: 20g TiC #88 + 5g Ca #2 + 1.40g Ni; Tmax: 699 °C; Ein: 452.3 kJ; dE: 6.8 kJ; Theoretical Energy: -0.68 kJ; Energy Gain: 9.95.

Cell # 349-030410WFRC3: 2.13 g LiCl-1 + 5 g Mg-2 + 5 g NaH-4 + 20 g TiC-103; Tmax: 731 °C; Ein: 474.9 kJ; dE: 14.2 kJ; Theoretical Energy: -1.8 kJ; Energy Gain: 7.9; Energy/mol oxidant: 284 kJ/mol.

Cell # 350-030410WFRC4: 2.13 g LiCl-1 + Mg-2 + 8.3 g KH-24 + 20 g TiC-103; Tmax: 711 °C; Ein: 522.1 kJ; dE: 10.3 kJ; Theoretical Energy: -3.0 kJ; Energy Gain: 3.4; Energy/mol oxidant: 206 kJ/mol.

Cell# 4264-030310WFJL1: 20gTiC-GW-3 + 5g Mg #5 + 5g NaH #7 + 2.13g LiCl #2; Tmax: 679 °C; Ein: 443.1 kJ; dE: 11.72 kJ; Theoretical Energy: -1.85 kJ; Energy Gain: 6.34.

Cell# 4266-030310WFJL3: 12g TiC #88 + 3g Mg #5 + 3g NaH #7 + 1.21g LiF #1 + 0.48g NaF #1 + 2.44g KF #1; Tmax: 737 °C; Ein: 373.3 kJ; dE: 10.61 kJ; Theoretical Energy: -0.45 kJ; Energy Gain: 23.61.

Cell# 4267-030310WFJL4: 20g TiC #88 + 5g Mg #5 + 5g NaH #7 + 2.13g LiCl #2 (6rpm); Tmax: 628 °C; Ein: 590.3 kJ; dE: 9.41 kJ; Theoretical Energy: -1.85 kJ; Energy Gain: 5.09.

Cell # 343-030310WFRC1: 3 g NaH-6 + 2.7 g LiBH4 + 12 g TiC-88; Tmax: 561 °C; Ein: 259.3 kJ; dE: 7 kJ; Theoretical Energy: -4.0 kJ; Energy Gain: 1.8.

Cell # 345-030310WFRC3: 5 g Mg-5 + 6.6 Ag-1 + 20 g TiC-88; Tmax: 773 °C; Ein: 545.3 kJ; dE: 14.9 kJ; Theoretical Energy: -2.4 kJ; Energy Gain: 6.2.

Cell # 346-030310WFRC4: 5 g Ca-1 + 1.4 g Ni-1 + 20 g TiC-88; Tmax: 766 °C; Ein: 557.0 kJ; dE: 12.4 kJ; Theoretical Energy: - 0.7 kJ; Energy Gain: 17.7.

Cell# 4255-030210WFJL1: 20g TiC #99 + 2.78g LiH #1 + 5g NaH #7 + 2.13g LiCl #2; Tmax: 680 °C; Ein: 439.6 kJ; dE: 8.56 kJ; Theoretical Energy: -1.85 kJ; Energy Gain: 4.63.

Cell# 4257-030210WFJL3: 12g TiC #99 + 1g LiH #1 + 1.21g LiF #1 + 0.48g NaF #1 + 2.44g KF #1; Tmax: 689 °C; Ein: 333.7 kJ; dE: 8.91 kJ; Theoretical Energy: -0.83 kJ; Energy Gain: 10.73.

Cell# 4258-030210WFJL4: 20g TiC #99 + 5g Mg #5 + 5g NaH #7 + 2.13g LiCl #2 (1rpm); Tmax: 615 °C; Ein: 585.3 kJ; dE: 9.10 kJ; Theoretical Energy: -1.85 kJ; Energy Gain: 4.92.

Cell# 4259-030210WFGH1: 20g TiC + 5g Mg + 8.3g KH + 2.13g LiCl(6 rpm); Tmax: 725 °C; Ein: 559.8 kJ; dE: 9.08 kJ; Theoretical Energy: -3.03 kJ; Energy Gain: 3.00.

Cell # 339-030210WFRC1: 30 g RNi-185; Temperature Slope Change (TSC): 178 °C (69-247 °C); Tmax: 371 °C; Ein: 109.7 kJ; dE: 14.5 kJ.

Cell # 340-030210WFRC2: 3 g NaH-6 + 3 g Mg-5 + 12 g TiC-GW-3; Tmax: 590 °C; Ein: 257.9 kJ; dE: 5.5 kJ; Theoretical Energy: 0 kJ; Energy Gain: infinite.

Cell # 341-030210WFRC3: 2.13 g LiCl-1 + 8.3 g KH-6 + 5 g Mg-5 + 20 g TiC-99; Tmax: 767 °C; Ein: 562.8 kJ; dE: 19.8 kJ; Theoretical Energy: -3.0 kJ; Energy Gain: 6.6; Energy/mol oxidant: 396 kJ/mol.

Cell # 342-030210WFRC4: 2.13 g LiCl-1 + 8.3 g KH-21 + 5 g Mg-5; Tmax: 739 °C; Ein: 564.8 kJ; dE: 9.3 kJ; Theoretical Energy: -3.0 kJ; Energy Gain: 3.1; Energy/mol oxidant: 186 kJ/mol.

030210WFCKA2#1610; 1.5" LDC; 10.0 g NaH#6+10.0g Mg#5+4.26g LiCl#1+40.0g TiC #98; Tmax: 490 °C; Ein: 248 kJ; dE: 16 kJ; Theoretical Energy: 3.6 kJ; Energy Gain: 4.4.

030230WFCKA3#1609; 1.5" LDC; 10.0 g NaH#6+10.0g Mg#5+4.26g LiCl#1+40.0g TiC #98; Tmax: 510 °C; Ein: 274 kJ; dE: 15 kJ; Theoretical Energy: 3.6 kJ; Energy Gain: 4.2.

030110WFCKA2#1607; 1.5" LDC; 5.0 g NaH#6+5.0g Mg#5+2.13g LiCl#1+10.0g TiC #97+10.0g TiC-Nano#1"; Tmax: 490 °C; Ein: 288 kJ; dE: 10 kJ; Theoretical Energy: 1.8 kJ; Energy Gain: 5.5.

022610WFCKA2#1604; 1.5" LDC; 5.0 g NaH#6+5.0g Mg#5+2.13g LiCl#1+20.0g PdC #3; Tmax: 505 °C; Ein: 228 kJ; dE: 12 kJ; Theoretical Energy: 1.8 kJ; Energy Gain: 6.6.

022610WFCKA3#1603; 1.5" LDC; 8.3 g KH#21+5.0g Mg#5+2.13 g LiCl#1+ 20.0g PdC#3; Tmax: 500 °C; Ein: 232 kJ; dE: 14 kJ; Theoretical Energy: 3.1 kJ; Energy Gain: 4.5.

022610WFCKA1#1605;1.5" LDC;2.5g Ca#1+2.5gCaH2#1+20.0g TiC#97; Tmax: 810 °C; Ein: 484 kJ; dE: 4 kJ.

Cell# 4246-030110WFJL1: 20g TiC-GW-4 + 5g Mg #5 + 5g NaH #6 + 2.13g LiCl #1; TSC: Not Obs; Tmax: 674 °C; Ein: 427.7 kJ; dE: 10.90 kJ; Theoretical Energy: -1.85 kJ; Energy Gain: 5.9.

Cell# 4248-030110WFJL3: 12g TiC #98 + 4.98g KH #21 + 2.70g LiF #1 + 5.57g KF #1; Tmax: 679 °C; Ein: 331.9 kJ; dE: 8.84 kJ; Theoretical Energy: 0 kJ; Energy Gain: infinite.

Cell# 4249-030110WFJL4: 20g TiC #98 + 5g Mg #5 + 5g NaH #6 (12rpm); Tmax: 613 °C; Ein: 594.3 kJ; dE: 7.19 kJ; Theoretical Energy: 0; Energy Gain: infinite.

Cell# 4250-030110WFGH1: 20g TiC#97 + 5g Mg#5 + 8.3g KH#21 + 2.13g LiCl#1(1 rpm); Tmax: 666 °C; Ein: 483.1 kJ; dE: 9.42 kJ; Theoretical Energy: -3.03 kJ; Energy Gain: 3.11. Cell# 4253-030110WFGH4: 20g WC-A-1 + 5g Mg#2 + 8.3g KH#21 + 2.13g LiCl#1; Tmax: 632 °C; Ein: 381.8 kJ; dE: 8.32 kJ; Theoretical Energy: -3.03 kJ; Energy Gain: 2.75.

Cell# 4254-030110WFGH5: 20g Ti3SiC2#1 + 5g Mg#5 + 8.3g KH#21 + 2.13g LiCl#1; Tmax: 627 °C; Ein: 408.3 kJ; dE: 9.15 kJ; Theoretical Energy: -3.03 kJ; Energy Gain: 3.02.

Cell # 337-030110WFRC3: 12.4 g SrBr2-AD-4 + 5 g NaH-6 + 5 g Mg-5 + 20 g TiC-98; Tmax: 716 °C; Ein: 506.9 kJ; dE: 14.7 kJ; Theoretical Energy: -3.6 kJ; Energy Gain: 4.1; Energy/mol oxidant: 294 kJ/mol.

Cell # 338-030110WFRC4: 7.95 g SrCl2-AD-10 + 8.3 g KH-21 + 5 g Mg-5 + 20 g TiC-98; Tmax: 716 °C; Ein: 543.9 kJ; dE: 10.5 kJ; Theoretical Energy: -3.0 kJ; Energy Gain: 3.5; Energy/mol oxidant: 210 kJ/mol.

Cell# 4237-022610WFJL1: 20g TiC #97 + 5g Mg #5 + 8.3g KH #21; Tmax: 678 °C; Ein: 420.5 kJ; dE: 8.72 kJ; Theoretical Energy: 0 kJ; Energy Gain: infinite.

Cell# 4239-022610WFJL3: 12g TiC #97 + 1.0g LiH #1 + 2.7g LiF #1 + 5.57g KF #1; Tmax: 683 °C; Ein: 342.9 kJ; dE: 12.62 kJ; Theoretical Energy: -1.52 kJ; Energy Gain: 8.28.

Cell# 4244-022610WFGH4: 20g TiC88 + 5g Mg#2 + 8.3g KH#4 + 2.13g LiCl#1, Tmax: 681 °C; Ein: 440.2 kJ; dE: 6.43 kJ; Theoretical Energy: -3.03 kJ; Energy Gain: 2.12.

Cell# 4245-022610WFGH5: 20g CrB2#3 + 5g Mg#5 + 5gNaH#6; Tmax: 661 °C; Ein: 429.6 kJ; dE: 6.55 kJ; Theoretical Energy: 0 kJ; Energy Gain: infinite.

Cell # 332-022610WFRC2: 3 g NaH-6 + 3 g Mg-5 + 12 g Pd/A1203-1; Tmax: 584 °C; Ein: 241.6 kJ; dE: 10.5 kJ; Theoretical Energy: -5.6 kJ; Energy Gain: 1.9.

Cell # 333-022610WFRC3: 2.13 g LiCl-2 + 5 g NaH-6 + 5 g Mg-5 + 20 g Pd/Al2O3-1; Tmax: 722 °C; Ein: 472.7 kJ; dE: 21.7 kJ; Theoretical Energy: -11.2 kJ; Energy Gain: 1.9; Energy/mol oxidant: 434 kJ/mol.

Cell # 334-022610WFRC4: 10.4 g BaCl2-AD-4 + 8.3 g KH-21 + 5 g Mg-5 + 20 g Pd/Al2O3-1; Tmax: 716 °C; Ein: 537.0 kJ; dE: 16.9 kJ; Theoretical Energy: -11.1 kJ; Energy Gain: 1.5; Energy/mol oxidant: 338 kJ/mol.

Cell# 4230-022510WFJL3: 12g TiC #96 + 1.67g LiH #1 + 3g NaH #6 + 1.28g LiCl #1; Tmax: 682 °C; Ein: 352.9 kJ; dE: 8.33 kJ; Theoretical Energy: -1.11 kJ; Energy Gain: 7.50.

Cell# 4231-022510WFJL4: 20g TiC #96 + 5g Mg #5 + 5g NaH #6 + 0.35g Li #2 (12 rpm); Tmax: 621 °C; Ein: 604.1 kJ; dE: 7.30 kJ; Theoretical Energy: -1.72; Energy Gain: 4.23.

Cell# 4232-022510WFGH1: 20g TiC#68 + 5g Mg#5 + 0.1g MgH2#4(0 rpm); Tmax: 681 °C; Ein: 520.8 kJ; dE: 4.12 kJ; Theoretical Energy: 0 kJ; Energy Gain: infinite.

Cell # 328-022510WFRC2: 3 g NaH-6 + 3 g Mg-5 + 12 g WCCo-A-1; Tmax: 558 °C; Ein: 237.8 kJ; dE: 4.0 kJ; Theoretical Energy: 0 kJ; Energy Gain: infinite.

Cell # 329-022510WFRC3: 2.13 g LiCl-2 + 5 g NaH-6 + 5 g Mg-5 + 20 g WCCo-A-1; Tmax: 709 °C; Ein: 487.5 kJ; dE: 8.6 kJ; Theoretical Energy: -1.8 kJ; Energy Gain: 4.8; Energy/mol oxidant: 172 kJ/mol.

Cell# 4219-022410WFJL1: 20g TiC #96 + 5g Mg #5 + 5g NaH #6 + 2.1g LiCl #1; Tmax: 686 °C; Ein: 438.9 kJ; dE: 10.70 kJ; Theoretical Energy: -1.82 kJ; Energy Gain: 5.87.

Cell# 4222-022410WFJL4: 20g TiC #96 + 5g Mg #5 + 5g NaH #6 + 0.35g Li #2 (0 rpm); Tmax: 614 °C; Ein: 568.3 kJ; dE: 9.10 kJ; Theoretical Energy: -1.72; Energy Gain: 5.28.

Cell# 4223-022410WFGH1: 20g TiC#96 + 5g Mg#5 + 0.1gMgH2#4(12 rpm); Tmax: 679C; Ein: 477.5 kJ; dE: 6.23 kJ; Theoretical Energy: 0 kJ; Energy Gain: infinite.

Cell# 4226-022410WFGH4: 20g TiC96 + 5g Mg#5 + 8.3g KH#21 + 0.35g Li#2; Tmax: 637C; Ein: 386.7 kJ; dE: 7.81 kJ; Theoretical Energy: -1.64 kJ; Energy Gain: 4.76.

Cell # 324-022410WFRC2: 3 g NaH-6 + 3 g Mg-5 + 6 g Pt/C-3; Tmax: 592 °C; Ein: 247.5 kJ; dE: 8.3 kJ; Theoretical Energy: 0 kJ; Energy Gain: infinite.

Cell # 325-022410WFRC3: 2.13 g LiCl-2 + 5 g NaH-6 + 5 g Mg-5 + 20 g WC-A-1; Tmax: 710 °C; Ein: 476.9 kJ; dE: 11.2 kJ; Theoretical Energy: -1.8 kJ; Energy Gain: 6.2; Energy/mol oxidant: 224 kJ/mol.

Cell # 326-022410WFRC4: 2.13 g LiCl-2 + 8.3 g KH-21 + 5 g Mg-5 + 20 g WC-A-1; Tmax: 716 °C; Ein: 529.6 kJ; dE: 11.2 kJ; Theoretical Energy: -3.0 kJ; Energy Gain: 3.7; Energy/mol oxidant: 224 kJ/mol.

Cell # 320-022310WFRC2: 4.98 g KH-21 + 3 g Mg-5 + 6 g Pt/C-3; Tmax: 572 °C; Ein: 227.7 kJ; dE: 9.8 kJ; Theoretical Energy: 0 kJ; Energy Gain: infinite.

Cell # 321-022310WFRC3: 2.13 g LiCl-2 + 5 g NaH-6 + 5 g Mg-5 + 20 g TiC-95; Tmax: 699 °C; Ein: 452.5 kJ; dE: 10.5 kJ; Theoretical Energy: -1.8 kJ; Energy Gain: 5.8; Energy/mol oxidant: 210 kJ/mol.

Cell # 322-022310WFRC4: 2.13 g LiCl-2 + 8.3 g KH-21 + 5 g Mg-5 + 20 g TiC-95; Tmax: 711 °C; Ein: 526.8 kJ; dE: 8.9 kJ; Theoretical Energy: -3.0 kJ; Energy Gain: 3; Energy/mol oxidant: 178 kJ/mol.

Cell# 4203-022210WFJL3: 12g TiC #94 + 3g Mg #5 + 3.94g Ag; Tmax: 764 °C; Ein: 381.3 kJ; dE: 7.36 kJ; Theoretical Energy: -1.42 kJ; Energy Gain: 5.2.

Cell# 4204-022210WFJL4: 20g TiC #94 + 5g Mg #5 + 5g NaH #6 + 0.35g Li #2 (1 rpm); Tmax: 613 °C; Ein: 584.3 kJ; dE: 7.67 kJ; Theoretical Energy: -1.72; Energy Gain: 4.45.

Cell# 4206-022210WFGH2: 12g TiC#95 + 1g Mg#5 + 12.69g Bi#1; TSC: 510-620 °C; Tmax: 693 °C; Ein: 301.6 kJ; dE: 7.00 kJ; Theoretical Energy: -1.76 kJ; Energy Gain: 3.97.

Cell# 4209-022210WFGH5: 20g Ti3SiC2#1 + 5g Mg#5; Tmax: 678 °C; Ein: 447.7 kJ; dE: 4.38 kJ; Theoretical Energy: 0 kJ; Energy Gain: infinite.

Cell # 317-022210WFRC2: 1.3 g LiCl-2 + 3 g NaH-6 + 3 g Mg-5 + 12 g TiC-Nano-1; Tmax: 519 °C; Ein: 205.1 kJ; dE: 6.0 kJ; Theoretical Energy: -1.1 kJ; Energy Gain: 5.5; Energy/mol oxidant: 199.8 kJ/mol.

Cell # 318-022210WFRC3: 2.13 g LiCl-2 + 5 g NaH-6 + 5 g Mg-5 + 20 g TiCN-A-1 ; Tmax: 716 °C; Ein: 474.2 kJ; dE: 12.3 kJ; Theoretical Energy: -1.8 kJ; Energy Gain: 6.8; Energy/mol oxidant: 246 kJ/mol.

Cell# 4199-021910WFGH4: 20g TiC94 + 5g Mg#4 + 8.3g KH#21 + 4.74g LiAlH4#1; TSC: 325-435 °C; Tmax: 708 °C; Ein: 478.8 kJ; dE: 22.05 kJ; Theoretical Energy: -16.5 kJ; Energy Gain: 1.34.

Cell # 313-021910WFRC2: 4.76 g SrCl2-AD-10 + 4.98 g KH-21 + 3 g Mg-4 + 12 g Ti3SiC2-1; Tmax: 584 °C; Ein: 239.5 kJ; dE: 6.1 kJ; Theoretical Energy: -3.3 kJ; Energy Gain: 1.9; Energy/mol oxidant: 203.1 kJ/mol.

Cell # 315-021910WFRC4: 6.25 g BaCl2-SD-4 + 4.98 g KH-21 + 3 g Mg-4 + 12 g Ti3SiC2-1; Tmax: 569 °C; Ein: 265.8 kJ; dE: 6.4 kJ; Theoretical Energy: - 2.4 kJ; Energy Gain: 2.7 Energy/mol oxidant: 213.1 kJ/mol.

Cell# 4189-021810WFJL3: 12g TiC #93 + 3g Mg #4 + 4.88g K + 0.1g KH #21; Tmax: 682 °C; Ein: 308.1 kJ; dE: 5.49 kJ; Theoretical Energy: 0 kJ; Energy Gain: infinite.

Cell # 309-021810WFRC2: 3 g NaH-6 + 3 g Mg-4 + 12 g TiCN-A-1; Tmax: 577 °C; Ein: 238.2 kJ; dE: 4.1 kJ;

Theoretical Energy: 0 kJ; Energy Gain: infinite.

Cell # 310-021810WFRC3: 2.13 g LiCl-2 + 8.3 g KH-21 + 5 g Mg-4 + 20 g Ti3SiC2-1; Tmax: 712 °C; Ein: 475.2 kJ; dE: 10.6 kJ; Theoretical Energy: -3.0 kJ; Energy Gain: 3.5; Energy/mol oxidant: 212 kJ/mol.

Cell # 311-021810WFRC4: 1.3 g LiCl-2 + 4.98 g KH-21 + 3 g Mg-4 + 12 g TiCN-A-1; Tmax: 555 °C; Ein: 265.9 kJ; dE: 5 kJ; Theoretical Energy: -1.8 kJ; Energy Gain: 2.8; Energy/mol oxidant: 166.5kJ/mol.

021810WFCKA1#1587; 1.5" LDC; 5.0g NaH#6+5.0g Mg#4+2,1g LiCl#1+20.0g TiC#93; Tmax: 720 °C; Ein: 404 kJ; dE: 10 kJ; Theoretical Energy: 1.82; Energy Gain: 5.5.

021810WFCKA2#1586; 1.0" heavy-duty cell (HDC); 3.g NaH#6+3.0g Mg#4+12.0g CrB2#2; Tmax: 714 °C; Ein: 300 kJ; dE: 4 kJ; Theoretical Energy: 0 kJ.

021710WFCKA1#1584; 1.0" HDC; 4.98g KH#19+12.0g TiC#93+3.8g KBH4#1; Tmax: 620 °C; Ein: 281 kJ; dE: 4 kJ; Theoretical Energy: 0 kJ.

021710WFCKA2#1583; 1.5" HDC; 8.3gKH#19+5.0g Mg#4+11.2g KBH4+20.0g CrB2#2; Tmax: 548 °C; Ein: 266 kJ; dE: 6 kJ; Theoretical Energy: 0 kJ.

021710WFCKA3#1582; 1.5" HDC; 5.0g NaH#6+5.0g Mg#4+8.0g NaBH4#1+20.0g CrB2#2; Tmax: 550 °C; Ein: 321 kJ; dE: 6 kJ; Theoretical Energy: 0 kJ.

021610WFCKA1#1581; 1" HDC; 8.3g KH#19+5.0g Mg#4+20.0g TiC#92+11.2g KBH4#1 (021110WFRC: 14.1 kJ); Tmax: 630 °C; Ein: 360 kJ; dE: 6 kJ; Theoretical Energy: 0 kJ.

Cell# 4178-021710WFJL1: 20g TiC #92 + 5g Mg #4; TSC: 525-575 °C; Tmax: 676 °C; Ein: 419.1 kJ; dE: 8.76 kJ; Theoretical Energy: 0 kJ; Energy Gain: infinite.

Cell# 4179-021710WFJL2: 8g TiC #92 + 3g Mg #4 + 4.98g KH #19 (1W Constant Power, W+G, NC); Tmax: 652 °C; Ein: 423.5 kJ; dE: 6.3 kJ; Theoretical Energy: -2.26 kJ from applied power; Energy Gain: 2.8.

Cell# 4180-021710WFJL3: 12g CrB2 #2 + 3g Mg #4 + 3g NaH #6; Tmax: 712 °C; Ein: 343.7 kJ; dE: 6.13 kJ; Theoretical Energy: 0 kJ; Energy Gain: infinite.

Cell# 4182-021710WFGH1: 20g TiC#92 + 5g Mg#4 + 8.3g KH#19(12 rpm); Tmax: 673 °C; Ein: 490.3 kJ; dE: 6.85 kJ; Theoretical Energy: 0 kJ; Energy Gain: infinite.

Cell # 305-021710WFRC2: 3 g NaH-6 + 3 g Mg-4 + 12 g Ti3SiC2-1; Tmax: 566 °C; Ein: 233.7 kJ; dE: 4.8 kJ; Theoretical Energy: 0 kJ; Energy Gain: infinite.

Cell # 306-021710WFRC3: 5 g Mg-4 + 20 g TiC-92; Tmax: 694 °C; Ein: 471.1 kJ; dE: 6.3 kJ; Theoretical Energy: 0 kJ; Energy Gain: infinite.

Cell# 4171-021610WFJL3: 12g TiC #90 + 8.34g MgI2; Tmax: 750 °C; Ein: 386.7 kJ; dE: 5.24 kJ; Theoretical Energy: 0 kJ; Energy Gain: infinite.

Cell# 4173-021610WFGH1: 20g TiC#90 + 5g Mg#4 + 8.3g KH#19(6 rpm); Tmax: 668 °C; Ein: 480.3 kJ; dE: 5.64 kJ; Theoretical Energy: 0 kJ; Gain: infinite.

Cell# 4176-021610WFGH4: 20g TiC90 + 2.5g Mg#4 + 4.1g K + 0.5g KH19; Tmax: 701 °C; Ein: 436.3 kJ; dE: 5.50 kJ; Theoretical Energy: 0 kJ; Energy Gain: infinite.

Cell # 301-021610WFRC2: 1 g LiH-1 + 4.74 g LiAlH4-1 + 12 g TiC-92; Tmax: 593 °C; Ein: 255.2 kJ; dE: 5.2 kJ; Theoretical Energy: 0 kJ; Energy Gain: infinite.

021510WFCKA2#1579; 1" HDC; 3.g NaH#6+3.0g Mg#4+11.5g PdC#3; Tmax: 575C; Ein: 215 kJ; dE: 5 kJ; Theoretical Energy: 0 kJ.

021510WFCKA3#1578; 1" HDC; 4.15g KH#19+2.5g Mg#4+10.0g PdC#3; Tmax: 560 °C; Ein: 214 kJ; dE: 6 kJ; Theoretical Energy: 0 kJ.

Cell# 4164-021510WFGH1: 20g TiC#90 + 5g Mg#4 + 8.3g KH#19(1 rpm); Tmax: 674 °C; Ein: 491.2 kJ; dE: 4.98 kJ; Theoretical Energy: 0 kJ; Energy Gain: infinite.

Cell# 4168-021510WFGH5: 20g TiC nano + 5g Mg#4 + 8.3g KH#19 + 2.13g LiCl#2; Tmax: 668 °C; Ein: 440.8 kJ; dE: 9.13 kJ; Theoretical Energy: -3.03 kJ; Energy Gain: 3.01.

Cell # 297-021510WFRC2: 4.98 g KH-19 + 4.74 g LiAlH4-1 + 12 g TiC-89; Tmax: 560 °C; Ein: 235.4 kJ; dE: 12.3 kJ; Theoretical Energy: -7.9 kJ; Energy Gain: 1.6.

Cell # 298-021510WFRC3: 5 g NaH-6 + 5 g Mg-4 + 20 g TiC-GW-1; Tmax: 709 °C; Ein: 484.8 kJ; dE: 13.7 kJ; Theoretical Energy: 0 kJ; Energy Gain: infinity.

Cell # 299-021510WFRC4: 4.98 g KH-19 + 3 g Mg-4 + 4.74 g LiAlH4-1 + 20 g TiC-89; Tmax: 561 °C; Ein: 270.7 kJ; dE: 16.6; Theoretical Energy: - 9.9 kJ; Energy Gain: 1.7.

Cell# 4156-021210WFJL1: 8g TiC #89 + 0.01g LiH #1 + 2g NaH #6 + 2.48g LiCl #1 + 3.09g KCl #1 (20V, W+G, C, R=~400 Ohms across cell, I=~0.2A at peak); Tmax: 671 °C; Ein: 378.5 kJ; dE: 10.22 kJ; Theoretical Energy: -2.15 kJ; Energy Gain: 4.75.

Cell# 4158-021210WFJL3: 12g TiC #89 + 3g Ca #1 + 0.84g Ni #1; Tmax: 729 °C; Ein: 333.5 kJ; dE: 8.93 kJ; Theoretical Energy: -0.41 kJ; Energy Gain: 21.8.

Cell# 4159-021210WFJL4: 12g TiC + 3g Ca + 1.54g Cu; Tmax: 726 °C; Ein: 297.0 kJ; dE: 5.77 kJ; Theoretical Energy: -0.05 kJ; Energy Gain: 113.

Cell # 293-021210WFRC2: 1 g LiH-1 + 3 g Mg-4 + 6.74 g KBH4-1 + 20 g TiC-89; Tmax: 561 °C; Ein: 227.3 kJ; dE: 6.5 kJ; Theoretical Energy: 0 kJ; Energy Gain: infinite.

Cell # 294-021210WFRC3: 2.13 g LiCl-2 + 5 g NaH-6 + 5 g Mg-4 + 20 g TiC-GW-1; Tmax: 708 °C; Ein: 469.3 kJ; dE: 12.2 kJ; Theoretical Energy: -1.8 kJ; Energy Gain: 6.8; Energy/mol oxidant: 244 kJ/mol. The result indicates that TiC was successfully regenerated.

Cell # 295-021210WFRC4: 3 g NaH-6 + 4.74 g LiAlH4-1 + 12 g TiC-89; Tmax: 560 °C; Ein: 276.6 kJ; dE: 6.1; Theoretical Energy: 0 kJ; Energy Gain: infinite.

Cell# 4149-021110WFJL3: 12g TiC #91 + 3g Mg #4; (give cell to Jiliang for MS analysis); Tmax: 750 °C; Ein: 383.7 kJ; dE: 8.28 kJ; Theoretical Energy: 0 kJ; Energy Gain: infinite.

Cell# 4150-021110WFJL4: 12g TiC #91 + 1g Mg #4; Tmax: 781 °C; vcEin: 315.6 kJ; dE: 5.97 kJ; Theoretical Energy: 0 kJ; Energy Gain: infinite.

Cell# 4151-021110WFGH1: 20g TiC#91 + 5g Mg#4 + 5g NaH#6(1 rpm); Tmax: 665 °C; Ein: 483.5 kJ; dE: 7.83 kJ; Theoretical Energy: 0 kJ; Energy Gain: infinite.

Cell # 289-021110WFRC2: 1 g LiH-1 + 3 g Mg-4 + 4.73 g NaBH4-1 + 12 g TiC-91; Tmax: 566 °C; Ein: 251.3 kJ; dE: 6.8 kJ; Theoretical Energy: 0 kJ; Energy Energy Gain: infinite.

Cell # 290-021110WFRC3: 11.2 g KBH4-1 + 8.3 g KH-19 + 5 g Mg-4 + 20 g TiC-89; Tmax: 601 °C; Ein: 389.0 kJ; dE: 14.1 kJ; Theoretical Energy: 0 kJ; Energy Gain: infinite.

Cell# 4140-021010WFJL3: 12g TiC #87 + 5g Mg #4; Tmax: 741 °C; Ein: 385.9 kJ; dE: 7.07 kJ; Theoretical Energy: 0 kJ; Energy Gain: infinite.

Cell# 4142-021010WFGH1: 20g TiC#87 + 5g Mg#4 + 5g NaH#6(6 rpm); Tmax: 723 °C; Ein: 584.4 kJ; dE: 7.48 kJ; Theoretical Energy: 0 kJ; Energy Gain: infinite.

Cell# 4144-021010WFGH3: 12g TiC91 + 3g Mg#4 + 2.27g Ni#1; Tmax: 655 °C; Ein: 311.1 kJ; dE: 4.70 kJ; Theoretical Energy: -1.09 kJ; Energy Gain: 4.31.

Cell# 4146-021010WFGH5: 20g TiC#91 + 5g Mg#4 + 8.3g KH#19 + 0.35g Li#1; Tmax; 614 °C; Ein: 389.0 kJ; dE: 7.17 kJ; Theoretical Energy: -1.64 kJ; Energy Gain: 4.37.

Cell # 285-021010WFRC2: 4.98 g KH-18 + 4.73 g NaBH4-1 + 12 g TiC-91; Tmax: 558 °C; Ein: 243.5 kJ; dE: 7.5 kJ; Theoretical Energy: -4.7 kJ; Energy Gain: 1.6.

Cell # 282-020910WFRC3: 7.93 g SrCl2-SD-10 + 8.3 g KH-18 + 5 g Mg-4 + 20 g YC2-4; Tmax: 731 °C; Ein: 500.5 kJ; dE: 16 kJ; Theoretical Energy: -5.5 kJ; Energy Gain: 2.9; Energy/mol oxidant: 320 kJ/mol.

Cell # 286-021010WFRC3: 2.13 g LiCl-2+8.3 KH-18+5 Mg-4+20 g TiC-91; Tmax: 717 °C; Ein: 486.8 kJ; dE: 13.2 kJ; Theoretical Energy: -3.0 kJ; Energy Gain: 4.4; Energy/mol oxidant: 264 kJ/mol.

Cell# 4132-020910WFJL4: 12g TiC #91 + 3g Mg #4 + 1.3g LiF #1+ 3.1g MgF2 #2 + 0.4g LiH #1; Tmax: 731 °C; Ein: 301.0 kJ; dE: 4.42 kJ; Theoretical Energy: -0.05 kJ; Energy Gain: 83.65.

Cell# 4133-020910WFGH1: 20g TiC#91 + 5g Mg#4(1 rpm); Tmax: 672 °C; Ein: 512.5 kJ; dE: 5.45 kJ; Theoretical Energy: 0 kJ; Energy Gain: infinite.

Cell# 4134-020910WFGH2: 12g TiC#91 + 3g Mg#4 + 6.75g Ca#1; Tmax: 650 °C; Ein: 301.1 kJ; dE: 6.00 kJ; Theoretical Energy: 0 kJ; Energy Gain: infinite.

Cell# 4136-020910WFGH4: 20g TiC#87 + 5g Mg#2 + 8.3g KH#16 + 2.12g LiCl#1 (For validation); Tmax: 563 °C; Ein: 313.4 kJ; dE: 7.68 kJ; Theoretical Energy: -3.03 kJ; Energy Gain: 2.53.

Cell# 4137-020910WFGH5: 20g TiC#88 + 5g Mg#2 + 8.3g KH#16 + 2.12g LiCl#1 (For validation); Tmax: 581 °C; Ein: 349.7 kJ; dE: 7.54 kJ; Theoretical Energy: -3.03 kJ; Energy Gain: 2.49.

020810WFCKA3#1563; 1" HDC; 2.5g Ca#1+2.5g Na + 12.0g TiC#86_850C; Tmax: 898 °C; Ein: 423 kJ; dE: 5 kJ.

020410WFCKA2#1558; 1" HDC; 2.5g Ca#1+2.5g Li#3+ 12.0g TiC#85_850C; Tmax: 861 °C; Ein: 437 kJ; dE:4 kJ.

Cell# 4121-020810WFJL2: 20g TiC #86 + 5g Mg #4 (Run in CIHT to measure wall temp; run to ~700 °C); Tmax: 729 °C (Wall temp); Ein: 467.1 kJ; dE: 4.8 kJ; Theoretical Energy: 0 kJ; Energy Gain: infinite.

Cell# 4122-020810WFJL3: 12g TiC #87 + 3g Ca #1 + 0.77g Mg #4; TSC: 540-610 °C; Tmax: 735 °C; Ein: 350.0 kJ; dE: 6.12 kJ; Theoretical Energy: -0.63 kJ; Energy Gain: 9.83.

Cell# 4123-020810WFJL4: 12g TiC #87 + 3g Ca #1 + 10.4g La #1; Tmax: 751 °C; Ein: 322.5 kJ; dE: 4.45 kJ; Theoretical Energy: 0 kJ; Energy Gain: infinite.

Cell# 4124-020810WFGH1: 20g TiC#86 + 5g Mg#4(6 rpm); Tmax: 678 °C; Ein: 552.3 kJ; dE: 5.28 kJ; Theoretical Energy: 0 kJ; Energy Gain: infinite.

Cell# 4127-020810WFGH4: 20g TiC#86 + 5g Mg#4; Tmax: 829 °C; Ein: 536.0 kJ; dE: 7.14 kJ; Theoretical Energy: 0 kJ; Energy Gain: infinite.

Cell# 4128-020810WFGH5: 20g TiC#86 + 5g Mg#4; Tmax: 670 °C; Ein: 447.1 kJ; dE: 5.37 kJ; Theoretical Energy: 0 kJ; Energy Gain: infinite.

Cell # 277-020810WFRC2: 3 g NaH-5 + 3 g Mg-4 + 12 g ZrB2-1; Tmax: 558 °C; Ein: 231.8 kJ; dE: 3.8 kJ; Theoretical Energy: 0 kJ; Energy Gain: infinite.

Cell # 278-020810WFRC3: 12.4 g SrBr2-AD-4 + 8.3 g KH-18 + 5 g Mg-4 + 20 g TiC-86; Tmax: 739 °C; Ein: 553.3 kJ; dE: 18.4 kJ; Theoretical Energy: -6.7 kJ; Energy Gain: 2.8; Energy/mol oxidant: 368 kJ/mol.

020810WFCKA3#1563; 1" HDC; 2.5g Ca#1+2.5g Na + 12.0g TiC#86_850C; Tmax: 898 °C; Ein: 423 kJ; dE: 5 kJ.

020410WFCKA2#1558; 1" HDC; 2.5g Ca#1+2.5g Li#3+ 12.0g TiC#85_850C; Tmax: 861 °C ; Ein: 437 kJ; dE: 4 kJ.

020410WFCKA3#1557; 1" HDC; 3.5g Ca#1+1.5g Mg#3+ 12.0g TiC#84_850C; Tmax: 855 °C; Ein: 465 kJ 4 kJ; dE: 1.2 kJ.

Cell# 4111-020510WFJL1: 8g TiC #86 + 3g Mg #4 + 3g NaH #5 (20V, NC, W-; Cell shorted); Tmax: 687 °C; Ein: 390.9 kJ; dE: 5.05 kJ; Theoretical Energy: 0 kJ; Energy Gain: infinite.

Cell# 4114-020510WFJL4: 12g VC #1 + 3g Mg #4; Tmax: 674 °C; Ein: 282.4 kJ; dE: 3.26 kJ; Theoretical Energy: 0 kJ; Energy Gain: infinite.

Cell# 4118-020510WFGH4: 20g TiC#86 + 5g Mg#4 + 1.4g Y#1; Tmax: 626 °C; Ein: 344.9 kJ; dE: 6.44 kJ; Theoretical Energy: 0 kJ; Energy Gain: infinite.

Cell# 4119-020510WFGH5: 20g TiC#86 + 5g Mg#4 + 4.79g Na + 0.5g NaH#5; Tmax: 585 °C; Ein: 354.6 kJ; dE: 6.51 kJ; Theoretical Energy: 0 kJ; Energy Gain: infinite.

Cell # 272-020510WFRC1: 4.98 g KH-18 + 3 g Mg-4 + 6.75 g NaAlH4-1 + 12 g TiC-86; Tmax: 569 °C; Ein: 262.3 kJ; dE: 12.4 kJ; Theoretical Energy: -5.5 kJ; Energy Gain: 2.3.

Cell # 273-020510WFRC2: 1 g LiH-1 + 6.75 g NaAlH4-1 + 12 g TiC-86; Tmax: 571 °C; Ein: 260.3 kJ; dE: 3.5 kJ; Theoretical Energy: 0 kJ; Energy Gain: infinite.

Cell # 274-020510WFRC3: 10.4 g BaCl2-SD-4 + 8.3 g KH-18 + 5 g Mg-4 + 20 g TiC-86; Tmax: 710 °C; Ein: 477.0 kJ; dE: 14.3 kJ; Theoretical Energy: -6.7 kJ; Energy Gain: 2.1; Energy/mol oxidant: 286 kJ/mol.

Cell# 4102-020410WFJL1: 8g TiC #85 + 3g Mg #4 + 4.98g KH #18 (3V, no conductivity); Tmax: 626 °C; Ein: 332.1 kJ; dE: 6.57 kJ; Theoretical Energy: 0 kJ; Energy Gain: infinite.

Cell# 4106-020410WFGH1: 20g TiC#85 + 5g NaH#5 + 5g Mg#3(12 rpm); Tmax: 690 °C; Ein: 513.2 kJ; dE: 8.23 kJ; Theoretical Energy: 0 kJ; Energy Gain: infinite.

Cell# 4109-020410WFGH4: 20g TiC#85 + 5g Mg#4 + 4.79g Na + 0.1g NaH#5; Tmax: 346.5C; Ein: 5.89 kJ; dE: 0 kJ; Theoretical Energy: 0 kJ; Energy Gain: infinite.

Cell # 269-020410WFRC2: 3 g NaH-5 + 3 g Mg-4 + 6.75 g NaAlH4-1 + 12 g TiC-85; Tmax: 561 °C; Ein: 240.4 kJ; dE: 14.2 kJ; Theoretical Energy: -5.5 kJ; Energy Gain: 2.6.

Cell # 270-020410WFRC3: 2.13 g LiCl-2 + 8.3 g KH-18 + 5 g Mg-4 + 20 g TiCNano-1; Tmax: 707 °C; Ein: 484.8 kJ; dE: 18.9 kJ; Theoretical Energy: -3 kJ; Energy Gain: 6.3; Energy/mol oxidant: 378 kJ/mol.

Cell# 271-020410WFRC4: 4.98 g KH-18 + 6.75 g NaAlH4-1 + 12 g TiC-85; Tmax: 561 °C; Ein: 286.4 kJ; dE: 7.7 kJ; Theoretical Energy: 0 kJ (The heat of formation of KAlH4 is not found, but there is little difference between NaAlH4 and LiAlH4); Energy Gain: infinite.

Cell# 4093-020310WFJL1: 8g TiC #84 + 3g Mg #3 + 3g NaH #5 (20V, has conductivity); Tmax: 596 °C; Ein: 298.7 kJ; dE: 6.29 kJ; Theoretical Energy: 0 kJ; Energy Gain: infinite.

Cell# 4096-020310WFJL4: 12g TiC #84 + 3g MgH2 #3 + 3g NaH #5 + 0.1g Pd/C #3; TSC: Not Obs; Tmax: 560 °C; Ein: 240.9 kJ; dE: 5.76 kJ; Theoretical Energy: 0 kJ; Energy Gain: infinite.

Cell# 4097-020310WFGH1: 20g TiC#84 + 8.3g KH#18 + 5g Mg#3(1 rpm); Tmax: 609 °C; Ein: 425.9 kJ; dE: 8.44 kJ; Theoretical Energy: 0 kJ; Energy Gain: infinite.

020310WFKA3#1554; 1" HDC; 3.5g Ca#1+1.5g Mg#3+ 12.0g TiC#84 above 550 °C;Tmax: 650 °C; Ein: 250 kJ; dE: 5 kJ; Theoretical Energy: 1.2 kJ.

020110WFKA2#1551; 1.5" HDC; 5.0g NaH+ 5.0g Mg+4.34g LiBr+ 20.0g TiC#83; Tmax: 573 °C; Ein: 337 kJ; dE: 10 kJ; Theoretical Energy: 2.2 kJ; Energy Gain: 4.5.

020110WFKA3#1550; 1.5" HDC; 8.3g KH#18+ 5.g Mg#3+4.34g LiBr+ 20.0g TiC#83; Tmax: 568 °C; Ein: 363 kJ; dE: 11 kJ; Theoretical Energy:3.75 kJ; Energy Gain: 3.

Cell# 4084-020210WFJL1: 8g TiC #83 + 3g NaH #5 + 3g Mg #3 (20V, no conductivity); Tmax: 599 °C; Ein: 335.1 kJ; dE: 3.96 kJ; Theoretical Energy: 0 kJ; Energy Gain: infinite.

Cell# 4088-020210WFGH1: 20g TiC#83 + 8.3g KH#18 + 5g Mg#3(6 rpm); Tmax: 542 °C; Ein: 367.6 kJ; dE: 5.93 kJ; Theoretical Energy: 0 kJ; Energy Gain: infinite.

Cell# 4091-020210WFGH4: 20g TiC#84 + 3g Mg#3 + 1.3g LiF#1 + 3.1g MgF2#2 + 2g KH#18; Tmax: 605 °C; Ein: 343.2 kJ; dE: 6.35 kJ; Theoretical Energy: 0 kJ; Energy Gain: infinite.

Cell # 261-020210WFRC2: 3 g NaH-5 + 3 g Mg-3 + 12 g TiB2-1; TSC: no; Tmax: 548 °C; Ein: 242.5 kJ; dE: 4.2 kJ; Theoretical Energy: 0 kJ.

Cell # 262-020210WFRC3: 5 g NaH-5 + 20 g Cr3C2-1; Tmax: 644 °C; Ein: 435.8 kJ; dE: 5 kJ; Theoretical Energy: 0 kJ; Energy Gain: infinite.

Cell# 4076-020110WFJL2: 20g TiC #83 + 2.5g Ca #1 + 2.5g CaH2 #1; Tmax: 616 °C; Ein: 415.9 kJ; dE: 5.50 kJ; Theoretical Energy: 0 kJ; Energy Gain: infinite.

Cell# 4078-020110WFJL4: 12g TiC #83 + 1.3g LiF #1 + 3.1g MgF2 #2 + 0.4g LiH #1; Tmax: 596 °C; Ein: 251.3 kJ; dE: 3.57 kJ; Theoretical Energy: 0 kJ; Energy Gain: infinite.

Cell# 4079-020110WFGH1: 20g TiC#82 + 8.3g KH#18 + 5g Mg#3(12 rpm); Tmax: 545 °C; Ein: 350.0 kJ; dE: 8.42 kJ; Theoretical Energy: 0 kJ; Energy Gain: infinite.

Cell # 258-020110WFRC3: 8.3 g KH-18 + 12 g Pd/C-3; Tmax: 571 °C; Ein: 349.8 kJ; dE: 11.2 kJ; Theoretical Energy: 0 kJ; Energy Gain: infinite.

Cell # 259-020110WFRC4: 4.98 K-1 + 3 g MgH2-3 + 6 g Pd/C-3; Tmax: 545 °C; Ein: 251 kJ; dE: 8.8 kJ; Theoretical Energy: -2.6 kJ; Energy Gain: 3.2.

020110KAWFC2#1551; 1.5" HDC; 5.0g NaH+ 5.0g Mg+4.34g LiBr+ 20.0g TiC#83; Tmax: 573 °C; Ein: 337 kJ; dE: 10 kJ; Theoretical Energy: 2.2 kJ; Energy Gain: 4.5.

020110KAWFC3#1550; 1.5" HDC; 8.3g KH#18+ 5.g Mg#3+4.34g LiBr+ 20.0g TiC#83; Tmax: 568 °C; Ein: 363 kJ; dE: 11 kJ; Theoretical Energy: 3.75 kJ; Energy Gain: 3.

012810KAWFC2#1549; 1.5" HDC; 8.3g KH#18+5.0g Mg#3+20.0g TiC#77+12.4g SrBr2-AD-2; Tmax: S82 °C; Ein: 339 kJ; dE: 13 kJ; Theoretical Energy:6.7kJ; Energy Gain: 1.9.

012810KAWFC3#1548; 1.5" HDC; 8.3g KH#18+5.0g Mg#3+20.0g TiC#77+12.4g SrBr2-AD-2; Tmax: 580 °C; Ein: 363 kJ; dE: 12 kJ; Theoretical Energy: 6.7 kJ; Energy Gain: 1.8.

012810KAWFC2# 1546; 1.5" HDC; 8.3g KH#18+12.4g SrBr2-AD-9g#2_3.4g#3 + 20.0g TiC#81+ 5.0g Sr Granule; Tmax: 585 °C; Ein: 339 kJ; dE: 16 kJ; Theoretical Energy: 6.7 kJ; Energy Gain: 2.4.

012810KAWFC3#1545; 1.5" HDC; 8.3g KH#18+ 7.94g SrCl2-AD-10+ 20.0g TiC#81-82+ 5.0g Sr Granule; Tmax: 590 °C; Ein: 363 kJ; dE: 14 kJ; Theoretical Energy: 5.4 kJ; Energy Gain: 2.6.

012710KAWFC1#1544; 1.5" HDC; 8.3g KH#18+5.0g Mg#3+20.0g TiC#77+12.4g SrBr2-AD-2; Tmax: 540 °C; Ein: 326 kJ; dE: 10 kJ; Theoretical Energy: 6.7 kJ; Energy Gain: 1.5.

012710KAWFC2#1543; 1.5" HDC; 8.3g KH#18+ 5.0g Mg#3+10.4g BaCl2-SD-4+ 20.0g TiC#77; Tmax: 580 °C; Ein:

366 kJ; dE: 10 kJ; Theoretical Energy: 4.1 kJ; Energy Gain: 2.4.

012710KAWFC3#1542; 1.5" HDC; 8.3g KH#18+5.0g Mg#3+ 2.13 g LiCl#1+20.0g TiC#77; Tmax: 570 °C; Ein: 363 kJ; dE: 9 kJ; Theoretical Energy: 3.1 kJ; Energy Gain: 2.9.

Cell# 4073-012910WFGH4: 20g TiC#80 + 5g Mg#3; Tmax: 630 °C; Ein: 371.5 kJ; dE: 5.29 kJ; Theoretical Energy: 0 kJ; Energy Gain: infinite.

Cell # 254-012910WFRC3: 10.4 g BaC12-AD-4 + 5 g Mg-3 + 8.3 g KH-18 + 20 g TiC-81; Tmax: 620 °C; Ein: 375.4 kJ; dE: 12.7 kJ; Theoretical Energy: -4 kJ; Energy Gain: 3.2; Energy/mol oxidant: 254 kJ/mol.

Cell# 4062-012810WFJL2: 20g TiC#81 + 5g Mg#3; Tmax: 618 °C; Ein: 395.7 kJ; dE: 6.31 kJ; Theoretical Energy: 0 kJ; Energy Gain: infinite.

Call# 4064-012810WFJL4: 12g TiC#81 + 3g NaH#5 + 1g NaOH#2; Tmax: 532 °C; Ein: 202.8 kJ; dE: 3.69 kJ; Theoretical Energy: 0 kJ; Energy Gain: infinite.

Cell# 4065-012810WFGH1: 20g TiC#81 + 8.3g KH#18 (12 rpm); Tmax: 551 °C; Ein: 368.2 kJ; dE: 4.21 kJ; Theoretical Energy: 0 kJ; Energy Gain: infinite.

Cell # 250-012810WFRC3: 2.13 g LiCl-1 + 5 g Mg-3 + 8.3 g KH-18 + 20 g TiC-81; Tmax: 577 °C; Ein: 353.7 kJ; dE: 13.7 kJ; Theoretical Energy: -3 kJ; Energy Gain: 4.6; Energy/mol oxidant: 274 kJ/mol.

Cell# 4056-012710WFGH1: 20g TiC#77 + 5g NaH#5 + 5g Mg#3 (12 rpm); Tmax: 537 °C; Ein: 356.1 kJ; dE: 10.04 kJ; Theoretical Energy: 0 kJ; Energy Gain: infinite.

Cell # 246-012710WFRC3: 7.95 g SrCl2-AD-10 + 5 g Mg-3 + 8.3 g KH-18 + 20 g YC2-4; Tmax: 561 °C; Ein: 331.6 kJ; dE: 11 kJ; Theoretical Energy: -5.5 kJ; Energy Gain: 2; Energy/mol oxidant: 220 kJ/mol.

Cell# 4047-012610WFGH1: 20g TiC#77 + 5g NaH#5 + 5g Mg#3 (6 rpm); Tmax: 567 °C; Ein: 394.3 kJ; dE: 7.52 kJ; Theoretical Energy: 0 kJ; Energy Gain: infinite.

Cell# 4049-012610WFGH3: 12g TiC#78 + 3g Mg#3 + 4.98g KH#17 + 2.2g KC1#1; Tmax: 485 °C; Ein: 214.0 kJ; dE: 4.56 kJ; Theoretical Energy: 0 kJ; Energy Gain: infinite.

Cell# 4050-012610WFGH4: 20g TiC77 + 5g Mg#3 + 5g NaH#5 + 5g Pt/Ti + 0.009 mol H2; Tmax: 547 °C; Ein: 273.1 kJ; dE: 6.40 kJ; Theoretical Energy: -1.30 kJ; Energy Gain: 4.92.

Cell# 4051-012610WFGH5: 20g TiC77 + 5g MgH2#3 + 8.3g KH#18 + 5g Pt/Ti; Tmax: 510 °C; Ein: 297.6 kJ; dE: 11.44 kJ; Theoretical Energy: -7.14 kJ; Energy Gain: 1.60.

Cell # 242-012610WFRC3: 5 g NaH-4 + 5 g Mg-3 + 20 g TiC-81 (new lot #, dried at 500 °C); Tmax: 544 °C; Ein: 330.4 kJ; dE: 7.7 kJ; Theoretical Energy: 0 kJ; Energy Gain: infinite.

012510KAWFC2#1538; 1.5" HDC; 20g TiC#78 + 5.0g Mg+ 5.0g NaH+ 2.1g LiCl; Tmax: 548 °C; Ein: 338 kJ; ; dE: 11 kJ; Theoretical Energy:1.82kJ; Energy Gain: 6.0.

012210KAWFC3#1537; 1.5" HDC; 20g TiC#79 + 5.0g Mg+ 3.7g KCl +2.1g LiCl + 1.59g LiH; Tmax: 508 °C; Ein: 316 kJ; dE: 4 kJ.

Cell# 4035-012510WFJL2: 20g TiC#78 + 5g Mg #3 + 8.3g KH #17 + 5g Pt/Ti; Tmax: 505 °C; Ein: 320.3 kJ; dE: 6.50 kJ; Theoretical Energy: -3.2 kJ; Energy Gain: 2.

Cell# 4038-012510WFGH1: 20g TiC78 + 5g NaH#5 + 5g Mg#3 (1 rpm); Tmax: 547 °C; Ein: 358.8 kJ; dE: 8.62 kJ; Theoretical Energy: 0 kJ; Energy Gain: infinite.

Cell# 4041-012510WFGH4: 20g TiC78 + 5g MgH2#3 + 5g NaH#5 + 5g Pt/Ti; Tmax: 670 °C; Ein: 391.4 kJ; dE: 10.98 kJ; Theoretical Energy: -7.14 kJ; Energy Gain: 1.54.

Cell# 4042-012510WFGH5: 20g TiC78 + 5g Mg#3 + 5g NaH#5 + 5g Pt/Ti; Tmax: 594 °C; Ein: 337.0 kJ; dE: 7.73 kJ; Theoretical Energy: -3.27 kJ; Energy Gain: 2.36.

Cell # 238-012510WFRC3: 2.13 g LiCl-1 + 8.3 g KH-17 + 5 g Mg-3 + 20 g TiC-80 (new lot #); Tmax: 550 °C,; Ein: 326.5 kJ; dE: 10 kJ; Theoretical Energy: -3 kJ; Energy Gain: 3.3; Energy/mol oxidant: 200 kJ/mol.

Cell# 4028-012210WFJL4: 6g Pd/C #2 + 3g Mg #3 + 3g NaH #5; TSC: 375-425 °C; Tmax: 501 °C; Ein: 182.5 kJ; dE: 8.57 kJ; Theoretical Energy: 0 kJ; Energy Gain: infinite.

Cell# 4030-012210WFGH2: 12g TiC78 + 3g Mg#3 + 4.98g KH#17 + 1.3g LiCl#1; Tmax: 486 °C; Ein: 179.1 kJ; dE: 5.23 kJ; Theoretical Energy: -1.86 kJ; Energy Gain: 2.81.

Cell# 4016-012110WFJL1: 20g TiC #80 + 5g Mg #3 + 8.3g KH #17 + 2.13g LiCl #1; Tmax: 484 °C; Ein: 269.6 kJ; dE: 8.45 kJ; Theoretical Energy: -3.05 kJ; Energy Gain: 2.77.

Cell# 4017-012110WFJL2: 20g TiC #68 + 5g Mg #2 + 8.3g KH #16 + 10.4g BaCl2-SD-5; Tmax: 529 °C; Ein: 323.7 kJ; dE: 10.70 kJ; Theoretical Energy: -4.06 kJ; Energy Gain: 2.64.

Cell# 4023-012110WFGH4: 20g TiC#80 + 5g Mg#3 + 1.66g LiH#1; Tmax: 571 °C; Ein: 309.0 kJ; dE: 5.91 kJ; Theoretical Energy: 0 kJ; Energy Gain: infinite.

Cell# 1534-01210WFKA2 (1" HDC): 12g TiC#80 + 3g NaH#3 + 3g Mg#3 + 3g Pt/Ti; Tmax: 562 °C; Ein: 210.2 kJ; dE: 4.04 kJ; Theoretical Energy: 0 kJ; Energy Gain: infinite.

Cell # 234-012110RCWF3: 8.3 g KH-17 + 5 g Mg-3 + 20 g TiC-80: Tmax: 596 °C; Ein: 365.6 kJ; dE: 5.2 kJ; Theoretical Energy Energy: 0 kJ; Energy Gain: infinite.

Cell# 4008-011910WFJL2: 20g CrB2 + 5g Mg #3 + 5g NaH #5; Tmax: 508 °C; Ein: 328.9 kJ; dE: 5.40 kJ; Theoretical Energy: 0 kJ; Energy Gain: infinite.

Cell# 3999-011910JLWF1: 20g TiC #68 + 5g Mg #2 + 8.3g KH #16 + 2.13g LiCl#1; Tmax: 478 °C; Ein: 255.2 kJ; dE: 9.72 kJ; Theoretical Energy: -3.05 kJ; Energy Gain: 3.19.

Cell # 224-011910WFRC1: 3 g NaH-5 + 3 g Mg-3 + 12 g CrB2-1; Tmax: 533 °C; Ein: 241.4 kJ; dE: 6.9 kJ; Theoretical Energy: 0 kJ; Energy Gain: infinite.

Cell# 3994-011810JLWF4: 20g TiC #74 + 5g Mg #3 + 8.3g KH #17; Tmax: 489 °C; Ein: 630.9 kJ; dE: 5.78 kJ; Theoretical Energy: 0 kJ; Energy Gain: infinite.

Cell# 3997-011810WFGH4: 20g TiC#74 + 8.3g KH + 5.42g MgH2; Tmax: 748 °C; Ein: 466.0 kJ; dE: 13.07 kJ; Theoretical Energy: -7.05 kJ; Energy Gain: 1.85.

Cell# 3998-011810WFGH5: 20g TiC74 + 5g NaH#3 + 5g Ca; Tmax: 550 °C; Ein: 307.2 kJ; dE: 11.68 kJ; Theoretical Energy: -6.62 kJ; Energy Gain: 1.76.

Cell # 220-011810WFRC1: 3 g NaH-5 + Ca-1 + TiC-76; Tmax: 533 °C; Ein: 214 kJ; dE: 9.9 kJ; Theoretical Energy: -4.3 kJ; Energy Gain: 2.3.

Cell# 3967-011410JLWF1: 20g TiC #74 + 2.5g Mg #1 + 2.5g NaH #3; Tmax: 566 °C; Ein: 318.2 kJ; dE: 5.99 kJ; Theoretical Energy: 0 kJ; Energy Gain: infinite.

Cell# 3969-011310JLWF3: 12g TiC #74 + 2g Mg #1 + 3.32g KH #17; Tmax: 513 °C; Ein: 243.6 kJ; dE: 5.84 kJ; Theoretical Energy: 0 kJ; Energy Gain: infinite.

Cell# 3970-011310JLWF4: 12g TiC #73 + 1.5g Mg #1 + 1.5g NaH #3; Tmax: 498 °C; Ein: 302.2 kJ; dE: 4.67 kJ; Theoretical Energy: 0 kJ; Energy Gain: infinite.

Cell# 3964-011210GHWF3: 12g TiC#74 + 2g Mg#1 + 3.32g KH#17, Tmax: 512 °C; Ein: 212.1 kJ; dE: 4.08 kJ;

Theoretical Energy: 0 kJ; Energy Gain: infinite.

Cell# 3965-011210GHWF4: 20g TiC#68 + 8.3g KH#16 + 5g Mg#2 + 10.4g BaCl2-SD-4; Tmax: 539 °C; Ein: 286.0 kJ; dE: 10.41 kJ; Theoretical Energy: -4.06 kJ; Energy Gain: 2.56.

Cell# 3966-011210GHWF5: 20g TiC#68 + 8.3g KH#16 + 5g Mg#2 + 12.4g SrBr2-AD-3; Tmax: 517 °C; Ein: 300.6 kJ; dE: 12.66 kJ; Theoretical Energy: -6.72 kJ; Energy Gain: 1.88.

Cell# 3959-011210JLWF2: 20g TiC #73 + 8.3g KH #17 + 0.35g Li #2; Tmax: 542 °C; Ein: 342.5 kJ; dE: 6.48 kJ; Theoretical Energy: -1.65 kJ; Energy Gain: 3.92.

Cell# 3961-011210JLWF4: 12g TiC #74 + 3g Mg #1 + 3g NaH #3Tmax: 523 °C; Ein: 208.7 kJ; dE: 5.04 kJ; Theoretical Energy: 0 kJ; Energy Gain: infinite.

Cell # 204-011210RCWF1: 3 g NaH-3 + 12 g TiC-75 (New Lot# H11U005); Tmax: 525 °C; Ein: 209.1 kJ; dE: 5.1 kJ; Theoretical Energy: 0 kJ; Energy Gain: infinite.

Cell # 207-011210RCWF4: 3 g NaH-3 + 3 g Mg-1 + 12 g TiC-73 (New Lot# G06U055); Tmax: 520 °C; Ein: 246.2 kJ; dE: 4.0 kJ; Theoretical Energy: 0 kJ; Energy Gain: infinite.

Cell# 3949-011110JLWF1: 20g TiC #68 + 5g Mg #2 + 8.3g KH #16 + 10.4g BaC12-SD-4; Tmax: 475 °C; Ein: 246.0 kJ; dE: 8.96 kJ; Theoretical Energy: -4.06 kJ; Energy Gain: 2.21.

Cell# 3950-011110JLWF2: 20g TiC #68 + 5g Mg #2 + 8.3g KH #16 + 12.4g SrBr2-AD-3; Tmax: 458 °C; Ein: 253.8 kJ; dE: 13.96 kJ; Theoretical Energy: -6.71 kJ; Energy Gain: 2.07.

Cell# 3954-011110GHWF2: 12g TiC#73 + 3g Mg#1 + 1g KH#17; Tmax: 512 °C; Ein: 188.1 kJ; dE: 4.56 kJ; Theoretical Energy: 0 kJ; Energy Gain: infinite.

Cell# 1520-011110KAWF2 (1" HDC): 8g Pd/C#1 + 3g MgH2#2 + 1g Rb#1; Tmax: 666 °C; Ein: 267.0 kJ; dE: 4.40 kJ; Theoretical Energy: -0.17 kJ; Energy Gain: 25.9.

Cell # 200-011110RCWF1: 7.42 g SrBr2-AD-3 + 4.98 g KH-17 + 3 g Mg-1 + 12 g TiC-72; Tmax: 525 °C; Ein: 207.0 kJ; dE: 13.2 kJ; Theoretical Energy: -4.0 kJ; Energy Gain: 3.3; Energy/mol oxidant: 439.6 kJ/mol.

Cell# 3940-010810JLWF1: 20g TiC #72 + 5g Mg #1; Tmax: 607 °C; Ein: 327.5 kJ; dE: 5.33 kJ; Theoretical Energy: 0 kJ; Energy Gain: infinite.

Cell# 3941-010810JLWF2: 20g TiC #72 + 5g Mg #1 + 5g NaH #3 + 8.3g KH #17; Tmax: 551 °C; Ein: 374.5 kJ; dE: 7.8 kJ; Theoretical Energy: 0 kJ; Energy Gain: infinite.

Cell# 3942-010810JLWF3: 12g Pd/C #1 + 3g Mg #1 + 3g NaH #3; Tmax: 526 °C; Ein: 223.4 kJ; dE: 11.8 kJ; Theoretical Energy: 0 kJ; Energy Gain: infinite.

Cell# 3943-010810JLWF4: 12g Pd/C 31 + 3g NaH #3; Tmax: 533 °C,; Ein: 200.4 kJ; dE: 5.14 kJ; Theoretical Energy: 0 kJ; Energy Gain: infinite.

Cell# 3944-010810GHWF1: 8g Pd/C#1 + 3g Mg#1 + 4.98g KH#17; Tmax: 511 °C; Ein: 195.1 kJ; dE: 9.72 kJ; Theoretical Energy: 0 kJ; Energy Gain: infinite.

Cell# 3945-010810GHWF2: 8g Pd/C#1 + 4.98g KH#17; Tmax: 512 °C; Ein: 192.1 kJ; dE: 7.58 kJ; Theoretical Energy: 0 kJ; Energy Gain: infinite.

Cell# 3946-010810GHWF3: 8g Pd/C#1 + 3g MgH2#2 + 4.98g K#1; Tmax: 531 °C; Ein: 196.0 kJ; dE: 11.36 kJ; Theoretical Energy: -2.56 kJ; Energy Gain: 4.44.

Cell# 3947-010810GHWF4: 20g TiC#72 + 8.3g KH#17 + 1g Li#2; Tmax: 665 °C; Ein: 368.4 kJ; dE: 8.15 kJ; Theoretical Energy: -4.68 kJ; Energy Gain: 1.74.

Cell # 196-010810RCWF1: 1.5 g NaH-3 + 1.5 g Mg-1 + 12 g TiC-71; Tmax: 552 °G; Ein: 229.0 kJ; dE: 7.4 kJ; Theoretical Energy: 0 kJ; Energy Gain: infinite.

Cell # 197-010810RCWF2: 3 g Mg-1 + 3 g NaH-4 + 12 g TiC-71; Tmax: 563 °C; Ein: 227.0 kJ; dE: 5.5 kJ; Theoretical Energy: 0 kJ; Energy Gain: infinite.

Cell# 3932-010710JLWF2: 20g TiC #71 + 5g Mg #1 + 8.3g KH #17 (after completing exp., give sample to GW to regenerate); Tmax: 547 °C; Ein: 353.9 kJ; dE: 8.03 kJ; Theoretical Energy: 0 kJ; Energy Gain: infinite.

Cell# 3938-010710GHWF4: 20g TiC71 + 5g Mg#1 + 5g NaH#3 + 0.04 mol H2; Tmax: 624 °C; Ein: 366.9 kJ; dE: 8.94 kJ; Theoretical Energy: -3.51 kJ; Energy Gain: 2.55.

Cell# 1517-010710KAWF3 (1.5" HDC): 20g TiC71 + 5g Mg#1 + 8.3g KH#14 + 147 psig H2; TSC: 260-425 °C; Tmax: 514 °C; Ein: 371.7 kJ; dE: 14.49 kJ; Theoretical Energy: -4.70 kJ; Energy Gain: 3.10.

Cell # 192-010710RCWF1: 3 g NaH-3 + 4.98 g KH-17 + 12 g TiC-71; Tmax: 530 °C; Ein: 232.1 kJ; dE: 5.7 kJ; Theoretical Energy: 0 kJ; Energy Gain: infinite.

Cell # 194-010710RCWF3: 7.95 g SrCl2-AD-10 + 5 g Mg-1 + 8.3 g KH-17 + 20 g TiC-71; Tmax: 539 °C; Ein: 312.0 kJ; dE: 12.5 kJ; Theoretical Energy: -5.5 kJ; Energy Gain: 2.3; Energy/mol oxidant: 250 kJ/mol.

Cell# 3922-010610JLWF1: 20g TiC #70 + 5g Mg #1 + 1.66g LiH #1; TSC: 475-550 °C; Tmax: 576 °C; Ein: 316.3 kJ; dE: 10.41 kJ; Theoretical Energy: 0 kJ; Energy Gain: infinite.

Cell# 3924-010610JLWF3: 12g TiC #71 + 3g MgH2 #2 + 2g Cs; Tmax: 541 °C; Ein: 254.9 kJ; dE: 5.35 kJ; Theoretical Energy: -0.50 kJ; Energy Gain: 10.74.

Cell# 3925-010610JLWF4: 12g TiC #71 + 3g MgH2 #2 + 2g Rb; Tmax: 538 °C; Ein: 207.4 kJ; dE: 2.63 kJ; Theoretical Energy: -0.55 kJ; Energy Gain: 4.81.

Cell# 3927-010610GHWF2: 12g TiC70 + 0.1g Li#2 + 4.98g KH#14; Tmax: 515 °C; Ein: 196.0 kJ; dE: 4.45 kJ; Theoretical Energy: -0.47 kJ; Energy Gain: 9.47.

Cell# 1515-010610KAWF3 (1" HDC): 12g TiC70 + 1.5g NaH#3 + 3g Mg#1; Tmax: 529 °C; Ein: 226.9 kJ; dE: 3.70 kJ; Theoretical Energy: 0 kJ; Energy Gain: infinite.

Cell # 188-010610RCWF1: 2 g Mg-1 + 3.32 g KH-14 + 12 g TiC-70; TSC: no; Tmax: 524 °C; Ein: 210.0 kJ; dE: 8.8 kJ; Theoretical Energy: 0 kJ; Energy Gain: infinite.

Cell # 189-010610RCWF2: 3 g Mg-1 + 3 g NaH-3 + 12 g TiC-70; Tmax: 529 °C; Ein: 208.0 kJ; dE: 5.9 kJ; Theoretical Energy: 0 kJ; Energy Gain: infinite.

Cell # 190-010610RCWF3: 2.5 g Mg-1 + 2.5 g NaH-3 + 20 g TiC-71; Tmax: 556 °C; Ein: 328.1 kJ; dE: 6 kJ; Theoretical Energy: 0 kJ; Energy Gain: infinite.

Cell# 3914-010510JLWF2: 20g TiC#69 + 2g NaH-3; Tmax: 536 °C; Ein: 336.0 kJ; dE: 4.52 kJ; Theoretical Energy: 0 kJ; Energy Gain: infinite.

Cell# 3915-010510JLWF3: 12g TiC#69 + 3g MgH2#2 + 3g NaH#3; Tmax: 524 °C; Ein: 238.0 kJ; dE: 6.23 kJ; Theoretical Energy: -1.41 kJ; Energy Gain: 4.41.

Cell# 3917-010510GHWF1: 12g TiC69 + 3g MgH2#2 + 4.98g KH#14; Tmax: 513 °C; Ein: 221.1 kJ; dE: 4.49 kJ; Theoretical Energy: 0 kJ; Energy Gain: infinite.

Cell# 3920-010510GHWF4: 20g TiC69 + 5g Mg#1 + 8.3g KH#14 + 10.4g BaCl2-SD-2; Tmax: 734 °C; Ein: 451.3 kJ; dE: 18.43 kJ; Theoretical Energy: -6.37 kJ; Energy Gain: 2.89.

Cell# 1511-010510KAWF2 (1.5" HDC): 20g TiC70 + 5g Mg#1 + 8.3g KH#14 + 147 psig H2; Tmax: 557 °C; Ein:

332.5 kJ; dE: 20.37 kJ; Theoretical Energy: -4.70 kJ; Energy Gain: 4.33.

Cell # 184-010510RCWF1: 3 g Mg-1 + 4.98 g KH-14 + 12 g TiC-70; Tmax: 523 °C; Ein: 225.0 kJ; dE: 8.7 kJ; Theoretical Energy: 0 kJ; Energy Gain: infinite.

Cell # 185-010510RCWF2: 2 g Mg-1 + 3.32 g KH-14 + 12 g TiC-70; Tmax: 523 °C; Ein: 199.1 kJ; dE: 5.4 kJ; Theoretical Energy: 0 kJ; Energy Gain: infinite.

Cell # 186-010510RCWF3: 6 g Mg-1 + 6 g NaH-3 + 24 g TiC-70; Tmax: 521 °C; Ein: 312.0 kJ; dE: 11.8 kJ; Theoretical Energy: 0 kJ; Energy Gain: infinite.

Cell # 187-01051ORCWF4: 1.5 g Mg-1 + 1.5 g NaH-3 + 12 g TiC-70; Tmax: 516 °C; Ein: 221.0 kJ; dE: 5.9 kJ; Theoretical Energy: 0 kJ; Energy Gain: infinite.

Cell# 3904-010410JLWF1: 20g TiC #69 + 5g Mg-1 + 8.3g KH #14 + 8.75gBaF2-AD-1; Tmax: 535 °C; Ein: 307.9 kJ; dE: 10.36 kJ; Theoretical Energy: 0 kJ; Energy Gain: infinite.

Cell# 3905-010410JLWF2: 20g TiC #69 + 5g Mg-1 + 8.3g KH #14 + 10.4g BaCl2-SD-2; Tmax: 537 °C; Ein: 337.9 kJ; dE: 15.19 kJ; Theoretical Energy: -4.06 kJ; Energy Gain: 3.74.

Cell# 3906-0104103LWF3; 12g TiC #60 + 1g Mg-1 + 3g NaH-3; Tmax: 510 °C; Ein: 240.1 kJ; dE: 4.25 kJ; Theoretical Energy: 0 kJ; Energy Gain: infinite.

Cell# 3911-010410GHWF4: 20g TiC60 + 5g NaH#3 + 0.35g Li#1; Tmax: 545 °C; Ein: 331.3 kJ; dE: 6.17 kJ; Theoretical Energy: -1.71 kJ; Energy Gain: 3.61.

Cell# 3912-010410GHWF5: 20g TiC60 + 5g Mg#1 + 8.3g KH#14; Tmax: 577 °C; Ein: 325.1 kJ; dE: 8.35 kJ; Theoretical Energy: 0 kJ; Energy Gain: infinite.

Cell# 1509-010410KAWF2 (1.5" HDC): 20g TiC69 + 5g Mg#1 + 8.3g KH#14 + 10.4g BaCl2-SD-2; Tmax: 436 °C; Ein: 227.6 kJ; dE: 12.34 kJ; Theoretical Energy: -4.06 kJ; Energy Gain: 3.04.

Cell # 181-010410RCWF2: 6.24 g BaCl2-SD-2 + 3 g Mg-1 + 4.98 g KH-14 + 12 g TiC-60; Tmax: 550 °C; Ein: 208.0 kJ; dE: 7.3 kJ; Theoretical Energy: -2.4 kJ; Energy Gain: 3; Energy/mol oxidant: 243 kJ/mol.

Cell # 182-010410RCWF3: 4.76 g SrCl2-AD-1 + 5 g Mg-1 + 8.3 g KH-14 + 20 g TiC-60; Tmax: 537 °C; Ein: 310.0 kJ; dE: 11.6 kJ; Theoretical Energy: -3.3 kJ; Energy Gain: 3.5; Energy/mol oxidant: 386.3 kJ/mol.

Cell # 183-010410RCWF4: 8.91 g BaBr2-AD-1 + 3 g Mg-1 + 4.98 g KH-14 + 12 g TiC-60; Tmax: 529 °C; Ein: 226.0 kJ; dE: 5.6 kJ; Theoretical Energy: -2.8 kJ; Energy Gain: 2; Energy/mol oxidant: 186.5 kJ/mol.

Cell# 3891-123009GHWF2: 12g TiC59 + 3g Mg#1 + 4.98g KH#14 + 1.3g LiCl-AD-1; Tmax: 525 °C; Ein: 194.1 kJ; dE: 8.60 kJ; Theoretical Energy: -1.86 kJ; Energy Gain: 4.63.

Cell# 3892-123009GHWF3: 12g TiC59 + 3g Mg#1 + 4.98g KH#14 + 2.6g LiBr-2; Tmax: 513 °C; Ein: 204.0 kJ; dE: 6.69 kJ; Theoretical Energy: -2.25 kJ; Energy Gain: 2.97.

Cell# 3894-123009GHWF5: 20g TiC59 + 3g NaH#3; Tmax: 557 °C; Ein: 335.3 kJ; dE: 4.12 kJ; Theoretical Energy: 0 kJ; Energy Gain: infinite.

123009KAWF2 (1.5" HDC): 7.95g SrCl2-AD-10 + 8.3g KH#14 + 5g Mg#1 + 20g TiC#59; Tmax: 532 °C; Ein: 308.1 kJ; dE: 10.28 kJ; Theoretical Energy: -5.4 kJ; Energy Gain: 1.9.

Cell # 172-123009RCWF1: 4.98 KH-11 + 3 g Mg-1 + 12 g Cr3C2-1; Tmax: 537 °C; Ein: 240.0 kJ; dE: 5.1 kJ; Theoretical Energy: 0 kJ; Energy Gain: infinite.

Cell#3878-122909JLWF1: 20g TiC#58 + 5g NaH-3, Ein: 369.3 kJ, dE:4.3kJ, Tmax: 581 °C, Theoretical Energy: 0 kJ, Energy Gain: infinite

Cell#3879-122909JLWF2: 20g TiC#58 + 8.3g KH#14 + 0.35g Li#1, Ein:353.7kJ, dE:8.9kJ, Tmax: 552 °C, Theoretical Energy: -1.6 kJ, Energy Gain: 5.6.

Cell#3880-122909JLWF3: 12g TiC#58 + 3g NaH-3, Ein: 240.3 kJ, dE: 4.5 kJ, Tmax: 529 °C. Theoretical Energy: 0 kJ, Energy Gain: infinite.

Cell# 3882-122909GHWF2: 12g TiC58 + 4.98g KH#11 + 0.21g Li#1; Tmax: 514 °C; Ein: 187.1 kJ; dE: 4.80 kJ; Theoretical Energy: -0.98 kJ; Energy Gain: 4.88.

Cell# 3883-122909GHWF3: 12g TiC58 + 3g Mg#1 + 4.98g KH#11 + 0.21g Li#1; Tmax: 501 °C; Ein: 203.0 kJ; dE: 6.59 kJ; Theoretical Energy: -0.98 kJ; Energy Gain: 6.72.

Cell# 3884-122909GHWF4: 20g TiC58 + 5g Mg#1 + 5g NaH#3 + 0.35g Li#1; Tmax: 590 °C; Ein: 318.1 kJ; dE: 11.08 kJ; Theoretical Energy: -1.71 kJ; Energy Gain: 6.48.

Cell# 3885-122909GHWF5: 20g TiC58 + 5g MgH2#1 + 8.3g K-1; Tmax: 514 °C; Ein: 287.1 kJ; dE: 15.12 kJ; Theoretical Energy: -6.93 kJ; Energy Gain: 2.18.

122909KAWF2 (1.5" HDC): 5g NaH#3 + 5g Mg#1 + 20g TiC#58; Tmax: 560 °C; Ein: 346.0 kJ; dE: 7.17 kJ; Theoretical Energy: 0 kJ; Energy Gain: infinite.

122909KAWF3 (1.5" HDC): 2.5g NaH#3 + 2.5g Mg#1 + 20g TiC#58; Tmax: 507 °C; Ein: 348.5 kJ; dE: 4.27 kJ; Theoretical Energy: 0 kJ; Energy Gain: infinite.

Cell# 3871-122809JLWF2: 20g TiC #67 + 5g Mg-1 + 8.3g KH#11 + 0.35g Li-1 (after completing exp., give sample to GW to regenerate); Tmax: 564 °C; Ein: 356.5 kJ; dE: 14.76 kJ; Theoretical Energy: -1.65 kJ; Energy Gain: 8.92.

Cell# 3872-122809JLWF3: 12g TiC#67 + 3g Mg-1 + 3g NaH-3; Tmax: 524 °C; Ein: 239.1 kJ; dE: 10.26 kJ; Theoretical Energy: 0 kJ; Energy Gain: infinite.

Cell# 3873-122809JLWF4: 5g NaH-3 + 0.35g Li-1; TSC: Tmax: 533 °C; Ein: 215.1 kJ; dE: 3.04 kJ; Theoretical Energy: 0 kJ; Energy Gain: infinite.

Cell# 3874-122809GHWF2: 12g TiC67 + 3g NaH#3 + 0.21g Li#1; Tmax: 527 °C; Ein: 207.0 kJ; dE: 2.56 kJ; Theoretical Energy: -1.03 kJ; Energy Gain: 2.50.

Cell# 3875-122809GHWF3: 12g TiC67 + 3g Mg#1 + 3g NaH#3 + 0.21g Li#1Tmax: 506 °C; Ein: 210.1 kJ; dE: 7.47 kJ; Theoretical Energy: -1.03 kJ; Energy Gain: 7.28.

Cell# 3876-122809GHWF4: 20g AC#14 + 5g Mg#1 + 8.3g KH#11; Tmax: 764 °C; Ein: 459.2 kJ; dE: 23.33 kJ; Theoretical Energy: 0 kJ; Energy Gain: infinite.

Cell# 3877-122809GHWF5: 20g TiC67 + 5g Mg#1 + 8.3g KH#11 + 147psig H2; TSC: 380-470 °C; Tmax: 535 °C; Ein: 313.5 kJ; dE: 19.43 kJ; Theoretical Energy: -4.70 kJ; Energy Gain: 4.14.

Cell # 164-122809RCWF1: 3 g NaH-3 + 12 g TiC-67; Tmax: 533 °C; Ein: 218-0 kJ; dE: 2.6 kJ; Theoretical Energy: 0 kJ; Energy Gain: infinite.

Cell # 165-122809RCWF2: 3.32 g KH-11 + 8 g AC-14;; Tmax: 530 °C; Ein: 195.0 kJ; dE: 4.1 kJ; Theoretical Energy: -0.3 kJ; Energy Gain: 13.7.

Cell # 166-122809RCWF3: 6 g NaH-3 + 6 g Mg-1 + 24 g TiC-67; Tmax: 535 °C; Ein: 312 kJ; dE: 14.8 kJ; Theoretical Energy: 0 kJ; Energy Gain: infinite.

Cell# 3865-122409JLWF3: 1.5g AC #14 + 3g NaH #2; Tmax: 529 °C; Ein: 232.0 kJ; dE: 2.26 kJ; Theoretical Energy: 0 kJ; Energy Gain: infinite.

Cell# 3867-122409GHWF2: 12g CrB2 + 3g NaH#2; Tmax: 507 °C; Ein: 198.1 kJ; dE: 2.71 kJ; Theoretical Energy:

0 kJ; Energy Gain: infinite.

Cell# 3870-122409GHWF5: 20g TiC67 + 5g Mg#1 + 8.3g KH#11 + 5g MgH2; Tmax: 507 °C; Ein: 276.5 kJ; dE: 16.64 kJ; Theoretical Energy: -6.54 kJ; Energy Gain: 2.54.

Cell # 160-122409RCWF1: 3 g NaH-2 + 12 g CrB2; Tmax: 515 °C; Ein: 217.0 kJ; dE: 2.2 kJ; Theoretical Energy: 0 kJ.

Cell # 162-122409RCWF3: 6 g NaH-2 + 24 g TiC-67; Tmax: 554 °C; Ein: 328 kJ; dE: 4.9 kJ; Theoretical Energy: 0 kJ; Energy Gain: infinite.

Cell # 163-122409RCWF4: 3 g Mg-1 + 4.98 g KH-11 + 3 g MgH2-1 + 12 g TiC-67; Tmax: 512 °C; Ein: 214.0 kJ; dE: 9.1 kJ; Theoretical Energy: -3.9 kJ; Energy Gain: 2.3.

Cell# 3854-122309JLWF1: 20g TiC #67 + 5g Mg #1 + 5g NaH #12; Tmax: 540 °C; Ein: 353.1 kJ; dE: 8.78 kJ; Theoretical Energy: 0 kJ; Energy Gain: infinite.

Cell# 3856-122309JLWF3: 3g AC #14 + 3g NaH #2; Tmax: 527 °C; Ein: 235.2 kJ; dE: 4.02 kJ; Theoretical Energy: 0 kJ; Energy Gain: infinite.

Cell# 3863-122309GHWF5: 20g TiC66 + 5g Mg#1 + 8.3g KH#15 + 14.85g BaBr2-AD-4; Tmax: 504 °C; Ein: 273.3 kJ; dE: 13.79 kJ; Theoretical Energy: -4.86 kJ; Energy Gain: 2.84.

Cell # 157-122309RCWF2: 8 g chemical from 121509C2Reg + 2 g Mg-1+ 3.32 g KH-15; Tmax: 534 °C; Ein: 206.0 kJ; dE: 4.6 kJ; Theoretical Energy: -0.3 kJ; Energy Gain: 15.3.

Cell # 158-122309RCWF3: 2 g Mg-1 + 3.32 g KH-15 + 8 g CB-1; Tmax: 569 °C; Ein: 334 kJ; dE: 4 kJ; Theoretical Energy: 0 kJ; Energy Gain: infinite.

Cell # 159-122309RCWF4: 3 g Mg-1 + 3 g NaH-2 + 12 g CrB2; Tmax: 523 °C; Ein: 233.1 kJ; dE: 4 kJ; Theoretical Energy: 0 kJ; Energy Gain: infinite.

Cell# 3845-122209JLWF1: 20g TiC #66 + 5g Mg #1 + 8.3g KH #15 + 0.35g Li; Tmax: 540 °C; Ein: 304.9 kJ; dE: 12.04 kJ; Theoretical Energy: -1.65 kJ; Gain: 7.28.

Cell# 3846-122209JLWF2: 8g YC2 #4 + 2g Mg #1 + 3.32g KH #15 + 4.8g CaI2-AD-1; Tmax: 562 °C; Ein: 221.2 kJ; dE: 5.70 kJ; Theoretical Energy: -3.08 kJ; Energy Gain: 1.85.

Cell# 3847-122209JLWF3: 8g AC #13 + 2g NaH; Tmax: 537 °C; Ein: 254.5 kJ; dE: 5.24 kJ; Theoretical Energy: 0 kJ; Energy Gain: infinite.

Cell# 3848-122209JLWF4: 8g AC #13 + 3.32g KH #15; Tmax: 534 °C; Ein: 211.3.1 kJ; dE: 6.16 kJ; Theoretical Energy: -.79 kJ; Energy Gain: 7.80.

Cell# 3852-122209GHWF4: 20g TiC66 + 5g Mg#1 + 5g NaH#2 + 14.85g BaBr2-AD-4 (for NMR experiment); Tmax: 588 °C; Ein: 318.3 kJ; dE: 13.38 kJ; Theoretical Energy: -1.55 kJ; Energy Gain: 8.63.

Cell # 153-122209RCWF2: 4.98 g KH-15 + 3 g Mg + 12 g TiC-66; Tmax: 523 °C; Ein: 197.0 kJ; dE: 6.7 kJ; Theoretical Energy: 0 kJ; Energy Gain: infinite.

Cell # 150-122109RCWF3: 2 g Mg-1 + 2 g NaH-1 + 8 g CB-1; Tmax: 645 °C; Ein: 372 kJ; dE: 5.6 kJ; Theoretical Energy: 0 kJ; Energy Gain: infinite.

Cell# 154-122209RCWF3: 6 g Mg-1 + 6 g NaH-2 + 24 g TiC-66; Tmax: 573 °C; Ein: 334 kJ; dE: 16.7kJ; Theoretical Energy: 0 kJ; Energy Gain: infinite.

122109KAWFC2#1491; 1.5" HDC; 5.0g NaH + 20.0g TiC#66; Tmax: 563 °C; Ein: 338 kJ; dE: 7 kJ; Theoretical Energy: 0 kJ.

122109KAWFC3#1490; 1.5" HDC; 5.0g NaH + 20.0g TiC#66; Tmax: 556 °C; Ein: 338 kJ; dE: 6 kJ; Theoretical Energy:0 kJ.

Cell # 147-121809RCWF4: 4.98 g K + 3 g MgH2 + 12 g TiC-65; Tmax: 517 °C; Ein: 223.0 kJ; dE: 8 kJ; Theoretical Energy: -4.16 kJ; Energy Gain: 1.92.

Cell # 140-121709RCWF1: 2 g Mg + 3.32 g KH-13 + 8 g 112409C1Regen1 (regenerated by evacuating the reaction system of AC/Mg/KH at 575 °C for 96 h); Tmax: 524 °C; Ein: 211.1 kJ; dE: 5.2 kJ; Theoretical Energy: -0.3 kJ; Energy Gain: 17.3.

Cell # 141-121709RCWF2: 2 g Mg + 3.32 g KH-13 + 8 g 112409C2Regenl (regenerated by evacuating the reaction syetem of AC/Mg/KH at 575 °C for 96 h); Tmax: 530 °C; Ein: 206.0 kJ; dE: 4.6 kJ; Theoretical Energy: -0.3 kJ; Energy Gain: 15.3.

Cell# 3827-121709JLWF1: 20g AC #13 + 5g Mg + 8.3g KH #15 + 5g MgH2 + 2.12g LiCl; Tmax: 518 °C; Ein: 710.5 kJ; dE: 16.73 kJ; Theoretical Energy: -7.49 kJ; Energy Gain: 2.23.

Cell# 3828-121709JLWF2: 20g AC #13 + 5g Mg + 8.3g KH #15 + 2.12g LiCl; Tmax: 380 °C; Ein: 679.7 kJ; dE: 9.60 kJ; Theoretical Energy: -3.04 kJ; Energy Gain: 3.16.

Cell# 3829-121709JLWF3: 8g AC #13 + 2g Mg + 3.32g KH #13 + 2g MgH2 + 0.85g LiCl; Tmax: 535 °C; Ein: 230.3 kJ; dE: 14.66 kJ; Theoretical Energy: -3.00 kJ; Energy Gain: 4.89.

Cell# 3830-121709JLWF4: 8g AC #13 + 2g Mg + 3.32g KH #13 + 0.85g LiCl; Tmax: 591 °C; Ein: 246.8 kJ; dE: 10.33 kJ; Theoretical Energy: -1.22 kJ; Energy Gain: 8.49.

Cell# 3831-121709GHWF1: 12g TiC65 + 3g Mg + 3.32g KH#13 + 2g MgH2 + 1.26g LiCl; Tmax: 482 °C; Ein: 178.2 kJ; dE: 8.87 kJ; Theoretical Energy: -3.61 kJ; Energy Gain: 2.46.

Cell# 3832-121709GHWF2: 12g TiC65 + 3g Mg + 3.32g KH#13 + 1g MgH2 + 1.26g LiCl; Tmax: 496 °C; Ein: 177.1 kJ; dE: 8.95 kJ; Theoretical Energy: -3.11 kJ; Energy Gain: 2.88.

Cell# 3833-121709GHWF3: 12g TiC65 + 3g Mg + 3.32g KH#13 + 1.26g LiCl; Tmax: 491 °C; Ein: 184.0 kJ; dE: 7.53 kJ; Theoretical Energy: -1.80 kJ; Energy Gain: 4.18.

Cell# 3834-121709GHWF4: 20g TiC65 + 5g Mg + 8.3g KH#15 + 5g MgH2 + 2.12g LiCl; Tmax: 451 °C; Ein: 466.8 kJ; dE: 16.08 kJ; Theoretical Energy: -8.39 kJ; Energy Gain: 1.92.

Cell# 3835-121709GHWF5: 20g TiC65 + 5g Mg + 8.3g KH#15 + 2.12g LiCl; Tmax: 430 °C; Ein: 444.0 kJ; dE: 11.80 kJ; Theoretical Energy: -3.03 kJ; Energy Gain: 3.89.

Cell# 3862-121809JLWF4: 12g TiC + 3g NaH; Tmax: 528 °C; Ein: 202.3 kJ; dE: 5.63 kJ; Theoretical Energy: 0 kJ; Energy Gain: infinite.

121709KAWFC1#1486; 1.5" HDC; 8.3g KH + 5.0g Ca + 20.0g YC2 + 3.9g CaF2; Tmax: 720 °C; Ein: 459 kJ; dE: 9 kJ; Theoretical Energy: 6.85 kJ; Energy Gain~1.3.

121709KAWFC2#1485; 1.5" HDC; 8.3g KH + 5.0g Mg + 20.0g YC2 + 13.9g MgI2; Tmax: 552 °C; Ein: 308 kJ; dE: 19 kJ; Theoretical Energy: 12.6 kJ; Energy Gain~1.5.

121709KAWFC3#1484;1.5" HDC; 8.3g KH + 5.0g Mg + 20.0g YC2 + 9.2g MgBr2; TSC: 260-390 °C; Tmax: 536 °C; Ein: 312 kJ; dE: 16 kJ; Theoretical Energy: 11.6 kJ; Energy Gain~1.38.

121609KAWFC1#1483; 1.5" HDC; 8.3g KH#13+ 5.0g Mg+ 5.0g MgH2+ 20.0g TiC; Tmax: 563 °C; Ein: 338 kJ; dE: 7 kJ; Theoretical Energy: 0 kJ.

121609KAWFC2#1482; 1.5" HDC; 8.3g KH+ 5.0g Mg+ 20.0g TiC+12.4g SrBr2-AD-1; TSC: 340-460 °C; Tmax: 589 °C; Ein: 339 kJ; dE: 21 kJ; Theoretical Energy: 6.72 kJ; Energy Gain~3.1.

121609KAWFC3#1481; 1.5" HDC; 8.3g KH+ 5.0g Mg+ 20.0g TiC+12.4g SrBr2-AD-1; TSC: 320-460 °C; Tmax: 587 °C; Ein: 339 kJ; dE: 19 kJ; Theoretical Energy: 6.72 kJ; Energy Gain~2.82.

Cell# 3817-121509GHWF5: 20g TiC63 + 5g Mg + 8.3g KH#13; Tmax: 451 °C; Ein: 499.8 kJ; dE: 5.49 kJ; Theoretical Energy: 0 kJ; Energy Gain: infinite.

Cell# 3818-121609JLWF1: 20g AC #13 + 5g Mg + 8.3g KH #13 + 5g MgH2 + 4.35g LiBr; Tmax: 519 °C; Ein: 686.4 kJ; dE: 19.65 kJ; Theoretical Energy: -7.74 kJ; Energy Gain: 2.54.

Cell# 3819-121609JLWF2: 20g AC #13 + 5g Mg + 8.3g KH #13 + 4.35g LiBr; Tmax: 522 °C; Ein: 886.5 kJ; dE: 14.09 kJ; Theoretical Energy: -3.77 kJ; Energy Gain: 3.73.

Cell# 3820-121609JLWF3: 8g AC #11 + 3g Mg + 3.32g KH #13 + 2g MgH2 + 2.61g LiBr-1; Tmax: 524 °C; Ein: 223.8 kJ; dE: 12.28 kJ; Theoretical Energy: -3.10 kJ; Energy Gain: 3.97.

Cell# 3821-121609JLWF4: 8g AC #11 + 3g Mg + 3.32g KH #13 + 2.61g LiBr-1; Tmax: 536 °C; Ein: 197.5 kJ; dE: 13.64 kJ; Theoretical Energy: -2.27 kJ; Energy Gain: 6.02.

Cell# 3822-121609GHWF1: 12g TiC64 + 3g Mg + 3.32g KH#13 + 2g MgH2 + 2.61g LiBr-1; Tmax: 538 °C; Ein: 233.1 kJ; dE: 10.56 kJ; Theoretical Energy: -4.06 kJ; Energy Gain: 2.60.

Cell# 3823-121609GHWF2: 12g TiC64 + 3g Mg + 3.32g KH#13 + 1g MgH2 + 2.61g LiBr-1; Tmax: 568 °C; Ein: 272.6 kJ; dE: 7.07 kJ; Theoretical Energy: -3.57 kJ; Energy Gain: 1.98.

Cell# 3824-121609GHWF3: 12g TiC64 + 3g Mg + 3.32g KH#13 + 2.61g LiBr-1; Tmax: 545 °C; Ein: 225.1 kJ; dE: 5.99 kJ; Theoretical Energy: -2.26 kJ; Energy Gain: 2.65.

Cell# 3825-121609GHWF4: 20g TiC64 + 5g Mg + 8.3g KH#13 + 5g MgH2 + 4.35g LiBr-1; Tmax: 483 °C; Ein: 521.6 kJ; dE: 16.78 kJ; Theoretical Energy: -9.13 kJ; Energy Gain: 1.84.

Cell# 3826-121609GHWF5: 20g TiC64 + 5g Mg + 8.3g KH#13 + 4.35g LiBr-1; Tmax: 451 °C; Ein: 485.0 kJ; dE: 11.57 kJ; Theoretical Energy: -3.77 kJ; Energy Gain: 3.07.

Cell # 136-121609RCWF1: 1 g Mg + 1 g NaH + 4 g CB-1; Tmax: 527 °C; Ein: 207.3 kJ; dE: 4.4 kJ; Theoretical Energy: 0 kJ; Energy Gain: infinite.

Cell # 137-121609RCWF2: 1 g Mg + 1.66 g KH-13 + 4 g CB-1; Tmax: 531 °C; Ein: 196.5 kJ; dE: 4.2 kJ; Theoretical Energy: 0 kJ; Energy Gain: infinite.

Cell # 139-121609RCWF4: 2 g NaH + 2 g Mg + 2 g MgH2 + 12 g TiC-64; Tmax: 511 °C; Ein: 220.1 kJ; dE: 5.6 kJ; Theoretical Energy: 0 kJ; Energy Gain: infinite.

Cell# 3809-121509JLWF1: 20g AC #11 + 5g Mg + 8.3g KH #13 + 5g MgH2; Tmax: 521 °C; Ein: 733.7 kJ; dE: 17.62 kJ; Theoretical Energy: -6.46 kJ; Energy Gain: 2.73.

Cell# 3810-121509JLWF2: 20g AC #11 + 5g Mg + 8.3g KH #13; Tmax: 523 °C; Ein: 941.8 kJ; dE: 10.93 kJ; Theoretical Energy: 0 kJ; Energy Gain: infinite.

Cell# 3811-121509JLWF3: 8g AC #11 + 3g Mg + 3.32g KH #13 + 2g MgH2; Tmax: 541 °C; Ein: 227.2 kJ; dE: 12.98 kJ; Theoretical Energy: -2.58 kJ; Energy Gain: 5.02.

Cell# 3812-121509JLWF4: 8g AC #11 + 3g Mg + 3.32g KH #13; Tmax: 562 °C; Ein: 215.5 kJ; dE: 12.61 kJ; Theoretical Energy: 0 kJ; Energy Gain: infinite.

Cell# 3813-121509GHWF1: 12g TiC64 + 3g Mg + 3.32g KH#13 + 2g MgH2; Tmax: 543 °C; Ein: 238-1 kJ; dE: 7.80 kJ; (Theoretical Energy: -2.60 kJ; Energy Gain: 3.00.

Cell# 3814-121509GHWF2: 12g TiC64 + 3g Mg + 3.32g KH#13 + 1g MgH2; Tmax: 519 °C; Ein: 203.0 kJ; dE: 4.07 kJ; Theoretical Energy: -1.31 kJ; Energy Gain: 3.11.

Cell# 3816-121509GHWF4: 20g TiC64 + 5g Mg + 8.3g KH#13 + 5g MgH2; Tmax: 480 °C; Ein: 529.0 kJ; dE: 14.54 kJ; Theoretical Energy: -6.54 kJ; Energy Gain: 2.22.

Cell # 132-121509RCWF1: 3 g Mg + 3 g NaH + 2.61 g LiBr + 12 g TiC-64; Tmax: 521 °C; Ein: 199.3 kJ; dE: 8.9 kJ; Theoretical Energy: -2.3 kJ; Energy Gain: 3.9; Energy/mol oxidant: 296.4 kJ/mol.

Cell # 133-121509RCWF2: 3 g NaH + 12 g TiC-64; Tmax: 524 °C; Ein: 191.4 kJ; dE: 5.8 kJ; Theoretical Energy: 0 kJ; Energy Gain: infinite.

Cell# 3799-121009GHWF5: 20g AC + 10g Mg + 10g NaH; Tmax: 536 °C; Ein: 691.4 kJ; dE: 18.66 kJ; Theoretical Energy: 0 kJ; Energy Gain: infinite.

Cell# 3800-121409JLWF1: 20g AC #11 + 5g Mg + 5g NaH + 5g MgH2; Tmax: 506 °C; Ein: 751.3 kJ; dE: 13.25 kJ; Theoretical Energy: -2.36 kJ; Energy Gain: 5.61.

Cell# 3801-121409JLWF2: 20g AC #11 + 5g Mg + 5g NaH; Tmax: 504 °C; Ein: 748.9 kJ; dE: 7.57 kJ; Theoretical Energy: 0 kJ; Energy Gain: infinite.

Cell# 3802-121409JLWF3: 8g AC #11 + 3g Mg + 2g NaH + 2g MgH2; Tmax: 532 °C; Ein: 226.0 kJ; dE: 10.76 kJ; Theoretical Energy: -0.94 kJ; Energy Gain: 11.42.

Cell# 3803-121409JLWF4: 8g AC #12 + 3g Mg + 2g NaH; Tmax: 551 °C; Ein: 201.6 kJ; dE: 10.61 kJ; Theoretical Energy: 0 kJ; Energy Gain: infinite.

Cell# 3804-121409GHWF1: 12g TiC64 + 3g Mg + 2gNaH + 2g MgH2; Tmax: 517 °C; Ein: 211.1 kJ; dE: 4.12 kJ; Theoretical Energy: 0 kJ; Energy Gain: infinite.

Cell# 3808-121409GHWF5: 20g TiC63 + 5g Mg + 5g NaH; Tmax: 524 °C; Ein: 627.0 kJ; dE: 6.56 kJ; Theoretical Energy: 0 kJ; Energy Gain: infinite.

Cell # 128-121409RCWF1: 2 g Mg + 2 g NaH + 8 g AC-11; Tmax: 533 °C; Ein: 204.1 kJ; dE: 6.4 kJ; Theoretical Energy: 0 kJ; Energy Gain: infinite.

Cell # 129-121409RCWF2: 2 g Mg + 3.32 g KH-13 + 8 g AC-11; Tmax: 530 °C; Ein: 184.5 kJ; dE: 9.1 kJ; Theoretical Energy: -0.3 kJ; Energy Gain: 30.3.

Cell# 3782-121009JLWF1: 20g TiC #63 + 5g Mg + 8.3g KH #15; Tmax: 531 °C; Ein: 751.5 kJ; dE: 8.94 kJ; Theoretical Energy: 0 kJ; Energy Gain: infinite.

Cell# 3781-120909GHWF5: 20g TiC62 + 5g Mg + 5g NaH; Tmax: 537 °C; Ein: 663.9 kJ; dE: 8.83 kJ; Theoretical Energy: 0 kJ; Energy Gain: infinite.

Cell# 3784-121009JLWF3: 12g TiC #63 + 3g Mg + 4.98g KH #15; Tmax: 524 °C; Ein: 235.7 kJ; dE: 5.71 kJ; Theoretical Energy: 0 kJ; Energy Gain: infinite.

Cell# 3785-121009JLWF4: 12g TiC #63 + 3g Mg + 4.98g KH #15; Tmax: 537 °C; Ein: 228.1 kJ; dE: 8.74 kJ; Theoretical Energy: 0 kJ; Energy Gain: infinite.

Cell# 3786-121009GHWF1: 5g Mg + 5g NaH; Tmax: 505 °C; Ein: 214.1 kJ; dE: 4.38 kJ; Theoretical Energy: 0 kJ; Energy Gain: infinite.

Cell# 3790-121009GHWF5: 20g TiC63 + 5g Mg + 8.3g KH#15; Tmax: 506 °C; Ein: 528.2 kJ; dE: 10.07 kJ; Theoretical Energy: 0.

Cell # 122-121009RCWF3: 4.98 g KH-15 + 3 g Mg + 12 g TiC-63 ; Tmax: 527 °C; Ein: 203 kJ; dE: 0.6 kJ; Theoretical Energy: 0 kJ.

Cell # 123-121009RCWF4: 2.61 g LiBr + 4.98 g KH-15 + 3 g Mg + 12 g TiC-62; Tmax: 522 °C; Ein: 233.1 kJ; dE: 5.5 kJ; Theoretical Energy: -2.3 kJ; Energy Gain: 2.4.

121009KAWFC1# 1471; 1.5"HDC; 8.3g KH#15 + 5.0g Mg+ 20.0g ACII# 12; Tmax: 579 °C; Ein: 331 kJ; dE: 17 kJ; Theoretical Energy: 0 kJ.

121009KAWFC2 #1470; 1.5"HDC; 4.65g KH#15 + 2.5g Mg + 20.0g ACII# 12; Tmax: 573 °C; Ein: 323 kJ; dE: 12 kJ; Theoretical Energy: 0 kJ.

121009KAWFC3# 1469; 1.5"HDC 4.65g KH#15 + 2.5g Mg + 20.0g ACII#12; Tmax: 567 °C; Ein: 323 kJ; dE: 16 kJ; Theoretical Energy: 0 kJ.

Cell# 3773-120909JLWF1: 20g TiC #62 + 5g Mg + 5g NaH; Tmax: 511 °C; Ein: 726.1 kJ; dE: 10.67 kJ; Theoretical Energy: 0 kJ; Energy Gain: infinite.

Cell# 3774-120909JLWF2: 20g TiC #62 + 5g Mg + 5g NaH; Tmax: 511 °C; Ein: 711.1 kJ; dE: 5.77 kJ; Theoretical Energy: 0 kJ; Energy Gain: infinite.

Cell# 3775-120909JLWF3: 12g TiC #62 + 3g Mg + 3g NaH; Tmax: 515 °C; Ein: 227.2 kJ; dE: 5.98 kJ; Theoretical Energy: 0 kJ; Energy Gain: infinite.

Cell# 3776-120909JLWF4: 12g TiC #62 + 3g Mg + 3g NaH; Tmax: 525 °C; Ein: 212.1 kJ; dE: 8.95 kJ; Theoretical Energy: 0 kJ; Energy Gain: infinite.

Cell# 3778-120909GHWF2: 12g TiC62 + 3g Mg + 3g NaH; Tmax: 513 °C; Ein: 203.1 kJ; dE: 4.82 kJ; Theoretical Energy: 0 kJ; Energy Gain: infinite.

Cell# 3780-120909GHWF4: 20g TiC62 + 5g Mg + 5g NaH; Tmax: 535C; Ein: 627.0 kJ; dE: 7.75 kJ; Theoretical Energy: 0 kJ; Energy Gain: infinite.

Cell # 116-120809RCWF1: 3 g NaH + 3 g Mg + 12 g TiC-62; Tmax: 513 3 °C; Ein: 206 kJ; dE: 6.6 kJ; Theoretical Energy: 0 kJ; Energy Gain: infinite.

Cell # 119-120809RCWF4: 3 g NaH + 3 g Mg + 12 g TiC-62; Tmax: 508 °C; Ein: 229.1 kJ; dE: 5 kJ; Theoretical Energy: 0 kJ; Energy Gain: infinite.

120909KAWFC1# 1468; 2" HDC; 5.0g NaH+ 5.0g Mg+ 20.0gTiC#62; Tmax: 522 °C; Ein: 426 kJ; dE: 7 kJ; Theoretical Energy: 0 kJ.

120909KAWFC2 #1467; 2" HDC 2.5g NaH+ 2.5g Mg+ 20.0gTiC#62; Tmax: 475 °C ; Ein: 605 kJ; dE: 9 kJ; Theoretical Energy: 0 kJ.

120909KAWFC3# 1466; 2" HDC 2.5g NaH+ 5.0g Mg+ 20.0gTiC#62; Tmax: 475 °C; Ein: 605 kJ; dE: 7 kJ; Theoretical Energy: 0 kJ.

120709KAWFC1 #1465; 2" HDC 8.3g KH#13 + 5.0g Mg+ 20.0g ACII#8; Tmax: 512 °C; Ein: 567 kJ; dE: 19 kJ; Theoretical Energy: 0 kJ.

120709KAWFC2 #1464; 2" HDC 4.65g KH#13 + 5.0g Mg + 20.0g ACII#8; Tmax: 514 °C; Ein: 605 kJ; dE:21 kJ; Theoretical Energy:0 kJ.

120709KAWFC3 #1463; 2" HDC 4.65g KH#13 + 2.5g Mg+ 20.0g ACII#8; Tmax: 490 °C; Ein: 605 kJ; dE: 18 kJ; Theoretical Energy: 0 kJ.

Cell# 3767-120709JLWF4: 12g TiC #57 + 3g Mg + 3g NaH; Tmax: 522 °C; Ein: 197.2 kJ; dE: 10.6 kJ; Theoretical Energy: 0 kJ; Energy Gain: infinite.

Cell# 3770-120709GHWF3: 12g TiC57 + 5g Ca + 8.3g KH#13 + 3.57g KBr; Tmax: 485 °C; Ein: 175.0 kJ; dE: 7.35 kJ; Theoretical Energy: -4.11 kJ; Energy Gain: 1.79.

Cell# 3771-120709GHWF4:20g TiC57 + 5g Mg + 8.3g KH#13 + 12.4g SrBr2-AD-2; Tmax: 718 °C; Ein: 996.8 kJ; dE: 15.75 kJ; Theoretical Energy: -6.72 kJ; Energy Gain: 2.34.

Cell # 113-120709RCWF2: 6 g NaH + 6 g Mg + 24 g TiC-56; Tmax: 533 °C; Ein: 638 kJ; dE: 17.4 kJ; Theoretical Energy: 0 kJ; Energy Gain: infinite.

Cell # 114-120709RCWF3: 2.34 g CaF2-AD-1 + 4.98 g KH + 5 g Ca + 12 g TiC-56; Tmax: 717 °C; Ein: 274 kJ; dE: 8.3 kJ; Theoretical Energy: -4.1 kJ; Energy Gain: 2.

Cell # 115-120709RCWF4: 3 g NaH + 2.6 g LiBr + 3 g Mg + 12 g TiC-56; Tmax: 424 °C; Ein: 156 kJ; dE: 5.5 kJ; Theoretical Energy: -1.1 kJ; Energy Gain: 5.

Cell # 110-120409RCWF2: 8.91 g BaBr2-AD-4 + 0.96 g KH + 3 g Mg + 12 g TiC-56; Tmax: 433 °C; Ein: 143 kJ; dE: 4.9 kJ Theoretical Energy: -1.2 kJ; Energy Gain: 4.1; Energy/mol oxidant: 163.2 kJ/mol.

Cell # 108-120309RCWF4: 8 g AC2-8 + 3.32 g KH-12 + 0.4 g Mg; Tmax: 399 °C; Ein: 149 kJ; dE: 3.9 kJ; Theoretical Energy: -0.3 kJ; Energy Gain: 13.

120409KAWFC1#1462; 1" HDC; 3.0g NaH+ 3.0g Mg+12.0g TiC#57; Tmax: 567 °C; Ein: 214 kJ; dE: 7 kJ; Theoretical Energy: 0 kJ; Energy Gain: infinite.

120409KAWFC2#1461; 2" HDC; 8.3g KH#13 + 5.0g Mg + 20.0g TiC#57+ 10.4g BaCl2-AD-2; Tmax: 489 °C; Ein: 604 kJ; dE: 18 kJ; Theoretical Energy: -4.06 kJ; Energy Gain: 4.4.

120409KAWFC3#1460; 2" HDC; 8.3g KH#13 + 8.3g Ca + 20.0g TiC#57+3.9g CaF2-AD-1; Tmax: 440 °C; Ein: 604 kJ; dE: 14 kJ; Theoretical Energy: -6.85 kJ; Energy Gain: 2.

120309KAWFC2#1458; 2" HDC; 5.0g NaH+ 5.0g Mg+ 20.0g AC+ 10.78g FeBr2; TSC: 350-400 °C; Tmax: 496 °C; Ein: 605 kJ; dE: 35 kJ; Theoretical Energy energy:-21.71kJ, Energy Gain: 1.6.

120309KAWFC3#1457; 2" HDC; 5.0g NaH+ 5.0g Mg+ 20.0g AC; Tmax: 498 °C; Ein: 605 kJ; dE: 15 kJ; Theoretical Energy: -0 kJ; Energy Gain: infinite.

120209KAWFC2#1455; 2" HDC; 8.3g KH+ 5.0g Mg+0.35g Li+ 20.0g TiC; Tmax: 496 °C; Ein: 605 kJ; dE: 11 kJ; Theoretical Energy: -1.64 kJ; Energy Gain: 6.7.

120209KAWFC3#1454; 2" HDC; 5.0g NaH+ 5.0g Mg+0.35g Li+ 20.0g TiC; Tmax: 475 °C; Ein: 605 kJ; dE: 10 kJ; Theoretical Energy: -1.71 kJ; Energy Gain: 5.8.

Cell # 3755-120309JLWF3: TiC #57 + 3g MgH2 + 4.98g KH #13; Tmax: 426 °C; Ein: 164.1 kJ; dE: 7.9 kJ; Theoretical Energy: -3.9 kJ; Energy Gain: 2.0.

Cell# 3756-120309JLWF4: 12g TiC #57 + 5g Ca + 3g MgH2 + 4.98g KH #13; TSC: ~350-450 °C; Tmax: 490 °C; Ein: 141.9 kJ; dE: 19.8 kJ; Theoretical Energy: -12.8 kJ; Energy Gain: 1.5.

Cell# 3757-120309GHWF1: 12g TiC56 + 3g MgH2 + 4.98g K; Tmax: 405 °C; Ein: 150.0 kJ; dE: 4.30 kJ; Theoretical Energy: -2.55 kJ; Energy Gain: 1.69.

Cell# 3759-120309GHWF3: 12g TiC56 + 3g Mg + 3g Ti + 3g NaH; Tmax: 456 °C; Ein: 149.0 kJ; dE: 6.68 kJ; Theoretical Energy: 0 kJ; Energy Gain: infinite.

Cell # 105-120309RCWF1: 8 g AC2-8 + 3.32 g KH-12 + 0.8 g Mg, Tmax: 408 °C; Ein: 142 kJ; dE: 2.8 kJ; Theoretical Energy: -0.6 kJ; Energy Gain: 4.7.

Cell # 106-120309RCWF2: 3 g Mg + 3 g NaH; Tmax: 498 °C; Ein: 181 kJ; dE: 2.9 kJ.

Cell# 3720-120209JLWF1 (Regen Exp, Part 1): 20g TiC #53 + 2g Ca + 5g Mg + 5g NaH; Tmax: 367 °C; Ein: 394.7 kJ; dE: 9.1 kJ; Theoretical Energy: -3.4 kJ; Energy Gain: 2.7.

Cell# 3747-120209JLWF4: 12g TiC #56 + 5g Ca + 3g MgH2 + 3g NaH; TSC: ~380-475 °C; Tmax: 499 °C; Ein: 141.7 kJ; dE: 19.7 kJ; Theoretical Energy: -12.9 kJ; Energy Gain: 1.5.

Cell# 3750-120209GHWF3: 8g AC8 + 2g Mg + 3.32g KH#12; Tmax: 633 °C; Ein: 309.1 kJ; dE: 7.57 kJ; Theoretical Energy: 0 kJ; Energy Gain: infinite.

Cell# 3752-120209GHWF5: 20g TiC56 + 2.5g Mg + 7.5g KH#12; Tmax: 373 °C; Ein: 428.4 kJ; dE: 7.05 kJ; Theoretical Energy: 0 kJ; Energy Gain: infinite.

Cell # 101-120209RCWF1: 8 g AC2-8 + 1.99 g KH-12 + 1.2 g Mg; Tmax: 406 °C; Ein: 141 kJ; dE: 3.2 kJ; Theoretical Energy: -0.3 kJ; Energy Gain: 10.7.

Cell # 102-120209RCWF2: 8 g AC2-8 + 2.66 g KH-12 + 1.6 g Mg; Tmax: 408 °C; Ein: 131 kJ; dE: 2.2 kJ; Theoretical Energy: -0.4 kJ; Energy Gain: 5.5.

Cell # 104-120209RCWF4: 8 g AC2-8 + 3.32 g KH-12 + 1.2 g Mg; Tmax: 417 °C; Ein: 137 kJ; dE: 4.9 kJ; Theoretical Energy: -0.6 kJ; Energy Gain: 8.2.

Cell# 3737-120109JLWF2: 20g TiC #55 + 5g Mg + 2.95g Ni + 5g NaH; Tmax: 369 °C; Ein: 400.3 kJ; dE: 4.9 kJ; Theoretical Energy: -2.6 kJ (Mg2Ni Intermetallic); Energy Gain: 1.9.

Cell# 3738-120109JLWF3: 12g TiC #55 + 3g Mg + 3g Sr + 3g NaH; Tmax: 431 °C; Ein: 160.3 kJ; dE: 10.4 kJ; Theoretical Energy: -2.3 kJ; Energy Gain: 4.5.

Cell# 3739-120109JLWF4: 12g TiC #55 + 3g Mg + 3g Ba + 3 g NaH; Tmax: 432 °C; Ein: 150.4 kJ; dE: 5.4 kJ; Theoretical Energy: -1.5 kJ; Energy Gain: 3.7.

Cell# 3740-120109GHWF1: 12g TiC55 + 3g Mg + 3g Eu + 3g NaH; Tmax: 464 °C; Ein: 180.1 kJ; dE: 5.62 kJ; Theoretical Energy: -1.40 kJ; Energy Gain: 4.00.

Cell# 3741-120109GHWF2: 12g TiC55 + 3g Mg + 3g Gd + 3g NaH; Tmax: 481 °C; Ein: 172.0 kJ; dE: 6.76 kJ; Theoretical Energy: -1.44 kJ; Energy Gain: 4.69.

Cell# 3742-120109GHWF3: 12g TiC55 + 3g Mg + 3g La + 3g NaH; Tmax: 445 °C; Ein: 169.0 kJ; dE: 3.28 kJ; Theoretical Energy: -1.91 kJ; Energy Gain: 1.71.

Cell# 3744-120109GHWF5: 20g TiC55 + 5g Mg + 1.6g KH#12 + 14.85g BaBr2-AD-4; Tmax: 385 °C; Ein: 385.5 kJ; dE: 4.60 kJ; Theoretical Energy: -1.94 kJ; Energy Gain: 2.37.

Cell# 3745-120209JLWF2: 20g TiC #56 + 5g Mg + 8.3g KH #12 + 6.2g SrBr2-AD-2 + 3.98g SrCl2-AD-1; Tmax: 366 °C; Ein: 408.1 kJ; dE: 11.6 kJ; Theoretical Energy: -6.1 kJ; Energy Gain: 1.9.

Cell# 3746-120209JLWF3: 12g TiC #56 + 3g MgH2 + 3g NaH; Tmax: 415 °C; Ein: 160.8 kJ; dE: 6.4 kJ; Theoretical Energy: -1.4 kJ; Energy Gain: 4.6.

Cell # 98-120109RCWF2: 8 g AC2-9 (dried at 300 °C for 4 days) + 3.32 g KH-12 + 2 g Mg; Tmax: 412 °C; Ein: 127 kJ; dE: 8.4 kJ (corresponding to 21 kJ for 5 x).

Cell # 99-120109RCWF3:6 g CaBr2-AD-3 + 4.98 g KH-12 + 4.98 g Ca + 12 g TiC-55; TSC: 100 °C (321-421 °C); Tmax: 464 °C; Ein: 155 kJ; dE: 9.9 kJ; Theoretical Energy: -7.2 kJ; Energy Gain: 1.4; Energy/mol oxidant: 329.7 kJ/mol.

Cell # 100-120109RCWF4: 3 g NaH + 3 g Mg + 12 g TiC-55; Tmax: 497 °C; Ein: 192 kJ; dE: 6.3 kJ; Theoretical Energy: 0 kJ; Energy Gain: infinite.

120109KAWFC2#1452; 2" HDC; 8.3g KH+ 5.0g Mg+4.35g LiBr+ 20.0g TiC; Tmax: 490 °C; Ein: 605 kJ; dE: 17 kJ; Theoretical Energy: 3.75 kJ; Energy Gain: 4.5.

120109KAWFC3#1451; 2" HDC; 5.0g NaH+ 5.0g Mg+4.35g LiBr+ 20.0g TiC; °C Tmax: 445 °C; Ein: 605 kJ; dE: 12 kJ; Theoretical Energy: 2.2 kJ; Energy Gain: 5.4.

113009KAWFC2 George Hu#1450; 2" HDC; 5.0g NaH+ 5.0g Mg+ 20.0g TiC+2.1g LiCl; Tmax: 504 °C; Ein: 672 kJ; dE: 14 k; Theoretical Energy: 1.82 kJ; Energy Gain: 7.7.

113009KAWFC3 George Hu#1449; 2" HDC; 8.3g KH+ 5.0g Mg+ 20.0g TiC+2.1g LiCl; Tmax: 508 °C; Ein: 664 kJ; dE: 9 kJ; Theoretical Energy: 3 kJ.

112509KAWFC2#1447; 2" HDC; 1.66g KH#12 + 1.0g Mg +4.0g TiC#53+ 2.33g KSrCl3_111209JHSY1; Tmax: 427 °C; Ein: 164 kJ; dE: 5 kJ.

112509KAWFC3#1446; 2" HDC; 10.0g NaH + 10.0g Mg +40.0g TiC (heat above 500C); Tmax498 °C; Ein: 632 kJ; dE: 17 kJ; Theoretical Energy: 0 kJ.

112409KAWFC1#1445; 2" HDC; 5.0g NaH+ 5.0g Mg+ 20.0g TiC+19.54g BaI2-SD-4(Dried in Scale up cell above 750C); Tmax: 376 °C; Ein: 423 kJ; dE: 7 kJ; Theoretical Energy: 2.0 kJ.

112409KAWFC2#1444; 1" HDC; 5.0g NaH + 5.0g MgH2 + 20.0g ACII#7; Tmax: 381 °C; Ein: 424 kJ; dE: 10 kJ.

112409KAWFC3#1443; 1" HDC; 8.3g KH#10 + 5.0g Mg + 5.55g CaCl2-AD-1+20.0g CrB2-AD_1"; TSC: 360-430 °C; Tmax: 462 °C; Ein: 166 kJ; dE: 14 kJ; Theoretical Energy: 7.2kJ; Energy Gain: 1.9.

112309KAWSU#1442; 1.2 Liter 83.0g KH+ 50.0g Mg+ 200.0g TiC+124.0g SrBr2-SD-2; TSC: 180-430 °C; Tmax: 512 °C; Ein: 2624 kJ; dE: 147 kJ; Theoretical Energy: 67.2 kJ; Energy Gain: 2.18.

Cell# 3732-113009GHWF1: 12g TiC55 + 3g Mg + 5g Ca + 1g NaH; Tmax: 448 °C; Ein: 148.0 kJ; dE: 6.88 kJ; Theoretical Energy: -3.89 kJ; Energy Gain: 1.76.

Cell# 3734-113009GHWF3: 12g TiC55 + 5g Ca + 3g NaH; Tmax: 496 °C; Ein: 155.0 kJ; dE: 7.45 kJ; Theoretical Energy: -4.31 kJ; Energy Gain: 1.73.

Cell# 3735-113009GHWF4: 20g TiC55 + 5g Mg + 8.3g KH#12 + 10g CaBr2-AD-4; Tmax: 374 °C; Ein: 348.8 kJ; dE: 15.43 kJ; Theoretical Energy: -8.54 kJ; Energy Gain: 1.81.

Cell # 95-113009RCWF1: 20 g AC2-8 + 4.98 g KH-12 + 3 g Mg; Tmax: 417 °C; Ein: 388 kJ; dE: 14.6 kJ.

Cell # 93-113009RCWF2: 20 g AC2-8 + 8.3 g KH-12 + 3 g Mg; Tmax: 415 °C; Ein: 508 kJ; dE: 26.6 kJ.

Cell # 94-113009RCWF4: 7.41 g SrBr2-AD-2 + 4.98 g KH-12 + 3 g Mg + 12 g WC; Tmax: 443 °C; Ein: 156 kJ; dE: 5.3 kJ; Theoretical Energy: -4.0 kJ; Energy Gain: 1.3; Energy/mol oxidant: 176.5 kJ/mol.

Cell# 3728-112509GHWF5: 20g TiC53 + 8.3g KH#12 + 5g Mg + 7.95g SrCl2-AD-1 + 3.72g KCl; Tmax: 379 °C; Ein: 380.8 kJ; dE: 8.11 kJ; Theoretical Energy: -5.43 kJ; Energy Gain: 1.49.

Cell# 3729-113009JLWF2: TiC #53 + 5g Mg + 8.3g KH #12 + 10g CaBr2-AD-4; Tmax: 364 °C; Ein: 409.1 kJ; dE: 14.0 kJ; Theoretical Energy: -8.5 kJ; Energy Gain: 1.7.

Cell# 3730-113009JLWF3: 12g TiC #55 + 3g Mg + 3 g NaH; Tmax: 510 °C; Ein: 236.6 kJ; dE: 9.9 kJ; Theoretical Energy: 0 kJ; Energy Gain: infinite.

Cell # 90-112509RCWF4: 20 g AC2-8 + 6.64 g KH-10 + 4 g Mg; Tmax: 421 °C; Ein: 434.1 kJ; dE: 11.2 kJ.

Cell# 3723-112509JLWF4: 12g TiC #53 + 3g Mg + 1g LiH + 7.44g SrBr2-AD-1; Tmax: 426 °C; Ein: 152.7 kJ; dE: 4.3; Theoretical Energy: 0 kJ; Energy Gain: infinite.

Cell# 3722-112509JLWF3: 12g TiC #52 + 3g Mg + 1g LiH + 4.77g SrCl2-AD-1; Tmax: 407 °C; Ein: 159.8 kJ; dE: 5.7 kJ; Theoretical Energy: 0 kJ; Energy Gain: infinite.

Cell# 3721-112509JLWF2: 20g AC2-8 (Subst. by MCC) + 6g Ba + 8.3g KH #12; Tmax: 364 °C; Ein: 385.9 kJ; dE: 13.7 kJ; Theoretical Energy: -6.6 kJ; Energy Gain: 2.1.

Cell# 3713-112409JLWF3: 12g AC (Code not provided) + 3g Mg + 4.98g KH #10 + 7.44g SrBr2-AD-1; Tmax: 433 °C; Ein: 153.1 kJ; dE: 12.1 kJ; Theoretical Energy: -4.0 kJ; Energy Gain: 3.0.

Cell# 3715-112409GHWF1: 12g TiC51 + 5g Ca + 4.98g KH#10 + 1.74g KF; Tmax: 473 °C; Ein: 174.0 kJ; dE: 7.20 kJ; Theoretical Energy: -4.10 kJ; Energy Gain: 1.76.

Cell# 3716-112409GHWF2: 12g TiC51 + 5g Ca + 4.98g KH#10 + 2.24g KCl; Tmax: 505 °C; Ein: 223.5 kJ; dE: 6.86 kJ; Theoretical Energy: -4.10 kJ; Energy Gain: 1.67.

Cell# 3717-112409GHWF3: 12g TiC52 + 5g Ca + 4.98g KH#10 + 3.57g KBr; Tmax: 481 °C; Ein: 179.1 kJ; dE: 6.61 kJ; Theoretical Energy: -4.10 kJ; Energy Gain: 1.61.

Cell # 89-112409RCWF2: 20 g AC2-7 + 4.98 g KH-10 + 3 g Mg; Tmax: 420 °C; Ein: 428.1 kJ; dE: 21.4 kJ.

Cell # 91-112509RCWF2: 3 g NaH + 12 g TiC-52 + 3 g Mg; Tmax: 456 °C; Ein: 148 kJ; dE: 7.6 kJ; Theoretical Energy: 0 kJ; Energy Gain: infinite.

Cell # 92-112409RCWF4: 20 g AC2-7 + 6.64 g KH-10 + 4 g Mg; Tmax: 425 °C; Ein: 449.9 kJ; dE: 21.8 kJ.

Cell# 3706-112309GHWF1: 12g HfC + 3g Mg + 4.98g KH#10 + 7.44g SrBr2-AD-1; Tmax: 452 °C; Ein: 168.0 kJ; dE: 6.10 kJ; Theoretical Energy: -4.03 kJ; Energy Gain: 1-51.

Cell# 3707-112309GHWF2: 12g Cr3C2 + 3g Mg + 4.98g KH#10 + 7.44g SrBr2-AD-1; Tmax: 472 °C; Ein: 173.0 kJ; dE: 5.76 kJ; Theoretical Energy: -4.03 kJ; Energy Gain: 1.43.

Cell# 3708-112309GHWF3: 12g TiC51 + 3g Mg + 3g NaH; Tmax: 453 °C; Ein: 171.0 kJ; dE: 4.36 kJ; Theoretical Energy: 0 kJ; Energy Gain: infinite.

Cell# 3710-112309GHWF5: 20g TiC51 + 8.3g KH#10 + 5g Mg + 6.2g SrBr2-AD-1 + 3.98g SrCl2-AD-1; Tmax: 372 °C; Ein: 354.1 kJ; dE: 10.90 kJ; Theoretical Energy: -6.08 kJ; Energy Gain: 1.79.

Cell# 3711-112409JLWF1: 20g TiC #51 + 5g Mg + 8.3g KH #10 + 19.55g Bal2-SD-4; Tmax: 368 °C; Ein: 392.1 kJ; dE: 9.6 kJ; Theoretical Energy: -5.9 kJ; Energy Gain: 1.6.

Cell # 86-112309RCWF2: 4.94 g SrBr2-AD-1 + 3.32 g KH-10 + 2 g Mg + 8 g AC2-7; Tmax: 413 °C; Ein: 129 kJ; dE: 10.1 kJ; Theoretical Energy: -2.7 kJ; Energy Gain: 3.7 x. Energy/mol oxidant: 505 kJ/mol.

112309KAWFC3#1439; 2" HDC; 5.0g NaH+5.0g MgH2 + 20.0g ACII#7; Tmax: 366 °C; Ein: 423 kJ; dE: 7 kJ.

112009KAWFC2#1438; 2" HDC; 8.3g KH+ 28.5g Ba + 20.0g TiC+14.85g BaBr2-AD-1; Tmax: 750 °C; Ein: 1544 kJ; dE: 18 kJ; Theoretical Energy: 8.1 kJ; Energy Gain: 2.2.

112009KAWFC3#1437; 2" HDC; 8.3g KH+ 5.0g Mg + 20.0g TiC+10.4g BaCl2-AD-1; Tmax: 520 °C; Ein: 762 kJ; dE: 10 kJ; Theoretical Energy: 4.1 kJ; Energy Gain: 2.4.

111809KAWSU#1430; 1.2 Liter; 83.0g KH+ 50.0g Mg+ 200.0g TiC+195.4g Bal2-SD-4 (Dried in Scale up cell above 750 °C); Tmax: 52 0C; Ein: 2870 kJ; dE: 110 kJ; Ein: 58.5 kJ; Energy Gain: 1.8.

Cell# 3693-112009GZWF1: 20g AC2-7 (Subst. by MCC) + 5g Mg + 8.3g KH #10; Tmax: 367 °C; Ein: 412.0 kJ; dE: 16.9 kJ; Theoretical Energy: 0 kJ; Energy Gain: infinite (+16.9 kJ).

Cell# 3694-112009GZWF2: 20g AC2-7 (Subst. by MCC) + 8.33g Ca + 8.3g KH #10; TSC: ~250-300 °C; Tmax: 384 °C; Ein: 400.1 kJ; dE: 31.1 kJ; Theoretical Energy: -6.8 kJ; Energy Gain: 4.6.

Cell# 3700-112009GHWF4: 20g AC2-7 + 6g Sr + 8.3g KH#10; Tmax: 371 °C; Ein: 334.3 kJ; dE: 14.23 kJ; Theoretical Energy: -4.40 kJ; Energy Gain: 3.23.

Cell # 82-112009RCWF1: 3 g NaH + 3 g Mg + 12 g TiC-49; Tmax: 504 °C; Ein: 203 kJ; dE: 8.6 kJ. Theoretical Energy: 0 kJ; Energy Gain: infinite.

Cell# 3684-111909GZWF1: 20g TiC #49 + 8.3g Ca + 8.3g KH #10 + 3.9g CaF2-AD-1; Tmax: 369 °C; Ein: 380.1 kJ; dE: 10.5 kJ; Theoretical Energy: -6.8 kJ; Energy Gain: 1.5.

Cell# 3685-111909GZWF2: 20g TiC #49 + 5g Mg + 8.3g KH #10+ 12.4g SrBr2-AD-1; TSC: ~300-350 °C; Tmax: 386 °C; Ein: 378.1 kJ; dE: 11.8 kJ; Theoretical Energy: -6.7 kJ; Energy Gain: 1.8.

Cell# 3686-111909GZWF3: 12g TiC #49 + 3g Mg + 4.98g KH #9 + 8.91g BaBr2-AD-3; TSC: ~340-400 °C; Tmax: 453 °C; Ein: 179.1 kJ; dE: 4.6 kJ; Theoretical Energy: -2.8 kJ; Energy Gain: 1.6.

Cell# 3687-111909GZWF4: 12g TiC #49 + 3g Mg + 4.98g KH #9 + 4.77g SrCl2-AD-1; TSC: ~350-400 °C; Tmax: 442 °C; Ein: 144.9 kJ; dE: 6.7 kJ; Theoretical Energy: -3.3 kJ; Energy Gain: 2.0.

Cell# 3688-111909GHWF1: 12g TiC49 + 4.98g KH#9 + 3g Mg + 3.33g CaCl2-AD-2; Tmax: 416 °C; Ein: 143.1 kJ; dE: 7.04 kJ; Theoretical Energy: -4.31 kJ; Energy Gain: 1.63.

Cell# 3689-111909GHWF2: 12g TiC49 + 4.98g KH#9 + 3g Mg + 4.77g SrCl2-AD-1; Tmax: 425 °C; Ein: 134.0 kJ; dE: 5.90 kJ; Theoretical Energy: -3.26 kJ; Energy Gain: 1.81.

Cell# 3690-111909GHWF3: 12g TiC49 + 3g Mg + 4.98g KH#9 + 8.91g BaBr2-AD-3; °C Tmax: 426 C; Ein: 145.0 kJ; dE: 4.91 kJ; Theoretical Energy: -2.91 kJ; Energy Gain: 1.69.

Cell# 3691-111909GHWF4: 20g TiC49 + 8.3g KH#9 + 5g Mg + 12.4g SrBr2-AD-1 + 0.5g K; °C Tmax: 388 °C; Ein: 371.4 kJ; dE: 11.74 kJ; Theoretical Energy: -6.72 kJ; Energy Gain: 1.75.

Cell# 3692-111909GHWF5: 20g TiC49 + 8.3g KH#10 + 5g Mg + 12.4g SrBr2-AD-1; Tmax: 400 °C; Ein: 391.6 kJ; dE: 11.56 kJ; Theoretical Energy: -6.72 kJ; Energy Gain: 1.72.

Cell # 80-111909RCWF1: Chemicals from 111709RCWF1Regen1 + 8.3 g KH-9 + 5 g Mg; Tmax: 401 °C; Ein: 464.1 kJ; dE: -6.8 kJ. Water flow rate in WF1 still had some fluctuation.

Cell # 81-111909RCWF4: 2.34 g CaF2-AD-1 + 4.98 g KH-9 + 4.98 g Ca + 12 g TiC-49; Tmax: 426 °C; Ein: 147 kJ; dE: 7.8 kJ; Theoretical Energy: -4.1 kJ; Energy Gain: 1.9; Energy/mol oxidant: 260 kJ/mol.

Cell# 3675-111809GZWF1: 20g TiC #48 + 5g Mg + 8.3g KH #9 + 14.85g BaBr2-AD-2; Tmax: 368 °C; Ein: 356.0 kJ; dE: 7.1 kJ; Theoretical Energy: -4.7 kJ; Energy Gain: 1.5.

Cell# 3676-111809GZWF2: 20g TiC #49 + 5g Mg + 5g NaH + 14.85g BaBr2-AD-2; Tmax: 383 °C; Ein: 386.1 kJ; dE: 7.5 kJ; Theoretical Energy: -1.6 kJ; Energy Gain: 4.8.

Cell# 3678-111809GZWF4: 12g TiC #48 + 5g Ca + 4.98g KH #9 + 2.24g KCl; Tmax: 461 °C; Ein: 147.7 kJ; dE: 7.1 kJ; Theoretical Energy: -4.1 kJ; Energy Gain: 1.7.

Cell# 3680-111809GHWF2: 12g TiC48 + 4.98g KH#9 + 5g Ca + 2.24g KCl; Tmax: 462 °C; Ein: 152.0 kJ; dE: 7.16 kJ; Theoretical Energy: -4.11 kJ; Energy Gain: 1.74.

Cell# 3682-111809GHWF4: 20g TiC48 + 8.3g KH#9 + 5g Mg + 2g Ca; Tmax: 392 °C; Ein: 354.0 kJ; dE: 10.10 kJ; Theoretical Energy: -3.3 kJ; Energy Gain: 3.06.

Cell# 3683-111809GHWF5: 20g TiC48 + 5g NaH + 5g Mg + 2g Ca; TSC: 350-380 °C; Tmax: 404 °C; Ein: 392.1 kJ; dE: 8.79 kJ; Theoretical Energy: -3.4 kJ; Energy Gain: 2.58.

Cell # 78-111809RCWF2: 8.3 g KH-8 + 5 g Mg + 20 g AC2-7; Tmax: 419 °C; Ein: 440 kJ; dE: 25.5 kJ; Theoretical Energy: -1.2 kJ; Energy Gain: 21.

Cell # 79-111809RCWF4: 3.33 g CaCl2-AD-2 + 4.98 g KH-9 + 3 g Mg + 12 g TiC-49; Tmax: 432 °C; Ein: 145 kJ; dE: 8 kJ; Theoretical Energy: -4.3 kJ; Energy Gain: 1.9; Energy/mol oxidant: 267 kJ/mol.

111909KAWFC2#1435; 1" HDC; 4.98g KH+ 3.0g Mg + 12.0g YC2 + 7.44 SrBr2-AD-1; TSC: 375-485C; Tmax: 485 °C; Ein: 163 kJ; dE: 10 kJ; Theoretical Energy: 4.0 kJ; Energy Gain: 2.5.

Cell# 3666-111709GZWF1: 20g TiC#48 + 5g Mg + 8.3g KH#9 + 10.0g CaBr2-AD-2; Tmax: 334 °C; Ein: 312.0 kJ; dE: 14.1 kJ; Theoretical Energy: -8.55; Energy Gain: 1.7.

Cell# 3669-111709GZWF4: 12g TiC#47 + 3g Mg + 3g NaH + 8.91g BaBr2-AD-3; Tmax: 434 °C; Ein: 142.0 kJ; dE: 5.6kJ; Theoretical Energy: -0.93. Energy Gain: 6.

Cell# 3670-111709GHWF1: 12g TiC47 + 4.98g KH + 3g Mg + 3.33g CaCl2-AD-2; Tmax: 368 °C; Ein: 140.0 kJ; dE: 4.21 kJ; Theoretical Energy: -2.35 kJ; Energy Gain: 1.79.

Cell# 3671-111709GHWF2: 8g TiC47 + 2g NaH + 2g Mg + 0.8g Ca; Tmax: 445 °C; Ein: 135.0 kJ; dE: 5.13 kJ; Theoretical Energy: -1.38 kJ; Energy Gain: 3.72.

Cell# 3672-111709GHWF3: 12g TiC48 + 4.98g KH#9 + 3g Mg + 1.2g Ca; TSC: not observed; Tmax: 404 °C; Ein: 145.0 kJ; dE: 4.66 kJ; Theoretical Energy: -1.98 kJ; Energy Gain: 2.35.

Cell# 3673-111709GHWF4: 20g TiC48 + 8.3g KH#9 + 5g Mg + 10.0g CaBr2-AD-2; Tmax: 363 °C; Ein: 318.1 kJ; dE: 15.26 kJ; Theoretical Energy: -8.54 kJ; Energy Gain: 1.79.

Cell # 73-111709RCWF1: 8.3 g KH-9 + 5 g Mg + 20 g AC2-7; Tmax: 400 °C; Ein: 378 kJ; dE: 15.5 kJ.

Cell # 77-111709RCWF2II: 8.3 g KH-9 + 5 g Mg + 20 g AC2-9; Tmax: 417 °C; Ein: 460.1 kJ; dE: 20.4 kJ.

Cell # 75-111709RCWF3: 2.24 g KCl + 4.98 g KH-9 + 5 g Ca + 12 g TiC-45; Tmax: 433 °C; Ein: 142 kJ; dE: 8.3 kJ; Theoretical Energy: -4.1 kJ; Energy Gain: 2; Energy/mol oxidant: 276.6 kJ/mol.

111809KAWFC2#1432; 2" HDC; 8.3g KH+ 5.0g Mg+ 20.0g TiC+19.54g BaI2-AD-1 (Dried in Scale up cell above 750 °C); Tmax: 424 °C; Ein: 425 kJ; dE: 11 kJ; Theoretical Energy: 5.85 kJ; Energy Gain: 1.9.

111809KAWFC3#1431; 2" HDC; 8.3g KH+ 5.0g Mg+ 20.0g TiC+12.4g SrBr2-AD-1; Small TSC; Tmax: 402 °C; Ein: 424 kJ; dE: 12 kJ; Theoretical Energy: 6.72 kJ; Energy Gain: 1.8.

111709KAWFC2#1428; 1" HDC; 5.0g NaH+ 5.0g Mg + 20.0g Ni + 5.55g CaCl2-AD-I; TSC at: 385 °C; Tmax: 504 °C; Ein: 192 kJ; dE: 12 kJ; Theoretical Energy: 4.1 kJ; Energy Gain: 2.92.

111709KAWFC3#1427; 2" HDC; 5.0g NaH+ 5.0g Mg + 20.0g TiC+ 2.95g Ni; Tmax: 390 °C; Ein: 425 kJ; dE: 6 kJ; Theoretical Energy: 0 kJ.

Cell#3659-111609GZWF3: 12g TiC47 + 3g Mg + 4.98g KH#9 + 8.91g BaBr2-AD-3, Ein: 157.0 kJ, dE: 4.8kJ, Tmax: 429 °C. Theoretical Energy: -2.8kJ, Energy Gain: 1.7.

Cell#3660-111609GZWF4: 12g TiC47 + 3g Mg + 4.98g KH#9 + 6.0g CaBr2-AD-2, Ein: 133.0 kJ, dE: 9.1 kJ, Tmax: 442 °C, Theoretical Energy E: -5.1kJ, Energy Gain: 1.8.

Cell# 3661-111609GHWF1: 8g TiC47 + 2g NaH + 2g Mg + 0.8g Ca; Ein: 142.0 kJ; dE: 3.94 kJ; Tmax: 411 °C. Theoretical Energy: 1.38; Energy Gain: 2.86.

Cell# 3662-111609GHWF2: 12g TiC47 + 4.98g KH#9 + 3g Mg + 1.2g Ca; Ein: 145.0 kJ; dE: 4.61 kJ; Tmax: 432 °C. Theoretical Energy: 1.98 kJ; Energy Gain: 2.33.

Cell# 3663-111609GHWF3: 12g TiC47 + 4.98g KH#9 + 3g Mg + 7.44g SrBr2-AD-1; Ein: 143.0 kJ; dE: 6.13 kJ; Tmax: 434 °C. Theoretical Energy: 4.03 kJ. Energy Gain: 1.52.

Cell# 3664-111709GHWF4: 20g TiC47 + 8.3g KH#9 + 5g Mg + 7.95g SrCl2-AD-1; Ein: 327.9 kJ; dE: 9.22 kJ; TSC: 305-332 °C; Tmax: 353 °C. Theoretical Energy: 5.43 kJ; Energy Gain: 1.70. (Lower T gives less heat)

Cell # 111609RCWF3: The chemicals from 111209RCWF3Regenl (111209RCWF2 (8.3 g KH-8 + 5 g Mg + 20 g AC3-9 powder) was regenerated. In order to regenerate this reaction system, it was pressurized with 2 atm of C2H6 gas at room temperature, heated at 819 °C for 3 h, and then evacuated at 819 °C for 10 h) + 8.3 g KH-9; dE 12.2 kJ; Tmax 388 °C.

111309KAWFC2#1422; 2" HDC; 8.3g KH+ 5.0g Mg + 20.0g TiC + 7.95g SrCl2-AD-I; Tmax: 390 °C; Ein: 425 kJ; dE: 11 kJ; Theoretical Energy: 5.4 kJ; Energy Gain: 2.1.

111209KAWFC1#1420; 2" HDC; 10.0g NaH+ 10.0g Mg + 31.0g In + 29.7g BaBr2-AD-I; Tmax: 402 °C; Ein: 424 kJ; dE: 13 kJ; Theoretical Energy: 3.1 kJ; Energy Gain: 4.1.

111209KAWFC2#1419; 2" HDC; 8.3g KH+ 8.3g Ca + 20.0gTiC + 5.55 g CaCl2-AD-I; Small TSC; Tmax: 395 °C; Ein: 422 kJ; dE: 19 kJ; Theoretical Energy: 10.8 kJ; Energy Gain: 1.76.

111209KAWFC3#1418; 1" HDC; 8.3g KH+ 5.0g Mg + 20.0g Fe + 14.85 gBaBr2-AD-I; Tmax: 460 °C; Ein: 180 kJ; dE: 8 kJ; Theoretical Energy: 4.75 kJ; Energy Gain: 1.7.

110909KAWSU# 1408; 1.2 Liter; 83.0g KH+ 50.0g Mg+ 200.0g TiC+79.5 SrCl2-AD-I (Alfa Aesar Dried); TSC: 290-370 °C; Tmax: 430 °C; Ein: 2936 kJ; dE: 113 kJ; Theoretical Energy: 54.2 kJ; Energy Gain: 2.08. (Performed on 111209 after heater calibration.)

111609KAWFC3#1424; 1" HDC; 5.0g NaH+ 5.0g Mg + 20.0g TiC + 2.0g Ca (30.6gm out of 32gm); Tmax: 460 °C; Ein: 164 kJ; dE: 12 kJ; Theoretical Energy: 3.5 kJ; Energy Gain: 3.42.

Cell#3643-111209GZWF3: 12g TiC#45 + 3g Mg + 4.98g KH#8 + 4.77g SrCl2-AD-1, Ein: 146.0 kJ, dE: 6.1 kJ, Tmax: 397 °C.Theoretical Energy: -3.3kJ, Energy Gain: 1.

Cell#3644-111209GZWF4: 12g TiC#45 + 3g Mg + 4.98g KH#8 + 3.33g CaCl2-AD-2, Ein: 135.1 kJ, dE: 7.8 kJ, Tmax: 434 °C, Theoretical Energy: -4.3kJ, Energy Gain: 1.8.

Cell# 3645-111209GHWF1: 12g TiC45 + 3g Mg + 4.98g KH#8 + 4.77g SrCl2-AD-1; Ein: 145.0 kJ; dE: 5.62 kJ; Tmax: 402 °C. Theoretical Energy: 3.26 kJ. Energy Gain: 1.72.

Cell# 3646-111209GHWF2: 12g TiC45 + 3g Mg + 4.98g KH#8 + 3.33g CaCl2-AD-2; Ein: 132.0 kJ; dE: 7.23 kJ; TSC: 330-420°C; Tmax: 431 °C. Theoretical Energy: 4.31 kJ. Energy Gain: 1.68.

Cell# 3639-111109GHWF4: 10g TiC45 + 2.5g Mg + 2.5g NaH + 7.70g BaBr2-AD-2; Ein: 130.1 kJ; dE: 2.08 kJ; Tmax: 406 °C. Theoretical Energy: 0.80 kJ. Energy Gain: 2.60.

Cell # 63-111109RCWF1: 5 g NaH + 5 g Mg + 2 g Ca + 20 g TiC-44 ; Ein: 150 kJ; dE 9.8 kJ; Tmax: 431 °C; Theoretical Energy: -3.5 kJ; Energy Gain: 2.8.

Cell # 64-111109RCWF2: 33.41 g of mixture of 7.5 g NaI + 5 g Mg + 5g NaH + 20g TiC-45 ; Ein: 146 kJ; dE 5.7 kJ (dE: 6.4 kJ for all mixture); Tmax 406 °C; Theoretical Energy: 0 kJ; Energy Gain: infinite.

Cell # 65-111109RCWF3: 5 g NaH + 5 g Mg + 2.95 g Ni + 20 g TiC -45; Ein: 400 kJ; dE 20.5 kJ; Tmax: 364 °C; Theoretical Energy: -2.6 kJ; Energy Gain: 7.9.

Cell # 66-111109RCWF4: 14.85 g BaBr2-AD-2 + 5 g Mg + 8.3 g KH-8 + 20 g Mn; Ein: 152 kJ; dE 8.2 kJ; Tmax: 434 °C; Theoretical Energy: -4.8 kJ; Energy Gain: 1.7.

111109KAWFC2#1416; 2" HDC; 8.3g KH+ 5.0g Mg + 20.0g TiC + 10.7g GdF3; No TSC; Tmax: 390 °C; Ein: 422 kJ; dE: 15 kJ; Theoretical Energy: 3.0 kJ; Energy Gain: 5.

111009KAWFC2#1413; 2" HDC; 8.3g KH+ 8.3g Ca + 20.0g TiC+ 3.9g CaF2-AD-I; Tmax: 383 °C; Ein: 422 kJ; dE: 22 kJ; Theoretical Energy: 6.75 kJ; Energy Gain: 3.25.

111009KAWFC3#1412; 1" HDC; 8.3g KH+ 8.3g Ca + 20.0g Fe+ 10.0 g CaBr2-AD-2; TSC: 360-430 °C; Tmax: 461 °C; Ein: 172 kJ; dE: 13 kJ; Theoretical Energy: 8.5 kJ; Energy Gain: 1.52.

110909KAWFC1#1411; 2" HDC; 10.0g NaH+ 10.0g Mg + 40.0g TiC#40 + 29.7g BaBr2-AD-I; Tmax: 396 °C; Ein: 422 kJ; dE: 12 kJ; Theoretical Energy: 3.1 kJ; Energy Gain: 3.9.

110909KAWFC2#410; 2" HDC; 16.6g KH#+ 10.0g Mg + 40.0g TiC# + 15.9g SrCl2-AD-1 Tmax: 380 °C; Ein: 422 kJ; dE: 23 kJ; Theoretical Energy: 10.8 kJ; Energy Gain: 2.1.

Cell#3615-110909GZWF2: 20g AC3-9 + 5g Mg + 8.3g KH#8, Ein: 380.1 kJ, dE: 16.8kJ, Tmax: 399 °C, Theoretical Energy: 0 kJ, Energy Gain: infinite.

Cell#3606-110609GZWF2: 20g TiC#43 + 5g Mg + 8.3g KH#7 + 4.75g MgCl2-AD-1, Ein: 456.1 kJ, dE: 15.7 kJ, Tmax: 426 °C, Theoretical Energy: -9.6 kJ, Energy Gain: 1.6.

Cell#3607-110609GZWF3: 20g Mn + 5g Mg + 5g NaH + 4.75g MgCl2-AD-1, Ein: 166.0 kJ, dE: 2.6 kJ, Tmax: 461 °C. Theoretical Energy: -7.2 kJ, Energy Gain: 1.8.

Cell#3608-110609GZWF4: 10g TiC#43 + 2.5g Mg + 4.2g KH#7 + 8.6g SrI2-AD-2, Ein: 149.0 kJ, dE: 9.9 kJ, TSC: 348-438 °C, Tmax: 471 °C, Theoretical Energy: -4.1 kJ, Energy Gain: 2.4.

Cell# 3609-110609GHWF1: 8g Cr + 3.33g Ca + 3.32g KH#7 + 2.22g CaCl2-AD-1; Ein: 149.0 kJ; dE: 6.97 kJ; Tmax: 442 °C. Theoretical Energy: 4.30 kJ. Energy Gain: 1.62.

Cell # 55-110609RCWF3: 5.94 g BaBr2-AD-1 + 3.32 g KH-7 + 2 g Mg + 8 g Mn; Ein: 147 kJ; dE 8.4 kJ; Tmax 426 °C; Theoretical Energy: -1.9 kJ; Energy Gain: 4.4.

Cell#3599-110509GZWF4: 8g TiC#42 + 2g Mg + 3.32g KH#7 + 4.28g GdF3, Ein: 170.1 kJ, dE: 4.4 kJ, Tmax: 479 °C, Theoretical Energy:-1.2kJ, Energy Gain: 3.7.

Cell # 50-110509RCWF2: 1.56 g CaF2-AD-1 + 3.32 g KH-7 + 2 g Mg + 8 g Mn; Ein: 146 kJ; dE 4.3 kJ; Tmax 407 °C; Theoretical Energy: 0 kJ; Energy Gain: infinite.

Cell # 51-110509RCWF3: 1.56 g CaF2-AD-1 + 3.32 g KH-7 + 2 g Mg + 8 g Cr; Ein: 146 kJ; dE 5.7 kJ; Tmax 398 °C; Theoretical Energy: 0 kJ; Energy Gain: infinite.

110509KAWFC1#1403 2" HDC; 16.6g KH#6+ 10.0g Mg + 40.0g TiC#40 + 4.75g MgCl2-AD-I+5.0g MgF2-AD-1; Small TSC; Tmax: 380 °C; Ein: 422 kJ; dE: 20 kJ; Theoretical Energy: 9.58 kJ; Energy Gain: 2.

110509KAWFC2#1402 2" HDC; 16.6g KH#6+ 10.0g Mg + 40.0g TiC#40 + 9.5g MgCl2-AD-I; TSC: 300C-360 °C; Tmax: 370 °C; Ein: 352 kJ; dE: 40 kJ; Theoretical Energy: 19.16 kJ; Energy Gain: 2.1.

110509KAWFC3#1401 2" HDC; 16.6g KH#6+ 10.0g Mg + 40.0g TiC#40 + 10.0g MgF2-AD-I; Tmax: 385 °C; Ein: 425 kJ; dE: 14 kJ; Theoretical Energy: 0 kJ.

110409KAWSU#1400 1.2 Liter; 83.0g KH+ 50.0g Mg+ 200.0g TiC+47.5g MgCl2-AD-I Alfa Aesar Dried; TSC: 130C-430 °C; Tmax: 478 °C; Ein: 1849 kJ; dE: 178 kJ; Theoretical Energy: 95.8 kJ; Energy Gain: 1.85.

110409KAWFC1#1399 1" HDC; 5.0g NaH+ 5.0g Mg + 20.0g Mn + 4.750g MgCl2-AD-I; TSC: 380C-465 °C; Tmax: 465 °C; Ein: 170 kJ; dE: 12 kJ; Theoretical Energy: 7.27 kJ; Energy Gain: 1.65.

110409KAWFC2#1398 1" HDC; 8.3g KH#6+ 5.0g Mg + 10.0g TiC#40 + 4.750g MgCl2-AD-I+ 0.5g K; TSC: 350C-440 °C; Tmax: 450 °C; Ein: 153 kJ; dE: 13 kJ; Theoretical Energy: 9.58 kJ; Energy Gain: 1.35.

110409KAWFC3#1397 1" HDC; 5.0g NaH+ 5.0g Mg + 10.0g TiC + 5.0g MgF2-AD-I; Tmax: 430 °C; Ein: 168 kJ; dE: 5 kJ; Theoretical Energy: 0 kJ.

110309KAWFC1#1396 2" HDC; 8.3g KH+ 5.0g Sr + 20.0g TiC#40 + 7.95g SrCl2-AD-1: Tmax: 394 °C; Ein: 422 kJ; dE: 9 kJ; Theoretical Energy: 5.43 kJ; Energy Gain: 1.65.

110309KAWFC2#1395 2" HDC; 5.0g NaH+ 5.0g Mg + 20.0g In + 14.85g BaBr2-AD-1 (Cell#1306: 12 kJ); Tmax: 383 °C; Ein: 422 kJ; dE: 13 kJ; Theoretical Energy: 4.68 kJ; Energy Gain:2.7.

Cell#3588-110409GZWF2: 20g TiC#41 + 5g Mg + 8.3g KH#6 + 11.15g Mg3As2-CD-2, Ein: 458.1 kJ, dE: 26.7 kJ, Tmax: 433 °C, Theoretical Energy: 0 kJ, Energy Gain: infinite

Cell # 47-110409RCWF3: 2.22 g CaCl2-AD-1 + 3.32 g KH-7 + 3.33 g Ca + 8 g Cr; Ein: 144 kJ; dE 9.3 kJ; Tmax 426 °C; Theoretical Energy: -4.3 kJ; Energy Gain 2.2.

Cell#3580-110309GZWF2: 20g TiC#41 + 5g Mg + 8.3g KH#6 + 7.95g SrCl2-AD-1, Ein: 366.1 kJ, dE: 13.1 kJ, Tmax: 382 °C, Theoretical Energy: -5.4 kJ, Energy Gain: 2.4.

Cell# 3583-110309GHWF1: 8g TiC#41 + 11.42g Ba + 3.32g KH#6 + 5.94g BaBr2-AD-1; Ein: 149.0 kJ; dE: 5.98 kJ; Tmax: 404 °C. Theoretical Energy: 3.24 kJ. Energy Gain: 1.8.

Cell# 3584-110309GHWF2: 8g TiC#41 + 7.8g Ba + 3.32g KH#6 + 7.82g BaI2-SD-1; Ein: 130.0 kJ; dE: 5.30 kJ; Tmax: 384 °C. Theoretical Energy: 3.71 kJ. Energy Gain: 1.42.

Cell # 41-110309RCWF1: 2.88 g AgCl-AD-1 + 3.32 g KH-6 + 2 g Mg + 8 g TiC-38; Ein: 169 kJ; dE 12.5 kJ; TSC: 161 °C (320 - 481 °C); Tmax 489 °C; Theoretical Energy: -5.8 kJ; Energy Gain: 2.2.

Cell # 42-110309RCWF2: 4 g CaBr2-AD-2 + 3.32 g KH-6 + 2 g Mg + 8 g Cr; Ein: 167 kJ; dE 7.1 kJ; Tmax 467 °C; Theoretical Energy: -3.4 kJ; Energy Gain: 2.1.

Cell # 39-110209RCWF3: 1.56 g CaF2-AD-1 + 3.32 g KH-6 + 3.33 g Ca + 8 g TiC-38; Ein: 141 kJ; dE 7.8 kJ; Tmax 424 °C; Theoretical Energy: -2.7 kJ; Energy Gain 2.9.

Cell # 43-110309RCWF3: 4 g CaBr2-AD-2 + 3.32 g KH-6 + 2 g Mg + 8 g Fe; Ein: 180 kJ; dE 12.1 kJ; Tmax 466 °C; Theoretical Energy: -3.4 kJ; Energy Gain: 3.6.

103009KAWFC2#1392; 1" HDC; 8.3g KH#6+ 5.0g Mg + 10.0g TiC#40 + 4.750g MgCl2-AD-I; TSC: 350C-460 °C; Tmax: 464 °C; Ein: 148 kJ; dE: 18 kJ; Theoretical Energy: 9.58 kJ; Energy Gain: 1.87.

110209KAWFC3#1391; 1" HDC; 8.3g KH#6+ 5.0g Mg + 10.0g TiC#40 + 2.375g MgCl2-AD-I+2.50g MgF2-AD-1; TSC: 370-440 °C; Tmax: 450 °C; Ein: 159 kJ; dE: 12 kJ; Theoretical Energy: 4.79 kJ; Energy Gain: 2.50.

103009KAWFC1#1391; 1" HDC; 4.98g KH + 3.0g Mg + 12.0g TiC + 9.27g MnI2 -A-I Purity 98%; TSC: 40-270 °C; Tmax: 280 °C; Ein: 53 kJ; dE: 27 kJ; Theoretical Energy: 11.1 kJ; Energy Gain: 2.4.

103009KAWFC2#1389; 1" HDC; 8.3g KH#6+ 5.0g Mg + 10.0g TiC#36 + 5.0g MgF2-AD-I; Tmax: 403 °C; Ein: 155 kJ; dE: 7 kJ; Theoretical Energy: 0 kJ.

102909KAWSU#1388 50.0g NaH+ 50.0g Mg+ 200.0g TiC+148.5g BaBr2-AD-I (Alfa Aesar Dried); TSC: 308C-330 °C; Tmax: 345 °C; Ein: 2190 kJ; dE: 71 kJ; Theoretical Energy: 15.5 kJ; Energy Gain: 4.6.

Cell#3571-110209GZWF1: 20g AC3-9 + 5g Mg + 8.3g KH#6, Ein: 370.1 kJ, dE: 19.0 kJ, Tmax: 368 °C, Theoretical Energy: 0kJ, Energy Gain: infinite.

Cell#3572-110209GZWF2: 20 g TiC#40 + 5 g Mg + 8.3 g KH#6 + 2.38 g MgCl2-AD-1 + 1.55 g MgF2-AD-1, Ein: 436.1 kJ, dE: 15.1 kJ, Tmax: 398 °C, Theoretical Energy: -4.8 kJ, Energy Gain: 3.1.

Cell#3573-110209GZWF3: 8 g TiC#40 + 2 g Mg + 3.32 g KH#6 + 6.24 g EuBr2H2O-102209JH, Ein: 164.1 kJ, dE:

10.6 kJ, TSC: 370-458 °C, Tmax: 468 °C. Theoretical Energy: -2.98 kJ, Energy Gain: 3.6.

Cell# 3576-110209GHWF2: 8g TiC#40 + 3.33g Ca + 3.32g KH#6 + 2.22g CaCl2-AD-1; Ein: 131.0 kJ; dE: 7.40 kJ; TSC: 370-464 °C; Tmax: 464 °C. Theoretical Energy: 4.30 kJ. Energy Gain: 1.62.

Cell# 3566-103009GHWF1: 8g Mn + 2g Mg + 3.32g KH#6 + 1.9g MgCl2-AD-1; Ein: 143.0 kJ; dE: 6.69 kJ; TSC: 375-430 °C; Tmax: 444 °C. Theoretical Energy: 3.84 kJ. Energy Gain: 1.74.

Cell# 3568-103009GHWF3: 8g Fe + 2g Mg + 3.32g KH#6 + 1.9g MgCl2-AD-1; Ein: 143.0 kJ; dE: 5.37 kJ; TSC: 370-430 °C; Tmax: 435 °C. Theoretical Energy: 3.84 kJ. Energy Gain: 1.40.

Cell# 3570-103009GHWF5: 8g Cr + 2g Mg + 3.32g KH#6 + 1.9g MgCl2-AD-1; Ein: 143.1 kJ; dE: 5.95 kJ; Tmax: 436 °C. Theoretical Energy: 3.84 kJ. Energy Gain: 1.55.

Cell # 33-103009RCWF1: 7.2 g AgCl-AD-1 + 8.3 g KH-6 + 5 g Mg + 20 g AC3-9; Ein: 326 kJ; dE 33.8 kJ; TSC: 79 °C (271 - 350 °C); Tmax 367 °C; Theoretical Energy: -14.5 kJ; Energy Gain: 2.33.

Cell # 34-103009RCWF2: 2.22 g CaCl2-AD-1 + 3.32 g KH-6 + 3.33 g Ca + 8 g TiC-38; Ein: 140 kJ; dE 8.9 kJ; Tmax 448 °C; Theoretical Energy: -4.3 kJ; Energy Gain: 2.1.

Cell # 35-103009RCWF3: 1.24 g MgCl2-AD-1 + 3.32 g KH-6 + 2 g Mg + 8 g Mn; Ein: 154 kJ; dE 9 kJ; Tmax 443 °C; Theoretical Energy: - 2.5 kJ; Energy Gain: 3.6.

102909KAWFC2#1387 1" HDC 4.98g KH + 3.0g Mg + 12.0g TiC + 9.27g MnI2-SA-I (Sigma Aldrich High Purity 99.9%) TSC: 240-460 °C; Tmax: 460 °C; Ein: 121 kJ; dE20 kJ; Theoretical Energy: 11.1 kJ; Energy Gain: 1.8.

102909KAWFC3#1386 1" HDC 4.98g KH + 3.0g Mg + 12.0g TiC + 9.27g MnI2 -A-I (Alfa Aesar Purity 98%) TSC: 40C-260 °C; Tmax: 260 °C; Ein: 53 kJ; dE: 27 kJ; Theoretical Energy: 11.1 kJ; Energy Gain: 2.43.

102809KAWFC1# 1385 2" HDC 5.0g NaH+ 5.0g Mg + 20.0g TiC+ 14.85g BaBr2-AD-I; Tmax: 382 °C; Ein: 423 kJ; dE: 8 kJ; Theoretical Energy: 1.55 kJ; Energy Gain: 5.10.

102809KAWFC2#1384 2" HDC 8.3g KH+ 5.0g Mg + 20.0g TiC+ 8.75g BaF2-AD-I; Tmax: 365 °C; Ein: 422 kJ; dE: 13 kJ; Theoretical Energy: 0 kJ.

102809KAWFC3#1383 2" HDC 8.3g KH+ 5.0g Mg + 20.0g TiC+ 7.95g SrCl2-AD-I+ 1.65g Cs; Tmax: 377 °C; Ein: 422 kJ; dE: 15 kJ; Theoretical Energy: 5.5 kJ; Energy Gain: 2.70.

Cell#3557-102909GZWF1: 20g TiC#37 + 5g Mg + 8.3g KH#6 + 4.75g MgCl2-AD-1 + 3.1g MgF2-AD-1 + 1g K, Ein: 358.0 kJ, dE: 15.9 kJ, Tmax: 371 °C, Theoretical Energy: -9.58kJ, Energy Gain: 1.7.

Cell# 3564-102909GHWF4: 8g TiC#38 + 2g Mg + 1.16g KH#6 + 1.9g MgCl2-AD-1 + 0.5g K; Ein: 134.0 kJ; dE: 6.32 kJ; Tmax: 438 °C. Theoretical Energy: 4.03 kJ. Energy Gain: 1.57.

Cell# 3565-102909GHWF5: 8g TiC#38 + 2g Mg + 1.16g KH#6 + 1.9g MgCl2-AD-1 + 1g K; Ein: 141.9 kJ; dE: 6.18 kJ; Tmax: 437 °C. Theoretical Energy: 4.03 kJ. Energy Gain: 1.53.

Cell # 29-102909RCWF1: 7.5 g InCl-A-2 + 8.3 g KH-6 + 5 g Mg + 20 g TiC-37; Ein: 326 kJ; dE 23 kJ; TSC: 62 °C (13 -201 °C); Tmax 371 °C; Theoretical Energy: -11.5 kJ; Energy Gain: 2.

Cell # 30-102909RCWF2: 15.65 g CoI2-A-2 + 8.3 g KH-6 + 5 g Mg + 20 g TiC-37; Ein: 362 kJ; dE 51.2 kJ; TSC: 73 °C (173-246 °C); Tmax 396 °C; Theoretical Energy: -26.4 kJ; Energy Gain: 1.94.

Cell # 31-102909RCWF3: 54 g CaBr2-AD-2 + 3.32 g KH-6 + 3.33 g Ca + 8 g TiC-37; Ein: 148 kJ; dE 4.5 kJ; Tmax 411 °C; Theoretical Energy: - 1.9 kJ; Energy Gain 2.4.

Cell # 32-102909RCWF4: 4.32 g FeBr2-A-1 + 3.32 g KH-6 + 2 g Mg + 8 g TiC-37; Ein: 122 kJ; dE 15.6 kJ; TSC: 249 °C (249-498 °C); Tmax 503 °C; Theoretical Energy: -10 kJ; Energy Gain: 1.56.

Cell#3548-102809GZWF1: 20g TiC#37 + 10g Mg + 8.3g KH#5 + 4.75g MgCl2-AD-1, Ein: 346.1 kJ, dE: 16.4kJ, TSC: 285-315 °C, Tmax: 362 °C, Theoretical Energy E:-9.58kJ, Energy Gain: 1.7.

Cell#3550-102809GZWF3: 8g TiC#37 + 4g Mg + 3.32g KH#5 + 0.95g MgCl2-AD-1 + 0.62g MgF2-AD-1 + 0.5g K, Ein: 168.1kJ, dE: 5.0kJ, Tmax: 440 °C. Theoretical Energy: -1.9kJ, Energy Gain: 2.6.

Cell#3551-102809GZWF4: 8g TiC#37 + 4g Mg + 3.32g KH#5 + 0.95g MgCl2-AD-1 + 0.62g MgF2-AD-1 + 1g K, Ein: 154.0kJ, dE: 5.2kJ, Tmax: 452 °C, Theoretical Energy: -1.9kJ, Energy Gain: 2.7.

Cell# 3555-102809GHWF4: 8g TiC#37 + 4g Mg + 1.16g KH#6 + 1.24g MgF2-AD-1 + 0.5g K; Ein: 141.0 kJ; dE: 3.21 kJ; Tmax: 424 °C. Theoretical Energy: 0 kJ. Energy Gain: infinite.

Cell# 3556-102809GHWF5: 8g TiC#37 + 4g Mg + 1.16g KH#5 + 1.24g MgF2-AD-1 + 1g K; Ein: 144.4 kJ; dE: 3.72 kJ; Tmax: 407 °C. Theoretical Energy: 0 kJ. Energy Gain: infinite.

Cell # 25-102809RCWF1: 0.72 g MgF2-AD-1 + 0.95 g MgCl2 + 3.32 g KH-5 + 1.6 g K + 2 g Mg + 8 g TiC-37; Ein: 142 kJ; dE 4.7 kJ; Tmax 393 °C; Theoretical Energy: -1.9 kJ; Energy Gain: 2.4.

Cell # 29-102909RCWF1: 7.5 g InCl-A-2 + 8.3 g KH-6 + 5 g Mg + 20 g TiC-37; Ein: 326 kJ; dE 23 kJ; TSC: 62 °C (139-201 °C); Tmax 371 °C; Theoretical Energy: -11.5 kJ; Energy Gain: 2.

Cell # 26-102809RCWF2: 1.90 g MgCl2 + 3.32 g KH-5 + 2 g Mg + 8 g Mn; Ein: 144 kJ; dE 6.1 kJ; Tmax 444 °C; Theoretical Energy: -3.8 kJ; Energy Gain: 1.6.

Cell # 30-102909RCWF2: 15.65 g CoI2-A-2 + 8.3 g KH-6 + 5 g Mg + 20 g TiC-37; Ein: 362 kJ; dE 51.2 kJ; TSC: 73 °C (173-246 °C); Tmax 396 °C; Theoretical Energy: -26.4 kJ; Energy Gain: 1.94.

Cell # 27-102809RCWF3: 5.94 g BaBr2 + 3.32 g KH-6 + 2 g Mg + 8 g Fe; Ein: 148 kJ; dE 4.5 kJ; Tmax 411 °C; Theoretical Energy: - 1.9 kJ; Energy Gain 2.4.

Cell # 28-102809RCWF4: 5.94 g BaBr2 + 3.32 g KH-5 + 2 g Mg + 8 g Cr; Ein: 146 kJ; dE 3.4 kJ; Tmax 424 °C; Theoretical Energy: -1.9 kJ; Energy Gain: 1.8.

Cell # 32-102909RCWF4: 4.32 g FeBr2-A-1 + 3.32 g KH-6 + 2 g Mg + 8 g TiC-37; Ein: 122 kJ; dE 15.6 kJ; TSC: 249 °C (249-498 °C); Tmax 503 °C; Theoretical Energy: -10 kJ; Energy Gain: 1.56.

102309KAWFC1 #1380 2" HDC; 8.3g KH#5 + 5.0g Mg + 20.0g WC+ 10.0g CaBr2-AD-1; Tmax :394 °C; Ein: 423 kJ; dE: 19 kJ, Theoretical Energy: 8.5 kJ; Energy Gain: 2.23.

102709KAWFC1# 1382 2" HDC; 8.3g KH+ 5.0g Mg + 20.0g YC2 Ball Milled + 3.1g MgF2-AD-1; Tmax: 406 °C; Ein: 422 kJ; dE: 11 kJ; Theoretical Energy: 0 kJ.

Cell#3540-102709GZWF1: 20g TiC#37 + 4g Mg + 8.3g KH#5 + 3.1g MgF2-AD-1 + 0.5g K, Ein:418.1kJ, dE: 5.1kJ, Tmax: 369 °C, Theoretical Energy:0kJ, Energy Gain: infinite.

Cell#3542-102709GZWF3: 8g TiC#36 + 2g Mg + 3.32g KH#5 + 1.9g MgCl2-AD-1 +1.24g MgF2-AD-1 + 0.5g K, Ein: 158.0kJ, dE: 5.8kJ, TSC: 336-415 °C, Tmax: 442 °C. Theoretical Energy: -3.8kJ, Energy Gain: 1.5.

Cell#3543-102709GZWF4: 8g TiC#37 + 2g Mg + 3.32g KH#5 + 1.9g MgCl2-AD-1 + 1.24g MgF2-AD-1 + 1g K, Ein: 148.0kJ, dE: 9.2kJ, TSC: 339-417 °C, Tmax: 460 °C, Theoretical Energy: -3.8kJ, Energy Gain: 2.4.

Cell# 3546-102709GHWF3: 8g TiC#37 + 2g Mg + 3.32g KH#5 + 1.9g MgCl2-AD-1 + 0.5g K; Ein: 145.0 kJ; dE: 7.56 kJ; TSC: 340-450 °C; Tmax: 450 °C. Theoretical Energy: 3.84 kJ. Energy Gain: 1.97.

Cell# 3547-102709GHWF4: 8g TiC#37 + 2g Mg + 3.32g KH#5 + 1.9g MgCl2-AD-1 + 1g K; Ein: 126.0 kJ; dE: 8.07 kJ; TSC: 350-425 °C; Tmax: 440 °C. Theoretical Energy: 3.84 kJ. Energy Gain: 2.10.

Cell# 3539-102709GHWF5: 8g TiC#37 + 4g Mg + 1.16g KH#5 + 1.24g MgF2-AD-1; Ein: 143.1 kJ; dE: 3.55 kJ;

Tmax: 417 °C. Theoretical Energy: 0 kJ. Energy Gain: infinite.

Cell # 21-102709RCWF1: 0.72 g MgF2-AD-1 + 0.95 g MgC12 + 3.32 g KH-5 + 2 g Mg + 8 g TiC-37; Ein: 145 kJ; dE 7.6 kJ; Tmax 434 °C; Theoretical Energy: -1.9 kJ; Energy Gain: 4.

Cell # 22-102709RCWF2: 0.72 g MgF2-AD-1 + 0.95 g MgCl2 + 3.32 g KH-5 + 1.6 g K + 8 g TiC-37; Ein: 146 kJ; dE 4.5 kJ; Tmax 419 °C; Theoretical Energy: -1.9 kJ; Energy Gain: 2.4.

Cell # 23-102709RCWF3: 1.90 g MgCl2-AD-1 + 3.32 g KH-5 + 2 g Mg + 8 g Fe; Ein: 143 kJ; dE 7.7 kJ; Tmax 431 °C; Theoretical Energy: -3.8 kJ; Energy Gain 2.

Cell # 24-102709RCWF4: 1.90 g MgCl2-AD-1 + 3.32 g KH-5 + 2 g Mg + 8 g Cr; Ein: 141 kJ; dE 10.9 kJ; Tmax 440 °C; Theoretical Energy: -3.8 kJ; Energy Gain: 2.9.

Cell#3531-102609GZWF1: 20g TiC#36 + 6g Mg + 8.3g KH#5 + 3.1g MgF2-AD-1, Ein:416.1kJ, dE: 5.1kJ, Tmax: 364 °C, Theoretical Energy:0kJ, Energy Gain: infinite.

Cell#3532-102609GZWF2: 20g TiC#36 + 6g Mg + 8.3g KH#5 + 4.75g MgCl2-AD-1, Ein:420.1kJ. dE:14.2kJ, Tmax: 390 °C, Theoretical Energy:-9.6kJ, Energy Gain: 1.5.

Cell#3533-102609GZWF3: 8g TiC#36 + 2g Mg + 3.32g KH#5 + 1.9g MgCl2-AD-1 + 1.24g MgF2-AD-1, Ein: 165.0kJ, dE: 8.0kJ, TSC: 354-446 °C, Tmax: 454 °C. Theoretical Energy: -3.8kJ, Energy Gain: 2.1.

Cell# 3530-102609GHWFC5: 8g TiC#36 + 2g Mg + 1.16g KH#5 + 1.9g MgCl2-AD-1; Ein: 152.1 kJ; dE: 5.24 kJ; Tmax: 437 °C. Theoretical Energy: 2.87 kJ. Energy Gain: 1.82.

Cell#3522-102309GZWF1: 20g TiC#36 + 2g Mg + 8.3g KH#5 + 3.1g MgF2-AD-1, Ein:388.1 kJ, dE: 4.9kJ, Tmax: 369 °C, Theoretical Energy:-0kJ, Energy Gain: infinite.

Cell#3523-102309GZWF2: 20g TiC#36 + 2g Mg + 8.3g KH#5 + 4.75g MgCl2-AD-1,Ein: 358.1 kJ, dE: 15.8 kJ, TSC: 265-300 °C, Tmax: 348 °C, Theoretical Energy:-9.6kJ, Energy Gain: 1.7.

Cell#3524-102309GZWF3: 8g TiC#36 + 2g Mg + 3.32g KH#5 + 0.95g MgCl2-AD-1 + 0.62g MgF2-AD-1, Ein: 162.0 kJ, dE: 5.0 kJ, Tmax: 439 °C. Theoretical Energy: -1.9kJ, Energy Gain: 2.6.

Cell#3525-102309GZWF4: 8g TiC#36 + 4g Mg + 3.32g KH#5 + 1.9g MgCl2-AD-1, Ein: 146.0kJ, dE: 7.1kJ, TSC: 339-432 °C, Tmax: 455 °C, Theoretical Energy: -3.8kJ, Energy Gain: 1.8.

Cell# 3526-102309GHWFC1: 8g YC2-3 + 2g Mg + 3.32g KH#5 + 2.48g MgF2-AD-1; Ein: 146.0 kJ; dE: 4.13 kJ; Tmax: 432 °C. Theoretical Energy: 0 kJ. Energy Gain: infinite.

Cell# 3527-102309GHWFC2: 8g TiC#36 + 2g Mg + 3.32g KH#5 + 1.24g MgF2-AD-1; Ein: 142.0 kJ; dE: 3.31 kJ; Tmax: 411 °C. Theoretical Energy: 0 kJ. Energy Gain: infinite.

Cell# 3528-102309GHWFC3: 8g TiC#36 + 2g Mg + 3.32g KH#5 + 1.9g MgCl2-AD-1; Ein: 145.0 kJ; dE: 7.21 kJ; TSC: 345-450 °C; Tmax: 455 °C. Theoretical Energy: 3.84 kJ. Energy Gain: 1.88.

Cell# 3529-102309GHWFC4: 8g TiC#36 + 2g Mg + 1.16g KH#5 + 1.24g MgF2-AD-1; Ein: 131.1 kJ; dE: 2.19 kJ; Tmax: 410 °C. Theoretical Energy: 0 kJ. Energy Gain: infinite.

Cell # 13-102309RCWF1: 1.56 g CaF2-AD-1 + 3.32 g KH-5 + 2 g Mg + 8 g TaC-3; Ein: 143.5 kJ; dE 3.6 kJ; Tmax 385 °C; Theoretical Energy: 0 kJ; Energy Gain: infinite.

Cell # 14-102309RCWF2: 3.5 g BaF2-AD-1 + 3.32 g KH-5 + 2 g Mg + 8 g TiC-39; Ein: 144 kJ; dE 4.1 kJ; Tmax 406 °C; Theoretical Energy: 0 kJ; Energy Gain: infinite.

Cell # 15-102309RCWF3: 3.5 g BaF2-AD-1 + 3.32 g KH-5 + 2 g Mg + 8 g TaC-3; Ein: 146 kJ; dE 3.2 kJ; Tmax 395 °C; Theoretical Energy: 0 kJ; Energy Gain infinite.

Cell # 16-102309RCWF4: 1.24 g MgF2-AD-1 + 3.32 g KH-5 + 1g K + 2g Mg + 8g TiC-39; Ein: 143 kJ; dE 3.2 kJ; Tmax: 399 °C; Theoretical Energy: 0 kJ; Energy Gain: infinite.

102109KAWFC1#1372: 8.3g KH#4 + 5.0g Mg + 20.0g TiC#35+ 10.0g CaBr2-AD-1; Tmax: 396 °C; Ein: 427 kJ; dE:22 kJ; Theoretical Energy: 8.5 kJ; Energy Gain: 2.59.

102109KAWFC2#1371: 8.3g KH#5+ 5.0g Mg + 20.0g TiC#36 + 17.1 g SrI2-AD-2; TSC: 320-350 °C; Tmax: 424 °C; Ein: 422 kJ; dE: 26 kJ; Theoretical Energy: 8.1 kJ; Energy Gain: 3.21.

102109KAWFC3#1370: 5.0g NaH+ 5.0g Mg + 20.0g YC2 + 5.0g MgF2-AD-1; Tmax: 373 °C; Ein: 425 kJ; dE: 11 kJ; Theoretical Energy: 0 kJ.

102009KAWFC1#1369: 5.0g NaH+ 5.0g Mg + 20.0g Mn + 4.75g MgCl2-AD-I; No TSC; Tmax: 390 °C; Ein: 422 kJ ; dE: 17 kJ; Theoretical Energy: 7.27; Energy Gain: 2.33.

102009KAWFC3#1367: 8.3g KH+ 5.0g Mg + 20.0g TiC + 13.9g MgI2-AD-I; TSC: 200-250 °C; Tmax: 380 °C; Ein: 425 kJ; dE: 20 kJ; Theoretical Energy: 12.6kJ; Energy Gain:1.58.

101909KAWFC1#1366 8.3g KH+ 5.0g Mg + 20.0g YC2 + 7.95g SrCl2-AD-I; 436 kJ 461 kJ 26 kJ; Energy Gain ~ 4.6X (X= 5.42kJ) (Energy Gain ~ 3.7X with TiC Cell#1347).

101909KAWFC2#1365 3.3g KH+ 2.0g Mg + 8.0g TiC + 3.18g SrCl2-AD-I; 159 kJ 165 kJ 6 kJ; Tmax~ 435 °C. Energy Gain ~ 2.8X (X= 2.17kJ).

101909KAWFC3#1364 3.3g KH+ 2.0g Mg + 8.0g YC2 + 3.18g SrCl2-AD-I; 159 kJ 168 kJ 9 kJ; Small TSC at 370 °C with Tmax~ 445 °C. Energy Gain ~ 4.1X (X= 2.17kJ).

101309KAWFC2#1355 8.3g KH+ 5.0g Mg + 20.0g YC2 + 4.75g MgCl2-AD-I; 424 kJ 443 kJ 19 kJ; Energy Gain ~ 1.97X (X= 9.6kJ).

101309KAWFC3#1354 8.3g KH+ 5.0g Mg + 20.0g TiC + 3.1g MgF2-AD-I; 421 kJ 431 kJ 10 kJ; Tmax~ 380 °C. Energy Gain ~ X (X= 0kJ).

101209KAWFC1#1353 8.3g KH+ 5.0g Mg + 20.0g TiC + 4.75g MgCl2-AD-I+ 0.5g K; 393 kJ 418 kJ 25 kJ; Small TSC at ~280 °C with Tmax~ 418 °C. Energy Gain ~ 2.6X (X= 9.5kJ).

101209KAWFC3#1351 8.3g KH+ 5.0g Mg + 20.0g YC2 + 3.1g MgF2-AD-I; 422 kJ 436 kJ 14 kJ; Tmax~ 412 °C. Energy Gain ~ X (X= 0kJ).

Cell#3513-102209GZWF1: 20g YC2-3 + 5g Mg + 8.3g KH#4 + 3.1g MgF2-AD-1, Ein:408.1kJ, dE: 10.1kJ, Tmax: 394 °C, Theoretical Energy: 0kJ, Energy Gain: infinite.

Cell#3514-102209GZWF2: 20g YC2-3 + 5g Mg + 8.3g KH#4 + 4.75g MgCl2-AD-1,Ein: 366.1 kJ, dE: 23.4 kJ, TSC: 325-350 °C, Tmax: 408 °C, Theoretical Energy: -9.6 kJ, Energy Gain: 2.43.

Cell#3515-102209GZWF3: 8g TiC#35 + 2g Mg + 2g NaH + 0.8g Ca, Ein: 167.1 kJ, dE: 6.6 kJ, Tmax: 454 °C. Theoretical Energy: -1.4 kJ, Energy Gain: 4.7.

Cell#3516-102209GZWF4: 8g TiC#35 + 2g Mg + 2g NaH + 1.76g Sr, Ein: 144.0 kJ, dE: 4.2 kJ, Tmax: 439 °C, Theoretical Energy: -1.4kJ, Energy Gain: ~3.

Cell# 3518-102209GHWFC2: 8g YC2-3 + 2g Mg + 3.32g KH#5 + 1.24g MgF2-AD-1; Ein: 136.1 kJ; dE: 5.63 kJ; Tmax: 432 °C. Theoretical Energy: 0 kJ. Energy Gain: infinite.

Cell# 3519-102209GHWFC3: 8g YC2-3 + 2g Mg + 3.32g KH#5 + 0.95g MgCl2-AD-1 + 0.62g MgF2-AD-1; Ein: 144.0 kJ; dE: 6.96 kJ; TSC: 350-450 °C; Tmax: 457 °C. Theoretical Energy: 1.92 kJ. Energy Gain: 3.62.

Cell# 3521-102209GHWFC5: 8g YC2-3 + 3.32g KH#5 + 1.90g MgCl2-AD-1; Ein: 139.1 kJ; dE: 6.34 kJ; Tmax: 420 °C. Theoretical Energy: 3.84 kJ. Energy Gain: 1.65.

Cell # 10-102209RCWF2: 5.94 g BaBr2-AD-1 + 3.32 g KH-4 + 2 g Mg + 8 g TiC-39; Ein: 144 kJ; dE 3.6 kJ; Tmax 426 °C; Theoretical Energy: -1.87kJ; Energy Gain: 1.9.

Cell # 11-102209RCWF3: 1.90 g MgCl2-AD-1 + 3.32 g KH-4 + 2 g Mg + 8 g TaC-3; Ein: 150 kJ; dE 11.3 kJ; Tmax 446 °C; Theoretical Energy: -3.83 kJ; Energy Gain 3.

Cell # 12-102209RCWF4: 1.56 g CaF2-AD-1 + 3.32 g KH-4 + 2 g Mg + 8 g TiC-39; Ein: 149 kJ; dE 5.9 kJ; Tmax 430 °C; Theoretical Energy: 5.9 kJ; Energy Gain: infinite.

Cell#3504-102109GZWF1: 20g YC2-3 + 5g Mg + 8.3g KH#4 + 14.85g BaBr2-AD-1, Ein: 442.1 kJ, dE: 17.2 kJ, Tmax: 396 °C, Theoretical Energy:-4.7kJ, Energy Gain: 3.67.

Cell#3505-102109GZWF2: 20g YC2-3 + 5g Mg + 8.3g KH#4 + 19.55g BaI2-SD-2, Ein: 436.1 kJ, dE: 27.6 kJ, Tmax: 411 °C, Theoretical Energy: -5.9 kJ, Energy Gain: 4.67.

Cell#3507-102109GZWF4: 8g TiC#35 + 2g Mg + 3.32g KH#4 + 0.8g Ca, Ein: 154.0 kJ, dE: 4.4 kJ, Tmax: 455 °C, Theoretical Energy: -0.4 kJ, Energy Gain: ~10.

Cell# 3508-102109GHWFCl: 8g YC2-3 + 2g Mg + 3.32g KH#4 + 1.56g CaF2-AD-1; Ein: 151.1 kJ; dE: 5.92 kJ; Tmax: 441 °C. Theoretical Energy: 0 kJ. Energy Gain: infinite.

Cell# 3509-102109GHWFC2: 8g YC2-3 + 2g Mg + 3.32g KH#4 + 2.22g CaCl2-AD-1; Ein: 148.1 kJ; dE: 8.15 kJ; Tmax: 468 °C. Theoretical Energy: 2.88 kJ. Energy Gain: 2.83.

Cell# 3510-102109GHWFC3: 8g YC2-3 + 2g Mg + 3.32g KH#4 + 3.18g SrCl2-AD-1; Ein: 146.1 kJ; dE: 5.58 kJ; TSC: 375-470 °C; Tmax: 470 °C. Theoretical Energy: 2.17 kJ. Energy Gain: 2.57.

Cell# 3511-102109GHWFC4: 8g YC2-3 + 2g Mg + 3.32g KH#4 + 4.16g BaCl2-SD-1; Ein: 128.2 kJ; dE: 3.48 kJ; Tmax: 435 °C. Theoretical Energy: 1.62 kJ. Energy Gain: 2.15.

Cell# 3512-102109GHWFC5: 8g YC2-3 + 2g Mg + 3.32g KH#4 + 5.94g BaBr2-AD-1;Ein: 162.1 kJ; dE: 7.00 kJ; TSC: 360-465 °C; Tmax: 472 °C. Theoretical Energy: 1.88 kJ. Energy Gain: 3.72.

Cell # 5-102109RCWF1: 2.22 g of CaCl2-AD-1 + 3.32 g of KH-4 + 2 g of Mg + 8 g of YC2-3; Ein: 155 kJ; dE 6.3 kJ; Tmax 434 °C; Theoretical Energy: -2.88 kJ; Energy Gain 2.2.

Cell # 6-102109RCWF2: 2.22 g of CaCl2-AD-1 + 2 g of NaH + 2g of Mg + 8g of YC2-3; Ein: 153.1 kJ; dE 4.9 kJ; Tmax 448 °C; Theoretical Energy: -1.92 kJ; Energy Gain 2.6.

Cell # 7-102109RCWF3: 1.24 g of MgF2-AD-1 + 3.32 g of KH-4 + 2 g of Mg + 8 g of YC2-3; Ein: 144 kJ; dE 8.4 kJ; Tmax 438 °C; Theoretical Energy: 0 kJ; Energy Gain infinite.

Cell # 8-102109RCWF4: 5.94 g of BaBr2-AD-1 + 3.32 g of KH-4 + 2 g of Mg + 8 g of YC2-3; Ein: 142 kJ; dE 9.0 kJ; Tmax 455 °C; Theoretical Energy: -1.92 kJ; Energy Gain 4.7.

Cell#3495-102009GZWF1: 20g TiC#35 + 5g Mg + 5g NaH + 2.95g Ni, Ein:364.1kJ, dE:9.0kJ, Tmax: 371 °C, Theoretical Energy:-2.6kJ, Energy Gain: 3.46.

Cell # 3-102009RCWF3: 4.16 g of BaCl2-SD-1 + 3.32 g of KH-4 + 2g of Mg + 8g of TaC-2 powder; Ein: 150 kJ; dE 4.6 kJ; Tmax 400 °C; Theoretical Energy: -1.62 kJ; Energy Gain 2.8.

Cell # 4-102009RCWF4: 1.90 g of MgCl2-AD-1 + 3.32 g of KH-4 + 2 g of Mg + 8 g of TiC-35 powder; Ein: 148 kJ; dE 6.1 kJ; TSC: 333-426 °C; Tmax 451 °C; Theoretical Energy: .3.83 kJ; Energy Gain 1.6.

Cell#3486-101909GZWF1: 20g AC-9 + 5g Mg + 8.3g KH + 15.6g EuBr2, Ein: 348.1 kJ, dE: 20.0 kJ, Tmax: 356 °C, Theoretical Energy:-6.8 kJ, Energy Gain: 2.94.

Cell# 3491-101909GHWFC2: 8g TiC35 + 2g Mg + 3.32g KH#4 + 5.94g BaBr2-AD-1;Ein: 139.0 kJ; dE: 4.31 kJ; Tmax: 425 °C. Theoretical Energy: 1.88 kJ. Energy Gain: 2.29.

Cell# 3492-101909GHWFC3: 8g TiC35 + 2g Mg + 3.32g KH#4 + 7.82g BaI2-SD-1; Ein: 148.0 kJ; dE: 6.26 kJ; TSC: 365-420 °C; Tmax: 442 °C.Theoretical Energy: 2.36 kJ. Energy Gain: 2.65.

Cell # 101909RCWF1: 2.22 g of CaCl2-AD-1, 3.32 g of KH-4, 2 g of Mg and 8 g of TiC powder in a 1" HDC was finished. dE: 6.1 kJ; Theoretical Energy: -2.88 kJ, Energy Gain, 2.1; Tmax: 439 °C.

Cell # 101909RCWF2: 2.22 g of CaCl2-AD-1, 2 g of NaH, 2 g of Mg and 8 g of TiC powder in a 1" HDC was finished. dE: 3.4 kJ; Theoretical Energy: -1.92 kJ; Energy Gain: 1.8; Tmax: 426 °C.

Cell # 101909RCWF3: 2.22 g of CaCl2-AD-1, 3.32 g of KH-4, 2 g of Mg and 8 g of TaC-2 powder in a 1" HDC was finished. dE 6.5 kJ; Theoretical Energy: -2.88 kJ, Energy Gain: 2.3; Tmax: 423 °C.

Cell#3477-101609GZWF1: 20g YC2 + 5g Mg + 8.3g KH + 10.4g BaCl2-SD-1, Ein: 384.1 kJ, dE: 11.44 kJ, Tmax: 362 °C, Theoretical Energy: -4.1 kJ, Energy Gain: 2.78.

Cell#3478-101609GZWF2: 20g YC2 + 5g Mg + 8.3g KH + 4.75g MgCl2-AD-1, Ein: 376.1 kJ, dE: 22.98 kJ, TSC: 300-325 °C, Tmax: 389 °C, Theoretical Energy: -9.58 kJ, Energy Gain: 2.4.

Cell#3479-101609GZWF3: 8g TiC + 2g Mg + 3.32g KH + 6.24g EuBr2, Ein: 170.0 kJ, dE: 6.31 kJ, Tmax: 436 °C. Theoretical Energy: -2.73 kJ, Energy Gain: 2.3.

Cell# 3481-101609GHWFC1: 8g TiC34 + 2g Mg + 3.32g KH#4 + 1.90g MgCl2-AD-1; Ein: 148.0 kJ; dE: 9.70 kJ; TSC: 350-463 °C; Tmax: 463 °C. Theoretical Energy: 3.84 kJ. Energy Gain: 2.53.

Cell# 3484-101609GHWFC4: 8g TiC34 + 2g Mg + 3.32g KH#4 + 2.22g CaCl2-AD-1; Ein: 134.0 kJ; dE: 5.51 kJ; Tmax: 435 °C. Theoretical Energy: 2.88 kJ. Energy Gain: 1.91.

Cell# 3485-101609GHWFC5: 8g TiC34 + 2g Mg + 3.32g KH#4 + 3.18g SrCl2-AD-1; Ein: 148.0 kJ; dE: 4.16 kJ; Tmax: 430 °C. Theoretical Energy: 2.17 kJ. Energy Gain: 1.92.

Cell # 101609RCWF1: 5.94 g of BaBr2-AD-1, 3.32 g of KH-4, 2 g of Mg and 8 g of YC2-2 powder in a 1" HDC was finished. dE 4.6 kJ; Theoretical Energy: -1.87 kJ; Energy Gain: 2.5. Tmax 431 °C.

Cell # 101609RCWF2: 5.94 g of BaBr2-AD-1, 3.32 g of KH-4, 2 g of Mg and 8 g of TiC-34 powder in a 1" HDC was finished. dE 4.8 kJ; Theoretical Energy: -1.87 kJ; Energy Ggain: 2.6; Tmax: 426 °C.

Cell # 101609RCWF3: 5.94 g of BaBr2-AD-1, 3.32 g of KH-4, 2 g of Mg and 8 g of TaC-2 powder in a 1" HDC was finished. dE: 5.1 kJ; Theoretical Energy: -1.87 kJ; Energy Gain: 2.7; Tmax: 419 °C.

Cell # 101609RCWF4: 1.24 g of MgF2-AD-1, 3.32 g of KH-4, 2 g of Mg and 8 g of TiC-34 powder in a 1" HDC was finished. dE: 3.0 kJ; Theoretical Energy: 0 kJ; Energy Gain: infinite; Tmax: 406 °C.

Cell#3470-101509GZWF1: 20g YC2 + 5g Mg + 8.3g KH + 3.90g CaF2-AD-1,Ein: 356.1 kJ, dE: 6.6 kJ, Tmax: 370 °C, Theoretical Energy:0 kJ, Energy Gain: infinite.

Cell#3471-101509GZWF2: 20g AC-9 + 5g Mg + 8.3g KH, Ein: 350.1 kJ, dE: 15.27 kJ, Tmax: 366 °C, Theoretical Energy: 0 kJ, Energy Gain: infinite.

Cell# 3474-101509GHWFC1: 8g Cr + 2g Mg + 3.32g KH#4 + 1.9g MgCl2-AD-1; Ein: 151.0 kJ; dE: 5.97 kJ; Tmax: 438 °C. Theoretical Energy: 3.84 kJ. Gain: 1.55.

Cell # 101509RCWF1: 2.22 g of CaCl2-AD-1, 2 g of NaH, 2 g of Mg and 8 g of CrB2 powder in a 1" HDC was finished. dE: 4.2 kJ; Theoretical Energy: -1.92 kJ; Energy Gain: 2.2; Tmax 431 °C.

Cell#3463-101409GZWF1: 20g YC2 + 5g Mg + 8.3g KH + 5g MgF2-AD-1, Ein:326.0kJ, dE: 7.36kJ, Tmax: 360 °C, Theoretical Energy:0 kJ, Energy Gain: infinite.

Cell# 3468-101409GHWFC2; 8g Mn + 2g Mg + 3.32g KH #4 + 1.90g MgCl2-AD-1; Ein: 140.0 kJ; dE: 5.87 kJ; TSC: 355-435 °C; Tmax: 446 °C. Theoretical Energy: 3.84 kJ. Energy Gain: 1.53.

Cell # 101409RCWF1: 2.22 g of CaCl2-AD-1, 2 g of NaH, 2 g of Mg and 8 g of Ni powder in a 1" HDC was finished. dE: 5.7 kJ; Theoretical Energy: -1.92 kJ; Energy Gain: 3;Tmax 393 °C.

100909KAWFC1#1350 8.3g KH+ 5.0g Mg + 20.0g TiC + 4.75g MgCl2-AD-I 435 kJ 464 kJ 29 kJ; Tmax~ 420 °C; Energy Gain ~ 3X (X= 9.5kJ).

100809KAWFC1#1347 8.3g KH+ 5.0g Mg + 20.0g TiC + 7.95g SrCl2-AD-I 435 kJ 455 kJ 20 kJ;. Energy Gain ~ 3.7X (X= 5.42kJ).

100809KAWFC2#1346 8.3g KH+ 5.0g Mg + 20.0g TiC + 12.4g SrBr2-AD-I+ 0.5g K 425 kJ 437 kJ 12 kJ; Tmax~ 390 °C; Energy Gain ~2X (X= 6.75kJ).

100809KAWFC3#1345 5.0g NaH+ 5.0g Mg+ 20.0g YC2+ 5.55g CaCl2-AD-1 425 kJ 436 kJ 11 kJ; Small TSC with Tmax~ 420 °C; Energy Gain ~ 2X (X~ 6.0kJ).

Cell#3436-100909GZWF1: 20g TiC#33 + 5g Mg + 8.3g KH + 8.3g KI, Ein: 350.1 kJ, dE: 5.2 kJ, Tmax: 345 °C, Theoretical Energy:0kJ, Energy Gain: infinite.

Cell#3437-100909GZWF2: 20g TiC#33 + 5g Mg + 5g NaH + 7.5g NaI, Ein: 356.1 kJ, dE: 12.38 kJ, Tmax: 355 °C, Theoretical Energy:0kJ, Energy Gain: infinite.

Cell# 3441-100909GHWFC2: 8g CrB2 + 2g Mg + 3.32g KH#2 + 1.90g MgCl2-AD-1; Ein: 142.0 kJ; dE: 6.30 kJ; TSC: 375-430 °C; Tmax: 439 °C. Theoretical Energy: 3.84 kJ. Gain: 1.64.

Cell# 3443-100909GHWFC4: 8g SrO + 2g Mg + 3.32g KH#2 + 1.90g MgCl2-AD-1; Ein: 135.0 kJ; dE: 8.19 kJ; TSC: 380-470 °C; Tmax: 478 °C. Theoretical Energy: 4.24 kJ. Gain: 1.93.

Cell # 100909RCWF1: 7.84 g of BaI2-SD-3, 3.32 g of KH-3, 2 g of Mg and 8 g of TiC-33 in a 2" HDC was finished. dE: 4.8 kJ; Theoretical Energy: -2.34 kJ; Energy Gain: 2.1; Tmax: 403 °C (lower cell temperature).

Cell # 100909RCWF3: 2.22 g of CaCl2-AD-1, 3.32 g of KH-3, 2 g of Mg and 8 g of WC in a 1" HDC was finished. dE: 6.7 kJ; Theoretical Energy: -2.88 kJ; Energy Gain: 2.3; Tmax 420 °C.

Cell#3446-101209GZWF2: 20g YC2 + 5g Mg + 8.3g KH + 15.6g EuBr2, Ein:360.1kJ, dE:21.72kJ, Tmax: 388 °C, Theoretical Energy:-6.83kJ, Energy Gain: 3.2.

Cell# 3449-101209GHWFC1: 8g Fe + 2g Mg + 3.32g KH#2 + 1.9g MgCl2-AD-1; Ein: 154.0 kJ; dE: 6.33 kJ; TSC: 380-440 °C; Tmax: 445 °C. Theoretical Energy: 3.84 kJ. Energy Gain: 1.65.

Cell# 3451-101209GHWFC3: 8g Co + 2g Mg + 3.32g KH#2 + 1.90g MgCl2-AD-1; Ein: 149.0 kJ; dE: 6.97 kJ; TSC: 360-440 °C; Tmax: 446 °C. Theoretical Energy: 3.84 kJ. Energy Gain: 1.82.

Cell# 3453-101209GHWFC5: 8g Al + 2g Mg + 3.32g KH#2 + 1.90g MgCl2-AD-1; Ein: 145.2 kJ; dE: 5.94 kJ; TSC: 400-449 °C; Tmax: 449 °C. Theoretical Energy: 3.84 kJ. Energy Gain: 1.55.

Cell # 101209RCWF3: 2.22 g of CaCl2-AD-1, 3.32 g of KH-3, 2 g of Mg and 8 g of Ni in a 1" HDC was finished. dE: 10.4 kJ; Theoretical Energy: -2.88 kJ; Energy Gain: 3.6; Tmax 442 °C.

Cell#3454-101309GZWF1: 20g YC2 + 5g Mg + 5g NaH + 5g MgF2-AD-1, Ein: 398.1 kJ, dE: 11.01kJ, Tmax: 382 °C, Theoretical Energy:0kJ, Energy Gain: infinite.

Cell# 3459-101309GHWFC2: 8g Ni + 2g Mg + 2g NaH + 1.90g MgCl2-AD-1; Ein: 131.0 kJ; dE: 9.26 kJ; TSC: 380-470 °C; Tmax: 470 °C. Theoretical Energy: 2.88 kJ. Energy Gain: 3.22.

Cell # 101309RCWF3: 2.22 g of CaCl2-AD-1, 2 g of NaH, 2 g of Mg and 8 g of Fe powder in a 1" HDC was finished. dE: 5.7 kJ; Theoretical Energy: -1.92 kJ; Energy Gain: 3; Tmax 405 °C.

Cell#3419-100709GZWF2: 10g TiC#33 + 10g WC + 5g Mg + 8.3g KH + 10g CaBr2-AD-1, Ein: 314.0 kJ, dE: 20.20 kJ, Tmax: 363 °C, Theoretical Energy: -8.6kJ, Energy Gain: 2.35.

Cell # 100709RCWF1: 7.84 g of BaI2-SD-3, 3.32 g of KH-3, 2 g of Mg and 8 g of TiC-33 in a 2" HDC was finished. dE 7.8 kJ; Theoretical Energy: -2.34 kJ; Energy Gain: 3.3; Tmax: 638 °C.

Cell # 100809RCWF1: 2.22 g of CaCl2-AD-1, 3.32 g of KH-3, 2 g of Mg and 8 g of AlNano in a 1" HDC was finished. dE: 8.1 kJ; Theoretical Energy: -2.88 kJ; Energy Gain: 2.8;Tmax: 445 °C.

Cell # 100709RCWF3: 2.22 g of CaCl2-AD-1, 3.32 g of KH-3, 2 g of Mg and 8 g of HfC in a I" HDC was finished. dE: 7.2 kJ; Theoretical Energy: -2.88 kJ; Energy Gain: 2.5;Tmax: 418 °C.

Cell # 100809RCWF3: 2.22 g of CaCl2-AD-1, 3.32 g of KH-3, 2 g of Mg and 8 g of Fe powder in a 1" HDC was finished. dE: 9.2 kJ; Theoretical Energy: -2.88 kJ; Energy Gain: 3.2;Tmax: 449 °C.

Cell # 100809RCWF4: 2.22 g of CaCl2-AD-1, 3.32 g of KH-3, 2 g of Mg and 8 g of Mn powder in a 1" HDC was finished. dE: 7.3 kJ; Theoretical Energy: -2.88kJ; Energy Gain: 2.5:Tmax: 457 °C.

Cell# 3431-100809GHWFC1: 8g GdB6 + 2g Mg + 3.32g KH#2 + 1.90g MgCl2-AD-1; Ein: 152.1 kJ; dE: 6.37 kJ; TSC: 355-430 °C; Tmax: 445 °C. Theoretical Energy: 3.84 kJ. Energy Gain: 1.66.

Cell# 3432-100809GHWFC2: 8g TiB2 + 2g Mg + 3.32g KH#2 + 1.90g MgCl2-AD-1; Ein: 141.0 kJ; dE: 5.62 kJ; Tmax: 433 °C. Theoretical Energy: 3.84 kJ. Energy Gain: 1.46.

100709KAWFC1#1344 8.3g KH+ 5.0g Mg+ 20.0g YC2+ 15.6g EuBr2 415 kJ 446 kJ 31 kJ Small TSC of 40 °C at 300 °C with Tmax~ 413 °C. Energy Gain ~4.5 X (X~ 6.85kJ).

100609KAWFC2#1340 8.3g KH+ 5.0g Mg+ 20.0g TiC+ 14.85g BaBr2-AD-1+ 0.5g K 425 kJ 437 kJ 12 kJ; Tmax~ 410 °C. Energy Gain ~ 2.5X (X~4.7kJ).

100509KAWFC2#1337 8.3g KH+ 5.0g Mg + 20.0g TiC + 14.4g SrI2-AD-I + 0.5g K 425 kJ 447 kJ 22 kJ; Tmax~ 410 °C. Energy Gain ~ 3.2X (X= 6.67kJ without K).

100609KAWFC1#1341 3.32g KH + 2.0g Mg + 8.0g TiC + 6.18g MnI2 59 kJ 76 kJ 17 kJ; TSC of 200 °C at ~50 °C with Tmax~ 270 °C. Energy Gain ~ 2.3 X (X~3.7 kJ*2=7.4 kJ).

Cell# 3396-100209GHWFC2: 4g Ag NP + 2g Mg + 3.32g KH#3 + 4.16g BaCl2-AD-1; Ein: 136.0 kJ; dE: 2.85 kJ; Tmax: 406 °C. Theoretical Energy: 1.62 kJ. Gain: 1.76.

Cell# 3397-100209GHWFC3: 4g Ag NP + 2g Mg + 3.32g KH#3 + 5.94g BaBr2-AD-1; Ein: 148.0 kJ; dE: 3.48 kJ; Tmax: 422 °C. Theoretical Energy: 1.90 kJ. Energy Gain: 1.83.

Cell# 3398-100209GHWFC4: 8g B4C + 2g Mg + 3.32g KH#3 + 3.68g MgBr2-1; Ein: 138.1 kJ; dE: 7.15 kJ; TSC: 350-420 °C; Tmax: 431 °C. Theoretical Energy: 4.46 kJ. Energy Gain: 1.60.

Cell# 3399-100209GHWFC5: 8g Al4C3 + 2g Mg + 3.32g KH + 3.68g MgBr2; Ein: 151.0 kJ; dE: 6.55 kJ; TSC: 370-430 °C; Tmax: 440 °C. Theoretical Energy: 4.46 kJ. Energy Gain: 1.57.

Cell # 100209RCWF2: 1.24 g of MgF2-AD-1, 3.32 g of KH-3, 2 g of Mg and 8 g of ZrB2 powder in a 1" HDC was finished. dE: 2.9 kJ; Theoretical Energy: 0 kJ; Energy Gain: infinite; Tmax: 403 °C.

Cell # 100209RCWF3: 1.24 g of MgF2-AD-1, 3.32 g of KH-3, 2 g of Mg and 8 g of CrB2 in a 1" HDC was finished. dE: 4.6 kJ; (Theoretical Energy: 0 kJ; Energy Gain: infinite; Tmax: 403 °C.

Cell# 3404-100509GHWFC1: 8g Cr3C2 + 2g Mg + 3.32g KH#3 + 3.68g MgBr2-2; Ein: 147.0 kJ; dE: 7.92 kJ; TSC:

325-420 °C; Tmax: 425 °C. Theoretical Energy: 4.46 kJ. Energy Gain: 1.78.

Cell # 100509RCWF2: 1.24 g of MgF2-AD-1, 3.32 g of KH-3, 2 g of Mg and 8 g of Ag powder in a 1" heavy.duty cell was finished. dE: 4.3 kJ; Theoretical Energy: 0 kJ; Energy Gain: infinite; Tmax: 421 °C.

Cell # 100509RCWF3: 1.24 g of MgF2-AD-1, 3.32 g of KH-3, 2 g of Mg and 8 g of Al powder in a 1" HDC was finished. dE: 5.4 kJ; Theoretical Energy: 0 kJ; Energy Gain: infiniteTmax: 390 °C.

Cell# 3413-100609GHWFC1: 8g YC2 + 2g Mg + 3.32g KH#3 + 1.90g MgCl2-AD-1; Ein: 149.0 kJ; dE: 10.88 kJ; TSC: 385-472 °C; Tmax: 472 °C. Theoretical Energy: 3.84 kJ. Energy Gain: 2.83.

Cell# 3417-100609GHWFC5: 8g TaC + 2g Mg + 3.32g KH + 1.90g MgCl2-AD-1; Ein: 143.1 kJ; dE: 5.49 kJ; TSC: 370-430 °C; Tmax: 445 °C. Theoretical Energy: 3.84 kJ. Energy Gain: 1.43.

Cell # 100609RCWF1: 10 g of CaBr2-AD-1, 3.32 g of KH-3, 5 g of Mg and 20 g of TiC-33 in a 2" HDC was finished. dE: 18.6 kJ; Theoretical Energy: -8.6 kJ; Energy Gain: 2.2; Tmax: 373 °C.

Cell # 100609RCWF2: 1.24 g of MgF2-AD-1, 3.32 g of KH-3, 2 g of Mg and 8 g of Al nanopowder in a 1" HDC was finished. dE: 3.8 kJ; Theoretical Energy: 0 kJ; Energy Gain: infinite; Tmax: 391 °C.

Cell # 100609RCWF3: 1.24 g of MgF2-AD-1, 3.32 g of KH-3, 2 g of Mg and 8 g of Cr powder in a 1" HDC was finished. dE: 6.1 kJ; Theoretical Energy: 0 kJ; Energy Gain: infinite; Tmax: 396 °C.

Cell#3355-092809GZWF1: 20g TiC#30 + 5g Mg + 8.3g KH + 17.1g SrI2-AD-1, Ein: 358.1 kJ, dE: 23.38kJ, TSC: 283-314 °C, Tmax: 358 °C, Theoretical Energy: -8.1kJ, Energy Gain: 2.89.

Cell# 3361-092809GHWFC3: 8g TiC#29 + 2g Mg + 3.32g KH + 6.84g SrI2-AD-1 + 0.66g Cs; Ein: 144.0 kJ; dE: 8.42 kJ; TSC: 370-465 °C; Tmax: 465 °C. Theoretical Energy: 3.24 kJ. Energy Gain: 2.60.

Cell# 3362-092809GHWFC4: 8g TiC#29 + 2g Mg + 3.32g KH + 6.84g SrI2-AD-1 + 0.2g K; Ein: 148.0 kJ; dE: 8.64 kJ; TSC: 370-440 °C; Tmax: 459 °C. Theoretical Energy: 3.24. Energy Gain: 2.67.

Cell#3382-100109GZWF1: 10g TiC#32 + 10g WC + 5g Mg + 8.3g KH + 17.1g SrI2-AD-1, Ein: 344.1 kJ, dE: 19.91 kJ, Tmax: 344 °C, Theoretical Energy: -8.11 kJ, Energy Gain: 2.45.

100109KAWFC2#1331 8.3g KH+ 5.0g Mg + 20.0g TiC + 17.1g SrI2-AD-I + 1.65g Cs 356 kJ 384 kJ 28 kJ; Tmax~ 380 °C. Energy Gain ~ 3.45X (X= 8.1kJ).

092809KAWFC2#1322 8.3g KH + 5.0g Mg + 20.0g Cu Powder + 19.0g BaI2-AD-I 403 kJ 426 kJ 23 kJ; Tmax~ 390 °C. Energy Gain ~ 3.9X (X~ 5.85 kJ).

092809KAWFC3#1321 8.3g KH + 5.0g Mg + 20.0g WC + 14.85g BaBr2-AD-I 395 kJ 402 kJ 7 kJ; Tmax~ 380 °C. Energy Gain ~ 1.48X (X~ 4.7kJ).

092109KAWFC2#1315 George 8.3g KH + 5.0g Mg + 20.0g Cu Powder+ 14.85g BaBr2-Dried 384 kJ 401 kJ 17 kJ; Tmax~ 400 °C. Energy Gain ~ 3.6X (X~ 4.7kJ).

092109KAWFC3#1314 George 8.3g KH + 5.0g Mg + 20.0g B Powder+ 14.85g BaBr2-Dried 393 kJ 402 kJ 9 kJ; Tmax~ 350 °C. Energy Gain ~ 2X (X~ 4.5kJ)

091809KAWFC1#1313 8.3g KH + 5.0g Mg + 20.0g Ag Powder+ 7.5g InCl; 389 kJ 414 kJ 25 kJ; Small TSC at 120 C with Tmax~410 °C. Energy Gain ~ 2X (X~ 11.45kJ).

091809KAWFC3#1311 4.15g KH + 2.5g Mg + 10.0g Ag Nano Powder+ 7.425g BaBr2-Dried (1 inch Cell) 183 kJ 191 kJ 8 kJ; TSC at 350 °C with Tmax~ 480 °C. Energy Gain ~ X (X~ 4.7kJ).

100109KAWFC1#1332 8.3g KH-I+ 5.0g Mg + 20.0g TiC + 7.2g AgCl (Testing of KH) [Cell# 1174: 25 kJ; Cell#1326:30 kJ] 412 kJ 437 kJ 25 kJ; Small TSC at ~220 °C with Tmax~390 °C. Energy Gain ~ 1.85X (X=13.52 kJ).

092909KAWFC1#1326 8.3g KH+ 5.0g Mg + 20.0g TiC#32 + 7.2g AgCl (Testing of TiC) Cell# 1174: 25 kJ 411 kJ 441 kJ 30 kJ; Small TSC at ~250 °C with Tmax~430 °C. Energy Gain ~ 2.2X (X=13.52 kJ).

100109KAWFC3#1330 8.3g KH+ 5.0g Mg + 20.0g B Powder + 19.0g BaI2-AD-2 390 kJ 408 kJ 17 kJ; Tmax~ 370 °C. Energy Gain -2.9 X (X~ 5.85 kJ).

093009KAWFC1#1329 5.0g NaH + 5.0g Mg + 20.0g YC2 +5.55g CaCl2-AD-I 411 kJ 426 kJ 15 kJ; Tmax~ 410 °C. Energy Gain ~ 2.1X (X~ 7.1 kJ).

093009KAWFC2#1328 8.3g KH + 5.0g Mg + 20.0g TiC+ 3.9g CaF2-AD-1 (Repeat# 1320) 425 kJ 434 kJ 9 kJ; Tmax~ 390 °C. Energy Gain ~ X (X~0 kJ).

093009KAWFC3#1327 8.3g KH + 5.0g Mg + 20.0g B4C+ 10.0g CaBr2-AD-1 (Repeat #1319) 425 kJ 441 kJ 16 kJ; Tmax- 360 °C. Energy Gain ~ 1.88X (X~8.5 kJ).

092909KAWFC3#1324 8.3g KH+ 5.0g Mg + 20.0g TiC#33 + 1.55g MgF2+ 1.94g CaF2 425 kJ 431 kJ 6 kJ; Tmax~360 °C. Energy Gain ~ X (X=0 kJ).

100209KAWFC2#1334 8.3g KH+ 5.0g Mg + 20.0g TiC + 9.2g MgBr2-I 422 kJ 446 kJ 24 kJ; Small TSC of ~50C at 200 °C with Tmax~ 380 °C. Energy Gain ~ 2.1X (X=11.16 kJ).

100209KAWFC3#1333 5.0g NaH+5.0g Mg+20.0g TiC + 9.2g MgBr2-I 422 kJ 438 kJ 16 kJ Small TSC at ~ 270 °C with Tmax~ 380 °C. Energy Gain ~ 2X (X=8.03 kJ).

Cell#3347-092509GZWF2: 20g TiC#29 + 5g Mg + 8.3g KH + 8.75g BaF2-AD-1, Ein:368.1kJ, dE:10.13kJ, Tmax: 367 °C, Theoretical Energy: 0 kJ, Energy Gain: infinite.

Cell# 3353-092509GHWFC4: 8g TiC#29 + 2g Mg + 3.32g KH + 3.18g SrCl2-AD-1 + 0.66g Cs; Ein: 135.0 kJ; dE: 5.12 kJ; Tmax: 414 °C. Theoretical Energy: 2.17 kJ. Energy Gain: 2.36.

Cell# 3354-092509GHWFC5: 8g TiC#29 + 2g Mg + 3.32g KH + 4.96g SrBr2-AD-1 + 0.2g K; Ein: 141.1 kJ; dE: 4.27 kJ; Tmax: 409 °C. Theoretical Energy: 2.69 kJ. Energy Gain: 1.59.

Cell # 092509RCWF3: 2.22 g of CaCl2-AD-1, 2 g of NaH, 2 g ofMg and 8 g of YC2 in a 1 " HDC was finished. dE: 7.5 kJ; Theoretical Energy: -2.4 kJ, Energy Gain 3.1; Tmax: 420 °C.

Cell#3356-092809GZWF2: 20g TiC#30 + 5g Mg + 8.3g KH + 13.9g MgI2-AD-1, Ein:340.1kJ, dE:23.80kJ, TSC: 220-242 °C, Tmax: 355 °C, Theoretical Energy: -12.6kJ, Energy Gain: 1.89.

Cell# 3363-092809GHWFC5: 8g TiC#29 + 2g Mg + 3.32g KH + 4.96g SrBr2-AD-1 + 0.66g Cs; Ein: 149.1 kJ; dE: 4.39 kJ; Tmax: 421 °C. Theoretical Energy: 2.68 kJ. Energy Gain: 1.64.

Cell # 092809RCWF1: 1.9 g of MgCl2-AD-1, 2 g of NaH, 2 g of Mg and 8 g of TiC-29 in a 1" HDC was finished. dE: 4.7 kJ; Theoretical Energy: -2.88 kJ; Energy Gain: 1.6; Tmax: 417 °C.

Cell # 092809RCWF2: 1.9 g of MgCl2-AD-1, 3.32 g of KH, 2 g of Mg and 8 g of TiC-30 in a 1" HDC was finished. dE: 5.9 kJ; Theoretical Energy: -3.83 kJ, Energy Gain: 1.54; Tmax: 442 °C.

Cell # 092809RCWF3: 3.68 g of MgBr2, 3.32 g of KH, 2 g of Mg and 8 g of TiC-30 in a 1 " HDC was finished. dE: 9.7 kJ; Theoretical Energy -4.46 kJ, Energy Gain 2.2; Tmax 435 °C.

Cell # 092809RCWF4: 3.68 g of MgBr2, 2 g of NaH, 2 g of Mg and 8 g of TiC-30 in a 1" heavyduty cell was finished. dE: 7.8 kJ; Theoretical Energy: -3.21 kJ; Energy Gain, 2.4;Tmax: 436 °C.

Cell#3364-092909GZWF1: 20g TiC#30 + 5g Mg + 8.3g KH + 1.55g MgF2 + 1.95g CaF2, Ein: 348.1 kJ, dE: 6.66 kJ, Tmax: 343 °C, Theoretical Energy: 0kJ, Energy Gain: infinite.

Cell# 3370-092909GHWFC3: 8g TiC#30 + 2g Mg + 3.32g KH + 1.9g MgCl2-AD-1; Ein: 148.0 kJ; dE: 5.31 kJ; TSC:

330-420 °C; Tmax: 435 °C. Theoretical Energy: 3.84 kJ. Energy Gain: 1.38.

Cell# 3372-092909GHWFC5: 8g TiC#30 + 2g Mg + 3.32g KH + 2.52g SrF2-AD-1 + 0.66g Cs; Ein: 146.1 kJ; dE: 2.24 kJ; Tmax: 398 °C. Theoretical Energy: 0 kJ. Energy Gain: infinite.

Cell # 092909RCWF1: 1.24 g of MgF2-AD-1, 3.32 g of KH, 2 g of Mg and 8 g of B4C in a 1" HDC was finished. dE: 2.5 kJ; Theoretical Energy: 0 kJ; Energy Gain: infinite; Tmax: 382 °C.

Cell # 092909RCWF2: 1.24 g of MgF2-AD-1, 3.32 g of KH, 2 g of Mg and 8 g of Al4C3 in a 1" HDC was finished. dE: 3.4 kJ; Theoretical Energy: 0 kJ; Energy Gain: infinite; Tmax: 397 °C.

Cell # 092909RCWF3: 1.24 g of MgF2-AD-1, 3.32 g of KH, 2 g of Mg and 8 g of Cr3C2 in a 1" HDC was finished. dE: 5.4 kJ; Theoretical Energy: 0 kJ; Energy Gain: infinite; Tmax: 386 °C.

Cell# 3379-093009GHWFC3: 8g YC2 + 2g Mg + 3.32g KH + 6.24g EuBr2; Ein: 141.0 kJ; dE: 5.75 kJ; TSC: 370-460 °C; Tmax: 468 °C. Theoretical Energy: 2.74 kJ. Energy Gain: 2.10.

Cell# 3380-093009GHWFC4: 8g TiC#32 + 2g Mg + 3.32g KH + 5.94g BaBr2-AD-1 + 0.2g K; Ein: 144.0 kJ; dE: 5.35 kJ; Tmax: 434 °C. Theoretical Energy: 1.88 kJ. Energy Gain: 2.85.

Cell# 3381-093009GHWFC5: 8g TiC#32 + 2g Mg + 3.32g KH + 1.9g MgCl2-AD-1 + 0.2g K; Ein: 148.0 kJ; dE: 8.16 kJ; TSC: 350-430 °C; Tmax: 450 °C. Theoretical Energy: 3.84 kJ. Energy Gain: 2.12.

Cell # 093009RCWF2: 1.24 g of MgF2-AD-1, 3.32 g of KH, 2 g of Mg and 8 g of HfC in a 1" HDC was finished. dE: 2.7 kJ; Theoretical Energy: 0 kJ; Energy Gain: infinite; Tmax 396 °C.

Cell # 093009RCWF3: 1.24 g of MgF2-AD-1, 3.32 g of KH, 2 g of Mg and 8 g of TaC in a 1" HDC was finished. dE: 4.2 kJ; Theoretical Energy: 0 kJ; Energy Gain: infinite; Tmax: 395 °C.

Cell#3383-100109GZWF2: 20g TiC#32 + 5g Mg + 8.3g KH + 10.4g BaCl2-AD-1(heat to 517C), Ein:618.1kJ, dE:18.74kJ, Tmax: 517 °C, Theoretical Energy: -4.06kJ, Energy Gain: 4.6.

Cell# 3386-100109GHWFC1: 4g SiC NP + 2g Mg + 3.32g KH#3 + 4.16g BaCl2-AD-1; Ein: 145.0 kJ; dE: 2.36 kJ; Tmax: 385 °C. Theoretical Energy: 1.62 kJ. Energy Gain: 1.46.

Cell# 3387-100109GHWFC2: 4g SiC NP + 2g Mg + 3.32g KH#3 + 5.94g BaBr2-AD-1; Ein: 143.2 kJ; dE: 3.82 kJ; Tmax: 419 °C. Theoretical Energy: 1.88 kJ. Energy Gain: 2.03.

Cell # 100109RCWF1: 0.62 g of MgF2-AD-1, 1.66 g of KH-3, 1 g of Mg and 4 g of AgNano in a 1" HDC was finished. dE: 2.8 kJ; Theoretical Energy: 0 kJ; Energy Gain: infinite; Tmax: 399 °C.

Cell # 100109RCWF2: 1.24 g of MgF2-AD-1, 3.32 g of KH-3, 2 g of Mg and 8 g of SiC powder in a 1" HDC was finished. dE: 2.9 kJ; Theoretical Energy: 0 kJ; Energy Gain: infinite; Tmax: 409 °C.

Cell # 100109RCWF3: 1.24 g of MgF2-AD-1, 3.32 g of KH-3, 2 g of Mg and 8 g of YC2 in a 1" HDC was finished. dE: 9.5 kJ; Theoretical Energy: 0 kJ; Energy Gain: infinite; Tmax: 435 °C.

Cell#3310-092109GZWF1: 20g TiC + 5g Mg + 5g NaH + 19.55g BaI2-SD-1, Ein: 350.1 kJ, dE: 6.4 kJ, Tmax: 324 °C, Theoretical Energy: -2.0kJ, Energy Gain: 3.2.

Cell#3311-092109GZWF2: 20g TiC + 5g Mg + 8.3g KH + 19.55g BaI2-SD-1, Ein: 378.1 kJ, dE:10.9kJ, Tmax: 369 °C, Theoretical Energy: -5.9 kJ, Energy Gain: 1.9.

Cell#3313-092109GZWF4: 8g TiC + 2g Mg + 3.32g KH + 5.94g BaBr2-AD-1 (Ball Mill), Ein: 134.0 kJ, dE: 5.0 kJ, Tmax: 403 °C, Theoretical Energy: -1.87kJ, Energy Gain: 2.7.

Cell#3319-092209GZWF1: 20g TiC + 5g Mg + 5g NaH + 12.4g SrBr2-AD-1, Ein:322.1kJ, dE: 5.1 kJ, Tmax: 345 °C, Theoretical Energy:-3.6kJ, Energy Gain: 1.4.

Cell#3320-092209GZWF2: 20g TiC + 5g Mg + 8.3g KH + 12.4g SrBr2-AD-1,Ein:372.1kJ, dE: 12.0 kJ, Tmax: 367 °C, Theoretical Energy:-6.7 KJ, Energy Gain: 1.8.

Cell#3328-092309GZWF1: 20g TiC#27&28 + 5g Mg + 8.3g KH + 6.3g SrF2-AD-1, Ein: 358.1 kJ, dE: 4.8 kJ, Tmax: 343 °C, Theoretical Energy: 0 kJ, Energy Gain: infinite.

Cell#3329-092309GZWF2: 20g TiC#28 + 5g Mg + 8.3g KH + 7.95g SrCl2-AD-1, Ein: 336.1 kJ, dE: 8.3 kJ, Tmax: 369 °C, Theoretical Energy:-5.4kJ, Energy Gain: 1.5.

Cell#3331-092309GZWF4: 8g TiC#27 + 2g Mg + 3.32g KH + 5.94g BaBr2-AD-1 (blender), Ein: 139.0 kJ, dE: 3.5 kJ, Tmax: 414 °C, Theoretical Energy: -1.87 kJ, Energy Gain: 1.9.

Cell#3337-092409GZWF1: 20g TiC#28 + 5g Mg + 8.3g KH + 4.75g MgCl2-AD-1, Ein: 314.0 kJ, dE: 19.0kJ, TSC: 259-297 °C, Tmax: 327 °C, Theoretical Energy E: -9.6kJ, Energy Gain: 2.0.

Cell#3338-092409GZWF2: 20g TiC#28 + 5g Mg + 8.3g KH + 9.2g MgBr2-1, Ein:352.1 kJ, dE: 19.5 kJ, TSC: 250-270 °C, Tmax: 357 °C, Theoretical Energy E: -11.2 kJ, Energy Gain: 1.75.

Cell# 3341-092409GHWFC1: 8g TiC#28 + 2g Mg + 3.32g KH + 2.22g CaCl2-AD-1 + 1.04g SrO; Ein: 143.0 kJ; dE: 5.81 kJ; Tmax: 429 °C. Theoretical Energy: 2.88 kJ. Energy Gain: 2.01.

Cell# 3342-092409GHWFC2: 8g TiC#28 + 2g Mg + 3.32g KH + 4g CaBr2-AD-1 + 1.04g SrO; Ein: 131.0 kJ; dE: 6.82 kJ; TSC: 335-440 °C; Tmax: 440 °C. Theoretical Energy: 2.17 kJ. Energy Gain: 3.14.

Cell# 3343-092409GHWFC3: 8g TiC#28 + 2g Mg + 3.32g KH + 4g CaBr2-AD-1 + 0.4g MgO; Ein: 141.0 kJ; dE: 4.47 kJ; Tmax: 430 °C. Theoretical Energy: 2.17 kJ. Energy Gain: 2.06.

Cell# 3344-092409GHWFC4: 8g TiC#28 + 2g Mg + 3.32g KH + 5.88g CaI2-AD-1 + 0.4g MgO; Ein: 132.0 kJ; dE: 4.56 kJ; Tmax: 415 °C. Theoretical Energy: 2.24 kJ. Energy Gain: 2.03.

Cell# 3345-092409GHWFC5: 8g TiC#29 + 2g Mg + 3.32g KH + 5.88g CaI2-AD-1 + 1.04g SrO; Ein: 140.1 kJ; dE: 4.26 kJ; TSC: 340-430 °C; Tmax: 430 °C. Theoretical Energy: 2.24 kJ. Energy Gain: 1.90.

Cell # 092109RCWF1: 1.56 g of CaF2-AD-1, 3.32 g of KH, 2 g of Mg and 8 g of TiC-26 powder in a 1" HDC was finished. dE: 5.6 kJ; Theoretical Energy 0 kJ, Energy Gain: infinite; Tmax: 381 °C.

Cell # 092109RCWF3: 2.22 g of CaCl2-AD-1, 3.32 g of KH, 2 g of Mg and 8 g of B4C powder. dE: 5.1 kJ; Theoretical Energy-2.88 kJ, Energy Gain: 1.8; Tmax: 431 °C.

Cell # 092209RCWF1: 2.0 g of CaBr2-AD-1,1.66 g of KH, 1 g of Mg and 4g of AgNano powder in a 1" HDC was finished. dE: 6.6 kJ; Theoretical Energy -1,71 kJ, Energy Gain: 3.9; Tmax: 420 °C.

Cell # 092309RCWF2: 1.24 g of MgF2-AD-1, 2 g of NaH, 2 g of Mg and 8 g of TiC-28 was finished. dE: 2.8 kJ; Theoretical Energy 0 kJ, Energy Gain: infinite; Tmax: 402 °C.

Cell # 092309RCWF3: 4.0 g of CaBr2-AD-1, 3.32 g of KH, 2 g of Mg and 8 g of WC powder was finished. dE: 7.2 kJ; Theoretical Energy -3.4 kJ, Energy Gain: 2.1; Tmax: 422 °C.

Cell # 092309RCWF4: 5.55 g of CaCl2-AD-1, 5 g of NaH, 5 g of Mg and 20 g of TiC-28 was finished. dE: 10.5 kJ; Theoretical Energy: -4.8 kJ, Energy Gain: 2.2; Tmax: 416 °C.

Cell # 092409RCWF1: 3.9 g of CaF2-AD-1, 8.3 g of KH, 5 g of Mg and 20 g of TiC-28 in a 2" HDC was finished. dE: 4.7 kJ; Theoretical Energy: 0 kJ; Energy Gain: infinite; Tmax: 371 °C.

Cell # 092409RCWF3: 2.22 g of CaCl2-AD-1, 3.32 g of KH, 2 g of Mg and 7.7 g of MgB2 powder was finished. dE: 7.0 kJ; Theoretical Energy -2.88 kJ, Energy Gain: 2.4; Tmax: 413 °C.

Cell#3302-091809GZWF2: 20g TiC + 5g Mg + 8.3g KH + 5.55g CaCl2-AD-1,Ein:378.1kJ, dE:11.8kJ, Tmax: 373 °C, Theoretical Energy: -7.2kJ, Energy Gain: 1.64.

Cell# 3305-091809GHWFC1: 8g TiC #26 + 2g Mg + 2g NaH + 1.24g MgF2-AD-1 + 1.04g SrO; Ein: 144.0 kJ; dE: 2.82 kJ; Tmax: 388 °C. Theoretical Energy: 0 kJ. Energy Gain: infinite.

Cell# 3306-091809GHWFC2: 8g TiC #26 + 2g Mg + 3.32g KH + 1.24g MgF2-AD-1 + 1.04g SrO; Ein: 139.0 kJ; dE: 3.00 kJ; Tmax: 402 °C. Theoretical Energy: 0 kJ. Energy Gain: infinite.

Cell# 3307-091809GHWFC3: 8g TiC #26 + 2g Mg + 3.32g KH + 6.24g EuBr2; Ein: 230.0 kJ; dE: 5.77 kJ; Tmax: 521 °C. Theoretical Energy: 2.73 kJ. Energy Gain: 2.11.

Cell# 3308-091809GHWFC4: 8g TiC #26 + 2g Mg + 3.32g KH + 6.24g EuBr2 + 1.04g SrO; Ein: 152.1 kJ; dE: 6.28 kJ; Tmax: 445 °C. Theoretical Energy: 2.73 kJ. Energy Gain: 2.30.

Cell# 3309-091809GHWFC5: 8g TiC #26 + 2g Mg + 2g NaH + 6.24g EuBr2 + 1.04g SrO; Ein: 147.0 kJ; dE: 3.10 kJ; Tmax: 425 °C. Theoretical Energy: 1.48 kJ. Energy Gain: 2.09.

Cell # 091809RCWF1: 4.0 g of CaBr2-AD-1, 3.32 g of KH, 2 g of Mg and 8g of TiC-26 powder in a 1" HDC was finished. dE: 9.2 kJ; Theoretical Energy -3.4 kJ, Energy Gain: 2.7; Tmax: 433 °C.

Cell # 091809RCWF4: 2.22 g of CaCl2-AD-1, 2 g of NaH, 2 g of Mg and 8 g of TiC-26 powder in a 1" HDC was finished. dE: 8.1 kJ; Theoretical Energy: -1.92 kJ, Energy Gain: 4.2; Tmax: 404 °C.

Cell # 091709RCWF1: 2.22 g of CaCl2-AD-1, 3.32 g of KH, 2 g of Mg and 8 g of TiC-25 powder in a 1" HDC was finished. dE: 6.2 kJ; Theoretical Energy -2.88 kJ, Energy Gain: 2.2; Tmax: 413 °C.

Cell # 091709RCWF3: 2.22 g of CaCl2-AD-1, 3.32 g of KH, 2 g of Mg and 8 g of YC2 was finished. dE: 5.7 kJ; Theoretical Energy: -2.88 kJ, Energy Gain: 2; Tmax: 444 °C.

Cell # 091709RCWF4: 2.22 g of CaCl2-AD-1, 3.32 g of KH, 2 g of Mg and 8 g of Al4C3 powder was finished. dE: 8.8 kJ (Theoretical Energy -2.88 kJ, Energy Gain: 3.1; Tmax: 420 °C.

091709KAWFC1#1310 8.3 g KH + 5.0 g Mg + 20.0 g TiC+ 5.55 g CaCl2-I 387 kJ 405 kJ 18 kJ; Tmax~ 370 °C, Theoretical Energy: 7.9 kJ, Energy Gain: 2.28.

091709KAWFC2#1309 16.6g KH+ 10.0g Mg+ 40.0g TiC+38.0g BaI2-AD-1DRIED 363 kJ 404 kJ 41 kJ; Small TSC of 100 °C at 160 °C with Tmax ~370 °C; Energy Gain ~ 3.5X (X~11.7kJ).

091709KAWFC3#1308 10.0g NaH+ 10.0g Mg+ 40.0g TiC+38.0g BaI2-DRIED 363 kJ 393 kJ 30 kJ; Small TSC at 130 °C with Tmax ~370 °C. Energy Gain ~7.5X (X~4.0kJ).

091609KAWFC1#1307 8.3g KH + 5.0g Mg + 20.0g MgO+ 10.4g BaCl2-I 387 kJ 404 kJ 17 kJ; Tmax~ 350 °C. Energy Gain ~ 3.4X (X~=5.0 kJ).

091609KAWFC2#1306 8.3g KH + 5.0g Mg + 20.0g In+ 14.85 g BaBr2-AD-I 424 kJ 436 kJ 12 kJ; Tmax~ 400 °C.Energy Gain ~ 2.6X (X~=4.68 kJ).

Cell#3283-091609GZWF1: 20g TiC + 5g Mg + 5g NaH + 10g CaBr2-AD-1, Ein:408.1kJ, dE:13.0kJ, Tmax:~350 °C, Theoretical Energy: -5.42kJ, Energy Gain: 2.39.

Cell#3284-091609GZWF2: 20g TiC + 5g Mg + 8.3g KH + 10g CaBr2-AD-1,Ein:376.1kJ, dE:13.9kJ, Tmax: 356 °C, Theoretical Energy: -8.55kJ, Energy Gain: 1.62.

Cell # 091609RCWF1: 4.0 g of CaBr2-AD-1, 3.32 g of KH, 2 g of Mg and 8 g of TaC powder in a 1" HDC was finished. dE: 7.4 kJ; Theoretical Energy: -3.42 kJ, Energy Gain 2.2; Tmax: 411 °C.

091509KAWSU#1304 83.3g KH+ 50.0g Mg+ 200.0g TiC+148.5g BaBr2-AD-I Alfa Aesar Dried 2340 kJ 250 kJ 160 kJ; Small TSC at 110 °C and another TSC of 200 °C at 280C with Tmax ~ 480 °C. Energy Gain: ~ 3.4X (X~46.8kJ).

091509KAWFC1#1303 3.32g KH+ 2.0g Mg+ 8.0g TiC+ 6.24g EuBr2+ 0.2g MgO 170 kJ 187 kJ 17 kJ; Tmax~ 450 °C.

091509KAWFC2#1296 16.6g KH+ 10.0g Mg+ 40.0g TiC-23+38.0g Bal2-I 366 kJ 429 kJ 63 kJ; Small TSC at 130 °C with Tmax ~370 °C. Energy Gain: ~ 5.3X (X~11.7kJ).

091509KAWFC3#1301 8.3g KH + 5.0g Mg + 20.0g TiC+ 10.4g BaCl2-I 382 kJ 387 kJ 5 kJ; Tmax~ 305 °C. Energy Gain: ~ X (X~=5.0 kJ).

Cell#3275-091509GZWF1: 20g TiC + 5g Mg + 5g NaH + 3.9g CaF2, Ein:542.1kJ, dE: 6.3kJ, Tmax: 441 °C, Theoretical Energy: 0kJ, Energy Gain: infinite.

Cell#3276-091509GZWF2: 20g TiC + 5g Mg + 8.3g KH + 3.9g CaF2,Ein:516.1kJ, dE: 9.4kJ, Tmax: 461 °C, Theoretical Energy: 0 kJ, Energy Gain: infinite.

Cell # 091509RCWF1: 2.0 g of CaBr2-AD-1, 1.66 g of KH, 1 g of Mg and 4 g of SiCnano in a 1" HDC was finished, dE 5.0kJ; Tmax: 410 °C, Theoretical Energy: 1.71 kJ, Energy Gain: 2.9.

Cell # 091509RCWF2: 4.0 g of CaBr2-AD-1, 3.32 g of KH, 2 g of Mg and 8 g of YC2 powder was finished. dE: 5.5 kJ; Tmax: 439 °C, Theoretical Energy: 3.42 kJ, Energy Gain: 1.6.

Cell # 091509RCWF4: 4.0 g of CaBr2-AD-1, 3.32 g of KH, 2 g of Mg and 8 g of B4C powder was finished. dE: 10.0 kJ; Tmax: 415 °C, Theoretical Energy: 3.42 kJ, Energy Gain: 2.9.

Cell#3267-091409GZWF1: 20g TiC + 5g Mg + 5g NaH + 3.1g MgF2, Ein:416.1kJ, dE: 4.8kJ, Tmax: 342 °C, Theoretical Energy: 0kJ, Energy Gain: infinite.

Cell#3268-091409GZWF2: 20g TiC + 5g Mg + 8.3g KH + 3.1g MgF2, Ein:418.1kJ, dE: 8.6kJ, Tmax: 362 °C, Theoretical Energy: 0 kJ, Energy Gain: infinite.

Cell # 091409RCWF1: 4.16 g of BaCl2, 3.32 g of KH, 3.33 g of Ca and 8 g of TiC-20 in a 1" HDC was finished. dE: 5.1 kJ; Tmax: 408 °C, Theoretical Energy: 1.6kJ, Energy Gain: 3.

5. 091109KAWFC2#1296 16.6g KH+ 10.0g Mg+ 40.0g TiC-23+29.7g BaBr2 Alfa Aesar Dried (20 kJ with NaH) 489 kJ 517 kJ 28 kJ; Tmax ~ 410 °C. Energy Gain: ~ 3X (X~9.36kJ).

Cell#3259-091109GZWF1: 20g TiC + 5g Mg + 8.3g KH + 6.05g RbCl, Ein: 370.1kJ, dE: 5.5kJ, Tmax: 350 °C, Theoretical Energy: 0kJ, Energy Gain: infinite.

Cell#3260-091109GZWF2: 20g TiC + 5g Mg + 8.3g KH + 8.3g KI, Ein: 388.1kJ, dE: 7.9kJ, Tmax: 356 °C, Theoretical Energy: 0kJ, Energy Gain: infinite.

Cell#3261-091109GZWF3: 8g TiC + 2g Mg + 2g NaH + 6.24g EuBr2, Ein: 85.0kJ, dE: 10.5kJ, TSC: 109-308 °C, Tmax: 311 °C, Theoretical Energy:-1.48kJ, Energy Gain: 7.1.

Cell#3262-091109GZWF4: 1000g RNi 2400, Ein: 1520.0 kJ, dE: 685.3kJ (10.3kJ/15g RNi), TSC: 82-429 °C, Tmax: 433 °C.

Cell# 3263-091109GHWFC1: 8g AC3-9 + 2g Sr + 2g NaH + 6.24g EuBr2; Ein: 149.0 kJ; dE: 6.03 kJ; TSC: 70-180 °C; Tmax: 527 °C. Theoretical Energy: 1.5 kJ, gain: 4.

Cell# 3264-091109GHWFC2: 8g AC3-9 + 2g Sr + 3.32g KH + 6.24g EuBr2; Ein: 191.1 kJ; dE: 14.1 kJ; Tmax: 407 °C. Theoretical Energy: 2.7 kJ, Energy Gain: 5.

Cell# 3265-091109GHWFC4: 8g AC3-9 + 2g Mg + 3.32g KH + 6.24g EuBr2 (Ball Mill); Ein: 160.4.0 kJ; dE: 9.68 kJ; Tmax: 468 °C. Theoretical Energy: 2.7 kJ, Energy Gain: 3.6.

Cell # 091109RCWF1: 1.5 g of InCl, 1.66 g of KH, 1 g of Mg powder and 4 g of Ag nanopowder in a 1" HDC was finished. dE: 6.3 kJ; TSC: 99 °C(137 - 236 °C). Tmax: 402 °C, Theoretical Energy: 2.29 kJ, Energy Gain: 2.75.

Cell # 091109RCWF4: 1.5 g of InCl, 1.66 g of KH, 1 g of Mg powder and 4 g of W nanopowder was finished. dE: 12.6 kJ; TSC: 83 °C(125 - 208 °C). Tmax: 378 °C, Theoretical Energy: 2.29 kJ, Energy Gain: 5.5.

Cell#3251-091009GZWF1: 20g TiC + 5g Mg + 5g NaH + 19.55g BaI2, Ein: 358.1kJ, dE: 18.5 kJ, Tmax: 336 °C, Theoretical Energy: -1.99kJ, Energy Gain: 9.3.

Cell#3252-091009GZWF2: 20g TiC + 5g Mg + 8.3g KH + 19.55g BaI2, Ein: 358.1kJ, dE: 27.5 kJ, Tmax: 366 °C, Theoretical Energy: -5.85kJ, Energy Gain: 4.7.

090909KAWFC1#1291 8.3g KH + 5.0g Mg + 20.0g TiC+ 2.05g AlN (Cell#1231: 6 kJ) 338 kJ 343 kJ 5 kJ Tmax~ 350 °C. Energy Gain ~ X (X~0 kJ).

Cell # 090909RCWF1: 2.97 g of BaBr2, 1.66 g of KH, 1 g of Mg powder and 4 g of Ag nanopowder in a 1" HDC was finished. dE: 4.3 kJ; Tmax: 418 °C, Theoretical Energy: 0.94 kJ, Energy Gain: 4.6.

Cell # 090909RCWF4: 2.97 g of BaBr2, 1.66 g of KH, 1 g of Mg powder and 4 g of W nanopowder was finished. dE: 6.7 kJ; Tmax: 368 °C, Theoretical Energy: 0.94 kJ, Energy Gain: 7.1.

Cell#3244-090909GZWF2: 20g TiC + 5g Mg + 8.3g KH + 10.4g BaCl2,Ein: 582.1kJ, dE:11.3kJ, Tmax: 480 °C, Theoretical Energy: -4.1kJ, Energy Gain: 2.79.

Cell # 090809RCWF4: 4.16 g of BaCl2, 3.2 g of K, 4.17 g of TiH2 and 8 g of CrB2 powder was finished. dE: 4.4 kJ; Tmax: 363 °C.

Cell#3236-090809GZWF2: 20g TiC + 5g Mg + 5g NaH + 2.05g AlN, Ein:366.0 kJ, dE: 5.3 kJ, Tmax: 35 °C, Theoretical Energy: 0kJ, Energy Gain: infinite.

Cell # 090409RCWF4: 4.16 g of BaCl2, 3.2 g of K, 4.17 g of TiH2 and 8 g of TiC powder was finished. dE: 5.7 kJ; Tmax: 383 °C, Theoretical Energy: 1.04 kJ, Energy Gain: 5.4.

090409KAWFC2#1284 8.3g KH + 5.0g Mg + 20.0g TiC+ 2.15g LiCl 333 kJ 345 kJ 12 kJ; Tmax~ 345 °C.Energy Gain ~ 4 X (X~0.6kJ*5=3.0 kJ).

090109KAWFC2#1275 5.0g NaH+ 5.0g Mg+ 20.0g In+ 14.85g BaBr2 336 kJ 348 kJ 12 kJ; Tmax~ 340 °C. Energy Gain ~ 8X (X~1.51 kJ).

Cell#3220-090309GZWF2: 20g TiC + 5g Mg + 8.3g KH + 2.05g AlN, Ein:406.1kJ, dE: 6.5kJ, Tmax: 343 °C, Theoretical Energy: 0 kJ, Energy Gain: infinite.

Cell # 090309RCWF1: 5.94 g of BaBr2, 3.32 g of KH, 2 g of Mg powder and 8 g of Mo powder in a 1" HDC was finished. dE: 4.6 kJ; Tmax: 391 °C, Theoretical Energy: 1.88 kJ, Energy Gain: 2.45.

Cell#3212-090209GZWF1: 20g TiC + 5g Mg + 5g NaH + 14.85g BaBr2,Ein:366.1kJ, dE: 6.7kJ, Tmax: 355 °C, Theoretical Energy: 1.55 kJ, Energy Gain: 4.3.

Cell # 090209RCWF3: 5.94 g of BaBr2, 3.32 g of KH, 2 g of Mg powder and 8 g of Cu powder was finished. dE: 7.4 kJ; Tmax: 442 °C, Theoretical Energy: 1.88 kJ, Energy Gain: 4.

090209KAWFC2#1278 8.3 g KH+ 5.0g Mg+ 20.0g Co Powder+ 7.5g InCl 336 kJ 359 kJ23 kJ; Tmax~ 345 °C. Energy Gain ~1.74 X (X~2.64kJ*5= 13.2kJ).

Cell#3204-090109GZWF2: 20g TiC + 5g Mg + 5g NaH + 14.85g BaBr2, Ein:536.1kJ, dE:17.1kJ, Tmax: 481 °C, Theoretical Energy: 1.55 kJ, Energy Gain: 11.

Cell# 3207-090109GHWFC1: 4g Al4C3 + 1g Mg + 1.66g KH + 3.79g SnI2; Ein: 113.0 kJ; dE: 7.31 kJ; TSC: 190-300 °C; Tmax: 355 °C, Theoretical Energy: 5.62 kJ, Energy Gain: 1.3.

Cell# 3208-090109GHWFC2: 4g TaC + 1g Mg + 1.66g KH + 3.79g SnI2; Ein: 113.1 kJ; dE: 7.81 kJ; TSC: 165-270 °C; Tmax: 367 °C, Theoretical Energy: 5.62 kJ, Energy Gain: 1.39.

Cell # 090109RCWF4: 5.94 g of BaBr2, 3.32 g of KH, 2 g of Mg powder and 8 g of B powder was finished. dE 9.5 kJ; Tmax: 419 °C, Theoretical Energy: 1.9 kJ, Energy Gain: 5.

Cell # 083109RCWF4: 2.08 g of BaCl2, 1.66 g of KH, 1 g of Mg powder and 4 g of SrO powder was finished. dE: 7.4 kJ; Tmax: 432 °C, Theoretical Energy: 1.88 kJ, Energy Gain: 3.9.

Cell# 3200-083109GHWFC2: 4g NbC + 1g Mg + 1.66g KH + 3.79g SnI2; Ein: 129.0 kJ; dE: 9.26 kJ; TSC: 170-310 °C; Tmax: 422 °C, Theoretical Energy: 5.62 kJ, Energy Gain: 1.65.

Cell#3188-082809GZWF2: 20g TiC + 5g Mg + 8.3g KH + 14.85g BaBr2,Ein:342.1kJ, dE:14.5kJ, Tmax: 368C, Theoretical Energy: 4.68 kJ, Energy Gain: 3.

082709KAWFC2#1266 8.3 g KH+ 5.0g Mg+ 20.0g Co+ 7.5g InCl 336 kJ 360 kJ 24 kJ; Tmax~ 360C. Energy Gain ~ 2.1X (X~11.45 kJ).

082709KAWFC3#1265 8.3 g KH+ 8.35 g Ca+ 20.0g TiC+ 7.5g InCl 339 kJ 364 kJ 25 kJ; Tmax~ 340C. Energy Gain ~ 1.77X (X~14.1 kJ).

Cell#3171-082609GZWF3: 4g TiC + 1g MgH2 + 1.66g KH + 3.09g MnI2, Ein: 115.0 kJ, dE: 4.4kJ, TSC: 35-150 °C, Tmax: 325 °C, Theoretical Energy: 2.98 kJ, Energy Gain: 1.46.

Cell#3172-082609GZWF4: 4g TiC + 1g MgH2 + 1g NaH + 3.09g MnI2, in: 119.0 kJ, dE: 5.0 kJ, TSC: 90-154 °C, Tmax: 372 °C, Theoretical Energy: 221 kJ, Energy Gain: 2.27.

Cell # 082609RCWF1: 2.08 g of BaCl2, 1.66 g of KH, 1 g of Mg powder and 4 g of YC2 in a 1" HDC was finished. dE: 4.6 kJ; Tmax: 404 °C, Theoretical Energy: 0.52 kJ, Energy Gain: 8.8.

Cell # 082609RCWF4: 2.08 g of BaCl2, 1.66 g of KH, 1 g of Mg powder and 4 g of Cu powder was finished. dE: 4.1 kJ; Tmax: 378 °C, Theoretical Energy: 0.52 kJ, Energy Gain: 7.89.

Cell # 082509RCWF4: 2.08 g of BaCl2, 1.66 g of KH, 1 g of Mg powder and 4 g of WC was finished. dE: 4.1 kJ; Tmax: 363 °C, Theoretical Energy: 0.52 kJ, Energy Gain: 7.9.

082109KAWFC1#1255 3.32g KH + 2.0g Mg + 8.0g CAII-300 + 6.18g MnI2 83 kJ 101 kJ 18 kJ TSC of 200 °C at ~240 °C with Tmax~ 440 °C.Energy Gain ~ 2.4X (X~3.7 kJ*2=7.4 kJ).

Cell # 081909RCWF1: 1.50 g of InCl, 1.66 g of KH, 1 g of Mg powder and 4 g of SrO in a 1" HDC was finished. dE: 5.9 kJ; TSC: 114 °C (123-237 °C). Tmax: 386 °C, Theoretical Energy: 3.18 kJ, Energy Gain: 1.85.

081809KAWFC1#1246 16.64 g KH + 10.0g Mg + 40.0g TiC + 30.9 g MnI2 VALIDATION 122 kJ 209 kJ 87 kJ; Energy Gain ~ 2.35X (X~3.7 kJ* 10=37 kJ).

081909KAWFC1#1249 8.3 g KH + 5.0g Mg + 20.0g TiC + 15.6 g EuBr2 VALIDATION 130 kJ 177 kJ 47 kJ; TSC of 150 °C at 50 °C with Tmax~ 220 °C. Energy Gain ~ 6.86X (1.37kJx5=6.85 kJ).

081809KAWFC2#1245 5.0 g NaH + 5.0g MgH2 + 20.0g TiC + 15.45 g MnI2 232 kJ 255 kJ 23 kJ; TSC of 100 °C at 100 °C with Tmax~ 275 °C. Energy Gain ~1.78 X (X~ 2.58kJ*5=12.9 kJ).

081809KAWFC3#1244 5.0 g NaH + 5.0g MgH2 + 20.0g CAII-300 + 15.45 g MnI2 243 kJ 268 kJ 25 kJ; TSC of 50 °C at 150 °C with Tmax~ 250 °C. Energy Gain ~1.9 X (X~ 2.58kJ*5=12.9 kJ).

081709KAWFC2#1243 10.0g NaH+ 10.0g Mg+ 40.0g TiC+20.8 g BaCl2 339 kJ 353 kJ 14 kJ; Tmax ~ 340 °C. Energy Gain ~ X (X~0.04* 10=.4 kJ).

081709KAWFC3#1242 10.0g NaH+ 10.0g Mg+ 40.0g TiC+29.7g BaBr2 337 kJ 357 kJ 20 kJ; Tmax~ 340 °C. Energy Gain ~ 6X (X~0.3kJ*10=3.0 kJ).

081409KAWFC1#1241 8.3g KH (Testing Lot#422U002) + 5.0g Mg + 20.0g CAII-300+9.36g AgCl 327 kJ 364 kJ 37 kJ Small TSC at ~250 °C with Tmax~360 °C. Energy Gain~ 2.2X (X=2.7kJ*6.5=17.5 kJ).

081409KAWFC2#1240 8.3g KH+ 5.0g Mg+ 20.0g TiC+10.4g BaCl2 Repeat of Cell#1216 16 kJ 339 kJ 351 kJ 12 kJ; Tmax ~ 340 °C. Energy Gain ~ 4.6 X (X~2.6 kJ; 1 "Cell: Excess energy~5.4 kJ).

081409KAWFC3#1239 8.3g KH+ 5.0g Mg+ 20.0g YC2+14.85g BaBr2 339 kJ 349 kJ 11 kJ; Tmax ~ 340 °C. Energy Gain ~ 2.34 X (X~0.94 * 5 kJ=4.7 kJ; 1 "Cell: Excess energy~5.3 kJ).

081909KAWFC3#1247 3.32g KH + 2.0g Mg + 8.0g TiC + 6.18g MnI2 DEMO RUN 61 kJ 78 kJ 17 kJ; TSC of 200 °C at ~50 °C with Tmax~ 270 °C. Energy Gain ~ 2.3 X (X~3.7 kJ*2=7.4 kJ.

Cell#3128-0819090ZWF4: 4g In + 1g Mg + 1g NaH + 2.97g BaBr2,Ein:162.6kJ, dE: 5.8kJ, Tmax: 454 °C, Theoretical Energy: 0.31 kJ, Energy Gain: 18.7.

Cell # 081809RCWF3: 2.97 g of BaBr2, 1.66 g of KH, 1 g of Mg powder and 4 g of Fe powder was finished. dE: 4.4 kJ; Tmax: 411 °C, Theoretical Energy: 0.94 kJ, Energy Gain: 4.6.

Cell # 081709RCWF1: 1.50 g of InCl, 1.66 g of KH, 1 g of Mg powder and 4 g of Ti powder in a 1" HDC was finished. dE: 5.2 kJ; TSC: 93 °C (116 - 209 °C). Tmax: 390 °C, Theoretical Energy: 2.29, Energy Gain: 2.27.

Cell # 081709RCWF3: 1.50 g of InCl, 1.66 g of KH, 1 g of Mg powder and 4 g of Fe powder was finished. dE: 5.8 kJ; TSC: 88 °C (129 - 217 °C). Tmax: 458 °C, Theoretical Energy: 2.29, Energy Gain: 2.5.

Cell # 081709RCWF4: 1.50 g of InCl, 1.66 g of KH, 1 g of Mg powder and 4 g of Co powder was finished. dE: 6.0 kJ; TSC: 98 °C (122 - 220 °C). Tmax: 465 °C, Theoretical Energy: 2.29, Energy Gain: 2.6.

Cell#3098-081409GZWF1: 20g TiC + 5g Mg + 8.3g KH + 2.15g LiCl, Ein:326.0kJ, dE: 7.7kJ, Tmax: 327 °C, Theoretical Energy: 3 kJ, Energy Gain: 2.5.

Cell#3099-081409GZWF2: 20g TiC + 5g Mg + 8.3g KH + 4.35g LiBr, Ein:322.1kJ, dE:10.2kJ, Tmax: 317 °C, Theoretical Energy: 3.75 kJ, Energy Gain: 2.66.

Cell # 081409RCWF1: 1.50 g of InCl, 1.66 g of KH, 1 g of Mg powder and 4 g of VC in a 1" HDC was finished. dE: 5.2 kJ; TSC: 76 °C (135 - 211 °C). Tmax: 386 °C, Theoretical Energy: 2.29 kJ, Energy Gain: 2.27.

Cell # 081409RCWF3: 1.50 g of InCl, 1.66 g of KH, 1 g of Mg powder and 4 g of ZrB2 was finished. dE: 5.1 kJ, TSC: 66 °C (142 - 208 °C). Tmax 383 °C, Theoretical Energy: 2.29 kJ, Energy Gain: 2.2.

Cell # 081109RCWF3: 2.97 g of BaBr2, 1.66 g of KH, 1 g of Mg powder and 4 g of B4C was finished. dE: 4.5 kJ; Tmax: 393 °C, Theoretical Energy: 0.94, Energy Gain: 4.8.

Cell#3058-081009GZWF1: 20g AC3-8 + 8.3g K, Ein:325.6kJ, dE: 6.8kJ, TSC: 50-70 °C, Tmax: 330 °C.

Cell # 081009RCWF1: 2.97 g of BaBr2, 1.66 g of KH, 1 g of Mg powder and 4 g of YC2 in a 1" HDC was finished. dE: 5.3 kJ; Tmax: 423 °C, Theoretical Energy: 0.94 kJ, Energy Gain: 5.6.

Cell # 081009RCWF3: 2.97 g of BaBr2, 1.66 g of KH, 1 g of Mg powder and 4 g of TaC was finished. dE: 7.1 kJ; Tmax: 395 °C, Theoretical Energy: 0.94 kJ, Energy Gain: 7.55.

080609KAWFC1#1225 3.32g KH + 2.0g Mg + 8.0g TiC+ 6.18g MnI2 (2X) 64 kJ 80 kJ 16 kJ TSC of 140 °C at ~50 °C with Tmax~260 °C. Energy Gain ~ 2.16X (X~3.7 kJ*2=7.4 kJ).

Cell#3046-080609GZWF4: 4g AC3-8 + 1g MgH2 + 1g NaH + 3.09g MnI2, Ein:1 49.1 kJ, dE: 8.0 kJ, TSC: 146-237 °C, Tmax: 428 °C, Theoretical Energy: 2.58 kJ, Energy Gain: 5.

Cell # 080609RCWF1: 1.50 g of InCl, 1.66 g of KH, 1.67 g of Ca and 4 g of AC3-8 in a 1" HDC, dE: 9.9 kJ; TSC: 142 °C (157-299 °C). Tmax: 382 °C, Theoretical Energy: 2.82 kJ, Energy Gain: 3.5.

Cell#3034-080509GZWF1: 20g TiC + 5g Mg + 8.3g KH + 3.7g CrB2, Ein: 316.6 kJ, dE: 5.96 kJ, Tmax: 328 °C, Theoretical Energy: 0.25 kJ, Energy Gain: 24.

Cell#3035-080509GZWF2: 20g TiC + 5g Mg + 8.3g KH + 14.85g BaBr2, Ein: 318.1 kJ, dE: 13.0 kJ, Tmax: 334 °C, Theoretical Energy: 4.7 kJ, Energy Gain: 2.76.

Cell#3037-080509GZWF4: 4g AC3-7 + 1g MgH2 + 1g NaH + 2.78g MgI2, Ein: 254.0 kJ, dE: 7.5 kJ, Tmax: 653 °C, Theoretical Energy: 1.75 kJ, Energy Gain: 4.3.

Cell # 080509RCWF1: 1.50 g of InCl, 1.66 g of KH, 1 g of Mg and 4 g of YC2 in a 1" HDC was finished. dE: 7.7 kJ; TSC: 104 °C (158-262 °C). Tmax: 390 °C, Theoretical Energy: 4.7 kJ, Energy Gain: 1.6.

Cell#3026-080409GZWF2: 20g TiC + 5g Mg + 8.3g KH + 2.05g AlN, Ein: 337.6 kJ, dE: 5.20 kJ, Tmax: 296 °C, Theoretical Energy: 0 kJ, Energy Gain: infinite.

Cell# 3031-080409GHWFC3: 4g Cu + 1g Mg + 1.66g KH + 1.44g AgCl; Ein: 128.0 kJ; dE: 6.33 kJ; TSC: 125-215 °C; Tmax: 379 °C, Theoretical Energy: 3.35 kJ, Energy Gain: 1.94.

Cell# 3032-080409GHWFC4: 4g Cr + 1g Mg + 1.66g KH + 1.44g AgCl; Ein: 142.0 kJ; dE: 4.35 kJ; TSC: 250-350 °C; Tmax: 434 °C, Theoretical Energy: 3.35 kJ, Energy Gain: 1.33.

Cell# 3033-080409GHWFC5: 4g Mn + 1g Mg + 1.66g KH + 1.44g AgCl; Ein: 139.0 kJ; dE: 6.26 kJ; Tmax: 413 °C, Theoretical Energy: 3.35 kJ, Energy Gain: 1.93.

Cell # 080409RCWF1: 1.50 g of InCl, 1.66 g of KH, 1 g of Mg and 4 g of Cr3C2 in a 1" HDC was finished. dE: 5.8 kJ; TSC: 110 °C (130 - 240 °C). Tmax: 389 °C, Theoretical Energy: 2.29 kJ, Energy Gain: 2.5.

Cell # 080409RCWF3: 1.50 g of InCl, 1.66 g of KH, 1 g of Mg and 4 g of A14C3 was finished. dE: 4.1 kJ; TSC: 75 °C (140-215 °C). Tmax: 389 °C, Theoretical Energy: 2.29 kJ, Energy Gain: 1.79.

080309KAWFC1#1216 8.3g KH+ 5.0g Mg+ 20.0g TiC+10.4g BaCl2 313 kJ 329 kJ 16 kJ Tmax ~ 340 °C. Energy Gain ~ 6.1X (X~2.6 kJ; 1 "Cell: Excess energy~5.4 kJ).

073109KAWFC1#1213 8.3 g KH+ 5.0 g Mg+ 20.0 g TiC+ 4.35 g LiBr 318 kJ 332 kJ 14 kJ Tmax~350 °C. Energy Gain~ 3.7 X (X~0.75 kJ*5=3.75 kJ) 072709KAWFC2#1200 Excess energy: 21 kJ.

073109KAWFC2#1212 8.3 g KH+ 5.0 g Mg+ 20.0 g CAII-300+ 2.0 g MgO 339 kJ 358 kJ 19 kJ Tmax ~ 340 °C, Theoretical Energy: OkJ, gain is infinite.

073109KAWFC2#1211 8.3 g KH+ 5.0 g Mg+ 20.0 g CAII-300+ 7.3 g Ni2Si 339 kJ 359 kJ 20 kJ Tmax ~ 340 °C. Energy Gain is 14.3 (X~0.28 kJ*5=1.40 kJ; 1"Cell: Excess energy~5.8 kJ).

Cell#3017-080309GZWF2: 20g TiC + 5g Mg + 8.3g KH + 10.4g BaCl2, Ein:357.1kJ, dE:16.56kJ, Tmax: 343 °C, Theoretical Energy: 2.6 kJ, Energy Gain: 6.3.

Cell# 3021-080309GHWFC2: 4g Fe + 1g Mg + 1.66g KH + 1.44g AgCl; Ein: 139.0 kJ; dE: 4.76 kJ; TSC: 260-360 °C; Tmax: 426 °C, Theoretical Energy: 2.9 kJ, Energy Gain: 1.64.

Cell# 3022-080309GHWFC3: 4g Ni + 1g Mg + 1.66g KH + 1.44g AgCl; Ein: 138.0 kJ; dE: 6.96 kJ; TSC: 260-370 °C; Tmax: 418 °C, Theoretical Energy: 4.97 kJ, Energy Gain: 1.40.

Cell#3008-073109GZWF2: 20g AC3-7 + 8.3g KH + 4.35g LiBr, Ein: 312.1 kJ, dE: 9.90 kJ, Tmax: 330 °C, Theoretical Energy: 3.75 kJ, Energy Gain: 2.64.

Cell# 3011-073109GHWFC1: 4g Ti powder + 1g Mg + 1.66g KH + 1.44g AgCl; Ein: 140.0 kJ; dE: 6.07 kJ; TSC: 270-360 °C; Tmax: 392 °C, Theoretical Energy: 3.25 kJ, Energy Gain: 1.87.

Cell # 072909RCWF1: 1.49 g of Co2P, 1.66 g of KH, 1 g of Mg and 4 g of AC3-7 in a 1" HDC was finished. dE: 3.9 kJ; Tmax: 395 °C, Theoretical Energy: 0.45, Energy Gain: 8.69.

072909KAWFC2#1206 3.33 g KH + 2.0 g Mg+ 8.0g CAII-300 + 8.32 g Dyl2 (0.02 mole) 129 kJ 138 kJ 9 kJ; TSC with Tmax~370 °C, Theoretical Energy: 6.32 kJ, Energy Gain: 1.42; 1"Cell: Excess energy~6.1 kJ with 0.006 mole.

072909KAWFC3#1205 5.0 g NaH+ 5.0 g Mg+ 20 g TiC+14.85 g BaBr2 339 kJ 347 kJ 8 kJ; Tmax~370 °C. Energy Gain ~5X (X~0.3 kJ*5=1.5 kJ; 1"Cell: Excess energy~8.0 kJ).

072809KAWFC2#1203 KH_8.3 g+ Mg_ 5.0 g + CAII-300_20.0g+ Dried RbCl_6.05 g (* TPD shows very low moisture content; 071709KAWFC1#1180 Excess energy : 18 kJ) 333 kJ 346 kJ 13 kJ; Tmax~360 °C. Energy Gain ~ X (X~0 kJ; 1"Cell: Excess energy~6.0 kJ).

072809KAWFC3#1202 KH_8.3 g+ Mg_ 5.0 g + CAII-300_20.0g+ Y2S3_13.7g 336 kJ 350 kJ 14 kJ; Tmax~350 °C. Energy Gain~3.45X (X~0.81 kJ*5=4.05 kJ; 1"Cell: Excess energy~5.2 kJ).

Cell#2992-072909GZWF4: 4g AC3-7 + 1g Mg + 1g NaH + 1.49g Co2P, Ein:135.0kJ, dE: 6.7kJ, Tmax: 380 °C, Theoretical Energy: 0.45, Energy Gain: 13.8.

Cell#2983-072809GZWF4: 4g AC3-7 + 1g Mg + 1.66gKH + 0.01molCl2, Ein:189.5kJ, dE:11.4kJ, Tmax: 85 °C, Theoretical Energy: 8 kJ, Energy Gain: 1.4.

Cell # 072809RCWF1: 0.41 g of AlN, 1.66 g of KH, 1.67 g of Ca and 4 g of AC3-7 in a 1" HDC was finished. dE: 4.2 kJ; Tmax: 401 °C, Theoretical Energy: 0, Energy Gain: infinite.

Cell#2972-072709GZWF1: 20g AC3-7 + 5g Mg + 8.3g KH + 3.7g CrB2, Ein:352.6kJ, dE:10.62kJ, Tmax: 324 °C, Theoretical Energy: 0, Energy Gain: infinite.

Cell#2973-072709GZWF2: 20g AC3-7 + 5g Mg + 8.3g KH + 4.35g LiBr,Ein:334.6kJ, dE:16.79kJ, Tmax: 381 °C, Theoretical Energy: 3.75, Energy Gain: 4.47.

Cell#2974-072709GZWF3: 4g Pt/C + 1g Mg + 1.66g KH + 1.44g AgCl, Ein:148.0kJ, dE: 6.4 kJ, TSC: 388-452 °C, Tmax: 453 °C, Theoretical Energy: 2.90, Energy Gain: 2.2.

Cell#2975-072709GZWF4: 4g Pd/C + 1g Mg + 1.66g KH + 1.44g AgCl, Ein:134.1kJ, dE: 9.9kJ, TSC: 332-446 °C, Tmax: 455 °C, Theoretical Energy: 2.90, Energy Gain: 3.4.

072709KAWFC1#1201 KH_5.0 gm+ Mg_ 5.0 gm + CAII-300_20.0gm+ KI_8.3gm 314 kJ 331 kJ 17 kJ; Tmax~340 °C, Theoretical Energy: 0, Energy Gain: infinite.

072709KAWFC2#1200 KH_5.0 gm+ Mg_ 5.0 gm + CAII-300_20.0gm+ LiBr_4.35gm 339 kJ 360 kJ 21 kJ; Tmax~350 °C, Theoretical Energy: 0, Energy Gain: infinite.

072709KAWFC3#1199 KH_5.0 gm+ Mg_ 5.0 gm+CAII-300_20.0gm+ NiB_3.5gm 336 kJ 357 kJ 21 kJ; Tmax~340 °C. Energy Gain ~ 8 (X~0.52 kJ*5=2.6 kJ; 1"Cell: Excess energy~4.9 kJ).

Cell # 072709RCWF1: 2.38 g of Na2TeO4, 1.66 g of KH, 1 g of Mg powder and 4 g of AC3-7 in a 1" HDC was finished. dE: 22.3 kJ; TSC: 292 °C(261 - 553 °C); Tmax: 554 °C, Theoretical Energy: 14.85, Energy Gain: 1.5.

072409KAWFC2#1196 KH_8.3 gm+ Mg_ 5.0 gm + CAII-300_20.0gm+ CoS_4.55gm 339 kJ 357 kJ 18 kJ; Tmax~350 °C. Energy Gain~ 1.37X (X~ 2.63 kJ*5=13.15 kJ; 1"Cell: Excess energy~8.7 kJ).

072409KAWFC3#1195 NaH_5.0 gm+ Mg_ 5.0 gm + CAII-300_20.0gm+ GdF3_10.7gm 339 kJ 351 kJ 12 kJ; Tmax~320 °C. Energy Gain~ (X~0.13 kJ*5=0.65 kJ; 1"Cell: Excess energy~8.68 kJ).

072509KARU#1198 NaH_5.0 gm+ Mg_ 5.0 gm + CAII-300_20.0gm+ SF6 Online ROWAN TECH PARK Loaded here at BLP on 072209 252.7 kJ 349.3 kJ 96.5 kJ Tmax~400 °C. Energy Gain ~ 1.37X (X for 0.03 mole SF6~70 kJ).

072409KAWRU#1194 NaH_5.0 gm+ Ca_5.0 gm+CAII-300_20.0 gm+ MnI2_15.45 gm ROWAN TECH PARK Loaded here at BLP on 072209 346.8 kJ 398.3 kJ 51.5 kJ; Small TSC at ~50 °C with Tmax~ 320 °C. Energy Gain ~ 1.75 X (X~5.9 kJ*5=29,5 kJ).

072309KAWRU#1190 NaH_5.0 gm+ Ca_5.0 gm+CAII-300_20.0 gm+ MnI2_15.45 gm ROWAN TECH PARK Loaded here at BLP on 072209 336.5 kJ 388.6 kJ 52.1 kJ Small TSC at ~50 °C with Tmax~ 320 °C. Energy Gain ~ 1.76 X (X~5.9 kJ*5=29.5 kJ).

Cell # 072409RCWF1: 0.40 g of MgO, 1.66 g of KH, 1 g of Mg powder and 4 g of AC3-6 in a 1" HDC, dE: 4.1 kJ; Tmax: 388 °C; Theoretical Energy: 0; Energy Gain: infinite.

Cell#2963-072409GZWF1: 20g TiC + 5g Mg + 5g NaH + 14.85g BaBr2, Ein:381.1kJ, dE:7.32kJ, Tmax: 314 °C, Theoretical Energy: 1.55 kJ, Energy Gain: 4.7.

Cell# 2968-072409GHWFC2: 4g AC3-6 + 1g Mg + 1g NaH + 2.38g Na2TeO4; Ein: 141.0 kJ; dE: 19.32 kJ; TSC: 225-540 °C; Tmax: 540 °C, Theoretical Energy: 14.85 kJ, Energy Gain: 1.3.

071609KAWRU#1177 KH 8.3gm + Mg 5.0 gm + TiC 20.0gm + SnI2 18.5gm 199.8 kJ 245.8 kJ 46 kJ, Theoretical Energy: 28.1 kJ, Energy Gain: 1.63.

Cell# 2933-072009GHWFC2: 4g AC3-5 + 1g Mg + 1.66g KH + 0.87g LiBr; Ein: 146.0 kJ; dE: 6.24 kJ; Tmax: 439 °C, Theoretical Energy: endothermic.

Cell#2954-072309GZWF1: 20g AC3-6 + 5g Mg + 8.3g KH + 13g CsI, Ein:333.1kJ, dE:10.08kJ, Tmax: 328 °C, Theoretical Energy: 0, Energy Gain: infinite.

072409KAWRU#1194 NaH_5.0 gm+ Ca_5.0 gm+CAII-300_20.0 gm+ MnI2_15.45 gm ROWAN TECH PARK Loaded here at BLP on 072209 346.8 kJ 398.3 kJ 51.5 kJ. Energy Gain ~ 1.75 X (X~5.9 kJ*5=29.5 kJ).

072309KAWFC1#1193 NaH_5.0 gm+ Mg_ 5.0 gm + CAII-300_20.0gm+ InCl2_6.5gm 311 kJ 338 kJ 27 kJ; Small TSC at 150 °C with Tmax~350 °C. Energy Gain~1.8X (X~ 4.22 kJ*3.5=14.7 kJ; 1"Cell: Excess energy~7.9 kJ).

072209KAWFC1#1189 KH_8.3 gm+ Mg_ 5.0 gm + CAII-300_20.0gm+ AlN_2.05gm 326 kJ 341 kJ 15 kJ; Tmax~320 °C; Theoretical Energy: 0 kJ; Energy Gain: infinite (1"Cell: Excess energy~4.9 kJ).

072209KAWFC2#1188 NaH_5.0 gm+ Mg_ 5.0 gm + CAII-300_20.0gm+ CsCl_8.4gm 320 kJ 330 kJ 10 kJ; Tmax~330 °C; Theoretical Energy: 0 kJ; Energy Gain: infinite (1"Cell: Excess energy~4.1 kJ).

Cell#2947-072209GZWF2: 20g AC3-6 + 5g Mg + 5g NaH + 6.1g RbCl, Ein: 322.6 kJ, dE:14.6kJ; Tmax: 320 °C; Theoretical Energy: 0 kJ; Energy Gain: infinite.

Cell#2931-072209GZWF4: 4g AC3-6 + 1g Mg + 1.66g KH + 1.66g KI, Ein: 131.0 kJ, dE: 5.6kJ; Tmax: 397 °C; Theoretical Energy: 0 kJ; Energy Gain: infinite.

Cell # 072109RCWF1: 0.70 g of NiB, 1.66 g of KH, 1 g of Mg powder and 4 g of AC3-6 in a 1" HDC, dE: 4.9 kJ; Tmax: 402 °C; Theoretical Energy: 0.52 kJ; Energy Gain: 9.4.

Cell#2939-072109GZWF3: 4g Pt/C + 1g Mg + 1g NaH + 2.97g BaBr2, Ein: 153.0 kJ, dE: 5.1kJ; Tmax: 390 °C; Theoretical Energy: 0.31; Energy Gain: 16.

Cell# 2944-072109GHWFC4: 4g AC3-6 + 1g Mg + 1g NaH + 2.32g Ag2O; Ein: 221.1 kJ; dE: 8.48 kJ; TSC: 70-150 °C; Tmax: 547 °C; Theoretical Energy: 5.71 kJ; Energy Gain: 1.49.

Cell# 2945-072109GHWFC5: 4g AC3-6 + 1g Mg + 1.66g KH + 2.32g Ag2O; Ein: 215.9 kJ; dE: 10.12 kJ; TSC: 70-140 °C; Tmax: 545 °C; Theoretical Energy: 5.71 kJ; Energy Gain: 1.77.

B. Solution NMR

Representative reaction mixtures for forming hydrino comprise (i) at least one catalyst or source of catalyst and hydrogen such as one chosen from Li, Na, K, LiH, NaH, and KH, (ii) at least one oxidant such as one chosen from $SrCl_2$, $SrBr_2$, $SrI_2$, $BaCl_2$, $BaBr_2$, $MgF_2$, $MgCl_2$, $CaF_2$, $MgI_2$, $CaF_2$, $CaI_2$, $EuBr_2$, $EuBr_3$, $FeBr_2$, $MnI_2$, $SnI_2$, $PdI_2$, $InCl$, $AgCl$, $Y_2O_3$, $KCl$, $LiCl$, $LiBr$, $LiF$, $KI$, $RbCl$, $Ca_3P_2$, $SF_6$, $Mg_3As_2$, and $AlN$, (iii) at least one reductant such as one chosen from Mg, Sr, Ca, $CaH_2$, Li, Na, K, $KBH_4$, and $NaBH_4$, and (iv) at least one support such as one chosen from TiC, TiCN, $Ti_3SiC_2$, $YC_2$, $CrB_2$, $Cr_3C_2$, $GdB_6$, Pt/Ti, Pd/C, Pt/C, AC, Cr, Co, Mn, Si nanopowder (NP), MgO, and TiC. 50 mg of reaction product of the reaction mixtures were added to 1.5 ml of deuterated N,N-dimethylformamide-d7 ($DCON(CD_3)_2$, DMF-d7, (99.5% Cambridge Isotope Laboratories, Inc.) in a vial that was sealed with a glass TEFLON™ valve, agitated, and allowed to dissolve over a 12 hour-period in a glove box under an argon atmosphere. The solution in the absence of any solid was transferred to an NMR tube (5 mm OD, 23 cm length, Wilmad) by a gas-tight connection, followed by flame-sealing of the tube. The NMR spectra were recorded with a 500 MHz Bruker NMR spectrometer that was deuterium locked. The chemical shifts were referenced to the solvent frequency such as DMF-d7 at 8.03 ppm relative to tetramethylsilane (TMS).

The hydrino hydride ion $H^-(1/4)$ was predicted to be observed at about -3.86 ppm, and molecular hydrino $H_2(1/4)$ was predicted to be observed at 1.21 ppm relative to TMS. $H^-(1/3)$ was predicted to be observed at about -3 ppm that may be shifted by interaction with the cation or solvent. The position of occurrence of these peaks with the shift and intensity for a specific reaction mixture are given in TABLE 3.

TABLE 3. The $^1H$ solution NMR following DMF-d7 solvent extraction of the products of the hydrino catalyst systems.

| Reactants | $H_2(1/4)$ or $H^-(1/4)$ Peak Position and Intensity |
|---|---|
| 20 g TiC + 3 g Mg + 5 g NaH (12 rpm) | 1.20 ppm medium |
| 20 g TiC + 5 g Mg + 5 g NaH + 2.13 g LiCl | 1.21 ppm medium |
| 7.95 g $SrCl_2$ + 8.3 g KH + 5 g Mg + 20 g TiC | 1.21 ppm medium |
| 3 g NaH + 3 g Mg + 6 g Pd/C | 1.21 ppm medium and clear |
| 20 g TiC + 5 g Mg + 8.3 g KH + 2.13 g LiCl | 1.21 ppm medium |
| 20 g $CrB_2$ + 5 g Mg + 5 g NaH | 1.24 ppm strong |
| 12.4 g $SrBr_2$ + 5 g NaH + 5 g Mg + 20 g TiC | 1.26 ppm very strong and clear |
| 20 g TiC + 5 g Mg + 5 g NaH + 0.35 g Li | 1.20 ppm medium and clear |
| 20 g TiC + 5 g Mg + 5 g NaH + 2.1 g LiCl | 1.21 ppm strong and clear |
| 20 g TiC + 5 g Mg + 8.3 g KH + 0.35 g Li | 1.21 ppm strong |
| 20 g TiC + 5 g Mg + 8.3 g KH + 4.74 g LiAlH4 | 1.22 ppm medium |
| 20 g TiC + 5 g Mg + 5 g NaH + 0.35 g Li (1 rpm) | 1.22 ppm strong |
| 5 g NaH + 5 g Mg + 20 g TiC | 1.22 ppm strong |
| 2.13 g LiCl + 5 g NaH + 5 g Mg + 20 g TiC | 1.21 ppm medium |
| 3 g NaH + 3 g Mg + 12 g $Ti_3SiC_2$ | 1.21 ppm strong and clear |
| 2.13 g LiCl + 8.3 g KH + 5 g Mg + 20 g $Ti_3SiC_2$ | 1.22 ppm medium |
| 5 g NaH + 5 g Mg + 20 g TiC + 2.1 g LiCl | 1.21 ppm medium |
| 20 g TiC + 5 g Mg + 8.3 g KH (6 rpm) | 1.22 ppm medium |
| 8.3 g KH + 5 g Mg + 20 g TiC + 11.2 g $KBH_4$ | 1.23 ppm medium |
| 20 g TiC + 5 g Mg + 8.3 g KH (12 rpm) | 1.21 ppm medium |
| 12 g $CrB_2$ + 3 g Mg + 3 g NaH | 1.24 ppm strong |
| 8 g TiC + 3 g Mg + 4.98 g KH (1 W, W+G, NC) | 1.22 ppm weak |
| 3 g NaH + 3 g Mg + 12 g $CrB_2$ | 1.24 ppm strong |
| 20 g TiC + 5 g Mg | 1.22 ppm weak |
| 5 g NaH + 5 g Mg + 8.0 g $NaBH_4$ + 20 g $CrB_2$ | 1.31 ppm very strong |
| 8.3 g KH + 5 g Mg + 11.2 g $KBH_4$ + 20 g $CrB_2$ | 1.23 ppm very strong |
| 3 g NaH + 3 g Mg + 12 g TiCN | 1.21 ppm medium |
| 3 g NaH + 3 g Mg + 11.5 g Pd/C | 1.21 ppm medium |
| 20 g TiC + 5 g Mg + 4.79 g Na + 0.5 g NaH | 1.22 ppm medium and clear |
| 8 g TiC + 3 g Mg + 3 g NaH | 1.21 ppm |
| 3.32 g KH + 2 g Mg + 8 g TiC + 4.95 g $SrBr_2$ | 1.22 ppm weak |
| 5 g NaH + 5 g Mg + 4.35 g LiBr + 20 g TiC | 1.26 ppm medium |
| 20 g TiC + 2.5 g Ca + 2.5 g $CaH_2$ | 1.2 ppm medium and clear |
| 8.3 g KH + 5 g Mg + 4.34 g LiBr + 20 g TiC | 1.21 ppm weak |
| 8 TiC + 3 g Mg + 3 g NaH (20V, C) | 1.21 ppm medium |

(continued)

| Reactants | $H_2(1/4)$ or $H^-(1/4)$ Peak Position and Intensity |
|---|---|
| 20 g TiC + 1.3 g LiF + 3.1 g MgF$_2$ + 2 g KH | 1.21 ppm medium |
| 5 g NaH + 20 g Cr$_3$C$_2$ | 1.21 ppm strong |
| 20 g TiC + 8.3 g KH + 5 g Mg | 1.22 ppm medium |
| 8 g TiC + 3 g NaH + 3 g Mg (20V, NC) | 1.22 ppm medium |
| 20 g TiC + 8.3 g KH (12 rpm) | 1.21 ppm very strong |
| 20 g TiC + 8.3 g KH (12 rpm) | 1.22 ppm very strong and clear |
| 20 g TiC + 5 g NaH + 5 g Mg (6 rpm) | 1.21 ppm medium |
| 20 g TiC + 5 g NaH + 5 g Mg (6 rpm) | 1.21 ppm medium |
| 20 g TiC + 5 g Mg + 5 g NaH + 5 g Pt/Ti + 0.009 mol H2 | 1.21 ppm stronger |
| 5 g NaH + 5 g Mg + 20 g TiC | 1.2 ppm strong |
| 8.3gKH + 5 g Mg + 20 g TiC | 1.21 ppm strong |
| 20 g TiC + 5 g Mg + 5 g NaH + 5 g Pt/Ti | 1.2 ppm strong and clear |
| 20 g TiC + 5 g Ca | 1.2 ppm medium and clear |
| 2.13 g LiCl + 8.3 g KH + 5 g Mg + 20 g TiC | 1.2 ppm |
| 12 g TiC + 3 g Mg + 3 g NaH | 1.21 ppm medium |
| 2 g NaH + 8 g TiC + 10 g KI | 1.24 ppm medium |
| 2 g NaH + 8 g TiC + 10 g KI | 1.22 ppm very strong |
| 2 g NaH + 8 g TiC + 10 g KI | 1.23 ppm very strong and clear |
| 2 g NaH + 8 g TiC + 10 g KI | 1.23 ppm strong |
| 2 g NaH + 8 g TiC + 5 g KI | 1.21 ppm medium |
| 2 g NaH + 8 g TiC + 5 g KI | 1.21 ppm medium |
| 20 g TiC + 8.3 g KH + 0.35 g Li | 1.22 ppm strong |
| 20 g TiC + 2.5 g Mg + 2.5 g NaH | 1.21 ppm strong |
| 20 g TiC + 5 g Ca | 1.21 ppm weak |
| 3 g NaH + 3 g Mg + 12 g TiC | 1.21 ppm medium |
| 20 g TiC + 8.3 g KH + 5 g Mg + 12.4 g SrBr$_2$ | 1.20 ppm medium |
| 12 g TiC + 1.5 g Mg + 1.5 g NaH | 1.21 ppm medium |
| 8 g Pd/C + 4.98 g KH | 1.22 ppm strong |
| 3 g NaH + 4.98 g KH + 12 g TiC | 1.22 ppm strong |
| 7.42 g SrBr$_2$ + 4.98 g KH + 3 g Mg + 12 g TiC | 1.21 ppm weak |
| 12 g TiC + 0.1 g Li + 4.98 g KH | 1.21 ppm medium |
| 1.5 g NaH + 1.5 g Mg + 12 g TiC | 1.21 ppm medium |
| 1.66 g KH + 15 g KCl + 1 g Mg + 3.92 g EuBr3 | 1.22 ppm strong |
| 1.66 g KH + 15 g KCl + 1 g Mg + 3.92 g EuBr3 | 1.22 ppm medium |
| 1.66 g KH + 10 g KCl + 1 g Mg + 3.92 g EuBr3 | 1.23 ppm strong |
| 1.66 g KH + 10 g KCl + 1 g Mg + 3.92 g EuBr3 | 1.22 ppm strong |
| 20 g TiC + 5 g Mg + 5 g NaH | 1.21 ppm medium |
| 6 g Mg + 6 g NaH + 24 g TiC | 1.21 ppm medium |
| 2.5 g Mg + 2.5 g NaH + 20 g TiC | 1.21 ppm strong |
| 3 g Mg + 3 g NaH + 12 g TiC | 1.21 ppm strong |
| 5 g NaH + 5 g Mg + 20 g TiC | 1.21 ppm strong |
| 3.32 g KH + 8 g AC | 1.21 ppm very strong |
| 4.98 g KH + 3 g Mg + 20 g TiC | 1.22 ppm very weak |
| 2 g NaH + 2 g Mg + 8 g TiC (500 C) | 1.21 ppm strong |
| 2 g NaH + 2 g Mg + 8 g TiC (500 C) | 1.21 ppm very strong and clear |
| 20 g TiC + 1 g NaH | 1.21 ppm medium |
| 3 g NaH + 3 g Mg + 12 g TiC | 1.21 ppm medium |
| 5 g NaH + 5 g Mg + 20 g TiC | 1.22 ppm strong |
| 20 g TiC + 5 g NaH | 1.22 ppm medium |
| 12 g TiC + 4.98 g KH + 0.21 g Li | 1.22 ppm weak |

(continued)

| Reactants | $H_2(1/4)$ or $H^-(1/4)$ Peak Position and Intensity |
|---|---|
| 20 g TiC + 8.3 g KH + 0.35 g Li | 1.21 ppm medium |
| 5 g NaH + 5 g Mg + 20 g TiC | 1.21 ppm strong and clear |
| 2 g NaH + 2 g Mg + 8 g TiC (470 C) | 1.21 ppm weak |
| 20 g TiC + 5 g Mg + 5 g NaH + 14.85 g BaBr$_2$ | 1.25 ppm strong and clear |
| 3 g AC + 3 g NaH | 1.22 ppm strong and clear |
| 8 g CB + 2 g NaH | 1.21 ppm medium |
| 2 g Mg + 3.32 g KH + 8 g regenerated AC | 1.21 ppm strong and clear |
| 8.3 g KH + 5 g Mg + 20 g YC + 13.9 g MgI$_2$ | 1.24 ppm strong |
| 2 g AC + 5 g Mg + 8.3 g KH + 5 g MgH$_2$ + 4.35 g LiBr | 1.21 ppm weak |
| 12 g TiC + 3 g Mg + 3.32 g KH + 2.61 g LiBr | 1.22 ppm medium |
| 12 g TiC + 3 g Mg + 3.32 g KH + 1 g MgH$_2$ + 2.61 g LiBr | 1.22 ppm, strong and clear |
| 20 g TiC + 5 g Mg + 8.3 g KH + 4.35 g LiBr + 5 g MgH$_2$ | 1.22 ppm strong, -2.51, -2.96 ppm medium |
| 20 g TiC + 5 g Mg + 8.3 g KH 4.35 g LiBr | 1.22 ppm |
| 20 g AC + 5 g Mg + 8.3 gKH + 4.35 g LiBr | 1.25 ppm weak |
| 3 g NaH + 3 g Mg + 12 g TiC | 1.22 ppm much stronger |
| 20 g AC + 5 g Mg + 8.3 g KH + 4.35 g LiBr | 1.21 ppm medium |
| 20 g AC + 10 g Mg + 10 g NaH | 1.20 ppm medium |
| 20 g TiC + 5 g Mg + 5 g NaH | 1.21 ppm strong |
| 12 g TiC + 3 g Mg + 3 g NaH | 1.21 ppm medium |
| 12 g TiC + 3 g Mg + 3 g NaH | 1.22 ppm medium |
| 4.65 g KH + 5 g Mg + 20 g AC | 1.21 ppm |
| 2.5 g NaH + 2.5 g Mg + 20 g TiC | 1.22 ppm weak |
| 20 g TiC + 5 g Mg + 5 g NaH | 1.21 ppm strong |
| 2 g NaH + 5 g Mg + 20 g TiC | 1.22 ppm medium |
| 12 g TiC + 3 g Mg + 4.98 g KH | 1.21 ppm weak |
| 2.61 g LiBr + 4.98 g KH + 3 g Mg + 12 g TiC | 1.21 ppm weak |
| 4.65 g KH + 2.5 g Mg + 20 g AC | 1.21 ppm medium |
| 4.65 g KH + 2.5 g Mg + 20 g AC | 1.22 ppm medium |
| 8.3 g KH + 5 g Mg + 20 g AC | 1.21 ppm medium |
| 12 g TiC + 3 g MgH$_2$ + 4.98 K | 1.21 ppm weak |
| 3 g NaH + 3 g Mg + 12 g TiC | 1.20 ppm |
| 12 g TiC + 5 g Ca + 3 g MgB$_2$ + 3 g NaH | 1.20 ppm |
| 5 g NaH + 5 g Mg + 20 g AC + 10.78 g FeBr$_2$ | 1.22 ppm weak |
| 8 g AC + 3.32 g KH +0.8 g Mg | 1.21 ppm strong |
| 12 g TiC + 3 g Mg + 3 g Gd + 3 g NaH | 1.21 ppm, strong |
| 5 g NaH + 5 g Mg + 20 g TiC + 19.54 g BaI$_2$ | 1.21 ppm, medium |
| 12 g TiC + 3 g Mg + 3 g Sr + 3 g NaH | 1.21 ppm strong |
| 12 g TiC + 3 g Mg + 3 g Ba + 3 g NaH | 1.21 ppm medium |
| 12 g TiC + 3 g Mg + 3 g NaH | 1.21 ppm clear |
| 12 g TiC + 3 g Mg + 5 g Ca + 1 g NaH | 1.21 ppm |
| 5 g NaH + 5 g MgH$_2$ + 20 g AC | 1.21 ppm much strong clear |
| 12 g TiC + 5 g Ca + 3 g NaH | 1.22 ppm strong clear |
| 3 g Mg + 3 g NaH | 1.21 ppm, clear |
| 3 g NaH + 3 g Mg + 12 g TiC | 1.20 ppm strong |
| 5 g NaH + 5 g Mg + 4.35 g LiBr + 20 g TiC | 1.22 ppm |
| 20 g TiC + 5 g Mg + 1.6 g KH + 14.85 g BaBr$_2$ | 1.24 ppm |
| 3 g NaH + 12 g TiC + 3 g Mg | 1.21 ppm medium |
| 12 g TiC + 5 g Ca + 4.98 g KH + 3.57 g KBr | 1.22 ppm weak |
| 3.32 g KH + 2 g Mg + 8 g TiC + 1.9 g MgCl$_2$ | 1.21 ppm medium |
| 20 g Cu + 5 g Mg + 8.3 g KH + 14.85 g BaBr$_2$ | 1.22 ppm strong |

(continued)

| Reactants | $H_2(1/4)$ or $H^-(1/4)$ Peak Position and Intensity |
|---|---|
| 5 g NaH + 5 g Mg + 20 g TiC + 2 g Ca | 1.21 ppm Strong |
| 8 g TiC + 2 g NaH + 2 g Mg + 0.8 g Ca | 1.21 ppm, strong, clear |
| 83 g KH + 50 g Mg + 20 g TiC + 47.5 g $MgCl_2$ | 1.22 ppm weak |
| 1.56 g $CaF_2$ + 3.32 g KH + 2 g Mg + 8 g Cr | 1.24 ppm, |
| 8 g TiC + 2 g Mg + 2 g NaH + 0.8 g Ca | 1.21 ppm strong |
| 10 g NaH + 10 g Mg + 40 g TiC + 29.7 g $BaBr_2$ | 1.25 ppm |
| 1.66 g KH + 1 g Mg pow + 3.92 g $EuBr_3$ | 1.22 ppm strong |
| 1.66 g KH + 1 g Mg pow. + 3.92 g $EuBr_3$ | 1.22 ppm strong |
| 1.66 g KH + 1 g Mg pow. + 1g AC + 3.92 $EuBr_3$ | 1.22 ppm strong |
| 1.66 g KH + 1 g Mg pow. + 1 g AC + 3.92 $EuBr_3$ | 1.22 ppm strong |
| 1.66 g KH + 1 g Mg pow. + 1g AC + 3.92 $EuBr_3$ | 1.22 ppm strong |
| 1.66 g KH + 1 g Mg pow. + 1g AC + 3.92 $EuBr_3$ | 1.22 ppm, strong, -0.1 ppm |
| 1.66 g KH + 1 g Mg pow. + 0.5 g AC + 3.92 $EuBr_3$ | 1.22 ppm, strong |
| 1.66 g KH + 1 g Mg pow. + 0.5 g AC + 3.92 $EuBr_3$ | 1.22 ppm, very strong, clear |
| 20 g $YC_2$ + 5 g Mg + 8.3 g KH + 4.75 g $MgCl_2$ | 1.21 ppm weak |
| 8 g Mn + 2 g Mg + 3.32 g KH + 1.9 g $MgCl_2$ | 1.22 ppm |
| 8 g $YC_2$ + 2 g Mg + 3.32 g KH + 5.94 g $BaBr_2$ | 1.22 ppm |
| 3.32 g KH + 2 g Mg + 8 g AC + 1.24 g $MgF_2$ | 1.22 ppm |
| 20 g $YC_2$ + 5 g Mg + 8.3 g KH + 14.85 g $BaBr_2$ | 1.22 ppm |
| 8.3 g KH + 5 g Mg + 20 g TiC + 1.55 g $MgF_2$ + 1.94 g $CaF_2$ | - 3.72 ppm, board[a] |
| 8.3 g KH + 5 g Mg + 20 g $YC_2$ + 3.1 g $MgF_2$ | -4.07 ppm, weak[a] |
| 8.3 g KH + 5 g Mg+ 20 g $YC_2$ + 4.75 g $MgCl_2$ | 1.21 ppm peak |
| 20 g AC + 5 g Mg + 8.3 g KH + 15.6 g $EuBr_2$ | 1.22 ppm peak |
| 20 g YC2 + 5 g Mg + 8.3 g KH + 15.6 g $EuBr_2$ | 1.22 ppm peak, clear |
| 8.3 g KH + 5 g Mg + 20 g TiC + 17.1 g $SrI_2$ | 1.22 ppm peak |
| 8.3 g KH + 5 g Mg + 20 g TiC + 13. 9g $MgI_2$ | 1.22 ppm peak, clear |
| 3.32 g KH + 2 g Mg + 8 g TiC + 6.18 g $MnI_2$ | 1.24 ppm peak |
| 8 g $GdB_6$ + 2 g Mg + 3.32 g KH + 1.9 g $MgCl_2$ | 1.22 ppm peak |
| 20 g TiC + 5 g Mg + 8.3 g KH + 8.3 g KI | 1.22 ppm peak |
| 8.3 g KH + 5 g Mg + 20 g WC + 14.85 g $BaBr_2$ | 1.22 ppm peak |
| 8 g TiC + 2 g Sr + 3.32 g KH + 6.24 g $EuBr_2$ | 1.22 ppm weak |
| 1.66 g KH + 1 g $MgH_2$ + 4 g AC + 0.87 g LiBr / 380 C | 1.22 ppm strong |
| 3.32 g KH + 2 g $MgH_2$ + 8 g AC + 1.74 g LiBr / 330 C | 1.22 ppm, -2.51 and -2.94 ppm peak |
| 8 g $YC_2$ + 2 g Mg + 3.32 g KH + 6.24 g $EuBr_2$ | 1.25 ppm |
| 4 g Si + 2 g Mg + 3,32 g KH + 6.24 g $EuBr_2$ | 1.25 ppm peak clear |
| 8.3 g KH + 5 g Mg + 20 g MgO + 10.4 g $BaCl_2$ | 1.21 ppm, -3.86 ppm weak |
| 8 g TiC + 2 g Mg + 3.32 g KH + 5.94 g $BaBr_2$ (blender) | 1.22 ppm peak |
| 8 g TiC + 2 g Mg + 3.32 g KH + 5.88 g $CaI_2$ + 0.4 g MgO | 1.22 ppm peak |
| 8 g TiC + 2 g Mg + 3.32 g KH + 5.88 g $CaI_2$ + 1.04 g SrO | 1.22 ppm peak |
| 3.32 g KH + 2 g Mg + 8 g AC + 0.84 g LiCl / 330 C | 1.21 ppm strong, -3.85 ppm |
| 16.6 g KH + 10 g Mg + 40 g TiC + 38 g $BaI_2$ | 1.23 ppm peak |
| 8.3 g AC + 2 g Sr + 2 g NaH + 6.24 g $EuBr_2$ | 1.22 ppm clear |
| 10 g NaH + 10 g Mg+ 40 g TiC + 38 g $BaI_2$ | 1.24 ppm |
| 8 g AC + 2 g Mg + 3.32 g KH + 6.24 g $EuBr_2$ | 1.22 ppm peak |
| 8 g AC + 2 g Mg + 2 g NaH + 7.84 g $EuBr_3$ | 1.23 ppm peak |
| 20 g TiC + 5 g Mg + 5 g NaH + 3.9 g $CaF_2$ | 1.21 ppm peak |
| 4.16 g $BaCl_2$ + 3.32 g KH + 3.33 g Ca + 8 g TiC | 1.21 ppm weak |
| 8 g AC + 2 g Sr + 3.32 g KH + 6.24 g $EuBr_2$ | 1.21, -0.11 ppm strong |
| 8 g AC + 2 g Mg + 3.32 g KH + 6.24 g $EuBr_2$ + 0.005 mol $H_2O$ in PP vial | 1.22 ppm strong |

(continued)

| Reactants | $H_2(1/4)$ or $H^-(1/4)$ Peak Position and Intensity |
|---|---|
| 8 g AC + 2 g Mg + 3.32 g KH + 7.84 g EuBr$_3$ | 1.22, -0.11 ppm strong |
| 8 g AC + 2 g Ca + 2 g NaH + 6.24 g EuBr$_2$ | 1.23 ppm strong and clear |
| 8 g AC + 2 g Ca + 3.32 g KH + 6.24 g EuBr$_2$ | 1.22 ppm |
| 3.32 g KH + 2 g Mg+ 8 g AC + 1.74 g LiBr | 1.21 ppm strong, -3.85 ppm weak |
| 8.3 g KH + 5 g Mg + 20 g AC + 4.35 g LiBr | 1.21 ppm strong, -3.85 ppm weak |
| 3.32 g KH + 2 g Mg + 8 g AC + 1.74 g LiBr | 1.21 ppm strong, -0.21, -2.5, -3.0 ppm weak |
| 8.3 g KH + 5 g Mg + 20 g AC + 4.35 g LiBr | 1.21, -2.5 ppm (weak) |
| 3.32 g KH + 2 g Mg + 8 g AC + 1.74 g LiBr | 1.21 ppm strong |
| 8.3 g KH + 5 g Mg + 20 g AC + 4.35 g LiBr | 1.22, -2.51, -2.93 ppm |
| 3.32 g KH + 2 g Mg + 8 g TiC + 6-18 g MnI$_2$ | 1.24 ppm |
| 5 g NaH + 5 g Mg + 20 g In + 14.85 g BaBr$_2$ | 1.25 ppm |
| 4 g Al$_4$C$_3$ + 1 g Mg + 1.66 g KH + 3.79 g SnI$_2$ | 1.25 ppm |
| KHS | strong -3.71 ppm |
| 4 g Cr$_3$C$_2$ + 1 g Mg + 1.66 g KH + 2.23 g Mg$_3$As$_2$ | 1.22 ppm, -2.44, -2.49 ppm |
| 4 g Ag + 1 g Mg + 1.66 g KH + 2.23 g Mg$_3$As$_2$ | 1.22 ppm, -2.44 ppm |
| 4 g Cr + 1 g Mg + 1.66 g KH + 2.23 g Mg$_3$As$_2$ | 1.22 ppm, -2.44 ppm |
| 3.32 g KH + 2 g Mg + 8 g TiC + 6.18 g MnI$_2$ | 1.24 ppm |
| 5 g NaH + 5 g Mg H$_2$ + 20 g TiC + 15.45 g MnI$_2$ | 1.24 ppm |
| 8.3 g KH + 5 g Mg + 20 g Mn + 11.15 g Mg$_3$As$_2$ | 1.22 ppm, -2.44 ppm |
| Li$_2$S | -3.85 |
| 3.32 g KH + 2 g Mg + 8 g TiC + 6.18 g MnI$_2$ | 1.24 ppm |
| 4 g AC 3-7 + 1 g MgH$_2$ + 1.66 g KH + 2.23 g Mg$_3$As$_2$ | 1.22 ppm, -2.44, -2.49 ppm |
| 8.3 g KH + 5 g Mg + 20 g YC$_2$ + 14.85 g BaBr$_2$ | 1.23 ppm |
| 8.3 g KH + 5 g Mg+ 20 g TiC + 15.6 g EuBr$_2$ | 1.23 ppm, -0.11 ppm |
| 2.97 g BaBr$_2$ + 1.66 g KH + 1 g Mg + 4 g YC$_2$ | 1.25 ppm |
| 20 g TiC + 5 g Mg + 8.3 g KH + 2.05 g AlN | 1.22 ppm, clear |
| 3 g NaH + 11.1 g Sr + 12 g AC + 8.4 g SnBr$_2$ | 1.22 ppm, clear |
| 1 g NaH + 1 g MgH$_2$ + 4 g AC + 2.2 g NiBr$_2$ | 1.23 ppm, clear |
| 3 g NaH + 3 g Mg pow. + 12 g AC + 8.4 g SnBr$_2$ | 1.25 ppm, clear |
| 4 g Co nanopow. + 1 g Mg + 1.66 g KH + 1.82 g Ca$_3$P$_2$ | 1.22 ppm strong and clear |
| 1.5 g InCl + 1.66 g KH + 1 g Mg + 4 g YC$_2$ | 1.22 ppm strong |
| 20 g TiC + 5 g Mg + 8.3 g KH + 2.05 g AlN | 1.21 ppm strong |
| 8.3 g KH + 5 g Mg + 20 g TiC + 10.4 g BaCl$_2$ | 1.22 ppm |
| 20 g AC + 5 g Mg + 8.3 g KH + 4.35 g LiBr | 1.22, -2.51, -2.93 ppm |
| 5 g KH + 5 g Mg + 20 g CA + 4.35 g LiBr | 1.22, -2.51, -2.93 ppm |
| 5 g NaH + 5 g Mg + 20 g TiC + 14.85 g BaBr$_2$ | 1.24 ppm |
| 20 g TiC + 5 g Mg + 8.3 g KH + 9.1 g Ca$_3$P$_2$ | 1.22 ppm strong |
| 20 g TiC + 5 g Mg + 8.3 g KH + 14.85 BaBr$_2$ | 1.22 ppm |
| 20 g TiC + 5 g Mg + 8.3 g KH + 3.9 g CrB$_2$ | 1.23 ppm |
| 1 g NaH + 1 g MgH$_2$ + 4 g CA + 0.01 mol SF$_6$ | with O$_2$, No -3.85 ppm |
| 20 g AC + 5 g Mg + 8.3 g KH + 9.1 g Ca$_3$P$_2$ | 1.22 ppm |
| 4 g AC + 1 g Mg + 1 g NaH + 2.23 g Mg$_3$As$_2$ | 1.21 ppm strong |
| 4 g AC + 1 g Mg + 1.66 g KH + 3.6 g PdI$_2$ | 1.22 ppm |
| 4 g Pt/C + 1 g Mg + 1 g NaH + 2.97 g BaBr$_2$ | 1.23 ppm |
| 1 g NaH + 1 g MgH$_2$ + 4 g CA + 0.01 mol SF$_6$ | strong -3.85 ppm |
| 20 g AC + 5 g Mg + 5 g NaH + 6.1 g RbCl | 1.21 ppm |
| 20 g AC + 5 g Mg + 8.3 g KH + 3.7 g CrB$_2$ | 1.22 ppm strong and clear |
| 4 g AC + 1 g Mg + 1 g NaH + 4.49 g PtI$_2$ | 1.22 ppm |
| 4 g AC + 1 g Mg + 1.66 g KH + 3.55 g PtBr$_2$ | 1.24 ppm |
| 0.42 g LiCl + 1.66 g KH + 1 g Mg + 4 g AC | -2.48 ppm |

146

(continued)

| Reactants | $H_2(1/4)$ or $H^-(1/4)$ Peak Position and Intensity |
|---|---|
| 8.3 g KH + 5.0 g Mg + 20 g CA + 9.36 g AgCl | 1.22 ppm strong and -3.85 ppm weak |
| 8.3 g KH + 5 g Mg + 20 g CA + 8.4 g $Y_2O_3$ | 1.23 ppm |
| 4 g AC + 1 g Mg + 1.66 g KH + 4.49 g $PtI_2$ | 1.23 ppm |

[a] DMSO-d6 solvent

## C. Exemplary Regeneration Reactions

Alkaline earth or lithium halides were formed by reacting an alkaline earth metal or lithium hydride (or lithium) with the corresponding alkali halide. The reactant loadings, reaction conditions, and XRD results are given in Table 4. Typically, a two-to-one molar mixture of alkali halide and alkaline earth metal or a one-to-one molar mixture of alkali halide and Li or LiH were placed in the bottom of a crucible made with a ~25.4 cm long, 1.27-1.9 cm OD stainless steel (SS) tube (open at one end) in a 2.54 cm OD vacuum-tight quartz tube (open at one end). The open end of the SS tube was placed about ~2.54 cm outside of the furnace such that any alkali metal formed during the reaction cooled and condensed outside the heating zone to avoid any corrosion reaction between the alkali metal and quartz tube. The setup was oriented horizontally to increase the surface area of the heated chemicals. The reaction was run at 700-850 °C for 30 minutes either under vacuum, or under 1 atm of Ar gas followed by evacuating the alkali metal for 30 minutes at a similar temperature. In another setup, the reactants were placed in the SS crucible, and the melt was sparged (10 sccm) with dry Ar for mixing. The Ar was supplied through a needle having its opening at the bottom of the melt. Alkali metal was evaporated from the hot zone. After reaction, the reactor was cooled down to room temperature and transferred to a glove box for product collection. XRD was used to identify the product. The sample was prepared in a glove box by pulverizing the product and loading it into a Panalytical holder that was sealed with a plastic cover film. The reactant amounts, temperature, duration, and XRD results are given in TABLE 4 demonstrating that the halide hydride exchange reaction is thermally reversible.

Table 4. Reactant amounts, temperature, duration, and XRD results of regeneration reactions. Oxide was from pan XRD holder air leak. 7

| Regeneration Reactants | XRD (wt %) | Notes |
|---|---|---|
| | | |
| 4.8g KF + 1.0g Mg, SS crucible, 750°C, 1h, vacuum. | KF 0.8 $\pm$ 0.1% (>1,000 Å) KMgF$_3$ 93.0 $\pm$ 0.8% (>1,000 Å) K2MgF$_4$ 3.9 $\pm$ 0.2% (>1,000 Å) MgF$_2$ 2.3 $\pm$ 0.2% (556 A) | 3.4g grey crystalline product. |
| | | |
| 3.5g KF + 1.2g Ca; SS crucible, 870°C, 2 h, vacuum | KCaF$_3$ 86.8 $\pm$ 1.3% (>1,000 Å) CaF$_2$ 11.6 $\pm$ 0.2% (>1,000Å) KF 1.4 $\pm$ 0.2% (203 Å) K 0.2 $\pm$ 0.1% (>1,000Å) | 2.4g product. |
| | | |
| 6.0g (0.080 mole) KCl + 1.6g (0.040 mole) Ca in SS crucible at 550°C at under vacuum for 1 hour. | KCl 20.5 $\pm$ 0.3% (564 Å) KCaCl$_3$ 79.5 $\pm$ 1.0% (514 A) | |
| | | |

(continued)

| Regeneration Reactants | XRD (wt %) | Notes |
|---|---|---|
| 0.84g Ca + 5.0g KBr, 730°C, 3h, vacuum. | $CaBr_2$ 87.0 $\pm$ 1.1% (814 Å)<br>Ca 4.5 $\pm$ 0.1% (308 Å)<br>CaBrH 1.8 $\pm$ 0.2% (904 Å)<br><br>KOH 6.7 $\pm$ 0.1% (922 A) | 4.0g white solid, 1.5g K deposit |
| | | |
| 2.35g Sr + 4.00g KCl, 800°C, 3h, vacuum | $SrCl_2$ ~50% (969 A)<br>$KSr_2Cl_5$ ~37% (>1,000 Å)<br>KCl ~ 1% (320 Å)<br>$Sr_4OCl_6$ ~12% (681 Å) | |
| 4.0g KCl + 2.35g Sr, SS tube, 750°C, 3h, vacuum | $KSr_2Cl_5$ 86% (>1,000 Å)<br>$Sr_4OCl_6$ 11% (>1,000 Å)<br>SrO 3% (>1,000 A) | 2.1 g K, ~2.0g white solid. |
| | | |
| 1.3g Sr + 3.5g KBr; 780C, 30 min, I atm Ar; 780C, 30 min, vacuum; | Major: $SrBr_2$ (307 Å)<br>Minor:<br>Trace: Unknown (234 A) | 2.8g light purple powder. |
| 7.1g (0.060 mol) KBr+ 2.6g (0.030 mole) Sr in SS crucible at 780 C at under 1 atm Ar for 0.5 hour. Then evacuated to vacuum 40 min | Major: $SrBr_2$ (> 1,000 Å)<br>Minor: (KBr)(SrBr2)2 (689 A) | 5.0g light purple crystals |
| 7.1g (0.060 mol) KBr + 2.6g (0.030 mole) Sr in SS crucible at 780°C at under vacuum for 0.5 hour. | $SrBr_2$ 92.3 $\pm$ 1.4% (>1,000 Å)<br>SrO 2.1 $\pm$ 0.1% (736 Å)<br>$Sr_4OBr_6$ 5.6 $\pm$ 0.3% (332 Å) | 2.0 g, purple colored crystalline. |
| 2.5g Sr + 8.0g KI, 690°C, 3h, vacuum | $KSr_2I_5$ ~72% (476 A)<br>$SrI_2$ ~28% (473 A) | |
| | | |
| 3.68g Ba + 4.00g KCl, 780C, 1 atm Ar, 30 min; 780C, vacuum, 30 min; 2.8 product, white solid | $BaCl_2$ 81.5 $\pm$ 1.2% (446 A)<br>$BaCl_2(H_2O)_2$ 15.9 $\pm$ 0.2% (912 Å)<br>KCl 1.5 $\pm$ 0.2% (>1,000 Å)<br>K 1.1 $\pm$ 0.2% (>1,000 A) | 2.8g white powder. |
| | | |
| 2.2g Ba + 4.1 g KBr + 1.0g Mg, 3.65g SS wool, in SS vessel, Ar was bubbled through the chemical (10 sccm) | Major: $BaBr_2$ (741 Å)<br>Unknown (300 A)<br>Minor: HBr (305 Å) | 1.5g product was collected. |
| 2.2g Ba + 4.0g KBr + 1.0g Mg + 1.0g TiC, 750°C, 2h, vacuum | Major: Unknown (>1,000 A) $BaBr_2$ (698 A)<br>Minor: TiC (379 Å)<br><br>$Ba_4OBr_6$ (548 Å) | a lot K deposit, 5.5g black/grey powder collected in SS crucible. |

(continued)

| Regeneration Reactants | XRD (wt %) | Notes |
|---|---|---|
| 2.2g Ba + 4.1g KBr + 1.5g TiC → BaBr$_2$ + K +TiC reaction.750°C, 2h, vacuum | BaBr$_2$ 16.4 ± 0.6% (332 A)<br>Ba$_4$OBr$_6$ 23.4 ± 0.4% (610 Å)<br>KBr 42.5 ± 0.6% (794 A)<br>TiC 17.7 ± 0.6% (414 Å) | 3.0g sample collected |
| 2.3g Ba + 4g KBr, 750°C, 1h, vacuum | Major: BaBr$_2$ (450Å)<br>Unknown (265 A)<br>Minor: Ba$_4$OBr$_6$ (428 Å) | 3.6g sample collected. |
| 4.3g NaBr + 2.8g Ba, 750°C, 1h, vacuum, SS tube | BaBr$_2$ 59.4 ± 0.6% (519 A)<br>NaBr 40.6 ± 0.5% (407 Å) | 2 g grey crystalline |
| 6.6g KI + 2.6g Ba, SS crucible, 750°C, 1h, vacuum | B$_8$I$_2$ 53.5 ± 0.8% (729 A)<br>KI 8.0 ± 0.5% (468Å)<br>Ba$_4$I$_6$O 33.1 ± 0.6% (>1,000 Å)<br>K$_3$IO$_5$ 5.4 ± 0.6% (>1,000 A) | 3.6g sample collected. |
| 4.00g KCl + 0.426g LiH --> LiCl + K + H2; 760C, 1 atm Ar for 30 min; followed by 720C, vacuum, 30 min | LiCl 87.5 ± 1.2% (611 A)<br>KCl 9.6 ± 0.4% (326 A)<br>LiCl(H2O) 2.9 ± 0.2% (209Å) | 1.8g grey powder |
| 0.35g Li + 5.95g KBr -> LiBr + K; 730C, 30 min, 1 atm Ar; followed by 600C, 30 min, evacuation | LiBr 72.9 ± 0.4% (709Å)<br>KBr 27.1 ± 0.2% (652 Å) | 1.5 g product, white solid. |
| 0.544g LiH + 4.00g NaCl 780C, 1atm, Ar, 30 min; followed by 720C, vacuum, 30 min. | LiCl 91.0 ± 1.1% (220 A)<br>NaCl 9.0 ± 0.2% (361 Å) | 2.6g white powder, 1.2g Na. |

Further Embodiments (Emb.):

1. A power source comprising:

a reaction cell for the catalysis of atomic hydrogen;
a reaction vessel;
a vacuum pump;
a source of atomic hydrogen in communication with the reaction vessel;
a source of a hydrogen catalyst comprising a bulk material in communication with the reaction vessel,
the source of at least one of the source of atomic hydrogen and the source of hydrogen catalyst comprising a
reaction mixture of at least one reactant comprising the element or elements that form at least one of the atomic hydrogen and the hydrogen catalyst and at least one other element, whereby at least one of the atomic hydrogen and hydrogen catalyst is formed from the source,
at least one other reactant to cause catalysis; and
a heater for the vessel,
whereby the catalysis of atomic hydrogen releases energy in an amount greater than about 300 kJ per mole of hydrogen.

2. The power source of Emb. 1 wherein the reaction to cause the catalysis reaction comprises a reaction chosen from:

    (i) exothermic reactions;
    (ii) coupled reactions;
    (iii) free radical reactions;
    (iv) oxidation-reduction reactions;
    (v) exchange reactions, and
    (vi) getter, support, or matrix-assisted catalysis reactions.

3. The power source of Emb. 1 wherein the reaction to cause the catalysis reaction comprises a reaction chosen from

    (i) a reaction of the catalyst or source of catalyst and source of hydrogen with a material or compound to form an intercalation compound,
    (ii) at least one of a hydride exchange and a halide exchange between at least two species wherein at least one species is a catalyst or a source of a catalyst to form hydrinos,
    (iii) a hydride exchange between at least two hydrides, at least one metal and at least one hydride, at least two metal hydrides, at least one metal and at least one metal hydride, and other such combinations with the exchange between or involving two or more than two species, and
    (iv) a hydride exchange or halide-hydride exchange reaction wherein the hydride exchange forms a mixed metal hydride.

4. The power source of Emb. I wherein the catalyst is an atom or ion of at least one of a bulk material, a metal, a metal of an intermetalic compound, a.supported metal, and a compound,
wherein at least one electron of the atom or ion accepts about an integer multiple of 27.2 eV from atomic hydrogen to form hydrinos.

5. The power source of Emb. 1 wherein the catalyst comprises the combination of molecular hydrogen, atomic hydrogen, or hydride ion, and a species wherein the sum of the ionization of one or more electrons of the species and either the bond energy of $H_2$ (4.478 eV), the ionization energy of H (13.59844 eV), or the ionization energy of $H^-$ (IP=0.754 eV) is about an integer multiple of 27.2 eV.

6. The power source of Emb. 1 further comprising systems and species that perform at least one of the functions of accepting electrons from the ionizing catalyst due to the energy transfer from H, transferring accepted electrons to an electrical circuit for the flow of electrons to at least one of the ground and a path terminating internal to the cell, transferring electrons to at least one of the ground and a species that undergoes reduction to serve as a final electron acceptor or an electron carrier, and
allowing the electron carrier to transfer the electron to the catalyst ion formed during catalysis.

7. A power system comprising:

    (i) a chemical fuel mixture comprising at least two components chosen from: a catalyst or a source of catalyst; atomic hydrogen or a source of atomic hydrogen; reactants to form the catalyst or the source of catalyst and the atomic hydrogen or the source of atomic hydrogen; one or more reactants to initiate the catalysis of atomic hydrogen; and a support to enable the catalysis,
    (ii) at least one thermal system for reversing an exchange reaction to thermally regenerate the fuel from the reaction products comprising a plurality of reaction vessels,
    wherein regeneration reactions comprising reactions that form the initial chemical fuel mixture from the products of the reaction of the mixture are performed in at least one reaction vessel of the plurality in conjunction with the at least one of the other vessels undergoing power reactions,
    the heat from a power-producing vessel flows to at least one vessel that is undergoing regeneration to provide the energy for the thermal regeneration,

the vessels are embedded in a heat transfer medium to achieve the heat flow,
at least one vessel further comprising a vacuum pump and a source of hydrogen, and further comprising two chambers having a temperature difference maintained between a hotter chamber and a colder chamber such that a species preferentially accumulates in the colder chamber,
wherein a hydride reaction is performed in the colder chamber to form at least one initial reactant that is returned to the hotter chamber,
(iii) a heat sink that accepts the heat from the power-producing reaction vessels across a thermal barrier, and
(iv) a power conversion system that comprises a heat engine chosen from a Rankine or Brayton-cycle engine, a turbine, a steam engine, a Stirling engine, and thermoelectric and thermionic converters.

8. The power system of Emb. 7 wherein the plurality of cells comprise at least one multi-cell thermally interacting bundle wherein heat is transferred between the cells and to the periphery to the heat sink.

9. The power system of Emb. 8 wherein the thermally regenerative reactants comprise

(i) at least one catalyst or a source of catalyst chosen from the alkali hydrides;
(ii) a source of hydrogen chosen from an alkali hydride;
(iii) at least one oxidant chosen from

(a) an alkaline earth halide;
(b) an alkali halide;

(iv) atleast one reductant chosen from Mg and $MgH_2$, Ca, CaH2, and Li, and
(v) at least one support chosen from TiC, WC, TiCN, $TiB_2$, $Cr_3C_2$, and $Ti_3SiC_2$.

10. A power system comprising:

(i) a chemical fuel mixture comprising at least two components chosen from: a catalyst or a source of catalyst; atomic hydrogen or a source of atomic hydrogen; reactants to form the catalyst or source of catalyst and the atomic hydrogen or a source of atomic hydrogen; one or more reactants to initiate the catalysis of atomic hydrogen; and a support to enable the catalysis,
(ii) a thermal system for reversing an exchange reaction to thermally regenerate the fuel from the reaction products comprising at least one reaction vessel,
wherein regeneration reactions comprising reactions that form the initial chemical fuel mixture from the products of the reaction of the mixture are performed in the at least one reaction vessel in conjunction with power reactions, the heat from power-producing reactions flows to regeneration reactions to provide the energy for the thermal regeneration,
at least one vessel is insulated on one section and in contact with a thermally conductive medium on another section to achieve a heat gradient between the hotter and colder sections, respectively, of the vessel,
at least one vessel further comprising a vacuum pump and a source of hydrogen,
wherein a hydride reaction is performed in the colder section to form at least one initial reactant that is returned to the hotter section,
(iii) a heat sink that accepts the heat from the power-producing reactions transferred through the thermally conductive medium and optionally across at least one thermal barrier, and
(iv) a power conversion system that comprises a heat engine selected from a Rankine or Brayton-cycle engine, a turbine, a steam engine, a Stirling engine, and thermoelectric and thermionic converters.

11. The power system of Emb. 10 comprising a multi-tube reactor system to continuously generate power comprising a plurality of repeating planar layers of insulation, reactor cell, thermally conductive medium, and heat exchanger or collector.

12. The power system of Emb.11 wherein at least one cell is a circular tube, at least one cell is horizontally oriented with a dead space along the longitudinal axis of the cell that allows the alkali metal vapor to escape from the reactants along the bottom of the cell during continuous regeneration,
and the heat exchanger is parallel with the cell and accepts heat to maintain a cell thermal gradient.

13. The power system of Emb. 10 wherein the thermally regenerative reactants comprise

(i) at least one catalyst or a source of catalyst chosen from the alkali hydrides;
(ii) a source of hydrogen chosen from an alkali hydride;
(iii) at least one oxidant chosen from

(a) an alkaline earth halide;
(b) an alkali halide;

(iv) at least one reductant chosen from Mg and $MgH_2$, Ca, CaH2, and Li, and
(v) at least one support chosen from TiC, WC, TiCN, $TiB_2$, $Cr_3C_2$, and $Ti_3SiC_2$.

14. A battery or fuel cell system that generates an electromotive force (EMF) from the catalytic reaction of hydrogen to lower energy (hydrino) states providing direct conversion of the energy released from the hydrino reaction into electricity comprising
reactants that constitute hydrino reactants during cell operation with separate electron flow and ion mass transport,
a cathode compartment comprising a cathode,
an anode compartment comprising an anode, and
a source of hydrogen.

15. A battery or fuel cell system of Emb. 14 wherein the reactants comprise at least two components chosen from:
a catalyst or a source of catalyst; atomic hydrogen or a source of atomic hydrogen; reactants to form the catalysts or the source of catalyst and the atomic hydrogen or the source of atomic hydrogen; one or more reactants to initiate the catalysis of atomic hydrogen; and a support to enable the catalysis.

16. The battery or fuel cell system of Emb. 15 wherein the reaction mixtures and reactions to initiate the hydrino reaction cause electrical power to be developed by the reaction of hydrogen to form hydrinos wherein due to oxidation-reduction cell half reactions, the hydrino-producing reaction mixture is constituted with the migration of electrons through an external circuit and ion mass transport through a separate path to complete an electrical circuit.

17. The battery or fuel cell system of Emb. 16 wherein at least one of
atomic hydrogen and the hydrogen catalyst is formed by a reaction of the reaction mixture,
and one reactant that by virtue of it undergoing a reaction causes the catalysis to be active,
wherein the reaction to cause the catalysis reaction comprises a reaction chosen from:

(i) exothermic reactions;
(ii) coupled reactions;
(iii) free radical reactions;
(iv) oxidation-reduction reactions;
(v) exchange reactions, and
(vi) getter, support, or matrix-assisted catalysis reactions.

18. The battery or fuel cell system of Emb. 17 wherein at least one of different reactants or the same reactants under different states or conditions are provided in different cell compartments that are connected by separate conduits for electrons and ions to complete an electrical circuit between the compartments.

19. The battery or fuel cell system of Emb. 18 wherein the mass flow provides at least one of the formation of the reaction mixture that reacts to produce hydrinos and the conditions that permit the hydrino reaction to occur at substantial rates,
wherein the hydrino reaction does not occur or does not occur at an appreciable rate in the absence of the electron flow and ion mass transport.

20. The battery or fuel cell system of Emb. 19 wherein at least one of electrical and thermal power gain over that of an applied electrolysis power through the electrodes is produced.

21. The battery or fuel cell system of Emb. 20 wherein the reactants to form hydrinos are at least one of thermally or electrolytically regenerative.

22. The battery or fuel cell system of Emb. 21 wherein the thermally regenerative reactants comprise

(i) at least one catalyst or a source of catalyst chosen from the alkali hydrides;
(ii) a source of hydrogen chosen from an alkali hydride;
(iii) at least one oxidant chosen from

    (a) an alkaline earth halide;
    (b) an alkali halide;
    (c) a rare earth halide;

(iv) at least one reductant chosen from Mg and $MgH_2$, Ca, CaH2, and Li, and
(v) at least one support chosen from TiC, WC, TiCN, $TiB_2$, $Cr_3C_2$, and $Ti_3SiC_2$.

23. The battery or fuel cell system of Emb. 22 wherein the reaction mixture comprising an oxidation-reduction reaction to cause the catalysis reaction comprises:

(i) at least one catalyst chosen from Li, *LiH*, K, *KH, NaH,* Rb, RbH, Cs, and CsH;
(ii) $H_3$ gas, a source of $H_2$ gas, or a hydride;
(iii) at least one oxidant chosen from
metal compounds comprising halides, phosphides, borides, oxides, hydroxide, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, colbalt oxides, tellurium oxides, and oxyanions of halogens, P, B, Si, N, As, S, Te, Sb, C, S, P, Mn, Cr, Co, and Te;
a transition metal, Sn, Ga, In, lead, germanium, alkali metal and alkaline earth metal compound;
$GeF_2$, $GeCl_2$, $GeBr_2$, $GeI_2$, GeO, GeP, GeS, $GeI_4$, and $GeCl_4$, fluorocarbon, *$CF_4$*, $ClCF_3$, chlorocarbon, $CCl_4$, $O_2$, *$MNO_3$*, *$MClO_4$*, *$MO_2$*, *$NF_3$*, *$N_2O$*, NO, $NO_2$, a boron-nitrogen compound such as $B_3N_3H_6$, a sulfur compound such as $SF_6$, *S, $SO_2$*, $SO_3$, $S_2O_5Cl_2$, $F_5SOF$, $M_2S_2O_8$, $S_xX_y$ such as $S_2Cl_2$, $SCl_2$, $S_2Br_2$, or $S_2F_2$, $CS_2$, $SO_xX_y$, $SOCl_2$, $SOF_2$, $SO_2F_2$, $SOBr_2$, $X_xX'_y$, $ClF_5$, $X_xX'_yO_z$, $ClO_2F$, $ClO_2F_2$, $ClOF_3$, $ClO_3F$, $ClO_2F_3$, boron-nitrogen compound, $B_2N_3H_6$, Se, Te, Bi, As, Sb, Bi, $TeX_x$, $TeF_4$, $TeF_6$, $TeO_x$, $TeO_2$, $TeO_3$, $SeX_x$, $SeF_6$, $SeO_x$, $SeO_2$ or $SeO_3$, a tellurium oxide, halide, tellurium compound, $TeO_2$, $TeO_3$, $Te(OH)_6$, $TeBr_2$, $TeCl_2$, $TeBr_4$, $TeCl_4$, $TeF_4$, $TeI_4$, $TeF_6$, CoTe, or NiTe, a selenium compound, a selenium oxide, a selenium halide, a selenium sulfide, $SeO_2$, $SeO_3$, $Se_2Br_2$, $Se_2Cl_2$, $SeBr_4$, $SeCl_4$, $SeF_4$, $SeF_6$, $SeOBr_2$, $SeOCl_2$, $SeOF_2$, $SeO_2F_2$, $SeS_2$, $Se_2S_6$, $Se_4S_4$, or $Se_6S_2$, P, $P_2O_5$, $P_2S_5$, $P_xX_y$, $PF_3$, $PCl_3$, $PBr_3$, $PI_3$, $PF_5$, $PCl_5$, $PBr_4F$, $PCl_4F$, $PO_xX_y$, $POBr_3$, $POI_3$, $POCl_3$ or $POF_3$, $PS_xX_y$, (M is an alkali metal, x, y and z are integers, X and X' are halogen) $PSBr_3$, $PSF_3$, $PSCl_3$, a phosphorous-nitrogen compound, $P_3N_5$, $(Cl_2PN)_3$, $(Cl_2PN)_4$, $(Br_2PN)_x$, an arsenic compound, an arsenic oxide, arsenic halide, arsenic sulfide, arsenic selenide, arsenic telluride, AlAs, $As_2I_4$, $As_2Se$, $As_4S_4$, $AsBr_3$, $AsCl_3$, $AsF_3$, $AsI_3$, $As_2O_3$, $As_2Se_3$, $As_2S_3$, $As_2Te_3$, $AsCl_5$, $AsF_5$, $As_2O_5$, $As_2Se_5$, $As_2S_5$, an antimony compound, an antimony oxide, an antimony halide, an antimony sulfide, an antimony sulfate, an antimony selenide, an antimony arsenide, SbAs, $SbBr_3$, $SbCl_3$, $SbF_3$, $SbI_3$, $Sb_2O_3$, SbOCl, $Sb_2Se_3$, $Sb_2(SO_4)_3$, $Sb_2S_3$, $Sb_2Te_3$, $Sb_2O_4$, $SbCl_5$, $SbF_5$, $SbCl_2F_3$, $Sb_2O_5$, $Sb_2S_5$, a bismuth compound, a bismuth oxide, a bismuth halide, a bismuth sulfide, a bismuth selenide, BiAsO4, $BiBr_3$, $BiCl_3$, $BiF_3$, $BiF_5$, $Bi(OH)_3$, $BiI_3$, $Bi_2O_3$, BiOBr, BiOCl, BiOI, $Bi_2Se_3$, $Bi_2S_3$, $Bi_2Te_3$, $Bi_2O_4$, $SiCl_4$, $SiBr_4$, a transition metal halide, $CrCl_3$, $ZnF_2$, $ZnBr_2$, $ZnI_2$, $MnCl_2$, $MnBr_2$, $MnI_2$, $CoBr_2$, $CoI_2$, $CoCl_2$, $NiCl_2$, $NiBr_2$, $NiF_2$, $FeF_2$, $FeCl_2$, $FeBr_2$, $FeCl_3$, $TiF_3$, CuBr, $CuBr_2$, $VF_3$, $CuCl_2$, a metal halide , $SnF_2$, $SnCl_2$, $SnBr_2$, $SnI_2$, $SnF_4$, $SnCl_4$, $SnBr_4$, $SnI_4$, InF, InCl, InBr, InI, AgCl, AgI, $AlF_3$, $AlBr_3$, $AlI_3$, $YF_3$, $CdCl_2$, $CdBr_2$, $CdI_2$, $InCl_3$, $ZrCl_4$, $NbF_5$, $TaCl_5$, $MoCl_3$, $MoCl_5$, $NbCl_5$, $AsCl_3$, $TiBr_4$, $SeCl_2$, $SeCl_4$, $InF_3$, $InCl_3$, $PbF_4$, $TeI_4$, $WCl_6$, $OsCl_3$, $GaCl_3$, $PtCl_3$, $ReCl_3$, $RhCl_3$, $RuCl_3$, metal oxide, a metal hydroxide, $Y_2O_3$, FeO, $Fe_2O_3$, or NbO, NiO, $Ni_2O_3$, SnO, $SnO_2$, $Ag_2O$, AgO, $Ga_2O$, $As_2O_3$, $SoO_2$, $TeO_2$, $In(OH)_3$, $Sn(OH)_2$, $In(OH)_3$, $Ga(OH)_3$, $Bi(OH)_3$, $CO_2$, $As_2Se_3$, $SF_6$, S, $SbF_3$, $CF_4$, $NF_3$, a metal permanganate, $KMnO_4$, $NaMnO_4$, $P_2O_5$, a metal nitrate, $LiNO_3$, $NaNO_3$, $KNO_3$, a boron halide , $BBr_3$, $BI_3$, a group 13 halide, an indium halide, $InBr_2$, $InCl_2$, $InI_3$, a silver halide, AgCl, AgI, a lead halide, a cadmium halide, a zirconoium halide, a transition metal oxide, a transition metal sulfide, or a transition metal halide (Sc, Ti, V, Cr, Mn, Fe, Co, Ni, Cu, or Zn with F, Cl, Br or I), a second or third transition series halide, $YF_3$, second or third transition series oxide, second or third transition series sulfide, $Y_2S_3$, a halide of Y, Zr, Nb, Mo, Tc, Ag, Cd, Hf, Ta, W, Os, such as $NbX_3$, $NbX_5$, or $TaX_5$, $Li_2S$, ZnS, FeS, NiS, MnS, $Cu_2S$, CuS, SnS, an alkaline earth halide, $BaBr_2$, $BaCl_2$, $BaI_2$, $SrBr_2$, $SrI_2$, $CaBr_2$, $CaI_3$, $MgBr_2$, or $MgI_2$, a rare earth halide, $EuBr_3$, $LaF_3$, $LaBr_3$, $CeBr_3$, $GdF_3$, $GdBr_3$, a rare earth halide with the metal in the II state, $CeI_2$, $EuF_2$, $EuCl_2$, $EuBr_2$, $EuI_2$, $DyI_2$, $NdI_2$, $SmI_2$, $YbI_2$, and $TmI_2$, a metal boride, a europium boride, an $MB_2$ boride, $CrB_2$, $TiB_2$, $MgB_2$, $ZrB_2$, $GdB_2$, an alkali halide, LiCl, RbCl, or CsI, a metal phosphide, as $Ca_3P_2$,

a noble metal halide, a noble metal oxide, a noble metal sulfide, $PtCl_2$, $PtBr_2$, $PtI_2$, $PLCl_4$, $PdCl_2$, $PbBr_2$, $PbI_2$, a rare earth sulfide, CeS, a La halide, a Gd halide, a metal and an anion, $Na_2TeO_4$, $Na_2TeO_3$, $Co(CN)_2$, CoSb, CoAs, $Co_2P$, CoO, CoSe, CoTe, NiSb, NiAs, NiSe, $Ni_2Si$, MgSe, a rare earth telluride, EuTe, a rare earth selenide, EuSe, a rare earth nitride, EuN, a metal nitride, AlN, GdN, $Mg_3N_2$, a compound containing at least two atoms chosen from oxygen and different halogen atoms, $F_2O$, $Cl_2O$, $ClO_2$, $Cl_2O_6$, $Cl_2O_7$, ClF, $ClF_3$, $ClOF_3$, $ClF_5$, $ClO_2F$, $ClO_2F_3$, $ClO_3F$, $BrF_3$, BrF5, $I_2O_5$, IBr, ICl, $ICl_3$, IF, $IF_3$, $IF_5$, $IF_7$, a metal second or third transition series halide, $OsF_6$, $PtF_6$, or $IrF_6$, a compound that can form a metal upon reduction, a metal hydride, rare earth hydride, alkaline earth hydride, or alkali hydride;

(iv) at least one reductant chosen from a metal, an alkali, alkaline earth, transition, second and third series transition, and rare earth metals, *Al, Mg, MgH$_2$, Si,* La, B, Zr, and Ti powders, and $H_2$, and

(v) at least one electrically conducting support chosen from AC, 1% Pt or Pd on carbon (Pt/C, Pd/C), a carbide, TiC, and WC.

24. The battery or fuel cell system of Emb. 23 wherein the reaction mixture comprising an oxidation-reduction reaction to cause the catalysis reaction comprises:

(i) at least one catalyst or a source of catalyst comprising a metal or a hydride from the Group I elements;
(ii) at least one source of hydrogen comprising $H_2$ gas or a source of $H_2$ gas, or a hydride;
(iii) at least one oxidant comprising an atom or ion or a compound comprising at least one of the elements from Groups 13, 14, 15, 16, and 17 chosen from F, Cl, Br, I, B, C, N, O, Al, Si, P, S, Se, and Te;
(iv) at least one reductant comprising an element or hydride chosen from Mg, $MgH_2$, Al, Si, B, Zr, and a rare earth metal; and
(v) at least one electrically conductive support chosen from carbon, AC, graphene, carbon impregnated with a metal, Pt/C, Pd/C, a carbide, TiC, and WC.

25. The battery or fuel cell system of Emb. 24 wherein the reaction mixture comprising an oxidation-reduction reaction to cause the catalysis reaction comprises:

(i) at least one catalyst or a source of catalyst comprising a metal or a hydride from the Group I elements;
(ii) at least one source of hydrogen comprising $H_2$ gas or a source of $H_2$ gas, or a hydride;
(iii) at least one oxidant comprising a halide, oxide, or sulfide compound of the elements chosen from Groups IA, IIA, 3d, 4d, 5d, 6d, 7d, 8d, 9d, 10d, 11d, 12d, and lanthanides;
(iv) at least one reductant comprising an element or hydride chosen from Mg, $MgH_2$, Al, Si, B, Zr, and a rare earth metal; and
(v) at least one electrically conductive support chosen from carbon, AC, graphene, carbon impregnated with a metal such as Pt or Pd/C, a carbide, TiC, and WC.

26. The battery or fuel cell system of Emb. 25 wherein the exchange reaction to cause the catalysis reaction comprises an anion exchange between at least two of the oxidant, reductant, and catalyst wherein the anion is chosen from halide, hydride, oxide, sulfide, nitride, boride, carbide, silicide, arsenide, selenide, telluride, phosphide, nitrate, hydrogen sulfide, carbonate, sulfate, hydrogen sulfate, phosphate, hydrogen phosphate, dihydrogen phosphate, perchlorate, chromate, dichromate, cobalt oxide, and oxyanions.

27. The battery or fuel cell system of Emb. 14, wherein the catalyst is capable of accepting energy from atomic hydrogen in integer units of one of about 27.2 eV $\pm$ 0.5 eV and $\frac{27.2}{2}\, eV \pm 0.5\,\mathrm{eV}$.

28. The battery or fuel cell system of Emb. 14, wherein the catalyst comprises an atom or ion M wherein the ionization of $t$ electrons from the atom or ion M each to a continuum energy level is such that the sum of ionization energies of the $t$ electrons is approximately one of $m \cdot 27.2\ eV$ and $m \cdot \dfrac{27.2}{2}\ eV$ where $m$ is an integer.

29. The battery or fuel cell system of Emb. 14 wherein the catalyst comprised a diatomic molecule MH wherein the breakage of the M-H bond plus the ionization of $t$ electrons from the atom M each to a continuum energy level is such that the sum of the bond energy and ionization energies of the $t$ electrons is approximately one of $m\,X\,27.2\ eV$ and

$$m \cdot \frac{27.2}{2} \, eV \quad \text{where } m \text{ is an integer.}$$

30. The battery or fuel cell system of Emb. 14 wherein the catalyst comprises atoms, ions, and/or molecules chosen from molecules of AlH, BiH, ClH, CoH, GeH, InH, NaH, RuH, SbH, SeH, SiH, SnH, $C_2$, $N_2$, $O_2$, $CO_2$, $NO_2$, and $NO_3$ and atoms or ions of Li, Be, K, Ca, Ti, V, Cr, Mn, Fe, Co, Ni, Cu, Zn, As, Se, Kr, Rb, Sr, Nb, Mo, Pd, Sn, Te, Cs, Ce, Pr, Sm, Gd, Dy, Pb, Pt, Kr, $2K^+$, $He^+$, $Ti^{2+}$, $Na^+$, $Rb^+$, $Sr^+$, $Fe^{3+}$, $Mo^{2+}$, $Mo^{4+}$, $In^{3+}$, $He^+$, $Ar^+$, $Xe^+$, $Ar^{2+}$ and $H^+$, and $Ne^+$ and $H^+$.

## Claims

1. A battery or fuel cell system that generates an electromotive force from the catalytic reaction of a hydrino providing direct conversion of the energy released from the hydrino reaction into electricity comprising:

    reactants that constitute hydrino reactants during cell operation with separate electron flow and ion mass transport,
    a cathode compartment comprising a cathode,
    an anode compartment comprising an anode,
    wherein the reactants comprise,

    (i) at least one catalyst or a source of catalyst chosen from a metal or a hydride from Group I elements;
    (ii) at least one source of hydrogen comprising $H_2$ gas or a source of $H_2$ gas, or a hydride;
    (iii) at least one oxidant chosen from
    metal compounds comprising halides, phosphides, borides, oxides, hydroxide, silicides, nitrides, arsenides, selenides, tellurides, antimonides, carbides, sulfides, hydrides, carbonate, hydrogen carbonate, sulfates, hydrogen sulfates, phosphates, hydrogen phosphates, dihydrogen phosphates, nitrates, nitrites, permanganates, chlorates, perchlorates, chlorites, perchlorites, hypochlorites, bromates, perbromates, bromites, perbromites, iodates, periodates, iodites, periodites, chromates, dichromates, tellurates, selenates, arsenates, silicates, borates, colbalt oxides, tellurium oxides, and oxyanions of halogens, P, B, Si, N, As, S, Te, Sb, C, S, P, Mn, Cr, Co, and Te;
    a transition metal, Sn, Ga, In, lead, germanium, alkali metal and alkaline earth metal compound;
    $GeF_2$, $GeCl_2$, $GeBr_2$, $GeI_2$, GeO, GeP, GeS, $GeI_4$, and $GeCl_4$, fluorocarbon, $CF_4$, $ClCF_3$, chlorocarbon, $CCl_4$, $O_2$, $MNO_3$, $MClO_4$, $MO_2$, $NF_3$, $N_2O$, NO, $NO_2$, a boron-nitrogen compound, $B_3N_3H_6$, a sulfur compound, $SF_6$, S, $SO_2$, $SO_3$, $S_2O_5Cl_2$, $F_5SOF$, $M_2S_2O_8$, $S_xX_y$, $S_2Cl_2$, $SCl_2$, $S_2Br_2$, or $S_2F_2$, $CS_2$, $SO_xX_y$, $SOCl_2$, $SOF_2$, $SO_2F_2$, $SOBr_2$, $X_xX'_y$, $ClF_5$, $X_xX'_yO_z$, $ClO_2F$, $ClO_2F_2$, $ClOF_3$, $ClO_3F$, $ClO_2F_3$, boron-nitrogen compound, $B_3N_3H_6$, Se, Te, Bi, As, Sb, Bi, $TeX_x$, $TeF_4$, $TeF_6$, $TeO_x$, $TeO_2$, $TeO_3$, $SeX_x$, $SeF_6$, $SeO_x$, $SeO_2$ or $SeO_3$, a tellurium oxide, halide, tellurium compound, $TeO_2$, $TeO_3$, $Te(OH)_6$, $TeBr_2$, $TeCl_2$, $TeBr_4$, $TeCl_4$, $TeF_4$, $TeI_4$, $TeF_6$, CoTe, or NiTe, a selenium compound. a selenium oxide, a selenium halide, a selenium sulfide, $SeO_2$, $SeO_3$, $Se_2Br_2$, $Se_2Cl_2$, $SeBr_4$, $SeCl_4$, $SeF_4$, $SeF_6$, $SeOBr_2$, $SeOCl_2$, $SeOF_2$, $SeO_2F_2$, $SeS_2$, $Se_2S_6$, $Se_4S_4$, or $Se_6S_2$, P, $P_2O_5$, $P_2S_5$, $P_xXy$, $PF_3$, $PCl_3$, $PBr_3$, $PI_3$, $PF_5$, $PCl_5$, $PBr_4F$, $PCl_4F$, $PO_xX_y$, $POBr_3$, $POI_3$, $POCl_3$ or $POF_3$, $PS_xX_y$, $M$ is an alkali metal, x, y and z are integers, X and X' are halogen, $PSBr_3$, $PSF_3$, $PSCl_3$, a phosphorous-nitrogen compound, $P_3N_5$, $(Cl_2PN)_3$, $(Cl_2PN)_4$, $(Br_2PN)_x$, an arsenic compound, an arsenic oxide, arsenic halide, arsenic sulfide, arsenic selenide, arsenic telluride, AlAs, $As_2I_4$, $As_2Se$, $As_4S_4$, $AsBr_3$, $AsCl_3$, $AsF_3$, $AsI_3$, $As_2O_3$, $As_2Se_3$, $As_2S_3$, $As_2Te_3$, $AsCl_5$, $AsF_5$, $As_2O_5$, $As_2Se_5$, $As_2S_5$, an antimony compound, an antimony oxide, an antimony halide, an antimony sulfide, an antimony sulfate, an antimony selenide, an antimony arsenide, SbAs, $SbBr_3$, $SbCl_3$, $SbF_3$, $SbI_3$, $Sb_2O_3$, SbOCl, $Sb_2Se_3$, $Sb_2(SO4)_3$, $Sb_2S_3$, $Sb_2Te_3$, $Sb_2O_4$, $SbCl_5$, $SbF_5$, $SbCl_2F_3$, $Sb_2O_5$, $Sb_2S_5$, a bismuth compound, a bismuth oxide, a bismuth halide, a bismuth sulfide, a bismuth selenide, $BiAsO_4$, $BiBr_3$, $BiCl_3$, $BiF_3$, $BiF_5$, $Bi(OH)_3$, $BiI_3$, $Bi_2O_3$, BiOBr, BiOCl, BiOI, $Bi_2Se_3$, $Bi_2S_3$, $Bi_2Te_3$, $Bi_2O_4$, $SiCl_4$, $SiBr_4$, a transition metal halide, $CrCl_3$, $ZnF_2$, $ZnBr_2$, $ZnI_2$, $MnCl_2$, $MnBr_2$, MnI2, $CoBr_2$, $CoI_2$, $CoCl_2$, $NiCl_2$, $NiBr_2$, $NiF_2$, $FeF_2$, $FeCl_2$, $FeBr_2$, $FeCl_3$, $TiF_3$, CuBr, $CuBr_2$, $VF_3$, $CuCl_2$, a metal halide, $SnF_2$, $SnCl_2$, $SnBr_2$, $SnI_2$, $SnF_4$, $SnCl_4$, $SnBr_4$, $SnI_4$, InF, InCl, InBr, InI, AgCl, AgI, $AlF_3$, $AlBr_3$, $AlI_3$, $YF_3$, $CdCl_2$, $CdBr_2$, $CdI_2$, $InCl_3$, $ZrCl_4$, $NbF_5$, $TaCl_5$, $MoCl_3$, $MoCl_5$, $NbCl_5$, $AsCl_3$, $TiBr_4$, $SeCl_2$, $SeCl_4$, $InF_3$, $InCl_3$, $PbF_4$, $TeI_4$, $WCl_6$, $OsCl_3$, $GaCl_3$, $PtCl_3$, $ReCl_3$, $RhCl_3$, $RuCl_3$, metal oxide, a metal hydroxide, $Y_2O_3$, FeO, $Fe_2O_3$, or NbO, NiO, $Ni_2O_3$, SnO, $SnO_2$, $Ag_2O$, AgO, $Ga_2O$, $As_2O_3$, $SeO_2$, $TeO_2$, $In(OH)_3$, $Sn(OH)_2$, $In(OH)_3$, $Ga(OH)_3$, $Bi(OH)_3$, $CO_2$, $As_2Se_3$, $SF_6$, S, $SbF_3$, $CF_4$, $NF_3$, a metal permanganate, $KMnO_4$, $NaMnO_4$, $P_2O_5$, a metal nitrate, $LiNO_3$, $NaNO_3$, $KNO_3$, a boron

halide, $BBr_3$, $BI_3$, a group 13 halide, an indium halide, $InBr_2$, $InCl_2$, $InI_3$, a silver halide, AgCl, AgI, a lead halide, a cadmium halide, a zirconoium halide, a transition metal oxide, a transition metal sulfide, or a transition metal halide, a second or third transition series halide, $YF_3$, second or third transition series oxide, second or third transition series sulfide, $Y_2S_3$, a halide of Y, Zr, Nb, Mo, Tc, Ag, Cd, Hf, Ta, W, Os, $NbX_3$, $NbX_5$, or $TaX_5$, $Li_2S$, ZnS, FeS, NiS, MnS, $Cu_2S$, CuS, SnS, an alkaline earth halide, $BaBr_2$, $BaCl_2$, $BaI_2$, $SrBr_2$, $SrI_2$, $CaBr_2$, $CaI_2$, $MgBr_2$, or $MgI_2$, a rare earth halide, $EuBr_3$, $LaF_3$, $LaBr_3$, $CeBr_3$, $GdF_3$, $GdBr_3$, a rare earth halide with the metal in the II state, $CeI_2$, $EuF_2$, $EuCl_2$, $EuBr_2$, $EuI_2$, $DyI_2$, $NdI_2$, $SmI_2$, $YbI_2$, and $TmI_2$, a metal boride, a europium boride, an $MB_2$ boride, $CrB_2$, $TiB_2$, $MgB_2$, $ZrB_2$, $GdB_2$, an alkali halide, LiCl, RbCl or CsI, a metal phosphide, as $Ca_3P_2$, a noble metal halide, a noble metal oxide, a noble metal sulfide, $PtCl_2$, $PtBr_2$, $PtI_2$, $PtCl_4$, $PdCl_2$, $PbBr_2$, $PbI_2$, a rare earth sulfide, CeS, a La halide, a Gd halide, a metal and an anion, $Na_2TeO_4$, $Na_2TeO_3$, $Co(CN)_2$, CoSb, CoAs, $Co_2P$, CoO, CoSe, CoTe, NiSb, NiAs, NiSe, $Ni_2Si$, MgSe, a rare earth telluride, EuTe, a rare earth selenide, EuSe, a rare earth nitride, EuN, a metal nitride, AlN, GdN, $Mg_3N_2$, a compound containing at least two atoms chosen from oxygen and different halogen atoms, $F_2O$, $Cl_2O$, $ClO_2$, $Cl_2O_6$, $Cl_2O_7$, ClF, $ClF_3$, $ClOF_3$, $ClF_5$, $ClO_2F$, $ClO_2F_3$, $ClO_3F$, $BrF_3$, BrF5, $I_2O_5$, IBr, ICl, $ICl_3$, IF, $IF_3$, $IF_5$, $IF_7$, a metal second or third transition series halide, $OsF_6$, $PtF_6$, or $IrF_6$, a compound that can form a metal upon reduction, a metal hydride, rare earth hydride, alkaline earth hydride, or alkali hydride;

(iv) at least one reductant chosen from a metal an alkali, an alkaline earth transition, second and third series transition, and rare earth metals, Al, Mg, $MgH_2$, Si, La, B Zr, Ti powders, and $H_2$; and

(v) at least one electrically conductive support chosen from carbon, AC, graphene, carbon impregnated with a metal, Pt/C, Pd/C, a carbide, TiC, TiCN, $TiBr_2$, $Cr_3C_2$, $Ti_3SiC_2$, and WC.

2. The battery or fuel cell system of Claim 1, wherein the reactants comprise:

(iii) at least one oxidant comprising a halide, oxide, or sulfide compound of the elements chosen from Groups IA, IIA, 3d, 4d, 5d, 6d, 7d, 8d, 9d, 10d, 11d, 12d, and lanthanides;

(iv) at least one reductant comprising an element or hydride chosen from Mg, $MgH_2$, Al, Si, B, Zr, and a rare earth metal; and

(v) at least one electrically conductive support chosen from carbon, AC, graphene, carbon impregnated with a metal, a carbide, TiC, and WC.

3. The battery or fuel cell system of Claim 1, wherein the catalytic reaction comprises an anion exchange between at least two of the oxidant, reductant, and catalyst wherein the anion is chosen from halide, hydride, oxide, sulfide, nitride, boride, carbide, silicide, arsenide, selenide, telluride, phosphide, nitrate, hydrogen sulfide, carbonate, sulfate, hydrogen sulfate, phosphate, hydrogen phosphate, dihydrogen phosphate, perchlorate, chromate, dichromate, cobalt oxide, and oxyanions.

4. The battery or fuel cell system of Claim 1, wherein the catalyst is capable of accepting energy from atomic hydrogen in integer units of one of 27.2 eV $\pm$ 0.5 eV and $\dfrac{27.2}{2} \, eV \pm$ 0.5 eV.

5. The battery or fuel cell system of Claim 1, wherein the catalyst comprises an atom or ion M wherein the ionization of $t$ electrons from the atom or ion M each to a continuum energy level is such that the sum of ionization energies of the $t$ electrons is approximately one of $m \times 27.2 \, eV$ and $m \times \dfrac{27.2}{2} \, eV$ where $m$ is an integer.

6. The battery or fuel cell system of Claim 1, wherein the catalyst comprised a diatomic molecule MH wherein the breakage of the M-H bond in the diatomic molecule MH plus the ionization of $t$ electrons from the atom M each to a continuum energy level is such that the sum of the bond energy and ionization energies of the $t$ electrons is approximately one of $m \times 27.2 \, eV$ and $m \times \dfrac{27.2}{2} \, eV$ where $m$ is an integer.

7. The battery or fuel cell system of Claim 1, wherein the catalyst comprises atoms, ions, and/or molecules chosen from molecules of AlH, BiH, ClH, CoH, GeH, InH, NaH, RuH, SbH, SeH, SiH, SnH, $C_2$, $N_2$, $O_2$, $CO_2$, $NO_2$, and $NO_3$

and atoms or ions of Li, Be, K, Ca, Ti, V, Cr, Mn, Fe, Co, Ni, Cu, Zn, As, Se, Kr, Rb, Sr, Nb, Mo, Pd, Sn, Te, Cs, Ce, Pr, Sm, Gd, Dy, Pb, Pt, Kr, $2K^+$, $He^+$, $Ti^{2+}$, $Na^+$, $Rb^+$, $Sr^+$, $Fe^{3+}$, $Mo^{2+}$, $Mo^{4+}$, $In^{3+}$, $He^+$, $Ar^+$, $Xe^+$, $Ar^{2+}$ and $H^+$, and $Ne^+$ and $H^+$.

8. The battery or fuel cell system of Claim 7, wherein the metal in (v) is Pt or Pd.

FIG. 1

EP 2 966 723 A1

FIG. 2

# BlackLight Plant Process

EP 2 966 723 A1

FIG. 3

FIG. 4

FIG. 5

EP 2 966 723 A1

FIG. 6

FIG. 7

FIG. 8

FIG. 9

FIG. 10

EP 2 966 723 A1

FIG. 11

195
194
193
192

FIG. 12

FIG. 13

FIG. 14

FIG. 15

EP 2 966 723 A1

252

253

251

250

FIG. 16

FIG. 17

FIG. 18

FIG. 19

FIG. 20

Europäisches
Patentamt

European
Patent Office

Office européen
des brevets

# EUROPEAN SEARCH REPORT

**Application Number**

EP 15 16 6272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | RATHKE A: "A critical analysis of the hydrino model; A critical analysis of the hydrino model", NEW JOURNAL OF PHYSICS, INSTITUTE OF PHYSICS PUBLISHING, BRISTOL, GB LNKD-DOI:10.1088/1367-2630/7/1/127, vol. 7, no. 1, 1 May 2005 (2005-05-01), pages 127-127, XP020092850, ISSN: 1367-2630 | 1-8 | INV. H01M14/00 C01B3/00 C01B3/06 G21B3/00 |
| | ----- | | |
| T | VIJH A K: "Hydrino atom: novel chemistry or invalid physics?", INTERNATIONAL JOURNAL OF HYDROGEN ENERGY, ELSEVIER SCIENCE PUBLISHERS B.V., BARKING, GB LNKD-DOI:10.1016/S0360-3199(00)00072-0, vol. 26, no. 3, 1 March 2001 (2001-03-01), page 281, XP004326370, ISSN: 0360-3199 | 1-8 | |
| | ----- | | |
| T | DE CASTRO ET AL: "Orthogonality criterion for banishing hydrino states from standard quantum mechanics", PHYSICS LETTERS A, NORTH-HOLLAND PUBLISHING CO., AMSTERDAM, NL LNKD-DOI:10.1016/J.PHYSLETA.2007.05.006, vol. 369, no. 5-6, 19 September 2007 (2007-09-19), pages 380-383, XP022257954, ISSN: 0375-9601 | 1-8 | **TECHNICAL FIELDS SEARCHED (IPC)** H01M |
| | ----- | | |
| | -/-- | | |

The present search report has been drawn up for all claims

| Place of search | Date of completion of the search | Examiner |
|---|---|---|
| Munich | 4 December 2015 | Hintermaier, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 15 16 6272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | DOMBEY ET AL: "The hydrino and other unlikely states", 18 December 2006 (2006-12-18), PHYSICS LETTERS A, NORTH-HOLLAND PUBLISHING CO., AMSTERDAM, NL LNKD-DOI:10.1016/J.PHYSLETA.2006.07.069, PAGE(S) 62 - 65, XP024929274, ISSN: 0375-9601 [retrieved on 2006-12-18] | 1-8 | |
| T | "BlackLight Power - Wikipedia, the free encyclopedia", , 22 October 2015 (2015-10-22), XP002751829, Retrieved from the Internet: URL:https://en.wikipedia.org/wiki/BlackLight_Power [retrieved on 2015-12-04] | 1-8 | |
| X,P | WO 2010/014684 A2 (BLACKLIGHT POWER INC [US]; MILLS RANDELL L [US]) 4 February 2010 (2010-02-04) * page 109; figure 6 * * page 48 - page 52 * | 1-8 | TECHNICAL FIELDS SEARCHED (IPC) |

The present search report has been drawn up for all claims

| Place of search | Date of completion of the search | Examiner |
|---|---|---|
| Munich | 4 December 2015 | Hintermaier, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

**ANNEX TO THE EUROPEAN SEARCH REPORT**

**ON EUROPEAN PATENT APPLICATION NO.**                    EP 15 16 6272

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2015

| Patent document cited in search report | Publication date | Patent family member(s) | Publication date |
|---|---|---|---|
| WO 2010014684    A2 | 04-02-2010 | AP          3363 A | 31-07-2015 |
| | | AU    2009276601 A1 | 04-02-2010 |
| | | CA       2730712 A1 | 04-02-2010 |
| | | EP       2318307 A2 | 11-05-2011 |
| | | KR   20110063745 A | 14-06-2011 |
| | | US    2011114075 A1 | 19-05-2011 |
| | | WO    2010014684 A2 | 04-02-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61232291 A
- US 61234234 A
- US 61236046 A
- US 61239689 A
- US 61248655 A
- US 61254557 A
- US 61258955 A
- US 61260713 A
- US 61263253 A
- US 61266879 A
- US 61285822 A
- US 61289861 A
- US 61292086 A
- US 61294033 A
- US 61295564 A
- US 61297473 A
- US 61301977 A
- US 61304242 A
- US 61304248 A
- US 61311193 A
- US 61311203 A
- US 5427657 A
- US 3929920 A
- US 3925492 A
- US 3925263 A
- US 4886921 A
- US 4139474 A
- US 4447663 A
- US 4423261 A
- US 3872032 A
- US 4243615 A
- US 4438086 A
- US 3929918 A

**Non-patent literature cited in the description**

- **LAGOW et al.** *J. C. S. Dalton,* 1974, 1268